(19) Europäisches Patentamt
European Patent Office
Office européen des brevets

(11) EP 3 107 429 B1

(12) # EUROPEAN PATENT SPECIFICATION

(45) Date of publication and mention of the grant of the patent:
**15.11.2023 Bulletin 2023/46**

(21) Application number: **15718079.5**

(22) Date of filing: **20.02.2015**

(51) International Patent Classification (IPC):
***A47J 27/62*** *(2006.01)* ***G05B 19/42*** *(2006.01)*

(52) Cooperative Patent Classification (CPC):
**G05B 19/42; A47J 36/321;** G05B 2219/2603; G05B 2219/36184; G05B 2219/40391; G05B 2219/40395

(86) International application number:
**PCT/IB2015/000379**

(87) International publication number:
**WO 2015/125017 (27.08.2015 Gazette 2015/34)**

(54) **METHODS AND SYSTEMS FOR FOOD PREPARATION IN A ROBOTIC COOKING KITCHEN**

VERFAHREN UND SYSTEME ZUR LEBENSMITTELZUBEREITUNG IN EINER KÜCHE FÜR ROBOTISCHES KOCHEN

PROCÉDÉS ET SYSTÈMES DE PRÉPARATION DES ALIMENTS DANS UNE CUISINE ROBOTISÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**20.02.2014 US 201461942559 P**
**16.03.2014 US 201461953930 P**
**01.05.2014 US 201461987406 P**
**08.05.2014 US 201461990431 P**
**17.06.2014 US 201462013502 P**
**17.06.2014 US 201462013190 P**
**18.06.2014 US 201462013691 P**
**15.07.2014 US 201462024948 P**
**02.09.2014 US 201462044677 P**
**26.09.2014 US 201462055799 P**
**31.10.2014 US 201462073846 P**
**22.11.2014 US 201462083195 P**
**10.12.2014 US 201462090310 P**
**16.01.2015 US 201562104680 P**
**28.01.2015 US 201562109051 P**
**08.02.2015 US 201562113516 P**
**16.02.2015 US 201562116563 P**

(43) Date of publication of application:
**28.12.2016 Bulletin 2016/52**

(73) Proprietor: **MBL Limited**
**St Helier, Jersey JE1 1EE (GB)**

(72) Inventor: **OLEYNIK, Mark**
**Monaco 9800 (MC)**

(74) Representative: **Käck, Stefan**
**Kahler Käck Mollekopf**
**Partnerschaft von Patentanwälten mbB**
**Vorderer Anger 239**
**86899 Landsberg/Lech (DE)**

(56) References cited:
**US-A1- 2004 172 380**
**US-A1- 2004 173 103**
**US-A1- 2005 193 901**
**US-A1- 2009 099 691**
**US-A1- 2013 345 873**

Remarks:
The file contains technical information submitted after the application was filed and not included in this specification

**EP 3 107 429 B1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## BACKGROUND

### Technical Field

The present invention relates generally to the interdisciplinary fields of robotics and artificial intelligence, more particularly to computerized robotic food preparation systems for food preparation by digitizing the food preparation process of professional and non-professional chef dishes and subsequently replicating a chef's cooking movements, processes and techniques with real-time electronic adjustments.

### Background Art

Research and development in robotics have been undertaken for decades but the progress has been mostly in the heavy industrial applications like automobile manufacturing automation or military applications. Simple robotics systems have been designed for the consumer markets but have largely not seen a wide application in the home-consumer robotics space thus far. With advances in technology, combined with a population with higher incomes, the market may be ripe to create opportunities for technological advances to improve people's lives. Robotics has continued to improve automation technology with enhanced artificial intelligence and emulation of human skills and tasks in many forms.

The notion of robots replacing humans in certain areas and executing tasks humans would typically perform is an ideology in continuous evolution since robots first were developed in the 1970s. Manufacturing sectors have long used robots in teach-playback mode, where the robot is taught, via pendant or offline fixed-trajectory generation and download, which motions to copy continuously and without alteration or deviation. Companies have taken the pre-programmed trajectory-execution of computer-taught trajectories and robot motion-playback into such application domains as mixing drinks, welding or painting cars, and others. However, all of these conventional applications use a 1:1 computer-to-robot or tech-playback principle that is intended to have only the robot faithfully execute the motion-commands, which is almost always following a taught/pre-computed trajectory without deviation.

Gastronomy is an art of eating well, where a gourmet recipe blends subtly high quality ingredients and flavor appealing to all our senses. Gourmet cooking follows rules based on techniques that can be very elaborate, requiring expertise and technique, and lengthy training in some cases. In the past few years, demand for gourmet food has grown tremendously because of fast rising incomes and a generational shift in culinary awareness. However, diners still need to visit a certain restaurant or venue for gourmet dishes made by a favored chef. It would be rather advantageous to see a chef preparing your favorite dish live in action or experience a dish preparation reminiscent of a childhood dish made by your grandmother.

U.S. Patent Application Publication No. US 2004/0172380 A1 describes an automatic cooking method and system in which the cooking process of a chef is recorded and imitated. More particularly, the described techniques first record the cooking process of the chef with a recording system and provide an operation program according to the cooking process. Then, it operates a mechanical operation system to imitate the cooking tasks. Thus, delicious dishes by famous chefs will be available to any restaurant or household who purchases the mechanical operation system and operation program.

U.S. Patent Application Publication No. US 2013/0345873 A1 relates to the acquisition, organization, and use of task-related information by industrial robots to facilitate performance of takes in an autonomous manner. Robots are trained via direct interaction with a human trainer. The human trainer may, for example, guide the robot and/or any of its appendages to a desired location, and show it how to manipulate an object by adjusting an appendage relative to the object, pushing buttons to open or close the appendage, etc. Such mechanical input may be supplemented with user interaction via a screen and ordinary input devices such as, e.g., a keyboard, mouse or touch pad.

In U.S. Patent Application Publication No. US 2005/0193891 A1 an automated food preparation system is described. The system allows precise, automated control of the food preparation process, and has the ability to perform an automated clean-up. It comprises at least one manipulator to process and move ingredients, a control system, an autonomously accessible ingredient storage system, and at least one cooking receptacle.

Further, U.S. Patent Application Publication No. US 2004/0173103 A1 discloses a full-automatic cooking machine controlled with a programmable controller. To operate the full-automatic cooking machine, programs for each dish have to be compiled according to a recipe. Then the recipes are loaded into a library of the programmable controller.

U.S. Patent Application Publication No. US 2009/0099691 A1 provides a cooking assistance robot and a cooking assistance method capable of efficient mixing, with which ingredients are unlikely to be unevenly heated.

It would be desirable to have a system and method to have a chef's gourmet dish made and served conveniently to consumers in their own home(s), without the necessity to travel to each restaurant around the world to enjoy specific gourmet dishes.

## SUMMARY OF THE INVENTION

The invention is defined in the independent claims. Particular embodiments are set out in the dependent claims.

In particular, the present disclosure is directed to methods, computer program products, and computer systems of a robotic apparatus with robotic instructions replicating a food dish with substantially the same result as if the chef had prepared the food dish. In a first aspect, the robotic apparatus in a standardized robotic kitchen comprises two robotic arms and hands, which replicate the precise movements of a chef in the same sequence (or substantially the same sequence) and the same timing (or substantially the same timing) to prepare a food dish based on a previously recorded software file (a recipe-script) of the chef's precise movements in preparing the same food dish. In a second aspect, a computer-controlled cooking apparatus prepares a food dish based on a sensory-curve, such as temperature over time, which was previously recorded in a software file where the chef prepared the same food dish with the cooking apparatus with sensors for which a computer recorded the sensor values over time when the chef previously prepared the food dish on the cooking apparatus fitted with sensors. In a third aspect, the kitchen apparatus comprises the robotic arms in the first embodiment and the cooking apparatus with sensors in the second embodiment to prepare a dish that combines both the robotic arms and one or more sensory curves, where the robotic arms are capable of quality-checking a food dish during the cooking process, for such characteristics as taste, smell, and appearance, allowing for any cooking adjustments to the preparation steps of the food dish. In a fourth aspect, the kitchen apparatus comprises a food storage system with computer-controlled containers and container identifiers for storing and supplying ingredients for a user to prepare a food dish by following a chef's cooking instructions. In a fifth aspect, a robotic cooking kitchen comprises a robot with arms and a kitchen apparatus in which the robot moves around the kitchen apparatus to prepare a food dish by emulating a chef's precise cooking movements, including possible real-time modifications/adaptations to the preparation process defined in the recipe-script.

A robotic cooking engine comprises detection, recording, and chef emulation cooking movements, controlling significant parameters, such as temperature and time, and processing the execution with designated appliances, equipment, and tools, thereby reproducing a gourmet dish that tastes identical to the same dish prepared by a chef and served at a specific and convenient time. In one embodiment, a robotic cooking engine provides robotic arms for replicating a chef's identical movements with the same ingredients and techniques to produce an identical tasting dish.

The underlying motivation of the present disclosure centers around humans being monitored with sensors during their natural execution of an activity and then being able to use monitoring-sensors, capturing-sensors, computers and software to generate information and commands to replicate the human activity using one or more robotic and/or automated systems. While one can conceive of multiple such activities (e.g. cooking, painting, playing an instrument, etc.), one aspect of the present disclosure is directed to the cooking of a meal; in essence a robotic meal preparation application. Monitoring the human is carried out in an instrumented application-specific setting (a standardized kitchen in this case), and involves using sensors and computers to watch, monitor, record and interpret the motions and actions of a human chef, in order to develop a robot-executable set of commands robust to variations and changes in the environment, capable of allowing a robotic or automated system in a robotic kitchen to prepare the same dish to the standards and quality as the dish prepared by the human chef.

The use of multimodal sensing systems is the means by which the necessary raw data is collected. Sensors capable of collecting and providing such data include environment and geometrical sensors, such as two- (cameras, etc.) and three-dimensional (lasers, sonar, etc.) sensors, as well as human motion-capture systems (human-worn camera-targets, instrumented suits/exoskeletons, instrumented gloves, etc.), as well as instrumented (sensors) and powered (actuators) equipment used during recipe creation and execution (instrumented appliances, cooking-equipment, tools, ingredient dispensers, etc.). All this data is collected by one or more distributed/central computers and processed by a variety of software processes. The algorithms will process and abstract the data to the point that a human and a computer-controlled robotic kitchen can understand the activities, tasks, actions, equipment, ingredients and methods and processes used by the human, including replication of key skills of a particular chef. The raw data is processed by one or more software abstraction engines to create a recipe-script that is both human-readable and, through further processing, machine-understandable and machine-executable, spelling out all actions and motions for all steps of a particular recipe that a robotic kitchen would have to execute. These commands range in complexity from controlling individual joints, to a particular joint-motion profile over time, to abstracted levels of commands, with lower-level motion-execution commands embedded therein, associated with specific steps in a recipe. Abstracted motion-commands (e.g. "crack an egg into the pan", "sear to a golden color on both sides", etc.) can be generated from the raw data, and refined and optimized through a multitude of iterative learning processes, carried out live and/or off-line, allowing the robotic kitchen systems to successfully deal with measurement-uncertainties, ingredient variations, etc., enabling complex (adaptive) mini-manipulation motions using fingered-hands mounted to robot-arms and wrists, based on fairly abstracted/high-level commands (e.g. "grab the pot by the handle", "pour out the contents", "grab the spoon off the countertop and stir the soup", etc.).

The ability to create machine-executable command sequences, now contained within digital files capable of being shared/transmitted, allowing any robotic kitchen to execute them, opens up the option to execute the dish-preparation steps anywhere at any time. Hence it allows for the option to buy/sell recipes online, allowing users to access and distribute recipes on a per-use or subscription basis.

The replication of a dish prepared by a human is performed by a robotic kitchen, which is in essence a standardized replica of the instrumented kitchen used by the human chef during the creation of the dish, except that the human's actions are now carried out by a set of robotic arms and handtheed by computer-monitored and computer-controllable appliances, equipment, tools, dispensers, etc. The degree of dish-replication fidelity will thus be tightly tied to the degree to which the robotic kitchen is a replica of the kitchen (and all its elements and ingredients) in which the human chef was observed while preparing the dish.

Broadly stated, there may be provided a computer-implemented method operating on a robotic apparatus, comprising an electronic description of one or more food dishes, including the recipes for making each food dish from ingredients by a chef; for each food dish, sensing a sequence of observations of a chef's movements by a plurality of robotic sensors as the chef prepares the food dish using ingredients and kitchen equipment; detecting in the sequence of observations mini-manipulations corresponding to a sequence of movements carried out in each stage of preparing a particular food dish; transforming the sensed sequence of observations into computer readable instructions for controlling a robotic apparatus capable of performing the sequences of mini-manipulations; storing at least the sequence of instructions for mini-manipulations on electronic media for each food dish, wherein the sequence of mini-manipulations for each food dish is stored as a respective electronic record; transmitting the respective electronic record for a food dish to a robotic apparatus capable of replicating the sequence of stored mini-manipulations, corresponding to the original actions of the chef; and executing the sequence of instructions for mini-manipulations for a particular food dish by the robotic apparatus, thereby obtaining substantially the same result as the original food dish prepared by the chef, wherein executing the instructions includes sensing properties of the ingredients used in preparing the food dish.

Advantageously, the robotic apparatus in a standardized robotic kitchen has the capabilities to prepare a wide array of cuisines from around the world through a global network and database access, as compared to a chef who may specialize in one type of cuisine. The standardized robotic kitchen also is able to capture and record one of your favorite food dishes for replication by the robotic apparatus whenever you like to enjoy the food dish without the repetitive process of laboring to prepare the same dish over and over again.

The structures and methods of the present invention are disclosed in the detailed description below. This summary does not purport to define the invention. The invention is defined by the claims. These and other embodiments, features, aspects, and advantages of the invention will become better understood with regard to the following description, appended claims, and accompanying drawings.

## BRIEF DESCRIPTION OF THE DRAWINGS

The invention will be described with respect to specific embodiments thereof, and reference will be made to the drawings, in which:

FIG. 1 is a system diagram illustrating an overall robotic food preparation kitchen with hardware and software in accordance with the present invention.

FIG. 2 is a system diagram illustrating a first embodiment of a food robot cooking system that includes a chef studio system and a household robotic kitchen system in accordance with the present invention.

FIG. 3 is system diagram illustrating one embodiment of the standardized robotic kitchen for preparing a dish by replicating a chef's recipe process, techniques and movements in accordance with the present invention.

FIG. 4 is a system diagram illustrating one embodiment of a robotic food preparation engine for use with the computer in the chef studio system and the household robotic kitchen system in accordance with the present invention.

FIG. 5A is a block diagram illustrating a chef studio recipe-creation process in accordance with the present invention; FIG. 5B is block diagram illustrating one embodiment of a standardized teach/playback robotic kitchen in accordance with the present invention; FIG. 5C is a block diagram illustrating one embodiment of a recipe script generation and abstraction engine in accordance with the present invention; and FIG. 5D is a block diagram illustrating software elements for object-manipulation in the standardized robotic kitchen in accordance with the present invention.

FIG. 6 is a block diagram illustrating a multimodal sensing and software engine architecture in accordance with the present invention.

FIG. 7A is a block diagram illustrating a standardized robotic kitchen module used by a chef in accordance with the present invention; FIG. 7B is a block diagram illustrating the standardized robotic kitchen module with a pair of robotic arms and hands in accordance with the present invention; FIG. 7C is a block diagram illustrating one embodiment of a physical layout of the standardized robotic kitchen module used by a chef in accordance with the present invention; FIG. 7D is a block diagram illustrating one embodiment of a physical layout of the standardized robotic kitchen module used by a pair of robotic arms and hands in accordance with the present invention; and FIG. 7E is a block diagram depicting the stepwise flow and methods to ensure that there are control or verification points during the recipe replication process based on the recipe-script when executed by the standardized robotic kitchen in accordance with the present invention.

FIG. 8A is a block diagram illustrating one embodiment of a conversion algorithm module between the chef movements and the robotic mirror movements in accordance with the present invention; FIG. 8B is a block diagram illustrating a pair of gloves with sensors worn by the chef 49 for capturing and transmitting the chef's movements; FIG. 8C is a block diagram illustrating robotic cooking execution based on the captured sensory data from the chef's gloves in accordance with the present invention; FIG. 8D is a graphical diagram illustrating dynamically stable and dynamically unstable curves relative to equilibrium; FIG. 8E is a sequence diagram illustrating the process of food preparation that requires a sequence of steps that are referred to as stages in accordance with the present invention; FIG. 8F is a graphical diagram illustrating the probability of overall success as a function of the number of stages to prepare a food dish in accordance with the present invention; and FIG. 8G is a block diagram illustrating the execution of a recipe with multi-stage robotic food preparation with mini-manipulations and action primitives.

FIG. 9A is a block diagram illustrating an example of robotic hand and wrist with haptic vibration, sonar, and camera sensors for detecting and moving a kitchen tool, an object, or a piece of kitchen equipment in accordance with the present invention; FIG. 9B is a block diagram illustrating a pan-tilt head with sensor camera coupled to a pair of robotic arms and hands for operation in the standardized robotic kitchen in accordance with the present invention; FIG. 9C is a block diagram illustrating sensor cameras on the robotic wrists for operation in the standardized robotic kitchen in accordance with the present invention; FIG. 9D is a block diagram illustrating an eye-in-hand on the robotic hands for operation in the standardized robotic kitchen in accordance with the present invention; and FIGS. 9E-I are pictorial diagrams illustrating aspects of deformable palm in a robotic hand in accordance with the present invention.

FIG. 10A is block diagram illustrating examples of chef recording devices which a chef wears in the robotic kitchen environment for recording and capturing his or her movements during the food preparation process for a specific recipe; and FIG. 10B is a flow diagram illustrating one embodiment of the process in evaluating the capturing of a chef's motions with robot poses, motions and forces in accordance with the present invention.

FIG. 11 is block diagram illustrating a side view of a robotic arm embodiment for use in the household robotic kitchen system in accordance with the present invention.

FIGS. 12A-C are block diagrams illustrating one embodiment of a kitchen handle for use with the robotic hand with the palm in accordance with the present invention.

FIG. 13 is a pictorial diagram illustrating an example robotic hand with tactile sensors and distributed pressure sensors in accordance with the present invention.

FIG. 14 is a pictorial diagram illustrating an example of a sensing costume for a chef to wear at the robotic cooking studio in accordance with the present invention.

FIGS. 15A-B are pictorial diagrams illustrating one embodiment of a three-fingered haptic glove with sensors for food preparation by the chef and an example a three-fingered robotic hand with sensors in accordance with the present invention.

FIG. 16 is a block diagram illustrating the creation module of a mini-manipulation database library and the execution module of the mini-manipulation database library in accordance with the present invention.

FIG. 17A is a block diagram illustrating a sensing glove used by a chef to execute standardized operating movements in accordance with the present invention; and FIG. 17B is a block diagram illustrating a database of standardized operating movements in the robotic kitchen module in accordance with the present invention.

FIG. 18A is a graphical diagram illustrating that each of the robotic hand coated with a artificial human-like soft-skin glove in accordance with the present invention; FIG. 18B is a block diagram illustrating robotic hands coated with artificial human-like skin gloves to execute high-level mini-manipulations based on a library database of mini-manipulations, which have been predefined and stored in the library database, in accordance with the present invention; FIG. 18C is a graphical diagram illustrating three types of taxonomy of manipulation actions for food preparation in accordance with the present invention; FIG. 18D is a flow diagram illustrating one embodiment on taxonomy of manipulation actions for food preparation in accordance with the present invention; FIG. 18E is a block diagram illustrating one example of the interplay and interactions between a robotic arm and a robotic hand in accordance with the present invention; and FIG. 18F is a block diagram FIG. 18F is a block diagram illustrating the robotic hand uses the standardized kitchen handle that is attachable to a cookware head and the robotic arm attachable to kitchen ware in accordance with the present invention.

FIG. 19 is a block diagram illustrating the creation of a mini-manipulation that results in cracking an egg with knife an example in accordance with the present invention.

FIG. 20 is a block diagram illustrating an example of recipe execution for a mini-manipulation with real-time adjustment in accordance with the present invention.

FIG. 21 is a flow diagram illustrating the software process to capture a chef's food preparation movements in a standardized kitchen module in accordance with the present invention.

FIG. 22 is a flow diagram illustrating the software process for food preparation by robotic apparatus in the robotic standardized kitchen module in accordance with the present invention.

FIG. 23 is a flow diagram illustrating one embodiment of the software process for creating, testing, and validating, and storing the various parameter combinations for, a mini-manipulation system in accordance with the present invention.

FIG. 24 is a flow diagram illustrating one embodiment of the software process for creating the tasks for a mini-manipulation system in accordance with the present invention.

FIG. 25 is a flow diagram illustrating the process of assigning and utilizing a library of standardized kitchen tools, standardized objects, and standardized equipment in a standardized robotic kitchen in accordance with the present invention.

FIG. 26 is a flow diagram illustrating the process of identifying a non-standardized object with three-dimensional modeling in accordance with the present invention.

FIG. 27 is a flow diagram illustrating the process for testing and learning of mini-manipulations in accordance with the present invention.

FIG. 28 is a flow diagram illustrating the process for robotic arms quality control and alignment function process in accordance with the present invention.

FIG. 29 is a table illustrating a database library structure of mini-manipulations objects for use in the standardized robotic kitchen in accordance with the present invention.

FIG. 30 is a table illustrating a database library structure of standardized objects for use in the standardized robotic kitchen in accordance with the present invention.

FIG. 31 is a pictorial diagram illustrating a robotic hand for conducting quality check of fish in accordance with the present invention.

FIG. 32 is a pictorial diagram illustrating a robotic sensor head for conducting quality check in a bowl in accordance with the present invention.

FIG. 33 is a pictorial diagram illustrating a detection device or container with a sensor for determining the freshness and quality of food in accordance with the present invention.

FIG. 34 is a system diagram illustrating an online analysis system for determining the freshness and quality of food in accordance with the present invention.

FIG. 35 is a block diagram illustrating pre-filled containers with programmable dispenser control in accordance with the present invention.

FIG. 36 is a block diagram illustrating a recipe system structure for use in the standardized robotic kitchen in accordance with the present invention.

FIGS. 37A-C are block diagrams illustrating recipe search menus for use in the standardized robotic kitchen in accordance with the present invention; FIG. 37D is a screen shot of a menu with option to create and submit a recipe in accordance with the present invention; FIGS. 37E-M are flow diagrams illustrating one embodiment of the food preparation user interface with functional capabilities including a recipe filter, an ingredient filter, an equipment filter, an account and social network access, a personal partner page, a shopping cart page, and the information on the purchased recipe, registration setting, create a recipe in accordance with the present invention; and FIG. 37N-V are screen shots of various graphical user interface and menu options in accordance with the present invention.

FIG. 38 is a block diagram illustrating a recipe search menu by selecting fields for use in the standardized robotic kitchen in accordance with the present invention.

FIG. 39 is a block diagram illustrating the standardized robotic kitchen with an augmented sensor for three-dimensional tracking and reference data generation in accordance with the present invention.

FIG. 40 is a block diagram illustrating the standardized robotic kitchen with multiple sensors for creating real-time three-dimensional modeling in accordance with the present invention.

FIGS. 41A-L are block diagrams illustrating the various embodiments and features of the standardized robotic kitchen in accordance with the present invention.

FIG. 42A is block diagram illustrating a top plan view of the standardized robotic kitchen in accordance with the present invention; and FIG. 42B is a block diagram illustrating a perspective plan view of the standardized robotic kitchen in accordance with the present invention.

FIGS. 43A-B are block diagrams illustrating a first embodiment of the kitchen module frame with automatic transparent doors in the standardized robotic kitchen in accordance with the present invention; and FIGS. 43C-F are block diagrams illustrating screen shots and a sample kitchen module specification in the standardized robotic kitchen in accordance with the present invention.

FIGS. 44A-B are block diagrams illustrating a second embodiment of the kitchen module frame with automatic transparent doors in the standardized robotic kitchen in accordance with the present invention.

FIG. 45 is a block diagram illustrating the standardized robotic kitchen with a telescopic actuator in accordance with the present invention.

FIG. 46A is a block diagram illustrating a front view of the standardized robotic kitchen with a pair of fixed robotic arms with no moving railings in accordance with the present invention; FIG. 46B is a block diagram illustrating an angular view of the standardized robotic kitchen with a pair of fixed robotic arms with no moving railings in accordance with the present invention; and FIGS. 46C-G are block diagrams illustrating examples of various dimensions in the standardized robotic kitchen with a pair of fixed robotic arms with no moving railings in accordance with the present invention.

FIG. 47 is a block diagram illustrating a program storage system for use with the standardized robotic kitchen in accordance with the present invention.

FIG. 48 is a block diagram illustrating an elevation view of the program storage system for use with the standardized robotic kitchen in accordance with the present invention.

FIG. 49 is a block diagram illustrating an elevation view of ingredient access containers for use with the standardized robotic kitchen in accordance with the present invention.

FIG. 50 is a block diagram illustrating an ingredient quality monitoring dashboard associated with ingredient access containers for use with the standardized robotic kitchen in accordance with the present invention.

FIG. 51 is a table illustrating a database library of recipe parameters in accordance with the present invention.

FIG. 52 is a flow diagram illustrating the process of one embodiment of recording a chef's food preparation process in accordance with the present invention.

FIG. 53 is a flow diagram illustrating the process of one embodiment of a robotic apparatus preparing a food dish in accordance with the present invention.

FIG. 54 is a flow diagram illustrating the process of one embodiment in the quality and function adjustment in obtaining the same or substantially the same result in a food dish preparation by a robotic relative to a chef in accordance with the present invention.

FIG. 55 is a flow diagram illustrating a first embodiment in the process of the robotic kitchen preparing a dish by replicating a chef's movements from a recorded software file in a robotic kitchen in accordance with the present invention.

FIG. 56 is a flow diagram illustrating the process of storage check-in and identification in the robotic kitchen in accordance with the present invention.

FIG. 57 is a flow diagram illustrating the process of storage check-out and cooking preparation in the robotic kitchen in accordance with the present invention.

FIG. 58 is a flow diagram illustrating one embodiment of an automated pre-cooking preparation process in the robotic kitchen in accordance with the present invention.

FIG. 59 is a flow diagram illustrating one embodiment of a recipe design and scripting process in the robotic kitchen in accordance with the present invention.

FIG. 60 is a flow diagram illustrating a subscription model for the user to purchase the robotic food preparation recipe in accordance with the present invention.

FIGS. 61A-B are flow diagrams illustrating the process of a recipe search and purchase subscription for a recipe commerce platform from a portal in accordance with the present invention.

FIG. 62 is a flow diagram illustrating the creation of a robotic cooking recipe app on an app platform in accordance with the present invention.

FIG. 63 is a flow diagram illustrating the process of a user search, purchase, and subscription for a cooking recipe in accordance with the present invention.

FIGS. 64A-B are block diagrams illustrating an example of a predefined recipe search criterion in accordance with the present invention.

FIG. 65 is a block diagram illustrating some pre-defined containers in the robotic kitchen in accordance with the present invention.

FIG. 66 is a block diagram illustrating a first embodiment of a robotic restaurant kitchen module configured in a rectangular layout with multiple pairs of robotic hands for simultaneous food preparation processing in accordance with the present invention.

FIG. 67 is a block diagram illustrating a second embodiment of a robotic restaurant kitchen module configured in a U-shape layout with multiple pairs of robotic hands for simultaneous food preparation processing in accordance with the present invention.

FIG. 68 is a block diagram illustrating a second embodiment of the robotic food preparation system with sensory cookware and curves in accordance with the present invention.

FIG. 69 is a block diagram illustrating some physical elements of a robotic food preparation system in the second embodiment in accordance with the present invention.

FIG. 70 is a block diagram illustrating sensory cookware for a (smart) pan with real-time temperature sensors for use in the second embodiment in accordance with the present invention.

FIG. 71 is a graphical diagram illustrating the recorded temperature curve with multiple data points from the different sensors of the sensory cookware in the chef studio in accordance with the present invention.

FIG. 72 is a graphical diagram illustrating the recorded temperature and humidity curves from the sensory cookware in the chef studio for transmission to an operating control unit in accordance with the present invention.

FIG. 73 is a block diagram illustrating sensory cookware for cooking based on the data from a temperature curve for different zones on a pan in accordance with the present invention.

FIG. 74 is a block diagram illustrating sensory cookware of a (smart) oven with real-time temperature and humidity sensors for use in the second embodiment in accordance with the present invention.

FIG. 75 is a block diagram illustrating a sensory cookware for a (smart) charcoal grill with real-time temperature sensors for use in the second embodiment in accordance with the present invention.

FIG. 76 is a block diagram illustrating sensory cookware for a (smart) faucet with speed, temperature and power control functions for use in the second embodiment in accordance with the present invention.

FIG. 77 is a block diagram illustrating a top plan view of a robotic kitchen with sensory cookware in the second embodiment in accordance with the present invention.

FIG. 78 is a block diagram illustrating a perspective view of a robotic kitchen with sensory cookware in the second embodiment in accordance with the present invention.

FIG. 79 is a flow diagram illustrating a second embodiment in the process of the robotic kitchen preparing a dish from one or more previous recorded parameter curves in a robotic kitchen in accordance with the present invention.

FIG. 80 is a flow diagram illustrating the second embodiment of the robotic food preparation system by capturing a chef's cooking process with sensory cookware in accordance with the present invention.

FIG. 81 is a flow diagram illustrating the second embodiment of the robotic food preparation system by replicating a chef's cooking process with sensory cookware in accordance with the present invention.

FIG. 82 is a block diagram illustrating a third embodiment of the robotic food preparation kitchen with a cooking operating control module, and a command and visual monitoring module in accordance with the present invention.

FIG. 83 is a block diagram illustrating a top plan view in the third embodiment of the robotic food preparation kitchen with robotic arm and hand motions in accordance with the present invention.

FIG. 84 is a block diagram illustrating a perspective view in the third embodiment of the robotic food preparation kitchen with robotic arm and hand motions in accordance with the present invention.

FIG. 85 is a block diagram illustrating a top plan view in the third embodiment of the robotic food preparation kitchen with a command and visual monitoring device in accordance with the present invention.

FIG. 86 is a block diagram illustrating a perspective view in the third embodiment of the robotic food preparation kitchen with a command and visual monitoring device in accordance with the present invention.

FIG. 87A is a block diagram illustrating a fourth embodiment of the robotic food preparation kitchen with a robot in accordance with the present invention; FIG. 87B is a block diagram illustrating a top plan view in the fourth embodiment of the robotic food preparation kitchen with the humanoid robot in accordance with the present invention; and FIG. 87C is a block diagram illustrating a perspective plan view in the fourth embodiment of the robotic food preparation kitchen with the humanoid robot in accordance with the present invention.

FIG. 88 is a block diagram illustrating a robotic human-emulator electronic intellectual property (IP) library in accordance with the present invention.

FIG. 89 is a block diagram illustrating a robotic human emotion recognition engine in accordance with the present invention.

FIG. 90 is a flow diagram illustrating the process of a robotic human emotion engine in accordance with the present invention.

FIGS. 91A-C are flow diagrams illustrating the process of comparing a person's emotional profile against a population of emotional profiles with hormones, pheromones and other parameters in accordance with the present invention.

FIG. 92A is a block diagram illustrating the emotional detection and analysis of a person's emotional state by monitoring a set of hormones, a set of pheromones, and other key parameters in accordance with the present invention; and FIG. 92B is a block diagram illustrating a robot assessing and learning about a person's emotional behavior in accordance with the present invention.

FIG. 93 is a block diagram illustrating a port device implanted in a person to detect and record the person's emotional profile in accordance with the present invention.

FIG. 94A is a block diagram illustrating a robotic human intelligence engine in accordance with the present invention; and FIG. 94B is a flow diagram illustrating the process of a robotic human intelligence engine in accordance with the present invention.

FIG. 95A is a block diagram illustrating a robotic painting system in accordance with the present invention; FIG. 95B is a block diagram illustrating the various components of a robotic painting system in accordance with the present invention; and FIG. 95C is a block diagram illustrating the robotic human-painting-skill replication engine in accordance with the present invention.

FIG. 96A is a flow diagram illustrating the recording process of an artist at a painting studio in accordance with the present invention; and FIG. 96B is a flow diagram illustrating the replication process by a robotic painting system in accordance with the present invention.

FIG. 97A is block diagram illustrating an embodiment of a musician replication engine in accordance with the present invention; and FIG. 97B is block diagram illustrating the process of the musician replication engine in accordance with the present invention.

FIG. 98 is block diagram illustrating an embodiment of a nursing replication engine in accordance with the present invention.

FIGS. 99A-B are flow diagrams illustrating the process of the nursing replication engine in accordance with the present invention.

FIG. 100 is a block diagram illustrating an example of a computer device on which computer-executable instructions to perform the robotic methodologies discussed herein may be installed and executed.

## DETAILED DESCRIPTION

A description of structural embodiments and methods of the present invention is provided with reference to FIGS. 1-100. It is to be understood that there is no intention to limit the invention to the specifically disclosed embodiments but that the invention may be practiced using other features, elements, methods, and embodiments. Like elements in various embodiments are commonly referred to with like reference numerals.

The following definitions apply to the elements and steps described herein. These terms may likewise be expanded upon.

*Abstracted Data* - refers to the abstracted recipe of utility for machine-execution which has many other data-elements that a machine needs to know for proper execution and replication. This so-called meta-data, or additional data corresponding to a particular step in the cooking process, whether it be direct sensor-data (clock-time, water-temperature, camera-image, utensil or ingredient used, etc.) or data generated through interpretation or abstraction of larger data-sets (such as a 3-dimensional range cloud from a laser used to extract the location and types of objects in the image, overlaid with texture and color maps from a camera-picture, etc.), is time-stamped and used by the robotic kitchen to set, control and monitor all processes and associated methods and equipment needed at every point in time as it steps through the sequence of steps in the recipe.

*Abstracted Recipe* - refers to a representation of a chef's recipe, which a human knows as represented by the use of certain ingredients, in certain sequences, prepared and combined through a sequence of processes and methods as well as skills of the human chef. An abstracted recipe used by a machine for execution in an automated way requires different types of classifications and sequences. While the overall steps carried out are identical to those of the human chef, the abstracted recipe of utility to the robotic kitchen requires that additional meta-data be a part of every step in the recipe. Such meta-data includes the cooking time, variables such as temperature (and its variations over time), oven-setting, tool/equipment used, etc. Basically a machine-executable recipe-script needs to have all possible measured variables of import to the cooking process (all measured and stored while the human chef was preparing the recipe in the chef studio) correlated to time, both overall and that within each process-step of the cooking-sequence. Hence the abstracted recipe is a representation of the cooking steps mapped into a machine-readable representation or domain, which takes the required process from the human-domain to that of the machine-understandable and machine-executable domain through a set of logical abstraction steps.

*Acceleration* - refers to the maximum rate of speed-change at which a robotic arm can accelerate around an axis or along a space-trajectory over a short distance.

*Accuracy* - refers to how closely a robot can reach a commanded position. Accuracy is determined by the difference between the absolute position of the robot compared to the commanded position. Accuracy can be improved, adjusted, or calibrated with external sensing such as sensors on a robotic hand or a real-time three-dimensional model using multiple (multi-mode) sensors.

*Action Primitive* - In one embodiment, the term refers to an indivisible robotic action, such as moving the robotic apparatus from location X1 to location X2, or sensing the distance from an object for food preparation without necessarily obtaining a functional outcome. In another embodiment, the term refers to an indivisible robotic action in a sequence of one or more such units for accomplishing a mini-manipulation. These are two aspects of the same definition.

*Automated Dosage System* - refers to dosage containers in a standardized kitchen module where a particular size of food chemical compounds (such as salt, sugar, pepper, spice, any kind of liquids, such as water, oil, essences, ketchup, etc.) that is released upon application.

*Automated Storage and Delivery System* - refers to storage containers in a standardized kitchen module that maintain a specific temperature and humidity for storing food; each storage container is assigned a code (e.g., a bar code) for the robotic kitchen to identify and retrieval where a particular storage container delivers the food contents stored therein.

*Data Cloud* - refers to a collection of sensor or data-based numerical measurement values from a particular space (three-dimensional laser/acoustic range measurement, RGB-values from a camera image, etc.) collected at certain intervals and aggregated based on a multitude of relationships, such as time, location, etc.

*Degree of Freedom ("DOF")* - refers to a defined mode and/or direction in which a mechanical device or system can move. The number of degrees of freedom is equal to the total number of independent displacements or aspects of motion. The total number of degrees of freedom is doubled for two robotic arms.

*Edge Detection* - refers to a software-based computer program(s) capable of identifying the edges of multiple objects that may be overlapping in a two-dimensional-image of a camera yet successfully identifying their boundaries to aid in object identification and planning for grasping and handling.

*Equilibrium Value* - refers to the target position of a robotic appendage, such as a robotic arm where the forces acting upon it are in equilibrium, i.e. there is no net force and thus no net movement.

*Execution Sequence Planner* - refers to a software-based computer program(s) capable of creating a sequence of execution scripts or commands for one or more elements or systems capable of being computer controlled, such as arm(s), dispensers, appliances, etc.

*Food Execution Fidelity* - refers to a robotic kitchen which is intended to replicate the recipe-script generated in the chef studio by watching and measuring and understanding the steps and variables and methods and processes of the human chef, thereby trying to emulate his/her techniques and skills. The fidelity of how close the execution of the dish-preparation comes to that of the human-chef is measured by how close the robotically-prepared dish resembles the human-prepared dish as measured by a variety of subjective elements, such as consistency, color, taste, etc. The notion is that, the more closely the dish prepared by the robotic kitchen is to that prepared by the human chef, the higher the fidelity of the replication process.

*Food Preparation Stage (also referred to as "Cooking stage")* - refers to a combination, either sequential or in parallel, of one or more mini-manipulations including action primitives, and computer instructions for controlling the various kitchen equipment and appliances in the standardized kitchen module; one or more food preparation stages collectively represent the entire food preparation process for a particular recipe.

*Geometric Reasoning* - refers to a software-based computer program(s) capable of using two-dimensional (2D)/three-dimensional (3D) surface- and/or volumetric data to reason as to the actual shape and size of a particular volume; the ability to determine or utilize boundary information also allows for inferences as to the start end of a particular geometric element and the number present (in an image or model).

*Grasp Reasoning* - refers to a software-based computer program(s) capable of relying on geometric and physical reasoning to plan a multi-contact (point/area/volume) contact-interaction between a robotic end-effector (gripper, link, etc.), or even tools/utensils held by the end-effector, so as to successfully and stably contact, grasp and hold the object in order to manipulate it in three-dimensional space.

*Hardware Automation Device* - Fixed process device capable of executing pre-programmed steps in succession without the ability to modify any of them; such devices are used for repetitive motions that are not in need of any modulation.

*Ingredient management and manipulation* - refers to defining each ingredient in detail (including size, shape, weight, dimensions, characteristics and properties), one or more real-time adjustments in the variables associated with the particular ingredient that may differ from the previous stored ingredient details (such as the size of a fish fillet, the dimensions of an egg, etc.), and the process in executing the different stages for the manipulation movements to an ingredient.

*Kitchen Module (or Kitchen Volume)* - a standardized full kitchen module with standardized sets of kitchen equipment, standardized sets of kitchen tools, standardized sets of kitchen handles, and standardized sets of kitchen containers, with predefined space and dimensions for storing, accessing, and operating each kitchen element in the standardized full kitchen module. One objective of a kitchen module is to predefine as much of the kitchen equipment, tools, handles, containers, etc. as possible so as to provide a relatively fixed kitchen platform for the movements of robotic arms and hands. Both a chef in the chef kitchen studio and a person at home with a robotic kitchen (or a person at a restaurant) uses the standardized kitchen module so as to maximize the predictability of the kitchen hardware, while minimizing the risks of differentiations, variations and deviations between the chef kitchen studio and a home robotic kitchen. Different embodiments of the kitchen module are possible, including a standalone kitchen module and an integrated kitchen module. The integrated kitchen module is fitted into a conventional kitchen area of a typical house. The kitchen module operates in at least two modes, a robotic mode and a normal (manual) mode.

*Machine Learning* - refers to the technology wherein a software component or program improves its performance based on experience and feedback. One kind of machine learning is *reinforcement learning,* often used in robotics, where desirable actions are rewarded and undesirable ones are penalized. Another kind is *case-based learning,* where previous solutions, e.g. sequences of actions by a human teacher or by the robot itself are remembered, together with any constraints or reasons for the solutions, and then are applied or reused in new settings. There are also additional kinds of machine learning, such as inductive and transductive methods.

*Mini-Manipulation* - refers to a combination (or a sequence) of one or more steps that accomplish a basic functional outcome with a threshold value of the highest level of probability (examples of threshold value as within 0.1, 0.001, or 0.001 of the optimal value). Each step can be an action primitive or another (smaller) mini-manipulation, similar to a computer program comprised of basic coding steps and other computer programs that may stand alone or serve as sub-routines. For instance, a mini-manipulation can be grasping an egg, comprised of the motor actions required for reaching out a robotic arm moving the robotic fingers into the right configuration, and applying the correct delicate amount of force for grasping -- all primitive actions. Another mini-manipulation can be breaking-an-egg-with-a-knife, including the grasping mini- manipulation, followed with one robotic hand, followed by grasping-a-knife mini-manipulation with the other hand, followed by the primitive action of striking the egg with the knife using a predetermined force.

*Model Elements and Classification* - refers to one or more software-based computer program(s) capable of understanding elements in a scene as being items that are used or needed in different parts of a task; such as a bowl for mixing and the need for a spoon to stir, etc. Multiple elements in a scene or a world-model may be classified into groupings allowing for faster planning and task-execution.

*Motion Primitives* - refers to motion actions that define different levels/domains of detailed action steps, e.g. a high level motion primitive would be to grab a cup, and a low level motion primitive would be to rotate a wrist by five degrees.

*Multimodal Sensing Unit* - refers to a sensing unit comprised of multiple sensors capable of sensing and detection in multiple modes or electromagnetic bands or spectra, particularly capable of capturing three dimensional position and/or motion information; the electromagnetic spectrum can range from low to high frequencies and need not be limited to that perceivable by a human being. Additional modes might include, but are not limited to, other physical senses such as touch, smell, etc.

*Number of Axes* - three axes are required to reach any point in space. To fully control the orientation of the end of the arm (i.e. the wrist), three additional rotational axes (yaw, pitch, and roll) are required.

*Parameters* - refers to variables that can take numerical values or ranges of numerical values. Three kinds of parameters are particularly relevant: parameters in the instructions to a robotic device (e.g. the force or distance in an arm movement), user settable parameters (e.g. prefers meat well done vs. medium), and chef-defined parameters (e.g. set oven temperature to 350F).

*Parameter adjustment* - refers to the process of changing the values of parameters based on inputs. For instance changes in the parameters of instructions to the robotic device can be based on the properties (e.g. size, shape, orientation) of, but not limited to, the ingredients, position/orientation of kitchen tools, equipment, appliances, speed, and time duration of a mini-manipulation.

*Payload or carrying capacity* - refers to how much weight a robotic arm can carry and hold (or even accelerate) against the force of gravity, as a function of its endpoint location.

*Physical Reasoning* - refers to a software-based computer program(s) capable of relying on geometrically-reasoned data and using physical information (density, texture, typical geometry and shape) to assist an inference-engine (program) to better model the object and also predict its behavior in the real world, particularly when grasped and/or manipulated/handled.

*Raw Data* - refers to all measured and inferred sensory-data and representation information that is collected as part of the chef-studio recipe-generation process while watching/monitoring a human chef preparing a dish. Raw data can range from a simple data-point such as clock-time, to oven temperature (over time), camera-imagery, three-dimensional laser-generated scene representation data, to appliances/equipment used, tools employed, ingredients (type and amount) dispensed and when, etc. All the information the studio-kitchen collects from its built-in sensors and stores in raw, time-stamped form is considered raw data. Raw data is then used by other software processes to generate an even higher level of understanding and recipe-process understanding, turning raw data into additional time-stamped processed/interpreted data.

*Robotic Apparatus* - refers the set of robotic sensors and effectors. The effectors comprise one or more robotic arms, and one or more robotic hands for operation in the standardized robotic kitchen. The sensors comprise cameras, range sensors, force sensors (haptic sensors) that transmit their information to the processor or set of processors that control the effectors.

*Recipe Cooking Process* - refers to a robotic script containing abstract and detailed levels of instructions to a collection of programmable and hard automation devices, so as to allow computer-controllable devices to execute a sequenced operation within its environment (e.g. a kitchen replete with ingredients, tools, utensils and appliances).

*Recipe Script* - refers to a recipe script as a sequence in time containing a structure and a list of commands and execution primitives (simple to complex command software) that, when executed by the robotic kitchen elements (robot-arm, automated equipment, appliances, tools, etc.) in a given sequence, should result in the proper replication and creation of the same dish as prepared by the human chef in the studio-kitchen. Such a script is sequential in time and equivalent to the sequence employed by the human chef to create the dish, albeit in a representation that is suitable and understandable by the computer-controlled elements in the robotic kitchen.

*Recipe Speed Execution* - refers to managing a timeline in the execution of recipe steps in preparing a food dish by replicating a chef's movements, where the recipe steps include standardized food preparation operations (e.g., standardized cookware, standardized equipment, kitchen processors, etc.), mini-manipulations, and cooking of non-standardized objects.

*Repeatability* - refers to an acceptable preset margin in how accurately the robotic arms/hands can repeatedly return to a programmed position. If the technical specification in a control memory requires the robotic hand to move to a certain X-Y-Z position and within +/- 0.1 mm of that position, then the repeatability is measured for the robotic hands to return to within +/- 0.1 mm of the taught and desired/commanded position.

*Robotic Recipe Script* - refers to a computer-generated sequence of machine-understandable instructions related to the proper sequence of robotically/hard-automation execution of steps to mirror the required cooking steps in a recipe to arrive at the same end-product as if cooked by a chef.

*Robotic Costume* - External instrumented device(s) or clothing, such as gloves, clothing with camera-trackable markers, jointed exoskeleton, etc., used in the chef studio to monitor and track the movements and activities of the chef during all aspects of the recipe cooking process(es).

*Scene Modeling* - refers to a software-based computer program(s) capable of viewing a scene in one or more cameras' fields of view, and being capable of detecting and identifying objects of importance to a particular task. These objects may be pre-taught and/or be part of a computer library with known physical attributes and usage-intent.

*Smart Kitchen Cookware/Equipment* - refers to an item of kitchen cookware (e.g., a pot or a pan) or an item of kitchen equipment (e.g., an oven, a grill, or a faucet) with one or more sensors that prepares a food dish based on one or more graphical curves (e.g., a temperature curve, a humidity curve, etc.).

*Software Abstraction Food Engine* - refers to a software engine that is defined as a collection of software loops or programs, acting in concert to process input data and create a certain desirable set of output data to be used by other software engines or an end-user through some form of textual or graphical output interface. An abstraction software engine is a software program(s) focused on taking a large and vast amount of input data from a known source in a particular domain (such as three-dimensional range measurements that form a data-cloud of three-dimensional measurements as seen by one or more sensors), and then processing the data to arrive at interpretations of the data in a different domain (such as detecting and recognizing a table-surface in a data-cloud based on data having the same vertical data value, etc.), in order to identify, detect and classify data-readings as pertaining to an object in three-dimensional space (such as a table-top, cooking pot, etc.). The process of abstraction is basically defined as taking a large data set from one domain and inferring structure (such as geometry) in a higher level of space (abstracting data points), and then abstracting the inferences even further and identifying objects (pots, etc.) out of the abstracted data-sets to identify real-world elements in an image, which can then be used by other software engines to make additional decisions (handling/manipulation decisions for key objects, etc.). A synonym for "software abstraction engine" in this application could be also "software interpretation engine" or even "computer-software processing and interpretation algorithm".

*Task Reasoning* - refers to a software-based computer program(s) capable of analyzing a task-description and breaking it down into a sequence of multiple machine-executable (robot or hard-automation systems) steps so as to achieve a particular end result defined in the task description.

*Three-dimensional World Object Modeling and Understanding* - refers to a software-based computer program(s) capable of using sensory data to create a time-varying three-dimensional model of all surfaces and volumes so as to enable it to detect, identify and classify objects within the same and understand their usage and intent.

*Torque vector* - refers to the torsion force upon a robotic appendage including its direction and magnitude.

*Volumetric Object Inference (Engine)* - refers to a software-based computer program(s) capable of using geometric data and edge-information as well as other sensory data (color, shape, texture, etc.) to allow for identification of three-dimensionality of one or more objects to aid in the object identification and classification process.

FIG. 1 is a system diagram illustrating an overall robotic food preparation kitchen 10 with robotics hardware 12 and robotics software 14. The overall robotics food preparation kitchen 10 comprises robotics food preparation hardware 12 and robotics food preparation software 14 that operate together to perform the robotics functions for food preparation. The robotic food preparation hardware 12 includes a computer 16 that controls the various operations and movements of a standardized kitchen module 18 (which generally operate in an instrumented environment with one or more sensors) multimodal three-dimensional sensors 20, robotic arms 22, robotic hands 24 and capturing gloves 26. The robotic food preparation software 14 operates with the robotics food preparation hardware 12 to capture a chef's movements in preparing a food dish and replicating the chef's movements via robotics arms and hands to obtain the same result or substantially the same result (e.g., taste the same, smell the same, etc.) of the food dish that would taste the same or substantially the same as if the food dish was prepared by a human chef.

The robotic food preparation software 14 includes the multimodal three-dimensional sensors 20, a capturing module 28, a calibration module 30, a conversion algorithm module 32, a replication module 34, a quality check module 36 with a three-dimensional vision system, a same result module 38, and a learning module 40. The capturing module 28 captures the movements of the chef as the chef prepares a food dish. The calibration module 30 calibrates the robotic arms 22 and robotic hands 24 before, during and after the cooking process. The conversion algorithm module 32 is configured to convert the recorded data from a chef's movements collected in the chef studio into recipe modified data (or transformed data) for use in a robotic kitchen where robotic hands replicate the food preparation of the chef's dish. The replication module 34 is configured to replicate the chef's movements in a robotic kitchen. The quality check module 36 is configured to perform quality check functions of a food dish prepared by the robotic kitchen during, prior to, or after the food preparation process. The same result module 38 is configured to determine whether the food dish prepared by a pair of robotic arms and hands in the robotic kitchen would taste the same or substantially the same as if prepared by the chef. The learning module 40 is configured to provide learning capabilities to the computer 16 that operates the robotic arms and hands.

FIG. 2 is a system diagram illustrating a first embodiment of a food robot cooking system that includes a chef studio system and a household robotic kitchen system for preparing a dish by replicating a chef's recipe process and movements. The robotic kitchen cooking system 42 comprises a chef kitchen 44 (also referred to as "chef studio-kitchen") which transfers one or more software recorded recipe files 46 to a robotic kitchen 48 (also referred to as "household robotic kitchen"). In one embodiment, both the chef kitchen 44 and the robotic kitchen 48 use the same standardized robotic kitchen module 50 (also referred as "robotic kitchen module", "robotic kitchen volume", or "kitchen module", or "kitchen volume") to maximize the precise replication of preparing a food dish, which reduces the variables that may contribute to deviations between the food dish prepared at the chef kitchen 44 and the one prepared by the robotic kitchen 46. A chef 52 wears robotic gloves or a costume with external sensory devices for capturing and recording the chef's cooking movements. The standardized robotic kitchen 50 comprises a computer 16 for controlling various computing functions, where the computer 16 includes a memory 52 for storing one or more software recipe files from the sensors of the gloves or costumes 54 for capturing a chef's movements, and a robotic cooking engine (software) 56. The robotic cooking engine 56 includes a movement analysis and recipe abstraction and sequencing module 58. The robotic kitchen 48 typically operates with a pair of robotic arms and hands, with an optional user 60 to turn on or program the robotic kitchen 46. The computer 16 in the robotic kitchen 48 includes a hard automation module 62 for operating robotic arms and hands, and a recipe replication module 64 for replicating a chef's movements from a software recipe (ingredients, sequence, process, etc.) file.

The standardized robotic kitchen 50 is designed for detecting, recording and emulating a chef's cooking movements, controlling significant parameters such as temperature over time, and process execution at robotic kitchen stations with designated appliances, equipment and tools. The chef kitchen 44 provides a computing kitchen environment 16 with gloves with sensors or a costume with sensors for recording and capturing a chef's 50 movements in the food preparation for a specific recipe. Upon recording the movements and recipe process of the chef 49 for a particular dish into a software recipe file in memory 52, the software recipe file is transferred from the chef kitchen 44 to the robotic kitchen 48 via a communication network 46, including a wireless network and/or a wired network connected to the Internet, so that the user (optional) 60 can purchase one or more software recipe files or the user can be subscribed to the chef kitchen 44 as a member that receives new software recipe files or periodic updates of existing software recipe files. The household robotic kitchen system 48 serves as a robotic computing kitchen environment at residential homes, restaurants, and other places in which the kitchen is built for the user 60 to prepare food. The household robotic kitchen system 48 includes the robotic cooking engine 56 with one or more robotic arms and hard-automation devices for replicating the chef's cooking actions, processes and movements based on a received software recipe file from the chef studio system 44.

The chef studio 44 and the robotic kitchen 48 represent an intricately linked teach-playback system, which has multiple levels of fidelity of execution. While the chef studio 44 generates a high-fidelity process model of how to prepare a professionally cooked dish, the robotic kitchen 48 is the execution/replication engine/process for the recipe-script created through the chef working in the chef studio. Standardization of a robotic kitchen module is a means to increase performance fidelity and success/guarantee.

The varying levels of fidelity for recipe-execution depend on the correlation of sensors and equipment (besides of course the ingredients) between those in the chef studio 44 and that in the robotic kitchen 48. Fidelity can be defined as a dish tasting identical to that prepared by a human chef (indistinguishably so) at one of the (perfect replication/execution) ends of the spectrum, while at the opposite end the dish could have one or more substantial or fatal flaws with implications to quality (overcooked meat or pasta), taste (burnt elements), edibility (incorrect consistency) or even health-implications (undercooked meat such as chicken/pork with salmonella exposure, etc.).

A robotic kitchen that has identical hardware and sensors and actuation systems that can replicate the movements and processes akin to those by the chef that were recorded during the chef-studio cooking process is more likely to result in a higher fidelity outcome. The implication here is that the setups need to be identical, which has a cost and volume implication. The robotic kitchen 48 can however still be implemented using more standardized non-computer-controlled or computer-monitored elements (pots with sensors, networked appliances such as ovens, etc.), requiring more sensor-based understanding to allow for more complex execution monitoring. Since uncertainty has now increased as to key elements (correct amount of ingredients, cooking temperatures, etc.) and processes (use of stirrer/masher in case a blender is not available in a robotic home kitchen), the guarantees of having an identical outcome to that from the chef will undoubtedly be lower.

An emphasis in the present disclosure is that the notion of a chef studio 44 coupled with a robotic kitchen is a generic concept. The level of the robotic kitchen 48 is variable all the way from a home-kitchen outfitted with a set of arms and environmental sensors, all the way to an identical replica of the studio-kitchen, where a set of arms and articulated motions, tools and appliances and ingredient-supply can replicate the chef's recipe in an almost identical fashion. The only variable to contend with will be the quality-degree of the end-result or dish in terms of quality, looks, taste, edibility and health.

A potential method to mathematically describe this correlation between the recipe-outcome and the input variables in the robotic kitchen can best be described by the function below:

$$F_{recipe\text{-}outcome} = F_{studio}(I, E, P, M, V) + F_{RobKit}(E_f, I, R_e, P_{mf})$$

where

$F_{studio}$ = Recipe Script Fidelity of Chef-Studio
$F_{RobKit}$ = Recipe Script Execution by Robotic Kitchen
I = Ingredients
E = Equipment
P = Processes
M = Methods
V = Variables (Temperature, Time, Pressure, etc.)
$E_f$ = Equipment Fidelity
$R_e$ = Replication Fidelity
$P_{mf}$ = Process Monitoring Fidelity

The above equation relates the degree to which the outcome of a robotically-prepared recipe matches that a human chef would prepare and serve ($F_{recipe\text{-}outcome}$) to the level that the recipe was properly captured and represented by the chef studio 44 ($F_{studio}$) based on the ingredients (I) used, the equipment (E) available to execute the chef's processes (P) and methods (M) by properly capturing all the key variables (V) during the cooking process; and how the robotic kitchen is able to represent the replication/execution process of the robotic recipe script by a function ($F_{RobKit}$) that is primarily driven by the use of the proper ingredients (I), the level of equipment fidelity ($E_f$) in the robotic kitchen compared to that in the chef studio, the level to which the recipe-script can be replicated ($R_e$) in the robotic kitchen, and to what extent there is an ability and need to monitor and execute corrective actions to achieve the highest process monitoring fidelity ($P_{mf}$) possible.

The functions ($F_{studio}$) and ($F_{RobKit}$) can be any combination of linear or non-linear functional formulas with constants, variables and any form of algorithmic relationships. An example for such algebraic representations for both functions could be.

$$F_{studio} = I\ (fct.\ sin(Temp)) + E\ (fct.\ Cooptop1*5) + P(fct.\ Circle(spoon) + V\ (fct.\ 0.5*time\ )$$

Delineating that the fidelity of the preparation process is related to the temperature of the ingredient which varies over time in the refrigerator as a sinusoidal function, the speed with which an ingredient can be heated on the cooktop on specific station at a particular multiplicative rate, and related to how well a spoon can be moved in a circular path of a certain amplitude and period, and that the process needs to be carried out at no less than ½ the speed of the human chef for the fidelity of the preparation process to be maintained.

$$F_{RobKit} = E_f,(Cooktop2,\ Size) + I\ (1.25*Size + Linear(Temp)) + R_e(Motion\text{-}Profile) + P_{mf}\ (Sensor\text{-}Suite\ Correspondence)$$

Delineating that the fidelity of the replication process in the robotic kitchen is related to the appliance type and layout for a particular cooking-area and the size of the heating-element, the size and temperature profile of the ingredient being seared and cooked (thicker steak requiring more cooking time), while also preserving the motion-profile of any stirring and bathing motions of a particular step like searing or mousse-beating, and whether the correspondence between sensors in the robotic kitchen and the chef-studio is sufficiently high to trust the monitored sensor data to be accurate and detailed enough to provide a proper monitoring fidelity of the cooking process in the robotic kitchen during all steps in a recipe.

The outcome of a recipe is not only a function of what fidelity the human chef's cooking steps/methods/process/skills were captured with by the chef studio, but also with what fidelity these can be executed by the robotic kitchen, where each of them has key elements that impact their respective subsystem performance.

FIG. 3 is a system diagram illustrating one embodiment of the standardized robotic kitchen 50 for food preparation by recording a chef's movement in preparing a food dish and replicating the food dish by robotic arms and hands. In this context, the term "standardized" (or "standard") means that the specifications of the components or features are presets, as will be explained below. The computer 16 is communicatively coupled to multiple kitchen elements in the standardized robotic kitchen 50, including a three-dimensional vision sensor 66, a retractable safety screen (e.g., glass, plastic, or other types of protective material) 68, robotic arms 70, robotic hands 72, standardized cooking appliances/equipment 74, standardized cookware with sensors 76, standardized cookware 78, standardized handles and utensils 80, standardized hard automation dispenser(s) 82 (also referred to as "robotic hard automation module(s)"), a standardized kitchen processor 84, standardized containers 86, and a standardized food storage in a refrigerator 88.

The standardized hard automation dispenser(s) 82 is a device or a series of devices that is/are programmable and/or controllable via the cooking computer 16 to feed or provide pre-packaged (known) amounts or dedicated feeds of key materials for the cooking process, such as spices (salt, pepper, etc.), liquids (water, oil, etc.) or other dry materials (flour, sugar, etc.). The standardized hard automation dispensers 82 may be located at a specific station or be able to be robotically accessed and triggered to dispense according to the recipe sequence. In other embodiments, a robotic hard automation module may be combined or sequenced in series or parallel with other such modules or robotic arms or cooking utensils. In this embodiment, the standardized robotic kitchen 50 includes robotic arms 70 and robotic hands 72 and robotic hands as controlled by the robotic food preparation engine 56 in accordance with a software recipe file stored in the memory 52 for replicating a chef's precise movements in preparing a dish to produce the same tasting dish as if the chef had prepared it himself or herself. The three-dimensional vision sensors 66 provide capability to enable three-dimensional modeling of objects, providing a visual three-dimensional model of the kitchen activities, and scanning the kitchen volume to assess the dimensions and objects within the standardized robotic kitchen 50. The retractable safety glass 68 comprises a transparent material on the robotic kitchen 50, which when in an ON state extends the safety glass around the robotic kitchen to protect surrounding human beings from the movements of robotic arms 70 and hands 72, hot water and other liquids, steam, fire and other dangers influents. The robotic food preparation engine 56 is communicatively coupled to an electronic memory 52 for retrieving a software recipe file previously sent from the chef studio system 44 for which the robotic food preparation engine 56 is configured to execute processes in preparing and replicating the cooking method and processes of a chef as indicated in the software recipe file. The combination of robotic arms 70 and robotic hands 72 serves to replicate the precise movements of the chef in preparing a dish so that the resulting food dish will taste identical (or substantially identical) to the same food dish prepared by the chef. The standardized cooking equipment 74 includes an assortment of cooking appliances 46 that are incorporated as part of the robotic kitchen 50, including, but not limited to, a stove/induction/cooktop (electric cooktop, gas cooktop, induction cooktop), an oven, a grill, a cooking steamer, and a microwave oven. The standardized cookware and sensors 76 are used as embodiments for the recording of food preparation steps based on the sensors on the cookware and cooking a food dish based on the cookware with sensors, which include a pot with sensors, a pan with sensors, an oven with sensors, and a charcoal grill with sensors. The standardized cookware 78 includes frying pans, sauté pans, grill pans, multi-pots, roasters, woks, and braisers. The robotic arms 70 and the robotic hands 72 operate the standardized handles and utensils 80 in the cooking process. In one embodiment, one of the robotic hands 72 is fitted with a standardized handle, which is attached to a fork head, a knife head, and a spoon head for selection as required. The standardized hard automation dispensers 82 are incorporated into the robotic kitchen 50 to provide for expedient (via both robot arms 70 and human use) key and common/repetitive ingredients that are easily measured/dosed out or pre-packaged. The standardized containers 86 are storage locations that store food at room temperature. The standardized refrigerator containers 88 refer to, but are not limited to, a refrigerator with identified containers for storing fish, meat, vegetables, fruit, milk, and other perishable items. The containers in the standardized containers 86 or standardized storages 88 can be coded with container identifiers from which the robotic food preparation engine 56 is able to ascertain the type of food in a container based on the container identifier. The standardized containers 86 provide storage space for non-perishable food items such as salt, pepper, sugar, oil, and other spices. Standardized cookware with sensors 76 and the cookware 78 may be stored on a shelf or a cabinet for use by the robotic arms 70 for selecting a cooking tool to prepare a dish. Typically, the raw fish, the raw meat, and vegetables are pre-cut and stored in the identified standardized storages 88. The kitchen countertop 90 provides a platform for the robotic arms 70 to handle the meat or vegetables as needed, which may or may not include cutting or chopping actions. The kitchen faucet 92 provides a kitchen sink space for washing or cleaning food in preparation for a dish. When the robotic arms 70 have completed the recipe process to prepare a dish and the dish is ready for serving, the dish is placed on a serving counter 90, which further allows for the dining environment to be enhanced by adjusting the ambient setting with the robotic arms 70, such as placement of utensils, wine glasses, and a chosen wine compatible with the meal. One embodiment of the equipment in the standardized robotic kitchen module 50 is a professional series as to increase the universal appeal to prepare various types of dishes.

The standardized robotic kitchen module 50 has as one objective the standardization of the kitchen module 50 and various components with the kitchen module itself, to ensure consistency in both the chef kitchen 44 and the robotic kitchen 48 to maximize the preciseness of recipe replication while minimizing the risks of deviations from precise replication of a recipe dish between the chef kitchen 44 and the robotic kitchen 48. One main purpose of having the standardization of the kitchen module 50 is to obtain the *same result of the cooking process* (or the same dish) between a first food dish prepared by the chef and a subsequent replication of the same recipe process via the robotic kitchen. Conceiving a standardized platform in the standardized robotic kitchen module 50 between the chef kitchen 44 and the robotic kitchen 48 has several key considerations: same timeline, same program or mode, and quality check. The same timeline in the standardized robotic kitchen 50 where the chef prepares a food dish at the chef kitchen 44 and the replication process by the robotic hands in the robotic kitchen 48 refers to the same sequence of manipulations, the same initial and ending time of each manipulation, and the same speed of moving an object between handling operations. The same program or mode in the standardized robotic kitchen 50 refers to the use and operation of standardized equipment during each manipulation recording and execution step. The quality check refers to three-dimensional vision sensors in the standardized robotic kitchen 50 which monitor and adjust in real time each manipulation action during the food preparation process to correct any deviation and avoid a flawed result. The adoption of the standardized robotic kitchen module 50 reduces and minimizes the risks of not obtaining the same result between the chef's prepared food dish and the food dish prepared by the robotic kitchen using robotic arms and hands. Without the standardization of a robotic kitchen module and the components within the robotic kitchen module, the increased variations between the chef kitchen 44 and the robotic kitchen 48 increase the risks of not being able to obtain the same result between the chef's prepared food dish and the food dish prepared by the robotic kitchen because more elaborate and complex adjustment algorithms will be required with different kitchen modules, different kitchen equipment, different kitchenware, different kitchen tools, and different ingredients between the chef kitchen 44 and the robotic kitchen 48.

The standardized robotic kitchen module 50 includes standardization of many aspects. First, the standardized robotic kitchen module 50 includes standardized positions and orientations (in the XYZ coordinate plane) of any type of kitchenware, kitchen containers, kitchen tools and kitchen equipment (with standardized fixed holes in the kitchen module and device positions). Secondly, the standardized robotic kitchen module 50 includes a standardized cooking volume dimension and architecture. Thirdly, the standardized robotic kitchen module 50 includes standardized equipment sets, such as an oven, a stove, a dish washer, a faucet, etc. Fourth, the standardized robotic kitchen module 50 includes standardized kitchenware, standardized cooking tools, standardized cooking devices, standardized containers, and standardized food storage in a refrigerator, in terms of shape, dimension, structure, material, capabilities, etc. Fifth, in one embodiment, the standardized robotic kitchen module 50 includes a standardized universal handle for handling any kitchenware, tools, instruments, containers, and equipment, which enable a robotic hand to hold the standardized universal handle in only one correct position, while avoiding any improper grasps or incorrect orientations. Sixth, the standardized robotic kitchen module 50 includes standardized robotic arms and hands with a library of manipulations. Seventh, the standardized robotic kitchen module 50 includes a standardized kitchen processor for standardized ingredient manipulations. Eighth, the standardized robotic kitchen module 50 includes standardized three-dimensional vision devices for creating dynamic three-dimensional vision data, as well as other possible standard sensors, for recipe recording, execution tracking, and quality check functions. Ninth, the standardized robotic kitchen module 50 includes standardized types, standardized volumes, standardized sizes, and standardized weights for each ingredient during a particular recipe execution.

FIG. 4 is a system diagram illustrating one embodiment of the robotic cooking engine 56 (also referred to as "robotic food preparation engine") for use with the computer 16 in the chef studio system 44 and the household robotic kitchen system 48. Other embodiments may have modifications, additions, or variations of the modules in the robotic cooking engine 16 in the chef kitchen 44 and robotic kitchen 48. The robotic cooking engine 56 includes an input module 50, a calibration module 94, a quality check module 96, a chef movement recording module 98, a cookware sensor data recording module 100, a memory module 102 for storing software recipe files, a recipe abstraction module 104 using recorded sensor data to generate machine-module specific sequenced operation profiles, a chef movements replication software module 106, a cookware sensory replication module 108 using one or more sensory curves, a robotic cooking module 110 (computer control to operate standardized operations, mini-manipulations, and non-standardized objects), a real-time adjustment module 112, a learning module 114, a mini-manipulation library database module 116, a standardized kitchen operation library database module 117, and an output module 118, to which these modules are communicatively coupled via a bus 120.

The input module 50 is configured to receive any type of input information such as software recipe files sent from another computing device. The calibration module 94 is configured to calibrate itself with the robotic arms 70, the robotic hands 72, and other kitchenware and equipment components within the standardized robotic kitchen module 50. The quality check module 96 is configured to determine the quality and freshness of raw meat, raw vegetables, milk-associated ingredients and other raw foods at the time that the raw food is retrieved for cooking, as well as checking the quality of raw foods when receiving the food into the standardized food storage 88. The quality check module 96 can also be configured to conduct quality testing of an object based on senses, such as the smell of the food, the color of the food, the taste of the food, and the image or appearance of the food. The chef movements recording module 98 is configured to record the sequence and the precise movements of the chef when the chef prepares a food dish. The cookware sensor data recording module 100 is configured to record sensory data from cookware equipped with sensors (such as a pan with sensors, a grill with sensors, or an oven with sensors) placed in different zones within the cookware, thereby producing one or more sensory curves. The result is the generation of a sensory curve, such as temperature curve (and/or humidity), that reflects the temperature fluctuation of cooking appliances over time for a particular dish. The memory module 102 is configured as a storage location for storing software recipe files, for either replication of chef recipe movements or other types of software recipe files including sensory data curves. The recipe abstraction module 104 is configured to use recorded sensor data to generate machine-module specific sequenced operation profiles. The chef movements replication module 106 is configured to replicate the chef's precise movements in preparing a dish based on the stored software recipe file in the memory 52. The cookware sensory replication module 108 is configured to replicate the preparation of a food dish by following the characteristics of one or more previously recorded sensory curves which was generated when the chef 49 prepared a dish by using the standardized cookware with sensors 76. The robotic cooking module 110 is configured to control and operate standardized kitchen operations, mini-manipulations, non-standardized objects, and the various kitchen tools and equipment in the standardized robotic kitchen 50. The real time adjustment module 112 is configured to provide real-time adjustments to the variables associated with a particular kitchen operation or a mini operation so as to produce a resulting process that is a precise replication of the chef movement or a precise replication of the sensory curve. The learning module 114 is configured to provide learning capabilities to the robotic cooking engine 56 to optimize the precise replication in preparing a food dish by robotic arms 70 and the robotic hands 72, as if the food dish was prepared by a chef, using a method such as case-based (robotic) learning. The mini-manipulation library database module 116 is configured to store a first database library of mini-manipulations. The standardized kitchen operation library database module 117 is configured to store a second database library of standardized kitchenware and how to operate this standardized kitchenware. The output module 118 is configured to send output computer files or control signals external to the robotic cooking engine.

FIG. 5A is a block diagram illustrating a chef studio recipe-creation process, showcasing several main functional blocks supporting the use of expanded multimodal sensing to create a recipe instruction-script for a robotic kitchen. Sensor-data from a multitude of sensors, such as (but not limited to) smell 124, video cameras 126, infrared scanners and rangefinders 128, stereo (or even trinocular) cameras 130, haptic gloves 132, articulated laser-scanners 134, virtual-world goggles 136, microphones 138 or an exoskeletal motion suit 140, human voice 142, touch-sensors 144 and even other forms of user input 146, are used to collect data through a sensor interface module 148. The data is acquired and filtered 150, including possible human user input (e.g., chef; touch-screen and voice input) 146, after which a multitude of (parallel) software processes utilize the temporal and spatial data to generate the data that is used to populate the machine-specific recipe-creation process. Sensors may not be limited to capturing human position and/or motion but may also capture position, orientation and/or motion of other objects in the standardized robotic kitchen 50.

These individual software modules generate such information (but are not thereby limited to only these modules) as (i) chef-location and cooking-station ID via a location and configuration module 152, (ii) configuration of arms (via torso), (iii) tools handled and when and how, (iv) utensils used and locations on the station through the hardware and variable abstraction module 154, (v) processes executed with them and (vi) variables (temperature, lid y/n, stirring, etc.) in need of monitoring through the process module B156, (vii) temporal (start/finish, type) distribution and (viii) types of processes (stir, fold, etc.) being applied, and (ix) ingredients added (type, amount, state of prep, etc.), through the cooking sequence and process abstraction module 158.

All this information is then used to create a machine-specific (not just for the robotic-arms, but also ingredient dispensers, tools and utensils, etc.) set of recipe instructions through the stand-alone module 160, which are organized as a script of sequential/parallel overlapping tasks to be executed and monitored. This recipe-script is stored (162) alongside the entire raw data set (164) in the data storage module 166 and is made accessible to either a remote robotic cooking station through the robotic kitchen interface module 168 or a human user 170 via a graphical user interface (GUI) 172.

FIG. 5B is a block diagram illustrating one embodiment of the standardized chef studio 44 and robotic kitchen 50 with teach/playback process 176. The teach/playback process 176 describes the steps of capturing a chef's recipe-implementation processes/methods/skills 49 in the chef studio 44 where he/she carries out the recipe execution 180, using a set of chef-studio standardized equipment 74 and recipe-required ingredients 178 to create a dish while being logged and monitored 182. The raw sensor data is logged (for playback) in 182 and also processed to generate information at different abstraction levels (tools/equipment used, techniques employed, times/temperatures started/ended, etc.), and then used to create a recipe-script 184 for execution by the robotic kitchen 48.

The robotic kitchen 48 engages in a recipe replication process 106, whose profile depends on whether the kitchen is of a standardized or non-standardized type, which is checked by a process 186.

The robotic kitchen execution is dependent on the type of kitchen available to the user. If the robotic kitchen uses the same/identical (at least functionally) equipment as used in the chef studio, the recipe replication process is primarily one of using the raw data and playing it back as part of the recipe-script execution process. Should the kitchen however differ from the (ideal) standardized kitchen, the execution engine(s) will have to rely on the abstracted data to generate kitchen-specific execution sequences to try to achieve a similar step-by-step result.

Since the cooking process is continually monitored by all sensor units in the robotic kitchen via a monitoring process 194, regardless of whether the known studio equipment 196 or the mixed/atypical non-chef studio equipment 198 is being used, the system is able to make modifications as needed depending on a recipe progress check 200. In one embodiment of the standardized kitchen, raw data is typically played back through an execution module 188 using chef-studio type equipment, and the only adjustments that are expected are adaptations 202 in the execution of the script (repeat a certain step, go back to a certain step, slow down the execution, etc.) as there is a one-to-one correspondence between taught and played-back data-sets. However, in the case of the non-standardized kitchen, the chances are very high that the system will have to modify and adapt the actual recipe itself and its execution via a recipe script modification module 204, to suit the available tools/appliances 192 which differ from those in the chef studio 44 or the measured deviations from the recipe script (meat cooking too slowly, hot-spots in pot burning the roux, etc.). Overall recipe-script progress is monitored using a similar process 206, which differs depending on whether chef-studio equipment 208 or mixed/atypical kitchen equipment 210 is being used.

A non-standardized kitchen is less likely to result in a close-to-human chef cooked dish, as compared to using a standardized robotic kitchen that has equipment and capabilities reflective of those used in the studio-kitchen. The ultimate subjective decision is of course that of the human (or chef) tasting, which is a quality evaluation 212, yielding to a (subjective) quality decision 214.

FIG. 5C is a block diagram illustrating one embodiment 216 of a recipe script generation and abstraction engine that pertains to the structure and flow of the recipe-script generation process as part of the chef-studio recipe walk-through by a human chef. The first step is for all available data measurable in the chef studio 44, whether it be ergonomic data from the chef (arms/hands positions and velocities, haptic finger data, etc.), status of the kitchen appliances (ovens, fridges, dispensers, etc.), specific variables (cooktop temperature, ingredient temperature, etc.), appliance or tools being used (pots/pans, spatulas, etc.), or two-dimensional and three-dimensional data collected by multi-spectrum sensory equipment (including cameras, lasers, structured light systems, etc.), to be input and filtered by the central computer system and also time-stamped by a main process 218.

A data process-mapping algorithm 220 uses the simpler (typically single-unit) variables to determine where the process action is taking place (cooktop and/or oven, fridge, etc.) and assigns a usage tag to any item/appliance/equipment being used whether intermittently or continuously. It associates a cooking step (baking, grilling, ingredient-addition, etc.) to a specific time-period and tracks when, where and which and how much of what ingredient was added. This (time-stamped) information dataset is then made available for the data-melding process during the recipe-script generation process 222.

The data extraction and mapping process 224 is primarily focused on taking two-dimensional information (such as from monocular/single-lensed cameras) and extracting key information from the same. In order to extract the important and more abstracted descriptive information from each successive image, several algorithmic processes have to be applied to this dataset. Such processing steps can include (but are not limited to) edge-detection, color and texture-mapping, and then using the domain-knowledge in the image, coupled with object-matching information (type and size) extracted from the data reduction and abstraction process 226, to allow for the identification and location of the object (whether an item of equipment or ingredient, etc.), again extracted from the data reduction and abstraction process 226, allowing one to associate the state (and all associated variables describing the same) and items in an image with a particular process-step (frying, boiling, cutting, etc.). Once this data has been extracted and associated with a particular image at a particular point in time, it can be passed to the recipe-script generation process 222 to formulate the sequence and steps within a recipe.

The data-reduction and abstraction engine (set of software routines) 226 is intended to reduce the larger three-dimensional data sets and extract from them key geometric and associative information. A first step is to extract from the large three-dimensional data point-cloud only the specific workspace area of importance to the recipe at that particular point in time. Once the data-set has been trimmed, key geometric features will be identified by a process known as template matching; this allows for the identification of such items as horizontal table-tops, cylindrical pots and pans, arm and hand locations, etc. Once typical known (template) geometric entities are determined in a data-set a process of object identification and matching proceeds to differentiate all items (pot vs. pan, etc.) and associates the proper dimensionality (size of pot or pan, etc.) and orientation of the same, and places them within the three-dimensional world model being assembled by the computer. All this abstracted/extracted information is then also shared with the data-extraction and mapping engine 224, prior to all being fed to the recipe-script generation engine 222.

The recipe-script generation engine process 222 is responsible for melding (blending/combining) all the available data and sets into a structured and sequential cooking script with clear process-identifiers (prepping, blanching, frying, washing, plating, etc.) and process-specific steps within each, which can then be translated into robotic-kitchen machine-executable command-scripts that are synchronized based on process-completion and overall cooking time and cooking progress. Data melding will at least involve, but will not solely be limited to, the ability to take each (cooking) process step and populating the sequence of steps to be executed with the properly associated elements (ingredients, equipment, etc.), methods and processes to be used during the process steps, and the associated key control- (set oven/cooktop temperatures/settings) and monitoring-variables (water or meat temperature, etc.) to be maintained and checked to verify proper progress and execution. The melded data is then combined into a structured sequential cooking script that will resemble a set of minimally descriptive steps (akin to a recipe in a magazine) but with a much larger set of variables associated with each element (equipment, ingredient, process, method, variable, etc.) of the cooking process at any one point in the procedure. The final step is to take this sequential cooking script and transform it into an identically structured sequential script that is translatable by a set of machines/robot/equipment within a robotic kitchen 48. It is this script the robotic kitchen 48 uses to execute the automated recipe execution and monitoring steps.

All raw (unprocessed) and processed data as well as the associated scripts (both structure sequential cooking-sequence script and the machine-executable cooking-sequence script) are stored in the data and profile storage unit/process 228 and time-stamped. It is from this database that the user, by way of a GUI, can select and cause the robotic kitchen to execute a desired recipe through the automated execution and monitoring engine 230, which is continually monitored by its own internal automated cooking process, with necessary adaptations and modifications to the script generated by the same and implemented by the robotic-kitchen elements, in order to arrive at a completely plated and served dish.

FIG. 5D is a block diagram illustrating software elements for object-manipulation in the standardized robotic kitchen, which shows the structure and flow 250 of the object-manipulation portion of the robotic kitchen execution of a robotic script, using the notion of motion-replication coupled-with/aided-by mini-manipulation steps. In order for automated robotic-arm/-hand-based cooking to be viable, it is insufficient to simply monitor every single joint in the arm and hands/fingers. In many cases just the position and orientation of the hand/wrist are known (and able to be replicated), but then manipulating an object (identifying location, orientation, pose, grab-location, grabbing-strategy and task-execution) requires that local-sensing and learned behaviors and strategies for the hand and fingers be used to complete the grabbing/manipulating task successfully. These motion-profiles (sensor-based/-driven) behaviors and sequences are stored within the mini hand-manipulation library software repository in the robotic-kitchen system. The human chef could be wearing complete arm-exoskeleton or an instrumented/target-fitted motion-vest allowing the computer via built-in sensors or though camera-tracking to determine the exact 3D position of the hands and wrists at all times. Even if the ten fingers on both hands had all their joints instrumented (more than 30 DoFs [Degrees of Freedom] for both hands and very awkward to wear and use, and thus unlikely to be used), a simple motion-based playback of all joint positions would not guarantee successful (interactive) object manipulation.

The mini-manipulation library is a command-software repository, where motion behaviors and processes are stored based on an off-line learning process, where the arm/wrist/finger motions and sequences to successfully complete a particular abstract task (grab the knife and then slice; grab the spoon and then stir; grab the pot with one hand and then use other hand to grab spatula and get under meat and flip it inside the pan; etc.). This repository has been built up to contain the learned sequences of successful sensor-driven motion-profiles and sequenced behaviors for the hand/wrist (and sometimes also arm-position corrections), to ensure successful completions of object (appliance, equipment, tools) and ingredient manipulation tasks that are described in a more abstract language, such as "grab the knife and slice the vegetable", "crack the egg into the bowl", "flip the meat over in the pan", etc. The learning process is iterative and is based on multiple trials of a chef-taught motion-profile from the chef studio, which is then executed and iteratively modified by the offline learning algorithm module, until an acceptable execution-sequence can be shown to have been achieved. The mini-manipulation library (command software repository) is intended to have been populated (a-priori and offline) with all the necessary elements to allow the robotic-kitchen system to successfully interact with all equipment (appliances, tools, etc.) and main ingredients that require processing (steps beyond just dispensing) during the cooking process. While the human chef wore gloves with embedded haptic sensors (proximity, touch, contact-location/-force) for the fingers and palm, the robotic hands are outfitted with similar sensor-types in locations to allow their data to be used to create, modify and adapt motion-profiles to successfully execute desired motion-profiles and handling-commands.

The object-manipulation portion of the robotic-kitchen cooking process (robotic recipe-script execution software module for the interactive manipulation and handling of objects in the kitchen environment) 252 is further elaborated below. Using the robotic recipe-script database 254 (which contains data in raw, abstracted cooking-sequence and machine-executable script forms), the recipe script executor module 256 steps through a specific recipe execution-step. The configuration playback module 258 selects and passes configuration commands through to the robot arm system (torso, arm, wrist and hands) controller 270, which then controls the physical system to emulate the required configuration (joint-positions/-velocities/-torques, etc.) values.

The notion of being able to faithfully carry out proper environment interaction manipulation and handling tasks is made possible through a real-time process-verification by way of (i) 3D world modeling as well as (ii) mini-manipulation. Both the verification and manipulation steps are carried out through the addition of the robot wrist and hand configuration modifier 260. This software module uses data from the 3D world configuration modeler 262, which creates a new 3D world model at every sampling step from sensory data supplied by the multimodal sensor(s) unit(s), in order to ascertain that the configuration of the robotic kitchen systems and process matches that required by the recipe script (database); if not, it enacts modifications to the commanded system-configuration values to ensure the task is completed successfully. Furthermore, the robot wrist and hand configuration modifier 260 also uses configuration-modifying input commands from the mini-manipulation motion profile executor 264. The hand/wrist (and potentially also arm) configuration modification data fed to the configuration modifier 260 are based on the mini-manipulation motion profile executor 264 knowing what the desired configuration playback should be from 258, but then modifying it based on its 3D object model library 266 and the a-priori learned (and stored) data from the configuration and sequencing library 268 (which was built based on multiple iterative learning steps for all main object handling and processing steps).

While the configuration modifier 260 continually feeds modified commanded configuration data to the robot arm system controller 270, it relies on the handling/manipulation verification software module 272 to verify not only that the operation is proceeding properly but also whether continued manipulation/handling is necessary. In the case of the latter (answer 'N' to the decision), the configuration modifier 260 re-requests configuration-modification (for the wrist, hands/fingers and potentially the arm and possibly even torso) updates from both the world modeler 262 and the mini-manipulation profile executor 264. The goal is simply to verify that a successful manipulation/handling step or sequence has been successfully completed. The handling/manipulation verification software module 272 carries out this check by using the knowledge of the recipe script database F2 and the 3D world configuration modeler 262 to verify the appropriate progress in the cooking step currently being commanded by the recipe script executor 256. Once progress has been deemed successful, the recipe script index increment process 274 notifies the recipe script executor 256 to proceed to the next step in the recipe-script execution.

FIG. 6 is a block diagram illustrating a multimodal sensing and software engine architecture 300 in accordance with the present invention. One of the main autonomous cooking features allowing for planning, execution and monitoring of a robotic cooking script requires the use of multimodal sensory input 302 that is used by multiple software modules to generate data needed to (i) understand the world, (ii) model the scene and materials, (iii) plan the next steps in the robotic cooking sequence, (iv) execute the generated plan and (v) monitor the execution to verify proper operations - all of these steps occurring in a continuous/repetitive closed loop fashion.

The multimodal sensor-unit(s) 302, comprising, but not limited to, video cameras 304, IR cameras and rangefinders 306, stereo (or even trinocular) camera(s) 308 and multi-dimensional scanning lasers 310, provide multi-spectral sensory data to the main software abstraction engines 312 (after being acquired & filtered in the data acquisition and filtering module 314). The data is used in a scene understanding module 316 to carry out multiple steps such as (but not limited to) building high- and lower-resolution (laser: high-resolution; stereo-camera: lower-resolution) three-dimensional surface volumes of the scene, with superimposed visual and IR-spectrum color and texture video information, allowing edge-detection and volumetric object-detection algorithms to infer what elements are in a scene, allowing the use of shape-/color-/texture- and consistency-mapping algorithms to run on the processed data to feed processed information to the Kitchen Cooking Process Equipment Handling Module 318. In the module 318, software-based engines are used for the purpose of identifying and three-dimensionally locating the position and orientation of kitchen tools and utensils and identifying and tagging recognizable food elements (meat, carrots, sauce, liquids, etc.) so as to generate data to let the computer build and understand the complete scene at a particular point in time so as to be used for next-step planning and process monitoring. Engines required to achieve such data and information abstraction include, but are not limited to, grasp reasoning engines, geometry reasoning engines, physical reasoning engines and task reasoning engines. Output data from both engines 316 and 318 are then used to feed the scene modeler and content classifier 320, where the 3D world model is created with all the key content required for executing the robotic cooking script executor. Once the fully-populated model of the world is understood, it can be used to feed the motion and handling planner 322 (if robotic-arm grasping and handling are necessary, the same data can be used to differentiate and plan for grasping and manipulating food and kitchen items depending on the required grip and placement) to allow for planning motions and trajectories for the arm(s) and attached end-effector(s) (grippers, multi-fingered hands). A follow-on Execution Sequence planner 324 creates the proper sequencing of task-based commands for all individual robotic/automated kitchen elements, which are then used by the robotic kitchen actuation systems 326. The entire sequence above is repeated in a continuous closed loop during the robotic recipe-script execution and monitoring phase.

FIG. 7A depicts the standardized kitchen 50 which in this case plays the role of the chef-studio, in which the human chef 49 carries out the recipe creation and execution while being monitored by the multi-modal sensor systems 66, so as to allow the creation of a recipe-script. Within the standardized kitchen, are contained multiple elements necessary for the execution of a recipe, including the main cooking module 350, which includes such as equipment as utensils 360, a cooktop 362, a kitchen sink 358, a dishwasher 356, a table-top mixer and blender (also referred to as a "kitchen blender") 352, an oven 354 and a refrigerator/freezer combination unit 353.

Figure 7B depicts the standardized kitchen 50 \which in this case is configured as the standardized robotic kitchen, in which a dual-arm robotics system with vertical telescoping and rotating torso joint 360, outfitted with two arms 70 and two wristed and fingered hands 72, carries out the recipe replication processes defined in the recipe-script. The multi-modal sensor systems 66 continually monitor the robotically executed cooking steps in the multiple stages of the recipe replication process.

FIG. 7C depicts the systems involved in the creation of a recipe-script by monitoring a human chef 49 during the entire recipe execution process. The same standardized kitchen 50 is used in a chef studio mode, with the chef able to operate the kitchen from either side of the work-module. Multi-modal sensors 66 monitor and collect data, as well as through the haptic gloves 370 worn by the chef and instrumented cookware 372 and equipment, relaying all collected raw data wirelessly to a processing computer 16 for processing and storage.

Figure 7D depicts the systems involved in a standardized kitchen 50 for the replication of a recipe script 19 through the use of a dual-arm system with telescoping and rotating torso 374, comprised of two arms 72, two robotic wrists 71 and two multi-fingered hands 72 with embedded sensory skin and point-sensors. The robotic dual-arm system uses the instrumented arms and hands with a cooking utensil and an instrumented appliance and cookware (pan in this image) on a cooktop 12, while executing a particular step in the recipe replication process, while being continuously monitored by the multi-modal sensor units 66 to ensure the replication process is carried out as faithfully as possible to that created by the human chef. All data from the multi-modal sensors 66, dual-arm robotics system comprised of torso 74, arms 72, wrists 71 and multi-fingered hands 72, utensils, cookware and appliances, is wirelessly transmitted to a computer 16, where it is processed by an onboard processing unit 16 in order to compare and track the replication process of the recipe to as faithfully as possible follow the criteria and steps as defined in the previously created recipe script 19 and stored in media 18.

FIG. 7E is a block diagram depicting the stepwise flow and methods 376 to ensure that there are control or verification points during the recipe replication process based on the recipe-script when executed by the standardized robotic kitchen 50, that ensures as nearly identical as possible a cooking result for a particular dish as executed by the standardized robotic kitchen 50, when compared to the dish prepared by the human chef 49. Using a recipe 378, as described by the recipe-script and executed in sequential steps in the cooking process 380, the fidelity of execution of the recipe by the robotic kitchen 50 will depend largely on considering the following main control items. Key control items include the process of selecting and utilizing a standardized portion amount and shape of a high-quality and pre-processed ingredient 381, the use of standardized tools and utensils, cook-ware with standardized handles to ensure proper and secure grasping with a known orientation 383, standardized equipment 385 (oven, blender, fridge, fridge, etc.) in the standardized kitchen that is as identical as possible when comparing the chef studio kitchen where the human chef 49 prepares the dish and the standardized robotic kitchen 50, location and placement 384 for ingredients to be used in the recipe, and ultimately a pair of robotic arms, wrists and multi-fingered hands in a kitchen module 382 continually monitored by sensors with computer-controlled actions to ensure successful execution of each step in every stage of the replication process of the recipe-script for a particular dish. In the end the task of ensuring an identical result 386 is the ultimate goal for the standardized robotic kitchen 50.

FIG. 8A is a block diagram illustrating one embodiment of a recipe conversion algorithm module 400 between the chef's movements and the robotic replication movements. A recipe algorithm conversion module 404 converts the captured data from the chef's movements in the chef studio 44 into a machine-readable and machine-executable language 406 for instructing the robotic arms 70 and the robotic hands 72 to replicate a food dish prepared by the chef's movement in the robotic kitchen 48. In the chef studio 44, the computer 16 captures and records the chef's movements based on the sensors on a glove 26 that the chef wears, represented by a plurality of sensors $S_0$, $S_1$, $S_2$, $S_3$, $S_4$, $S_5$, $S_6$ ... $S_n$ in the vertical columns, and the time increments $t_0$, $t_1$, $t_2$, $t_3$, $t_4$, $t_5$, $t_6$ ... $t_{end}$ in the horizontal rows, in a table 408. At time $t_0$, the computer 16 records the xyz coordinate positions from the sensor data received from the plurality of sensors $S_0$, $S_1$, $S_2$, $S_3$, $S_4$, $S_5$, $S_6$ ... $S_n$. At time $t_1$, the computer 16 records the xyz coordinate positions from the sensor data received from the plurality of sensors $S_0$, $S_1$, $S_2$, $S_3$, $S_4$, $S_5$, $S_6$ ... $S_n$. At time $t_2$, the computer 16 records the xyz coordinate positions from the sensor data received from the plurality of sensors $S_0$, $S_1$, $S_2$, $S_3$, $S_4$, $S_5$, $S_6$ ... $S_n$. This process continues until the entire food preparation is completed at time $t_{end}$. The duration for each time units $t_0$, $t_1$, $t_2$, $t_3$, $t_4$, $t_5$, $t_6$ ... $t_{end}$ is the same. As a result of the captured and recorded sensor data, the table 408 shows any movements from the sensors $S_0$, $S_1$, $S_2$, $S_3$, $S_4$, $S_5$, $S_6$ ... $S_n$ in the glove 26 in xyz coordinates, which would indicate the differentials between the xyz coordinate positions for one specific time relative to the xyz coordinate positions for the next specific time. Effectively, the table 408 records how the chef's movements change over the entire food preparation process from the start time, $t_0$, to the end time, $t_{end}$. The illustration in this embodiment can be extended to two gloves 26 with sensors which the chef 49 wears to capture the movements while preparing a food dish. In the robotic kitchen 48, the robotic arms 70 and the robotic hands 72 replicate the recorded recipe from the chef studio 44, which is then converted to robotic instructions, where the robotic arms 70 and the robotic hands 72 replicate the food preparation of the chef 49 according to the timeline 416. The robotic arms 70 and hands 72 carry out the food preparation with the same xyz coordinate positions, at the same speed, with the same time increments from the start time, $t_0$, to the end time, $t_{end}$, as shown in the timeline 416.

In some embodiments a chef performs the same food preparation operation multiple times, yielding values of the sensor reading, and parameters in the corresponding robotic instructions that vary somewhat from one time to the next. The set of sensor readings for each sensor across multiple repetitions of the preparation of the same food dish provides a distribution with a mean, standard deviation and minimum and maximum values. The corresponding variations on the robotic instructions (also called the effector parameters) across multiple executions of the same food dish by the chef also define distributions with mean, standard deviation, minimum and maximum values. These distributions may be used to determine the fidelity (or accuracy) of subsequent robotic food preparations.

In one embodiment the estimated average accuracy of a robotic food preparation operation is given by:

$$A(C,R) = 1 - \frac{1}{n}\sum_{n=1,\ldots n} \frac{|c_i - p_i|}{\max\left(\left|c_{i,t} - p_{i,t}\right|\right.}$$

Where C represents the set of Chef parameters (1$^{st}$ through n$^{th}$) and R represents the set of Robotic Apparatus parameters (correspondingly (1$^{st}$ through n$^{th}$). The numerator in the sum represents the difference between robotic and chef parameters (i.e. the error) and the denominator normalizes for the maximal difference). The sum gives the total normalized cumulative error (i.e. $\sum_{n=1,\ldots n} \frac{|c_i - p_i|}{\max\left(\left|c_{i,t} - p_{i,t}\right|\right.}$ ), and multiplying by 1/n gives the average error. The complement of the average error corresponds to the average accuracy.

Another version of the accuracy calculation weighs the parameters for importance, where each coefficient (each $\alpha_i$) represents the importance of the i$^{th}$ parameter, the normalized cumulative error is $\sum_{n=1,\ldots n} \frac{\alpha_i|c_i - p_i|}{\max\left(\left|c_{i,t} - p_{i,t}\right|\right.}$ and the estimated average accuracy is given by

$$A(C,R) = 1 - \left(\sum_{n=1,\ldots n} \frac{\alpha_i|c_i - p_i|}{\max\left(\left|c_{i,t} - p_{i,t}\right|\right)}\right) \Big/ \sum_{i=1,\ldots n} \alpha_i$$

FIG. 8B is a block diagram illustrating the pair of gloves 26a and 26b with sensors worn by the chef 49 for capturing and transmitting the chef's movements. In this illustrative example, which is intended to show one example without limiting effects, a right hand glove 26a includes 25 sensors to capture the various sensor data points D1, D2, D3, D4, D5, D6, D7, D8, D9, D10, D11, D12, D13, D14, D15, D16, D17, D18, D19, D20, D21, D22, D23, D24, and D25, on the glove 26a, which may have optional electronic and mechanical circuits 420. A left hand glove 26b includes 25 sensors to capture the various sensor data points D26, D27, D28, D29, D30, D31, D32, D33, D34, D35, D36, D37, D38, D39, D40, D41, D42, D43, D44, D45, D46, D47, D48, D49, D50, on the glove 26b, which may have optional electronic and mechanical circuits 422.

FIG. 8C is a block diagram illustrating robotic cooking execution steps based on the captured sensory data from the chef's gloves 26a and 26b. In the chef studio 44, the chef 49 wears gloves 26a and 26b with sensors for capturing the food preparation process, where the sensor data are recorded in a table 430. In this example, the chef 49 is cutting a carrot with a knife in which each slice of the carrot is about 1 centimeter in thickness. These action primitives by the chef 49, as recorded by the gloves 26a, 26b, may constitute a mini-manipulation 432 that take place over time slots 1, 2, 3 and 4. The recipe algorithm conversion module 404 is configured to convert the recorded recipe file from the chef studio 44 to robotic instructions for operating the robotic arms 70 and the robotic hands 72 in the robotic kitchen 28 according to a software table 434. The robotic arms 70 and the robotic hands 72 prepare the food dish with control signals 436 for the mini-manipulation, as pre-defined in the mini-manipulation library 116, of cutting the carrot with knife in which each slice of the carrot is about 1 centimeter in thickness. The robotic arms 70 and the robotic hands 72 operate with the same xyz coordinates 438 and with possible real-time adjustment on the size and shape of a particular carrot by creating a temporary three-dimensional model 440 of the carrot from the real-time adjustment devices 112

In order to operate a mechanical robotic mechanism such as the ones described in the embodiments of this invention, a skilled artisan realizes that many mechanical and control problems need to be addressed, and the literature in robotics describes methods to do just that. The establishment of static and/or dynamic stability in a robotics system is an important consideration. Especially for robotic manipulation, dynamic stability is a strongly desired property, in order to prevent accidental breakage or movements beyond those desired or programmed. Dynamic stability is illustrated in FIG. 8D relative to equilibrium. Here the "equilibrium value" is the desired state of the arm (i.e. the arm moves to exactly where it was programmed to move to, with deviations caused by any number of factors such as inertia, centripetal or centrifugal forces, harmonic oscillations, etc. A dynamically-stable system is one where variations are small and dampen out over time, as represented by a curved line 450. A dynamically unstable system is one where variations fail to dampen and can increase over time, as depicted by a curved line 452. And the worst situation is when the arm is statically unstable (e.g. it cannot hold the weight of whatever it is grasping), and falls, or it fails to recover from any deviation from the programmed position and/or path, as illustrated by a curved line 454. For additional information on planning (forming sequences of mini-manipulations, or recovering when something goes wrong), Garagnani, M. (1999) "improving the Efficiency of Processed Domain-axioms Planning", Proceedings of PLANSIG-99, Manchester, England, pp. 190-192, which this references is incorporated by reference herein in its entirety.

The cited literature addresses conditions for dynamic stability that are imported by reference into the present invention to enable proper functioning of the robotic arms. These conditions include the fundamental principle for calculating torque to the joints of a robotic arm:

$$\vec{T} = M(\vec{q})\frac{d^2\vec{q}}{dt^2} + C\left(\vec{q}, \frac{d\vec{q}}{dt}\right)d\vec{q}, +G(\vec{q})$$

where T is the torque vector (T has n components, each corresponding to a degree of freedom of the robotic arm), M is the inertial matrix of the system (M is a positive semi-definite n-by-n matrix), C is a combination of centripetal and centrifugal forces, also an n-by-n matrix, G(q) is the gravity vector, and q is the position vector. And they include finding stable points and minima, e.g. via the LaGrange equation if the robotic positions (x's) can be described by twice-differentiable functions (y's).

$$J[y] = \int_{x_1}^{x_2} L[x, y(x), y'(x)]\, dx\ .$$

$$J[f] \leq J[f + \varepsilon\eta]\ .$$

In order for the system comprised of the robotic arms and hands/grippers to be stable, it is important that the system be properly designed and built and have an appropriate sensing and control system which operates within the boundary of acceptable performance. The reason that this is important is that one wants to achieve the best (highest speed with highest position/velocity and force/torque tracking and all under stable conditions) performance possible given the physical system and what its controller is asking it to do.

When one speaks of proper design, the notion is one of achieving proper observability and controllability of the system. Observability implies that the key variables of the system (joint/finger positions and velocities, forces and torques) are measurable by the system, which implies one needs to have the ability to sense these variables, which in turn implies the presence and use of the proper sensing devices (internal or external). Controllability implies that one (computer in this case) have the ability to shape or control the key axes of the system based on observed parameters from internal/external sensors; this usually implies an actuator or direct/indirect control over a certain parameter by way of a motor or other computer-controlled actuation system. The ability to make the system as linear in its response as possible, thereby negating the detrimental effects of nonlinearities (stiction, backlash, hysteresis, etc.), allows for control schemes like PID gain-scheduling and nonlinear controllers like sliding-mode control to guarantee system stability and performance even in the light of system-modeling uncertainties (errors in mass/inertia estimates, dimensional geometry discretization, sensor/torque discretization anomalies, etc.) which are always present in any higher-performance control system.

Furthermore, the use of a proper computing and sampling system is significant, as the system's ability to follow rapid motions with a certain maximum frequency content is clearly related to what control bandwidth (closed-loop sampling rate of the computer control system) the entire system is able to achieve and thus the frequency-response (ability to track motions of certain speeds and motion-frequency content) the system is able to exhibit.

All the above characteristics are significant when it comes to ensuring that a highly redundant system can actually carry out the complex and dexterous tasks a human chef requires for a successful recipe-script execution, in both a dynamic and a stable fashion.

Machine learning in the context of robotic manipulation of relevance to the invention can involve well known methods for parameter adjustment, such as reinforcement learning. An alternate and preferred embodiment for this invention is a different and more appropriate learning technique for repetitive complex actions such as preparing and cooking a meal with multiple steps over time, namely case-based learning. Case-based reasoning, also known as analogical reasoning, has been developed over time.

As a general overview, case-based reasoning comprises the following steps:

**A. Constructing and remembering cases.** A case is a sequence of actions with parameters that are successfully carried out to achieve an objective. The parameters include distances, forces, directions, positions, and other physical or electronic measures whose values are required to successfully carry out the task (e.g. a cooking operation). First,

1. storing aspects of the problem that was just solved together with:
2. the method(s) and optionally intermediate steps to solve the problem and its parameter values, and
3. (typically) storing the final outcome.

**B. Applying cases (at a later point of time)**

4. Retrieving one or more stored cases whose problems bear strong similarity to the new problem,
5. Optionally adjusting the parameters from the retrieved case(s) to apply to the current case (e.g. an item may weigh somewhat more, and hence a somewhat stronger force is needed to lift it),
6. Using the same methods and steps from the case(s) with the adjusted parameters (if needed) at least in part to solve the new problem.

Hence, case-based reasoning consists of remembering solutions to past problems and applying them with possible parametric modification to new very similar problems. However, in order to apply case-based reasoning to the robotic manipulation challenge, something more is needed. Variation in one parameter of the solution plan will cause variation in one or more coupled parameters. This requires transformation of the problem solution, not just application. We call the new process *case-based robotic learning* since it generalizes the solution to a family of close solutions (those corresponding to small variations in the input parameters - such as exact weight, shape and location of the input ingredients). Case-based robotic learning operates as follows:

**C. Constructing, remembering *and transforming* robotic manipulation cases**

1. Storing aspects of the problem that was just solved together with:
2. The value of the parameters (e.g. the inertial matrix, forces, etc. from equation 1),
3. Perform perturbation analysis by varying the parameter(s) pertinent to the domain (e.g. in cooking, vary the weight of the materials or their exact starting position), to see how much parameter values can vary and still obtain the desired results,
4. Via perturbation analysis on the model, record which other parameter values will change (e.g. forces) and by how much they should change, and
5. If the changes are within operating specification of the robotic apparatus, store the transformed solution plan (with the dependencies among parameters and projected change calculations for their values).

**D. Applying cases (at a later point of time)**

6. Retrieve one or more stored cases with the transformed exact values (now ranges, or calculations for new values depending on values of the input parameters), but still whose initial problems bear strong similarity to the new problem, including parameter values and value ranges, and
7. Use the transformed methods and steps from the case(s) at least in part to solve the new problem.

As the chef teaches the robot (the two arms and the sensing devices, such as haptic feedback from fingers, force-feedback from joints, and one or more observation cameras), the robot learns not only the specific sequence of movements, and time correlations, but also the family of small variations around the chef's movements to be able to prepare the same dish regardless of minor variations in the observable input parameters - and thus it learns a generalized transformed plan, giving it far greater utility than rote memorization. For additional information on case-based reasoning and learning, see materials by Leake, 1996 Book , Case-Based Reasoning: Experiences, Lessons and Future Directions, http://journals.cambridge.org/action/displayAbstract?fromPage=online&aid=4068324&fileId=50269888 900006585dl.acm.org/citation.cfm?id=524680; Carbonell, 1983, Learning by Analogy: Formulating and Generalizing Plans from Past Experience, http://link.springer.com/chapter/10.1007/978-3-662-12405-5_5, which these references are incorporated by reference herein in their entireties.

As depicted in FIG. 8E, the process of cooking requires a sequence of steps that are referred to as a plurality of stages $S_1, S_2, S_3 \ldots S_j \ldots S_n$ of food preparation, as shown in a timeline 456. These may require strict linear/sequential ordering or some may be performed in parallel; either way we have a set of stages $\{S_1, S_2, \ldots, S_i, \ldots, S_n\}$, all of which must be completed successfully to achieve overall success. If the probability of success for each stage is $P(s_i)$ and there are n stages, then the probability of overall success is estimated by the product of the probability of success at each stage:

$$P(S) = \prod_{s_i \in S} P(s_i)$$

A person of skill in the art will appreciate that the probability of overall success can be low even if the probability of success of individual stages is relatively high. For instance, given 10 stages and a probability of success of each stage being 90%, the probability of overall success is $(.9)^{10} = .28$ or 28%.

A stage in preparing a food dish comprises one or more mini-manipulations, where each mini-manipulation comprises one or more robotic actions leading to a well-defined intermediate result. For instance, slicing a vegetable can be a mini-manipulation consisting of grasping the vegetable with one hand, grasping a knife with the other, and applying repeated knife movements until the vegetable is sliced. A stage in preparing a dish can comprise one or multiple slicing mini-manipulations.

The probability of success formula applies equally well at the level of stages and at the level of mini-manipulations, so long as each mini-manipulation is relatively independent of other mini-manipulations.

In one embodiment, in order to mitigate the problem of reduced certainty of success due to potential compounding errors, standardized methods for most or all of the mini-manipulations in all of the stages are recommended. Standardized operations are ones that can be pre-programmed, pre-tested, and if necessary pre-adjusted to select the sequence of operations with the highest probability of success. Hence, if the probability of standardized methods via the mini-manipulations within stages is very high, so will be the overall probability of success of preparing the food dish, due to the prior work, until all of the steps have been perfected and tested. For instance, to return to the above example, if each stage utilizes reliable standardized methods, and its success probability is 99% (instead of 90% as in the earlier example), then the overall probability of success will be $(.99)^{10} = 90.4\%$, assuming there are 10 stages as before. This is clearly better than 28% probability of an overall correct outcome.

In another embodiment, more than one alternative method is provided for each stage, wherein, if one alternative fails, another alternative is tried. This requires dynamic monitoring to determine the success or failure of each stage, and the ability to have an alternate plan. The probability of success for that stage is the complement of the probability of failure for all of the alternatives, which mathematically is written as:

$$P(s_i|A(s_i)) = 1 - \prod_{a_j \epsilon A(s_i)} (1 - P\,(s_i|a_j))$$

In the above expression $s_i$ is the stage and $A(s_i)$ is the set of alternatives for accomplishing $s_i$. The probability of failure for a given alternative is the complement of the probability of success for that alternative, namely $1 - P(s_i|a_j)$, and the probability of all the alternatives failing is the product in the above formula. Hence, the probability that not all will fail is the complement of the product. Using the method of alternatives, the overall probability of success can be estimated as the product of each stage with alternatives, namely:

$$P(S) = \prod_{s_i \in S} P(s_i|A(s_i))$$

With this method of alternatives, if each of the 10 stages had 4 alternatives, and the expected success of each alternative for each stage was 90%, then the overall probability of success would be $(1 - (1 - (.9))^4)^{10} = .99$ or 99% versus just 28% without the alternatives. The method of alternatives transforms the original problem from a chain of stages with multiple single points of failure (if any stage fails) to one without single points of failure, since all the alternatives would need to fail in order for any given stage to fail, providing more robust outcomes.

In another embodiment, both standardized stages comprising standardized mini-manipulations, and alternate means of the food dish preparation stages are combined, yielding even more robust behavior. In such a case, the corresponding probability of success can be very high, even if alternatives are only present for some of the stages or mini-manipulations.

In another embodiment only the stages with lower probability of success are provided alternatives, in case of failure, for instance stages for which there is no very reliable standardized method, or for which there is potential variability, e.g. depending on odd-shaped materials. This embodiment reduces the burden of providing alternatives to all stages.

FIG. 8F is a graphical diagram showing the probability of overall success (y-axis) as a function of the number of stages needed to cook a food dish (x-axis) for a first curve 458 illustrating a non-standardized kitchen 458 and a second curve 459 illustrating the standardized kitchen 50. In this example, the assumption made is that the individual probability of success per food preparation stage was 90% for a non-standardized operation and 99% for a standardized pre-programmed stage. The compounded error is much worse in the former case, as shown in the curve 458 compared to the curve 459.

FIG. 8G is a block diagram illustrating the execution of a recipe 460 with multi-stage robotic food preparation with mini-manipulations and action primitives. Each food recipe 460 can be divided into a plurality of food preparation stages: a first food preparation stage $S_1$ 470, a second food preparation stage $S_2$ ... an n-stage food preparation stage $S_n$ 490, as executed by the robotic arms 70 and the robotic hands 72. The first food preparation stage $S_1$ 470 comprises one or more mini-manipulations $MM_1$ 471, $MM_2$ 472, and $MM_3$ 473. Each mini-manipulation includes one or more action primitives which obtains a functional result. For example, the first mini-manipulation $MM_1$ 471 includes a first action primitive $AP_1$ 474, a second action primitive $AP_2$ 475, and a third action primitive $AP_3$ 475, which then achieves a functional result 477. The one or more mini-manipulations $MM_1$ 471, $MM_2$ 472, $MM_3$ 473 in the first stage $S_1$ 470 then accomplish a stage result 479. The combination of one or more food preparation stage $S_1$ 470, the second food preparation stage $S_2$ and the n-stage food preparation stage $S_n$ 490 produces substantially the same or the same result by replicating the food preparation process of the chef 49 as recorded in the chef studio 44.

A predefined mini-manipulation is available to achieve each functional result (e.g., the egg is cracked). Each mini-manipulation comprises of a collection of action primitives which act together to accomplish the functional result. For example, the robot may begin by moving its hand towards the egg, touching the egg to localize its position and verify its size, and executing the movements and sensing actions necessary to grasp and lift the egg into the known and predetermined configuration.

Multiple mini-manipulations may be collected into stages such as making a sauce for convenience in understanding and organizing the recipe. The end result of executing all of the mini-manipulations to complete all of the stages is that a food dish has been replicated with a consistent result each time.

FIG. 9A is a block diagram illustrating an example of the robotic hand 72 with five fingers and a wrist with RGB-D sensor, camera sensors and sonar sensor capabilities for detecting and moving a kitchen tool, an object, or an item of kitchen equipment. The palm of the robotic hand 72 includes an RGB-D sensor 500, a camera sensor or a sonar sensor 504f. Alternatively, the palm of the robotic hand 450 includes both the camera sensor and the sonar sensor. The RGB-D sensor 500 or the sonar sensor 504f is capable of detecting the location, dimensions and shape of the object to create a three-dimensional model of the object. For example, the RGB-D sensor 500 uses structured light to capture the shape of the object, three-dimensional mapping and localization, path planning, navigation, object recognition and people tracking. The sonar sensor 504f uses acoustic waves to capture the shape of the object. In conjunction with the camera sensor 452 and/or the sonar sensor 454, the video camera 66 placed somewhere in the robotic kitchen, such as on a railing, or on a robot, provides a way to capture, follow, or direct the movement of the kitchen tool as used by the chef 49, as illustrated in FIG. 7A. The video camera 66 is positioned at an angle and some distance away from the robotic hand 72, and therefore provides a higher-level view of the robotic hand's 72 gripping of the object, and whether the robotic hand has gripped or relinquished/released the object. A suitable example of RGB-D (a red light beam, a green light beam, a blue light beam, and depth) sensor is the Kinect system by Microsoft, which features an RGB camera, depth sensor and multi-array microphone running on software, which provide full-body 3D motion capture, facial recognition and voice recognition capabilities.

The robotic hand 72 has the RGB-D sensor 500 placed in or near the middle of the palm for detecting the distance and shape of an object, as well as the distance of the object, and for handling a kitchen tool. The RGB-D sensor 500 provides guidance to the robotic hand 72 in moving the robotic hand 72 toward the direction of the object and to make necessary adjustments to grab an object. Second, a sonar sensor 502f and/or a tactile pressure sensor are placed near the palm of the robotic hand 72, for detecting the distance and shape, and subsequent contact, of the object. The sonar sensor 502f can also guide the robotic hand 72 to move toward the object. Additional types of sensors in the hand may include ultrasonic sensors, lasers, radio frequency identification (RFID) sensors, and other suitable sensors. In addition, the tactile pressure sensor serves as a feedback mechanism so as to determine whether the robotic hand 72 continues to exert additional pressure to grab the object at such point where there is sufficient pressure to safely lift the object. In addition, the sonar sensor 502f in the palm of the robotic hand 72 provides a tactile sensing function to grab and handle a kitchen tool. For example, when the robotic hand 72 grabs a knife to cut beef, the amount of pressure that the robotic hand exerts on the knife and applies to the beef can be detected by the tactile sensor when the knife finishes slicing the beef, i.e. when the knife has no resistance, or when holding an object. The pressure distributed is not only to secure the object, but also not to break it (e.g. an egg).

Furthermore, each finger on the robotic hand 72 has haptic vibration sensors 502a-e and sonar sensors 504a-e on the respective fingertips, as shown by a first haptic vibration sensor 502a and a first sonar sensor 504a on the fingertip of the thumb, a second haptic vibration sensor 502b and a second sonar sensor 504b on the fingertip of the index finger, a third haptic vibration sensor 502c and a third sonar sensor 504c on the fingertip of the middle finger, a fourth haptic vibration sensor 502d and a fourth sonar sensor 504d on the fingertip of the ring finger, and a fifth haptic vibration sensor 502e and a fifth sonar sensor 504e on the fingertip of the pinky. Each of the haptic vibration sensors 502a, 502b, 502c, 502d and 502e can simulate different surfaces and effects by varying the shape, frequency, amplitude, duration and direction of a vibration. Each of the sonar sensors 504a, 504b, 504c, 504d and 504e provides sensing capability on the distance and shape of the object, sensing capability for the temperature or moisture, as well as feedback capability. Additional sonar sensors 504g and 504h are placed on the wrist of the robotic hand 72.

FIG. 9B is a block diagram illustrating one embodiment of a pan-tilt head 510 with a sensor camera 512 coupled to a pair of robotic arms and hands for operation in the standardized robotic kitchen. The pan-tilt head 510 has an RGB-D sensor 512 for monitoring, capturing or processing information and three-dimensional images within the standardized robotic kitchen 50. The pan-tilt head 510 provides good situational awareness which is independent of arm and sensor motions. The pan-tilt head 510 is coupled to the pair of robotic arms 70 and hands 72 for executing food preparation processes, but the pair of robotic arms 70 and hands 72 may cause occlusions.

FIG. 9C is a block diagram illustrating sensor cameras 514 on the robotic wrists 73 for operation in the standardized robotic kitchen 50. One embodiment of the sensor cameras 514 is an RGB-D sensor that provides color image and depth perception mounted to the wrists 73 of the respective hand 72. Each of the camera sensors 514 on the respective wrist 73 provides limited occlusions by an arm, while generally not occluded when the robotic hand 72 grasps an object. However, the RGB-D sensors 514 may be occluded by the respective robotic hand 72.

FIG. 9D is a block diagram illustrating an eye-in-hand 518 on the robotic hands 72 for operation in the standardized robotic kitchen 50. Each hand 72 has a sensor, such as an RGD-D sensor for providing an eye-in-hand function by the robotic hand 72 in the standardized robotic kitchen 50. The eye-in-hand 518 with RGB-D sensor in each hand provides high image details with limited occlusions by the respective robotic arm 70 and the respective robotic hand 72. However, the robotic hand 72 with the eye-in-hand 518 may encounter occlusions when grasping an object.

FIGS. 9E-G are pictorial diagrams illustrating aspects of a deformable palm 520 in the robotic hand 72. The fingers of a five-fingered hand are labeled with the thumb as a first finger F1 522, the index finger as a second finger F2 524, the middle finger as a third finger F3 526, the ring finger as a fourth finger F4 528, and the little finger as a fifth finger F5 530. The thenar eminence 532 is a convex volume of deformable material on the radial (the first finger F1 522) side of the hand. The hypothenar eminence 534 is a convex volume of deformable material on the ulnar (the fifth finger F5 530) side of the hand. The metacarpophalangeal pads (MCP pads) 536 are convex deformable volumes on the ventral (palmar) side of the metacarpophalangeal (knuckle) joints of second, third, fourth and fifth fingers F2 524, F3 526, F4 528, F5 530. The robotic hand 72 with the deformable palm 520 wears a glove on the outside with a soft human-like skin.

Together the thenar eminence 532 and hypothenar eminence 534 support application of large forces from the robot arm to an object in the working space such that application of these forces puts minimal stress on the robot hand joints (e.g., picture of the rolling pin). Extra joints within the palm 520 themselves are available to deform the palm. The palm 520 should deform in such a way as to enable the formation of an oblique palmar gutter for tool grasping in a way similar to a chef (typical handle grasp). The palm 520 should deform in such a way as to enable cupping, for conformable grasping of convex objects such as dishes and food materials in a manner similar to the chef, as shown by a cupping posture 542 in FIG. 9G.

Joints within the palm 520 that may support these motions include the thumb carpometacarpal joint (CMC), located on the radial side of the palm near the wrist, which may have two distinct directions of motion (flexion/extension and abduction/adduction). Additional joints required to support these motions may include joints on the ulnar side of the palm near the wrist (the fourth finger F4 528 and the fifth finger F5 530 CMC joints), which allow flexion at an oblique angle to support cupping motion at the hypothenar eminence 534 and formation of the palmar gutter.

The robotic palm 520 may include additional/different joints as needed to replicate the palm shape observed in human cooking motions, e.g., a series of coupled flexure joints to support formation of an arch 540 between the thenar and hypothenar eminences 532 and 534 to deform the palm 520, such as when the thumb F1 522 touches the pinky finger F5 530, as illustrated in FIG. 9F.

When the palm is cupped, the thenar eminence 532, the hypothenar eminence 534, and the MCP pads 536 form ridges around a palmar valley that enable the palm to close around a small spherical object (e.g., 2cm).

The shape of the deformable palm will be described using locations of feature points relative to a fixed reference frame, as shown in FIGS. 9H and 9I. Each feature point is represented as a vector of x, y, and z coordinate positions over time. Feature point locations are marked on the sensing glove worn by the chef and on the sensing glove worn by the robot. A reference frame is also marked on the glove, as illustrated in FIGS. 9H and 91. Feature points are defined on a glove relative to the position of the reference frame.

Feature points are measured by calibrated cameras mounted in the workspace as the chef performs cooking tasks. Trajectories of feature points in time are used to match the chef motion with the robot motion, including matching the shape of the deformable palm. Trajectories of feature points from the chef's motion may also be used to inform robot deformable palm design, including shape of the deformable palm surface and placement and range of motion of the joints of the robot hand.

In the embodiment as depicted in FIG. 9H, the feature points are in the hypothenar eminence 534, the thenar eminence 532, and the MCP pad 536 are checkered patterns with markings that show the feature points in each region of the palm. The reference frame in the wrist area has four rectangles that are identifiable as a reference frame. The feature points (or markers) are identified in their respective locations relative to the reference frame. The feature points and reference frame in this embodiment can be implemented underneath a glove for food safety but transparent through the glove for detection.

FIG. 9H shows the robot hand with a visual pattern which may be used to determine the locations of three-dimensional shape feature points 550. The locations of these shape feature points provide information about the shape of the palm surface as the palm joints move and as the palm surface deforms in response to applied forces.

The visual pattern consists of surface markings 552 on the robot hand or on a glove worn by the chef. These surface markings may be covered by a food safe transparent glove 554, but the surface markings 552 remain visible through the glove.

When the surface markings 552 are visible in a camera image, two-dimensional feature points may be identified within that camera image by locating convex or concave corners within the visual pattern. Each such corner in a single camera image is a two-dimensional feature point.

When the same feature point is identified in multiple camera images, the three-dimensional location of this point can be determined in a coordinate frame which is fixed with respect to the standardized robotic kitchen 50. This calculation is performed based on the two-dimensional location of the point in each image and the known camera parameters (position, orientation, field of view, etc..).

A reference frame 556 fixed to the robotic hand 72 can be obtained using a reference frame visual pattern. In one embodiment, the reference frame 556 fixed to the robotic hand 72 comprises of an origin and three orthogonal coordinate axes. It is identified by locating features of the reference frame's visual pattern in multiple cameras, and using known parameters of the reference frame visual pattern and known parameters of the cameras to extract the origin and coordinate axes.

Three-dimensional shape feature points expressed in the coordinate frame of the food preparation station can be converted into the reference frame of the robot hand once the reference frame of the robot hand is observed.

The shape of the deformable palm is comprised of a vector of three-dimensional shape feature points, all of which are expressed in the reference coordinate frame fixed to the hand of the robot or the chef.

As illustrated in FIG. 9I, the feature points 560 in the embodiments are represented by the sensors, such as Hall effect sensors, in the different regions (the hypothenar eminence 534, the thenar eminence 532, and the MCP pad 536 of the palm. The feature points are identifiable in their respective locations relative to the reference frame, which in this implementation is a magnet. The magnet produces magnetic fields that are readable by the sensors. The sensors in this embodiment are embedded underneath the glove.

Figure 9I shows the robot hand 72 with embedded sensors and one or more magnets 562 which may be used as an alternative mechanism to determine the locations of three-dimensional shape feature points. One shape feature point is associated with each embedded sensor. The locations of these shape feature points 560 provide information about the shape of the palm surface as the palm joints move and as the palm surface deforms in response to applied forces.

Shape feature point locations are determined based on sensor signals. The sensors provide an output which allows calculation of distance in a reference frame which is attached to the magnet, which furthermore is attached to the hand of the robot or the chef.

The three-dimensional location of each shape feature point is calculated based on the sensor measurements and known parameters obtained from sensor calibration. The shape of the deformable palm is comprised of a vector of three-dimensional shape feature points, all of which are expressed in the reference coordinate frame, which is fixed to the hand of the robot or the chef. For additional information on common contact regions on the human hand and function in grasping, see the material from Kamakura, Noriko, Michiko Matsuo, Harumi Ishii, Fumiko Mitsuboshi, and Yoriko Miura. "Patterns of static prehension in normal hands." American Journal of Occupational Therapy 34, no. 7 (1980): 437-445, which this reference is incorporated by reference herein in its entirety.

FIG. 10A is block diagram illustrating examples of chef recording devices 550 which the chef 49 wears in the standardized robotic kitchen environment 50 for recording and capturing the chef's movements during the food preparation process for a specific recipe. The chef recording devices 550 include, but are not limited to, one or more robot gloves (or robot garment) 26, a multimodal sensor unit 20 and a pair of robot glasses 552. In the chef studio system 44, the chef 49 wears the robot gloves 26 for cooking, recording, and capturing the chef's cooking movements. Alternatively, the chef 49 may wear a robotic costume with robotic gloves instead of just the robot gloves 26. In one embodiment, the robot glove 26, with embedded sensors, captures, records and saves the position, pressure and other parameters of the chef's arm, hand, and finger motions in an xyz-coordinate system with a time-stamp. The robot gloves 26 save the position and pressure of the arms and fingers of the chef 18 in a three-dimensional coordinate frame over a time duration from the start time to the end time in preparing a particular food dish. When the chef 49 wears the robotic gloves 26, all of the movements, the position of the hands, the grasping motions, and the amount of pressure exerted, in preparing a food dish in the chef studio system 44, are precisely recorded at a periodic time interval, such as every t seconds. The multimodal sensor unit(s) 20 include video cameras, IR cameras and rangefinders 306, stereo (or even trinocular) camera(s) 308 and multi-dimensional scanning lasers 310, and provide multi-spectral sensory data to the main software abstraction engines 312 (after being acquired and filtered in the data acquisition and filtering module 314). The multimodal sensor unit 20 generates a three-dimensional surface or texture, and processes abstraction model-data. The data is used in a scene understanding module 316 to carry out multiple steps such as (but not limited to) building high- and lower-resolution (laser: high-resolution; stereo-camera: lower-resolution) three-dimensional surface volumes of the scene, with superimposed visual and IR-spectrum color and texture video-information, allowing edge-detection and volumetric object-detection algorithms to infer what elements are in a scene, allowing the use of shape-/color-/texture- and consistency-mapping algorithms to run on the processed data to feed processed information to the Kitchen Cooking Process Equipment Handling Module 318. Optionally, in addition to the robot gloves 76, the chef 49 can wear a pair of robot glasses 552, which has one or more robot sensors 554 around the frame with a robot earpiece 556 and a microphone 558. The robot glasses 552 provide additional vision and capturing capabilities such as a camera for capturing video and recording images that the chef 49 sees while cooking a meal. The one or more robot sensors 554 capture and record temperature and smell of the meal that is being prepared. The earpiece 556 and the microphone 558 capture and record sounds that the chef 49 hears while cooking, which may include human voices, sounds characteristics of frying, grilling, grinding, etc. The chef 49 may also record simultaneous voice instructions and real-time cooking steps of the food preparation by using the earpiece and microphone 82. In this respect, the chef robot recorder devices 550 record the chef's movements, speed, temperature and sound parameters during the food preparation process for a particular food dish.

FIG. 10B is a flow diagram illustrating one embodiment of the process 560 in evaluating the captured of chef's motions with robot poses, motions and forces. A database 561 stores predefined (or predetermined) grasp poses 562 and predefined hand motions by the robotic arms 72 and the robotic hands 72, which are weighted by importance 564, labeled with points of contact 565, and stored contact forces 565. At operation 567, the chef movements recording module 98 is configured to capture the chef's motions in preparing a food dish based in part on the predefined grasp poses 562 and the predefined hand motions 563. At operation 568, the robotic food preparation engine 56 is configured to evaluate the robot apparatus configuration for its ability to achieve poses, motions and forces, and to accomplish mini-manipulations. Subsequently, the robot apparatus configuration undergoes an iterative process 569 in assessing the robot design parameters 570, adjusting design parameters to improve the score and performance 571, and modifying the robot apparatus configuration 572.

FIG. 11 is block diagram illustrating one embodiment of a side view of the robotic arm 70 for use with the standardized robotic kitchen system 50 in the household robotic kitchen 48. In other embodiments, one or more of the robotic arms 70, such as one arm, two arms, three arms, four arms, or more, can be designed for operation in the standardized robotic kitchen 50. The one or more software recipe files 46 from the chef studio system 44, which store a chef's arm, hand, and finger movements during food preparation, can be uploaded and converted into robotic instructions to control the one or more robotic arms 70 and the one or more robotic hands 72 to emulate the chef's movements for preparing a food dish that the chef has prepared. The robotic instructions control the robotic apparatus to replicate the precise movements of the chef in preparing the same food dish. Each of the robotic arms 70 and each of the robotic hands 72 may also include additional features and tools, such as a knife, a fork, a spoon, a spatula, other types of utensils, or food preparation instruments to accomplish the food preparation process.

FIGS. 12A-C are block diagrams illustrating one embodiment of a kitchen handle 580 for use with the robotic hand 72 with the palm 520. The design of the kitchen handle 580 is intended to be universal (or standardized) so that the same kitchen handle 580 can attach to any type of kitchen utensils or tools, e.g. a knife, a spatula, a skimmer, a ladle, a draining spoon, a turner, etc. Different perspective views of the kitchen handle 580 are shown in FIGS. 12A-B. The robotic hand 72 grips the kitchen handle 580 as shown in FIG. 12C. Other types of standardized (or universal) kitchen handles may be designed without departing from the spirit of the present invention.

FIG. 13 is a pictorial diagram illustrating an example robotic hand 600 with tactile sensors 602 and distributed pressure sensors 604. During the food preparation process, the robotic apparatus uses touch signals generated by sensors in the fingertips and the palms of a robot's hands to detect force, temperature, humidity and toxicity as the robot replicates step-by-step movements and compares the sensed values with the tactile profile of the chef's studio cooking program. Visual sensors help the robot to identify the surroundings and take appropriate cooking actions. The robotic apparatus analyzes the image of the immediate environment from the visual sensors and compares it with the saved image of the chef's studio cooking program, so that appropriate movements are made to achieve identical results. The robotic apparatus also uses different microphones to compare the chef's instructional speech to background noise from the food preparation processes to improve recognition performance during cooking. Optionally, the robot may have an electronic nose (not shown) to detect odor or flavor and surrounding temperature. For example, the robotic hand 600 is capable of differentiating a real egg by surface texture, temperature and weight signals generated by haptic sensors in the fingers and palm, and is thus able to apply the proper amount of force to hold an egg without breaking it, as well as performing a quality check by shaking and listening for sloshing, cracking the egg and observing and smelling the yolk and albumen to determine the freshness. The robotic hand 600 then may take action to dispose of a bad egg or select a fresh egg. The sensors 602 and 604 on hands, arms, and head enable the robot to move, touch, see and hear to execute the food preparation process using external feedback and obtain a result in the food dish preparation that is identical to the chef's studio cooking result.

FIG. 14 is a pictorial diagram illustrating an example of a sensing costume 620 (for the chef 49 to wear at the standardized robotic kitchen 50. During the food preparation of a food dish, as recorded by a software file 46, the chef 49 wears the sensing costume 620 for capturing the real-time chef's food preparation movements in a time sequence. The sensing costume 620 may include, but is not limited to, a haptic suit 622 (shown one full-length arm and hand costume), haptic gloves 624, a multimodal sensor(s) 626 , a head costume 628. The haptic suit 622 with sensors is capable of capturing data from the chef's movements and transmitting captured data to the computer 16 to record the xyz coordinate positions and p human arms 70 and hands/fingers 72 in the XYZ-coordinate system with a time-stamp. The sensing costume 620 also senses and the computer 16 records the position, velocity and forces/torques and endpoint contact behavior of human arms 70 and hands/fingers 72 in a robot-coordinate frame with and associates them with a system timestamp, for correlating with the relative positions in the standardized robotic kitchen 50 with geometric sensors (laser, 3D stereo, or video sensors). The haptic glove 624 with sensors is used to capture, record and save force, temperature, humidity, and toxicity signals detected by tactile sensors in the gloves 624. The head costume 628 includes feedback devices with vision camera, sonar, laser, or radio frequency identification (RFID) and a custom pair of glasses that are used to sense, capture, and transmit the captured data to the computer 16 for recording and storing images that the chef 48 observes during the food preparation process. In addition, the head costume 628 also includes sensors for detecting the surrounding temperature and smell signatures in the standardized robotic kitchen 50. Furthermore, the head costume 628 also includes an audio sensor for capturing the audio that the chef 49 hears, such as sound characteristics of frying, grinding, chopping, etc.

FIGS. 15A-B are pictorial diagrams illustrating one embodiment of a three-finger haptic glove 630 with sensors for food preparation by the chef 49 and an example of a three-fingered robotic hand 640 with sensors. The embodiment illustrated herein shows the simplified robotic hand 640 which has less than five fingers for food preparation. Correspondingly, the complexity in the design of the simplified robotic hand 640 would be significantly reduced, as well as the cost to manufacture the simplified robotic hand 640. Two finger grippers or four-finger robotic hands, with or without an opposing thumb, are also possible alternate implementations. In this embodiment, the chef's hand movements are limited by the functionalities of the three fingers, thumb, index finder and middle finger, where each finger has a sensor 632 for sensing data of the chef's movement with respect to force, temperature, humidity, toxicity or tactile-sensation. The three-finger haptic glove 630 also includes point sensors or distributed pressure sensors in the palm area of the three-finger haptic glove 630. The chef's movements in preparing a food dish wearing the three-finger haptic glove 630 using the thumb, the index finger, and the middle fingers are recorded in a software file. Subsequently, the three-fingered robotic hand 640 replicates the chef's movements from the converted software recipe file into robotic instructions for controlling the thumb, the index finger and the middle finger of the robotic hand 640 while monitoring sensors 642b on the fingers and sensors 644 on the palm of the robotic hand 640. The sensors 642 include a force, temperature, humidity, toxicity or tactile sensor, while the sensors 644 can be implemented with point sensors or distributed pressure sensors.

FIG. 16 is a block diagram illustrating a creation module 650 of a mini-manipulation library database and an execution module 660 of the mini-manipulation library database. The creation module 650 of the mini-manipulation database library is a process of creating, testing various possible combinations, and selecting an optimal mini-manipulation to achieve a specific functional result. One objective of the creation modules 60 is to explore all different possible combinations in performing a specific mini-manipulation and predefine a library of optimal mini-manipulations for subsequent execution by the robotic arms 70 and the robotic hands 72 in preparing a food dish. The creation module 650 of the mini-manipulation library can also be used as a teaching method for the robotic arms 70 and the robotic hands 72 to learn about the different food preparation functions from the mini-manipulation library database. The execution modules 660 of the mini-manipulations library database is configured to provide a range of mini-manipulation functions which the robotic apparatus can access and execute from the mini-manipulations library database containing a first mini-manipulation $MM_1$with a first functional outcome 662, a second mini-manipulation $MM_2$ with a second functional outcome 664, a third mini-manipulation $MM_3$ with a third functional outcome 666, a fourth mini-manipulation $MM_4$ with a fourth functional outcome 668, and a fifth mini-manipulation $MM_5$ with a fifth functional outcome 670, during the process of preparing a food dish.

FIG. 17A is a block diagram illustrating a sensing glove 680 used by the chef 49 to sense and capture the chef's movements while preparing a food dish. The sensing glove 680 has a plurality of sensors 682a, 682b, 682c, 682d, 682e on each of the fingers, and a plurality of sensors 682f, 682g, in the palm area of the sensing glove 680. In one embodiment, the at least 5 pressure sensors 682a, 682b, 682c, 682d, 682e inside the soft glove are used for capturing and analyzing the chef's movements during all hand manipulations. The plurality of sensors 682a, 682b, 682c, 682d, 682e, 682f, and 682g in this embodiment are embedded in the sensing glove 680 but transparent to the material of the sensing glove 680 for external sensing. The sensing glove 680 may have feature points associated with the plurality of sensors 682a, 682b, 682c, 682d, 682e, 682f, 682g that reflect the hand curvature (or relief) of various higher and lower points in the sensing glove 680. The sensing glove 680, which is placed over the robotic hand 72, is made of soft materials that emulate the compliance and shape of human skin. Additional description elaborating on the robotic hand 72 can be found in FIG. 9A.

The robotic hand 72 includes a camera senor 684, such as an RGB-D sensor, an imaging sensor or a visual sensing device, placed in or near the middle of the palm for detecting the distance and shape of an object, as well as the distance of the object, and for handling a kitchen tool. The imaging sensor 682f provides guidance to the robotic hand 72 in moving the robotic hand 72 towards the direction of the object and to make necessary adjustments to grab an object. In addition, a sonar sensor, such as a tactile pressure sensor, may be placed near the palm of the robotic hand 72, for detecting the distance and shape of the object. The sonar sensor 682f can also guide the robotic hand 72 to move toward the object. Each of the sonar sensors 682a, 682b, 682c, 682d, 682e, 682f, 682g includes ultrasonic sensors, laser, radio frequency identification (RFID), and other suitable sensors. In addition, each of the sonar sensors 682a, 682b, 682c, 682d, 682e, 682f, 682g serves as a feedback mechanism to determine whether the robotic hand 72 continues to exert additional pressure to grab the object at such point where there is sufficient pressure to grab and lift the object. In addition, the sonar sensor 682f in the palm of the robotic hand 72 provides tactile sensing function to handle a kitchen tool. For example, when the robotic hand 72 grabs a knife to cut beef, the amount of pressure that the robotic hand 72 exerts on the knife and applies to the beef, allows the tactile sensor to detect when the knife finishes slicing the beef, i.e., when the knife has no resistance. The distributed pressure is not only to secure the object, but also so as not to exert too much pressure so as to, for example, not to break an egg). Furthermore, each finger on the robotic hand 72 has a sensor on the finger tip, as shown by the first sensor 682a on the finger tip of the thumb, the second sensor 682b on the finger tip of the index finger, the third sensor 682c on the finger tip of the middle finger, the fourth sensor 682d on the finger tip of the ring finger, and the fifth sensor 682f on the finger tip of the pinky. Each of the sensors 682a, 682b, 682c, 682d, 682e provide sensing capability on the distance and shape of the object, sensing capability for temperature or moisture, as well as tactile feedback capability.

The RGB-D sensor 684 and the sonar sensor 682f in the palm, plus the sonar sensors 682a, 682b, 682c, 682d, 682e in the finger tip of each finger, provide a feedback mechanism to the robotic hand 72 as a means to grab a non-standardized object, or a non-standardized kitchen tool. The robotic hands 72 may adjust the pressure to a sufficient degree to grab ahold of the non-standardized object. A program library 690 that stores sample grabbing functions 692, 694, 696 according to a specific time interval for which the robotic hand 72 can draw from in performing a specific grabbing function, is illustrated in FIG. 17B. FIG. 17B is a block diagram illustrating a library database 690 of standardized operating movements in the standardized robotic kitchen module 50. Standardized operating movements, which are predefined and stored in the library database 690, include grabbing, placing, and operating a kitchen tool or a piece of kitchen equipment.

FIG. 18A is a graphical diagram illustrating that each of the robotic hands 72 is coated with a artificial human-like soft-skin glove 700. The artificial human-like soft-skin glove 700 includes a plurality of embedded sensors that are transparent and sufficient for the robot hands 72 to perform high-level mini-manipulations. In one embodiment, the soft-skin glove 700 includes ten or more sensors to replicate a chef's hand movements.

FIGS. 18B is a block diagram illustrating robotic hands coated with artificial human-like skin gloves to execute high-level mini-manipulations based on a library database 720 of mini-manipulations, which have been predefined and stored in the library database 720. High-level mini-manipulations refer to a sequence of action primitives requiring a substantial amount of interaction movements and interaction forces and control over the same. Three examples of mini-manipulations are provided, which are stored in the database library 720. The first example of mini-manipulation is to use the pair of robotic hands 72 to knead the dough 722. The second example of mini-manipulation is to use the pair of robotic hands 72 to make ravioli 724. The third example of mini-manipulation is to use the pair of robotic hands 72 to make sushi. Each of the three examples of mini-manipulations have a time duration and speed curve which are tracked by the computer 16.

FIG. 18C is a graphical diagram illustrating three types of taxonomy of manipulation actions for food preparation with continuous trajectory of the robotic arm 70 and the robotic hand 72 motions and forces that result in a desired goal state. The robotic arm 70 and the robotic hand 72 execute rigid grasping and transfer 730 movements for picking up an object with an immovable grasp and transferring them to a goal location without the need for a forceful interaction. Examples of a rigid grasping and transfer include putting the pan on the stove, picking up the salt shaker, shaking salt into the dish, dropping ingredients into a bowl, pouring the contents out of a container, tossing a salad, and flipping a pancake. The robotic arm 70 and the robotic hand 72 execute a rigid grasp with forceful interaction 732 where there is a forceful contact between two surfaces or objects. Examples of a rigid grasp with forceful interaction include stirring a pot, opening a box, and turning a pan, and sweeping items from a cutting board into a pan. The robotic arm 70 and the robotic hand 72 execute a forceful interaction with deformation 734 where there is a forceful contact between two surfaces or objects that results in the deformation of one of two surfaces, such as cutting a carrot, breaking an egg, or rolling dough. For additional information on the function of the human hand, deformation of the human palm, and its function in grasping, see the material from I. A. Kapandji, "The Physiology of the Joints, Volume 1: Upper Limb, 6e," Churchill Livingstone, 6 edition, 2007, which this reference is incorporated by reference herein in its entirety.

FIG. 18D is a simplified flow diagram illustrating one embodiment on taxonomy of manipulation actions for food preparation in kneading dough 740. Kneading dough 740 may be a mini-manipulation that has been previously predefined in the library database of mini-manipulations. The process of kneading dough 740 comprises a sequence of actions (or short mini-manipulations), including grasping the dough 742, placing the dough on a surface 744, and repeating the kneading action until one obtains a desired shape 746.

FIG. 18E is a block diagram illustrating one example of the interplay and interactions between the robotic arm 70 and the robotic hand 72. A compliant robotic arm 750 provides a smaller payload, higher safety, more gentle actions, but less precision. An anthropomorphic robotic hand 752 provides more dexterity, capable of handling human tools, is easier to retarget for a human hand motion, more compliant, but the design requires more complexity, increase in weight, and higher product cost. A simple robotic hand 754 is lighter in weight, less expensive, with lower dexterity, and not able to directly use human tools. An industrial robotic arm 756 is more precise, with higher payload capacity but generally not considered safe around humans and can potentially exert a large amount of force and cause harm. One embodiment of the standardized robotic kitchen 50 is to utilize a first combination of the compliant arm 750 with the anthropomorphic hand 752. The other three combinations are generally less desirable for implementation of the present invention.

FIG. 18F is a block diagram illustrating the robotic hand 72 using the standardized kitchen handle 580 to attach to a custom cookware head and the robotic arm 70 affixable to kitchen ware. In one technique to grab a kitchen ware, the robotic hand 72 grabs the standardized kitchen tool 580 for attaching to any one of the custom cookware heads from the illustrated choices of 760a, 760b, 760c, 760d, 760e, and others. For example, the standardized kitchen handle 580 is attached to the custom spatula head 760e for use to stir-fry the ingredients in a pan. In one embodiment, the standardized kitchen handle 580 can be held by the robotic hand 72 in just one position, which minimizes the potential confusion in different ways to hold the standardized kitchen handle 580. In another technique to grab a kitchen ware, the robotic arm has one or more holders 762 that are affixable to a kitchen ware 762, where the robotic arm 70 is able to exert more forces if necessary in pressing the kitchen ware 762 during the robotic hand motion.

FIG. 19 is a block diagram illustrating an example of a database library structure 770 of a mini-manipulation that results in "cracking an egg with a knife." The mini-manipulation 770 of cracking an egg includes: how to hold an egg in the right position 772, how to hold a knife relative to the egg 774, what is the best angle to strike the egg with the knife 776, and how to open the cracked egg 778. Various possible parameters for each 772, 774, 776, and 778, are tested to find the best way to execute a specific movement. For example in holding an egg 772, the different positions, orientations, and ways to hold an egg are tested to find an optimal way to hold the egg. Second, the robotic hand 72 picks up the knife from a predetermined location. The holding the knife 774 is explored as to the different positions, orientations, and the way to hold the knife in order to find an optimal way to handle the knife. Third, the striking the egg with knife 776 is also tested for the various combinations of striking the knife on the egg to find the best way to strike the egg with the knife. Consequently, the optimal way to execute the mini-manipulation of cracking an egg with a knife 770 is stored in the library database of mini-manipulations. The saved mini-manipulation of cracking an egg with a knife 770 would comprise the best way to hold the egg 772, the best way to hold the knife 774, and the best way to strike the knife with the egg 776.

To create the mini-manipulation that results in cracking an egg with a knife, multiple parameter combinations must be tested to identify a set of parameters that ensure the desired functional result - that the egg is cracked - is achieved. In this example, parameters are identified to determine how to grasp and hold an egg in such a way so as not to crush it. An appropriate knife is selected through testing, and suitable placements are found for the fingers and palm so that it may be held for striking. A striking motion is identified that will successfully crack an egg. An opening motion and/or force are identified that allows a cracked egg to be opened successfully.

The teaching / learning process for the robotic apparatus involves multiple and repetitive tests to identify the necessary parameters to achieve the desired final functional result.

These tests may be performed over varying scenarios. For example, the size of the egg can vary. The location at which it is to be cracked can vary. The knife may be at different locations. The mini-manipulation must be successful in all of these variable circumstances.

Once the learning process has been completed, results are stored as a collection of action primitives that together are known to accomplish the desired functional result.

FIG. 20 is a block diagram illustrating an example of recipe execution 800 for a mini-manipulation with real-time adjustment. In recipe execution 800, the robotic hands 72 execute the mini-manipulation 770 of cracking an egg with a knife, where the optimal way to execute each movement in the cracking an egg operation 772, the holding a knife operation 774, the striking the egg with a knife operation 776, and opening the cracked egg operation 778 is selected from the mini-manipulation library database. The process of executing the optimal way to carry out each of the movements 772, 774, 776, 778 ensures that the mini-manipulation 770 will achieve the same (or guarantee of), or substantially the same, outcome for that specific mini-manipulation. The multimodal three-dimensional sensor 20 provides real-time adjustment capabilities 112 as to the possible variations in one or more ingredients, such as the dimension and weight of an egg.

As an example of the operative relationship between the creation of a mini-manipulation in FIG. 19 and the execution of the mini-manipulation in FIG. 20, specific variables associated with the mini-manipulation of "cracking an egg with a knife ," includes an initial xyz coordinates of egg, an initial orientation of the egg, the size of the egg, the shape of the egg, an initial xyz coordinate of the knife, an initial orientation of the knife, the xyz coordinates where to crack the egg, speed, and the time duration of the mini-manipulation. The identified variables of the mini-manipulation, "crack an egg with a knife," are thus defined during the creation phase, where these identifiable variables may be adjusted by the robotic food preparation engine 56 during the execution phase of the associated mini-manipulation.

FIG. 21 is a flow diagram illustrating the software process 810 to capture a chef's food preparation movements in a standardized kitchen module to produce the software recipe files 46 from the chef studio 44. In the chef studio 44, at step 812, the chef 49 designs the different components of a food recipe. At step 814, the robotic cooking engine 56 is configured to receive the name, ID ingredient, and measurement inputs for the recipe design that the chef 49 has selected. At step 816, the chef 49 moves food/ingredients into designated standardized cooking ware/appliances and into their designated positions. For example, the chef 49 may pick two medium shallots and two medium garlic cloves, place eight crimini mushrooms on the chopping counter, and move two 20 cm x 30 cm puff pastry units thawed from freezer lock F02 to a refrigerator (fridge). At step 818, the chef 49 wears the capturing gloves 26 or the haptic costume 622, which has sensors that capture the chef's movement data for transmission to the computer 16. At step 820, the chef 49 starts working the recipe that he or she selects from step 122. At step 822, the chef movement recording module 98 is configured to capture and record the chef's precise movements, including measurements of the chef's arms and fingers' force, pressure, and XYZ positions and orientations in real time in the standardized robotic kitchen 50. In addition to capturing the chef's movements, pressure, and positions, the chef movement recording module 98 is configured to record video (of dish, ingredients, process, and interaction images) and sound (human voice, frying hiss, etc.) during the entire food preparation process for a particular recipe. At step 824, the robotic cooking engine 56 is configured to store the captured data from step 822, which includes the chef's movements from the sensors on the capturing gloves 26 and the multimodal three-dimensional sensors 30. At step 826, the recipe abstraction software module 104 is configured to generate a recipe script suitable for machine implementation. At step 828, after the recipe data has been generated and saved, the software recipe file 46 is made available for sale or subscription to users via an app store or marketplace to a user's computer located at home or in a restaurant, as well as integrating the robotic cooking receipt app on a mobile device.

FIG. 22 is a flow diagram 830 illustrating the software process for food preparation by a robotic apparatus in the robotic standardized kitchen with the robotic apparatus based one or more of the software recipe files 22 received from chef studio system 44. At step 832, the user 24 through the computer 15 selects a recipe bought or subscribed to from the chef studio 44. At step 834, the robot food preparation engine 56 in the household robotic kitchen 48 is configured to receive inputs from the input module 50 for the selected recipe to be prepared. At step 836, the robot food preparation engine 56 in the household robotic kitchen 48 is configured to upload the selected recipe into the memory module 102 with software recipe files 46. At step 838, the robot food preparation engine 56 in the household robotic kitchen 48 is configured to calculate the ingredient availability to complete the selected recipe and the approximate cooking time required to finish the dish. At step 840, the robot food preparation engine 56 in the household robotic kitchen 48 is configured to analyze the prerequisites for the selected recipe and decides whether or not there is any shortage or lack of ingredients, or insufficient time to serve the dish according to the selected recipe and serving schedule. If the prerequisites are not met, at step 842, the robot food preparation engine 56 in the household robotic kitchen 48 sends an alert, indicating that the ingredients should be added to a shopping list, or offers an alternate recipe or serving schedules. However, if the prerequisites are met, the robot food preparation engine 56 is configured to confirm the recipe selection at step 844. At step 846, after the recipe selection has been confirmed, the user 60 through the computer 16 moves the food/ingredients to specific standardized containers and into the required positions. After the ingredients have been placed in the designated containers and the positions as identified, the robot food preparation engine 56 in the household robotic kitchen 48 is configured to check if the start time has been triggered at step 848. At this juncture, the household robot food preparation engine 56 offers a second process check to ensure that all the prerequisites are being met. If the robot food preparation engine 56 in the household robotic kitchen 48 is not ready to start the cooking process, the household robot food preparation engine 56 continues to check the prerequisites at step 850 until the start time has been triggered. If the robot food preparation engine 56 is ready to start the cooking process, at step 852, the quality check for raw food module 96 in the robot food preparation engine 56 is configured to process the prerequisites for the selected recipe and inspects each ingredient item against the description of the recipe (e.g. one center-cut beef tenderloin roast) and condition (e.g. expiration/purchase date, odor, color, texture, etc.). At step 854, the robot food preparation engine 56 sets the time at a "0" stage and uploads the software recipe file 46 to the one or more robotic arms 70 and the robotic hands 72 for replicating the chef's cooking movements to produce a selected dish according to the software recipe file 46. At step 856, the one or more robotic arms 72 and hands 74 process ingredients and execute the cooking method/technique with identical movements as that of the chef's 49 arms, hands and fingers, with the exact pressure, the precise force, and the same XYZ position, at the same time increments as captured and recorded from the chef's movements. During this time, the one or more robotic arms 70 and hands 72 compare the results of cooking against the controlled data (such as temperature, weight, loss, etc.) and the media data (such as color, appearance, smell, portion-size, etc.), as illustrated in step 858. After the data has been compared, the robotic apparatus (including the robotic arms 70 and the robotic hands 72) aligns and adjusts the results at step 860. At step 862, the robot food preparation engine 56 is configured to instruct the robotic apparatus to move the completed dish to the designated serving dishes and placing the same on the counter.

FIG. 23 is a flow diagram illustrating one embodiment of the software process for creating, testing, and validating, and storing the various parameter combinations for a mini-manipulation library database 870. The mini-manipulation library database 870 involves a one-time success test process 870 (e.g., holding an egg), which is stored in a temporary library, and testing the combination of one-time test results 890 (e.g., the entire movements of cracking an egg) in the mini-manipulation database library. At step 872, the computer 16 creates a new mini-manipulation (e.g., crack an egg) with a plurality of action primitives (or a plurality of discrete recipe actions). At step 874, the number of objects (e.g., an egg and a knife) associated with the new mini-manipulation are identified. The computer 16 identifies a number of discrete actions or movements at step 876. At step 878, the computer selects a full possible range of key parameters (such as the positions of an object, the orientations of the object, pressure and speed) associated with the particular new mini-manipulation. At step 880, for each key parameter, the computer 16 tests and validates each value of the key parameters with all possible combinations with other key parameters (e.g., holding an egg in one position but testing other orientations). At step 882, the computer 16 determines if the particular set of key parameter combinations produces a reliable result. The validation of the result can be done by the computer 16 or a human. If the determination is negative, the computer 16 proceeds to step 886 to find if there are other key parameter combinations that have yet to be tested. At step 888, the computer 16 increments a key parameter by one in formulating the next parameter combination for further testing and evaluation for the next parameter combination. If the determination at step 882 is positive, the computer 16 then stores the set of successful key parameter combinations in a temporary location library. The temporary location library stores one or more sets of successful key parameter combinations (that either have the most successful test or have the least failed results).

At step 892, the computer 16 tests and validates the specific successful parameter combination for X number of times (such as one hundred times). At step 894, the computer 16 computes the number of failed results during the repeated test of the specific successful parameter combination. At step 896, the computer 16 selects the next one-time successful parameter combination from the temporary library, and returns the process back to step 892 for testing the next one-time successful parameter combination X number of times. If no further one-time successful parameter combination remains, the computer 16 stores the test results of one or more sets of parameter combinations that produce a reliable (or guaranteed) result at step 898. If there are more than one reliable sets of parameter combinations, at step 899, the computer 16 determines the best or optimal set of parameter combinations and stores the optimal set of parameter combination which is associated with the specific mini-manipulation for use in the mini-manipulation library database by the robotic apparatus in the standardized robotic kitchen 50 during the food preparation stages of a recipe.

FIG. 24 is a flow diagram illustrating one embodiment of the software process 900 for creating the tasks for a mini-manipulation. At step 902, the computer 16 defines a specific robotic task (e.g. cracking an egg with a knife) with a robotic mini hand manipulator to be stored in a database library. The computer at step 904 identifies all different possible orientations of an object in each mini step (e.g. orientation of an egg and holding the egg) and at step 906 identifies all different positional points to hold a kitchen tool against the object (e.g. holding the knife against the egg). At step 908 the computer empirically identifies all possible ways to hold an egg and to break the egg with the knife with the right (cutting) movement profile, pressure and speed. At step 910, the computer 16 defines the various combinations to hold the egg and positioning of the knife against the egg in order to properly break the egg. For example, finding the combination of optimal parameters such as orientation, position, pressure and speed of the object(s). At step 912, the computer 16 conducts a training and testing process to verify the reliability of various combinations, such as testing all the variations, variances, and repeats the process X times until the reliability is certain for each mini-manipulation. When the chef 49 is performing certain food preparation task, (e.g. cracking an egg with a knife) the task is translated to several steps/tasks of mini-hand manipulation to perform as part of the task at step 914. At step 916, the computer 16 stores the various combinations of mini-manipulations for that specific task in the database library. At step 918, the computer 16 determines whether there are additional tasks to be defined and performed for any mini-manipulations. The process returns to step 902 if there are any additional mini-manipulations to be defined. Different embodiments of the kitchen module are possible, including a standalone kitchen module and an integrated kitchen module. The integrated kitchen module is fitted into a conventional kitchen area of a typical house. The kitchen module operates in at least two modes, a robotic mode and a normal (manual) mode. Cracking an egg is one example of a mini-manipulation. The mini-manipulation library database would also apply to a wide a variety of tasks, such as using a fork to grab a slab of beef by applying the right pressure in the right direction and to the proper depth to the shape and depth of the meat. At step 919, the computer combines the database library of predefined kitchen tasks, where each predefined kitchen task comprises one or more mini-manipulations.

FIG. 25 is a flow diagram illustrating the process 920 of assigning and utilizing a library of standardized kitchen tools, standardized objects, standardized equipment in a standardized robotic kitchen. At step 922, the computer 16 assigns each kitchen tool, object, or equipment/utensil with a code (or bar code) that predefines the parameters of the tool, object, or equipment such as its three-dimensional position coordinates and orientation. This process standardizes the various elements in the standardized robotic kitchen 50, including but not limited to: standardized kitchen equipment, standardized kitchen tools, standardized knifes, standardized forks, standardized containers, standardized pans, standardized appliances, standardized working spaces, standardized attachments, and other standardized elements. When executing the process steps in a cooking recipe, at step 924, the robotic cooking engine is configured to direct one or more robotic hands to retrieve a kitchen tool, an object, a piece of equipment, a utensil, or an appliance when prompted to access that particular kitchen tool, object, equipment, utensil or appliance, according to the food preparation process for a specific recipe.

FIG. 26 is a flow diagram illustrating the process 926 of identifying a non-standard object through three-dimensional modeling and reasoning. At step 928, the computer 16 detects a non-standard object by a sensor, such as an ingredient that may have a different size, different dimensions, and/or different weight. At step 930, the computer 16 identifies the non-standard object with three-dimensional modeling sensors 66 to capture shape, dimensions, orientation and position information and robotic hands 72 make a real-time adjustment to perform the appropriate food preparation tasks (e.g. cutting or picking up a piece of steak).

FIG. 27 is a flow diagram illustrating the process 932 for testing and learning of mini-manipulations. At step 934, the computer performs a food preparation task composition analysis in which each cooking operation (e.g. cracking an egg with a knife) is analyzed, decomposed, and constructed into a sequence of action primitives or mini-manipulations. In one embodiment, a *mini-manipulation* refers to a sequence of one or more action primitives that accomplish a basic functional outcome (e.g., the egg has been cracked, or a vegetable sliced) that advances toward a specific result in preparing a food dish. In this embodiment, a mini-manipulation can be further described as a low-level mini-manipulation or a high-level mini-manipulation where a *low-level mini-manipulation* refers to a sequence of action primitives that requires minimal interaction forces and relies almost exclusively on the use of the robotic apparatus, and a high-level mini-manipulation refers to a sequence of action primitives requiring a substantial amount of interaction and interaction forces and control thereof. The process loop 936 focuses on mini-manipulation and learning steps and consists of tests which are repeated many times (e.g. 100 times) to ensure the reliability of mini-manipulations. At step 938, the robotic food preparation engine 56 is configured to assess the knowledge of all possibilities to perform a food preparation stage or a mini-manipulation, where each mini-manipulation is tested with respect to orientations, positions/velocities, angles, forces, pressures, and speeds with a particular mini-manipulation. A mini-manipulation or an action primitive may involve the robotic hand 72 and a standard object, or the robotic hand 72 and a nonstandard object. At step 940, the robotic food preparation engine 56 is configured to execute the mini-manipulation and determine if the outcome can be deemed successful or a failure. At step 942, the computer 16 conducts an automated analysis and reasoning about the failure of the mini-manipulation. For example, the multimodal sensors may provide sensing feedback data on the success or failure of the mini-manipulation. At step 944, the computer 16 is configured to make a real-time adjustment and adjusts the parameters of the mini-manipulation execution process. At step 946, the computer 16 adds new information about the success or failure of the parameter adjustment to the mini-manipulation library as a learning mechanism to the robotic food preparation engine 56.

FIG. 28 is a flow diagram illustrating the process 950 for quality control and alignment functions for robotic arms. At step 952, the robotic food preparation engine 56 loads a human chef replication software recipe file 46 via the input module 50. For example, the software recipe file 46 to replicate food preparation from Michelin starred chef Arnd Beuchel's "Wiener Schnitzel". At step 954, the robotic apparatus executes tasks with identical movements such as those for the torso, hands, fingers, with identical pressure, force and xyz position, at an identical pace as the recorded recipe data stored based on the actions of the human chef preparing the same recipe in a standardized kitchen module with standardized equipment based on the stored receipt-script including all movement /motion replication data. At step 956, the computer 16 monitors the food preparation process via a multimodal sensor that generates raw data supplied to abstraction software where the robotic apparatus compares real-world output against controlled data based on multimodal sensory data (visual, audio, and any other sensory feedback). At step 958, the computer 16 determines if there any differences between the controlled data and the multimodal sensory data. At step 960, the computer 16 analyzes whether the multimodal sensory data deviates from the controlled data. If there is a deviation, at step 962, the computer 16 makes an adjustment to re-calibrate the robotic arm 70, the robotic hand 72, or other elements. At step 964, the robotic food preparation engine 16 is configured to learn in process 964 by adding the adjustment made to one or more parameter values to the knowledge database. At step 968, the computer 16 stores the updated revision information to the knowledge database pertaining to the corrected process, condition and parameters. If there is no difference in deviation from step 958, the process 950 goes directly to step 969 in completing the execution.

FIG. 29 is a table illustrating one embodiment of a database library structure 970 of mini-manipulation objects for use in the standardized robotic kitchen. The database library structure 970 shows several fields for entering and storing information for a particular mini-manipulation, including (1) the name of the mini-manipulation, (2) the assigned code of the mini-manipulation, (3) the code(s) of standardized equipment and tools associated with the performance of the mini-manipulation, (4) the initial position and orientation of the manipulated (standard or non-standard) objects (ingredients and tools), (5) parameters/variables defined by the user (or extracted from the recorded recipe during execution), (6) sequence of robotic hand movements (control signals for all servos) and connecting feedback parameters (from any sensor or video monitoring system) of mini-manipulations on the timeline. The parameters for a particular mini-manipulation may differ depending on the complexity and objects that are necessary to perform the mini-manipulation. In this example, four parameters are identified: the starting XYZ position coordinates in the volume of the standardized kitchen module, the speed, the object size, and the object shape. Both the object size and the object shape may be defined or described by non-standard parameters.

FIG. 30 is a table illustrating a database library structure 972 of standardized objects for use in the standardized robotic kitchen. The standard object database library structure 972 shows several fields to store information pertaining to a standard object, including (1) the name of an object, (2) an image of the object, (3) an assigned code for the object, (4) a virtual 3D model with full dimensions of the object in an XYZ coordinate-matrix with the preferred resolution predefined, (5) a virtual vector model of the object (if available), (6) definition and marking of the working elements of the object (the elements, which may be in contact with hands and other objects for manipulation), and (7) an initial standard orientation of the object for each specific manipulation.

FIG. 31 depicts the execution of process 1000 used to check for the quality of the ingredients to be used as part of the recipe replication process by the standardized robotic kitchen. The multi-modal sensor system video-sensing element is able to implement process 1006, which uses color-detection and spectral analysis to detect discoloration indicating possible spoilage. Similarly using an ammonia-sensitive sensor system, whether embedded in the kitchen or part of a mobile probe handled by the robotic hands, further potential for spoilage can be detected. Additional haptic sensors in the robotic hands and fingers would allow for validating the freshness of the ingredient through the touch-0sensing process 1004, where the firmness and resistance to contact forces is measured (amount and rate of deflection as a function of compression-distance). As an example, for fish the color (deep red) and moisture content of the gills is an indicator of freshness, as the eyes which should be clear (not fogged), and the proper temperature of the flesh of a properly thawed fish should not exceed 40 deg F. Additional contact-sensors on the finger-tips are able to carry out additional quality check 1002 related to the temperature, texture and overall weight of the ingredient through touching, rubbing and holding/pickup motions. All the data collected through these haptic sensors and video-imagery can be used in a processing algorithm to decide on the freshness of the ingredient and make decisions on whether to use it or dispose of it.

FIG. 32 depicts the robotic recipe-script replication process 1010, wherein a multi-modal sensor outfitted head 20, and dual arms with multi-fingered hands 72 holding ingredients and utensils, interact with cookware 1012. The robotic sensor head 20 with a multi-modal sensor unit is used to continually model and monitor the three-dimensional task-space being worked by both robotic arms while also providing data to the task-abstraction module to identify tools and utensils, appliances and their contents and variables, so as to allow them to be compared to the cooking-process sequence generated recipe-steps to ensure the execution is proceeding along the computer-stored sequence-data for the recipe. Additional sensors in the robotic sensor head 20 are used in the audible domain to listen and smell during significant parts of the cooking process. The robotic hands 72 and their haptic sensors are used to properly handle respective ingredients, such as an egg in this case; the sensors in the fingers and palm are able to for example detect a usable egg by way of surface texture and weight and its distribution and hold and orient the egg without breaking it. The multi-fingered robotic hands 72 are also capable of fetching and handling particular cookware, such as a bowl in this case, and grab and handle cooking utensils (a whisk in this case), with proper motions and force application so as to properly process food ingredients (e.g. cracking an egg, separating the yolks and beating the egg-white until a stiff composition is achieved) as specified in the recipe-script.

FIG. 33 depicts the ingredient storage system notion 1020, wherein food storage containers 1022, capable of storing any of the needed cooking ingredients (e.g. meats, fish, poultry, shellfish, vegetables, etc.), are outfitted with sensors to measure and monitor the freshness of the respective ingredient. The monitoring sensors embedded in the food storage containers 1022 include, but are not limited to, ammonia sensors 1030, volatile organic compound sensors 1032, internal container temperature sensors 1026 and humidity sensors 1028. Additionally a manual probe can be used, whether employed by the human chef or the robotic arms and hands, to allow for key measurements (such as temperature) within a volume of a larger ingredient (e.g. internal meat temperature).

FIG. 34 depicts the measurement and analysis process 1040 carried out as part of the freshness and quality check for ingredients placed in food storage containers 1042 containing sensors and detection devices (e.g. a temperature probe/needle). A container is able to forward its data set by way of a metadata tag 1044, specifying its container-ID, and including the temperature data 1046, humidity data 1048, ammonia level data 1050, volatile organic compound data 1052 over a wireless data-network through a communication step 1056, to a main server where a food control quality engine processes the container data. The processing step 1060 uses the container-specific data 1044 and compares it to data-values and -ranges considered acceptable, which are stored and retrieved from media 1058 by a data retrieval and storage process 1054. A set of algorithms then make the decision as to the suitability of the ingredient, providing a real-time food quality analysis result over the data-network via a separate communication process 1062. The quality analysis results are then utilized in another process 1064, where the results are forwarded to the robotic arms for further action and may also be displayed remotely on a screen (such as a smartphone or other display) for a user to decide if the ingredient is to be used in the cooking process for later consumption or disposed of as spoiled.

FIG. 35 depicts the functionalities and process-steps of pre-filled ingredient containers 1070 when used in the standardized kitchen, whether it be the standardized robotic kitchen or the chef studio. Ingredient containers 1070 are designed in different sizes 1082 and varied usages in mind and are suitable for proper storage environments 1080 to accommodate perishable items by way of refrigeration, freezing, chilling, etc. to achieve specific storage temperature ranges. Additionally, ingredient storage containers 1070 are also designed to suit different types of ingredients 1072, with containers already pre-labeled and pre-filled with solid (salt, flour, rice, etc.), viscous/pasty (mustard, mayonnaise, marzipan, jams, etc.) or liquid (water, oil, milk, juice, etc.) ingredients, where dispensing processes 1074 utilize a variety of different application devices (dropper, chute, peristaltic dosing pump, etc.) depending on the ingredient type, with exact computer-controllable dispensing by way of a dosage control engine 1084 running a dosage control process 1076 ensuring that the proper amount of ingredient is dispensed at the right time. It should be noted that the recipe-specified dosage is adjustable to suit personal tastes or diets (low sodium, etc.), by way of a menu-interface or even through a remote phone application. The dosage determination process 1078 is carried out by the dosage control engine 1084, based on the amount specified in the recipe, with dispensing occurring either through manual release command or remote computer control based on the detection of a particular dispensing container at the exit point of the dispenser.

FIG. 36 is a block diagram illustrating a recipe system structure 1000 for use in the standardized robotic kitchen 50. The food preparation process 1100 is shown as divided into multiple stages along the cooking timeline, with each stage having or more raw data blocks for each stage 1102, stage 1004, stage 1106 and stage 1108. The data blocks can contain such elements as video-imagery, audio-recordings, textual descriptions, as well as the machine-readable and -understandable set of instructions and commands that form a part of the control program. The raw data set is contained within the recipe structure and representative of each cooking stage along a timeline divided into many time-sequenced stages, with varying levels of time-intervals and -sequences, all the way from the start of the recipe replication process to the end of the cooking process, or any sub-process therein.

FIGS. 37A-C are block diagrams illustrating recipe search menus for use in the standardized robotic kitchen. As shown in FIG. 37A, a recipe search menu 1120 provides most popular categories such as type of cuisine (e.g. Italian, French, Chinese), the basis of ingredients of the dish (e.g. fish, pork, beef, pasta), or criteria and range such as cooking time range (e.g. less than 60 minutes, between 20 to 40 minutes) as well as conducting a keyword search (e.g. ricotta cavatelli, migliaccio cake). A selected personalized recipe may excluding a recipe with allergic ingredients in which a user can indicate allergic ingredients that the user may refrain from in a personal user profile. In FIG. 37B, the user may select a search criteria, including the requirements of a cooking time less than 44 minutes, serving sufficient portions for 7 people, providing vegetarian dish options, with a total calories of 4521 or less. The different types of dishes 1122 are shown in FIG. 37C where menu 1120 has hierarchical levels such that the user may select a category (e.g. type of dish) 1122, which then expands to the next level subcategories (e.g. appetizers, salads, entrees...) to refine the selections. A screen shot of an implemented recipe creation and submission is illustrated in FIG. 37D. Additional screen shots of various graphical user interface and menu options are illustrated in FIG. 37N-V.

One embodiment of the flow charts in functioning as a recipe filter, an ingredient filter, an equipment filter, an account and social network access, a personal partner page, a shopping cart page, and the information on the purchased recipe, registration setting, create a recipe are illustrated in FIG. 37E through 37M, which illustrate the various functions that the robotic food preparation software 14 is capable of performing based on the filtering of databases and presenting the information to the user. As demonstrated in FIG. 37E, a platform user can access the recipe section and choose the desired recipe filters 1130 for automatic robotic cooking. The most common filter types include types of cuisine (e.g. Chinese, French, Italian), type of cooking (e.g. bake, steam, fry), vegetarian dishes, and diabetic food. The user will be able to view the recipe details, such as description, photo, ingredients, price, and ratings, from the filtered search result. In FIG. 37F, the user can choose the desired ingredient filters 1132, such as organic, type of ingredient, or brand of ingredient, for his purpose. In FIG. 37G, the user can apply the equipment filters 1134 for the automatic robotic kitchen modules, such as the type, the brand, and the manufacturer of equipment. After making the selections, the user will be able to purchase recipes, ingredients, or equipment product directly through the system portal from the associated vendors. The platform allows the users to create additional filters and parameters for his own purpose, which makes the entire system customizable and constantly renewing. The user-added filters and parameters will appear as system filters after approval by moderator.

In FIG. 37H, a user is able to connect to other users and vendors through the platform's social professional network by logging into the user account 1136. The identity of the network user is verified, possibly through the credit card and the address details. The account portal also serves as a trading platform for users to share or sell their recipes, as well as advertising to other users. The user can manage his account finance and equipment through the account portal as well.

An example of partnership between users of the platform is demonstrated in FIG. 371. One user can provide all the information and details for his ingredients and another user does the same for his equipment. All information must be filtered through a moderator before adding to the platform/website database. In FIG. 37J, a user can see the information for his purchases in the shopping cart 1140. Other options, such as delivery and payment method, can also be changed. The user can also purchase more ingredients or equipment, based on the recipes in his shopping cart.

FIG 37K shows the other information on the purchased recipes can be accessed from the recipes page 1560. The user can read, hear, and watch how to cook, as well as execute automatic robotic cooking. Communication with the vendors or technical support regarding the recipe is also possible from the recipes page.

FIG. 37L is a block diagram that illustrate the different layers of the platform from the "My account" page 1136 and Settings page 1138. From the "My account" page, the user will be able to read professional cooking news or blogs, and can write an article to publish. Through the recipe page under "My account", there are multiple ways a user can create his own recipe 1570, as shown in FIG. 37M. The user can create a recipe by creating an automatic robotic cooking script either by capturing chief cooking movements or by choosing manipulation sequences from software library. The user can also create recipe by simply listing the ingredient/ equipment, then add audio, video, or picture. The user can edit all recipes from the recipe page.

FIG. 38 is a block diagram illustrating a recipe search menu 1150 by selecting fields for use in the standardized robotic kitchen. By selecting a category with a search criteria or range, the user 60 receives a return page that lists the various recipes results. The user 60 is able to sort the results by criteria such as a user rating (e.g. from high to low), an expert rating (e.g. from high to low), or the duration of the food preparation (e.g. from shorter to longer). The computer display may contain a photo/media, title, description, ratings and price information of the recipe, with an optional tab of the "read more" button that brings up a complete recipe page for browsing further information about the recipe.

The standardized robotic kitchen 50 in Fig. 39 depicts a possible configuration for the use of an augmented sensor system 1854. The augmented sensor system 1854 shows a single augmented sensor system 1854 placed on a movable computer-controllable linear rail travelling the length of the kitchen axis with the intent to effectively cover the complete visible three-dimensional workspace of the standardized kitchen.

Based on the proper placement of the augmented sensor system 1854 placed somewhere in the robotic kitchen, such as on a computer-controllable railing, or on the torso of a robot with arms and hands, allows for 3D-tracking and raw data generation, both during chef-monitoring for machine-specific recipe-script generation, and monitoring the progress and successful completion of the robotically-executed steps in the stages of the dish replication in the standardized robotic kitchen 50.

The standardized robotic kitchen 50 in FIG. 39 depicts a possible configuration for the use of an augmented sensor system 20. The standardized robotic kitchen 50 shows a single augmented sensor system 20 placed on a movable computer-controllable linear rail travelling the length of the kitchen axis with the intent to effectively cover the complete visible three-dimensional workspace of the standardized kitchen.

FIG 40. is a block diagram illustrating the standardized kitchen module 50 with multiple camera sensors and/or lasers 20 for real-time three-dimensional modeling 1160 of the food preparation environment. The robotic kitchen cooking system 48 includes a three-dimensional electronic sensor that is capable of providing real-time raw data for a computer to create a three-dimensional model of the kitchen operating environment. One possible implementation of the real-time three-dimensional modeling process involves the use of three-dimensional laser scanning. An alternative implementation of the real-time three-dimensional modeling is to use one or more video cameras. Yet a third method involves the use of a projected light-pattern observed by a camera, so-called structured-light imaging. The three-dimensional electronic sensor scans the kitchen operating environment in real-time to provide a visual representation (shape and dimensional data) 1162 of the working space in the kitchen module. For example, the three-dimensional electronic sensor captures in real-time the three-dimensional images of whether the robotic arm/hand has picked up meat or fish. The three-dimensional model of the kitchen also serves as sort of a 'human-eye' for making adjustments to grab an object, as some objects may have nonstandard dimensions. The compute processing system 16 generates a computer model of the three-dimensional geometry and objects in the workspace and provides controls signals 1164 back to the standardized robotic kitchen 50. For instance, three-dimensional modeling of the kitchen can provide a three-dimensional resolution grid with a desirable spacing, such as with 1 centimeter spacing between the grid points.

The standardized robotic kitchen 50 depicts another possible configuration for the use of one or more augmented sensor systems 20. The standardized robotic kitchen 50 shows a multitude of augmented sensor systems 20 placed in the corners above the kitchen work-surface along the length of the kitchen axis with the intent to effectively cover the complete visible three-dimensional workspace of the standardized robotic kitchen 50.

The proper placement of the augmented sensor system 20 in the standardized robotic kitchen 50, allows for three-dimensional sensing, using video-cameras, lasers, sonars and other two- and three-dimensional sensor systems to enable the collection of raw data to assist in the creation of processed data for real-time dynamic models of shape, location, orientation and activity for robotic arms, hands, tools, equipment and appliances, as they relate to the different steps in the multiple sequential stages of dish replication in the standardized robotic kitchen 50.

Raw data is collected at each point in time to allow the raw data to be processed to be able to extract the shape, dimension, location and orientation of all objects of importance to the different steps in the multiple sequential stages of dish replication in the standardized robotic kitchen 50 in a step 1162. The processed data is further analyzed by the computer system to allow the controller of the standardized robotic kitchen to adjust robotic arm and hand trajectories and mini-manipulations, by modifying the control signals defined by the robotic script. Adaptations to the recipe-script execution and thus control signals is essential in successfully completing each stage of the replication for a particular dish, given the potential for variability for many variables (ingredients, temperature, etc.). The process of recipe-script execution based on key measurable variables is an essential part of the use of the augmented (also termed multi-modal) sensor system 20 during the execution of the replicating steps for a particular dish in a standardized robotic kitchen 50.

FIG. 41A is a diagram illustrating a robotic kitchen prototype. The prototype kitchen consists of three levels, the top level includes a rail system for two arms to move along when cooking, an extractible hood for two robot arms to return to a charging dock and allow them to be stored when not used for cooking or when the kitchen is set to manual cooking mode. The mid level includes sinks, stove, griller, oven, and a working counter top with access to ingredients storage. The middle level has also a computer monitor to operate the equipment, choose the recipe, watching the video and text instructions, and listening to the audio instruction. The lower level includes an automatic container system to store food/ingredients at their best conditions, with the possibility to automatically deliver ingredients to the cooking volume as required by the recipe. The kitchen prototype also includes an oven, dishwasher, cooking tools, accessories, cookware organizer, drawers and recycle bin.

FIG. 41B is a diagram illustrating a robotic kitchen prototype with a transparent material enclosure that serves as a protection mechanism while the robotic cooking process is occurring to prevent causing potential injuries to surrounding humans. The transparent material enclosure can be made from a variety of transparent materials, such as glass, fiberglass, plastics, or any other suitable material. In one example, the transparent material enclosure comprises an automatic glass door (or doors). As shown in this embodiment, the automatic glass doors are positioned to slide up-down or down-up (from bottom section) to close for safety reasons during the cooking process involving the use of robotic arms. A variation in the design of the transparent material enclosure is possible, such as vertically sliding down, vertically sliding up, horizontally from left to right, horizontally from right to left, or any other methods that place allow for the transparent material enclosure in the kitchen to serve as a protection mechanism.

FIG. 41C depicts an embodiment of the standardized robotic kitchen, where the volume prescribed by the countertop surface and the underside of the hood, has horizontally sliding glass doors 1190, that can be manually, or under computer control, moved left or right to separate the workspace of the robotic arms/hands from its surroundings for such purposes as safeguarding any human standing near the kitchen, or limit contamination into/out-of the kitchen work-area, or even allow for better climate control within the enclosed volume. The automatic sliding glass doors slide left-right to close for safety reasons during the cooking processes involving the use of the robotic arms.

FIG. 41D depicts an embodiment of the standardized robotic kitchen, where the countertop or work-surface includes an area with a sliding-door 1200 access to the ingredient-storage volume in the bottom cabinet volume of the robotic kitchen counter. The doors can be slid open manually, or under computer control, to allow access to the ingredient containers therein. Either manually, or under computer control, one or more specific containers can be fed to countertop level by the ingredient storage-and-supply unit, allowing manual access (in this depiction by the robotic arms/hands) to the container, its lid and thus the contents of the container. The robotic arms/hands can then open the lid, retrieve the ingredient(s) as needed, and place the ingredient(s) in the appropriate place (plate, pan, pot, etc.), before re-sealing the container and placing it back on or into the ingredient storage-and-supply unit. The ingredient storage-and-supply unit then places the container back into the appropriate location within the unit for later re-use, cleaning or re-stocking. This process of supplying and re-stacking ingredient containers for access by the robotic arms/hands is an integral and repeating process that forms part of the recipe-script as certain steps within the recipe replication process call for one or more ingredients of a certain type, based on the stage of the recipe-script execution the standardized robotic kitchen 50 might be involved in.

To access the ingredients storage-and-supply unit, part of the countertop with sliding doors can be opened, where the recipe software controls the doors and moves designated containers and ingredients to the access location where the robotic arm(s) may pick up the containers, open the lid, remove the ingredients out of the containers to a designated place, reseal the lid and move the containers back into storage. The container is moved from the access location back to its default location in the storage unit, and a new/next container item is then uploaded to the access location to be picked up.

An alternative embodiment for an ingredient storage-and-supply unit 1210 is depicted in Fig. 41E. Specific or repetitively used ingredients (salt, sugar, flour, oil, etc.) can be dispensed using computer-controlled feeding mechanisms or allow for hand-triggered, whether by human or robotic hands or fingers, release of a specified amount of a specific ingredient. The amount of ingredient to be dispensed can be manually entered by the human or robotic hand on a touch-panel, or provided via computer-control. The dispensed ingredient can then be collected or fed into a piece of kitchen equipment (bowl, pan, pot, etc.) at any time during the recipe replication process. This embodiment of an ingredient supply and dispensing system can be thought of as more cost- and space-efficient approach while also reducing container-handling complexity as well as wasted motion-time by the robot arms/hands.

In FIG. 41F an embodiment of the standardized robotic kitchen includes a backsplash area 1220, wherein is mounted a virtual monitor/display with a touchscreen area to allow a human operating the kitchen in manual mode to interact with the robotic kitchen and its elements. A computer-projected image and a separate camera monitoring the projected area can tell where the human hand and its finger are located when making a specific choice based on a location in the projected image, upon which the system then acts accordingly. The virtual touchscreen allows for access to all control and monitoring functions for all aspects of the equipment within the standardized robotic kitchen 50, retrieval and storage of recipes, reviewing stored videos of complete or partial recipe execution steps by a human chef, as well as listening to audible playback of the human chef voicing descriptions and instructions related to a particular step or operation in a particular recipe.

FIG. 41G depicts a single or a series of robotic hard automation device(s) 1230 which are built into the standardized robotic kitchen. The device or devices are programmable and controllable remotely by a computer and are designed to feed or provide pre-packaged or pre-measured amounts of dedicated ingredient elements needed in the recipe replication process, such as spices (salt, pepper, etc.), liquids (water, oil, etc.) or other dry ingredients (flour, sugar, baking powder, etc.). These robotic automation devices 1230 are located so as to make them readily accessible to the robotic arms/hands to allow them to be used by the robotic arms/hands or those of a human chef, to set and/or trigger the release of a determined amount of an ingredient of choice based on the needs specified in the recipe-script.

FIG. 41H depicts a single or a series of robotic hard automation device(s) 1340, which are built into the standardized robotic kitchen. The device or devices are programmable and controllable remotely by a computer and are designed to feed or provide pre-packaged or pre-measured amounts of common and repetitively used ingredient elements needed in the recipe replication process, where a dosage control engine/system, is capable of providing just the proper amount to a specific piece of equipment, such as a bowl, pot or pan. These robotic automation devices 1340 are located so as to make them readily accessible to the robotic arms/hands to allow them to be used by the robotic arms/hands or those of a human cook, to set and/or trigger the release of a dosage-engine controlled amount of an ingredient of choice based on the needs specified in the recipe-script. This embodiment of an ingredient supply and dispensing system can be thought of as more cost- and space-efficient approach while also reducing container-handling complexity as well as wasted motion-time by the robot arms/hands.

FIG. 411 depicts the standardized robotic kitchen outfitted with both a ventilation system 1250 to extract fumes and steam during the automated cooking process, as well as an automatic smoke/flame detection and suppression system 1252 to extinguish any source of noxious smoke and dangerous fire also allowing the safety glass of the sliding doors to enclose the standardized robotic kitchen 50 to contain the affected space.

FIG. 41J depicts the standardized robotic kitchen 50 with a waste management system 1260 which is located within a location in the lower cabinet so as to allow for easy and rapid disposal of recyclable (glass, aluminum, etc.) and non-recyclable (food scraps, etc.) items by way of a set of trash containers with removable lids, which contain sealing elements (gaskets, o-rings, etc.) to provide for an airtight seal to keep odors from escaping into the standardized robotic kitchen 50..

FIG. 41K depicts the standardized robotic kitchen 50 with a top-loaded dishwasher 1270 located within a certain location in the kitchen for ease of robotic loading and unloading. The dishwasher includes a sealing lid, which during automated recipe replication step execution can also be used as a cutting board or workspace with an integral drainage groove.

FIG. 41L depicts the standardized kitchen with an instrumented ingredient quality-check system 1280 comprised of an instrumented panel with sensors and a food-probe. The area includes sensors on the backsplash capable of detecting multiple physical and chemical characteristics of ingredients placed within the area, including but not limited to spoilage (ammonia sensor), temperature (thermocouple), volatile organic compounds (emitted upon biomass decomposition), as well as moisture/humidity (hygrometer) content. A food probe using a temperature-sensor (thermocouple) detection device can also be present to be wielded by the robotic arms/hands to probe the internal properties of a particular cooking ingredient or element (such as internal temperature of red meat, poultry, etc.).

FIG. 42A depicts an embodiment of a standardized robotic kitchen in plan view 50, whereby it should be understood that the elements therein could be arranged in a different fashion. The standardized robotic kitchen is divided in to three levels, namely the top level 1292-1, the counter level 1292-2 and the lower level 1292-3.

The top level 1292-1 contains multiple cabinet-type modules with different units to perform specific kitchen functions by way of built-in appliances and equipment. At the simplest level a shelf/cabinet storage area 1294 is included, a cabinet volume 1296 used for storing and accessing cooking tools and utensils and other cooking and serving ware (cooking, baking, plating, etc.), a storage ripening cabinet volume 1298 for particular ingredients (e.g. fruit and vegetables, etc.), a chilled storage zone 1300 for such items as lettuce and onions, a frozen storage cabinet volume 1302 for deep-frozen items, and another storage pantry zone 1304 for other ingredients and rarely used spices, etc.

The counter level 1292-2 not only houses the robotic arms 70, but also includes a serving counter 1306, a counter area with a sink 1308, another counter area 1310 with removable working surfaces (cutting/chopping board, etc.), a charcoal-based slatted grill 1312 and a multi-purpose area for other cooking appliances 1314, including a stove, cooker, steamer and poacher.

The lower level 1292-3 houses the combination convection oven and microwave 1316, the dish-washer 1318 and a larger cabinet volume 1320 that holds and stores additional frequently used cooking and baking ware, as well as tableware and packing materials and cutlery.

FIG. 42B depicts a perspective view 50 of the standardized robotic kitchen, depicting the locations of the top level 1292-1, counter level 1292-2 and the lower level 1294-3, within an xyz coordinate frame with axes for x 1322, y 1324 and z 1326 to allow for proper geometric referencing for positioning of the robotic arms 34 within the standardized robotic kitchen.

The perspective view of the robotic kitchen 50 clearly identifies one of the many possible layouts and locations for equipment at all three levels, including the top level 1292-1 (storage pantry 1304, standardized cooking tools and ware 1320, storage ripening zone 1298, chilled storage zone 1300, and frozen storage zone 1302, the counter level 1292-2 (robotic arms 70, sink 1308, chopping/cutting area 1310, charcoal grill 1312, cooking appliances 1314 and serving counter 1306) and the lower level (dish-washer 1318 and oven and microwave 1316).

FIG. 43A depicts a plan view of one possible physical embodiment of the standardized robotic kitchen layout, where the kitchen is built into a more linear substantially rectangular horizontal layout depicting a built-in monitor 1328 for a user to operate the equipment, choose a recipe, watch video and listen to the recorded chef's instructions, as well as automatically computer-controlled left/right movable transparent doors 1330 for enclosing the open faces of the standardized robotic cooking volume during operation of the robotic arms.

FIG. 43B depicts a perspective view of one possible physical embodiment of the standardized robotic kitchen layout, where the kitchen is built into a more linear substantially rectangular horizontal layout depicting a built-in monitor 1332 for a user to operate the equipment, choose a recipe, watch video and listen to the recorded chef's instructions, as well as automatically computer-controlled left/right movable transparent doors 1334 for enclosing the open faces of the standardized robotic cooking volume during operation of the robotic arms. Sample screen shots in the standardized robotic kitchen are illustrated in FIGS. 43C-E, while FIG. 43F depicts a sample kitchen module specification.

FIG. 44A depicts a plan view of another possible physical embodiment of the standardized robotic kitchen layout, where the kitchen is built into a more linear substantially rectangular horizontal layout depicting a built-in monitor 1336 for a user to operate the equipment, choose a recipe, watch video and listen to the recorded chef's instructions, as well as automatically computer-controlled up/down movable transparent doors 1338 for enclosing the open faces of the standardized robotic cooking volume during operation of the robotic arms.

FIG. 44B depicts a perspective view of another possible physical embodiment of the standardized robotic kitchen layout, where the kitchen is built into a more linear substantially rectangular horizontal layout depicting a built-in monitor 1340 for a user to operate the equipment, choose a recipe, watch video and listen to the recorded chef's instructions, as well as automatically computer-controlled up/down movable transparent doors 1342 for enclosing the open faces of the standardized robotic cooking volume during operation of the robotic arms.

FIG. 45 depicts a perspective layout view of a telescopic life 1350 in the standardized robotic kitchen 50 in which a pair of robotic arms, wrists and multi-fingered hands move as a unit on a prismatically (through linear staged extension) and telescopically actuated torso along the vertical y-axis 1352 and the horizontal x-axis 1354, as well as rotationally about the vertical y-axis running through the centerline of its own torso. Actuators are embedded in the torso and upper level to allow for these linear and rotary motions so as to allow the robotic arms to be moved to different places in the standardized robotic kitchen during all parts of the replication of the recipe spelled out in the recipe script.

These multiple motions are necessary to be able to properly replicate the motions of a human chef 49 as observed in the chef studio kitchen setup during the creation of the dish when cooked by the human chef.

FIG. 46A depicts a plan view of one physical embodiment 1356 of the standardized robotic kitchen layout, where the kitchen is built into a more linear substantially rectangular horizontal layout depicting a set of dual robotic arms with wrists and multi-fingered hands, where each of the arm bases is mounted neither on a set of movable rails nor on a rotatable torso, but rather rigidly and unmovably mounted on one and the same of the robotic kitchen vertical surfaces, thereby defining and fixing the location and dimensions of the robotic torso, yet still allowing both robotic arms to work collaboratively and reach all areas of the cooking surfaces and equipment.

FIG. 46B depicts a perspective view of one physical embodiment 1358 of the standardized robotic kitchen layout, where the kitchen is built into a more linear substantially rectangular horizontal layout depicting a set of dual robotic arms with wrists and multi-fingered hands, where each of the arm bases is not mounted neither on a set of movable rails nor on a rotatable torso, but rather rigidly and unmovably mounted on one and the same of the robotic kitchen vertical surfaces, thereby defining and fixing the location and dimensions of the robotic torso, yet still allowing both robotic arms to work collaboratively and reach all areas of the cooking surfaces and equipment (oven on back wall, cooktop beneath the robotic arms and sink to one side of the robotic arms).

FIG. 46C depicts a dimensioned front view of one possible physical embodiment 1360 of the standardized robotic kitchen, denoting its height along the y-axis and width along the x-axis to be 2284mm overall.

FIG. 46D depicts a dimensioned side section view of one possible physical embodiment 1362 of the standardized robotic kitchen, denoting its height along the y-axis to be 2164mm and 3415mm, respectively.

FIG. 46E depicts a dimensioned side view of one physical embodiment 1364 of the standardized robotic kitchen, denoting its height along the y-axis and depth along the z-axis to be 2284mm and 1504mm, respectively.

FIG. 46F depicts a dimensioned top section view of one physical embodiment 1366 of the standardized robotic kitchen, including a pair of robotic arms 1368, denoting the depth of the entire robotic kitchen module along the z-axis to be 1504mm overall.

FIG. 46G depicts a three-view, augmented by a section-view, of one physical embodiment of the standardized robotic kitchen, showing the overall length along the x-axis to be 3415mm, the overall height along the y-axis to be 2164mm, and the overall depth along the z-axis to be 1504mm, where the overall height in the sectional side-view indicates an overall height along the z-axis of 2284mm.

FIG. 47 is a block diagram illustrating a programmable storage system 88 for use with the standardized robotic kitchen 50. The programmable storage system 88 is structured in the standardized robotic kitchen 50 based on the relative xy position coordinates within the storage system 88. In this example, the programmable storage system 88 has twenty seven (27; arranged in a 9 X 3 matrix) storage locations that have nine columns and three rows. The programmable storage system 88 can serve as the freezer location or the refrigeration location. In this embodiment, each of the twenty-seven programmable storage locations includes four types of sensors: a pressure sensor 1370, a humidity sensor 1372, a temperature sensor 1374, and a smell (olfactory) sensor 1376. With each storage location recognizable by its xy coordinates, the robotic apparatus is able to access a selected programmable storage location to obtain the necessary food item(s) in the location to prepare a dish. The computer 16 can also monitor each programmable storage location for the proper temperature, proper humidity, proper pressure, and proper smell profiles to ensure optimal storage conditions for particular food items or ingredients are monitored and maintained.

FIG. 48 depicts an elevation view of the container storage station 86, where temperature, humidity and relative oxygen content (and other room conditions) can be monitored and controlled by a computer. Included in this storage container unit can be, but it is not limited to, a pantry/dry storage area 1304, a ripening area 1298 with separately controllable temperature and humidity (for fruit/vegetables), of importance to wine, a chiller unit 1300 for lower temperature storage for produce/fruit/meats so as to optimize shelf life, and a freezer unit 1302 for long-term storage of other items (meats, baked goods, seafood, ice cream, etc.).

FIG. 49 depicts an elevation view of ingredient containers 1380 to be accessed by a human chef and the robotic arms and multi-fingered hands. This section of the standardized robotic kitchen includes, but is not necessarily limited to, multiple units including an ingredient quality monitoring dashboard (display) 1382, a computerized measurement unit 1384, which includes a barcode scanner, camera and scale, a separate countertop 1386 with automated rack-shelving for ingredient check-in and check-out, and a recycling unit 1388 for disposal of recyclable hard (glass, aluminum, metals, etc.) and soft goods (food rests and scraps, etc.) suitable for recycling.

FIG. 50 depicts the ingredient quality-monitoring dashboard 1390, which is a computer-controlled display for use by the human chef. The display allows the user to view multiple items of importance to the ingredient-supply and ingredient-quality aspect of human and robotic cooking. These include the display of the ingredient inventory overview 1392 outlining what is available, the individual ingredient selected and its nutritional content and relative distribution 1394, the amount and dedicated storage as a function of storage category 1396 (meats, vegetables, etc.), a schedule 1398 depicting pending expiry dates and fulfillment/replenishment dates and items, an area for any kinds of alerts 1400 (sensed spoilage, abnormal temperatures or malfunctions, etc.), and the option of voice-interpreter command input 1402, to allow the human user to interact with the computerized inventory system by way of the dashboard 1390.

FIG. 51 is a table illustrating one example of a library database 1410 of recipe parameters. The library database 1410 of recipe parameters includes many categories: a meal grouping profile 1402, types of cuisine 1404, a media library 1406, recipe data 1408, robotic kitchen tools and equipment 1410, ingredient groupings 1412, ingredient data 1414, and cooking techniques 1416. Each of these categories provides a listing of the detailed choices that are available in selecting a recipe. The meal group profile includes parameters like age, gender, weight, allergy, medication and lifestyle. The types of cuisine group profile 1404 include cuisine type by region, culture, or religion, and the types of cooking equipment group profile 1410 include items such as pan, grill, or oven and the cooking duration time. The recipe data grouping profile 1408 contains such items as the recipe name, version, cooking and preparation time, tools and appliances needed, etc. The ingredient grouping profile 1412 contains ingredients grouped into items such as dairy products, fruit and vegetables, grains and other carbohydrates, fluids of various types, and protein of various kinds (meats, beans), etc. The ingredient data group profile 1414 contains ingredient descriptor data such as the name, description, nutritional information, storage and handling instructions, etc. The cooking techniques group profile 1416 contains information on specific cooking techniques grouped into such areas as mechanical techniques (basting, chopping, grating, mincing, etc.) and chemical processing techniques (marinating, pickling, fermenting, smoking, etc.).

FIG. 52 is a flow diagram illustrating one embodiment of the process 1420 of one embodiment of recording a chef's food preparation process. At step 1422 in the chef studio 44, the multimodal three-dimensional sensors 20 scan the kitchen module volume to define xyz coordinates position and orientation of the standardized kitchen equipment and all objects therein, whether static or dynamic. At step 1424, the multimodal three-dimensional sensors 20 scan the kitchen module's volume to find xyz coordinates position of non-standardized objects, such as ingredients. At step 1426, the computer 16 creates three-dimensional models for all non-standardized objects and stores their type and attributes (size, dimensions, usage, etc.) in the computer's system memory, either on a computing device or on a cloud computing environment, and defines the shape, size and type of the non-standardized objects. At step 1428, the chef movements recording module 98 is configured to sense and capture the chef's arm, wrist and hand movements via the chef's gloves in successive time intervals (chef's hand movements preferably identified and classified according to standard mini-manipulations). At step 1430, the computer 16 stores the sensed and captured data of the chef's movements in preparing a food dish into a computer's memory storage device(s).

FIG. 53 is a flow diagram illustrating one embodiment of the process 1440 of one embodiment of a robotic apparatus preparing a food dish. At step 1442, the multimodal three-dimensional sensors 20 in the robotic kitchen 48 scan the kitchen module's volume to find xyz position coordinates of non-standardized objects (ingredients, etc.). At step 1444, the multimodal three-dimensional sensors 20 in the robotic kitchen 48 create three-dimensional models for non-standardized objects detected in the standardized robotic kitchen 50 and store the shape, size and type of non-standardized objects in the computer's memory. At step 1446, the robotic cooking module 110 starts a recipe's execution according to a converted recipe file by replicating the chef's food preparation process with the same pace, with the same movements, and with similar time duration. At step 1448, the robotic apparatus executes the robotic instructions of the converted recipe file with a combination of one or more mini-manipulations and action primitives, thereby resulting in the robotic apparatus in the robotic standardized kitchen preparing the food dish with the same result or substantially the same result as if the chef 49 had prepared the food dish himself or herself.

FIG. 54 is a flow diagram illustrating the process of one embodiment in the quality and function adjustment 1450 in obtaining the same or substantially the same result in a food dish preparation by a robotic relative to a chef. At step 1452, the quality check module 56 is configured to conduct a quality check by monitoring and validating the recipe replication process by the robotic apparatus via one or more multimodal sensors, sensors on the robotic apparatus, and using abstraction software to compare the output data from the robotic apparatus against the controlled data from the software recipe file created by monitoring and abstracting the cooking processes carried out by the human chef in the chef studio version of the standardized robotic kitchen while executing the same recipe. In step 1454, the robotic food preparation engine 56 is configured to detect and determine any difference(s) that would require the robotic apparatus to make an adjustment to the food preparation process, such as at least monitoring for the difference in the size, shape, or orientation of an ingredient. If there is a difference, the robotic food preparation engine 56 is configured to modify the food preparation process by adjusting one or more parameters for that particular food dish processing step based on the raw and processed sensory input data. A determination for acting on a potential difference between the sensed and abstracted process progress compared to the stored process variables in the recipe script is made in step 1454. If the process results of the cooking process in the standardized robotic kitchen are identical to those spelled out in the recipe script for the process step, the food preparation process continues as described in the recipe script. Should a modification or adaptation to the process be required based on raw and processed sensory input data, the adaptation process 1556 is carried out by adjusting any parameters needed to ensure the process variables are brought into compliance with those prescribed in the recipe script for that process step. Upon successful conclusion of the adaptation process 1456, the food preparation process 1458 resumes as specified in the recipe script sequence.

FIG. 55 depicts a flow diagram illustrating a first embodiment in the process 1460 of the robotic kitchen preparing a dish by replicating a chef's movements from a recorded software file in a robotic kitchen. In step 1462, a user, through a computer, selects a particular recipe for the robotic apparatus to prepare the food dish. In step 1464, the robotic food preparation engine 56 is configured to retrieve the abstracted recipe for the selected recipe for food preparation. In step 1468, the robotic food preparation engine 56 is configured to upload the selected recipe script into the computer's memory. In step 1470, the robotic food preparation engine 56 calculates the ingredient availability and the required cooking time. In step 1472, the robotic food preparation engine 56 is configured to raise an alert or notification if there is a shortage of ingredients or insufficient time to prepare the dish according to the selected recipe and serving schedule. The robotic food preparation engine 56 sends an alert to place missing or insufficient ingredients on a shopping list or selects an alternate recipe in step 1472. The recipe selection by the user is confirmed in step 1474. In step 1476, the robotic food preparation engine 1476 is configured to check whether it is time to start preparing the recipe. The process 1460 pauses until the start time has arrived in step 1476. In step 1460, the robotic apparatus inspects each ingredient for freshness and condition (e.g. purchase date, expiration date, odor, color). In step 1462, robotic food preparation engine 56 is configured to send instructions to the robotic apparatus to move food or ingredients from standardized containers to the food preparation position. In step 1464, the robotic food preparation engine 56 is configured to instruct the robotic apparatus to start food preparation at the start time "0" by replicating the food dish from the software recipe script file. In step 1466, the robotic apparatus in the standardized kitchen 50 replicates the food dish with the same movement as the chef's arms and fingers, the same ingredients, with the same pace, and using the same standardized kitchen equipment and tools. The robotic apparatus in step 1468 conducts quality checks during the food preparation process to make any necessary parameter adjustment. In step 1470, the robotic apparatus has completed replication and preparation of the food dish, and therefore is ready to plate and serve the food dish.

Fig. 56 depicts the process of storage container check-in and identification 1480. Using the quality-monitoring dashboard, the user selects to check in an ingredient in step 1482. In step 1484 the user then scans the ingredient package at the check-in station or counter. Using additional data from the bar code scanner, weighing scales, camera and laser-scanners, the robotic cooking engine processes the ingredient-specific data and maps the same to its ingredient and recipe library and analyzes it for any potential allergic impact in step 1486. Should an allergic potential exist based on step 1488, the system in step 1490 decides to notify the user and dispose of the ingredient for safety reasons. Should the ingredient be deemed acceptable, it is logged and confirmed by the system in step 1492. The user may in step 1494 unpack (if not unpacked already) and drop off the item. In the succeeding step 1496, the item is packed (foil, vacuum bag, etc.), labeled with a computer-printed label with all necessary ingredient data printed thereon, and moved to a storage container and/or storage location based on the results of the identification. At step 1498, the robotic cooking engine then updates its internal database and displays the available ingredient in its quality-monitoring dashboard.

FIG. 57 depicts an ingredient's check-out from storage and cooking preparation process 1500. In the first step 1502, the user selects to check out an ingredient using the quality-monitoring dashboard. In step 1504 the user selects an item to check out based on a single item needed for one or more recipes. The computerized kitchen then acts in step1506 to move the specific container containing the selected item from its storage location to the counter area. In case the user picks up the item in step 1508, the user processes the item in step 1510 in one or more of many possible ways (cooking, disposal, recycling, etc.), with any remaining item(s) rechecked back into the system in step 1512, which then concludes the user's interactions with the system 1514. In the case that the robotic arms in a standardized robotic kitchen receive the retrieved ingredient item(s), step 1516 is executed in which the arms and hands inspect each ingredient item in the container against their identification data (type, etc.) and condition (expiration date, color, odor, etc.). In a quality-check step 1518, the robotic cooking engine makes a decision on a potential item mismatch or detected quality condition. In case the item is not appropriate, step 1520 causes an alert to be raised to the cooking engine to follow-up with an appropriate action. Should the ingredient be of acceptable type and quality, the robotic arms move the item(s) to be used in the next cooking process stage in step 1522.

FIG. 58 depicts the automated pre-cooking preparation process 1524. In step 1530 the robotic cooking engine calculates the margin and/or wasted ingredient materials based on a particular recipe. Subsequently in step 1532, the robotic cooking engine searches all possible techniques and methods for execution of the recipe with each ingredient. In step 1534 the robotic cooking engine calculates and optimizes the ingredient usage and methods for time and energy consumption, particularly for dish(es) requiring parallel multi-task processes. The robotic cooking engine then creates a multi-level cooking plan 1536 for the scheduled dishes and sends the request for cooking execution to the robotic kitchen system. In the next step 1538, the robotic kitchen system moves the ingredients, cooking/baking ware needed for the cooking processes from its automated shelving system and assembles the tools and equipment and sets up the various work stations in step 1540.

FIG. 59 depicts the recipe design and scripting process 1542. As a first step 1544, the chef selects a particular recipe, for which he then enters or edits the recipe data in step 1546, including, but not limited to, the name and other metadata (background, techniques, etc.). In step 1548 the chef enters or edits the necessary ingredients based on the database and associated libraries and enters the respective amounts by weight/volume/units required for the recipe. A selection of the necessary techniques utilized in the preparation of the recipe is made in step 1550 by the chef, based on those available in the database and the associated libraries. In step 1552 the chef performs a similar selection, but this time he or she is focused on the choice of cooking and preparation methods required to execute the recipe for the dish. The concluding step 1554 then allows the system to create a recipe ID which will be useful for later database storage and retrieval.

FIG. 60 depicts the process 1556 of how a user might select a recipe. The first step 1558 entails the user purchasing a recipe or subscribing to a recipe-purchase plan from an online marketplace store by way of a computer or mobile application, thereby enabling a download of a recipe script capable of being replicated. In step 1560 the user searches the online database and selects a particular recipe from those purchased or available as part of a subscription, based on personal preference settings and on-site ingredient availability. As a last step 1562, the user enters the time and date when he/she would like the dish to be ready for serving.

FIG. 61A depicts the process 1570 for the recipe search and purchase and/or subscription process of an online service portal, or so termed recipe commerce platform. As a first step a new user has to register with the system in step 1572 (selecting age, gender, dining preferences, etc., followed by an overall preferred cooking or kitchen style) before a user can search and browse recipes by downloading them via an app on a handheld device or using a TV and/or robotic kitchen module. A user may choose at step 1574 to search using criteria such as style of recipes 1576 (including manually cooked recipes) or based on the particular kitchen or equipment style 1578 (wok, steamer, smoker, etc.). The user can select or set the search to use predefined criteria in step 1580, and using a filtering step 1582 to narrow down the search space and ensuing results. In step 1584 the user selects the recipe from the offered search results, information and recommendation. The user may choose to then share, collaborate or confer with cooking buddies or the community online about the choice and next steps in step 1586.

FIG. 61B depicts the continuation from FIG. 61A for the recipe search and purchase/subscription process for a service portal 1590. A user is prompted in step 1592 to select a particular recipe based on either a robotic cooking approach or a parameter-controlled version of the recipe. In the case of a parameter-controlled based recipe, the system provides the required equipment details in step 1594 for such items as all the cookware and appliances as well as the robotic arm requirements, and offers select external links at step 1602 to sources for ingredients and equipment suppliers for detailed ordering instructions. The portal system then executes a recipe-type check 1596, where it allows for a direct download and installation 1598 of the recipe program file on the remote device, or requires the user to enter payment information in step 1600 based on a one-off payment or payment on a subscription basis, using one of many possible payment forms (PayPal, BitCoin, credit card, etc.).

FIG. 62 depicts the process 1610 used in the creation of a robotic recipe cooking application ("App"). As a first step 1612, a developer account needs to be created on such places as the App Store, Google Play or Windows Mobile or other such marketplaces, including the provision of banking and company information. The user is then prompted in step 1614 to obtain and download the most updated Application-Program-Interface (API) documentation specific for each app store. A developer then has to follow the API-requirements spelled out and create a recipe program in step 1618 that meets the API document requirements. In step 1620 the developer needs to provide a name and other metadata for the recipe that are suitable and prescribed by the various sites (Apple, Google, Samsung, etc.). Step 1622 requires the developer to upload the recipe program and metadata files for approval. The respective marketplace sites then review, test and approve the recipe program in step 1624, after which in step 1626 the respective site(s) list and make available the recipe program for online searching, browsing and purchase over their purchase interface.

FIG. 63 depicts the process 1628 of purchasing a particular recipe or subscribing to a recipe delivery plan. As a first step 1630 the user searches for a particular recipe to order. The user may choose to browse by keyword (step 1632) with results able to be narrowed down using preference filters (step 1634), browse using other predefined criteria (step 1636) or even browse based on promotional, newly-released or pre-order basis recipes and even live chef cooking events (step 1638). The search results for recipes are displayed to the user in step 1640. The user may then browse these recipe results and preview each recipe in an audio- or short video-clip as part of step 1642. In step 1644 the user then chooses a device and operating system and receives a specific download link for a particular online marketplace application site. Should the user choose at step to connect to a new provider site in task 1648, the site will require the new user to complete an authentication and agreement step 1650, allowing the site to then download and install site-specific interface software in task 1652, to allow the recipe-delivery process to continue. The provider site will query with the user whether to create a robotic cooking shopping list in step 1646, and, if agreed to by the user in step 1654, to select a particular recipe on a single or subscription basis and pick a particular date and time for the dish to be served. In step 1656 the shopping list for the needed ingredients and equipment is provided and displayed to the user, including closest and fastest suppliers and their locations, ingredient and equipment availability and associated delivery lead times and pricing. In step 1658 the user is offered a chance to review each of the items' descriptions and their default or recommended source and brand. The user is then able to view the associated cost of all items on the ingredient and equipment list including all associated line-item costs (shipping, tax, etc.) in step 1660. Should the user or buyer want to view alternatives to the proposed shopping list items in step 1662, a step 1664 is executed to offer the user or buyer links to alternate sources to allow them to connect and view alternative buying and ordering options. If the user or buyer accepts the proposed shopping list, the system not only saves these selections as personalized choices for future purchases (step 1666) and updates the current shopping list (step 1668), but then also moves to step 1670, where it selects the alternatives from the shopping list based on additional criteria such as local/closest providers, item availability based on season and maturation-stage, or even pricing for equipment from different suppliers which has effectively the same performance but differs substantially in delivered cost to the user or buyer.

FIGS. 64A-B are block diagrams illustrating an example of a predefined recipe search criterion 1672. The predefined recipe search criteria in this example include categories like main ingredients, cooking duration, cuisine by geographic regions and types, chef's name search, signature dishes, and estimated ingredient cost to prepare a food dish. Other possible recipe search fields Include types of meals, special diet, exclusion ingredient, dish types and cooking methods, occasions and seasons, reviews and suggestions, and rankings.

FIG. 65 is a block diagram illustrating some pre-defined containers in the robotic standardized kitchen 50. Each of the containers in the standardized robotic kitchen 50 has a container number or bar code which reference the specific content that is stored in that container. For example, the first container stores large and bulky products, such as white cabbage, red cabbage, savoy cabbage, turnips and cauliflower. The sixth container stores a large fraction of solids by pieces including items like almond shavings, seeds (sunflower, pumpkin, white), dried apricots pitted, dried papaya and dried apricots.FIG. 66 is a block diagram illustrating a first embodiment of a robotic restaurant kitchen module configured in a rectangular layout with multiple pairs of robotic hands for simultaneous food preparation processing. Another embodiment of the invention revolves around a staged configuration for multiple successive or parallel robotic arm and hand stations in a professional or restaurant kitchen setup shown in FIG. 66. The embodiment depicts a more linear configuration, even though any geometric arrangement could be used, showing multiple robotic arm/hand modules, each focused on creating a particular element, dish or recipe script step (e.g. six pairs of robotic arms/hands to serve different roles in a commercial kitchen such as sous-chef, broiler-cook, fry/saute cook, pantry cook, pastry chef, soup and sauce cook, etc.). The robotic kitchen layout is such that the access/interaction with any human or between neighboring arm/hand modules is along a single forward-facing surface. The setup is capable of being computer-controlled, thereby allowing the entire multi-arm/hand robotic kitchen setup to perform replication cooking tasks respectively, regardless of whether the arm/hand robotic modules execute a single recipe sequentially (end-product from one station gets supplied to the next station for a subsequent step in the recipe script) or multiple recipes/steps in parallel (such as pre-meal food-/ingredient-preparation for later use during dish replication completion to meet the time crunch during rush times).

FIG. 67 is a block diagram illustrating a second embodiment of a robotic restaurant kitchen module configured in a U-shape layout with multiple pairs of robotic hands for simultaneous food preparation processing. Yet another embodiment of the invention revolves around another staged configuration for multiple successive or parallel robotic arm and hand stations in a professional or restaurant kitchen setup shown in FIG. 67. The embodiment depicts a rectangular configuration, even though any geometric arrangement could be used, showing multiple robotic arm/hand modules, each focused on creating a particular element, dish or recipe script step. The robotic kitchen layout is such that the access/interaction with any human or between neighboring arm/hand modules is both along a U-shaped outward-facing set of surfaces and along the central-portion of the U-shape, allowing arm/hand modules to pass/reach over to opposing work areas and interact with their opposing arm/hand modules during the recipe replication stages. The setup is capable of being computer-controlled, thereby allowing the entire multi-arm/hand robotic kitchen setup to perform replication cooking tasks respectively, regardless of whether the arm/hand robotic modules execute a single recipe sequentially (end-product from one station gets supplied to the next station along the U-shaped path for a subsequent step in the recipe script) or multiple recipes/steps in parallel (such as pre-meal food-/ingredient-preparation for later use during dish replication completion to meet the time crunch during rush times, with prepared ingredients possibly stored in containers or appliances (fridge, etc.) contained within the base of the U-shaped kitchen).

FIG. 68 depicts a second embodiment of a robotic food preparation system 1680. The chef studio with the standardized robotic kitchen system 1682 includes the human chef 49 preparing or executing a recipe, while sensors on the cookware 1682 record important variables (temperature, etc.) over time and store them in a computer's memory 1684 as sensor curves and parameters that form a part of a recipe script raw data file. These stored sensory curves and parameter data files from the chef studio 1682 are delivered to a standardized (remote) robotic kitchen on a purchase or subscription basis 1686. The standardized robotic kitchen 1688 installed in a household includes both the user 60 and the computer controlled system 1690 to operate the automated and/or robotic kitchen equipment based on the received raw data corresponding to the measured sensory curves and parameter data files.

FIG. 69 depicts another embodiment of the standardized robotic kitchen 48. The computer 16 that runs the robotic cooking (software) engine 56, which includes a cooking operations control module 1692 that processes recorded, analyzed and abstracted sensory data from the recipe script, and associated storage media and memory 1694 to store software files consisting of sensory curves and parameter data, interfaces with multiple external devices. These external devices include, but are not limited to, a retractable safety glass 68, a computer-monitored and computer-controllable storage unit 88, multiple sensors reporting on the process of raw-food quality and supply 198, hard-automation modules 82 to dispense ingredients, standardized containers 86 with ingredients, and intelligent cookware 1700 fitted with sensors.

FIG. 70 depicts an intelligent cookware item 1700 (a sauce-pot in this image) that includes built-in real-time temperature sensors, capable of generating and wirelessly transmitting a temperature profile across the bottom surface of the unit across at least, but not limited to, three planar zones, including zone-1 1702, zone-2 1704 and zone-3 1706, arranged in concentric circles across the entire bottom surface of the cookware unit. Each of these three zones is capable of wirelessly transmitting respective data-1 1708, data-2 1710 and data-3 1712 based on coupled sensors 1716-1, 1716-2, 1716-3, 1716-4 and 1716-5.

FIG. 71 depicts a typical set of sensory curves 220 with recorded temperature profiles for data-1 1720, data-2 1722 and data-3 1724, each corresponding to the temperature in each of the three zones at the bottom of a particular area of a cookware unit. The measurement units for time are reflected as cooking time in minutes from start to finish (independent variable), while the temperature is measured in degrees Celsius (dependent variable).

FIG. 72 depicts a multiple set of sensory curves 1730 with recorded temperature 1732 and humidity 1734 profiles, with the data from each sensor represented as data-1 1736, data-2 1738 all the way to data-N 1740. Streams of raw data are forwarded and processed to and by the operating control unit 274. The measurement units for time are reflected as cooking time in minutes from start to finish (independent variable), while the temperature and humidity values are measured in degrees Celsius and relative humidity, respectively (dependent variables).

FIG. 73 depicts a process setup for real-time temperature control 1700 with a smart (frying) pan. A power source 1750 uses three separate control units, but need not be limited to such, including control-unit-1 1752, control-unit-2 1754 and control-unit-3 1756, to actively heat a set of inductive coils. The control is in effect a function of the measured temperature values within each of the (three) zones 1758 (Zone 1), 1760 (Zone 2) and 1762 (Zone 3) of the (frying) pan, where temperature sensors 1770 (Sensor 1), 1772 (Sensor 2) and 1774 (Sensor 3) wirelessly provide temperature data via data streams 1776 (Data 1), 1778 (Data 2) and 1780 (Data 3) back to the operating control unit 274, which in turn directs the power source 1750 to independently control the separate zone-heating control units 1752, 1754 and 1756. The goal is to achieve and replicate the desired temperature curves over time as the sensory curve data logged during the human chef's certain (frying) step during the preparation of a dish.

FIG. 74 depicts a smart oven and computer control system that are coupled to the operating control unit 1790, allowing it to execute in real time a temperature profile for the oven appliance 1792, based on a previously stored sensory (temperature) curve. The operating control unit 1790 is able to control the doors (open/close) of the oven, track a temperature profile provided to it by a sensory curve, and, post-cooking, also self-clean. The temperature and humidity inside the oven are monitored through built-in temperature sensors 1794 in various locations generating a data stream 268 (Data 1), a temperature sensor in the form of a probe inserted into the ingredient to be cooked (meat, poultry, etc.) to monitor cooked temperature to infer degree of cooking completion, and additional humidity sensors 1796 creating a data stream. The operating control unit 1790 takes in all this sensory data and adjusts the oven parameters to allow it to properly track the sensory curves described in a previously stored and downloaded set of sensory curves for both (dependent) variables.

FIG. 75 depicts a computer-controlled ignition and control system setup 1798 for a control unit that modulates electric power 1858 to a charcoal grill to properly trace a sensory curve for one or more temperature and humidity sensors internally distributed inside the charcoal grill. The power control unit 1800 uses electronic control signals 1802 to start the grill, and signals 1804 and 1806 to adjust the grill-surface distance to the charcoal and the injection of water mist 1808 over the charcoal 1810, to adjust the temperature and humidity of the movable (up/down) rack 1812, respectively. The control unit 1800 bases its output signals 1804,1806 on a set of (five pictured here) data streams 1814 for humidity measurement 1816, 1818, 1820, 1822, 1824 from a set of distributed humidity sensors (1 through 5) 1826, 1828, 1830, 1832 and 1834 inside the charcoal grill, as well as data streams 1836 for temperature measurements 1840, 1842, 1844, 1846 and 1846 from distributed temperature sensors (1 through 5) 1848, 1850, 1852, 1854 and 1856.

FIG. 76 depicts a computer-controlled faucet 1860 to allow the computer to control flow rate, temperature and pressure of water fed by the faucet into the sink (or cookware). The faucet is controlled by a control unit 1862 that receives separate data streams 1862 (Data 1), 1864 (Data 2) and 1866 (Data 3), which correspond to water flow rate sensor 1868 providing Data 1, temperature sensor 1870 providing Data 2, and water pressure sensor 1872 providing Data 3 sensory data. The control unit 1862 then controls the supply of cold water 1874, with appropriate cold-water temperature and pressure displayed digitally on display 1876, and hot water 1878, with appropriate hot-water temperature and pressure displayed digitally on display 1880, to achieve the desired pressure, flow rate and temperature of water exiting at the spigot.

FIG. 77 depicts an embodiment of a fully instrumented robotic kitchen 1882 in top plan view. The standardized robotic kitchen is divided in to three levels, namely the top level, the counter level and the lower level, with each level containing equipment and appliances that have integrally mounted sensors 1884 and computer-control units 1886.

The top level contains multiple cabinet-type modules with different units to perform specific kitchen functions by way of built-in appliances and equipment. At the simplest level a shelf/cabinet storage area 82 is included, a cabinet volume 1320 used for storing and accessing cooking tools and utensils and other cooking and serving ware (cooking, baking, plating, etc.), a storage ripening cabinet volume 1298 for particular ingredients (e.g. fruit and vegetables, etc.), a chilled storage zone 88 for such items as lettuce and onions, a frozen storage cabinet volume 1302 for deep-frozen items, and another storage pantry zone 1304 for other ingredients and rarely used spices, etc. Each of the modules within the top level contains sensor units 1884 providing data to one or more control units 1886, either directly or by way of one or more central or distributed control computers, to allow for computer-controlled operations.

The counter level not only houses monitoring sensors 1884 and control units 1886, but also includes a serving counter 1306, a counter area with a sink 1308, another counter area 1310 with removable working surfaces (cutting/chopping board, etc.), a charcoal-based slatted grill 1312 and a multi-purpose area for other cooking appliances 1314, including a stove, cooker, steamer and poacher. Each of the modules within the counter level contains sensor units 1884 providing data to one or more control units 1886, either directly or by way of one or more central or distributed control computers, to allow for computer-controlled operations.

The lower level houses the combination convection oven and microwave as well as steamer, poacher and grill 1316, the dish-washer 1318, the hard automation controlled ingredient dispensers 82, and a larger cabinet volume 1320 that holds and stores additional frequently used cooking and baking ware, as well as tableware, flatware, utensils (whisks, knives, etc.) and cutlery. Each of the modules within the lower level contains sensor units 1884 providing data to one or more control units 1886, either directly or by way of one or more central or distributed control computers, to allow for computer-controlled operations.

FIG. 78 depicts a perspective view of one embodiment of a robotic kitchen cooking system 1890, with three different levels arranged from top to bottom, each fitted with multiple and distributed sensor units 1892 which feed data directly to one or more control units 1894, or to one or more central computers, which in turn use and process the sensory data to then command one or more control units 376 to act on their commands.

The top level contains multiple cabinet-type modules with different units to perform specific kitchen functions by way of built-in appliances and equipment. At the simplest level a shelf/cabinet storage pantry volume 1294 is included, a cabinet volume 1296 used for storing and accessing cooking tools and utensils and other cooking and serving ware (cooking, baking, plating, etc.), a storage ripening cabinet volume 1298 for particular ingredients (e.g. fruit and vegetables, etc.), a chilled storage zone 88 for such items as lettuce and onions, a frozen storage cabinet volume 1302 for deep-frozen items, and another storage pantry zone 1294 for other ingredients and rarely used spices, etc. Each of the modules within the top level contains sensor units 1892 providing data to one or more control units 1894, either directly or by way of one or more central or distributed control computers, to allow for computer-controlled operations.

The counter level not only houses monitoring sensors 1892 and control units 1894, but also includes a counter area with a sink and electronically controllable faucet 1308, another counter area 1310 with removable working surfaces for cutting/chopping on a board, etc., a charcoal-based slatted grill 1312, and a multi-purpose area for other cooking appliances 1314, including a stove, cooker, steamer and poacher. Each of the modules within the counter level contains sensor units 1892 providing data to one or more control units 1894, either directly or by way of one or more central or distributed control computers, to allow for computer-controlled operations.

The lower level houses the combination convection oven and microwave as well as steamer, poacher and grill 1316, the dish-washer 1318, the hard automation controlled ingredient dispensers 82, and a larger cabinet volume 1310 that holds and stores additional frequently used cooking and baking ware, as well as tableware, flatware, utensils (whisks, knives, etc.) and cutlery. Each of the modules within the lower level contains sensor units 1892 providing data to one or more control units 1896, either directly or by way of one or more central or distributed control computers, to allow for computer-controlled operations.

FIG. 79 is a flow diagram illustrating a second embodiment 1900 in the process of the robotic kitchen preparing a dish from one or more previously recorded parameter curves in a standardized robotic kitchen. In step 1902, a user, through a computer, selects a particular recipe for the robotic apparatus to prepare the food dish. In step 1904, the robotic food preparation engine is configured to retrieve the abstracted recipe for the selected recipe for food preparation. In step 1906, the robotic food preparation engine is configured to upload the selected recipe script into the computer's memory. In step 1908, the robotic food preparation engine calculates the ingredient availability. In step 1910, the robotic food preparation engine is configured to evaluate whether there is a shortage or a absence of ingredients to prepare the dish according to the selected recipe and serving schedule. The robotic food preparation engine sends an alert to place missing or insufficient ingredients on a shopping list or selects an alternate recipe in step 1912. The recipe selection by the user is confirmed in step 1914. In step 1916, the robotic food preparation engine is configured to send robotic instructions to the user to place food or ingredients into standardized containers and move them to the proper food preparation position. In step 1918, the user is given the option to select a real-time video-monitor projection, whether on a dedicated monitor or a holographic laser-based projection, to visually see each and every step of the recipe replication process based on all movements and processes executed by the chef while being recorded for playback in this instance. In step 1920, the robotic food preparation engine is configured to allow the user to start food preparation at start time "0" of their choosing and powering on the computerized control system for the standardized robotic kitchen. In step 1922 the user executes a replication of all the chef's actions based on the playback of the entire recipe creation process by the human chef on the monitor/projection screen, whereby semi-finished products are moved to designated cookware and appliances or intermediate storage containers for later use. In step 1924, the robotic apparatus in the standardized kitchen executes the individual processing steps according to sensory data curves or based on cooking parameters recorded when the chef executed the same step in the recipe preparation process in the chef studio's standardized robotic kitchen. In step 1926 the robotic food preparation's computer controls all the cookware and appliance settings in terms of temperature, pressure and humidity so as to replicate the required data curves over the entire cooking time based on the data captured and saved while the chef was preparing the recipe in the chef's studio standardized robotic kitchen. In step 1928 the user makes all simple movements so as to replicate the chef's steps and process movements as evidenced through the audio and video instructions relayed to the user over the monitor or projection screen. In step 1930 the robotic kitchen's cooking engine alerts the user when a particular cooking step based on a sensory curve or parameter set has been completed. Once the user and computer controller interactions result in the completion of all cooking steps in the recipe, the robotic cooking engine sends a request to terminate the computer-controlled portion of the replication process in step 1932. In step 1934, the user removes the completed recipe dish, plates and serves it, or continues any remaining cooking steps or processes manually.

FIG. 80 depicts the sensory data capturing process 1936 in the chef studio. The first step 1938 is for the chef to create or design the recipe. A next step 1940 requires that the chef input the name, ingredients, measurement and process descriptions for the recipe into the robotic cooking engine. The chef begins by loading all the required ingredients into designated standardized storage containers, appliances and select appropriate cookware in step 1942. The next step 1944 involves the chef setting the start time and switching on the sensory and processing systems to record all sensed raw data and allow for processing of the same. Once the chef starts cooking in step 1946, all embedded and monitoring sensor units and appliances report and send raw data to the central computer system to allow it to record in real time all relevant data during the entire cooking process 1948. Additional cooking parameters and audible chef comments are further recorded and stored as raw data in step 1950. A robotic cooking module abstraction (software) engine processes all raw data, including two- and three-dimensional geometric motion and object recognition data, to generate a machine-readable and machine-executable recipe script as part of step 1952. Upon completion of the chef studio recipe creation and cooking process by the chef, the robotic cooking engine generates a simulation visualization program 1954 replicating the movement and media data used for later recipe replication by a remote standardized robotic kitchen system. Based on the raw and processed data, and a confirmation of the simulated recipe execution visualization by the chef, hardware-specific applications are developed and integrated for different (mobile) operating systems and submitted to online software-application stores and/or marketplaces in step 1956, for direct single-recipe user purchase or multi-recipe purchase via subscription models.

FIG. 81 depicts the process and flow of a household robotic cooking process 1960. The first step 1962 involves the user selecting a recipe and acquiring the digital form of the recipe. In step 1964 the robotic cooking engine receives the recipe script containing machine-readable commands to cook the selected recipe. The recipe is uploaded in step 1966 to the robotic cooking engine with the script being placed in memory. Once stored, step 1968 calculates the necessary ingredients and determines their availability. In a logic check 1970 the system determines whether to alert the user or send a suggestion in step 1972 urging adding missing items to the shopping list or suggesting an alternative recipe to suit the available ingredients, or to proceed should sufficient ingredients be available. Once ingredient availability is verified in step 1974, the system confirms the recipe and the user is queried in step 1976 to place the required ingredients into designated standardized containers in a position where the chef started the recipe creation process originally (in the chef studio). The user is prompted to set the start time of the cooking process and to set the cooking system to proceed in step 1978. Upon start-up the robotic cooking system begins the execution of the cooking process 1980 in real time according to sensory curves and cooking parameter data provided in the recipe script data files. During the cooking process 1982, the computer, so as to replicate the sensory curves and parameter data files originally captured and saved during the chef studio recipe creation process, controls all appliances and equipment. Upon completion of the cooking process, the robotic cooking engine sends a reminder based on having decided the cooking process is finished in step 1984. Subsequently the robotic cooking engine sends a termination request 1986 to the computer-control system to terminate the entire cooking process, and in step 1988 the user removes the dish from the counter for serving or continues any remaining cooking steps manually.

FIG. 82 depicts another embodiment of a standardized robotic food preparation kitchen system 48. The computer 16 that runs the robotic cooking (software) engine 56, which includes a cooking operations control module 1990 that processes recorded, analyzed and abstracted sensory data from the recipe script, a visual command monitoring module 1992, and associated storage media and memory 1994 to store software files consisting of sensory curves and parameter data, interfaces with multiple external devices. These external devices include, but are not limited to, an instrumented kitchen working counter 90, the retractable safety glass 68, the instrumented faucet 92, cooking appliances with embedded sensors 74, cookware 1700 with embedded sensors (stored on a shelf or in a cabinet), standardized containers and ingredient storage units 78, a computer-monitored and computer-controllable storage unit 88, multiple sensors reporting on the process of raw food quality and supply 1996, hard automation modules 82 to dispense ingredients, and an operations control unit 1998.

FIG. 83 depicts an embodiment of a fully instrumented robotic kitchen 2000 in top plan view. The standardized robotic kitchen is divided into three levels, namely the top level, the counter level and the lower level, with each level containing equipment and appliances that have integrally mounted sensors 1884 and computer-control units 1886.

The top level contains multiple cabinet-type modules with different units to perform specific kitchen functions by way of built-in appliances and equipment. At the simplest level this includes a cabinet volume 1296 used for storing and accessing cooking tools and utensils and other cooking and serving ware (cooking, baking, plating, etc.), a storage ripening cabinet volume 1298 for particular ingredients (e.g. fruit and vegetables, etc.), a chilled storage zone 1300 for such items as lettuce and onions, a frozen storage cabinet volume 1302 for deep-frozen items, and another storage pantry zone 1304 for other ingredients and rarely used spices, etc. Each of the modules within the top level contains sensor units 1884 providing data to one or more control units 1886, either directly or by way of one or more central or distributed control computers, to allow for computer-controlled operations.

The counter level not only houses monitoring sensors 1884 and control units 1886, but also includes the one or more robotic arms, wrists and multi-fingered hands 72, a serving counter 1306, a counter area with a sink 1308, another counter area 1310 with removable working surfaces (cutting/chopping board, etc.), a charcoal-based slatted grill 1312 and a multi-purpose area for other cooking appliances 1314, including a stove, cooker, steamer and poacher. Each of the modules within the counter level contains sensor units 1884 providing data to one or more control units 1886, either directly or by way of one or more central or distributed control computers, to allow for computer-controlled operations.

The lower level houses the combination convection oven and microwave as well as steamer, poacher and grill 1316, the dish-washer 1318, the hard automation controlled ingredient dispensers 82, and a larger cabinet volume 3=378 that holds and stores additional frequently used cooking and baking ware, as well as tableware, flatware, utensils (whisks, knives, etc.) and cutlery. Each of the modules within the lower level contains sensor units 1884 providing data to one or more control units 1886, either directly or by way of one or more central or distributed control computers, to allow for computer-controlled operations.

FIG. 84 depicts an embodiment of a fully instrumented robotic kitchen 2000 in perspective view, with an overlaid coordinate frame designating the x-axis 1322, the y-axis 1324 and the z-axis 1326, within which all movements and locations will be defined and referenced to the origin (0,0,0). The standardized robotic kitchen is divided in to three levels, namely the top level, the counter level and the lower level, with each level containing equipment and appliances that have integrally mounted sensors 1884 and computer-control units 1886.

The top level contains multiple cabinet-type modules with different units to perform specific kitchen functions by way of built-in appliances and equipment.

At the simplest level this includes a cabinet volume 1294 used for storing and accessing standardized cooking tools and utensils and other cooking and serving ware (cooking, baking, plating, etc.), a storage ripening cabinet volume 1298 for particular ingredients (e.g. fruit and vegetables, etc.), a chilled storage zone 1300 for such items as lettuce and onions, a frozen storage cabinet volume 86 for deep-frozen items, and another storage pantry zone 1294 for other ingredients and rarely used spices, etc. Each of the modules within the top level contains sensor units 1884 providing data to one or more control units 1886, either directly or by way of one or more central or distributed control computers, to allow for computer-controlled operations.

The counter level not only houses monitoring sensors 1884 and control units 1886, but also includes the one or more robotic arms, wrists and multi-fingered hands 72, a counter area with a sink and electronic faucet 1308, another counter area 1310 with removable working surfaces (cutting/chopping board, etc.), a charcoal-based slatted grill 1312 and a multi-purpose area for other cooking appliances 1314, including a stove, cooker, steamer and poacher. Each of the modules within the counter level contains sensor units 1884 providing data to one or more control units 1886, either directly or by way of one or more central or distributed control computers, to allow for computer-controlled operations.

The lower level houses the combination convection oven and microwave as well as steamer, poacher and grill 1315, the dish-washer 1318, the hard automation controlled ingredient dispensers 82 (not shown), and a larger cabinet volume 1310 that holds and stores additional frequently used cooking and baking ware, as well as tableware, flatware, utensils (whisks, knives, etc.) and cutlery. Each of the modules within the lower level contains sensor units 1884 providing data to one or more control units 1886, either directly or by way of one or more central or distributed control computers, to allow for computer-controlled operations.

FIG. 85 depicts an embodiment of a fully instrumented robotic kitchen 2020 in top plan view. The standardized robotic kitchen is divided into three levels, namely the top level, the counter level and the lower level, with the top and lower levels containing equipment and appliances that have integrally mounted sensors 1884 and computer-control units 1886, and the counter level being fitted with one or more command and visual monitoring devices 2022.

The top level contains multiple cabinet-type modules with different units to perform specific kitchen functions by way of built-in appliances and equipment. At the simplest level this includes a cabinet volume 1296 used for storing and accessing standardized cooking tools and utensils and other cooking and serving ware (cooking, baking, plating, etc.), a storage ripening cabinet volume 1298 for particular ingredients (e.g. fruit and vegetables, etc.), a chilled storage zone 1300 for such items as lettuce and onions, a frozen storage cabinet volume 1302 for deep-frozen items, and another storage pantry zone 1304 for other ingredients and rarely used spices, etc. Each of the modules within the top level contains sensor units 1884 providing data to one or more control units 1886, either directly or by way of one or more central or distributed control computers, to allow for computer-controlled operations.

The counter level houses not only monitoring sensors 1884 and control units 1886, but also visual command monitoring devices 2020 while also including a serving counter 1306, a counter area with a sink 1308, another counter area 1310 with removable working surfaces (cutting/chopping board, etc.), a charcoal-based slatted grill 1312 and a multi-purpose area for other cooking appliances 1314, including a stove, cooker, steamer and poacher. Each of the modules within the counter level contains sensor units 1884 providing data to one or more control units 1886, either directly or by way of one or more central or distributed control computers, to allow for computer-controlled operations. Additionally, one or more visual command monitoring devices 2022 are also provided within the counter level for the purposes of monitoring the visual operations of the human chef in the studio kitchen as well as the robotic arms or human user in the standardized robotic kitchen, where data is fed to one or more central or distributed computers for processing and subsequent corrective or supportive feedback and commands sent back to the robotic kitchen for display or script-following execution.

The lower level houses the combination convection oven and microwave as well as steamer, poacher and grill 1316, the dish-washer 1318, the hard automation controlled ingredient dispensers 86 (not shown), and a larger cabinet volume 1320 that holds and stores additional frequently used cooking and baking ware, as well as tableware, flatware, utensils (whisks, knives, etc.) and cutlery. Each of the modules within the lower level contains sensor units 1884 providing data to one or more control units 1886, either directly or by way of one or more central or distributed control computers, to allow for computer-controlled operations.

FIG. 86 depicts an embodiment of a fully instrumented robotic kitchen 2020 in perspective view. The standardized robotic kitchen is divided into three levels, namely the top level, the counter level and the lower level, with the top and lower levels containing equipment and appliances that have integrally mounted sensors 1884 and computer-control units 1886, and the counter level being fitted with one or more command and visual monitoring devices 2022.

The top level contains multiple cabinet-type modules with different units to perform specific kitchen functions by way of built-in appliances and equipment. At the simplest level this includes a cabinet volume 1296 used for storing and accessing standardized cooking tools and utensils and other cooking and serving ware (cooking, baking, plating, etc.), a storage ripening cabinet volume 1298 for particular ingredients (e.g. fruit and vegetables, etc.), a chilled storage zone 1300 for such items as lettuce and onions, a frozen storage cabinet volume 86 for deep-frozen items, and another storage pantry zone 1294 for other ingredients and rarely used spices, etc. Each of the modules within the top level contains sensor units 1884 providing data to one or more control units 1886, either directly or by way of one or more central or distributed control computers, to allow for computer-controlled operations.

The counter level houses not only monitoring sensors 1884 and control units 1886, but also visual command monitoring devices 1316 while also including a counter area with a sink and electronic faucet 1308, another counter area 1310 with removable working surfaces (cutting/chopping board, etc.), a (smart) charcoal-based slatted grill 1312 and a multi-purpose area for other cooking appliances 1314, including a stove, cooker, steamer and poacher. Each of the modules within the counter level contains sensor units 1184 providing data to one or more control units 1186, either directly or by way of one or more central or distributed control computers, to allow for computer-controlled operations. Additionally, one or more visual command monitoring devices (not shown) are also provided within the counter level for the purposes of monitoring the visual operations of the human chef in the studio kitchen as well as the robotic arms or human user in the standardized robotic kitchen, where data is fed to one or more central or distributed computers for processing and subsequent corrective or supportive feedback and commands sent back to the robotic kitchen for display or script-following execution.

The lower level houses the combination convection oven and microwave as well as steamer, poacher and grill 1316, the dish-washer 1318, the hard automation controlled ingredient dispensers 86 (not showed)s, and a larger cabinet volume 1309 that holds and stores additional frequently used cooking and baking ware, as well as tableware, flatware, utensils (whisks, knives, etc.) and cutlery. Each of the modules within the lower level contains sensor units 1307 providing data to one or more control units 376, either directly or by way of one or more central or distributed control computers, to allow for computer-controlled operations.

FIG. 87A depicts another embodiment of a standardized robotic kitchen system 48. The computer 16 that runs the robotic cooking (software) engine 56 and a memory module102 for storing recipe script data and sensory curves and parameter data files, interfaces with multiple external devices. These external devices include, but are not limited to, instrumented robotic kitchen stations 2030, instrumented serving stations 2032, an instrumented washing and cleaning station 2034, instrumented cookware 2036, computer-monitored and computer-controllable cooking appliances 2038, special-purpose tools and utensils 2040, an automated shelf station 2042, an instrumented storage station 2044, an ingredient retrieval station 2046, a user console interface 2048, dual robotic arms 70, hard automation modules 82 to dispense ingredients, and a chef-recording device 2050.

FIG. 87B depicts one embodiment of a robotic kitchen cooking system 2060 in plan view, where the chef 49 or home-cook user 60 can access various cooking stations from multiple (four shown here) sides. A central storage station 2062 provides for different storage areas for various food items held at different temperatures (chilled/frozen) for optimum freshness, allowing access from all sides. Along the perimeter of the square arrangement of the current embodiment, the chef 49 or user 60 can access various cooking areas with modules that include, but are not limited to, a user/chef console 2064 for laying out the recipe and overseeing the processes, an ingredient access station 2066 including a scanner, camera and other ingredient characterization systems, an automatic shelf station 2068 for cookware/baking ware/tableware, a washing and cleaning station 2070 consisting of at least a sink and dish-washer unit, a specialized tool and utensil station 2072 for specialized tools required for particular techniques used in food or ingredient preparation, a warming station 2074 for warming or chilling served dishes and a cooking appliance station 2076 consisting of multiple appliances including, but not limited to, an oven, stove, grill, steamer, fryer, microwave, blender, dehydrator, etc.

FIG. 87C depicts a perspective view of the same embodiment of a robotic kitchen 48, allowing a chef 49 or a user 60 to gain access to multiple cooking stations and equipment from at least four different sides. A central storage station 2062 provides for different storage areas for various food items held at different temperatures (chilled/frozen) for optimum freshness, allowing access from all sides, and is located at an elevated level. An automatic shelf station 2068 for cookware/baking ware/tableware is located at a middle level beneath the central storage station 2062. At a lower level an arrangement of cooking stations and equipment is located that includes, but is not limited to, a user/chef console 2064 for laying out the recipe and overseeing the processes, an ingredient access station 2060 including a scanner, camera and other ingredient characterization systems, an automatic shelf station 2068 for cookware/baking ware/tableware, a washing and cleaning station 2070 consisting of at least a sink and dish-washer unit, a specialized tool and utensil station 2072 for specialized tools required for particular techniques used in food or ingredient preparation, a warming station 2076 for warming or chilling served dishes and a cooking appliance station 2076 consisting of multiple appliances including, but not limited to, an oven, stove, grill, steamer, fryer, microwave, blender, dehydrator, etc.

The following description of Figs. 88-99B is for information only and is not part of the claimed invention. FIG. 88 is a block diagram Illustrating a robotic human-emulator electronic intellectual property (IP) library 2100. The robotic human-emulator electronic IP library 2100 covers the various concepts in which the robotic apparatus is used as a means to replicate a human's particular skill set. More specifically, the robotic apparatus, which includes the pair of robotic hands 70 and the robotic arms 72, serves to replicate a set of specific human skills. In some way, the transfer to intelligence from a human can be captured through the use of the human's hands; the robotic apparatus then replicates the precise movements of the recorded movements in obtaining the same result. The robotic human-emulator electronic IP library 2100 includes a robotic human-culinary-skill replication engine 56, a robotic human-painting-skill replication engine 2102, a robotic human-musical-instrument-skill replication engine 2102, a robotic human-nursing-care-skill replication engine 2104, a robotic human-emotion recognizing engine 2106, a robotic human-intelligence replication engine 2108, an input/output module 2110, and a communication module 2112. The robotic human emotion recognizing engine 1358 is further described with respect to FIGS. 90, 91, 92 and 92.

FIG. 89 is a robotic human-emotion recognizing (or response) engine 2106, which includes a training block coupled to an application block via the bus 2120. The training block contains a human input stimuli module 2122, a sensor module 2124, a human emotion response module (to input stimuli) 2126, an emotion response recording module 2128, a quality check module 2130, and a learning machine module 2132. The application block contains an input analysis module 2134, a sensor module 2136, a response generating module 2138, and a feedback adjustment module 2140.

FIG. 90 is a flow diagram illustrating the process and logic flow of a robotic human emotion system 2150. In its first step 2151, the (software) engine receives sensory input from a variety of sources akin to the senses of a human, including vision, audible feedback, tactile and olfactory sensor data from the surrounding environment. In the decision step 2152, the decision is made whether to create a motion reflex, either resulting in a reflex motion 2153 or, if no reflex motion is required, step 2154 is executed, where specific input information or patterns or combinations thereof are recognized based on information or patterns stored in memory, which are subsequently translated into abstract or symbolic representations. The abstract and/or symbolic information is processed through a sequence of intelligence loops, which can be experience-based. Another decision step 2156 decides on whether a motion-reaction 2157 should be engaged based on a known and pre-defined behavior model and, if not, step 12158 is undertaken. In step 2158 the abstract and/or symbolic information is then processed through another layer of emotion- and mood-reaction behavior loops with inputs provided from internal memories, which can be formed through learning. Emotion is broken down into a mathematical formalism and programmed into robot, with mechanisms that can be described, and quantities that can be measured and analyzed (e.g. by capturing facial expressions of how quickly a smile forms and how long it lasts to differentiate between a genuine and a polite smile, or by detecting emotion based on the vocal qualities of a speaker, where the computer measures the pitch, energy and volume of the voice, as well as the fluctuations in volume and pitch from one moment to the next). There will thus be certain identifiable and measurable metrics to an emotional expression, where these metrics in the behavior of an animal or the sound of a human speaking or singing will have identifiable and measurable associated emotion attributes. Based on these identifiable and measurable metrics, the emotion engine can make a decision 2159 as to which behavior to engage, whether pre-learned or newly learned. The engaged or executed behavior and its effective result are updated in memory and added to the experience personality and natural behavior database 2160. In a follow-on step 2161, the experience personality data is translated into more human-specific information, which then allows him or her to execute the prescribed or resultant motion 2162.

FIGS. 91A-C are flow diagrams illustrating the process of comparing a person's emotional profile against a population of emotional profiles with hormones, pheromones and other. FIG. 91A describes the process of the emotional profile application, where a person's emotion parameters are monitored and extracted in 2182 from a user's general profile 2184, and based on a stimulus input, parameter value changes from a baseline value derived from a segmented timeline, taken and compared to those for an existing larger group under similar conditions. At step 1804, First level degrouping based on one or more criteria parameters (e.g., degroup based on the speed of change of people with the same emotional parameters). The process continues the emotion parameter degrouping and segregation into further steps of emotional parameter comparisons, which can include continued levels represented by a set of pheromones 1808, a set of micro-expressions 1809, the person's heart rate and perspiration 1810, pupil dilation 1811, observed reflexive movements 1812, awareness of overall body temperature 1813, and perceived situational pressure 1814. The degrouped emotion parameters are then used to determine a similar grouping of parameters 1815 for comparison purposes.

FIG. 91B depicts all the individual emotion groupings such as immediate emotions 1820 such as anger, secondary emotions 1821 such as fear, all the way through to N actual emotions. The next step 1823 then computes the associated emotion(s) in each group according to the associated emotional profile data, leading to the assessment 1824 of the intensity level of the emotional state, which allows the engine to then decide on the appropriate action 1825.

FIG. 91C depicts the automated process 1830 of mass group emotional profile development and learning. The process involves receiving new multi-source emotional profile and condition inputs from various sources 1831, with an associated quality-check of profile/parameter data change 1832. The plurality of the emotional profile data is stored in step 1833 and, using multiple machine learning techniques 1835, an iterative loop 1834 of analyzing and classifying each profile and data set into various groupings with matching (sub-)sets in the central database is carried out.

FIG. 92A is a block diagram illustrating the emotional detection and analysis 2220 of a person's emotional state by monitoring a set of hormones, a set of pheromones, and other key parameters. A person's emotional state can be detected by monitoring and analyzing the person's physiological signs, under a defined condition with internal and/or external stimulus, and assessing how these physiological signs change over a certain timeline. One embodiment of the degrouping process is based on one or more criteria parameters (e.g., degroup based on the speed of change of people with the same emotional parameters).

In one embodiment the emotional profile can be detected via machine learning methods based on statistical classifiers where the inputs are any measured levels of pheromones, hormones, or other features such as visual or auditory cues. If the set of features is $\{x_1, x_2, x_3, ..., x_n\}$ represented as a vector and y represents the emotional state, then the general form of an emotion-detection statistical classifier is:

$$y = \underset{j,l}{\arg\min}\left[\left(\sum_i \left\| y_i - f_{j,p_l}(\vec{x}_i) \right\|\right) + \beta(f_j, p_l)\right]$$

Where the function f is a decision tree, a neural network, a logistic regressor, or other statistical classifier described in the machine learning literature. The first term minimizes the empirical error (the error detected while training the classifier) and the second term minimizes the complexity - e.g. Occam's razor, finding the simplest function and set of parameters p for that function that yield the desired result.

Additionally, in order to determine which pheromones or other features make the most difference (add the most value) to predicting emotional state, an active-learning criterion can be added, generally expressed as:

$$\underset{\vec{x}_i \in \{\vec{x}_{k+1},...,\vec{x}_n\}}{\arg\min} \left(L(\hat{f}(\vec{x}_{test}, \hat{y}_{test})) \mid \vec{x}_i \cup \{\vec{x}_1,...,\vec{x}_k\}\right)$$

Where L is a "loss function", f is the same statistical classifier as in the previous equation, and y-hat is the known outcome. We measure whether the statistical classifier performs better (smaller loss function) by addition new features, and if so keep them, otherwise not.

Parameters, values and quantities that evolve over time can be assessed to create a human emotional profile by detecting the change or transformation from one moment to the next. There are identifiable qualities to an emotional expression. A robot with emotions in response to its environment could make quicker and more effective decisions, e.g. when a robot is motivated by fear or joy or desire it might make better decisions and attain the goals more effectively and efficiently.

The robotic emotion engine replicates the human hormone emotions and pheromone emotions, either individually or in combination. Hormone emotions refer to how hormones change inside of a person's body and how that affects a person's emotions. Pheromone emotions refer to pheromones that are outside a person's body, such as smell, that affect a person's emotions. A person's emotional profile can be constructed by understanding and analyzing the hormone and pheromone emotions. The robotic emotion engine attempts to understand a person's emotions such as anger and fear by using sensors to detect a person's hormone and pheromone profile.

There are nine key physiological sign parameters to be measured in order to build a person's emotional profile: (1) sets of hormones 2221, which are secreted internally and trigger various biochemical pathways that cause certain effects, e.g. adrenalin and insulin are hormones, (2) sets of pheromones 2222, which are secreted externally, and have an effect on another person in a similar way, e.g. androstenol, androstenone and androstadienone, (3) micro expression 2223, which is a brief, involuntary facial expression shown by humans according to emotions experienced, (4) the heart rate 2224 or heart beat, e.g., when a person's heart rate increases, (5) sweat 2225 (e.g., goose bumps) e.g. face blushes and palms get sweaty and in the state of being excited or nervous, (6) pupil dilation 2226 (and iris sphincter, biliary muscle), e.g. pupil dilation for a short time in response to feelings of fear, (7) reflex movement v7, which is the movement/action primarily controlled by the spinal arc, as a response to an external stimulus, e.g. jaw jerk reflex, (8) body temperature 2228 (9) pressure 2229. The analysis 2230 on how these parameters change over a certain time 2231 may reveal a person's emotional state and profile.

FIG. 92B is a block diagram illustrating a robot 1590 assessing and learning about a person's emotional behavior. The parameter readings are analyzed 2240 and divided into emotion and/or non-emotional responses, with internal stimulus 2242 and/or external stimulus 2244, e.g. pupillary light reflex is only at the level of the spinal cord, pupil size can change when a person is angry, in pain, or in love, whereas involuntary responses generally involve the brain as well. Use of central nervous system stimulant drugs and some hallucinogenic drugs can cause dilation of the pupils.

FIG. 93 is a block diagram illustrating a port device 2230 implanted in a person to detect and record the person's emotional profile. When measuring the physiological signs change, a person can monitor and record the emotional profile for a time period by pressing a button with a first tag on the time at which the change of emotion has started and touch the button again with a second tag when the emotion change has concluded. This process enables a computer to assess and learn about a person's emotional profile based on the change in emotion parameters. With data/information collected from mass amount of users the computer classifies all changes associated with each emotion and mathematically finds the significant and specific parameter changes that are attributable to particular emotion characteristics.

When a user experiences an emotion or mood swing, physiological parameters such as hormone, heart rate, sweat, pheromones can be detected and recorded with a port connecting to a person's body, above the skin and directly to the vein. The start time and end time of the mood change can be determined by the person himself or herself as the person's emotional state changes. For example, a person initiates four manual emotion cycles and creates four timelines within a week, and as determined by the person, the first one lasts 2.8 hour from the time he tags the start till the time he tags the end. The second cycle last for 2 hours, the third one last for 0.8 hours, and the fourth one last for 1.6 hours.

FIG. 94A depicts a robotic human-intelligence engine 2250. In the replication engine 1360, there are two main blocks, including a training block and an application block, both containing multiple additional modules all interconnected to each other over a common inter-module communication bus 72. The training block of the human-intelligence engine contains further modules, including, but not limited to, a sensor input module 1404, a human input stimuli module 1402, a human intelligence response module 1420 that reacts to input stimuli, an intelligence response recording module 1422, a quality check module 1410 and a learning machine module 1412. The application block of the human-intelligence engine contains further modules, including, but not limited to, an input analysis module 1414, a sensor input module 1404, a response generating module 1416, and a feedback adjustment module 1418.

FIG. 94B depicts the architecture of the robotic human intelligence system 1136. The system is split into both the cognitive robotic agent and the human skill execution module. Both modules share sensing feedback data 1482, as well as sensed motion data 1538 and modeled motion data 1539. The cognitive robotic agent module includes, but is not necessarily limited to, modules that represent a knowledge database 1531, interconnected to an adjustment and revision module 1534, with both being updated through a learning module 1535. Existing knowledge 1532 is fed into the execution monitoring module 1536 as well as existing knowledge 1533 being fed into the automated analysis and reasoning module 1537, where both receive sensing feedback data 1482 from the human skill execution module, with both also providing information to the learning module 1535. The human skill execution module consists of both a control module 1138 that bases its control signals on collecting and processing multiple sources of feedback (visual and auditory), as well as a module 1541 with a robot utilizing standardized equipment, tools and accessories.

FIG. 95A depicts the architecture for a robotic painting system 1440. Included in this system are both a studio robotic painting system 1441 and a commercial robotic painting system 1445, communicatively connected 1444 to allow software program files or applications for robotic painting to be delivered from the studio robotic painting system 1441 to the commercial robotic painting system 1445 based on a single-unit purchase or subscription-based payment basis. The studio robotic painting system 1441 consists of a (human) painting artist 1442 and a computer 1443 that is interfaced to motion and action sensing devices and painting-frame capture sensors to capture and record the artist's movements and processes, and store in memory 1380 the associated software painting files. The commercial robotic painting system 1445 is comprised of a user 1446 and a computer 1447 with a robotic painting engine capable of interfacing and controlling robotic arms to recreate the movements of the painting artist 1442 according to the software painting files or applications along with visual feedback for the purpose of calibrating a simulation model.

FIG. 95B depicts the robotic painting system architecture 1430. The architecture includes a computer 1420, which is interfaced to/with multiple external devices, including, but not limited to, motion sensing input devices and touch-frame 1424, a standardized workstation 1425, including an easel 1426, a rinsing sink 1427, an art horse 1428, a storage cabinet 1429 and material containers 1430 (paint, solvents, etc.), as well as standardized tools and accessories (brushes, paints, etc.) 1431, visual input devices (camera, etc.) 1432, and one or more robotic arms 1433.

The computer module 1420 includes modules that include, but are not limited to, a robotic painting engine 1352 interfaced to a painting movement emulator 1422, a painting control module 1421 that acts based on visual feedback of the painting execution processes, a memory module 1380 to store painting execution program files, algorithms 1423 for learning the selection and usage of the appropriate drawing tools, as well as an extended simulation validation and calibration module 1378.

FIG. 95C depicts a robotic human-painting skill-replication engine 1352. In the replication engine 1352, there are multiple additional modules all interconnected to each other over a common inter-module communication bus 72. The replication engine contains further modules, including, but not limited to, an input module 1370, a paint movement recording module 1372, an ancillary/additional sensory data recording module 1376, a painting movement programming module 1374, a memory module 1380 containing software execution procedure program files, an execution procedure module 1382 that generates execution commands based on recorded sensor data, a module 1400 containing standardized painting parameters, an output module 1388, and an (output) quality checking module 1378, all overseen by a software maintenance module 1386.

One embodiment of the art platform standardization is defined as follows. First, standardized position and orientation (xyz) of any kind of art tools (brushes, paints, canvas, etc.) in the art platform. Second, standardized operation volume dimensions and architecture in each art platform. Third, standardized art tools set in each art platform. Fourth, standardized robotic arms and hands with a library of manipulations in each art platform. Fifth, standardized three-dimensional vision devices for creating dynamic three-dimensional vision data for painting recording and execution tracking and quality check function in each art platform. Sixth, standardized type/producer/mark/ of all using paints during particular painting execution. Seventh, standardized type/producer/mark/size of canvas during particular painting execution.

One main purpose to have Standardized Art Platform is to achieve the same result of the painting process (i.e., the same painting) executing by the original painter and afterward duplicated by robotic Art Platform. Several main points to emphasize in using the standardized Art Platform: (1) have the same timeline (same sequence of manipulations, same initial and ending time of each manipulation, same speed of moving object between manipulations) of Painter and automatic robotic execution; and (2) there are quality checks (3D vision, sensors) to avoid any fail result after each manipulation during the painting process. Therefore the risk of not having the same result is reduced if the painting was done at the standardized art platform. If a non-standardized art platform is used, this will increase the risk of not having the same result (i.e. not the same painting) because adjustment algorithms may be required when the painting is not executed at not the same volume, with the same art tools, with the same paint or with the same canvas in the painter studio as in the robotic art platform.

FIG. 96A depicts the studio painting system and program commercialization process 1450. A first step 1451 is for the human painting artist to make decisions pertaining to the artwork to be created in the studio robotic painting system, which includes deciding on such topics as the subject, composition, media, tools and equipment, etc. The artist inputs all this data to the robotic painting engine in step 1452, after which in step 1453 the artist sets up the standardized workstation, tools and equipment and accessories and materials, as well as the motion and visual input devices as required and spelled out in the set-up procedure. The artist sets the starting point of the process and turns on the studio painting system in step 1454, after which the artist then begins step 1455 of actually painting. In step 1456 the studio painting system records the motions and video of the artist's movements in real time and in a known xyz coordinate frame during the entire painting process. The data collected in the painting studio is then stored in step 1457, allowing the robotic painting engine to generate a simulation program 1458 based on the stored movement and media data. The robotic painting program execution files or applications for the produced painting are developed and integrated for use by different operating systems and mobile systems and submitted to App-stores or other marketplace locations for sale as a single-use purchase or on a subscription basis.

FIG. 96B depicts the logical execution flow 1460 for the robotic painting engine. As a first step the user selects a painting title in step 1461, with the input being received by the robotic painting engine in step 1462. The robotic painting engine uploads the painting execution program files in step 1463 into the onboard memory, and then proceeds to step 1464, where it calculates the necessary tools and accessories. A checking step 1465 provides the answers as to whether there is a shortage of tools or accessories and materials; should there be a shortage, the system sends an alert 1466 or a suggestion to the user for an ordering list or an alternate painting. In the case of no shortage, the engine confirms the selection in step 1467, allowing the user to proceed to step 1468, comprised of setting up the standardized workstation, motion and visual input devices using the step-by-step instruction contained within the painting execution program files. Once completed, the robotic painting engine performs a check-up step 1469 to verify the proper setup; should it detect an error through step 1470, the system engine will send an error alert 1472 to the user and prompt the user to re-check the setup and correct any detected deficiencies. If the check passes with no errors detected, the setup will be confirmed by the engine in step 1471, allowing it to prompt the user in step 1473 to set the starting point and power on the replication and visual feedback and control systems. In step 1474 the robotic arm(s) will execute the steps specified in the painting execution program file, including movements, usage of tools and equipment at an identical pace as specified by the painting program execution files. A visual feedback step 1475 monitors the execution of the painting replication process against the controlled parameter data that define a successful execution of the painting process and its outcomes. The robotic painting engine further takes the step 1476 of simulation model verification to increase the fidelity of the replication process, with the goal of the entire replication process to reach an identical final state as captured and saved by the studio painting system. Once the painting is completed, a notification 1477 is sent to the user, including drying and curing time for the applied materials (paint, paste, etc.)

FIG. 97A depicts a human musical-instrument skill-replication engine 1354. In the replication engine 1354, there are multiple additional modules all interconnected to each other over a common inter-module communication bus 72. The replication engine contains further modules, including, but not limited to, an audible (digital) audio input module 1370, a human's musical instrument playing movement recording module 1390, an ancillary/additional sensory data recording module 1376, a musical instrument playing movement programming module 1392, a memory module 1380 containing software execution procedure program files, an execution procedure module 1382 that generates execution commands based on recorded sensor data, a module 1394 containing standardized musical instrument playing parameters (e.g. pace, pressure, angles, etc.), an output module 1388, and an (output) quality checking module 1378, all overseen by a software maintenance module 1386.

FIG. 96B depicts the process carried out and the logical flow for a musician replication engine 1480. To start, in step 1481 a user selects a music title and/or composer, and is then queried in step 1482 whether the selection should be made by the robotic engine or through interaction with the human.

In the case the user selects the robot engine to select the title/composer in step 1482, the engine uses its own interpretation of creativity in step 1492, to offer the human user to provide input to the selection process in step 1493. Should the human decline providing input, the robotic musician engine uses settings such as manual inputs to tonality, pitch and instrumentation as well as melodic variation in step 1499, to gather the necessary input in step 1130 to generate and upload selected instrument playing execution program files in step 1501, allowing the user to select the preferred one in step 1503, after the robotic musician engine has confirmed the selection in step 1502. The choice made by the human is then stored as a personal choice in the personal profile database in step 1504. Should the human decide to provide input to the query in step 1493, the user will be able in step 1493 to provide additional emotional input to the selection process (facial expressions, photo, news article, etc.). The input from step 194 is received by the robotic musician engine in step 1495, allowing it to proceed to step 1496, where the engine carries out a sentiment analysis related to all available input data and uploads a music selection based on the mood and style appropriate to the emotional input data from the human. Upon confirmation of selection for the uploaded music selection in step 1497 by the robotic musician engine, the user may select the 'start' button to play the program file for the selection in step 1498.

In the case where the human wants to be intimately involved in the selection of the title/composer, the system provides a list of performers for the selected title to the human on a display in step 1483. In step 1484 the user selects the desired performer, a choice input that the system receives in step 1485. In step 1486 the robotic musician engine generates and uploads the instrument playing execution program files, and proceeds in step 1487 to compare potential limitations between a human and a robotic musician's playing performance on a particular instrument, thereby allowing it to calculate a potential performance gap. A checking step 1488 decides whether there exists a gap. Should there be a gap, the system will suggest other selections based on the user's preference profile in step 1489. Should there be no performance gap, the robotic musician engine will confirm the selection in step 1490 and allow the user to proceed to step 1491, where the user may select the 'start' button to play the program file for the selection.

FIG. 98 depicts a human nursing-care skill-replication engine 1356. In the replication engine 1356, there are multiple additional modules all interconnected to each other over a common inter-module communication bus 72. The replication engine contains further modules, including, but not limited to, an input module 1370, a nursing care movement recording module 1396, an ancillary/additional sensory data recording module 1376, a nursing care movement programming module 1398, a memory module 1380 containing software execution procedure program files, an execution procedure module 1382 that generates execution commands based on recorded sensor data, a module 1400 containing standardized nursing care parameters, an output module 1388, and an (output) quality checking module 1378, all overseen by a software maintenance module 1386.

FIG. 99A depicts a robotic human nursing care system process 1132. A first step 1511 involves a user (care receiver or family/friends) creating an account for the care receiver, providing personal data (name, age, ID, etc.). A biometric data collection step 1512 involves the collection of personal data, including facial images, fingerprints, voice samples, etc. The user then enters contact information for emergency contact in step 1513. The robotic engine receives all this input data to build up a user account and profile in step 1514. Should the user not be under a remote health monitoring program as determined in step 1515, the robot engine sends an account creation confirmation message and a self-downloading manual file/app to the user's tablet, TV, smartphone or other device for future touch-screen or voice-based command interface purposes, as part of step 1521. Should the user be part of a remote health-monitoring program, the robot engine will request in step 1516 permission to access medical records. As part of step 1517 the robotic engine connects with the user's hospital and physician's offices, laboratories and medical insurance databases to receive the medical history, prescription, treatment, and appointments data for the user and generates a medical care execution program for storage in a file particular to that user. As a next step 1518, the robotic engine connects with any and all of the user's wearable medical devices (such as blood pressure monitors, pulse and blood-oxygen sensors), or even electronically controllable drug dispensing system (whether oral or by injection) to allow for continuous monitoring. As a follow-on step the robotic engine receives medical data file and sensory inputs allowing it to generate one or more medical care execution program files for the user's account in step 1519. The next step 1134 involves the creation of a secure cloud storage data space for the user's information, daily activities, associated parameters and any past or future medical events or appointments. As before in step 1521, the robot engine sends an account creation confirmation message and a self-downloading manual file/app to the user's tablet, TV, smartphone or other device for future touch-screen or voice-based command interface purposes.

FIG. 99B depicts a continuation of the robotic human nursing care system process 1132 first started with FIG. 99A, but which is now related to a physically present robot in the user's environment. As a first step 1522, the user turns on the robot in a default configuration and location (e.g. charging station). In task 1523 the robot receives a user's voice or touch-screen-based command to execute one specific or groups of commands or actions. In step 1524, the robot carries out particular tasks and activities based on engagement with the user using voice and facial recognition commands and cues, responses or behaviors of the user, basing its decisions on such factors as task-urgency and task-priority based on a knowledge of the particular or overall situation. In task 1525 the robot carries out typical fetching, grasping and transportation of one or more items, completing the tasks using object recognition and environmental sensing, localization and mapping algorithms to optimize movements along obstacle-free paths, possibly even to serve as an avatar to provide audio/video teleconferencing ability for the user or interface with any controllable home appliance. The robot is continually monitoring the user's medical condition based on sensory input and the user's profile data, and monitors for possible symptoms of potential medically dangerous conditions, with the ability to inform first responders or family members about any potential situations requiring their immediate attention. The robot continually checks in step 1526 for any open or remaining task and always remains ready to react to any user input from step 1522.

FIG. 100 is a block diagram illustrating an example of a computer device, as shown in 224, on which computer-executable instructions to perform the methodologies discussed herein may be installed and run. As alluded to above, the various computer-based devices discussed in connection with the present invention may share similar attributes. Each of the computer devices in 24 is capable of executing a set of instructions to cause the computer device to perform any one or more of the methodologies discussed herein. The computer devices 12 may represent any or all of the 24 server 10, or any network intermediary devices. Further, while only a single machine is illustrated, the term "machine" shall also be taken to include any collection of machines that individually or jointly execute a set (or multiple sets) of instructions to perform any one or more of the methodologies discussed herein. The example computer system 224 includes a processor 226 (e.g., a central processing unit (CPU), a graphics processing unit (GPU), or both), a main memory 228 and a static memory 230, which communicate with each other via a bus 232. The computer system 224 may further include a video display unit 234 (e.g., a liquid crystal display (LCD)). The computer system 224 also includes an alphanumeric input device 236 (e.g., a keyboard), a cursor control device 238 (e.g., a mouse), a disk drive unit 240, a signal generation device 242 (e.g., a speaker), and a network interface device 248.

The disk drive unit 2240 includes a machine-readable medium 244 on which is stored one or more sets of instructions (e.g., software 246) embodying any one or more of the methodologies or functions described herein. The software 246 may also reside, completely or at least partially, within the main memory 244 and/or within the processor 226 during execution thereof the computer system 224, the main memory 228, and the instruction-storing portions of processor 226 constituting machine-readable media. The software 246 may further be transmitted or received over a network 18 via the network interface device 248.

While the machine-readable medium 244 is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any tangible medium that is capable of storing a set of instructions for execution by the machine and that cause the machine to perform any one or more of the methodologies of the present invention. The term "machine-readable medium" shall accordingly be taken to include, but not be limited to, solid-state memories, and optical and magnetic media.

In general terms, there may be considered a method of motion capture and analysis for a robotics system, comprising sensing a sequence of observations of a person's movements by a plurality of robotic sensors as the person prepares a product using working equipment; detecting in the sequence of observations mini-manipulations corresponding to a sequence of movements carried out in each stage of preparing the product; transforming the sensed sequence of observations into computer readable instructions for controlling a robotic apparatus capable of performing the sequences of mini-manipulations; storing at least the sequence of instructions for mini-manipulations to electronic media for the product. This may be repeated for multiple products. The sequence of mini-manipulations for the product is preferably stored as an electronic record. The mini-manipulations may be abstracted parts of a multi-stage process, such as cutting an object, heating an object (in an oven or on a stove with oil or water), or similar. Then, the method may further comprise: transmitting the electronic record for the product to a robotic apparatus capable of replicating the sequence of stored mini-manipulations, corresponding to the original actions of the person. Moreover, the method may further comprise executing the sequence of instructions for mini-manipulations for the product by the robotic apparatus, thereby obtaining substantially the same result as the original product prepared by the person.

In another general aspect, there may be considered a method of operating a robotics apparatus, comprising providing a sequence of pre-programmed instructions for standard mini-manipulations, wherein each mini-manipulation produces at least one identifiable result in a stage of preparing a product; sensing a sequence of observations corresponding to a person's movements by a plurality of robotic sensors as the person prepares the product using equipment; detecting standard mini-manipulations in the sequence of observations, wherein a mini-manipulation corresponds to one or more observations, and the sequence of mini-manipulations corresponds to the preparation of the product; transforming the sequence of observations into robotic instructions based on software implemented methods for recognizing sequences of pre-programmed standard mini-manipulations based on the sensed sequence of person motions, the mini-manipulations each comprising a sequence of robotic instructions and the robotic instructions including dynamic sensing operations and robotic action operations; storing the sequence of mini-manipulations and their corresponding robotic instructions in electronic media. Preferably, the sequence of instructions and corresponding mini-manipulations for the product are stored as an electronic record for preparing the product. This may be repeated for multiple products. The method may further include transmitting the sequence of instructions (preferably in the form of the electronic record) to a robotics apparatus capable of replicating and executing the sequence of robotic instructions. The method may further comprise executing the robotic instructions for the product by the robotics apparatus, thereby obtaining substantially the same result as the original product prepared by the human. Where the method is repeated for multiple products, the method may additionally comprise providing a library of electronic descriptions of one or more products, including the name of the product, ingredients of the product and the method (such as a recipe) for making the product from ingredients.

Another generalized aspect provides a method of operating a robotics apparatus comprising receiving an instruction set for a making a product comprising of a series of indications of mini-manipulations corresponding to original actions of a person, each indication comprising a sequence of robotic instructions and the robotic instructions including dynamic sensing operations and robotic action operations; providing the instruction set to a robotic apparatus capable of replicating the sequence of mini-manipulations; executing the sequence of instructions for mini-manipulations for the product by the robotic apparatus, thereby obtaining substantially the same result as the original product prepared by the person.

A further generalized method of operating a robotic apparatus may be considered in a different aspect, comprising executing a robotic instructions script for duplicating a recipe having a plurality of product preparation movements; determining if each preparation movement is identified as a standard grabbing action of a standard tool or a standard object, a standard hand-manipulation action or object, or a non-standard object; and for each preparation movement, one or more of: instructing the robotic cooking device to access a first database library if the preparation movement involves a standard grabbing action of a standard object; instructing the robotic cooking device to access a second database library if the food preparation movement involves a standard hand-manipulation action or object; and instructing the robotic cooking device to create a three-dimensional model of the non-standard object if the food preparation movement involves a non-standard object. The determining and/or instructing steps may be particularly implemented at or by a computer system. The computing system may have a processor and memory.

Another aspect may be found in a method for product preparation by robotic apparatus, comprising replicating a recipe by preparing a product (such as a food dish) via the robotic apparatus, the recipe decomposed into one or more preparation stages, each preparation stage decomposed into a sequence of mini-manipulations and active primitives, each mini-manipulation decomposed into a sequence of action primitives. Preferably, each mini manipulation has been (successfully) tested to produce an optimal result for that mini manipulation in view of any variations in positions, orientations, shapes of an applicable object, and one or more applicable ingredients.

A further method aspect may be considered in a method for recipe script generation, comprising receiving filtered raw data from sensors in the surroundings of a standardized working environment module, such as a kitchen environment; generating a sequence of script data from the filtered raw data; and transforming the sequence of script data into machine-readable and machine-executable commands for preparing a product, the machine-readable and machine-executable commands including commands for controlling a pair of robotic arms and hands to perform a function. The function may be from the group consisting of one or more cooking stages, one or more mini-manipulations, and one or more action primitives. A recipe script generation system comprising hardware and/or software features configured to operate in accordance with this method may also be considered.

In any of these aspects, the following may be considered. The preparation of the product normally uses ingredients. Executing the instructions typically includes sensing properties of the ingredients used in preparing the product. The product may be a food dish in accordance with a (food) recipe (which may be held in an electronic description) and the person may be a chef. The working equipment may comprise kitchen equipment. These methods may be used in combination with any one or more of the other features described herein. One, more than one or all of the features of the aspects may be combined, so a feature from one aspect may be combined with another aspect for example. Each aspect may be computer-implemented and there may be provided a computer program configured to perform each method when operated by a computer or processor. Each computer program may be stored on a computer-readable medium. Additionally or alternatively, the programs may be partially or fully hardware-implemented. The aspects may be combined. There may also be provided a robotics system configured to operate in accordance with the method described in respect of any of these aspects.

In another aspect, there may be provided a robotics system, comprising: a multi-modal sensing system capable of observing human motions and generating human motions data in a first instrumented environment; and a processor (which may be a computer), communicatively coupled to the multi-modal sensing system, for recording the human motions data received from the multi-modal sensing system and processing the human motions data to extract motion primitives, preferably such that the motion primitives define operations of a robotics system. The motion primitives may be mini-manipulations, as described herein (for example in the immediately preceding paragraphs) and may have a standard format. The motion primitive may define specific types of action and parameters of the type of action, for example a pulling action with a defined starting point, end point, force and grip type. Optionally, there may be further provided a robotics apparatus, communicatively coupled to the processor and/or multi-modal sensing system. The robotics apparatus may be capable of using the motion primitives and/or the human motions data to replicate the observed human motions in a second instrumented environment.

In a further aspect, there may provided a robotics system, comprising: a processor (which may be a computer), for receiving motion primitives defining operations of a robotics system, the motion primitives being based on human motions data captured from human motions; and a robotics system, communicatively coupled to the processor, capable of using the motion primitives to replicate human motions in an instrumented environment. It will be understood that these aspects may be further combined.

A further aspect may be found in a robotics system comprising: first and second robotic arms; first and second robotic hands, each hand having a wrist coupled to a respective arm, each hand having a palm and multiple articulated fingers, each articulated finger on the respective hand having at least one sensor; and first and second gloves, each glove covering the respective hand having a plurality of embedded sensors. Preferably the robotics system is a robotic kitchen system.

There may further be provided, in a different but related aspect, a motion capture system, comprising: a standardized working environment module, preferably a kitchen; plurality of multi-modal sensors having a first type of sensors configured to be physically coupled to a human and a second type of sensors configured to be spaced away from the human. One or more of the following may be the case: the first type of sensors may be for measuring the posture of human appendages and sensing motion data of the human appendages; the second type of sensors may be for determining a spatial registration of the three-dimensional configurations of one or more of the environment, objects, movements, and locations of human appendages; the second type of sensors may be configured to sense activity data; the standardized working environment may have connectors to interface with the second type of sensors; the first type of sensors and the second type of sensors measure motion data and activity data, and send both the motion data and the activity data to a computer for storage and processing for product (such as food) preparation.

An aspect may additionally or alternatively be considered in a robotic hand coated with a sensing gloves, comprising: five fingers; and a palm connected to the five fingers, the palm having internal joints and a deformable surface material in three regions; a first deformable region disposed on a radial side of the palm and near the base of the thumb; a second deformable region disposed on a ulnar side of the palm, and spaced apart from the radial side; and a third deformable region disposed on the palm and extend across the base of the fingers. Preferably, the combination of the first deformable region, the second deformable region, the third deformable region, and the internal joints collectively operate to perform a mini manipulation, particularly for food preparation.

In respect of any of the above system, device or apparatus aspects, there may further be provided method aspects comprising steps to carry out the functionality of the system. Additionally or alternatively, optional features may be found based on any one or more of the features described herein with respect to other aspects

The present invention has been described in particular detail with respect to possible embodiments. Those skilled in the art will appreciate that the invention may be practiced in other embodiments. The particular naming of the components, capitalization of terms, the attributes, data structures, or any other programming or structural aspect is not mandatory or significant, and the mechanisms that implement the invention or its features may have different names, formats, or protocols. The system may be implemented via a combination of hardware and software, as described, or entirely hardware elements, or entirely in software elements. The particular division of functionality between the various systems components described herein is merely example and not mandatory; functions performed by a single system component may instead be performed by multiple components, and functions performed by multiple components may instead be performed by a single component.

In various embodiments, the present invention can be implemented as a system or a method for performing the above-described techniques, either singly or in any combination.. The combination of any specific features described herein is also provided, even if that combination is not explicitly described. In another embodiment, the present invention can be implemented as a computer program product comprising a computer-readable storage medium and computer program code, encoded on the medium, for causing a processor in a computing device or other electronic device to perform the above-described techniques.

As used herein, any reference to "one embodiment" or to "an embodiment" means that a particular feature, structure, or characteristic described in connection with the embodiments is included in at least one embodiment of the invention. The appearances of the phrase "in one embodiment" in various places in the specification are not necessarily all referring to the same embodiment.

Some portions of the above are presented in terms of algorithms and symbolic representations of operations on data bits within a computer memory. These algorithmic descriptions and representations are the means used by those skilled in the data processing arts to most effectively convey the substance of their work to others skilled in the art. An algorithm is generally perceived to be a self-consistent sequence of steps (instructions) leading to a desired result. The steps are those requiring physical manipulations of physical quantities. Usually, though not necessarily, these quantities take the form of electrical, magnetic or optical signals capable of being stored, transferred, combined, compared, transformed, and otherwise manipulated. It is convenient at times, principally for reasons of common usage, to refer to these signals as bits, values, elements, symbols, characters, terms, numbers, or the like. Furthermore, it is also convenient at times to refer to certain arrangements of steps requiring physical manipulations of physical quantities as modules or code devices, without loss of generality.

It should be borne in mind, however, that all of these and similar terms are to be associated with the appropriate physical quantities and are merely convenient labels applied to these quantities. Unless specifically stated otherwise as apparent from the following discussion, it is appreciated that, throughout the description, discussions utilizing terms such as "processing" or "computing" or "calculating" or "displaying" or "determining" or the like refer to the action and processes of a computer system, or similar electronic computing module and/or device, that manipulates and transforms data represented as physical (electronic) quantities within the computer system memories or registers or other such information storage, transmission, or display devices.

Certain aspects of the present invention include process steps and instructions described herein in the form of an algorithm. It should be noted that the process steps and instructions of the present invention could be embodied in software, firmware, and/or hardware, and, when embodied in software, can be downloaded to reside on and be operated from different platforms used by a variety of operating systems.

The present invention also relates to an apparatus for performing the operations herein. This apparatus may be specially constructed for the required purposes, or it may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers and/or other electronic devices referred to in the specification may include a single processor or may be architectures employing multiple processor designs for increased computing capability.

The algorithms and displays presented herein are not inherently related to any particular computer, virtualized system, or other apparatus. Various general-purpose systems may also be used with programs in accordance with the teachings herein, or it may prove convenient to construct more specialized apparatus to perform the required method steps. The required structure for a variety of these systems will be apparent from the description provided herein. In addition, the present invention is not described with reference to any particular programming language. It will be appreciated that a variety of programming languages may be used to implement the teachings of the present invention as described herein, and any references above to specific languages are provided for disclosure of enablement and best mode of the present invention.

In various embodiments, the present invention can be implemented as software, hardware, and/or other elements for controlling a computer system, computing device, or other electronic device, or any combination or plurality thereof. Such an electronic device can include, for example, a processor, an input device (such as a keyboard, mouse, touchpad, trackpad, joystick, trackball, microphone, and/or any combination thereof), an output device (such as a screen, speaker, and/or the like), memory, long-term storage (such as magnetic storage, optical storage, and/or the like), and/or network connectivity, according to techniques that are well known in the art. Such an electronic device may be portable or non-portable. Examples of electronic devices that may be used for implementing the invention include a mobile phone, personal digital assistant, smartphone, kiosk, desktop computer, laptop computer, consumer electronic device, television, set-top box, or the like. An electronic device for implementing the present invention may use an operating system such as, for example, iOS available from Apple Inc. of Cupertino, Calif., Android available from Google Inc. of Mountain View, Calif., Microsoft Windows 7 available from Microsoft Corporation of Redmond, Wash., webOS available from Palm, Inc. of Sunnyvale, Calif., or any other operating system that is adapted for use on the device. In some embodiments, the electronic device for implementing the present invention includes functionality for communication over one or more networks, including for example a cellular telephone network, wireless network, and/or computer network such as the Internet.

Some embodiments may be described using the expression "coupled" and "connected" along with their derivatives. It should be understood that these terms are not intended as synonyms for each other. For example, some embodiments may be described using the term "connected" to indicate that two or more elements are in direct physical or electrical contact with each other. In another example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

As used herein, the terms "comprises," "comprising," "includes," "including," "has," "having" or any other variation thereof are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The terms "a" or "an," as used herein, are defined as one or more than one. The term "plurality," as used herein, is defined as two or more than two. The term "another," as used herein, is defined as at least a second or more.

An ordinary artisan should require no additional explanation in developing the methods and systems described herein but may find some possibly helpful guidance in the preparation of these methods and systems by examining standardized reference works in the relevant art.

While the invention has been described with respect to a limited number of embodiments, those skilled in the art, having benefit of the above description, will appreciate that other embodiments may be devised which do not depart from the scope of the present invention as described herein. It should be noted that the language used in the specification has been principally selected for readability and instructional purposes, and may not have been selected to delineate or circumscribe the inventive subject matter. The terms used should not be construed to limit the invention to the specific embodiments disclosed in the specification and the claims but should be construed to include all methods and systems that operate under the claims set forth herein below. Accordingly, the invention is not limited by the disclosure, but instead its scope is to be determined entirely by the following claims.

## Claims

**1.** A computer-implemented method for generating an electronic record for operating a robotics apparatus, the method comprising the steps of:

providing sequences of pre-programmed instructions for mini-manipulations in a mini-manipulation library (116), wherein each mini-manipulation produces at least one functional result in a stage of preparing at least one food dish;

sensing a sequence of observations corresponding to a chefs movements by a plurality of sensors as the chef prepares a food dish using ingredients and kitchen equipment or acquiring user input (142, 144, 146);

detecting mini-manipulations in the sequence of observations or associated with the acquired user input, wherein a detected mini-manipulation corresponds to one or more observations in the sequence of observations or to the acquired user input, and the detected mini-manipulations correspond to the preparation of the food dish;
transforming the sensed sequence of observations or the acquired user input into robotic instructions based on software-implemented methods for recognizing the sequences of pre-programmed instructions for the mini-manipulations detected in the sensed sequence of observations corresponding to the chefs movements or the acquired user input, the mini-manipulations each comprising a sequence of robotic instructions, and the robotic instructions including dynamic sensing operations and robotic action operations; and
storing the detected mini-manipulations and their corresponding robotic instructions in electronic media as a respective electronic record for preparing the food dish.

**2.** The method of claim 1, further comprising:

transmitting the respective electronic record for preparing the food dish to the robotics apparatus capable of replicating and executing the mini-manipulations and their corresponding robotic instructions; and
executing the robotic instructions for preparing the food dish by the robotics apparatus, thereby obtaining substantially the same result as the food dish originally prepared by the chef.

**3.** The method of claim 2, further comprising:
adjusting parameters for the robotic instructions based on dynamic sensor observations recorded and transformed into adjusted parameters in the robotic instructions as the robotic apparatus executes the robotic instructions.

**4.** The method of claim 3, wherein adjusting parameters for the robotic instructions comprises:
compensating for variability in the ingredients in order to obtain essentially the same result in preparing the food dish.

**5.** The method of claim 1, further comprising:
generalizing the robotic instructions for preparing the food dish by one or more machine learning mechanisms implemented in software.

**6.** The method of claim 5, wherein the one or more machine learning mechanisms comprise robotic case-based learning or robotic reinforcement learning.

**7.** The method of claim 5, wherein generalizing the robotic instructions further comprises:

providing a plurality of alternative robotic instructions for at least one of the mini-manipulations; and
evaluating the plurality of alternative robotic instructions for the at least one of the mini-manipulations to determining a preferred mini-manipulation.

**8.** The method of claim 1, wherein the mini-manipulations in the mini-manipulation library (116) are parameterized and pre-tested (936) by:

determining (938) possible parameter combinations to perform a particular mini-manipulation;
executing (940) the particular mini-manipulation with one possible parameter combination; and
determining (940) whether the execution is a success or a failure.

**9.** The method of claim 1, wherein the mini-manipulations in the mini-manipulation library (116) are created and pre-tested by:

creating (872) a new mini-manipulation with a plurality of action primitives;
selecting (878, 906) a full possible range of key parameters associated with the new mini-manipulation;
for each key parameter of the full possible range of key parameters, testing and validating (880) each value of the key parameter with all possible combinations with other key parameters;
determining (882) whether a particular set of key parameter combinations produces a reliable result; and
if the determination is positive, storing (884) the particular set of key parameter combinations in a temporary location library.

**10.** The method of claim 9, further comprising:

repeatedly testing and validating (892) the particular set of key parameter combinations for a number of times;
computing (894) a number of failed results during the repeated testing of the particular set of key parameter combinations;
storing (898) test results of the particular set of key parameter combinations;
determining (899) a best or optimal set of parameter combinations; and
storing (899) the best or optimal set of parameter combinations for use in the mini-manipulation library (116), the best or optimal set of parameter combinations being associated with the new mini-manipulation.

**11.** The method of claim 1, wherein each of the mini-manipulations comprises a collection of or sequence of one or more action primitives which act together to accomplish a functional outcome that advances toward a specific result in preparing the food dish.

**12.** The method of claim 2, wherein preparing the food dish comprises a plurality of stages, wherein each stage of the plurality of stages comprises more than one alternative method for accomplishing the respective stage, wherein each stage comprises a standardized method for most or all of the mini-manipulations in the stage, the standardized method being a method with a highest probability of success, and wherein the method further comprises:

monitoring an accomplishment of each stage to determine success or failure of a first alternative method; and
if the first alternative method fails, trying a second alternative method as an alternative plan.

**13.** A robotics apparatus comprising a processor (16) configured to perform the method of any of the preceding claims.

**Patentansprüche**

**1.** Computer-implementiertes Verfahren zum Erzeugen einer elektronischen Aufzeichnung zum Betreiben einer Robotik-Vorrichtung, wobei das Verfahren die folgenden Schritte aufweist:

Bereitstellen von Sequenzen von vorprogrammierten Anweisungen für Mini-Manipulationen in einer Mini-Manipulationsbibliothek (116), wobei jede Mini-Manipulation mindestens ein funktionales Ergebnis in einer Stufe des Zubereitens mindestens eines Lebensmittelgerichts erzeugt;
Erfassen einer Sequenz von Beobachtungen entsprechend den Bewegungen eines Kochs, durch eine Vielzahl von Sensoren, während der Koch ein Lebensmittelgericht unter Verwendung von Zutaten und Küchengeräten zubereitet, oder Erfassen von Benutzereingaben (142, 144, 146);
Erkennen von Mini-Manipulationen in der Sequenz von Beobachtungen oder in Verbindung mit den erfassten Benutzereingaben, wobei eine erkannte Mini-Manipulation einer oder mehreren Beobachtungen in der Sequenz von Beobachtungen oder den erfassten Benutzereingaben entspricht, und die erkannten Mini-Manipulationen der Zubereitung des Lebensmittelgerichts entsprechen;
Umwandeln der erfassten Sequenz von Beobachtungen oder der erfassten Benutzereingaben in Robotik-Anweisungen, basierend auf Software-implementierten Verfahren zum Erkennen der Sequenzen von vorprogrammierten Anweisungen für die Mini-Manipulationen, die in der erfassten Sequenz von Beobachtungen entsprechend den Bewegungen des Kochs oder den erfassten Benutzereingaben erkannt werden, wobei die Mini-Manipulationen jeweils eine Sequenz von Robotik-Anweisungen aufweisen, und die Robotik-Anweisungen dynamische Erfassungsvorgänge und Robotik-Handlungsoperationen umfassen; und
Speichern der erfassten Mini-Manipulationen und ihrer entsprechenden Robotik-Anweisungen in elektronischen Medien als eine entsprechende elektronische Aufzeichnung zum Zubereiten des Lebensmittelgerichts.

**2.** Verfahren nach Anspruch 1, das ferner aufweist:

Übertragen der jeweiligen elektronischen Aufzeichnung zum Zubereiten des Lebensmittelgerichts an die Robotik-Vorrichtung, die in der Lage ist, die Mini-Manipulationen und ihre entsprechenden Robotik-Anweisungen zu replizieren und auszuführen; und
Ausführen der Robotik-Anweisungen zum Zubereiten des Lebensmittelgerichts durch die Robotik-Vorrichtung, wodurch im Wesentlichen das gleiche Ergebnis erzielt wird, wie bei dem ursprünglich vom Koch zubereiteten Lebensmittelgericht.

**3.** Verfahren nach Anspruch 2, das ferner aufweist:
Anpassen von Parametern für die Robotik-Anweisungen, basierend auf dynamischen Sensorbeobachtungen, die aufgezeichnet und in angepasste Parameter in den Robotik-Anweisungen umgewandelt werden, wenn die Robotik-Vorrichtung die Robotik-Anweisungen ausführt.

**4.** Verfahren nach Anspruch 3, wobei das Anpassen von Parametern für die Robotik-Anweisungen aufweist: Kompensieren von Schwankungen in den Zutaten, um beim Zubereiten des Lebensmittelgerichts im Wesentlichen das gleiche Ergebnis zu erzielen.

**5.** Verfahren nach Anspruch 1, das ferner aufweist:
Verallgemeinern der Robotik-Anweisungen zum Zubereiten des Lebensmittelgerichts durch einen oder mehrere Mechanismen für maschinelles Lernen, die in Software implementiert sind.

**6.** Verfahren nach Anspruch 5, wobei der eine oder die mehreren Mechanismen zum maschinellen Lernen fallbasiertes Robotik-Lernen oder Robotik-Reinforcement-Learning aufweisen.

**7.** Verfahren nach Anspruch 5, wobei das Verallgemeinern der Robotik-Anweisungen ferner aufweist:

Bereitstellen einer Vielzahl von alternativen Robotik-Anweisungen für mindestens eine der Mini-Manipulationen; und
Auswerten der Vielzahl von alternativen Robotik-Anweisungen für die mindestens eine aus den Mini-Manipulationen, um eine bevorzugte Mini-Manipulation zu bestimmen.

**8.** Verfahren nach Anspruch 1, wobei die Mini-Manipulationen in der Mini-Manipulationsbibliothek (116) parametrisiert und vorgetestet (936) werden durch:

Bestimmen (938) möglicher Parameterkombinationen, um eine bestimmte Mini-Manipulation durchzuführen;
Ausführen (940) der bestimmten Mini-Manipulation mit einer möglichen Parameterkombination; und
Bestimmen (940), ob die Ausführung ein Erfolg oder ein Misserfolg ist.

**9.** Verfahren nach Anspruch 1, wobei die Mini-Manipulationen in der Mini-Manipulationsbibliothek (116) erzeugt und vorgetestet werden durch:

Erstellen (872) einer neuen Mini-Manipulation mit einer Vielzahl von Handlungsprimitiven;
Auswählen (878, 906) eines vollständigen möglichen Bereichs von Schlüsselparametern, die der neuen Mini-Manipulation zugeordnet sind;
für jeden Schlüsselparameter aus dem vollständigen möglichen Bereich von Schlüsselparametern Testen und Validieren (880) jedes Wertes des Schlüsselparameters mit allen möglichen Kombinationen mit anderen Schlüsselparametern;
Bestimmen (882), ob ein bestimmter Satz von Schlüsselparameterkombinationen ein zuverlässiges Ergebnis liefert; und
wenn die Bestimmung positiv ist, Speichern (884) des bestimmten Satzes von Schlüsselparameterkombinationen in einer temporären Speicherplatzbibliothek.

**10.** Verfahren nach Anspruch 9, das ferner aufweist:

wiederholtes Testen und Validieren (892) des bestimmten Satzes von Schlüsselparameterkombinationen für eine Anzahl von Malen;
Berechnen (894) einer Anzahl von fehlgeschlagenen Ergebnissen während des wiederholten Testens des bestimmten Satzes von Schlüsselparameterkombinationen;
Speichern (898) der Testergebnisse des bestimmten Satzes von Schlüsselparameterkombinationen;
Bestimmen (899) eines besten oder optimalen Satzes von Parameterkombinationen; und
Speichern (899) des besten oder optimalen Satzes von Parameterkombinationen zur Verwendung in der Mini-Manipulationsbibliothek (116), wobei der beste oder optimale Satz von Parameterkombinationen der neuen Mini-Manipulation zugeordnet ist.

**11.** Verfahren nach Anspruch 1, wobei jede der Mini-Manipulationen eine Sammlung oder Sequenz von einem oder mehreren Handlungsprimitiven aufweist, die zusammenwirken, um ein funktionelles Resultat zu erreichen, das auf ein bestimmtes Ergebnis beim Zubereiten des Lebensmittelgerichts hinarbeitet.

12. Verfahren nach Anspruch 2, wobei das Zubereiten des Lebensmittelgerichts eine Vielzahl von Stufen aufweist, wobei jede Stufe aus der Vielzahl von Stufen mehr als ein alternatives Verfahren zum Erreichen der jeweiligen Stufe aufweist, wobei jede Stufe ein standardisiertes Verfahren für die meisten oder alle der Mini-Manipulationen in der Stufe aufweist, wobei das standardisierte Verfahren ein Verfahren mit einer höchsten Erfolgswahrscheinlichkeit ist, und wobei das Verfahren ferner aufweist:

    Überwachen einer Umsetzung von jeder Stufe, um Erfolg oder Misserfolg eines ersten alternativen Verfahrens zu bestimmen; und
    wenn das erste alternative Verfahren fehlschlägt, Versuchen eines zweiten alternativen Verfahrens als Alternativplan.

13. Robotik-Vorrichtung, die einen Prozessor (16) aufweist, der so konfiguriert ist, dass er das Verfahren nach einem der vorhergehenden Ansprüche durchführt.

## Revendications

1. Procédé mis en oeuvre par ordinateur pour générer un enregistrement électronique pour faire fonctionner un appareil de robotique, le procédé comprenant les étapes constituées par :

    la fourniture de séquences d'instructions préprogrammées pour des mini-manipulations dans une bibliothèque de mini-manipulations (116), dans lequel chaque mini-manipulation produit au moins un résultat fonctionnel au niveau d'une phase de préparation d'au moins un plat de nourriture ;
    la capture d'une séquence d'observations correspondant à des mouvements de cuisinier au moyen d'une pluralité de capteurs lorsque le cuisinier prépare un plat de nourriture en utilisant des ingrédients et des ustensiles de cuisine ou en acquérant une entrée d'utilisateur (142, 144, 146) ;
    la détection de mini-manipulations dans la séquence d'observations ou associées à l'entrée d'utilisateur acquise, dans lequel une mini-manipulation détectée correspond à une ou plusieurs observations dans la séquence d'observations ou à l'entrée d'utilisateur acquise, et les mini-manipulations détectées correspondent à la préparation du plat de nourriture ;
    la transformation de la séquence d'observations capturée ou de l'entrée d'utilisateur acquise selon des instructions de robotique sur la base de procédés mis en oeuvre par logiciel pour reconnaître les séquences d'instructions préprogrammées pour les mini-manipulations détectées dans la séquence d'observations capturée correspondant aux mouvements de cuisinier ou à l'entrée d'utilisateur acquise, les mini-manipulations comprenant chacune une séquence d'instructions de robotique, et les instructions de robotique incluant des opérations de capture dynamiques et des opérations d'action de robotique ; et
    le stockage des mini-manipulations détectées et de leurs instructions de robotique correspondantes dans des médias électroniques en tant qu'enregistrement électronique respectif pour préparer le plat de nourriture.

2. Procédé selon la revendication 1, comprenant en outre :

    la transmission de l'enregistrement électronique respectif pour préparer le plat de nourriture à l'appareil de robotique qui dispose de la capacité de répliquer et d'exécuter les mini-manipulations et leurs instructions de robotique correspondantes ; et
    l'exécution des instructions de robotique pour préparer le plat de nourriture au moyen de l'appareil de robotique, d'où ainsi l'obtention de sensiblement le même résultat que le plat de nourriture originellement préparé par le cuisinier.

3. Procédé selon la revendication 2, comprenant en outre :
le réglage de paramètres pour les instructions de robotique sur la base d'observations de capteur dynamiques enregistrées et transformées selon des paramètres réglés dans les instructions de robotique lorsque l'appareil de robotique exécute les instructions de robotique.

4. Procédé selon la revendication 3, dans lequel le réglage des paramètres pour les instructions de robotique comprend :
la compensation de la variabilité au niveau des ingrédients afin d'obtenir essentiellement le même résultat que lors de la préparation du plat de nourriture.

5. Procédé selon la revendication 1, comprenant en outre :

la généralisation des instructions de robotique pour préparer le plat de nourriture au moyen d'un ou de plusieurs mécanismes d'apprentissage par machine mis en oeuvre selon un logiciel.

6. Procédé selon la revendication 5, dans lequel les un ou plusieurs mécanismes d'apprentissage par machine comprennent un apprentissage de robotique par étude de cas ou un apprentissage de robotique par renforcement.

7. Procédé selon la revendication 5, dans lequel la généralisation des instructions de robotique comprend en outre :

   la fourniture d'une pluralité d'instructions de robotique alternatives pour au moins l'une des mini-manipulations ; et
   l'évaluation de la pluralité d'instructions de robotique alternatives pour l'au moins une des mini-manipulations afin de déterminer une mini-manipulation préférée.

8. Procédé selon la revendication 1, dans lequel les mini-manipulations dans la bibliothèque de mini-manipulations (116) sont paramétrées et pré-testées (936) :

   en déterminant (938) des combinaisons de paramètres possibles pour réaliser une mini-manipulation particulière ;
   en exécutant (940) la mini-manipulation particulière avec une combinaison de paramètres possible ; et
   en déterminant (940) si l'exécution est une réussite ou un échec.

9. Procédé selon la revendication 1, dans lequel les mini-manipulations dans la bibliothèque de mini-manipulations (116) sont créées et pré-testées :

   en créant (872) une nouvelle mini-manipulation à l'aide d'une pluralité de primitives d'action ;
   en sélectionnant (878, 906) une plage possible complète de paramètres clés associés à la nouvelle mini-manipulation ;
   pour chaque paramètre clé de la plage possible complète de paramètres clés, en testant et en validant (880) chaque valeur du paramètre clé avec toutes les combinaisons possibles avec d'autres paramètres clés ;
   en déterminant (882) si un ensemble particulier de combinaisons de paramètres clés produit ou non un résultat fiable ; et
   si la détermination est positive, en stockant (884) l'ensemble particulier de combinaisons de paramètres clés dans une bibliothèque de localisations temporaire.

10. Procédé selon la revendication 9, comprenant en outre :

   le test et la validation de façon répétée (892) de l'ensemble particulier de combinaisons de paramètres clés un certain nombre de fois ;
   le calcul (894) d'un nombre de résultats en échec pendant le test répété de l'ensemble particulier de combinaisons de paramètres clés ;
   le stockage (898) de résultats de test de l'ensemble particulier de combinaisons de paramètres clés ;
   la détermination (899) d'un ensemble le meilleur ou optimum de combinaisons de paramètres ; et
   le stockage (899) de l'ensemble le meilleur ou optimum de combinaisons de paramètres dans le but de son utilisation dans la bibliothèque de mini-manipulations (116), l'ensemble le meilleur ou optimum de combinaisons de paramètres étant associé à la nouvelle mini-manipulation.

11. Procédé selon la revendication 1, dans lequel chacune des mini-manipulations comprend une collection ou une séquence d'une ou de plusieurs primitives d'action qui opèrent ensemble pour mener à bien l'obtention d'une conclusion fonctionnelle positive qui constitue une avancée en direction d'un résultat spécifique au niveau de la préparation du plat de nourriture.

12. Procédé selon la revendication 2, dans lequel la préparation du plat de nourriture comprend une pluralité de phases, dans lequel chaque phase de la pluralité de phases comprend plus d'un procédé alternatif pour mener à bien la phase respective, dans lequel chaque phase comprend un procédé standardisé pour la plupart des mini-manipulations de la phase, voire pour toutes, le procédé standardisé étant un procédé présentant une probabilité de succès la plus élevée, et dans lequel le procédé comprend en outre :

   la surveillance d'une menée à bien de chaque phase pour déterminer le succès ou l'échec d'un premier procédé alternatif ; et
si le premier procédé alternatif est en échec, l'essai d'un second procédé alternatif en tant que plan alternatif.

**13.** Appareil de robotique comprenant un processeur (16) configuré pour réaliser le procédé selon l'une quelconque des revendications précédentes.

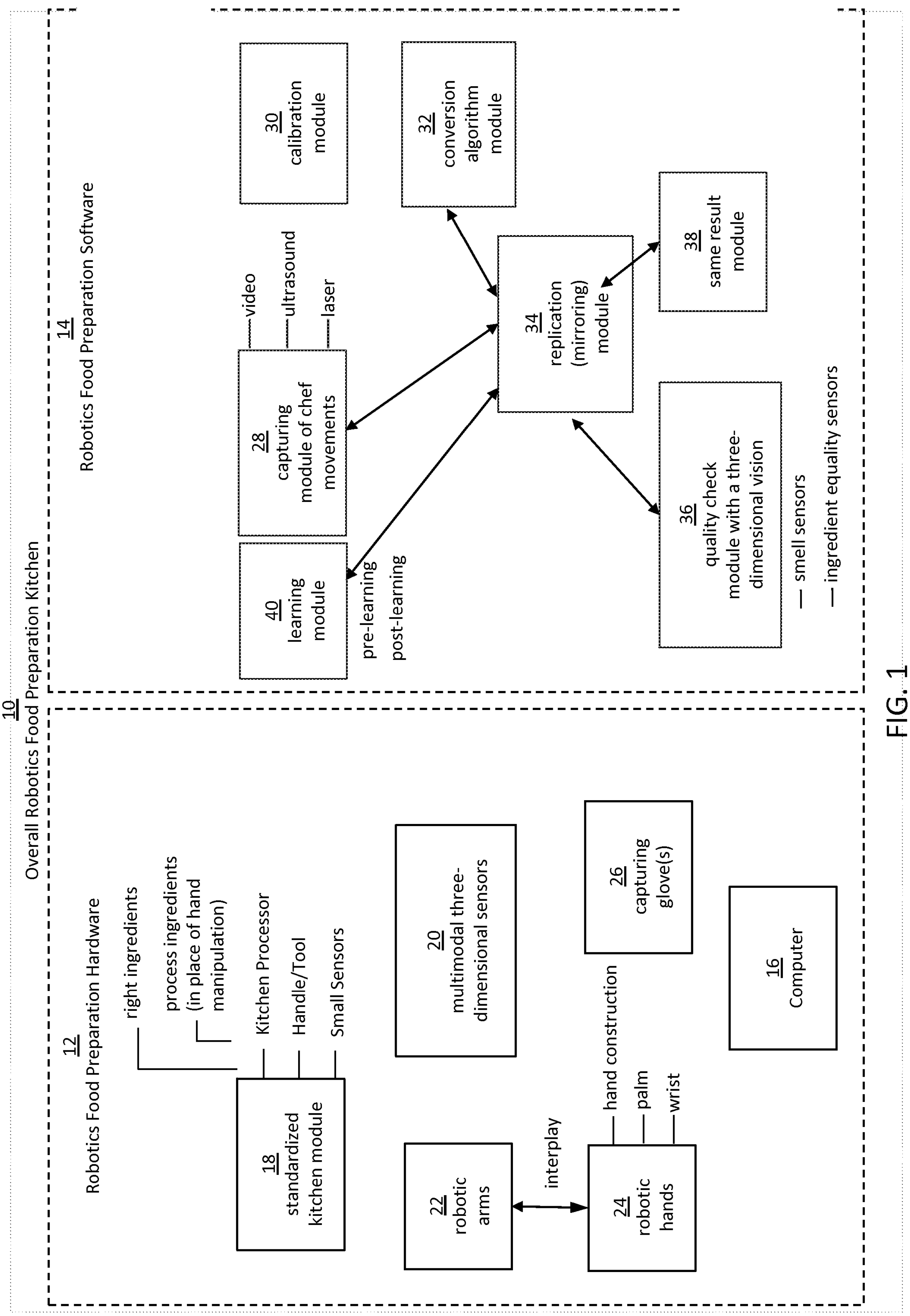
10
Overall Robotics Food Preparation Kitchen
12
Robotics Food Preparation Hardware
18
standardized kitchen module
right ingredients
process ingredients (in place of hand manipulation)
Kitchen Processor
Handle/Tool
Small Sensors
20
multimodal three-dimensional sensors
22
robotic arms
interplay
24
robotic hands
hand construction
palm
wrist
26
capturing glove(s)
16
Computer
14
Robotics Food Preparation Software
30
calibration module
32
conversion algorithm module
28
capturing module of chef movements
video
ultrasound
laser
40
learning module
pre-learning
post-learning
34
replication (mirroring) module
38
same result module
36
quality check module with a three-dimensional vision
smell sensors
ingredient equality sensors

FIG. 1

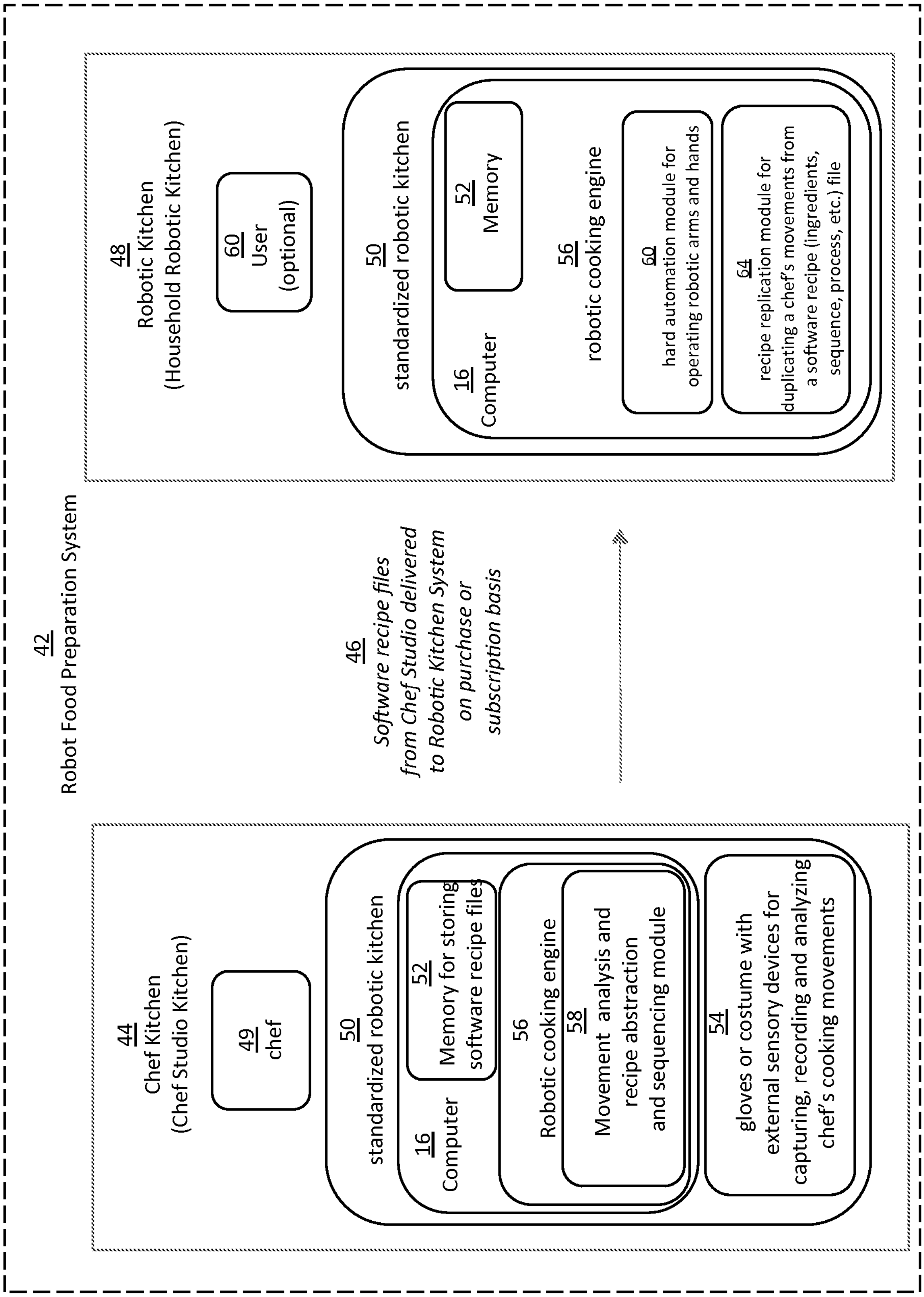
42
Robot Food Preparation System
44
Chef Kitchen
(Chef Studio Kitchen)
49
chef
50
standardized robotic kitchen
16
Computer
52
Memory for storing software recipe files
56
Robotic cooking engine
58
Movement analysis and recipe abstraction and sequencing module
54
gloves or costume with external sensory devices for capturing, recording and analyzing chef's cooking movements
46
Software recipe files from Chef Studio delivered to Robotic Kitchen System on purchase or subscription basis
48
Robotic Kitchen
(Household Robotic Kitchen)
60
User
(optional)
50
standardized robotic kitchen
16
Computer
52
Memory
56
robotic cooking engine
60
hard automation module for operating robotic arms and hands
64
recipe replication module for duplicating a chef's movements from a software recipe (ingredients, sequence, process, etc.) file

FIG. 2

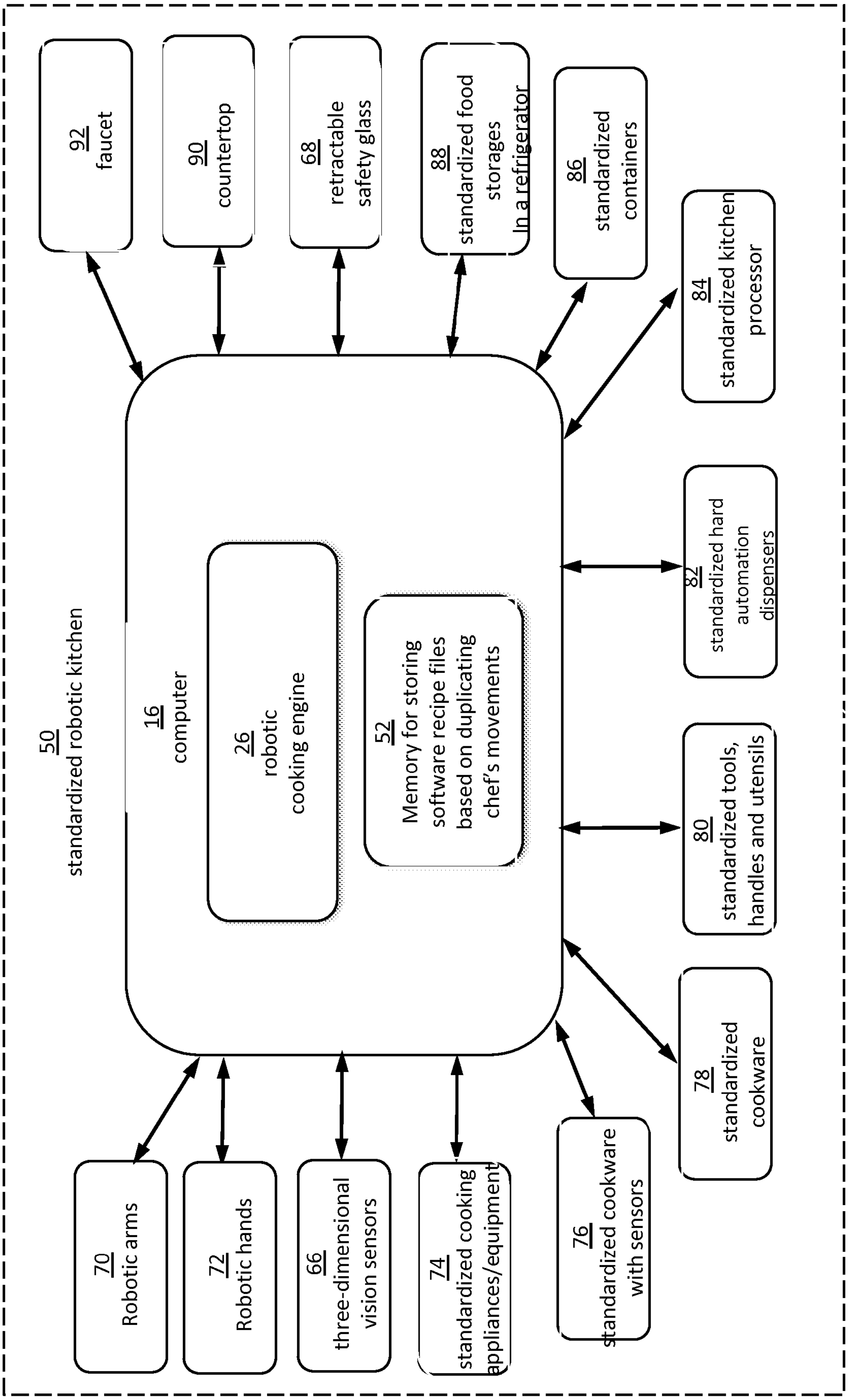
50
standardized robotic kitchen
16
computer
26
robotic
cooking engine
52
Memory for storing
software recipe files
based on duplicating
chef's movements
92
faucet
90
countertop
68
retractable
safety glass
88
standardized food
storages
In a refrigerator
86
standardized
containers
84
standardized kitchen
processor
82
standardized hard
automation
dispensers
80
standardized tools,
handles and utensils
78
standardized
cookware
76
standardized cookware
with sensors
74
standardized cooking
appliances/equipment
66
three-dimensional
vision sensors
72
Robotic hands
70
Robotic arms

FIG. 3

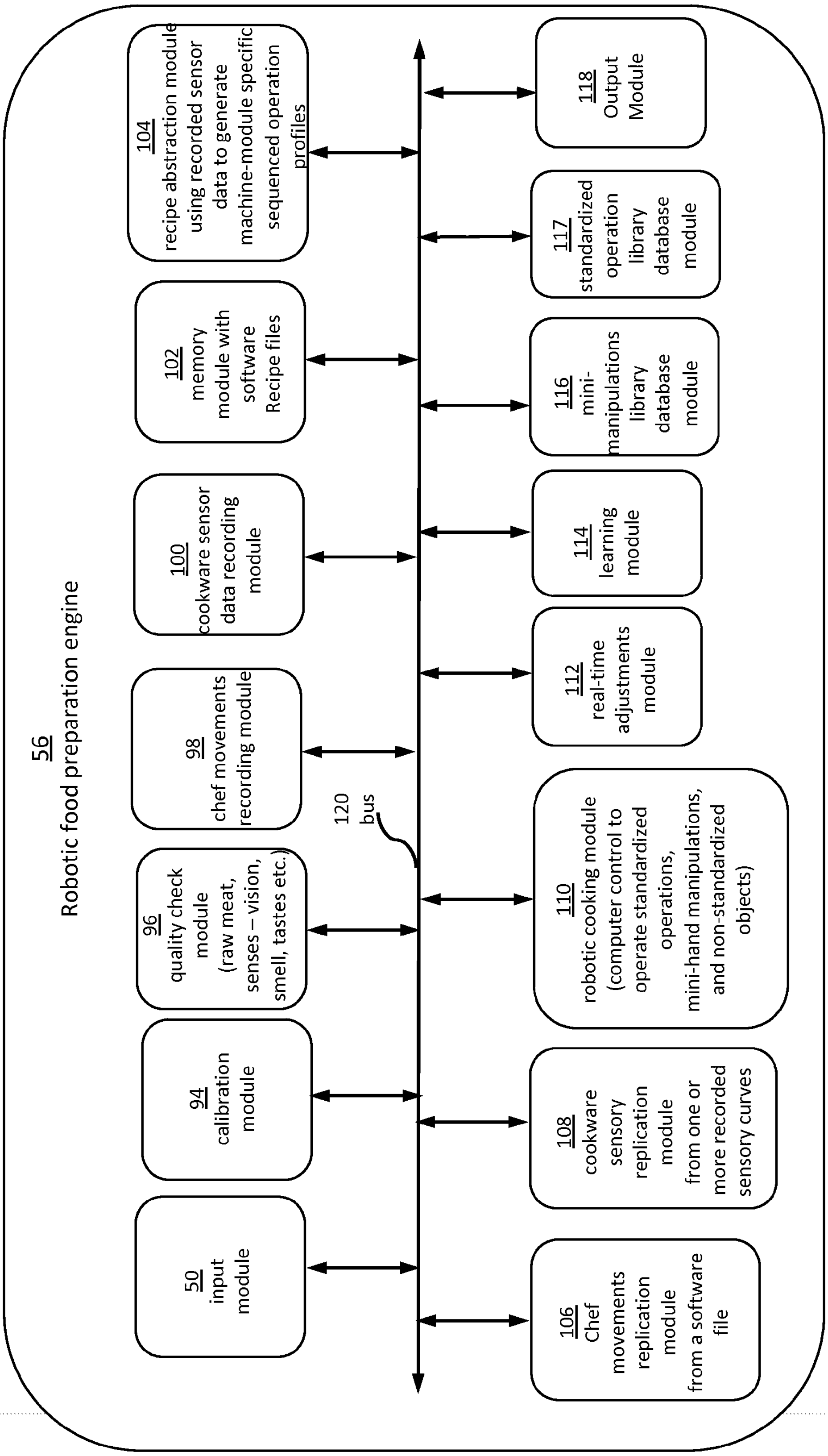
56
Robotic food preparation engine
50 input module
94 calibration module
96 quality check module (raw meat, senses – vision, smell, tastes etc.)
98 chef movements recording module
100 cookware sensor data recording module
102 memory module with software Recipe files
104 recipe abstraction module using recorded sensor data to generate machine-module specific sequenced operation profiles
120 bus
106 Chef movements replication module from a software file
108 cookware sensory replication module from one or more recorded sensory curves
110 robotic cooking module (computer control to operate standardized operations, mini-hand manipulations, and non-standardized objects)
112 real-time adjustments module
114 learning module
116 mini-manipulations library database module
117 standardized operation library database module
118 Output Module

FIG. 4

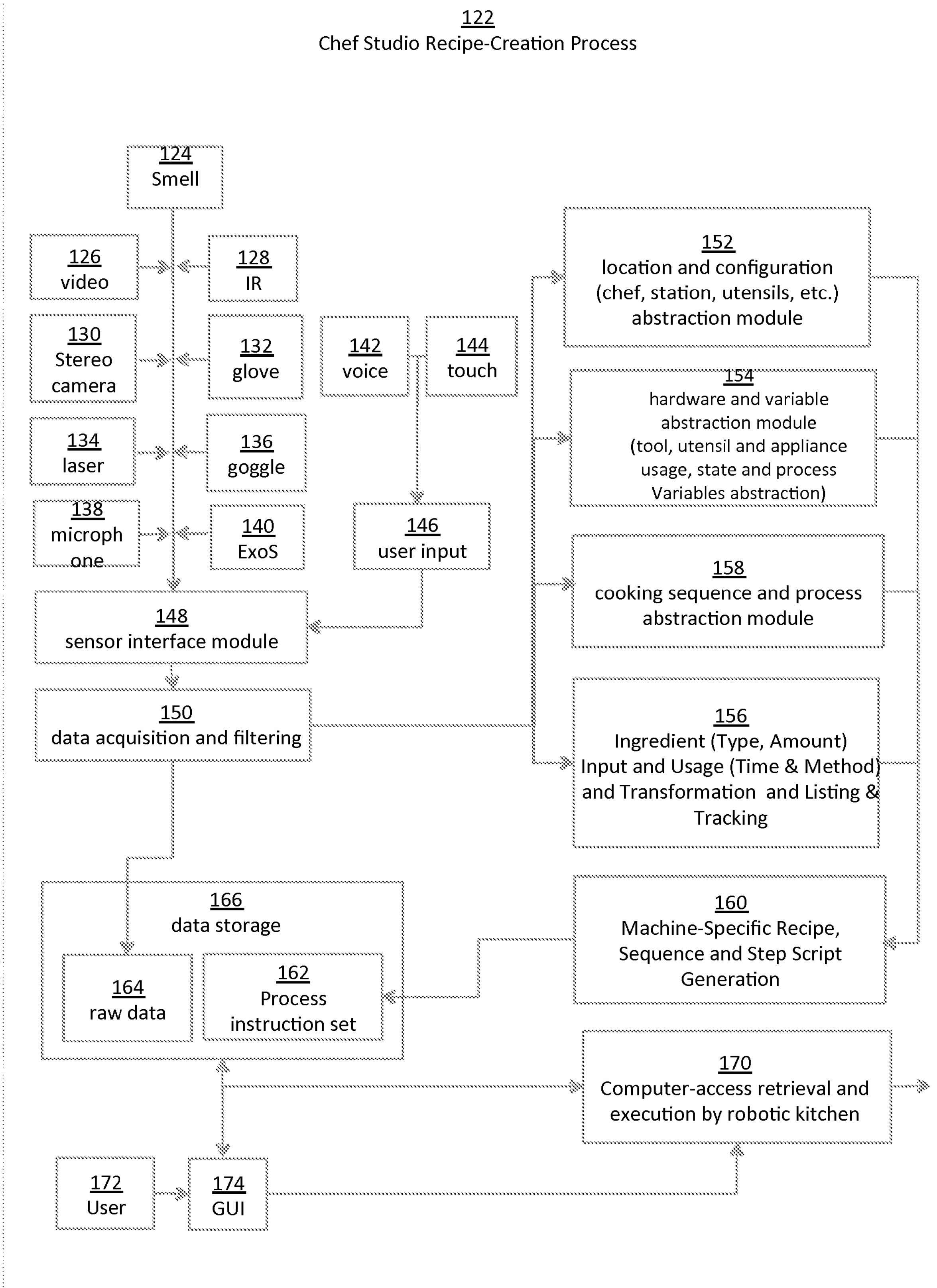
122
Chef Studio Recipe-Creation Process
124
Smell
126
video
128
IR
130
Stereo camera
132
glove
142
voice
144
touch
134
laser
136
goggle
138
microphone
140
ExoS
146
user input
148
sensor interface module
150
data acquisition and filtering
152
location and configuration (chef, station, utensils, etc.) abstraction module
154
hardware and variable abstraction module (tool, utensil and appliance usage, state and process Variables abstraction)
158
cooking sequence and process abstraction module
156
Ingredient (Type, Amount) Input and Usage (Time & Method) and Transformation and Listing & Tracking
166
data storage
164
raw data
162
Process instruction set
160
Machine-Specific Recipe, Sequence and Step Script Generation
170
Computer-access retrieval and execution by robotic kitchen
172
User
174
GUI

FIG. 5A

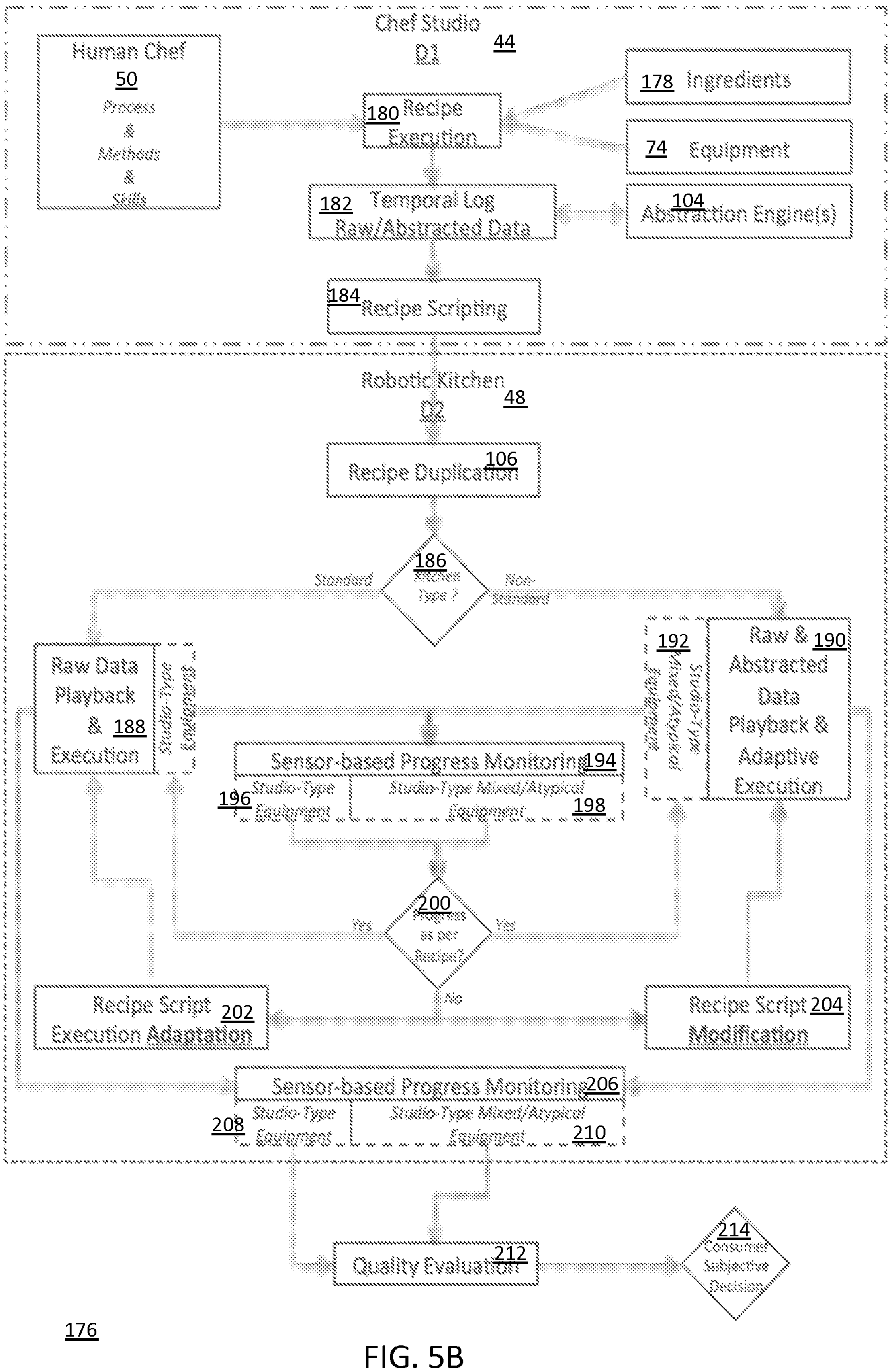
Chef Studio
D1
44
Human Chef
50
Process
&
Methods
&
Skills
180 Recipe Execution
178 Ingredients
74 Equipment
182 Temporal Log Raw/Abstracted Data
104 Abstraction Engine(s)
184 Recipe Scripting
Robotic Kitchen
D2
48
Recipe Duplication 106
186
Kitchen Type ?
Standard
Non-Standard
Raw Data Playback & 188 Execution
Studio-Type Equipment
192
Studio-Type Mixed/Atypical Equipment
Raw & 190 Abstracted Data Playback & Adaptive Execution
Sensor-based Progress Monitoring 194
196 Studio-Type Equipment
Studio-Type Mixed/Atypical Equipment 198
200
Progress as per Recipe?
Yes
Yes
No
Recipe Script 202 Execution Adaptation
Recipe Script 204 Modification
Sensor-based Progress Monitoring 206
208 Studio-Type Equipment
Studio-Type Mixed/Atypical Equipment 210
Quality Evaluation 212
214
Consumer Subjective Decision
176

FIG. 5B

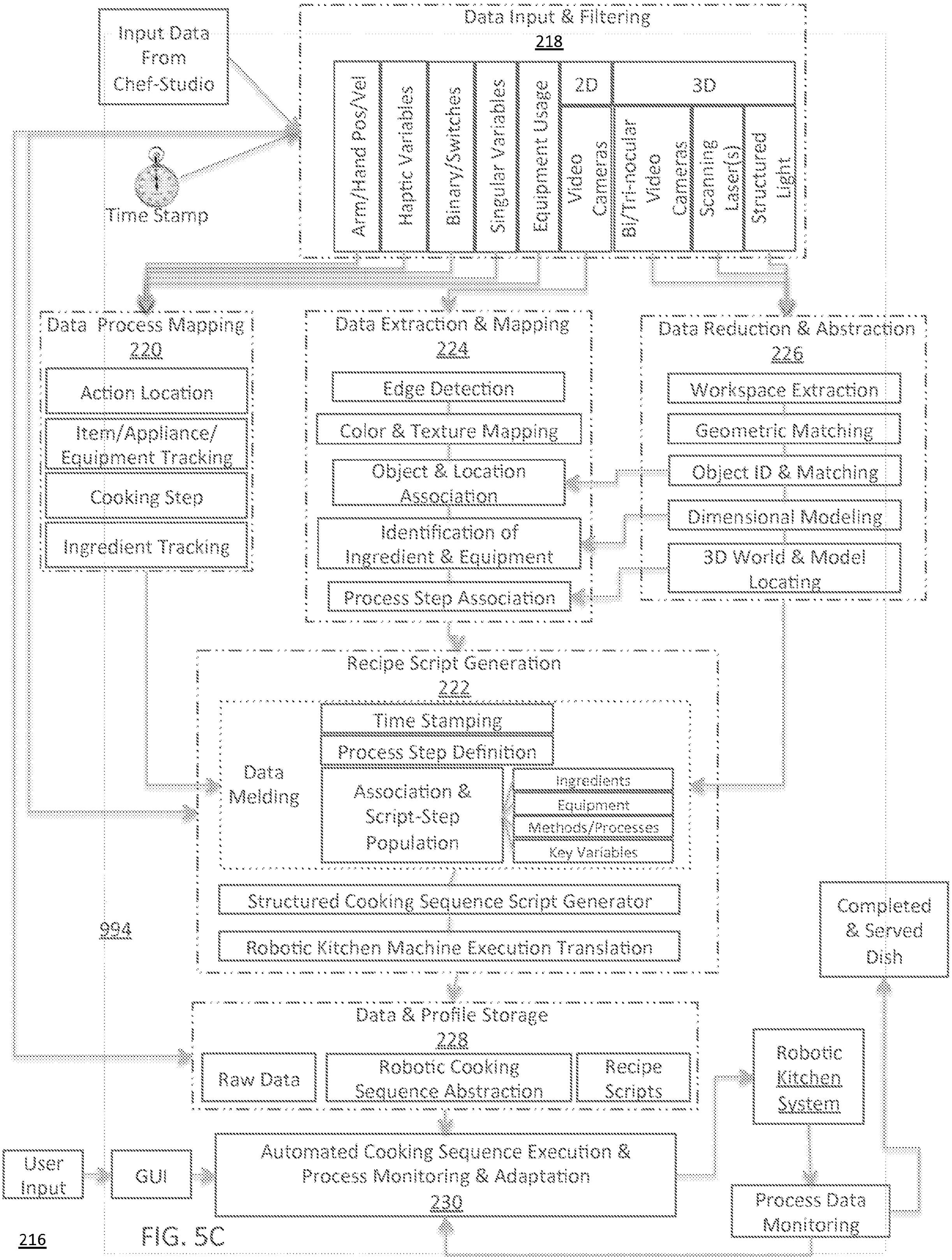

Input Data From Chef-Studio
Time Stamp
Data Input & Filtering
218
Arm/Hand Pos/Vel
Haptic Variables
Binary/Switches
Singular Variables
Equipment Usage
2D
Video Cameras
3D
Bi/Tri-nocular Video Cameras
Scanning Laser(s)
Structured Light
Data Process Mapping
220
Action Location
Item/Appliance/ Equipment Tracking
Cooking Step
Ingredient Tracking
Data Extraction & Mapping
224
Edge Detection
Color & Texture Mapping
Object & Location Association
Identification of Ingredient & Equipment
Process Step Association
Data Reduction & Abstraction
226
Workspace Extraction
Geometric Matching
Object ID & Matching
Dimensional Modeling
3D World & Model Locating
Recipe Script Generation
222
Data Melding
Time Stamping
Process Step Definition
Association & Script-Step Population
Ingredients
Equipment
Methods/Processes
Key Variables
Structured Cooking Sequence Script Generator
Robotic Kitchen Machine Execution Translation
994
Completed & Served Dish
Data & Profile Storage
228
Raw Data
Robotic Cooking Sequence Abstraction
Recipe Scripts
Robotic Kitchen System
User Input
GUI
Automated Cooking Sequence Execution & Process Monitoring & Adaptation
230
Process Data Monitoring
216


FIG. 5C

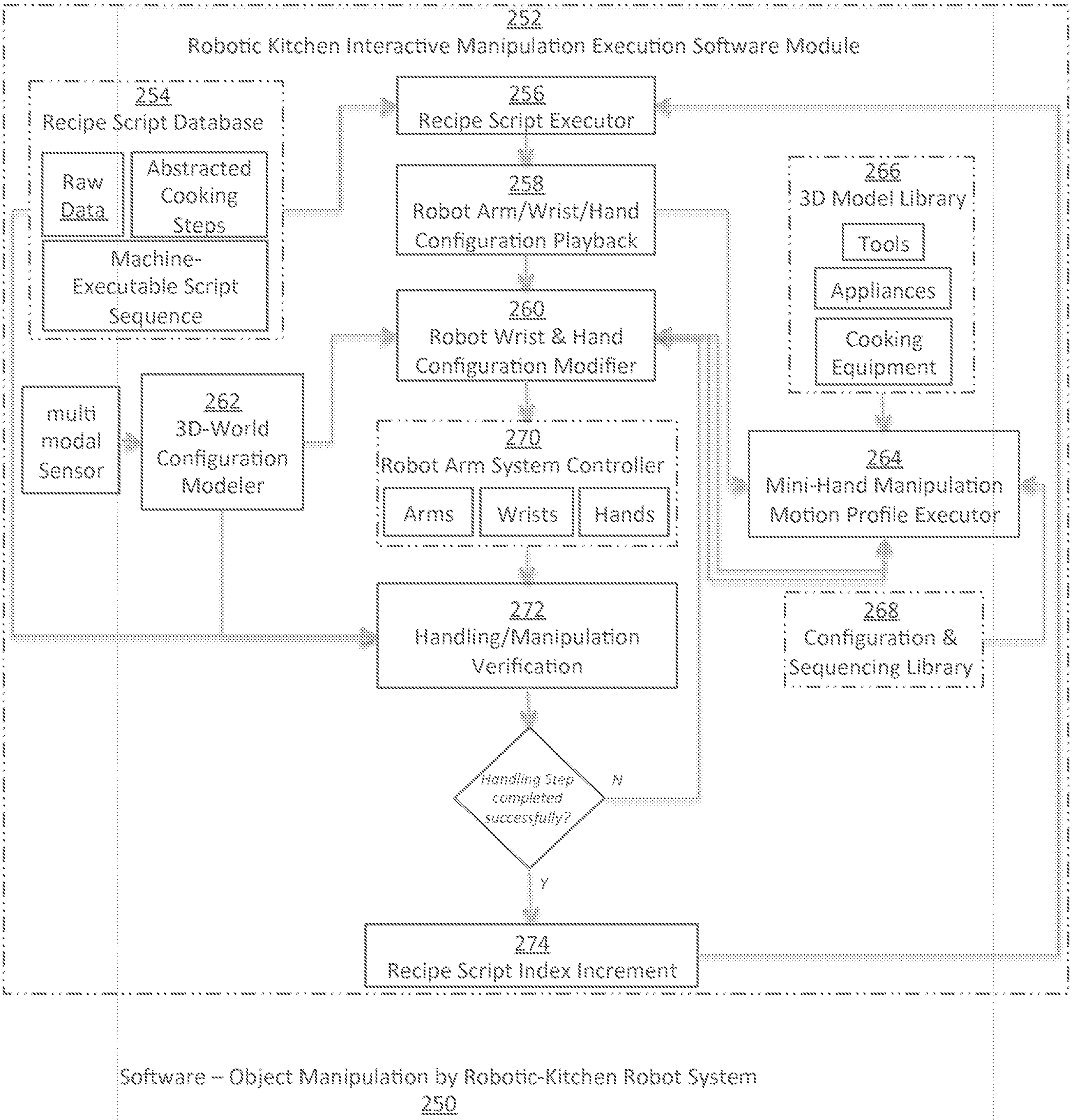


FIG. 5D Object Handling/Manipulation in Robotic Kitchen – Structure & Flow

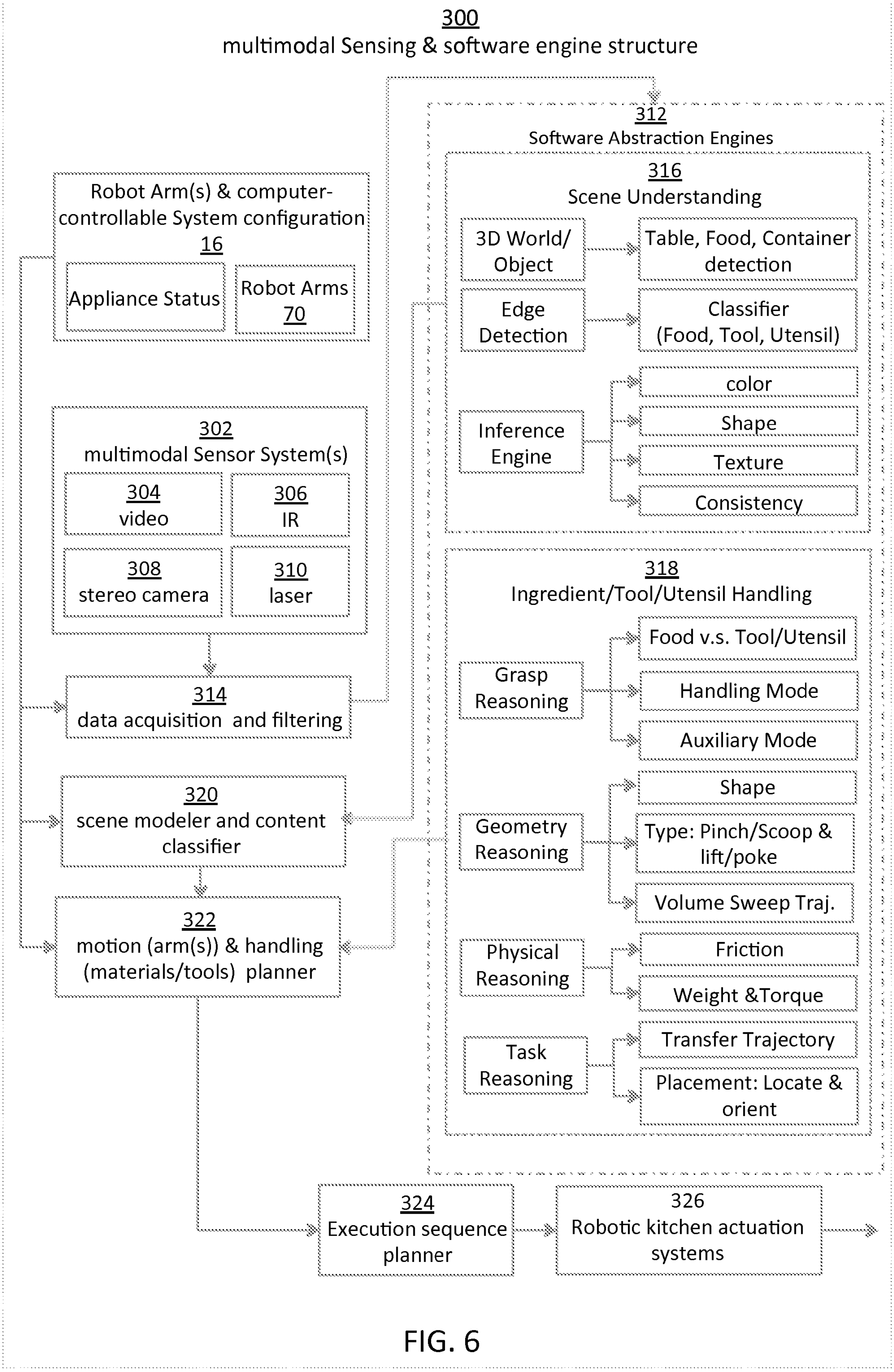
300
multimodal Sensing & software engine structure
312
Software Abstraction Engines
316
Scene Understanding
3D World/ Object
Table, Food, Container detection
Edge Detection
Classifier (Food, Tool, Utensil)
Inference Engine
color
Shape
Texture
Consistency
Robot Arm(s) & computer-controllable System configuration 16
Appliance Status
Robot Arms 70
302
multimodal Sensor System(s)
304 video
306 IR
308 stereo camera
310 laser
314
data acquisition and filtering
318
Ingredient/Tool/Utensil Handling
Grasp Reasoning
Food v.s. Tool/Utensil
Handling Mode
Auxiliary Mode
320
scene modeler and content classifier
Geometry Reasoning
Shape
Type: Pinch/Scoop & lift/poke
Volume Sweep Traj.
322
motion (arm(s)) & handling (materials/tools) planner
Physical Reasoning
Friction
Weight &Torque
Task Reasoning
Transfer Trajectory
Placement: Locate & orient
324
Execution sequence planner
326
Robotic kitchen actuation systems

FIG. 6

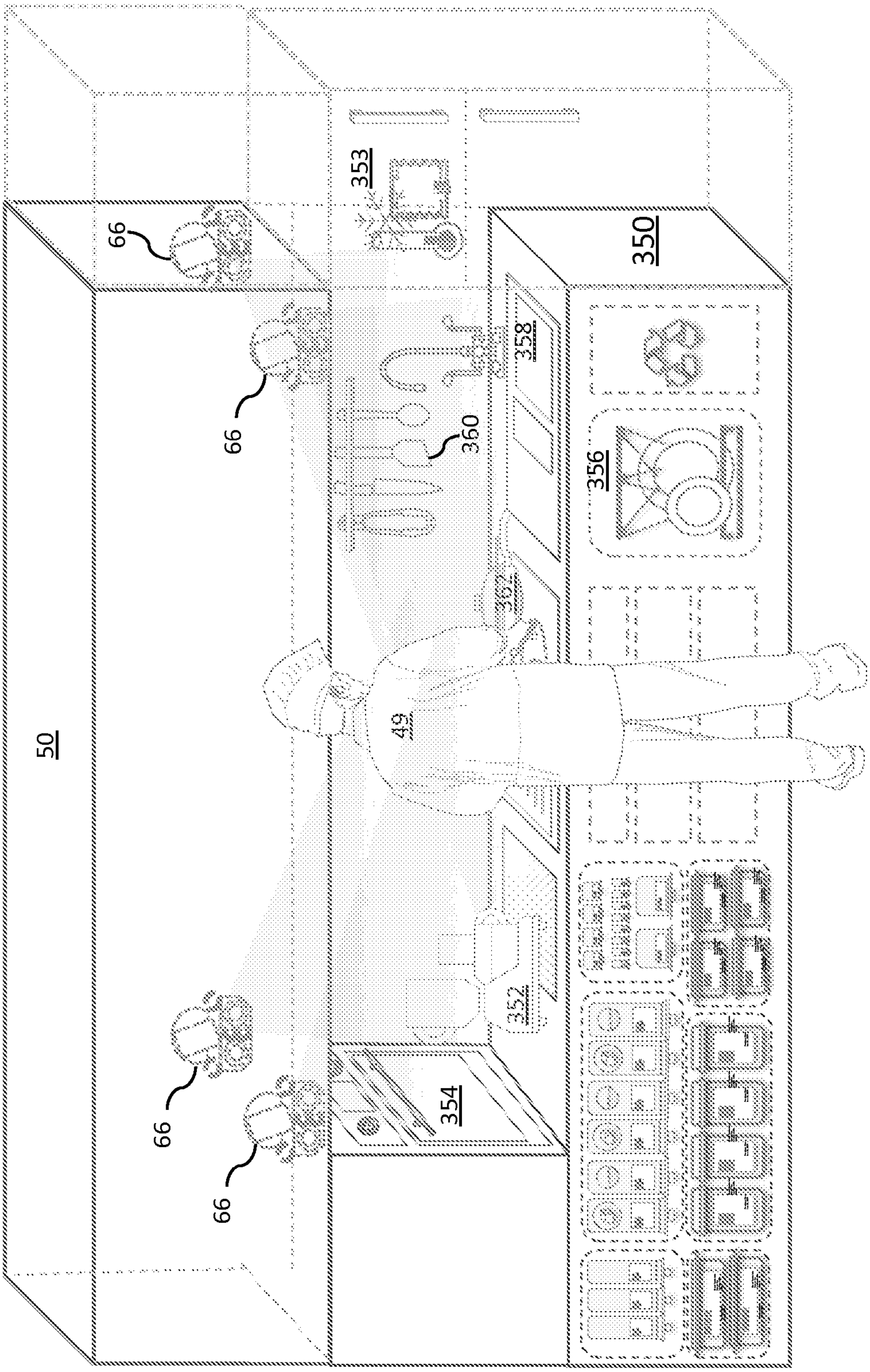


FIG. 7A

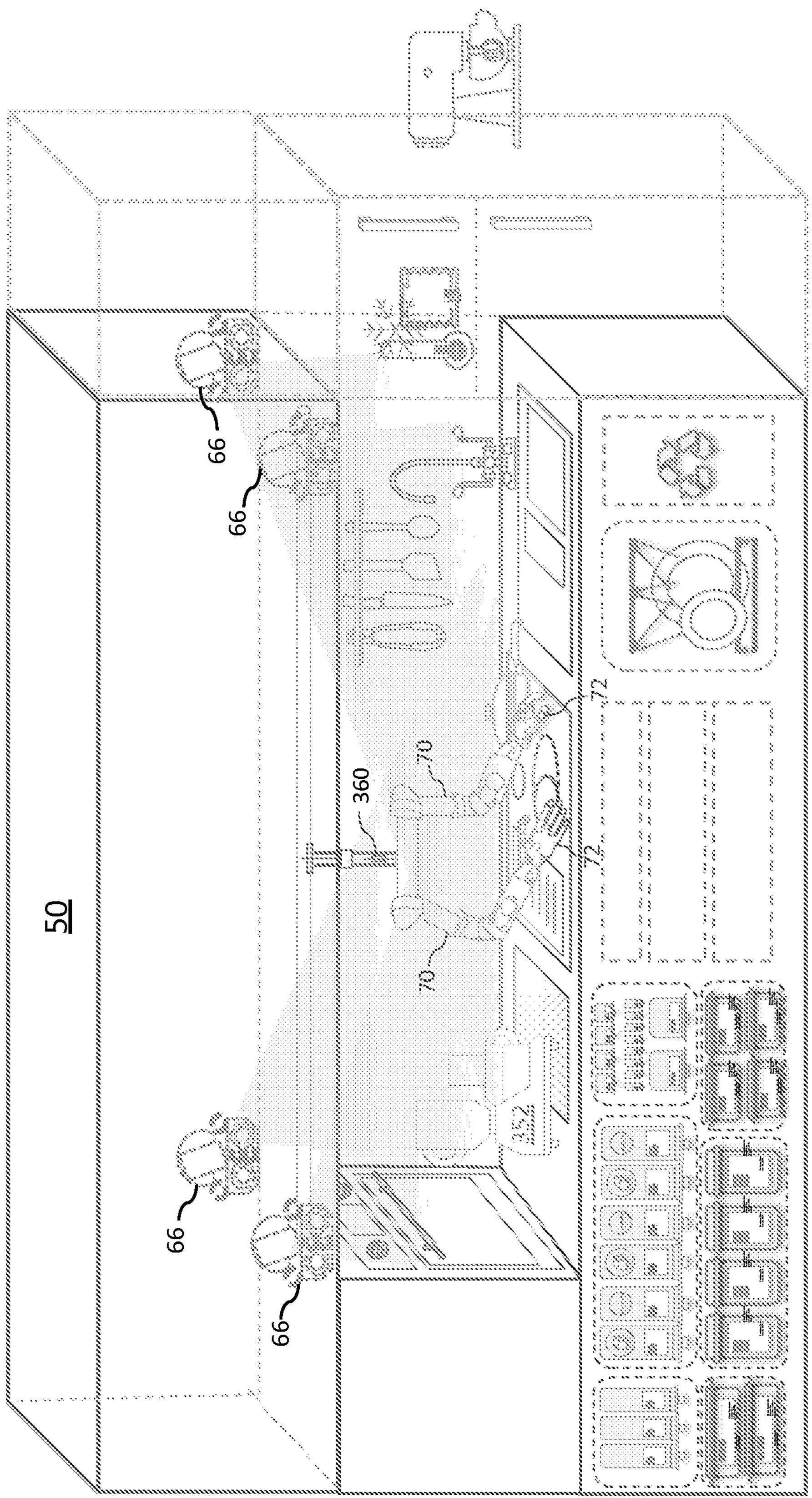


FIG. 7B

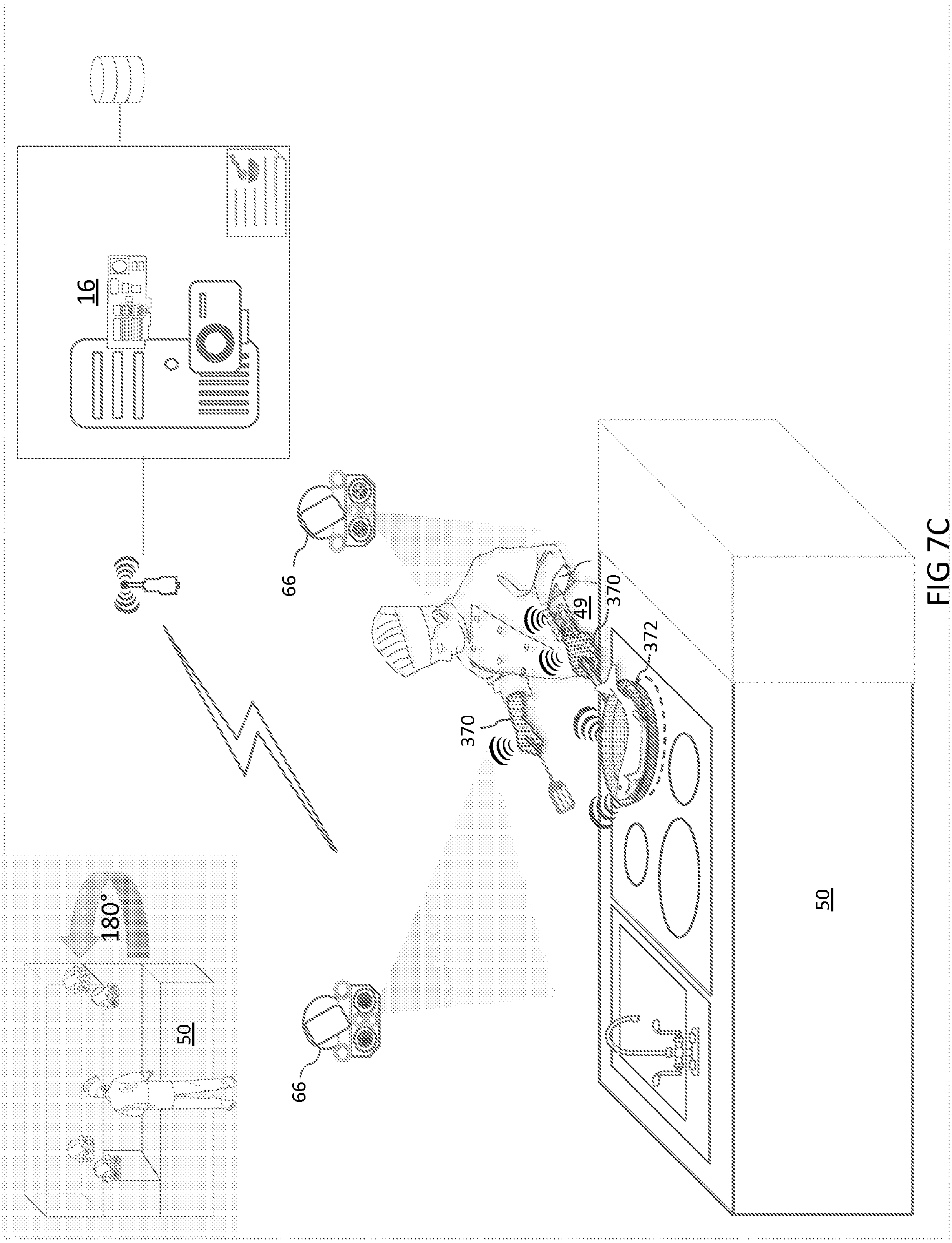


FIG 7C

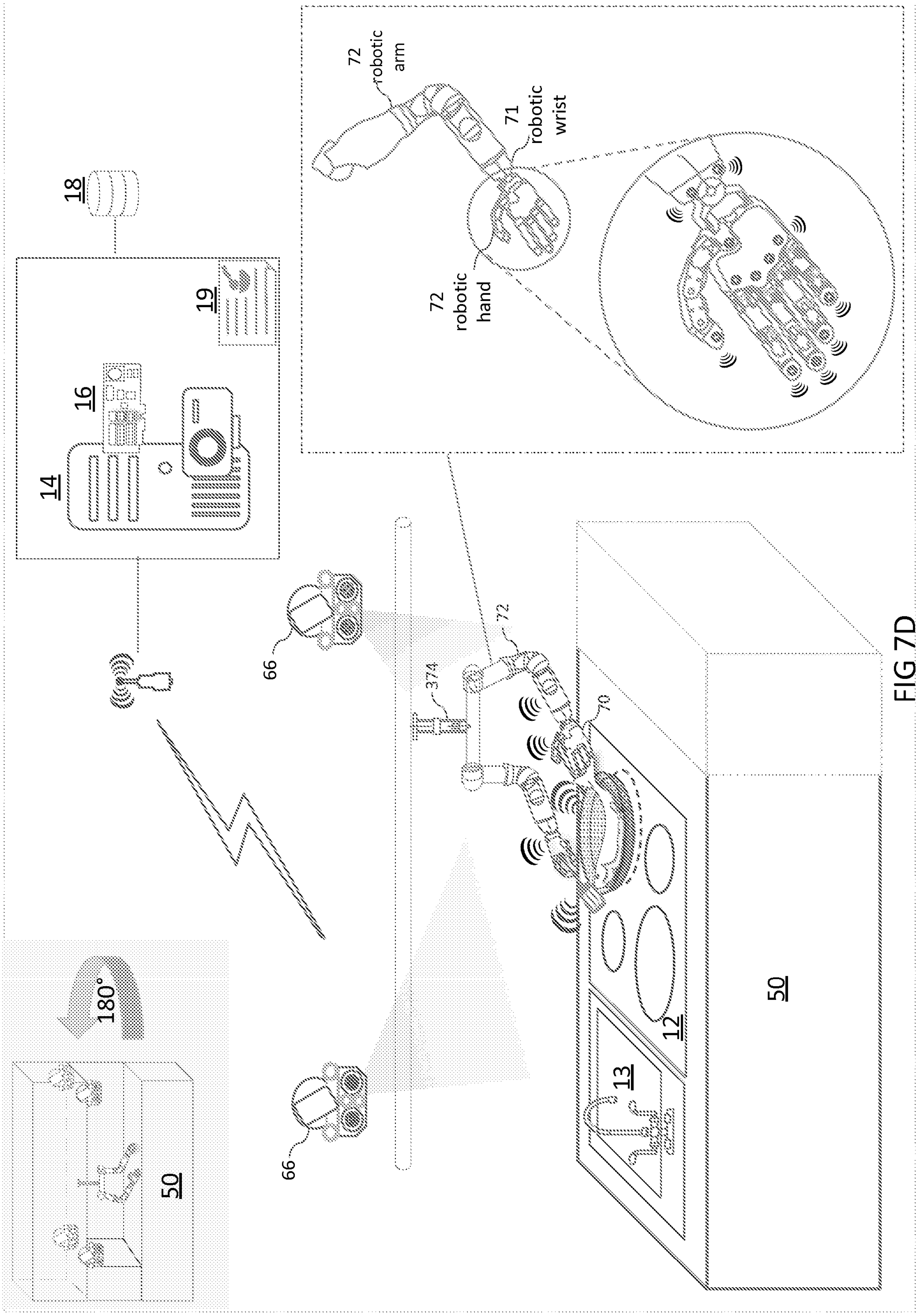
18
14
16
19
72
robotic
arm
71
robotic
wrist
72
robotic
hand
66
374
72
70
180°
50
13
12
50
66

FIG 7D

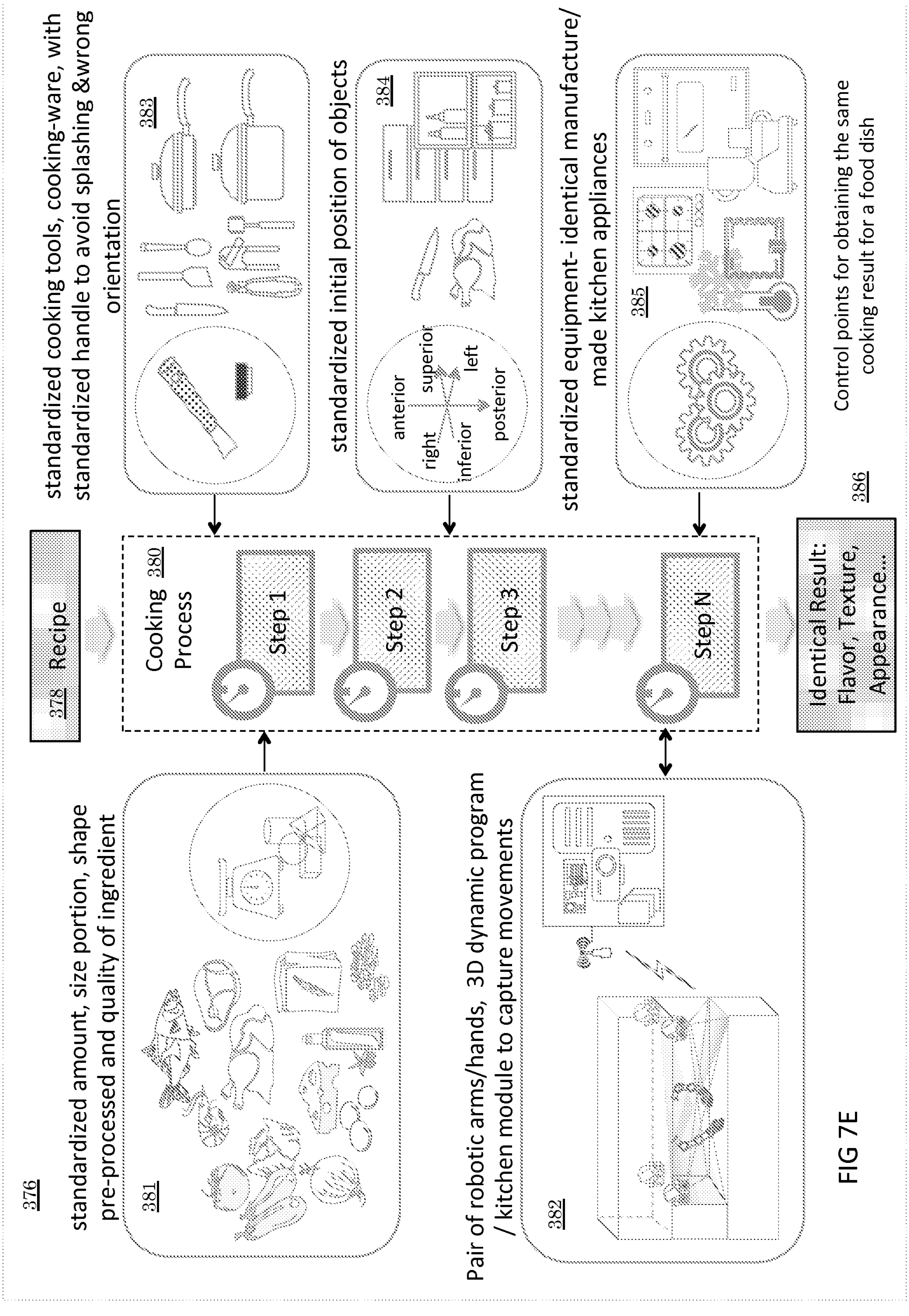
376
standardized amount, size portion, shape pre-processed and quality of ingredient
381
Pair of robotic arms/hands, 3D dynamic program / kitchen module to capture movements
382
378 Recipe
Cooking 380 Process
Step 1
Step 2
Step 3
Step N
Identical Result: Flavor, Texture, Appearance...
386
standardized cooking tools, cooking-ware, with standardized handle to avoid splashing &wrong orientation
383
standardized initial position of objects
384
anterior
superior
right
inferior
left
posterior
standardized equipment- identical manufacture/ made kitchen appliances
385
Control points for obtaining the same cooking result for a food dish

FIG 7E

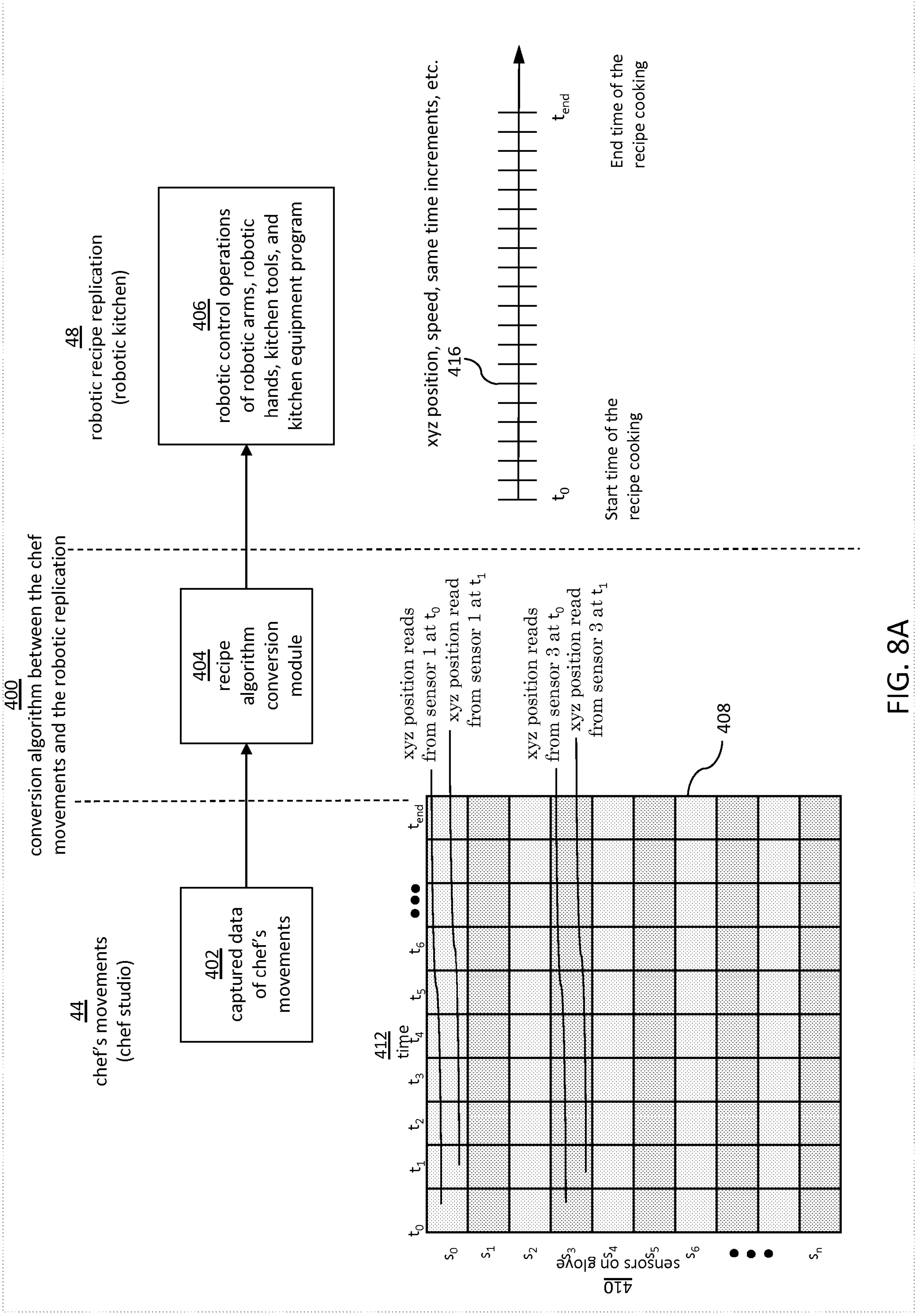
400
conversion algorithm between the chef movements and the robotic replication
44
chef's movements (chef studio)
48
robotic recipe replication (robotic kitchen)
402
captured data of chef's movements
404
recipe algorithm conversion module
406
robotic control operations of robotic arms, robotic hands, kitchen tools, and kitchen equipment program
412
time
$t_0$ $t_1$ $t_2$ $t_3$ $t_4$ $t_5$ $t_6$ ●●● $t_{end}$
410
sensors on glove
$s_0$ $s_1$ $s_2$ $s_3$ $s_4$ $s_5$ $s_6$ ●●● $s_n$
xyz position reads from sensor 1 at $t_0$
xyz position read from sensor 1 at $t_1$
xyz position reads from sensor 3 at $t_0$
xyz position read from sensor 3 at $t_1$
408
xyz position, speed, same time increments, etc.
416
$t_0$
$t_{end}$
Start time of the recipe cooking
End time of the recipe cooking

FIG. 8A

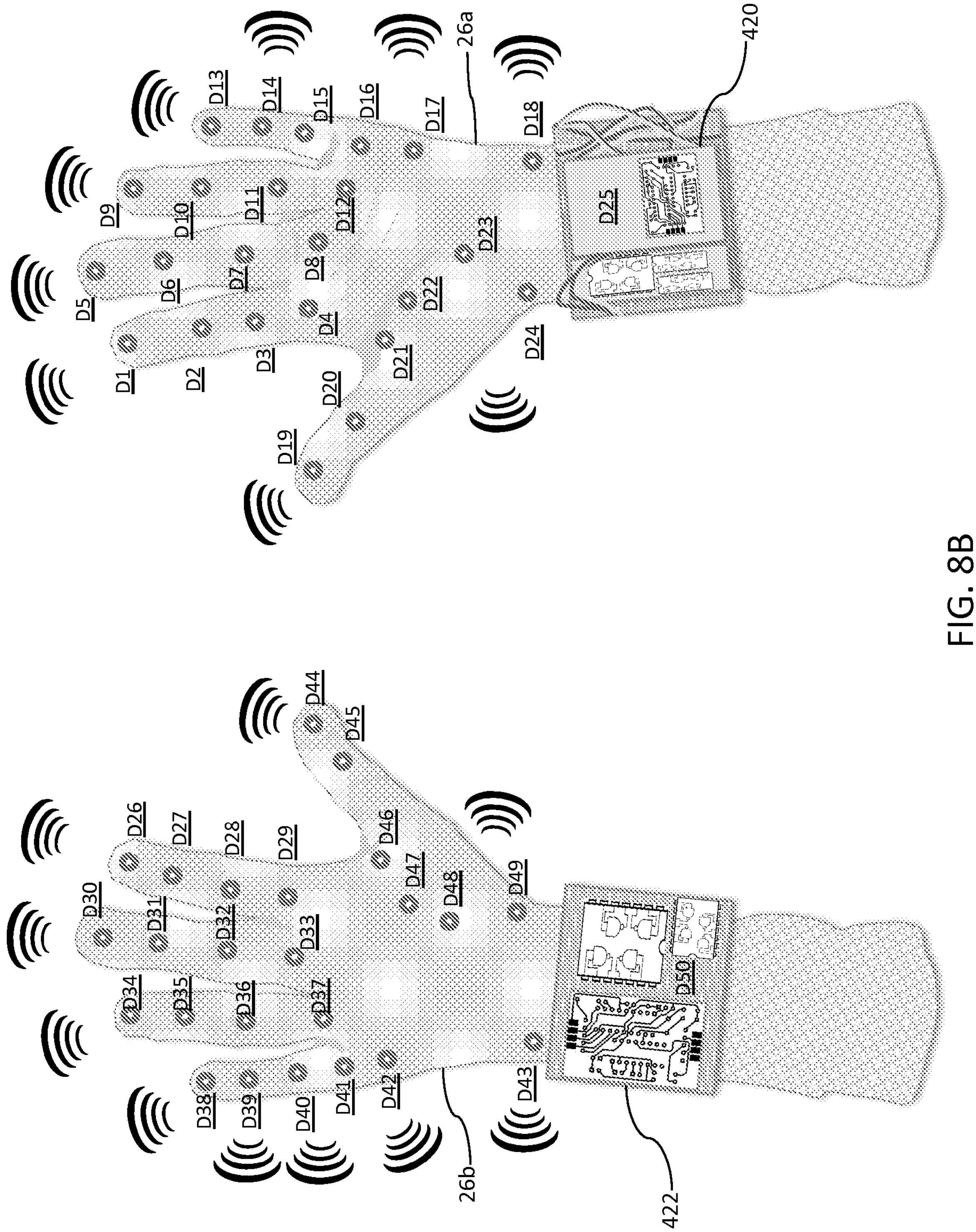
D1
D2
D3
D4
D5
D6
D7
D8
D9
D10
D11
D12
D13
D14
D15
D16
D17
D18
D19
D20
D21
D22
D23
D24
D25
26a
420
D26
D27
D28
D29
D30
D31
D32
D33
D34
D35
D36
D37
D38
D39
D40
D41
D42
D43
D44
D45
D46
D47
D48
D49
D50
26b
422

FIG. 8B

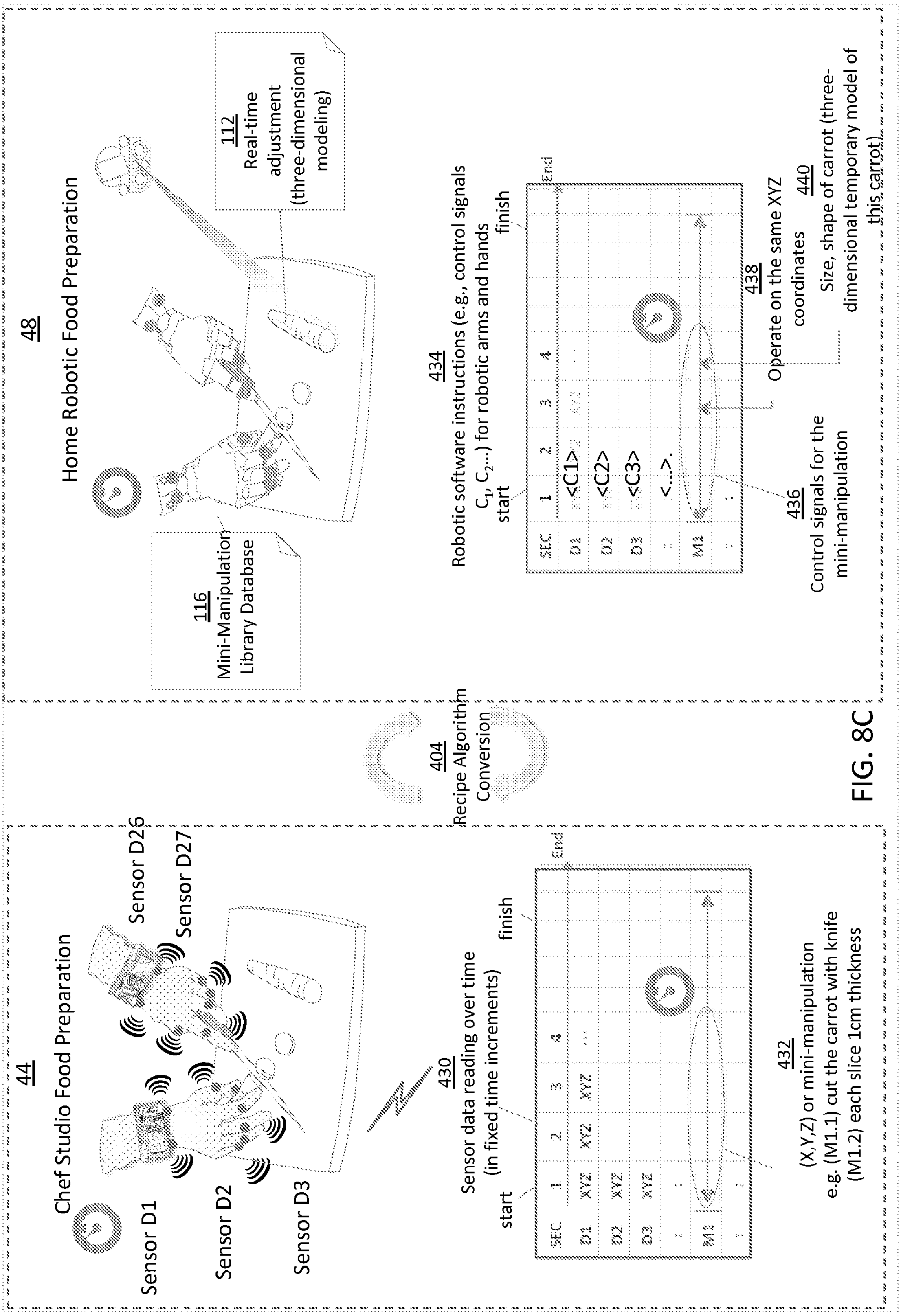
44
Chef Studio Food Preparation
Sensor D1
Sensor D2
Sensor D3
Sensor D26
Sensor D27
430
Sensor data reading over time
(in fixed time increments)
start
finish
End
SEC
1
2
3
4
D1
D2
D3
M1
XYZ
432
(X,Y,Z) or mini-manipulation
e.g. (M1.1) cut the carrot with knife
(M1.2) each slice 1cm thickness
404
Recipe Algorithm
Conversion
48
Home Robotic Food Preparation
116
Mini-Manipulation
Library Database
112
Real-time
adjustment
(three-dimensional
modeling)
434
Robotic software instructions (e.g., control signals
C1, C2...) for robotic arms and hands
<C1>
<C2>
<C3>
<...>.
436
Control signals for the
mini-manipulation
438
Operate on the same XYZ
coordinates
440
Size, shape of carrot (three-
dimensional temporary model of
this carrot)

FIG. 8C

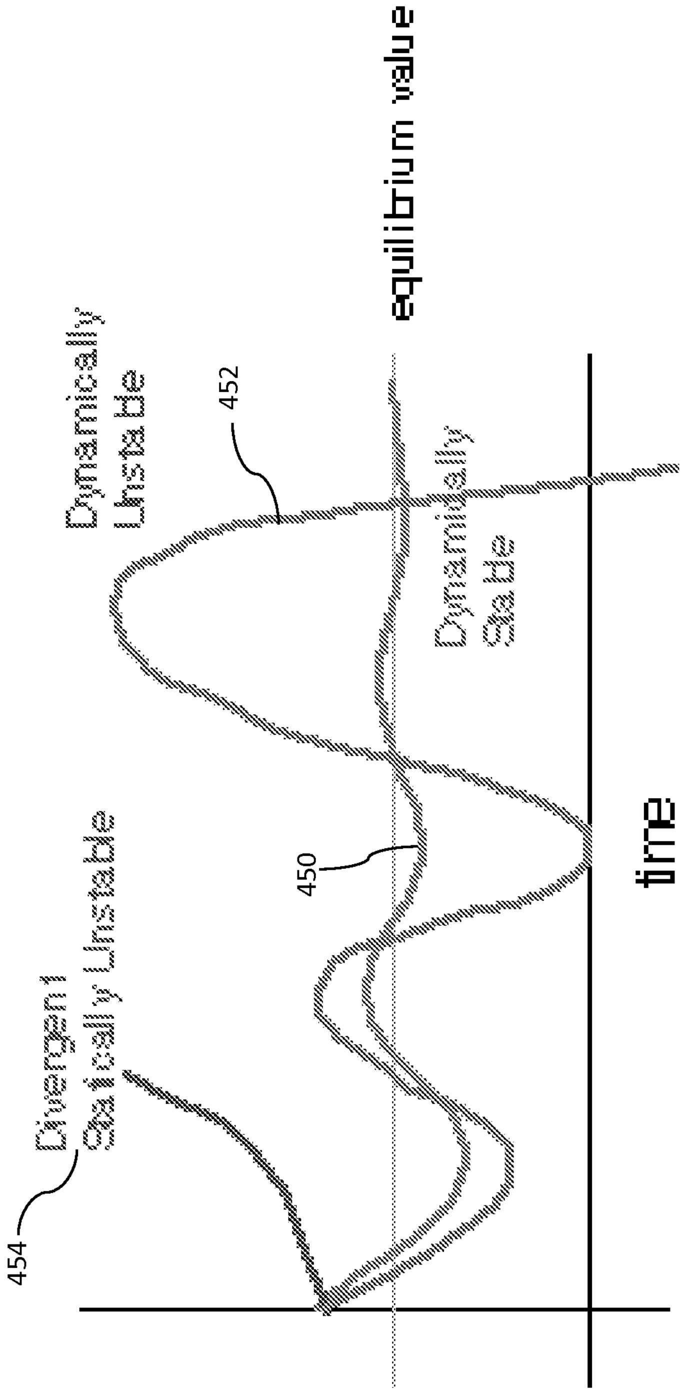
equilibrium value
time
Dynamically Unstable
Dynamically Stable
Divergent Statically Unstable
450
452
454

FIG. 8D

Calculating Probability of Desired result for multi-step cooking operations

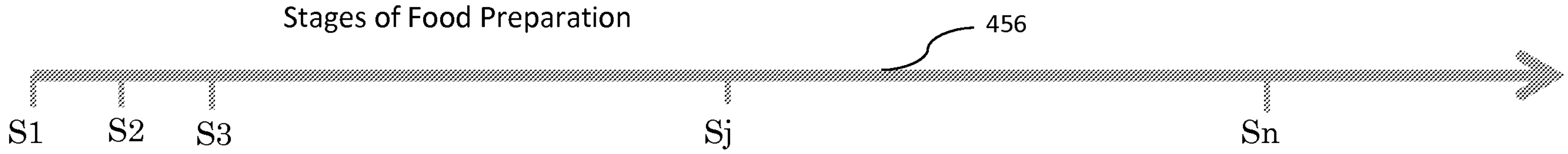


Probability of Success = Product of the Probabillities of success at all stages

Probability of success at each stage = Probability that any alternative works for that stage

$$P(S)=\prod_{S_i \in S} P(s_i \mid A(s_i))$$

$$P(s_i \mid A(s_i))=1-\prod_{a_j \in A(s_i)} (1-P(s_i \mid a_j))$$

FIG. 8E

| Non-Standard | Standard |
| --- | --- |
| 0.9 | 0.99 |
| 0.81 | 0.9801 |
| 0.729 | 0.970299 |
| 0.6561 | 0.96059601 |
| 0.59049 | 0.95099005 |
| 0.531441 | 0.941480149 |
| 0.4782969 | 0.932065348 |
| 0.43046721 | 0.922744694 |
| 0.387420489 | 0.913517247 |
| 0.34867844 | 0.904382075 |
| 0.313810596 | 0.895338254 |
| 0.282429536 | 0.886384872 |
| 0.254186583 | 0.877521023 |
| 0.228767925 | 0.868745813 |
| 0.205891132 | 0.860058355 |

Probability curves showing the differences for a robotic apparatus operating between a standardized kitchen and a non-standardized kitchen

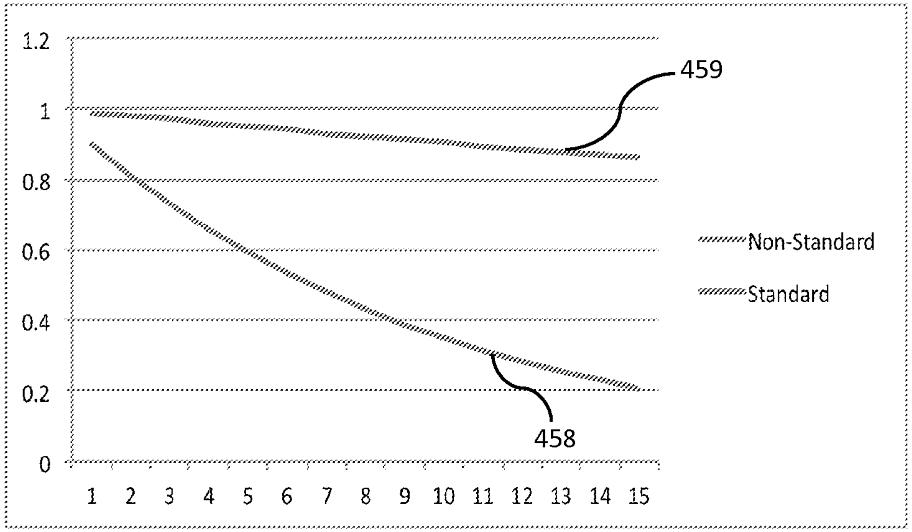


FIG. 8F

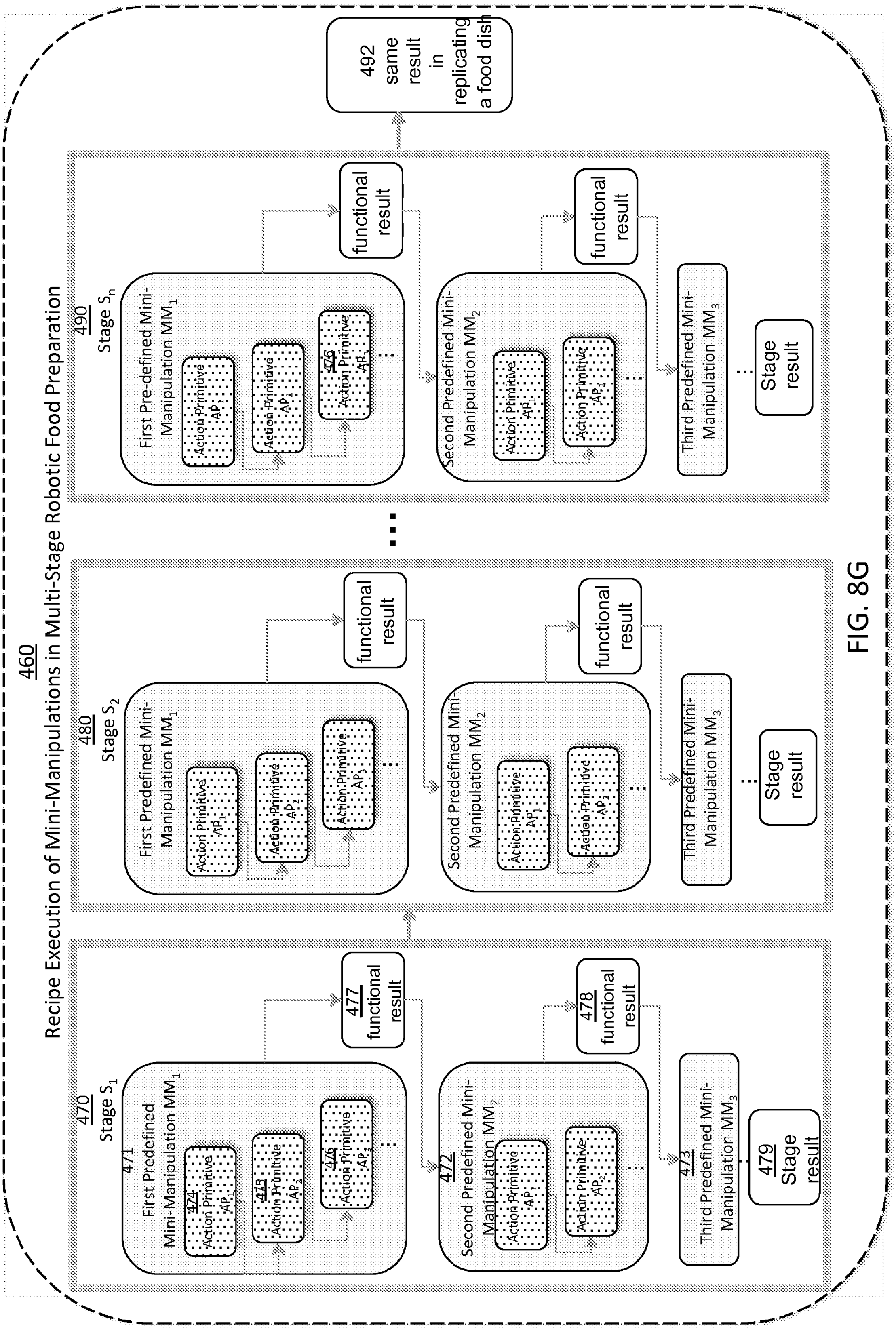
460
Recipe Execution of Mini-Manipulations in Multi-Stage Robotic Food Preparation
470 Stage S1
471 First Predefined Mini-Manipulation MM1
474 Action Primitive AP1
475 Action Primitive AP2
476 Action Primitive AP3
477 functional result
472 Second Predefined Mini-Manipulation MM2
Action Primitive AP1
Action Primitive AP2
478 functional result
473 Third Predefined Mini-Manipulation MM3
479 Stage result
480 Stage S2
First Predefined Mini-Manipulation MM1
Action Primitive AP1
Action Primitive AP2
Action Primitive AP3
functional result
Second Predefined Mini-Manipulation MM2
Action Primitive AP1
Action Primitive AP2
functional result
Third Predefined Mini-Manipulation MM3
Stage result
490 Stage Sn
First Pre-defined Mini-Manipulation MM1
Action Primitive AP1
Action Primitive AP2
476 Action Primitive AP3
functional result
Second Predefined Mini-Manipulation MM2
Action Primitive AP1
Action Primitive AP2
functional result
Third Predefined Mini-Manipulation MM3
Stage result
492 same result in replicating a food dish

FIG. 8G

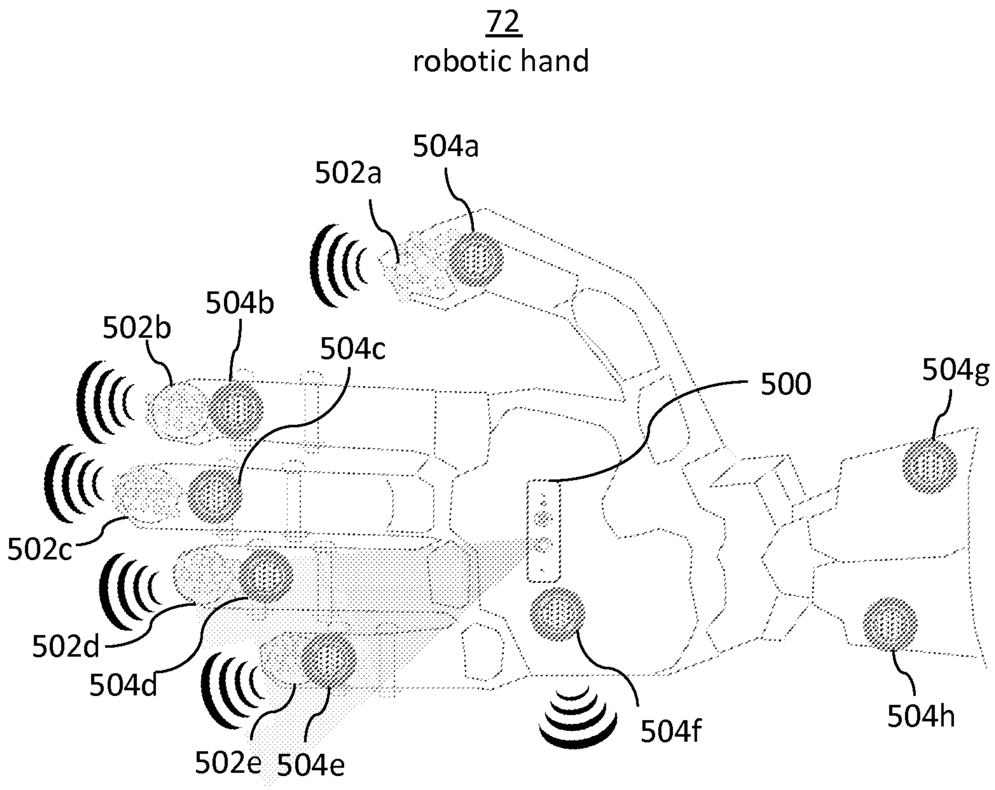


500
RGB-D (color image and depth) sensor camera placed in the middle of the palm of the robotic hand in detecting the shape of an object, and handling a kitchen tool, with broader vision of a three-dimensional modeling

502a-502e
haptic vibration sensors caps placed on the finger tips to detect texture

504a-504h
Sonar placed on fingers, in the middle of the palm of the robotic hand (sensor, laser or RFID) and wrist for detecting the distance of an object, and handling a kitchen tool

FIG. 9A

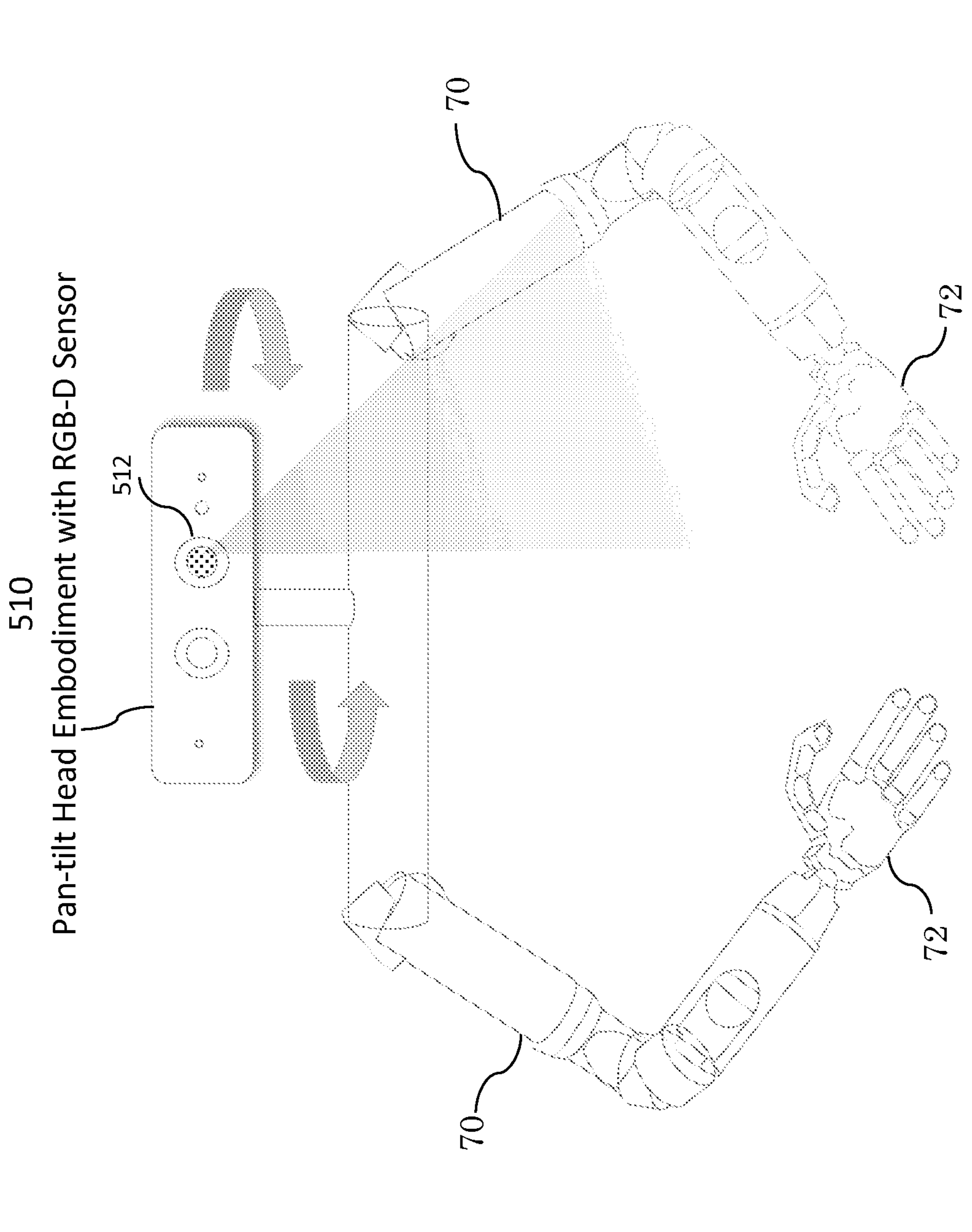


FIG. 9B

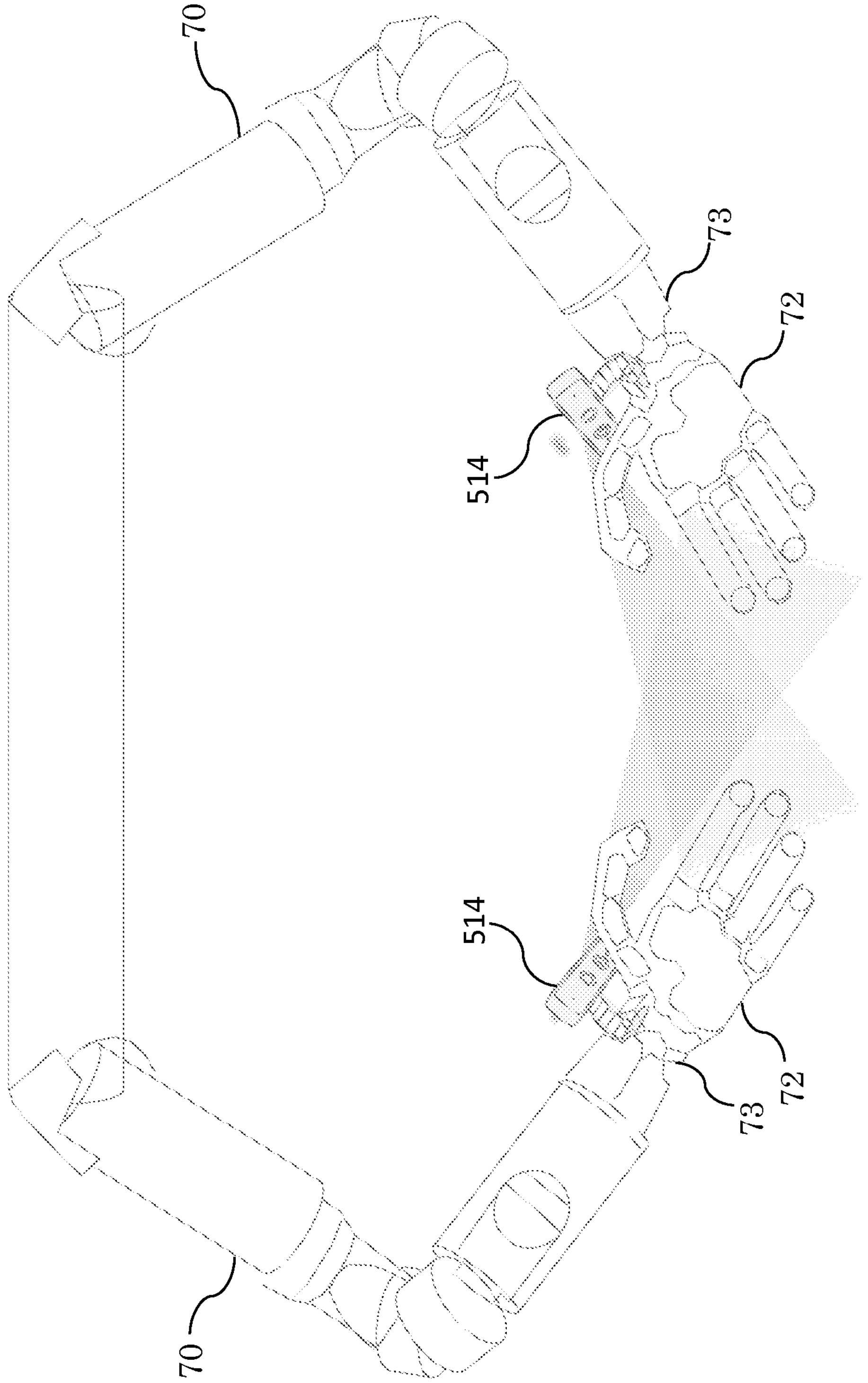


FIG. 9C

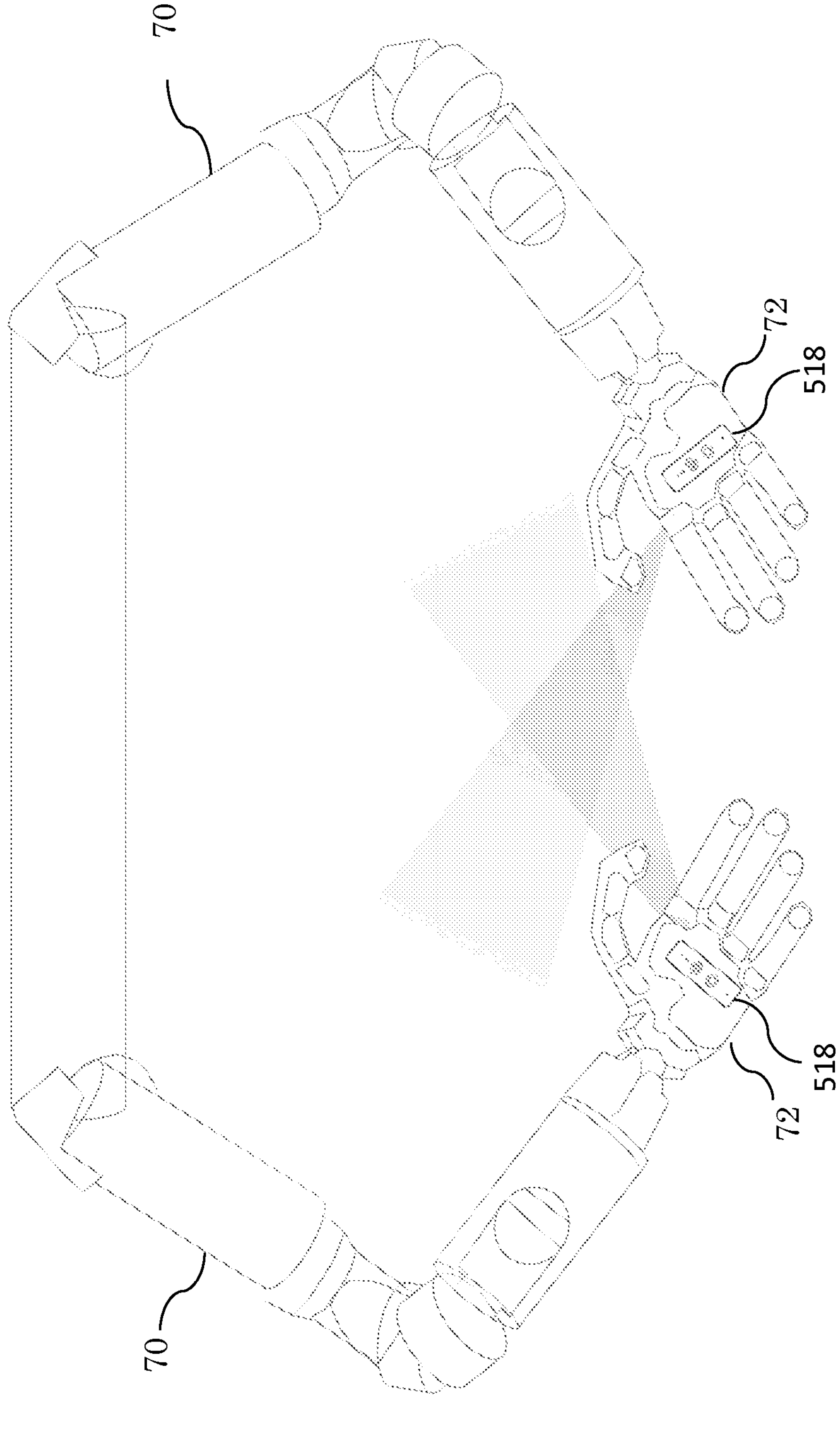


FIG. 9D

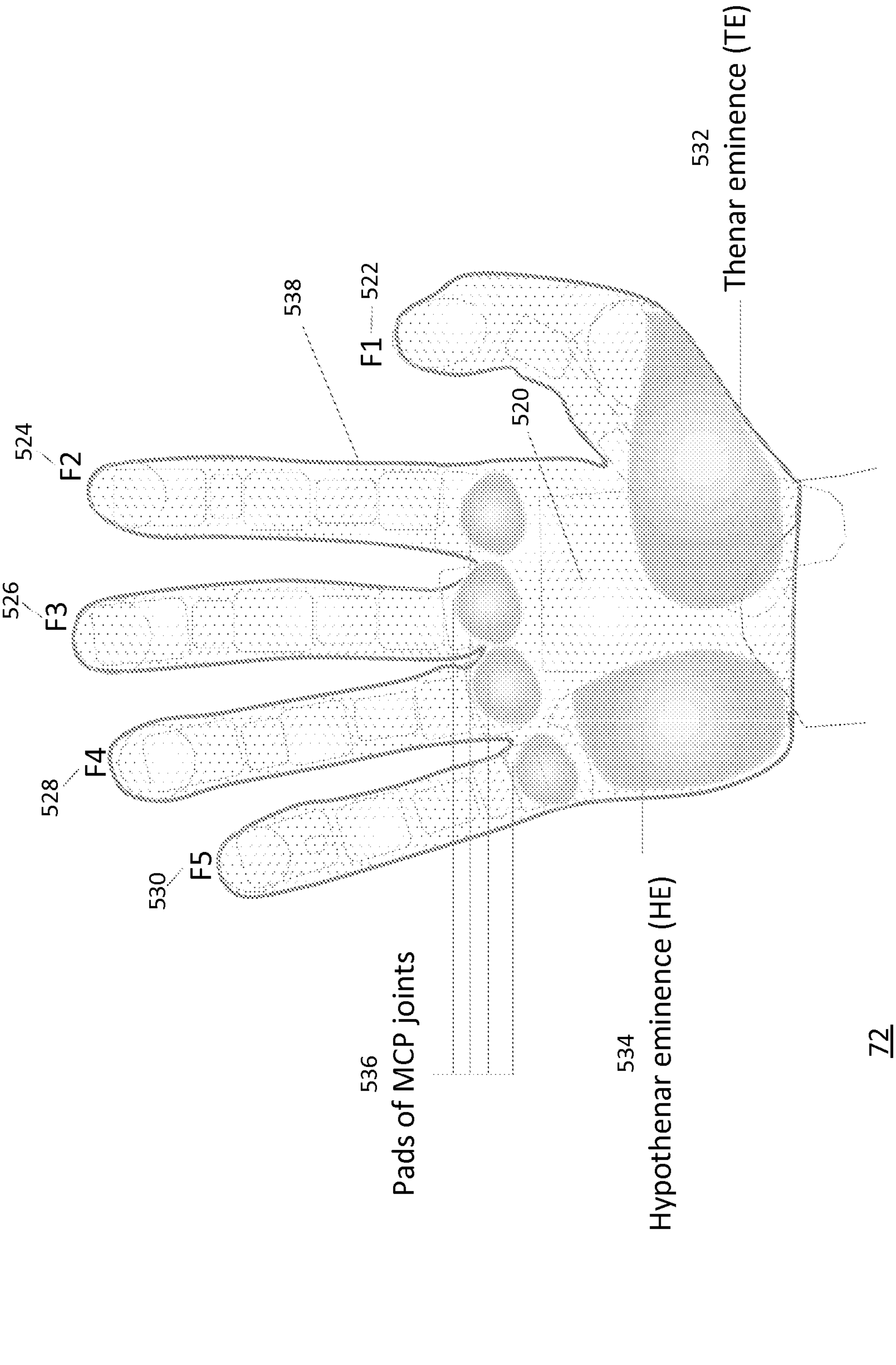
Thenar eminence (TE)
532
F1
522
538
520
524
F2
526
F3
F4
528
F5
530
Pads of MCP joints
536
Hypothenar eminence (HE)
534
72

FIG. 9E

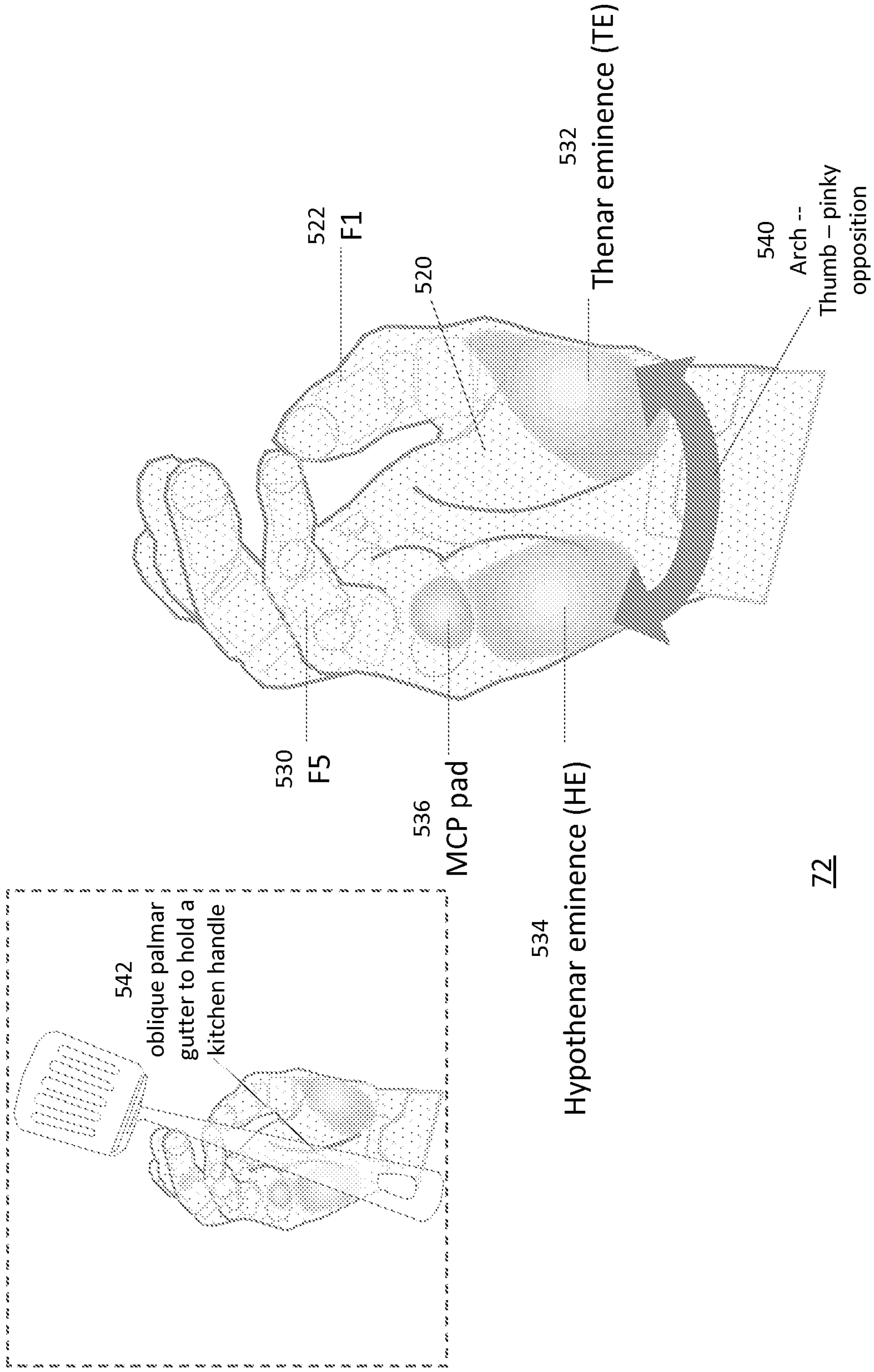
522
F1
520
532
Thenar eminence (TE)
540
Arch --
Thumb – pinky
opposition
530
F5
536
MCP pad
534
Hypothenar eminence (HE)
72
542
oblique palmar
gutter to hold a
kitchen handle

FIG. 9F

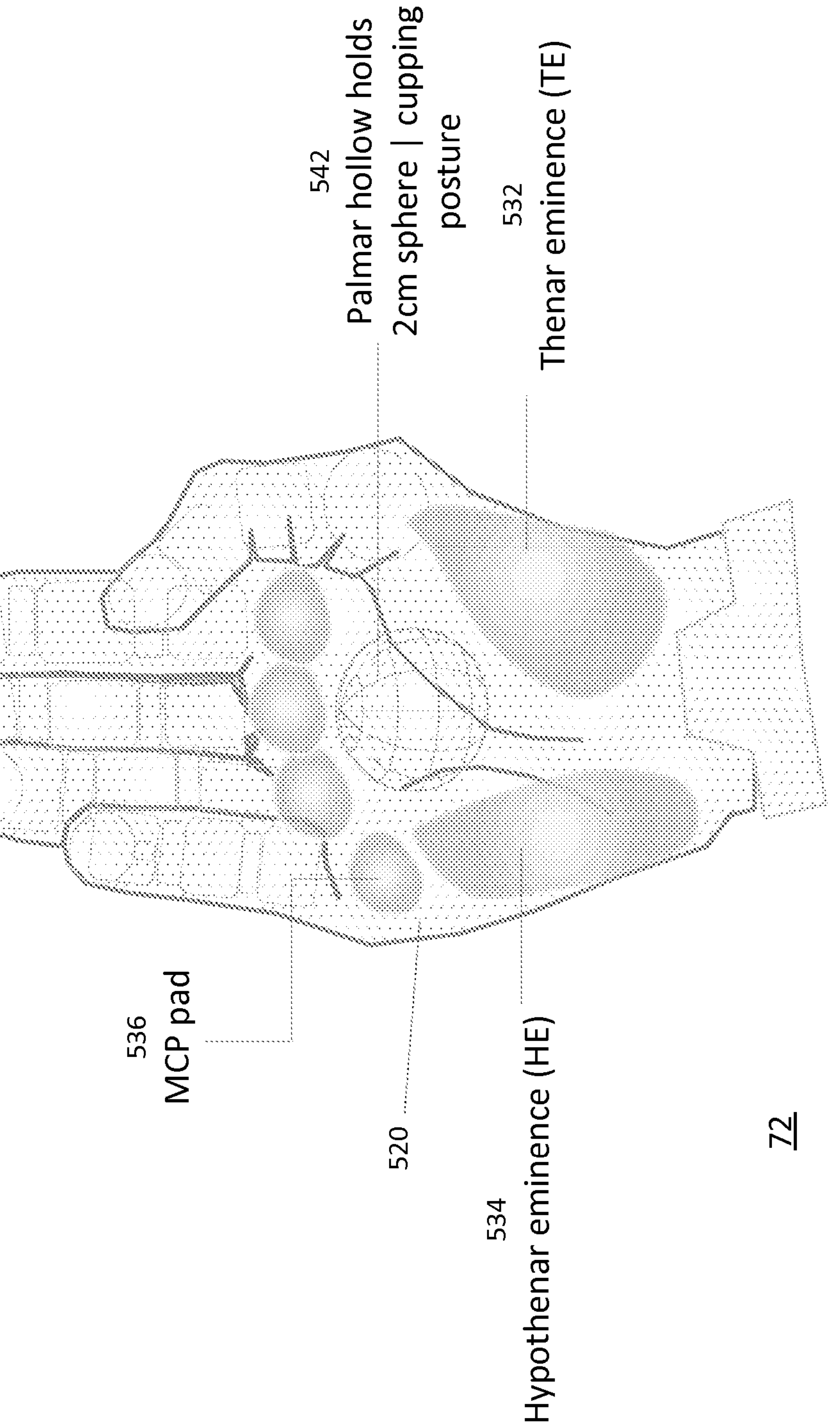
542
Palmar hollow holds
2cm sphere | cupping
posture
532
Thenar eminence (TE)
536
MCP pad
520
534
Hypothenar eminence (HE)
72

FIG. 9G

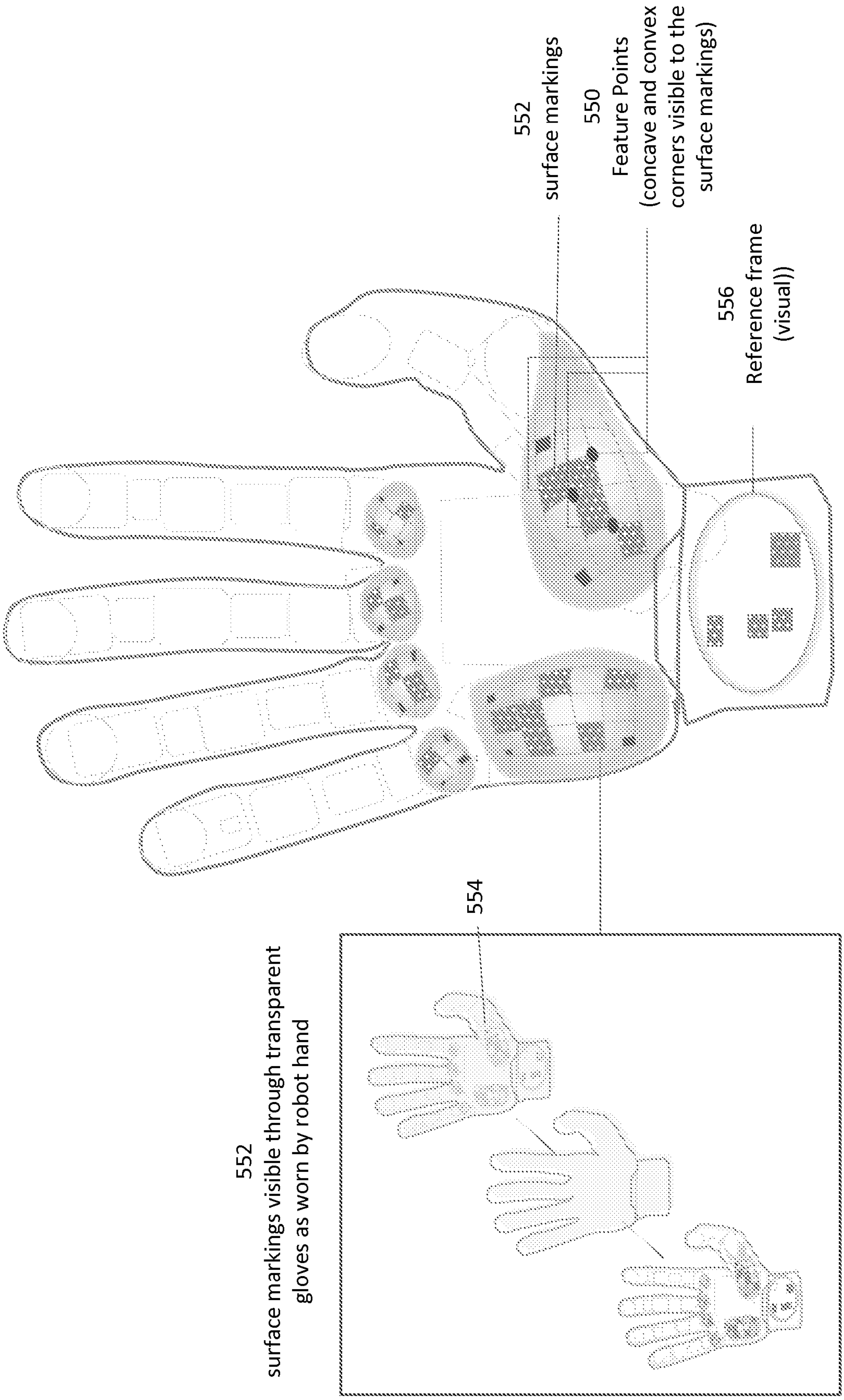
552
surface markings
550
Feature Points
(concave and convex
corners visible to the
surface markings)
556
Reference frame
(visual))
554
552
surface markings visible through transparent
gloves as worn by robot hand

FIG. 9H

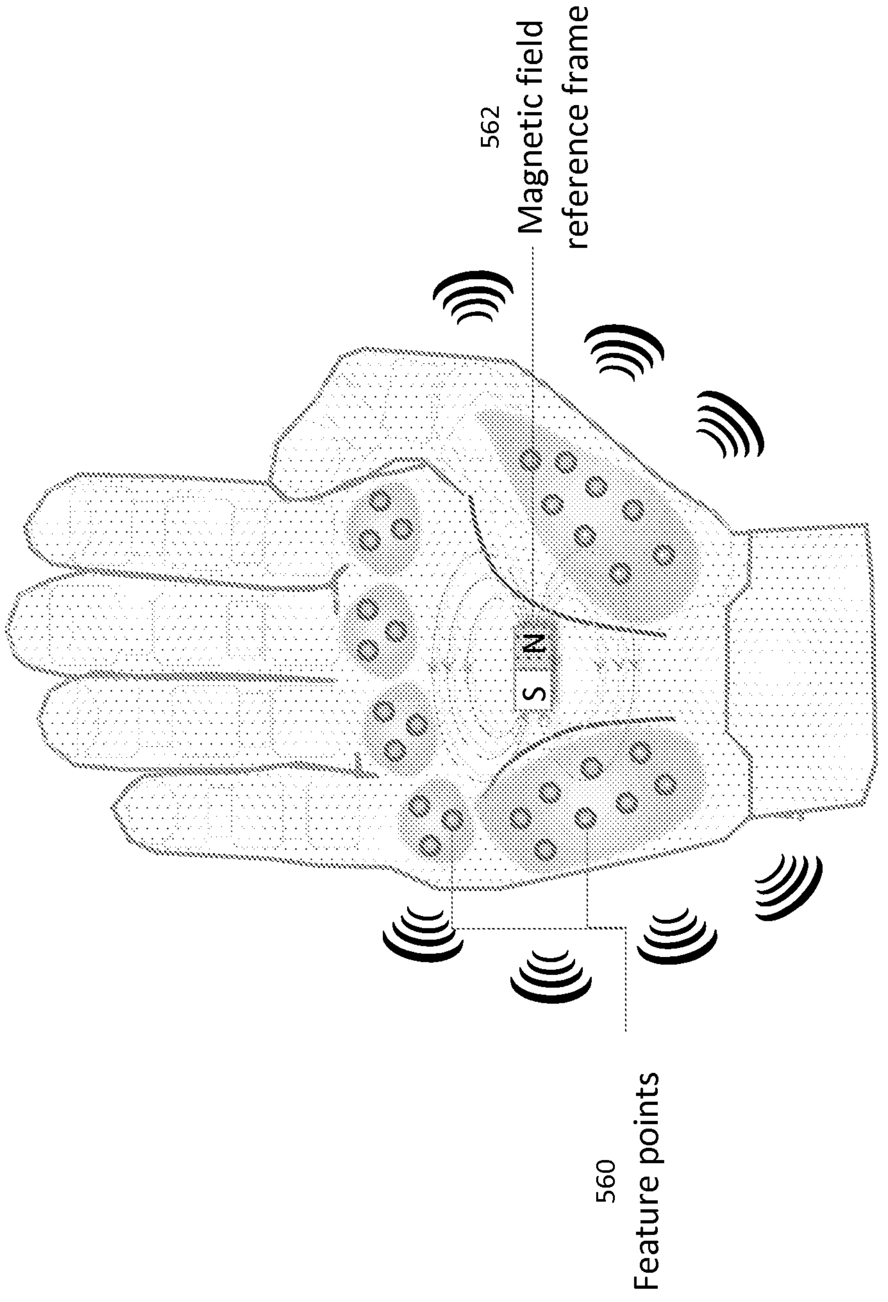


FIG. 9I

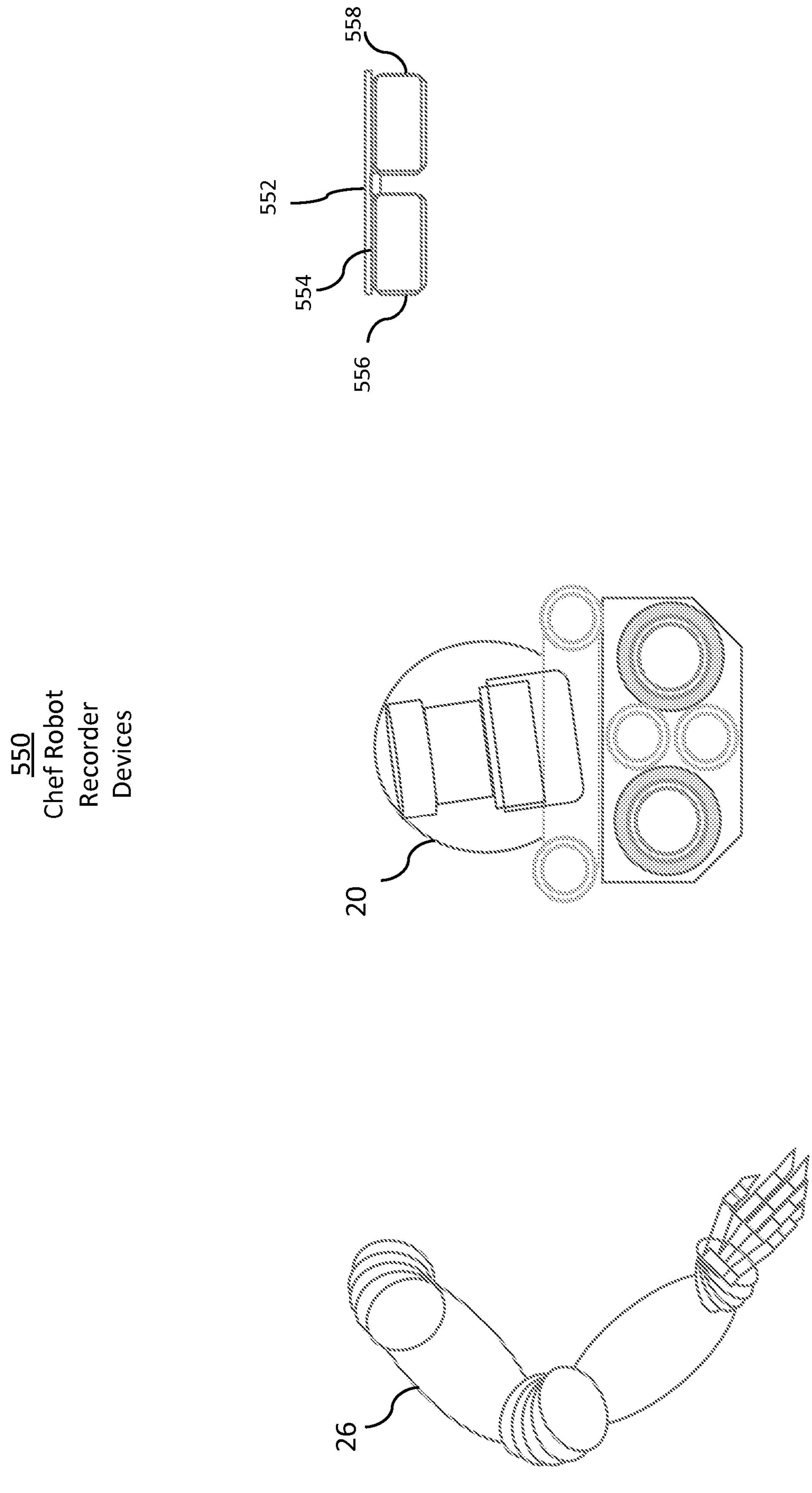


FIG. 10A

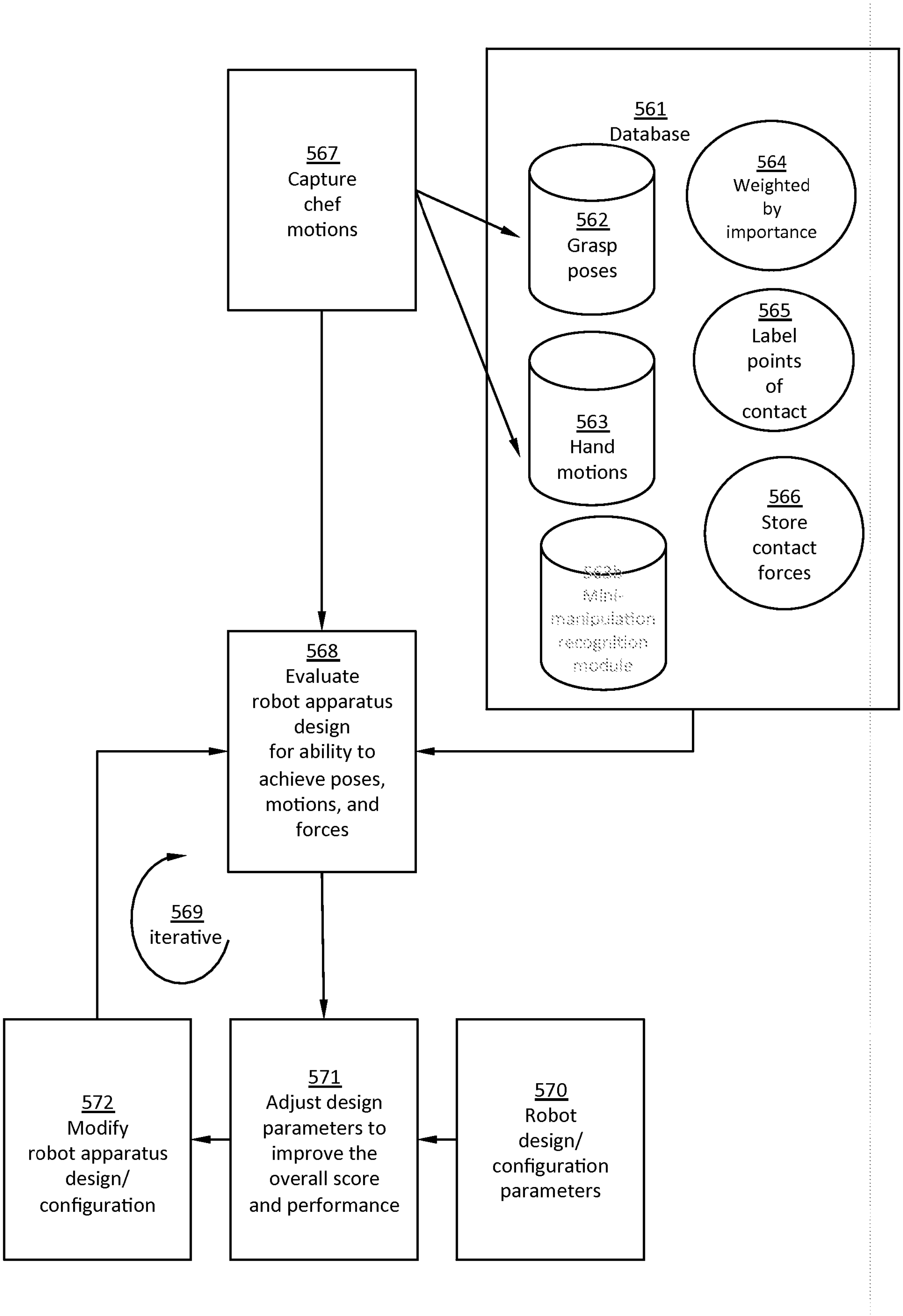
561
Database
567
Capture chef motions
562
Grasp poses
563
Hand motions
562b
Mini-manipulation recognition module
564
Weighted by importance
565
Label points of contact
566
Store contact forces
568
Evaluate robot apparatus design for ability to achieve poses, motions, and forces
569
iterative
572
Modify robot apparatus design/ configuration
571
Adjust design parameters to improve the overall score and performance
570
Robot design/ configuration parameters

560

FIG. 10B

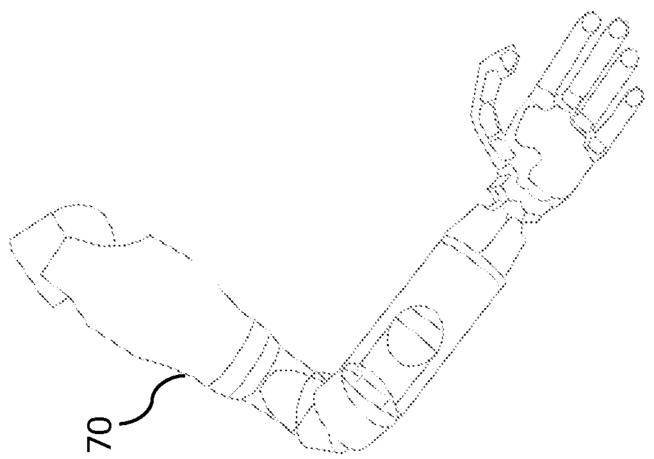


FIG. 11

FIG. 12A

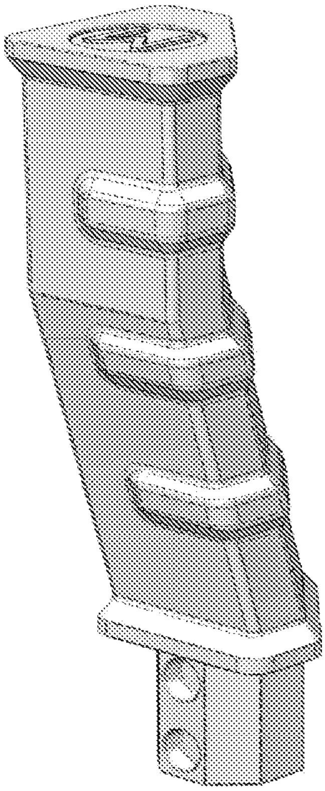

580

FIG. 12B

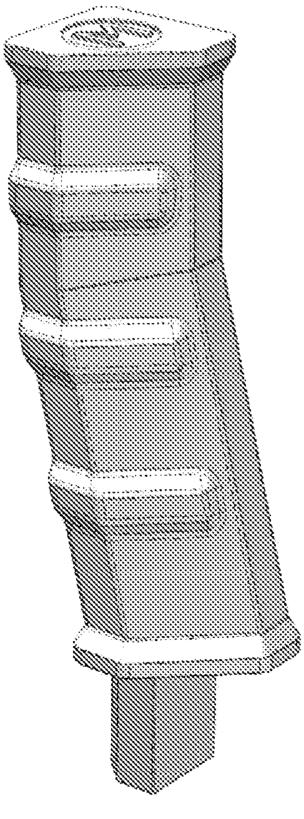

580

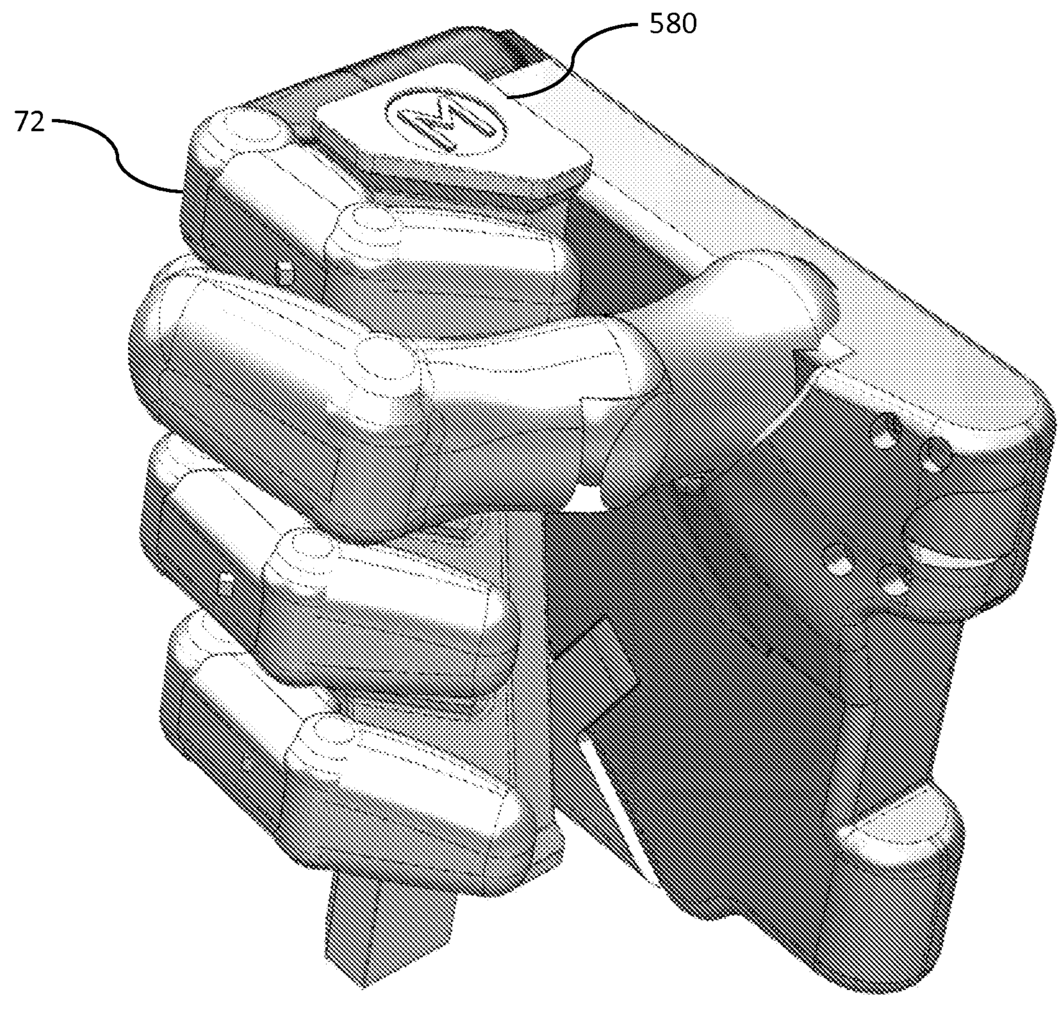


FIG. 12C

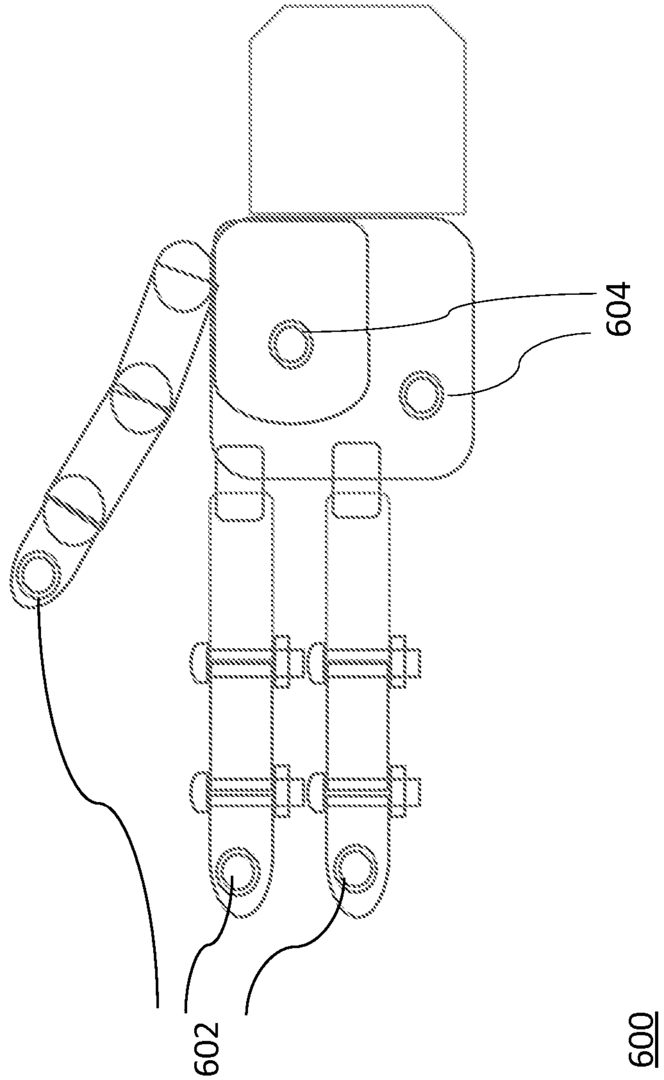


FIG. 13

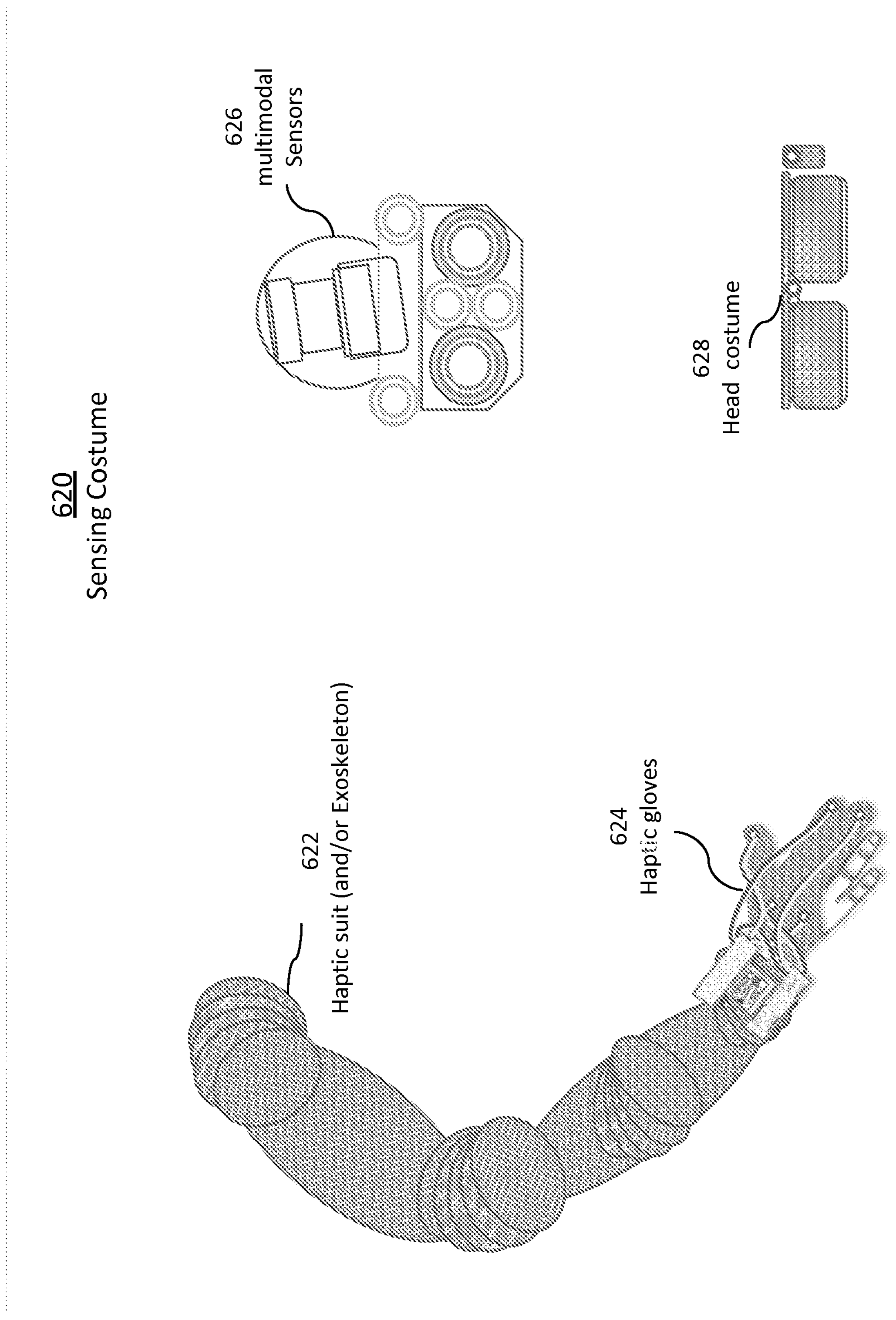
620
Sensing Costume
622
Haptic suit (and/or Exoskeleton)
624
Haptic gloves
626
multimodal
Sensors
628
Head costume

FIG. 14

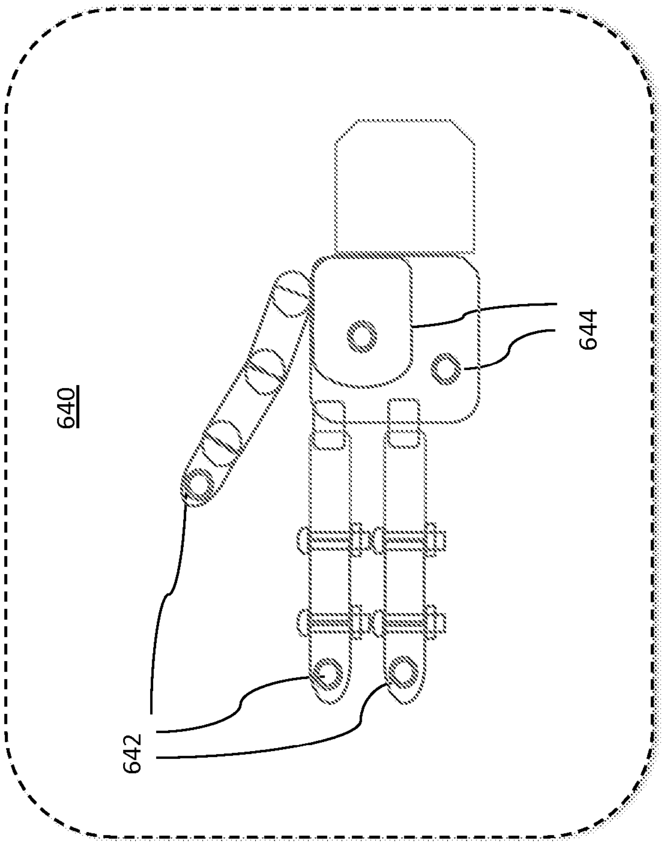


FIG. 15B

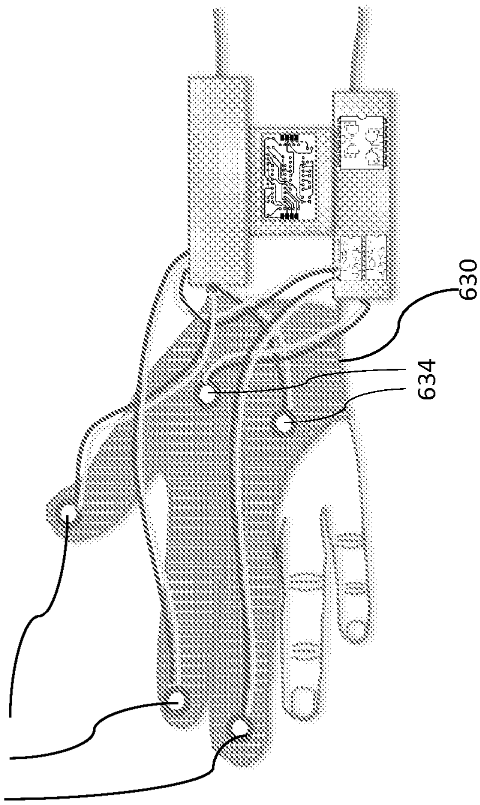


FIG. 15A

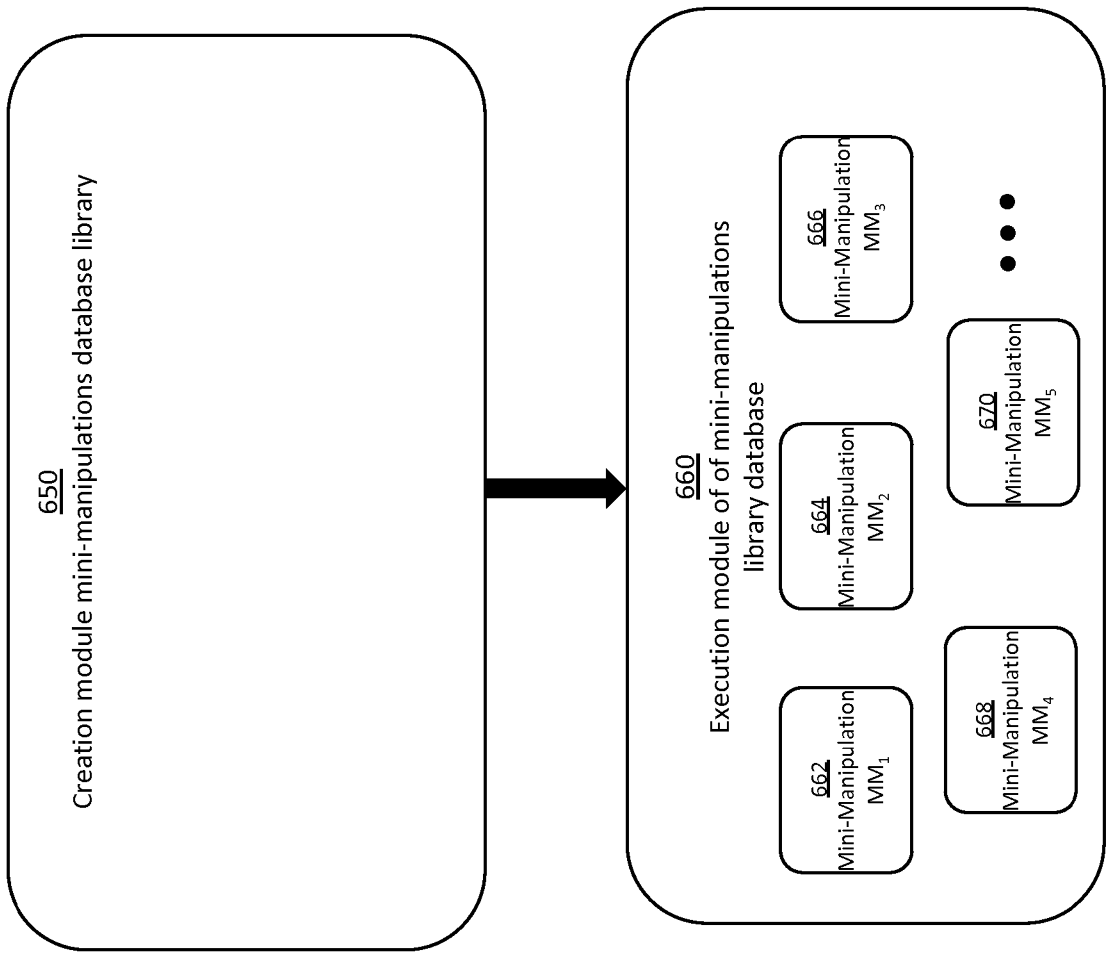
650
Creation module mini-manipulations database library
660
Execution module of of mini-manipulations library database
662
Mini-Manipulation
MM1
664
Mini-Manipulation
MM2
666
Mini-Manipulation
MM3
668
Mini-Manipulation
MM4
670
Mini-Manipulation
MM5

FIG. 16

FIG. 17A

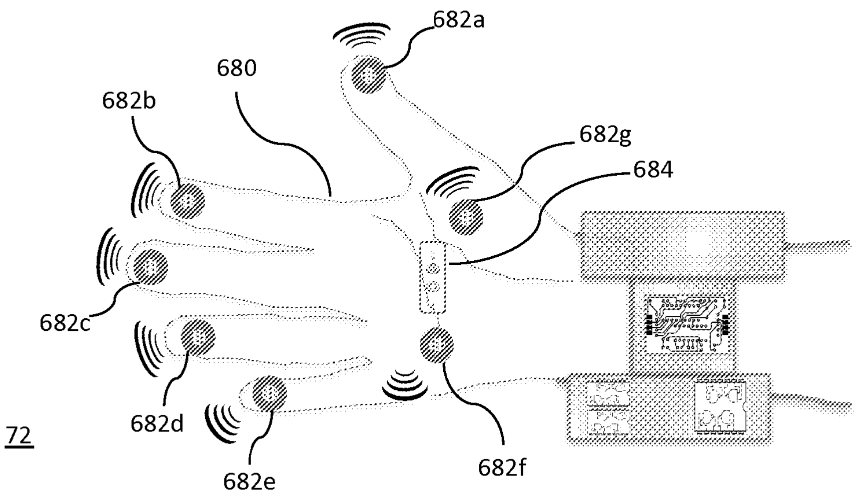


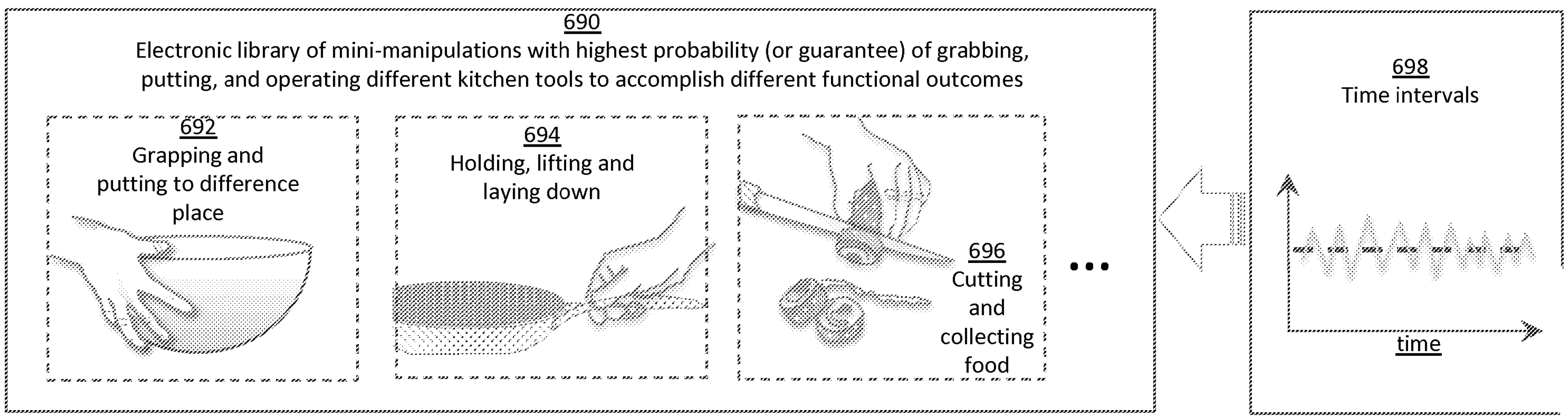


FIG. 17B

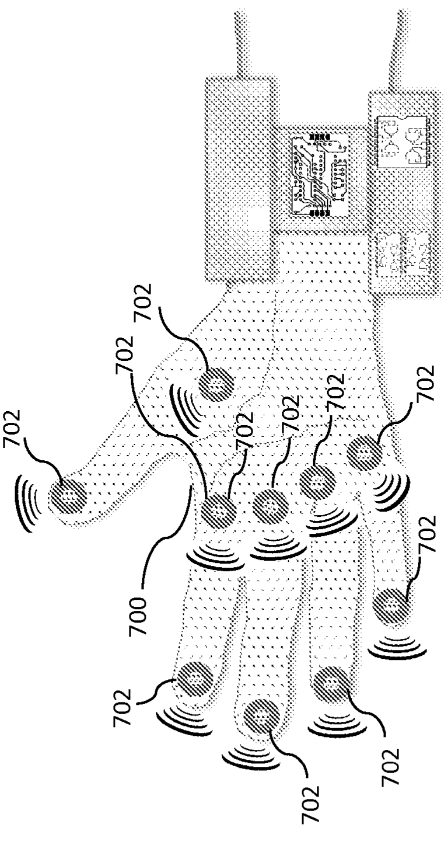


FIG. 18A

72

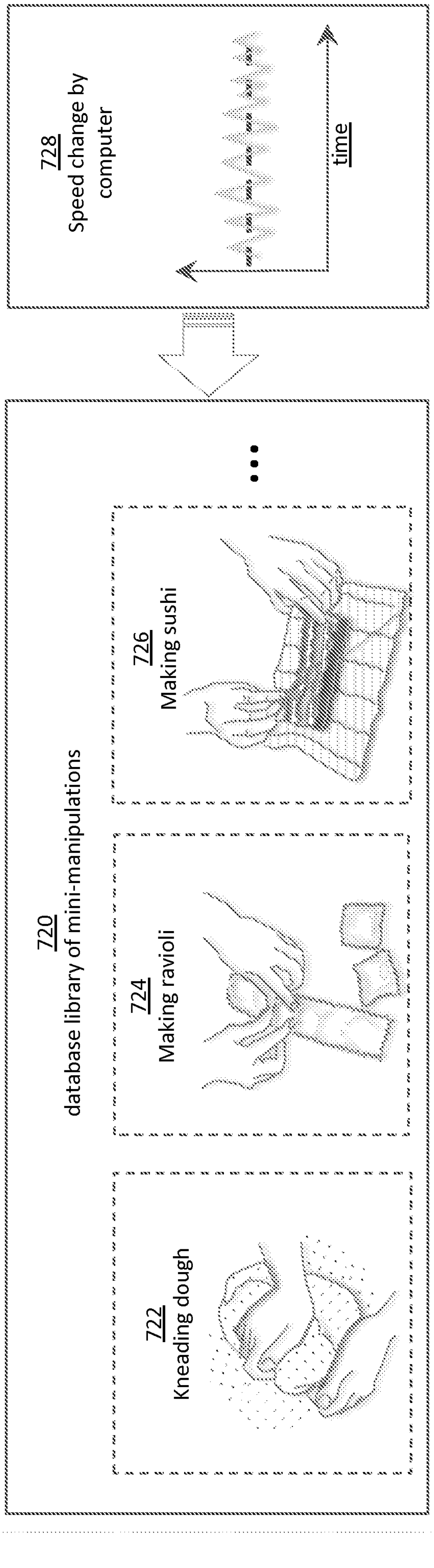


FIG. 18B

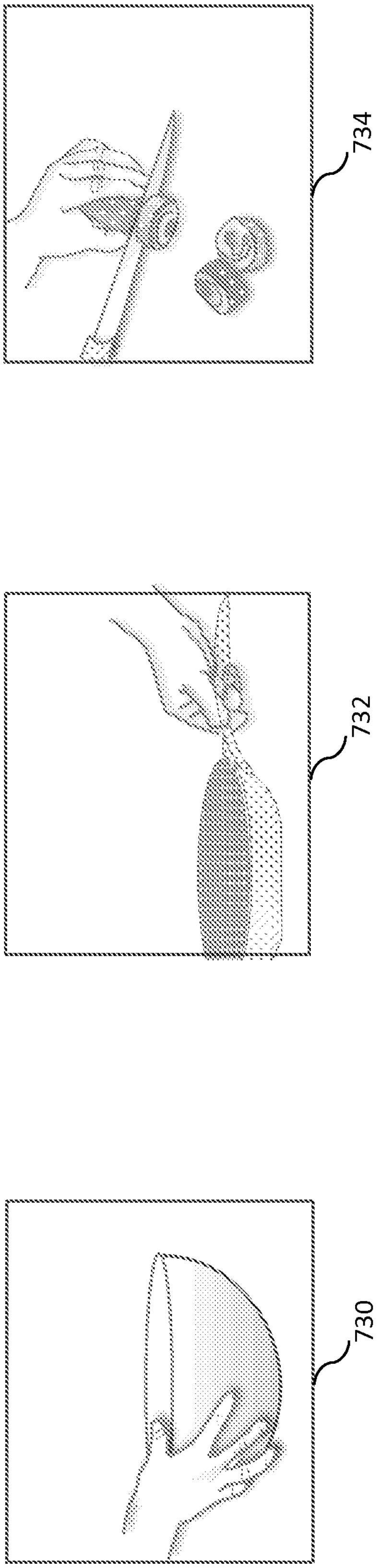


FIG. 18C

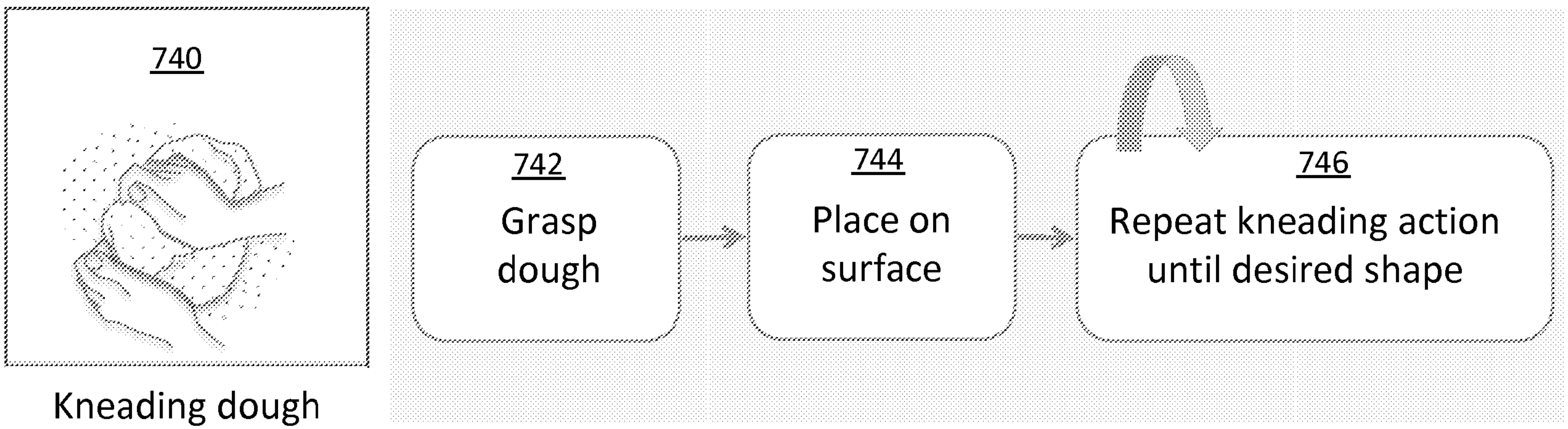
740
Kneading dough
742
Grasp dough
744
Place on surface
746
Repeat kneading action until desired shape

FIG. 18D

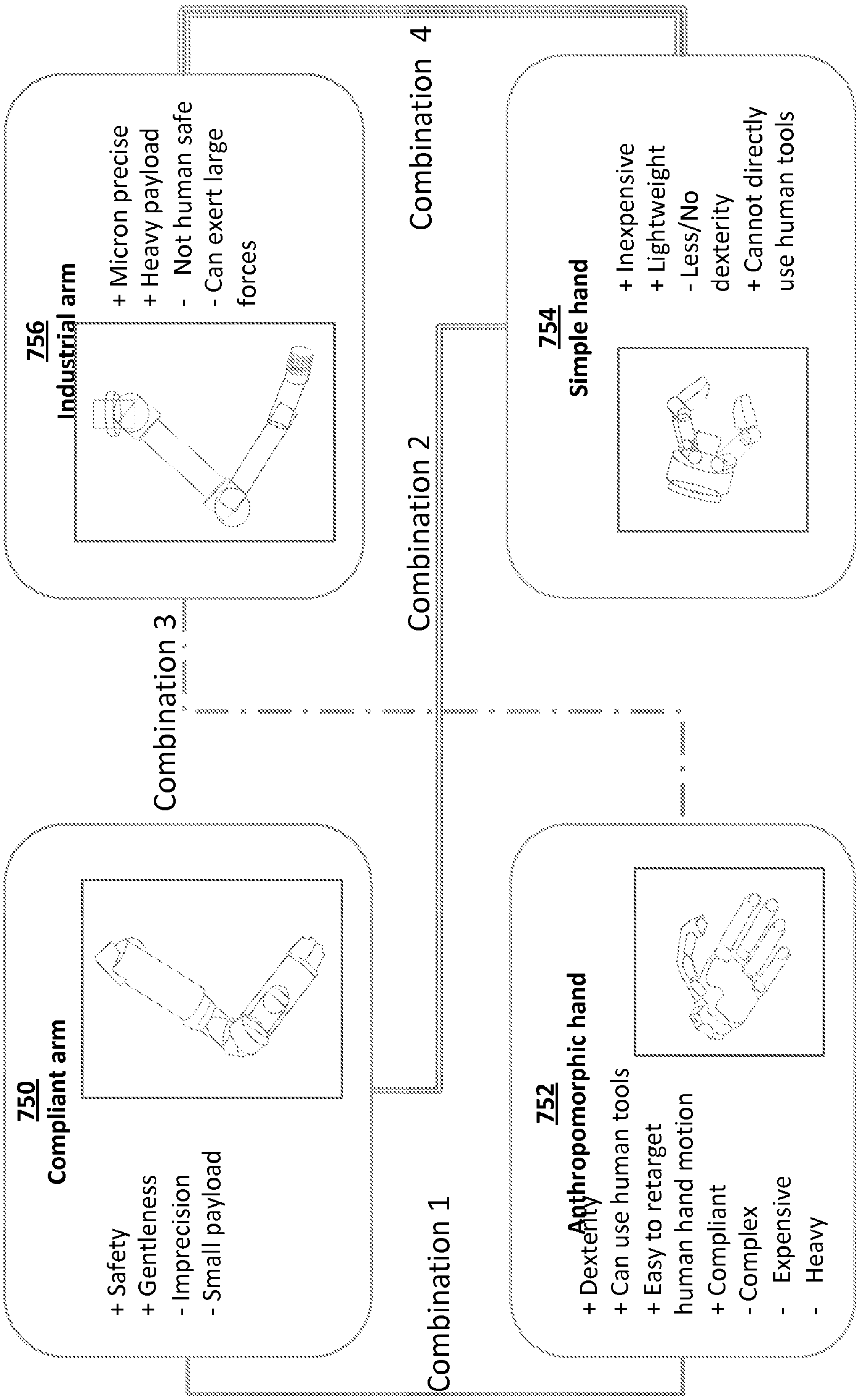
750
Compliant arm
+ Safety
+ Gentleness
- Imprecision
- Small payload
756
Industrial arm
+ Micron precise
+ Heavy payload
- Not human safe
- Can exert large forces
752
Anthropomorphic hand
+ Dexterity
+ Can use human tools
+ Easy to retarget human hand motion
+ Compliant
- Complex
- Expensive
- Heavy
754
Simple hand
+ Inexpensive
+ Lightweight
- Less/No dexterity
+ Cannot directly use human tools
Combination 1
Combination 2
Combination 3
Combination 4

FIG. 18E

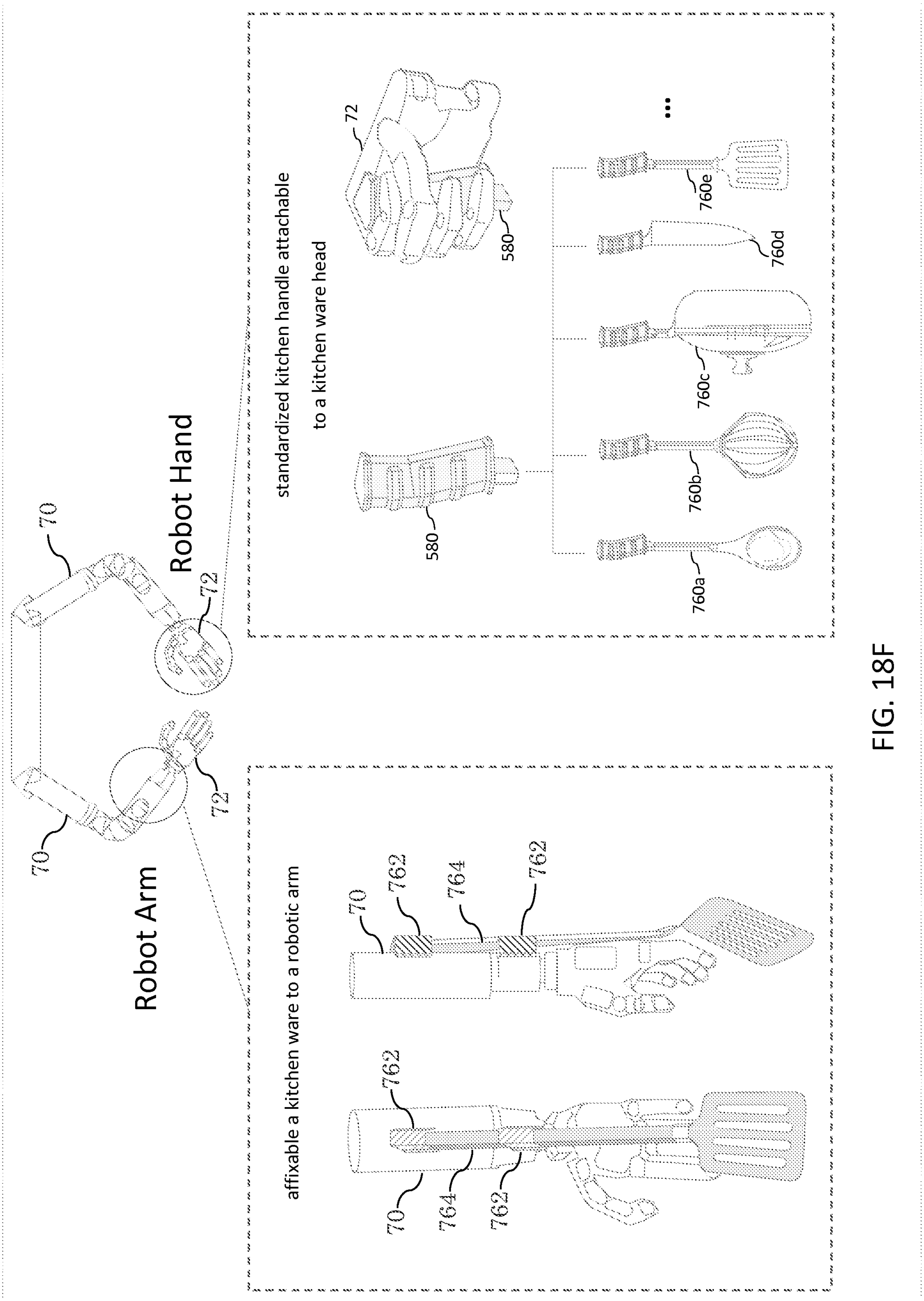
Robot Arm
Robot Hand
70
72
affixable a kitchen ware to a robotic arm
762
764
standardized kitchen handle attachable
to a kitchen ware head
580
760a
760b
760c
760d
760e

FIG. 18F

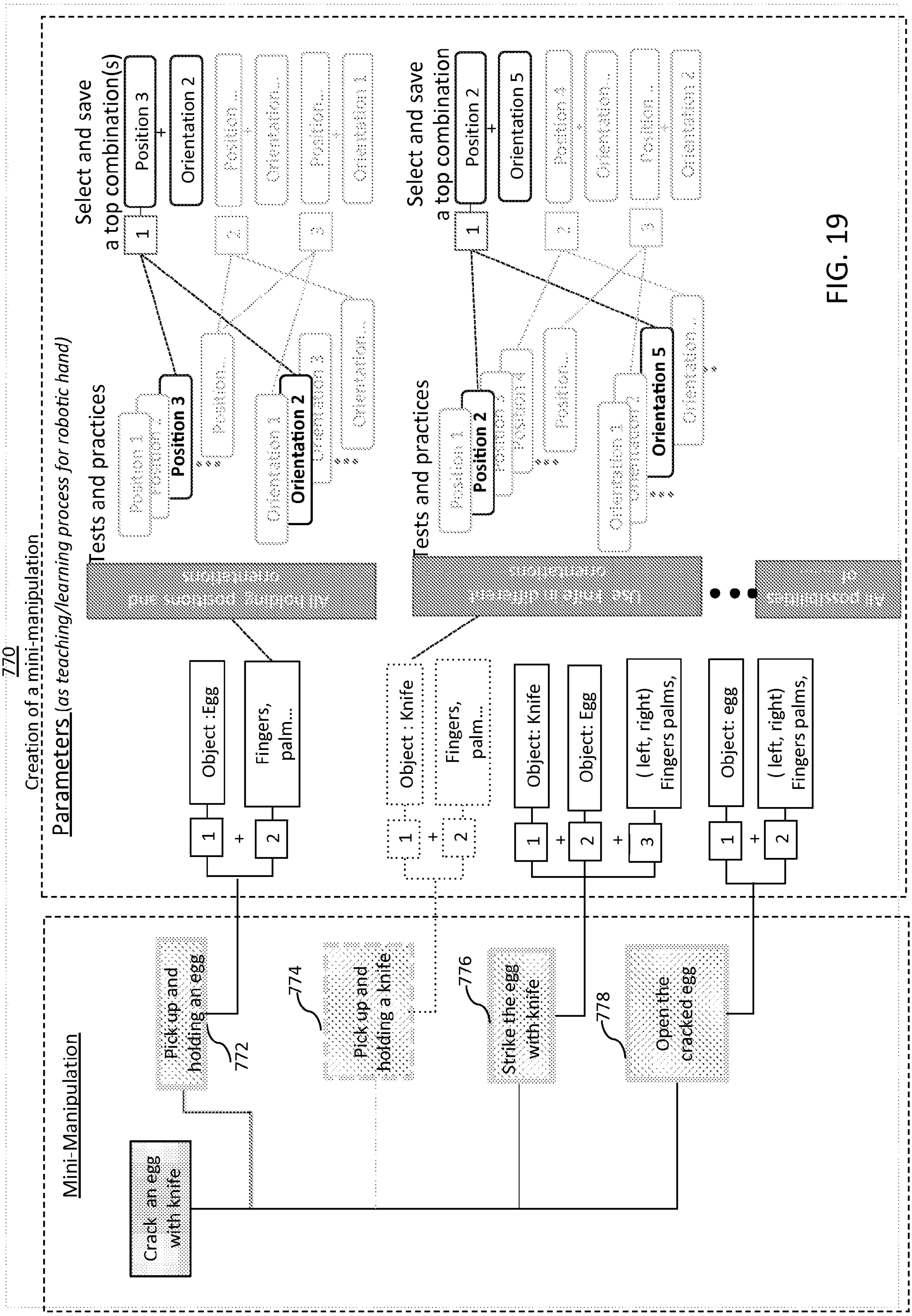
770
Creation of a mini-manipulation
Parameters (as teaching/learning process for robotic hand)
Mini-Manipulation
Crack an egg with knife
Pick up and holding an egg
772
Pick up and holding a knife
774
Strike the egg with knife
776
Open the cracked egg
778
Object :Egg
Fingers, palm...
Object : Knife
Fingers, palm...
Object: Knife
Object: Egg
( left, right) Fingers palms,
Object: egg
( left, right) Fingers palms,
All holding positions and orientations
Use knife in different orientations
All possibilities of
Tests and practices
Position 1
Position 3
Position ..
Orientation 1
Orientation 2
Orientation 3
Orientation ..
Select and save a top combination(s)
Position 3 + Orientation 2
Tests and practices
Position 2
Position 4
Orientation 5
Select and save a top combination
Position 2 + Orientation 5
Position 4 + Orientation ..
Orientation 2

FIG. 19

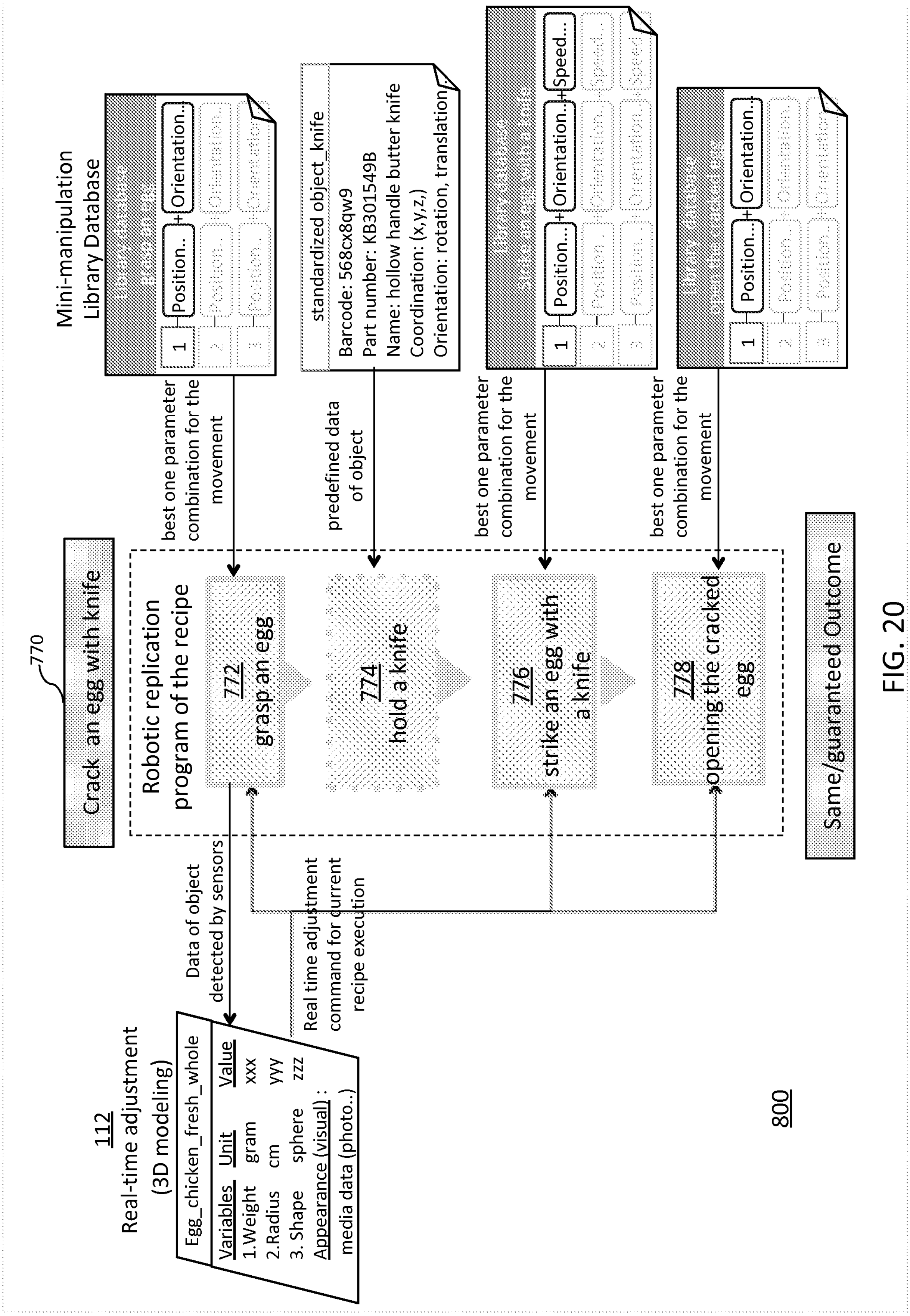
770
Crack an egg with knife
Mini-manipulation Library Database
1 Position.. + Orientation..
2 Position.. Orientation..
3 Position.. Orientation..
best one parameter combination for the movement
standardized object_knife
Barcode: 568cx8qw9
Part number: KB301549B
Name: hollow handle butter knife
Coordination: (x,y,z,)
Orientation: rotation, translation
predefined data of object
1 Position... + Orientation.. + Speed...
2 Position.. Orientation.. Speed..
3 Position.. Orientation.. Speed..
best one parameter combination for the movement
1 Position.. + Orientation..
2 Position.. Orientation..
3 Position.. Orientation..
best one parameter combination for the movement
Robotic replication program of the recipe
772 grasp an egg
774 hold a knife
776 strike an egg with a knife
778 opening the cracked egg
Same/guaranteed Outcome
Data of object detected by sensors
Real time adjustment command for current recipe execution
112 Real-time adjustment (3D modeling)
Egg_chicken_fresh_whole
Variables Unit Value
1.Weight gram xxx
2.Radius cm yyy
3. Shape sphere zzz
Appearance (visual) : media data (photo..)
800

FIG. 20

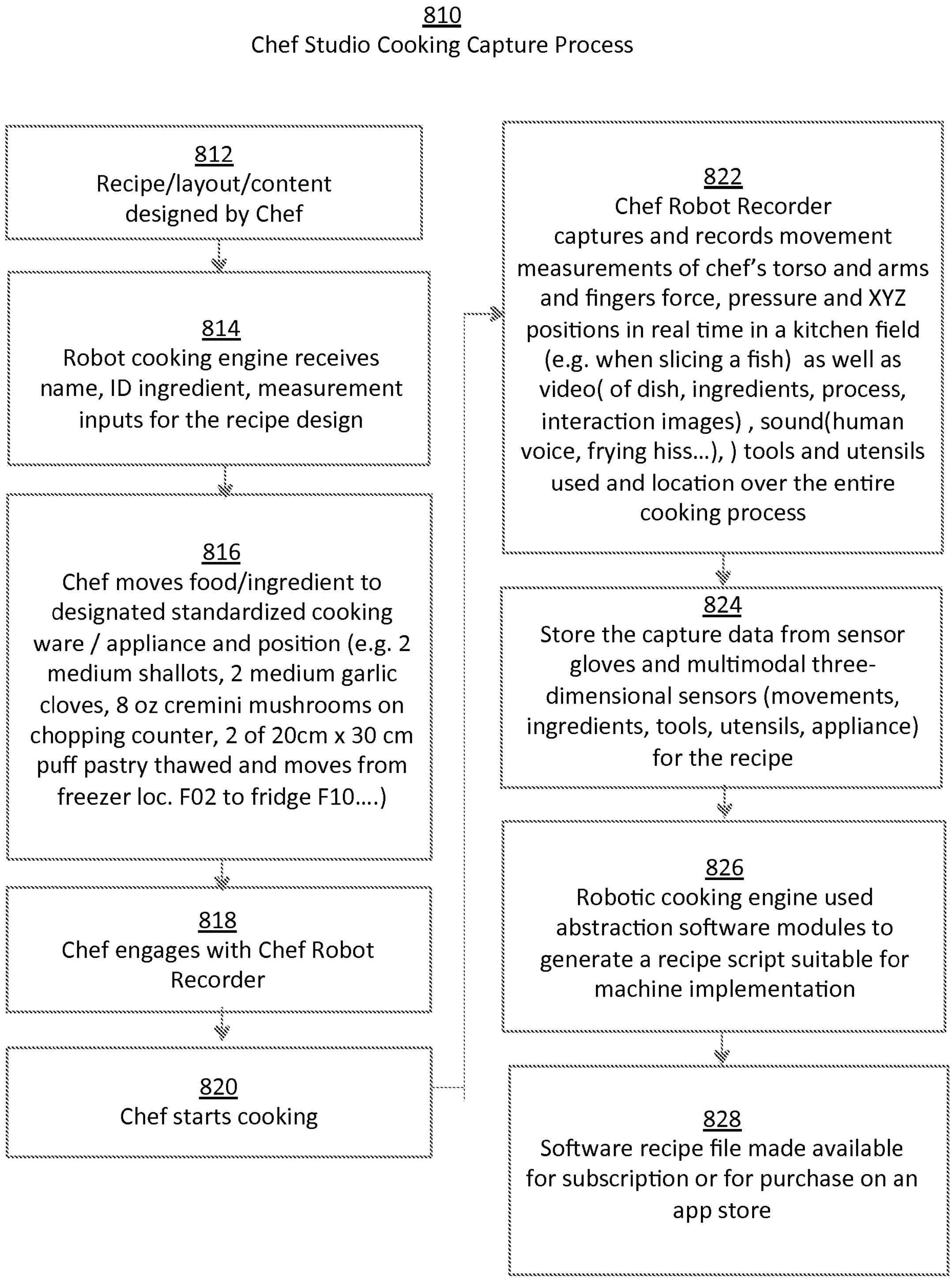
810
Chef Studio Cooking Capture Process
812
Recipe/layout/content designed by Chef
814
Robot cooking engine receives name, ID ingredient, measurement inputs for the recipe design
816
Chef moves food/ingredient to designated standardized cooking ware / appliance and position (e.g. 2 medium shallots, 2 medium garlic cloves, 8 oz cremini mushrooms on chopping counter, 2 of 20cm x 30 cm puff pastry thawed and moves from freezer loc. F02 to fridge F10....)
818
Chef engages with Chef Robot Recorder
820
Chef starts cooking
822
Chef Robot Recorder captures and records movement measurements of chef's torso and arms and fingers force, pressure and XYZ positions in real time in a kitchen field (e.g. when slicing a fish) as well as video( of dish, ingredients, process, interaction images) , sound(human voice, frying hiss...), ) tools and utensils used and location over the entire cooking process
824
Store the capture data from sensor gloves and multimodal three-dimensional sensors (movements, ingredients, tools, utensils, appliance) for the recipe
826
Robotic cooking engine used abstraction software modules to generate a recipe script suitable for machine implementation
828
Software recipe file made available for subscription or for purchase on an app store

FIG. 21

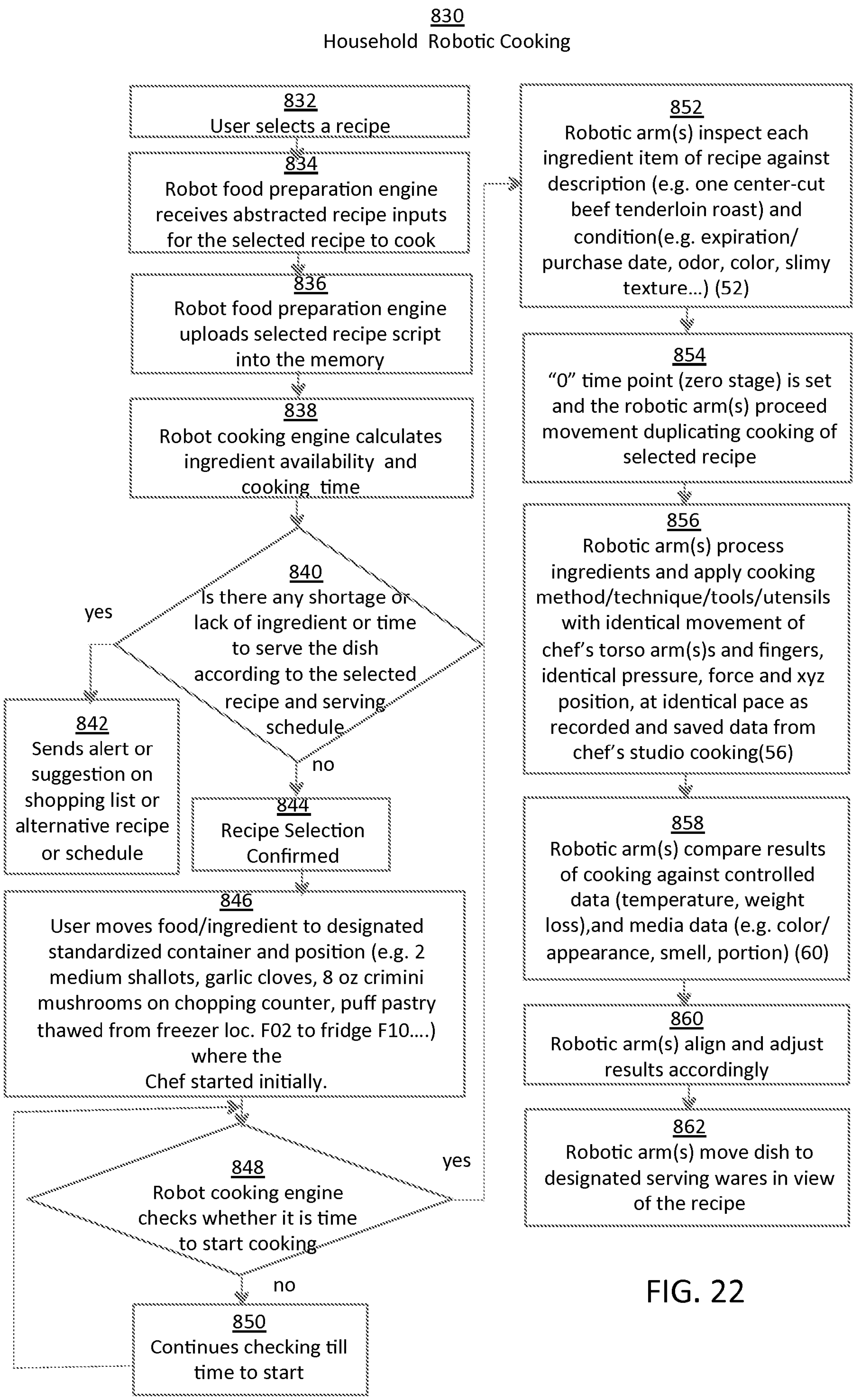

830
Household Robotic Cooking
832
User selects a recipe
834
Robot food preparation engine receives abstracted recipe inputs for the selected recipe to cook
836
Robot food preparation engine uploads selected recipe script into the memory
838
Robot cooking engine calculates ingredient availability and cooking time
840
Is there any shortage or lack of ingredient or time to serve the dish according to the selected recipe and serving schedule
yes
no
842
Sends alert or suggestion on shopping list or alternative recipe or schedule
844
Recipe Selection Confirmed
846
User moves food/ingredient to designated standardized container and position (e.g. 2 medium shallots, garlic cloves, 8 oz crimini mushrooms on chopping counter, puff pastry thawed from freezer loc. F02 to fridge F10....) where the Chef started initially.
848
Robot cooking engine checks whether it is time to start cooking
yes
no
850
Continues checking till time to start
852
Robotic arm(s) inspect each ingredient item of recipe against description (e.g. one center-cut beef tenderloin roast) and condition(e.g. expiration/ purchase date, odor, color, slimy texture...) (52)
854
"0" time point (zero stage) is set and the robotic arm(s) proceed movement duplicating cooking of selected recipe
856
Robotic arm(s) process ingredients and apply cooking method/technique/tools/utensils with identical movement of chef's torso arm(s)s and fingers, identical pressure, force and xyz position, at identical pace as recorded and saved data from chef's studio cooking(56)
858
Robotic arm(s) compare results of cooking against controlled data (temperature, weight loss),and media data (e.g. color/ appearance, smell, portion) (60)
860
Robotic arm(s) align and adjust results accordingly
862
Robotic arm(s) move dish to designated serving wares in view of the recipe


FIG. 22

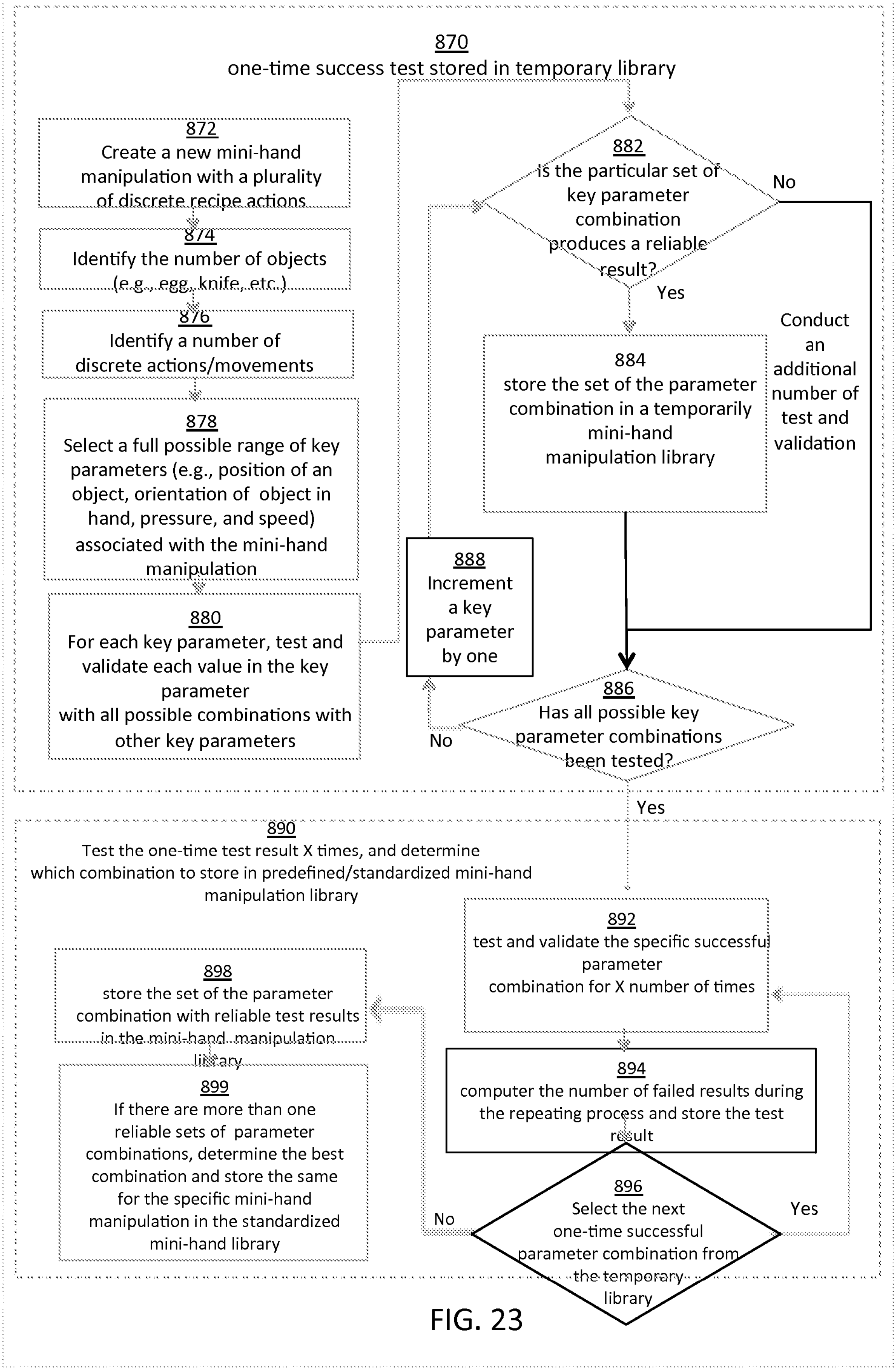
870
one-time success test stored in temporary library
872
Create a new mini-hand manipulation with a plurality of discrete recipe actions
874
Identify the number of objects (e.g., egg, knife, etc.)
876
Identify a number of discrete actions/movements
878
Select a full possible range of key parameters (e.g., position of an object, orientation of object in hand, pressure, and speed) associated with the mini-hand manipulation
880
For each key parameter, test and validate each value in the key parameter with all possible combinations with other key parameters
882
Is the particular set of key parameter combination produces a reliable result?
No
Yes
884
store the set of the parameter combination in a temporarily mini-hand manipulation library
Conduct an additional number of test and validation
888
Increment a key parameter by one
886
Has all possible key parameter combinations been tested?
No
Yes
890
Test the one-time test result X times, and determine which combination to store in predefined/standardized mini-hand manipulation library
892
test and validate the specific successful parameter combination for X number of times
894
computer the number of failed results during the repeating process and store the test result
896
Select the next one-time successful parameter combination from the temporary library
No
Yes
898
store the set of the parameter combination with reliable test results in the mini-hand manipulation library
899
If there are more than one reliable sets of parameter combinations, determine the best combination and store the same for the specific mini-hand manipulation in the standardized mini-hand library

FIG. 23

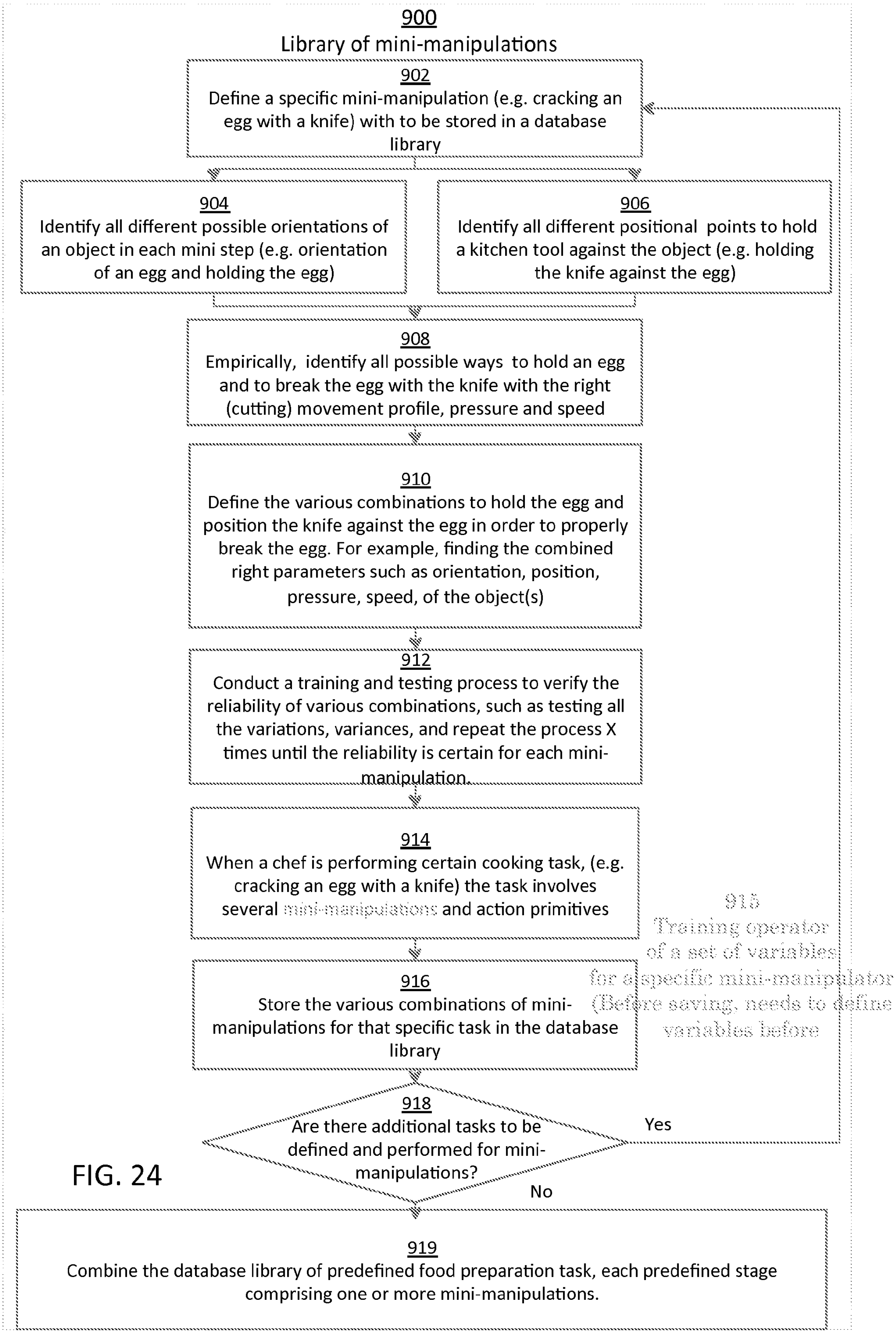
900
Library of mini-manipulations
902
Define a specific mini-manipulation (e.g. cracking an egg with a knife) with to be stored in a database library
904
Identify all different possible orientations of an object in each mini step (e.g. orientation of an egg and holding the egg)
906
Identify all different positional points to hold a kitchen tool against the object (e.g. holding the knife against the egg)
908
Empirically, identify all possible ways to hold an egg and to break the egg with the knife with the right (cutting) movement profile, pressure and speed
910
Define the various combinations to hold the egg and position the knife against the egg in order to properly break the egg. For example, finding the combined right parameters such as orientation, position, pressure, speed, of the object(s)
912
Conduct a training and testing process to verify the reliability of various combinations, such as testing all the variations, variances, and repeat the process X times until the reliability is certain for each mini-manipulation.
914
When a chef is performing certain cooking task, (e.g. cracking an egg with a knife) the task involves several mini-manipulations and action primitives
915
Training operator of a set of variables for a specific mini-manipulator (Before saving, needs to define variables before
916
Store the various combinations of mini-manipulations for that specific task in the database library
918
Are there additional tasks to be defined and performed for mini-manipulations?
Yes
No
919
Combine the database library of predefined food preparation task, each predefined stage comprising one or more mini-manipulations.

FIG. 24

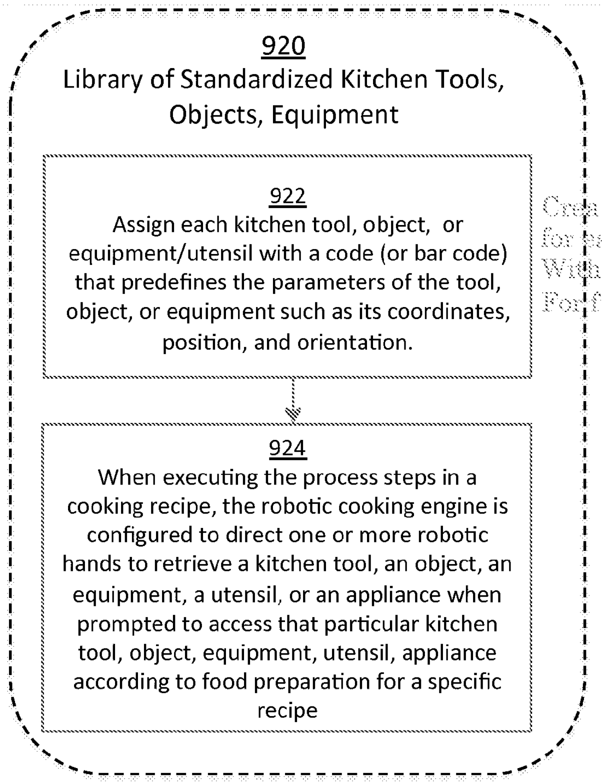
920
Library of Standardized Kitchen Tools, Objects, Equipment
922
Assign each kitchen tool, object, or equipment/utensil with a code (or bar code) that predefines the parameters of the tool, object, or equipment such as its coordinates, position, and orientation.
924
When executing the process steps in a cooking recipe, the robotic cooking engine is configured to direct one or more robotic hands to retrieve a kitchen tool, an object, an equipment, a utensil, or an appliance when prompted to access that particular kitchen tool, object, equipment, utensil, appliance according to food preparation for a specific recipe
Create a code for a 3D model
for each object / standard kitcher
With precise shape and dimensic
For future unlimited use

FIG. 25

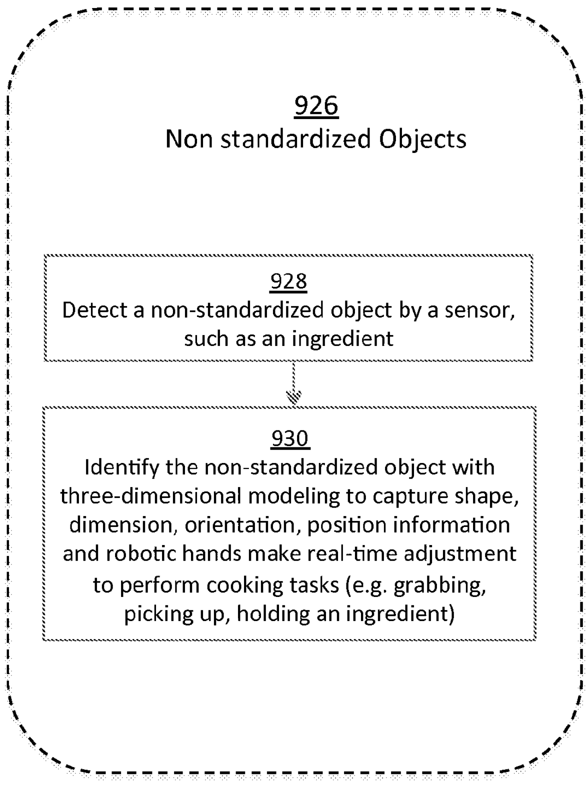
926
Non standardized Objects
928
Detect a non-standardized object by a sensor, such as an ingredient
930
Identify the non-standardized object with three-dimensional modeling to capture shape, dimension, orientation, position information and robotic hands make real-time adjustment to perform cooking tasks (e.g. grabbing, picking up, holding an ingredient)

FIG. 26

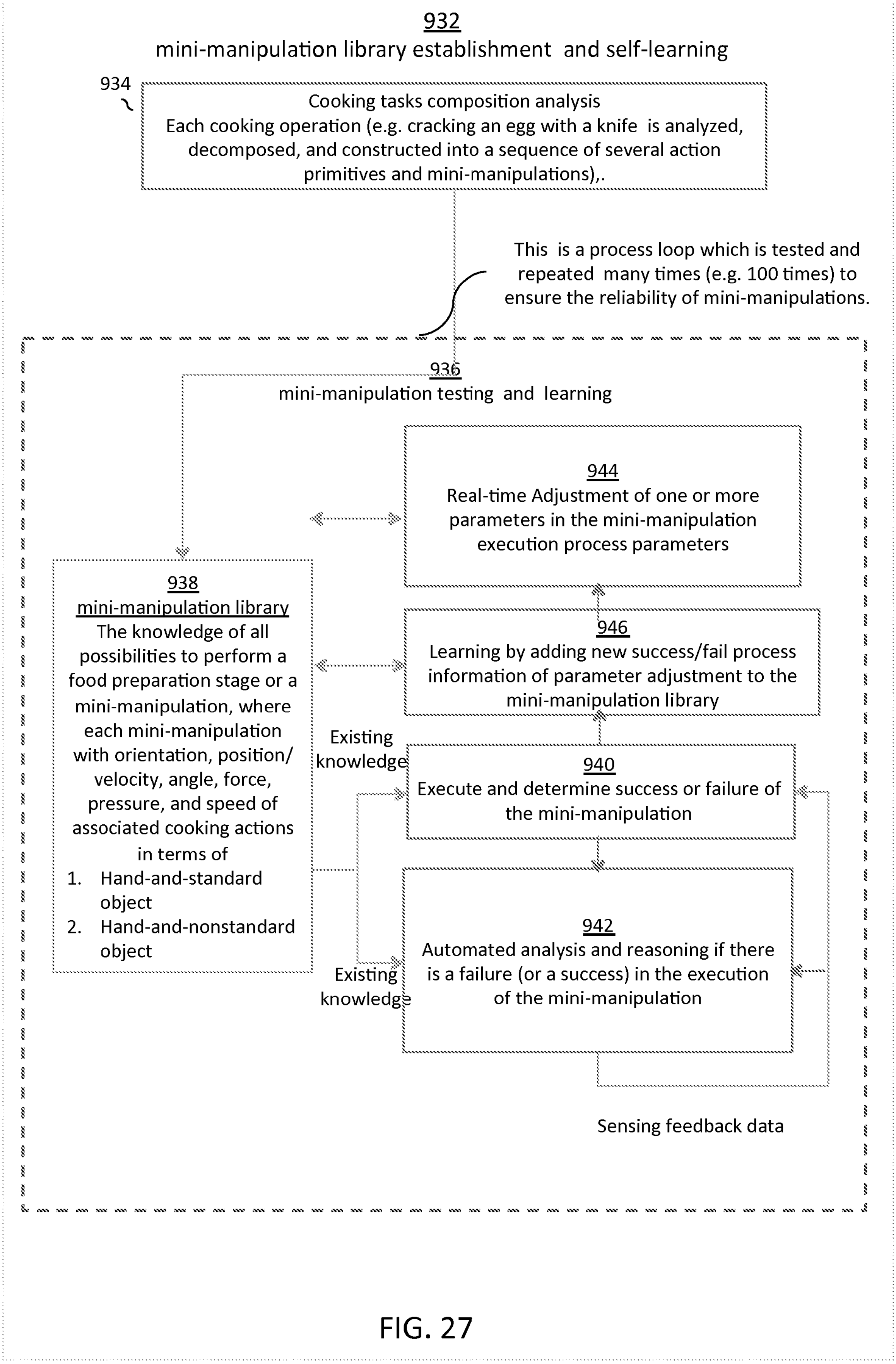
932
mini-manipulation library establishment and self-learning
934
Cooking tasks composition analysis
Each cooking operation (e.g. cracking an egg with a knife is analyzed, decomposed, and constructed into a sequence of several action primitives and mini-manipulations),.
This is a process loop which is tested and repeated many times (e.g. 100 times) to ensure the reliability of mini-manipulations.
936
mini-manipulation testing and learning
944
Real-time Adjustment of one or more parameters in the mini-manipulation execution process parameters
938
mini-manipulation library
The knowledge of all possibilities to perform a food preparation stage or a mini-manipulation, where each mini-manipulation with orientation, position/ velocity, angle, force, pressure, and speed of associated cooking actions in terms of
1. Hand-and-standard object
2. Hand-and-nonstandard object
946
Learning by adding new success/fail process information of parameter adjustment to the mini-manipulation library
Existing knowledge
940
Execute and determine success or failure of the mini-manipulation
942
Automated analysis and reasoning if there is a failure (or a success) in the execution of the mini-manipulation
Existing knowledge
Sensing feedback data

FIG. 27

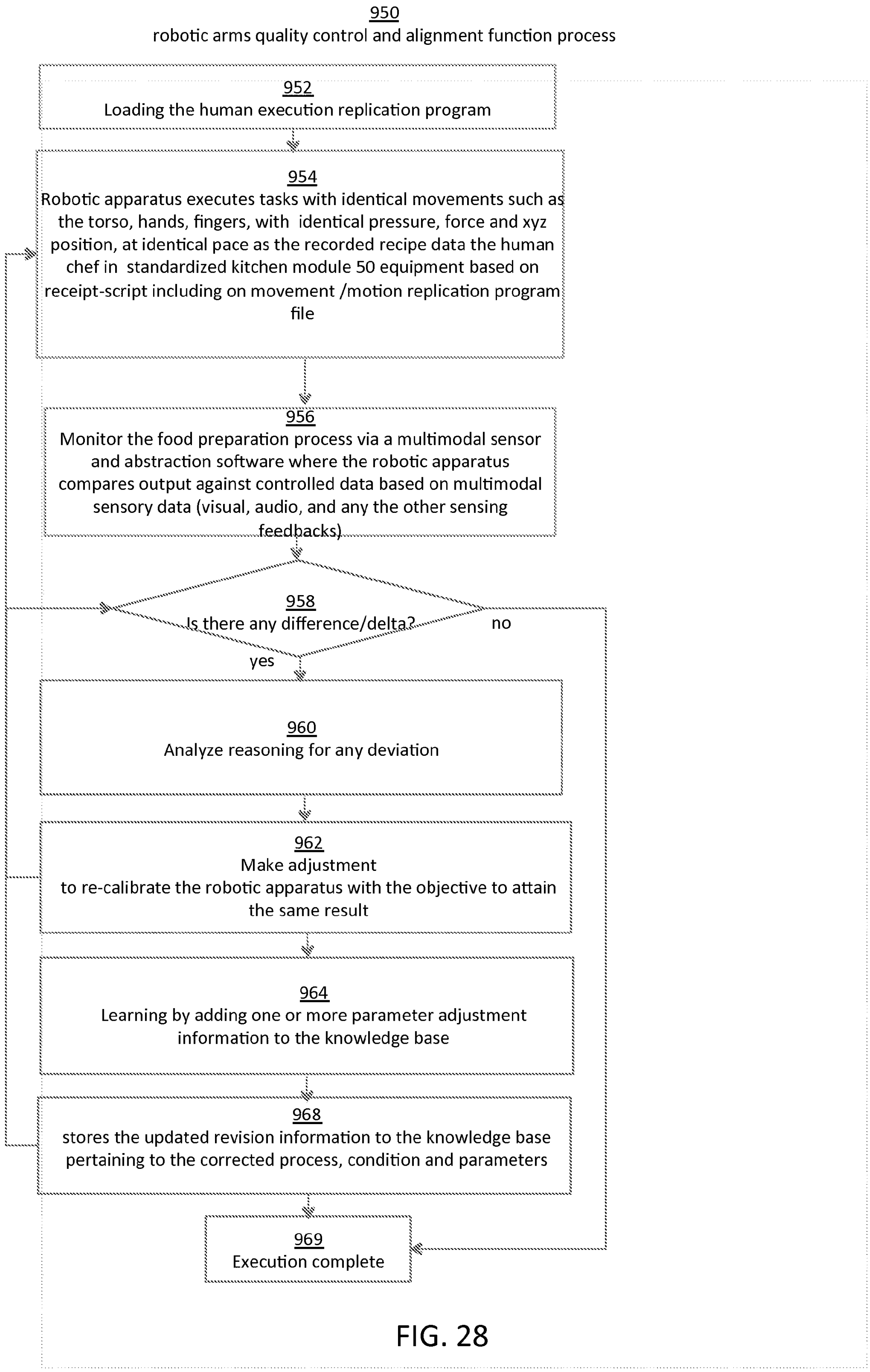
950
robotic arms quality control and alignment function process
952
Loading the human execution replication program
954
Robotic apparatus executes tasks with identical movements such as the torso, hands, fingers, with identical pressure, force and xyz position, at identical pace as the recorded recipe data the human chef in standardized kitchen module 50 equipment based on receipt-script including on movement /motion replication program file
956
Monitor the food preparation process via a multimodal sensor and abstraction software where the robotic apparatus compares output against controlled data based on multimodal sensory data (visual, audio, and any the other sensing feedbacks)
958
Is there any difference/delta?
no
yes
960
Analyze reasoning for any deviation
962
Make adjustment
to re-calibrate the robotic apparatus with the objective to attain the same result
964
Learning by adding one or more parameter adjustment information to the knowledge base
968
stores the updated revision information to the knowledge base pertaining to the corrected process, condition and parameters
969
Execution complete

FIG. 28

Database structure of mini-manipulation (MM) library

| Name of MM | Code of MM | Code(s) of standardized equipment and tools associated with the performance of MM | Initial position and orientation of the manipulated (standard or non-standard) objects (ingredients and tools) in a robotic hand | Parameters/Variable defined by user(or taking from recorded recipe during execution): | | | | Sequence of robotic hand movements (control signals for all servos)and connecting feedback parameters (from any sensors or video recognizing system) of MM on the timeline.<br>The variables is a initial data information for the sequence) |
|---|---|---|---|---|---|---|---|---|
| | | | | MM Starting coordinate XYZ in the volume of the standardized kitchen module | MM speed | MM object size (may be non-standard) | MM object shape (may non-standard) | |
| | | | | | | | | |
| | | | | | | | | |
| | | | | | | | | |
| | | | | | | | | |

970

Parameters/Variables defined by a user or taking from the recorded recipe during execution (the variables could be different for a different mini-manipulation).

FIG. 29

Database structure of a library containing 3D models of all standard objects, which is part of the standardized kitchen module

| Name of Objects | Image of Object | Code of Object | Virtual 3D model with full dimensions of object in matrix of (XYZ coordinates matrix) (resolution preferably be defined) | Virtual vector model of the object (if available) | Define and marking of the working elements of the object (the elements, which may be in contact with hands and other objects for manipulation) | Initial standard orientation of object for each specific manipulations |
|---|---|---|---|---|---|---|
| | | | | | | |
| | | | | | | |
| | | | | | | |
| | | | | | | |

972

Database structure of an electronic library containing three-dimensional models of all standard objects (i.e., all equipment, kitchen tools, kitchen appliances, containers) , which is part of the overall standardized kitchen module (not dependent on recipe; scan the standard object in a 3D model for just one time)

FIG. 30

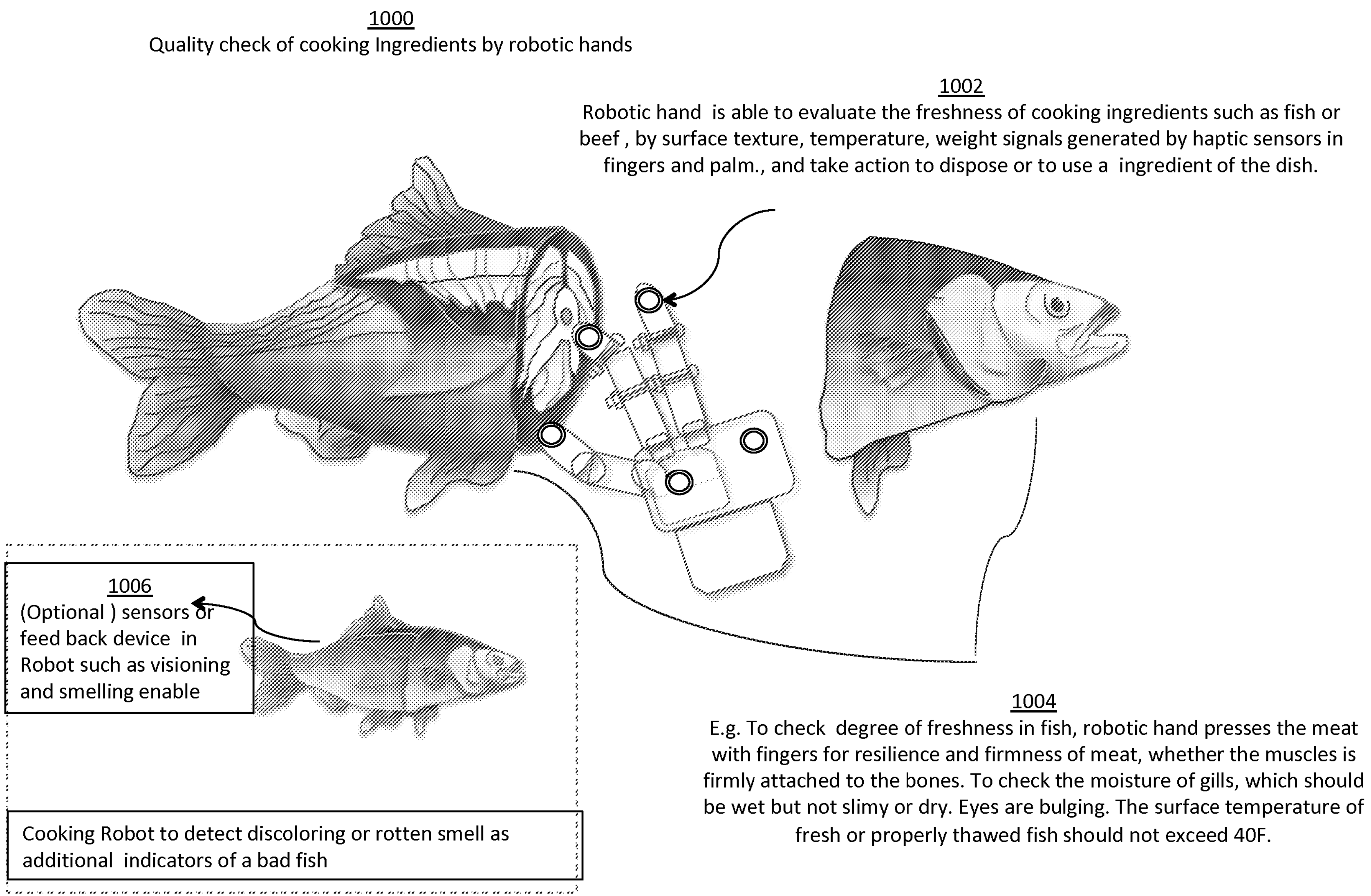
1000
Quality check of cooking Ingredients by robotic hands
1002
Robotic hand is able to evaluate the freshness of cooking ingredients such as fish or beef , by surface texture, temperature, weight signals generated by haptic sensors in fingers and palm., and take action to dispose or to use a ingredient of the dish.
1006
(Optional ) sensors or feed back device in Robot such as visioning and smelling enable
Cooking Robot to detect discoloring or rotten smell as additional indicators of a bad fish
1004
E.g. To check degree of freshness in fish, robotic hand presses the meat with fingers for resilience and firmness of meat, whether the muscles is firmly attached to the bones. To check the moisture of gills, which should be wet but not slimy or dry. Eyes are bulging. The surface temperature of fresh or properly thawed fish should not exceed 40F.

FIG. 31

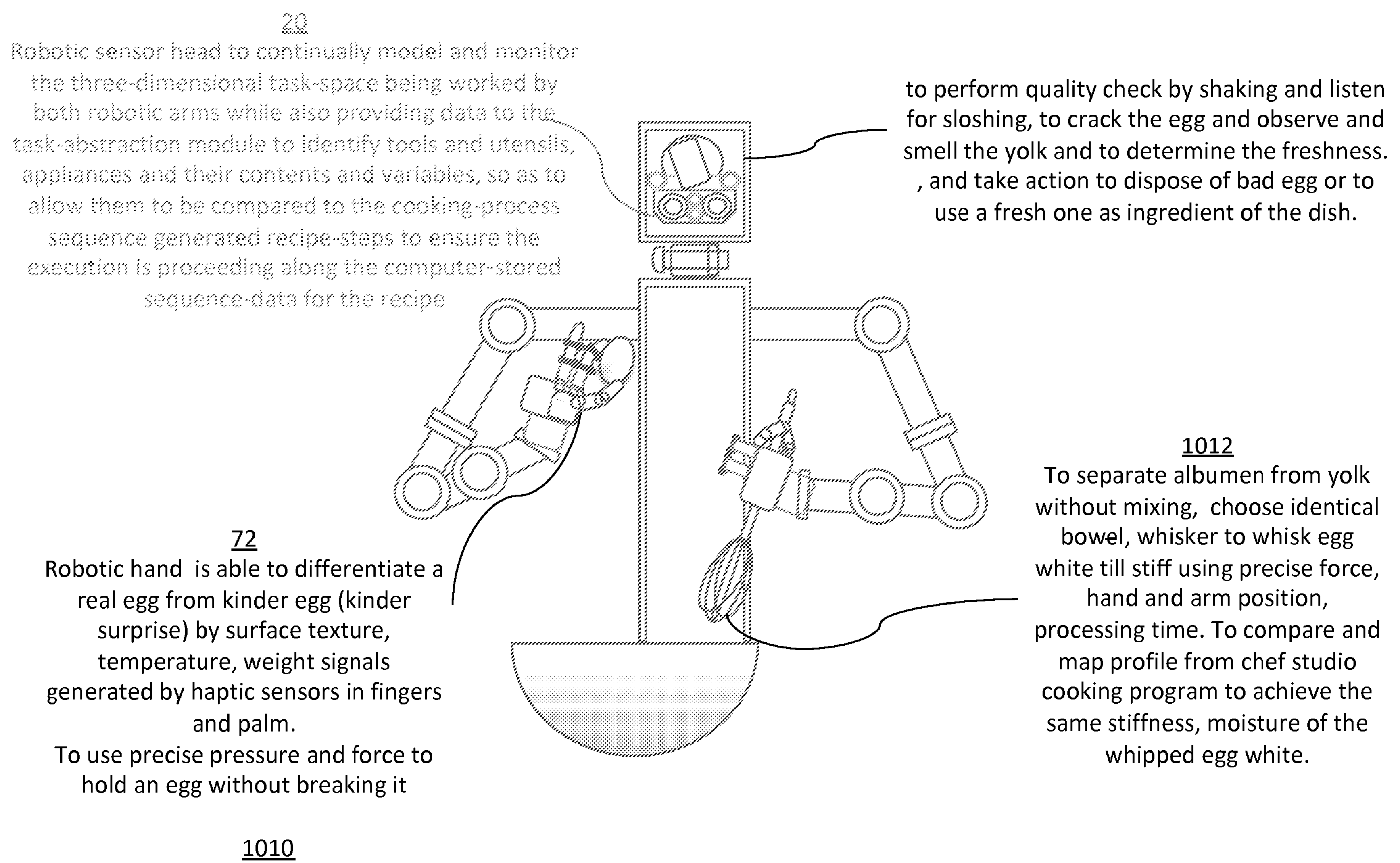
20
Robotic sensor head to continually model and monitor the three-dimensional task-space being worked by both robotic arms while also providing data to the task-abstraction module to identify tools and utensils, appliances and their contents and variables, so as to allow them to be compared to the cooking-process sequence generated recipe-steps to ensure the execution is proceeding along the computer-stored sequence-data for the recipe
to perform quality check by shaking and listen for sloshing, to crack the egg and observe and smell the yolk and to determine the freshness. , and take action to dispose of bad egg or to use a fresh one as ingredient of the dish.
72
Robotic hand is able to differentiate a real egg from kinder egg (kinder surprise) by surface texture, temperature, weight signals generated by haptic sensors in fingers and palm.
To use precise pressure and force to hold an egg without breaking it
1010
1012
To separate albumen from yolk without mixing, choose identical bowel, whisker to whisk egg white till stiff using precise force, hand and arm position, processing time. To compare and map profile from chef studio cooking program to achieve the same stiffness, moisture of the whipped egg white.

FIG. 32

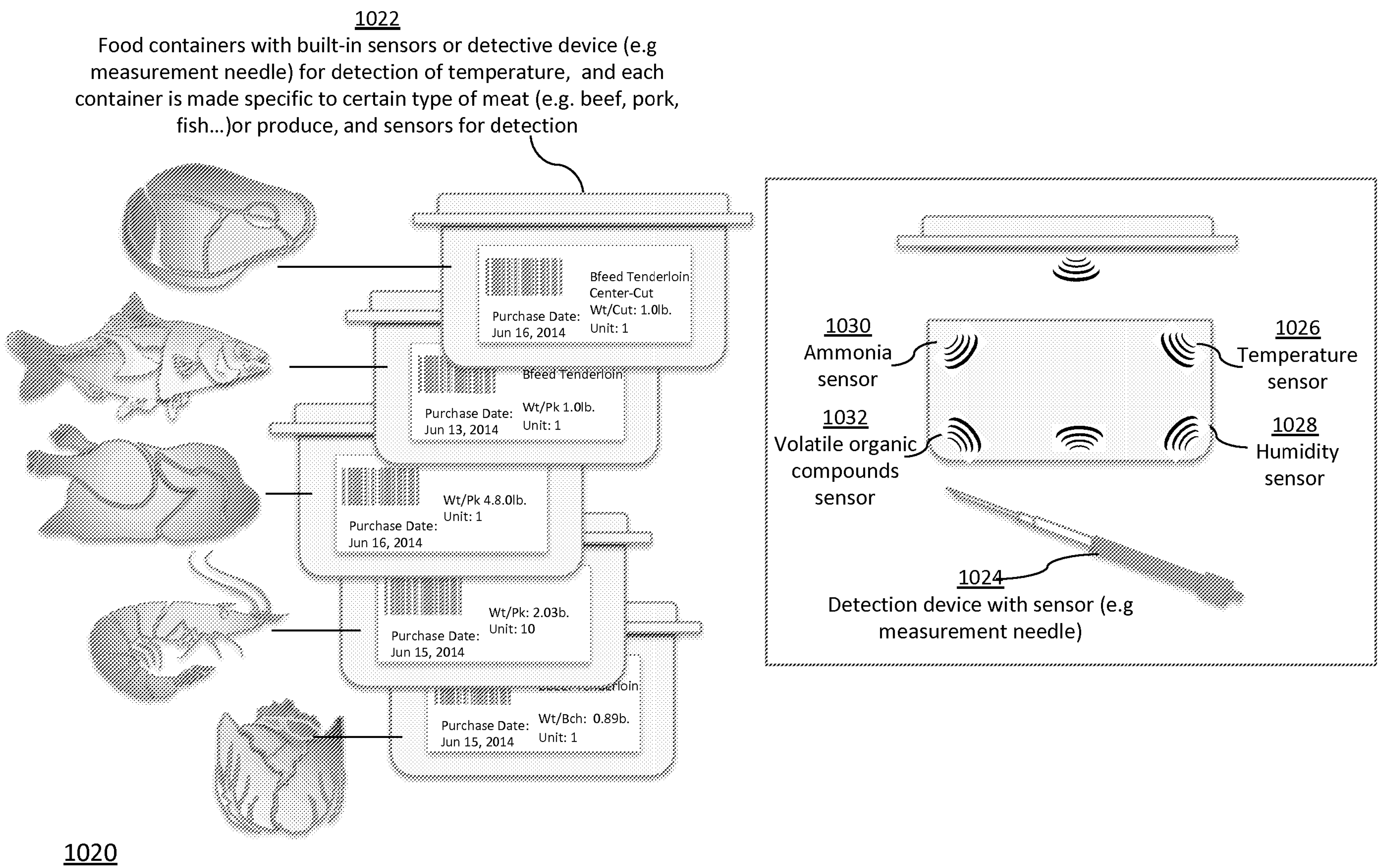
1022
Food containers with built-in sensors or detective device (e.g measurement needle) for detection of temperature, and each container is made specific to certain type of meat (e.g. beef, pork, fish...)or produce, and sensors for detection
Bfeed Tenderloin
Center-Cut
Wt/Cut: 1.0lb.
Unit: 1
Purchase Date:
Jun 16, 2014
Bfeed Tenderloin
Wt/Pk 1.0lb.
Unit: 1
Purchase Date:
Jun 13, 2014
Wt/Pk 4.8.0lb.
Unit: 1
Purchase Date:
Jun 16, 2014
Wt/Pk: 2.03b.
Unit: 10
Purchase Date:
Jun 15, 2014
Wt/Bch: 0.89b.
Unit: 1
Purchase Date:
Jun 15, 2014
1020
1030
Ammonia sensor
1032
Volatile organic compounds sensor
1026
Temperature sensor
1028
Humidity sensor
1024
Detection device with sensor (e.g measurement needle)

FIG. 33

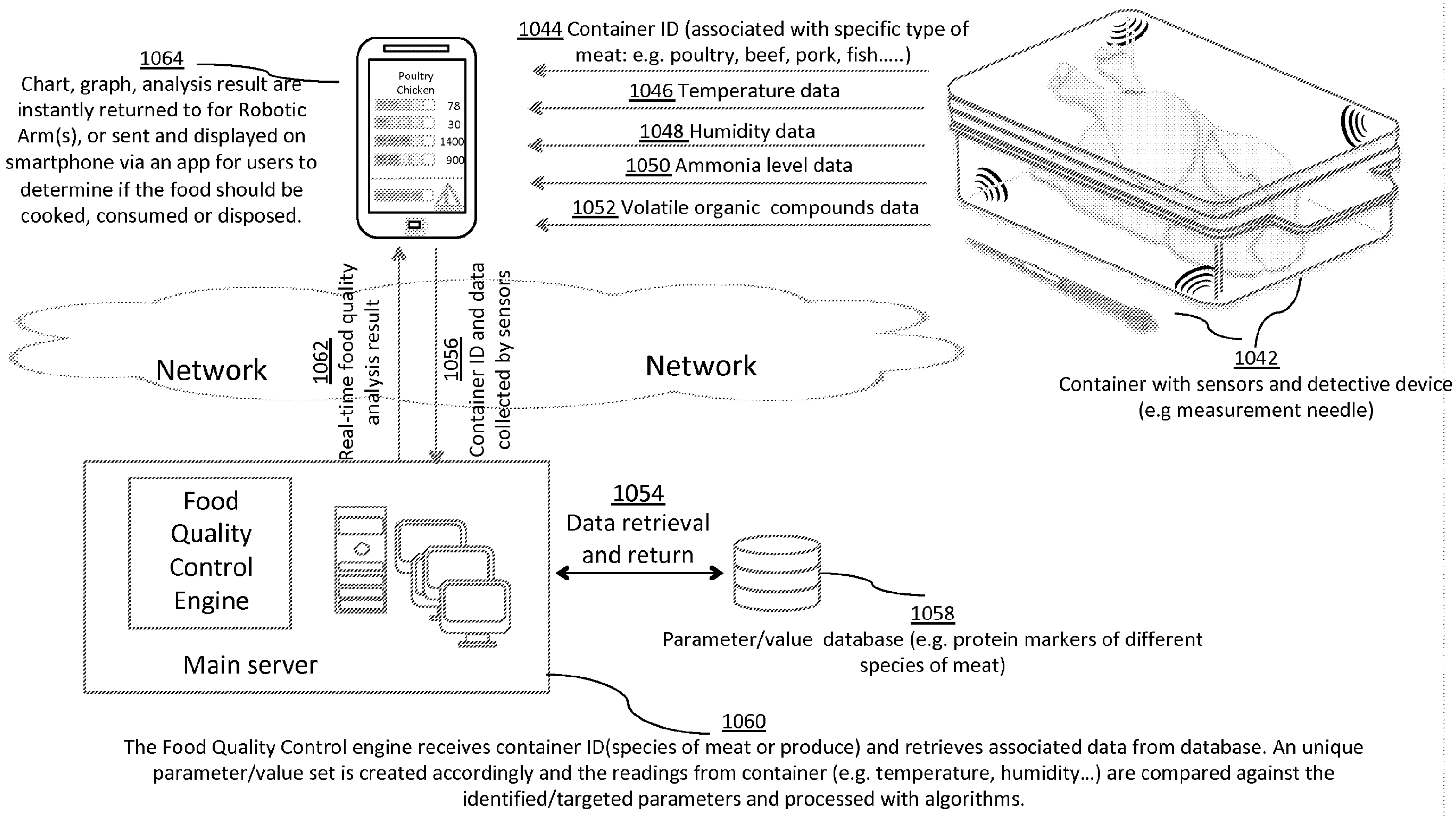


FIG. 34

Online analysis for food freshness and quality

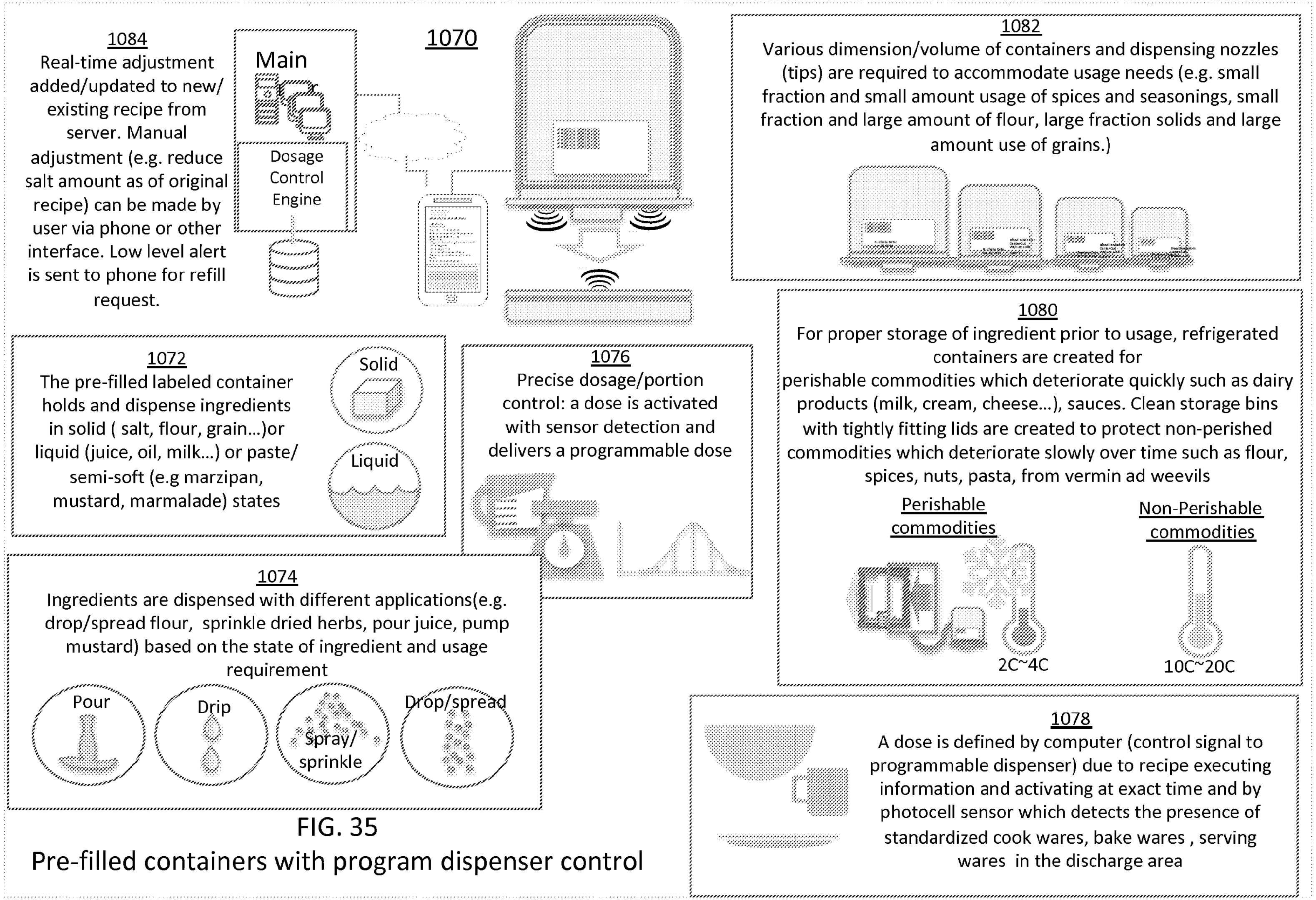


FIG. 35

Pre-filled containers with program dispenser control

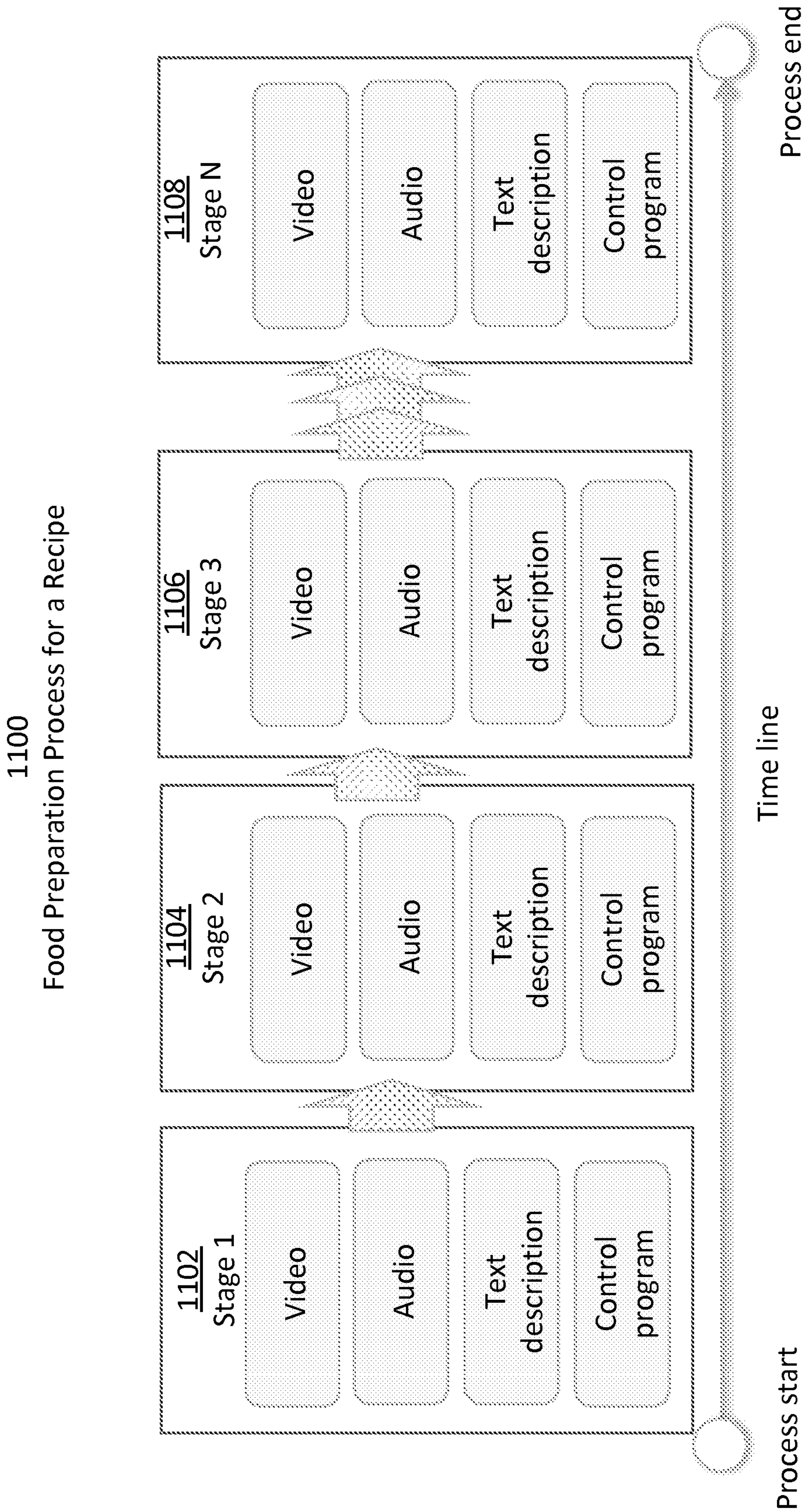
1100
Food Preparation Process for a Recipe
1102
Stage 1
Video
Audio
Text description
Control program
1104
Stage 2
Video
Audio
Text description
Control program
1106
Stage 3
Video
Audio
Text description
Control program
1108
Stage N
Video
Audio
Text description
Control program
Process start
Time line
Process end

FIG. 36

1120

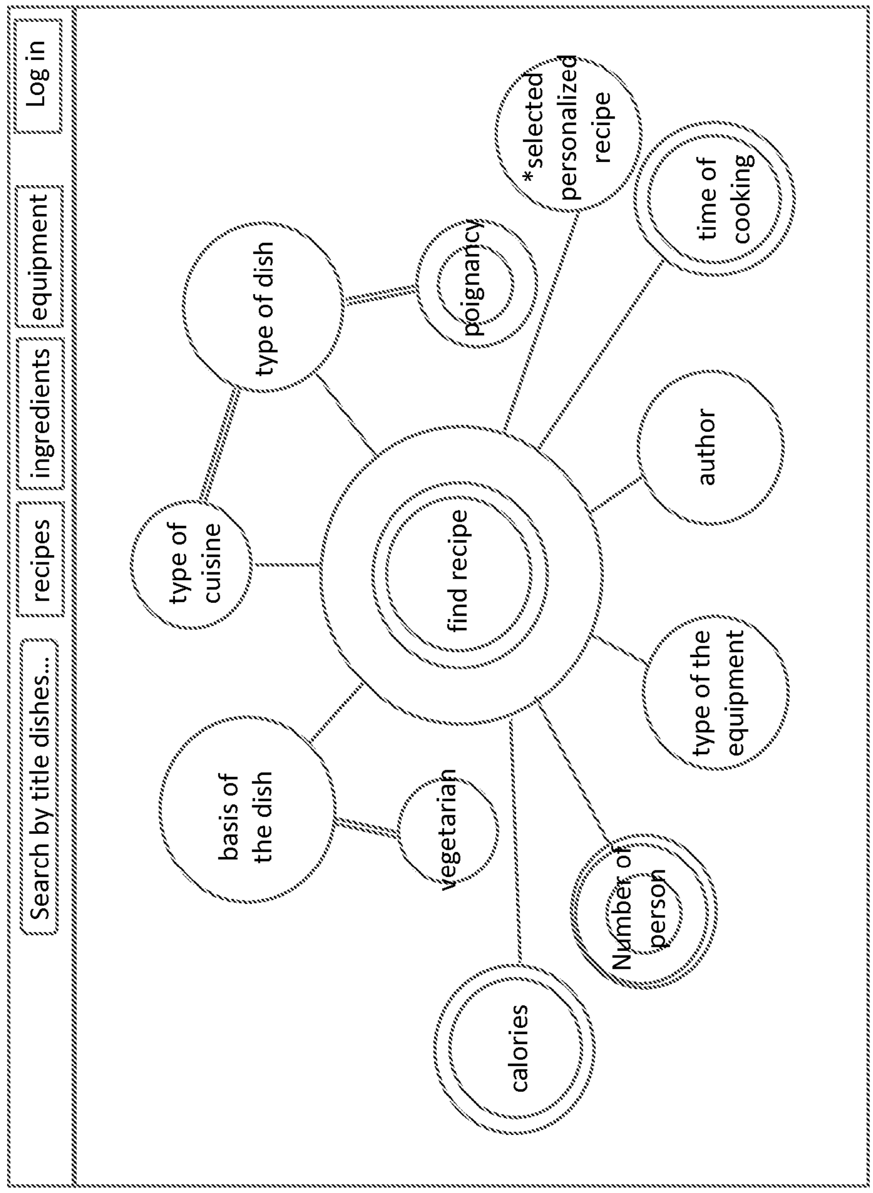


FIG. 37A

* Selected personalized recipe – excluding recipe with allergic ingredients (identify allergic ingredients from a personal user profile, as defined by the user)

1120

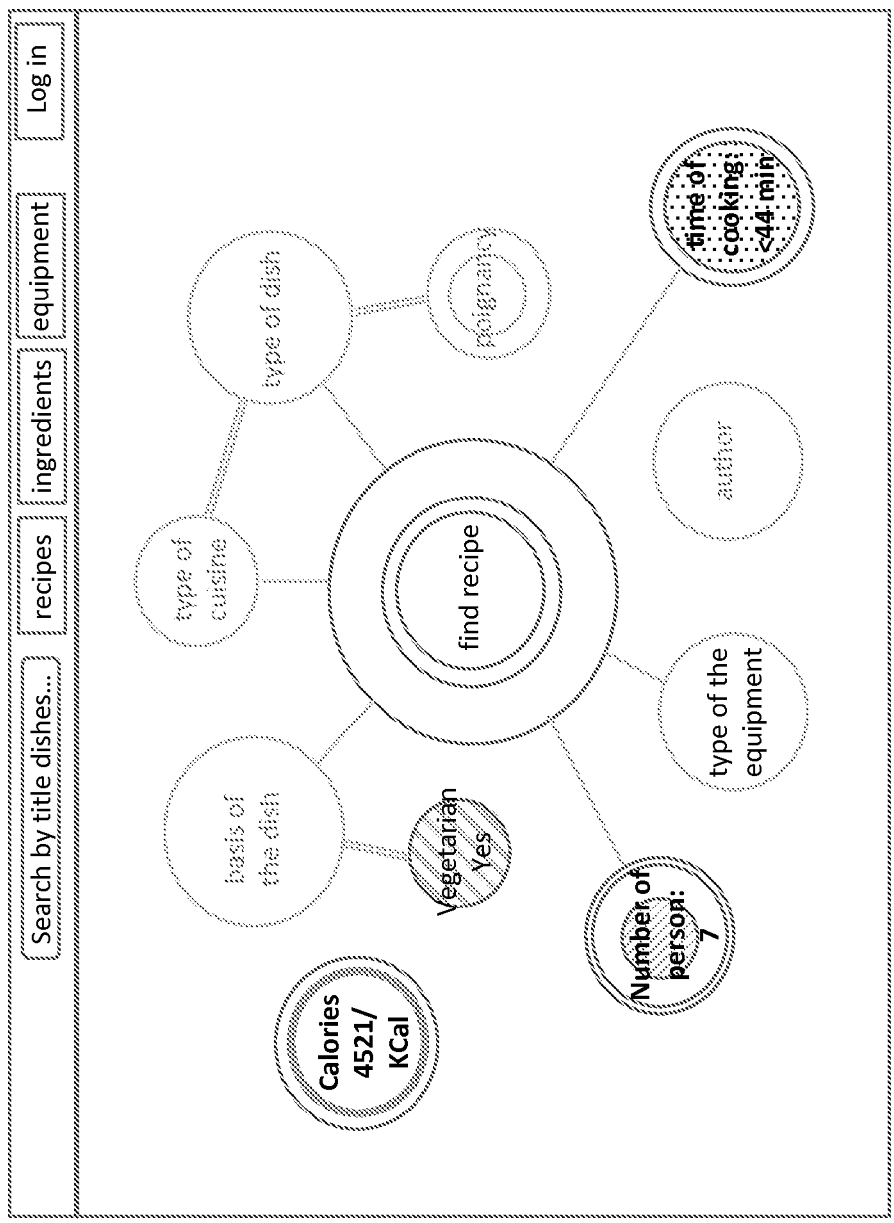
Search by title dishes...
recipes
ingredients
equipment
Log in
find recipe
type of cuisine
type of dish
poignancy
author
time of cooking: <44 min
type of the equipment
Number of person: 7
basis of the dish
Vegetarian Yes
Calories 4521/ KCal

FIG. 37B

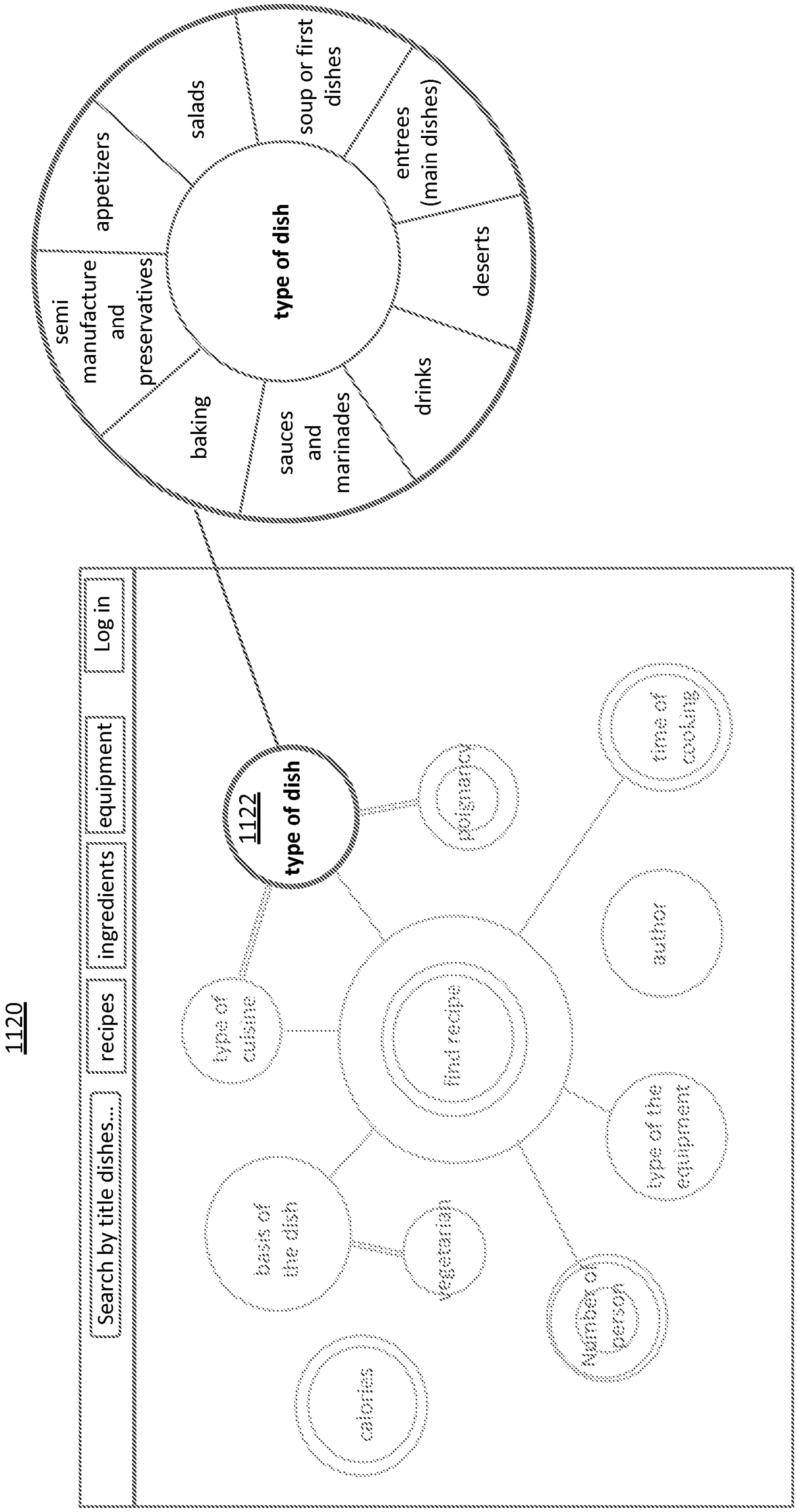
1120
Search by title dishes...
recipes
ingredients
equipment
Log in
1122
type of dish
type of cuisine
find recipe
basis of the dish
vegetarian
calories
Number of person
type of the equipment
author
time of cooking
poignancy
type of dish
salads
soup or first dishes
entrees (main dishes)
deserts
drinks
sauces and marinades
baking
semi manufacture and preservatives
appetizers

FIG. 37C

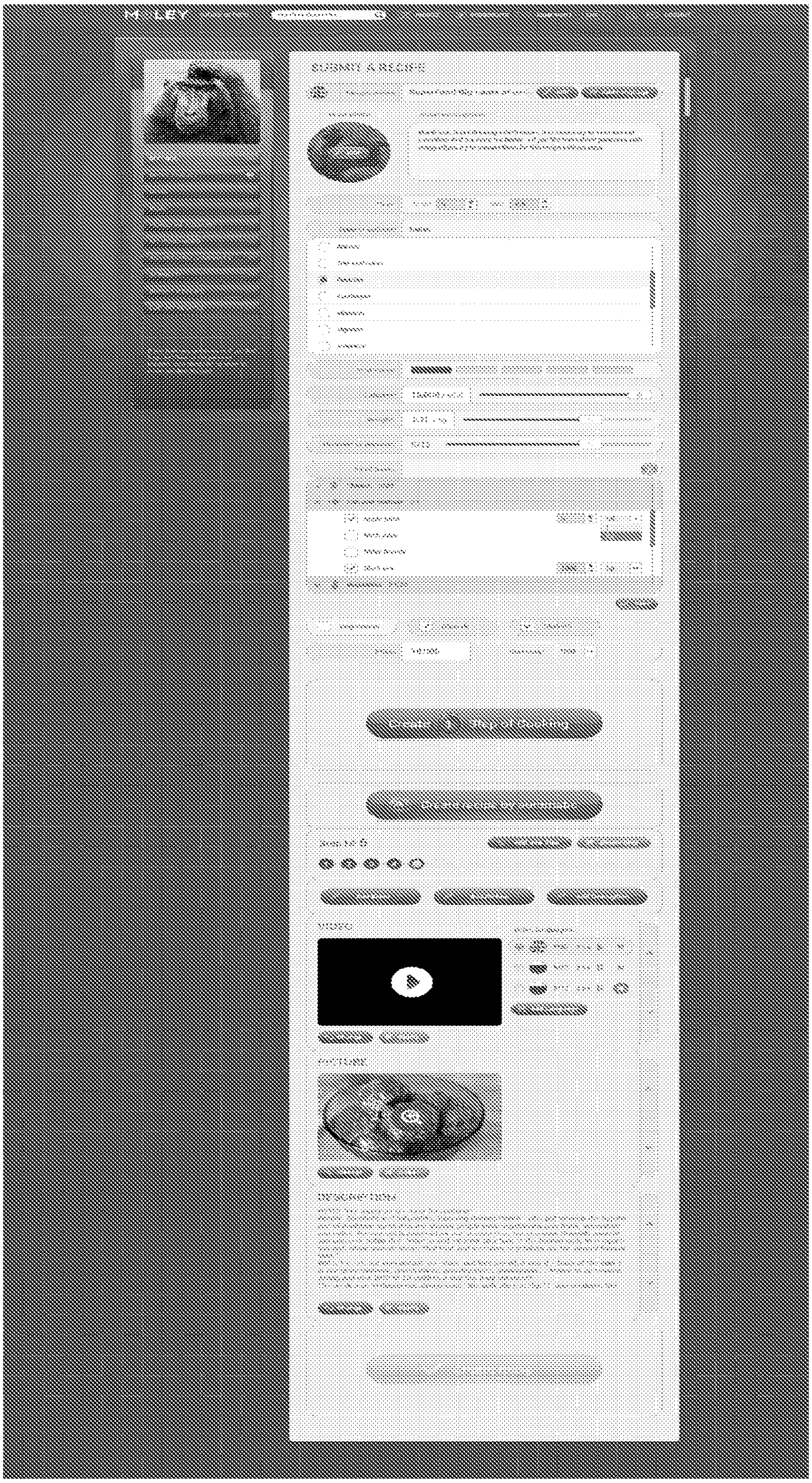

FIG. 37D

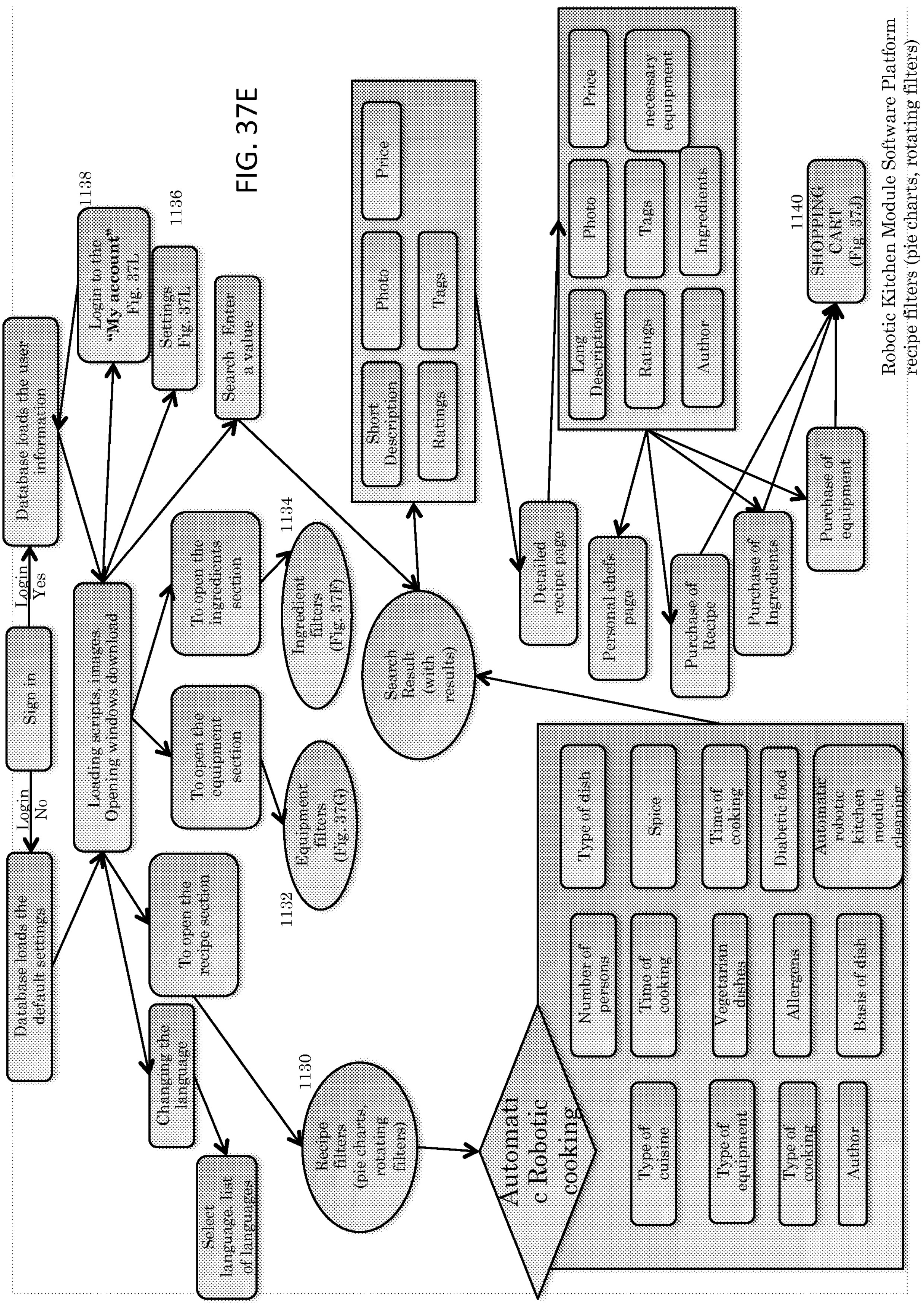
Database loads the default settings
Login No
Sign in
Login Yes
Database loads the user information
Loading scripts, images. Opening windows download
Login to the "My account" Fig. 37L
1138
Settings Fig. 37L
1136
Search - Enter a value
To open the recipe section
Changing the language
Select language. list of languages
To open the equipment section
To open the ingredients section
Equipment filters (Fig. 37G)
1132
Ingredient filters (Fig. 37F)
1134
Recipe filters (pie charts, rotating filters)
1130
Search Result (with results)
Automatic Robotic cooking
Type of cuisine
Type of equipment
Type of cooking
Author
Number of persons
Time of cooking
Vegetarian dishes
Allergens
Basis of dish
Type of dish
Spice
Time of cooking
Diabetic food
Automatic robotic kitchen module cleaning
Short Description
Photo
Price
Ratings
Tags
Detailed recipe page
Long Description
Photo
Price
Ratings
Tags
necessary equipment
Author
Ingredients
Personal chefs page
Purchase of Recipe
Purchase of Ingredients
Purchase of equipment
SHOPPING CART (Fig. 37J)
1140
Robotic Kitchen Module Software Platform recipe filters (pie charts, rotating filters)

FIG. 37E

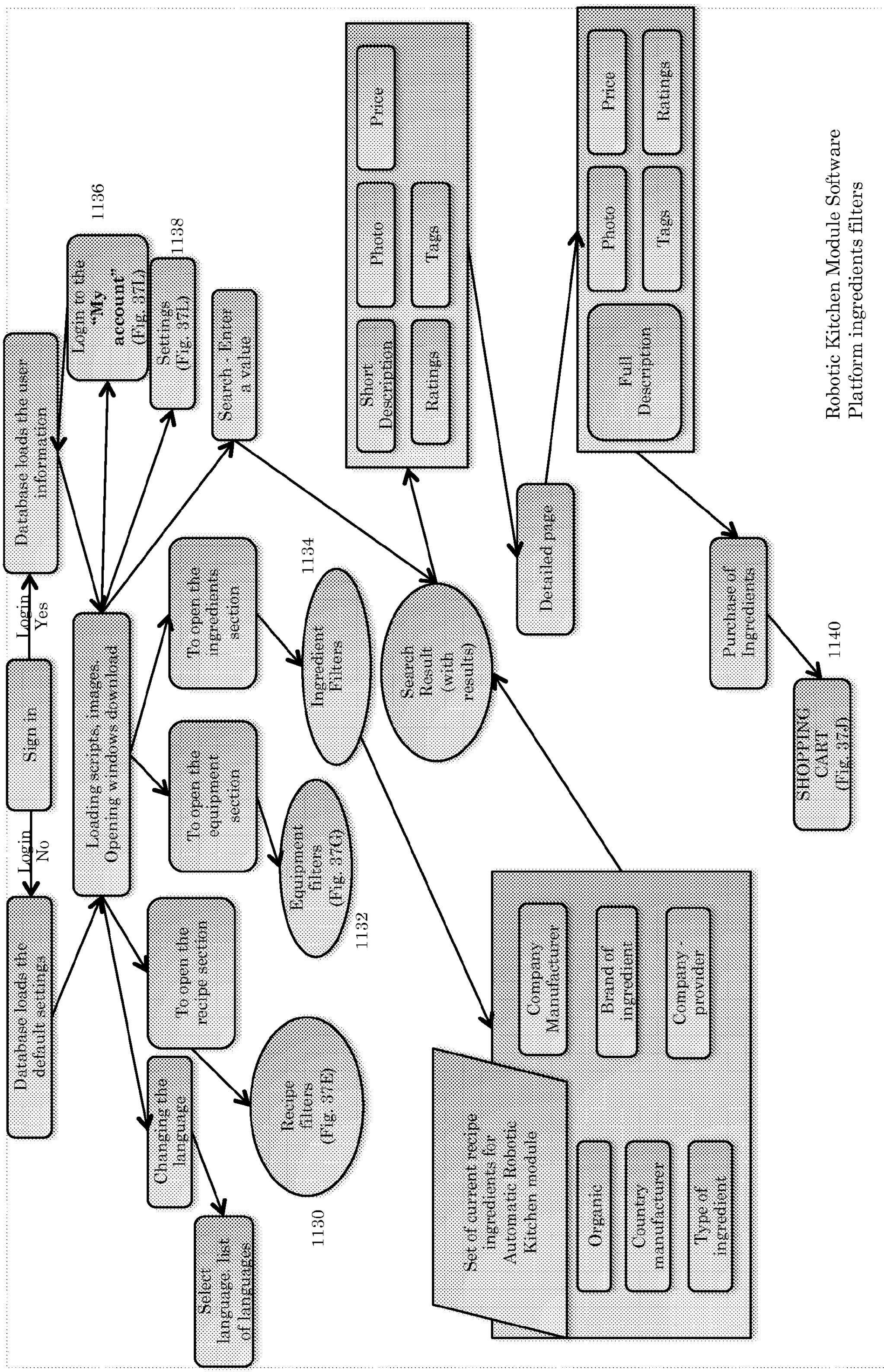
Sign in
Login No
Login Yes
Database loads the default settings
Database loads the user information
Loading scripts, images. Opening windows download
Login to the "My account" (Fig. 37L)
1136
Settings (Fig. 37L)
1138
Search, Enter a value
Changing the language
Select language, list of languages
To open the recipe section
Recipe filters (Fig. 37E)
1130
To open the equipment section
Equipment filters (Fig. 37G)
1132
To open the ingredients section
Ingredient Filters
1134
Search Result (with results)
Short Description
Price
Photo
Tags
Ratings
Detailed page
Full Description
Photo
Price
Tags
Ratings
Purchase of Ingredients
1140
SHOPPING CART (Fig. 37J)
Set of current recipe ingredients for Automatic Robotic Kitchen module
Organic
Country manufacturer
Type of ingredient
Company Manufacturer
Brand of ingredient
Company - provider
Robotic Kitchen Module Software Platform ingredients filters

FIG. 37F

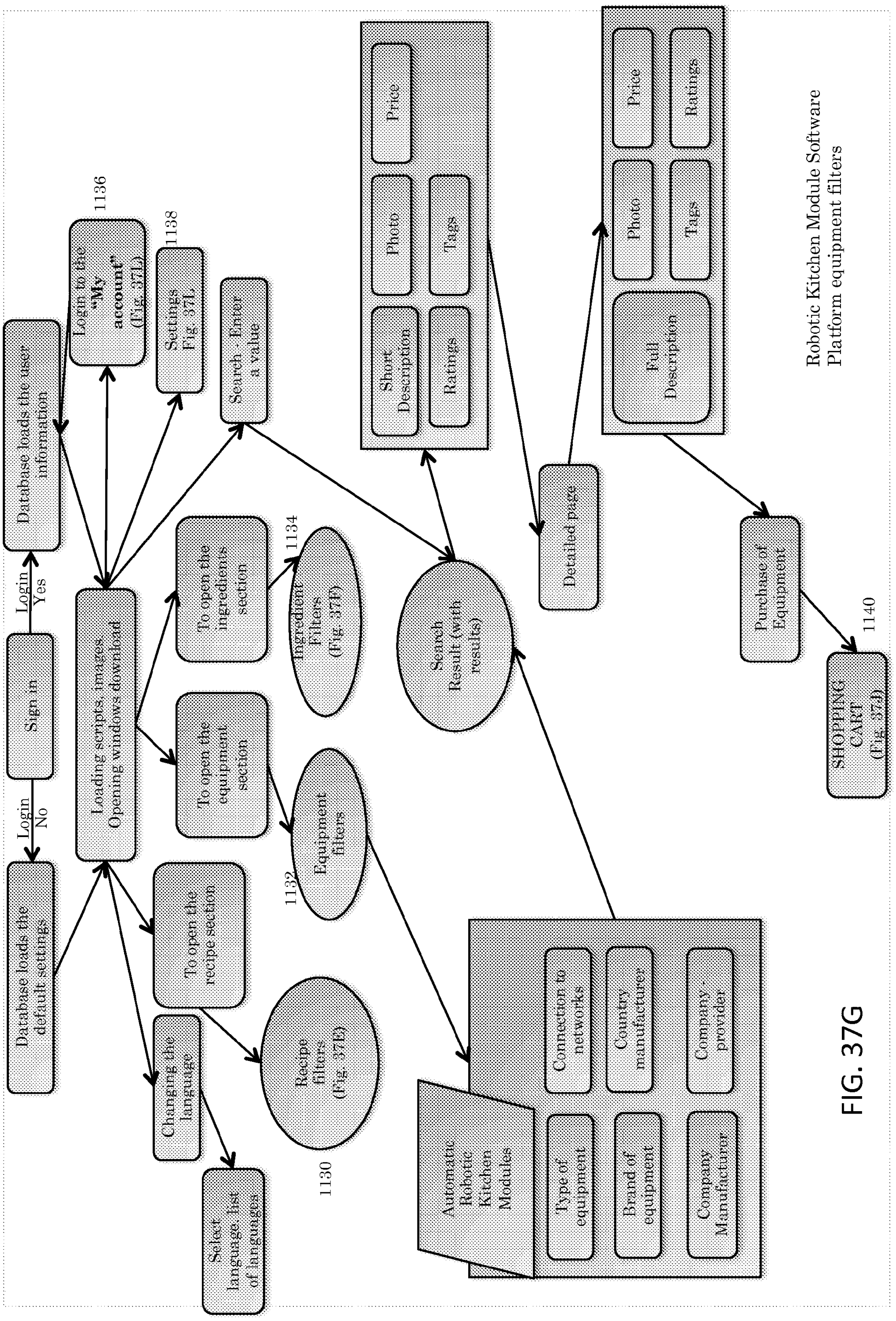
Database loads the default settings
Login No
Sign in
Login Yes
Database loads the user information
Login to the "My account" (Fig. 37L)
1136
Settings Fig. 37L
1138
Search - Enter a value
Loading scripts, images. Opening windows download
To open the recipe section
To open the equipment section
To open the ingredients section
1134
Changing the language
Select language, list of languages
Recipe filters (Fig. 37E)
1130
Equipment filters
1132
Ingredient Filters (Fig. 37F)
Search Result (with results)
Short Description
Photo
Price
Ratings
Tags
Detailed page
Full Description
Photo
Price
Tags
Ratings
Purchase of Equipment
SHOPPING CART (Fig. 37J)
1140
Automatic Robotic Kitchen Modules
Type of equipment
Brand of equipment
Company Manufacturer
Connection to networks
Country manufacturer
Company-provider
Robotic Kitchen Module Software Platform equipment filters

FIG. 37G

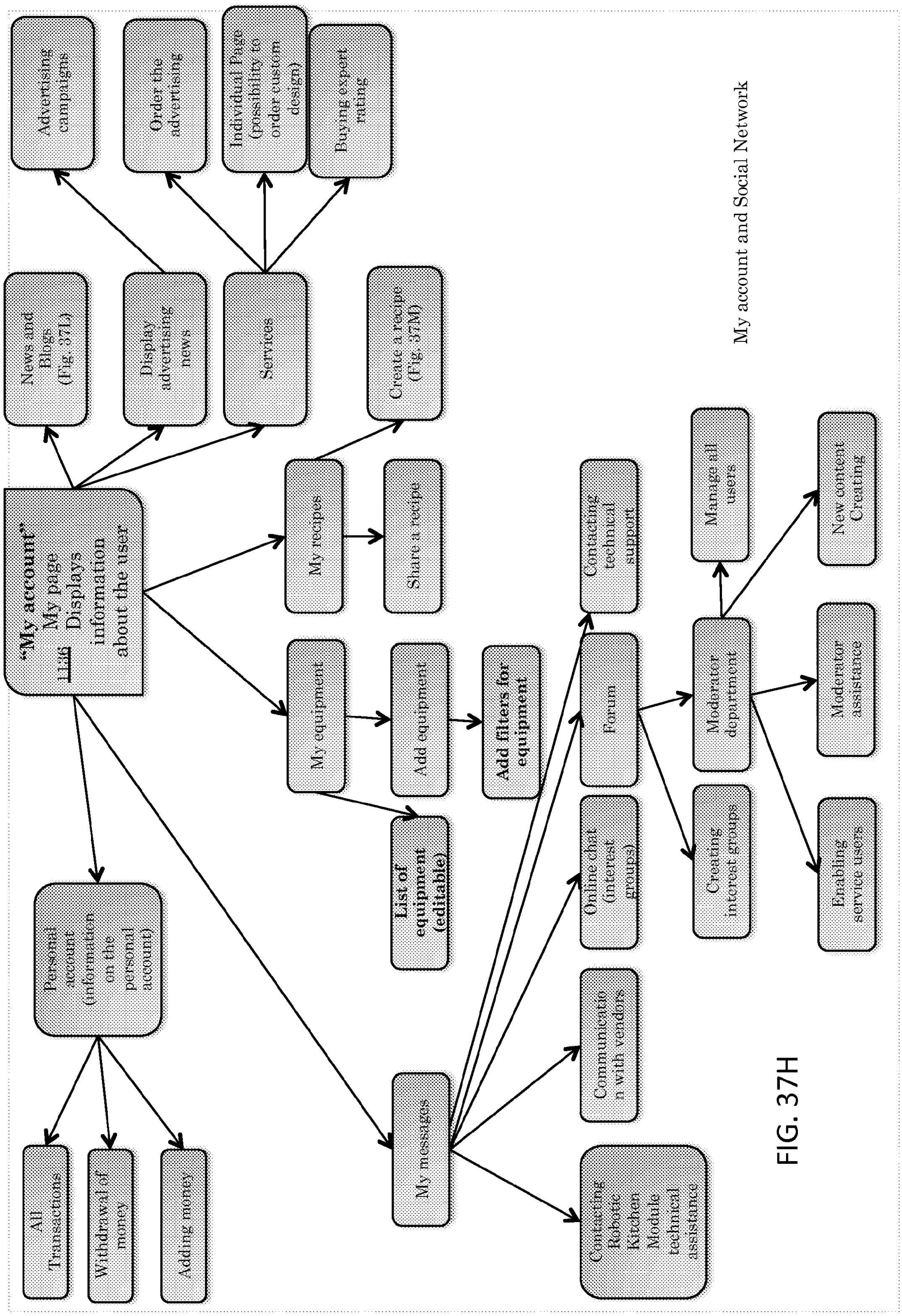
My account and Social Network
"My account" 1136 My page Displays information about the user
News and Blogs (Fig. 37L)
Display advertising news
Services
Advertising campaigns
Order the advertising
Individual Page (possibility to order custom design)
Buying expert rating
Create a recipe (Fig. 37M)
My recipes
Share a recipe
My equipment
Add equipment
Add filters for equipment
List of equipment (editable)
Personal accont (information on the personal account)
All Transactions
Withdrawal of money
Adding money
My messages
Contacting Robotic Kitchen Module technical assistance
Communication with vendors
Online chat (interest groups)
Forum
Contacting technical support
Moderator department
Creating interest groups
Manage all users
Moderator assistance
New content Creating
Enabling service users

FIG. 37H

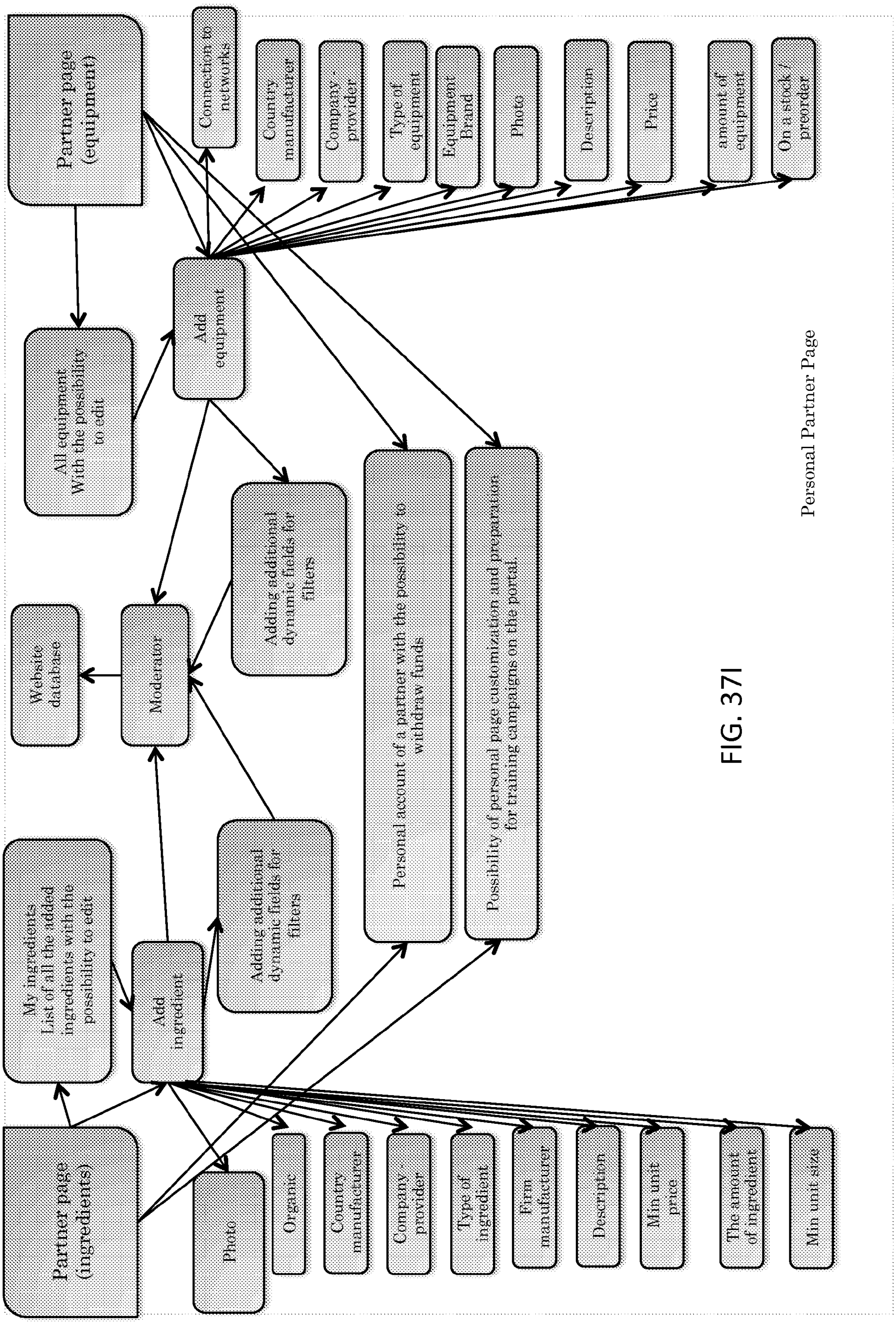
Partner page (equipment)
Connection to networks
Country manufacturer
Company - provider
Type of equipment
Equipment Brand
Photo
Description
Price
amount of equipment
On a stock / preorder
All equipment With the possibility to edit
Add equipment
Personal Partner Page
Adding additional dynamic fields for filters
Website database
Moderator
Personal account of a partner with the possibility to withdraw funds
Possibility of personal page customization and preparation for training campaigns on the portal.
My ingredients List of all the added ingredients with the possibility to edit
Add ingredient
Adding additional dynamic fields for filters
Partner page (ingredients)
Photo
Organic
Country manufacturer
Company - provider
Type of ingredient
Firm manufacturer
Description
Min unit price
The amount of ingredient
Min unit size

FIG. 37I

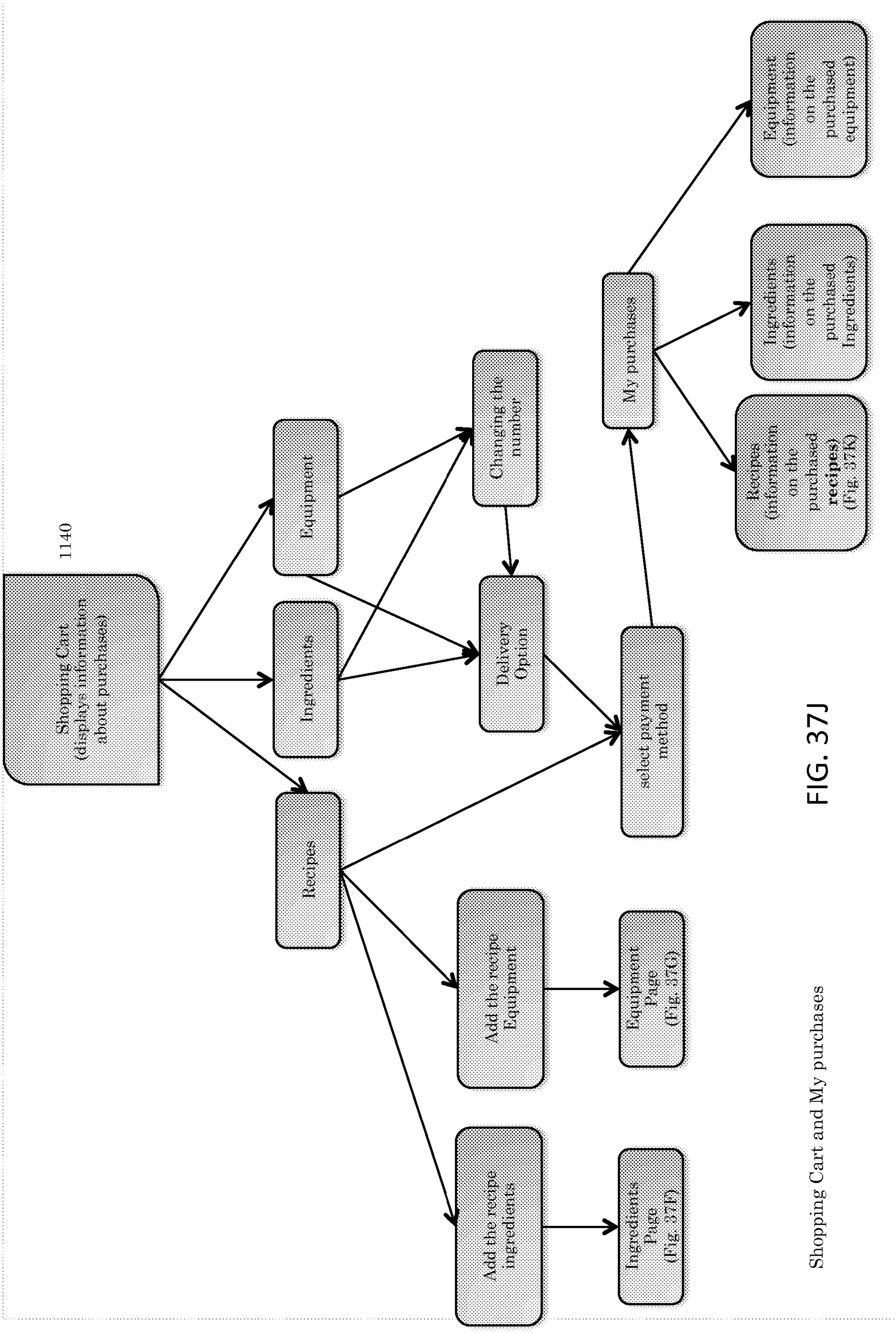


FIG. 37J

Shopping Cart and My purchases

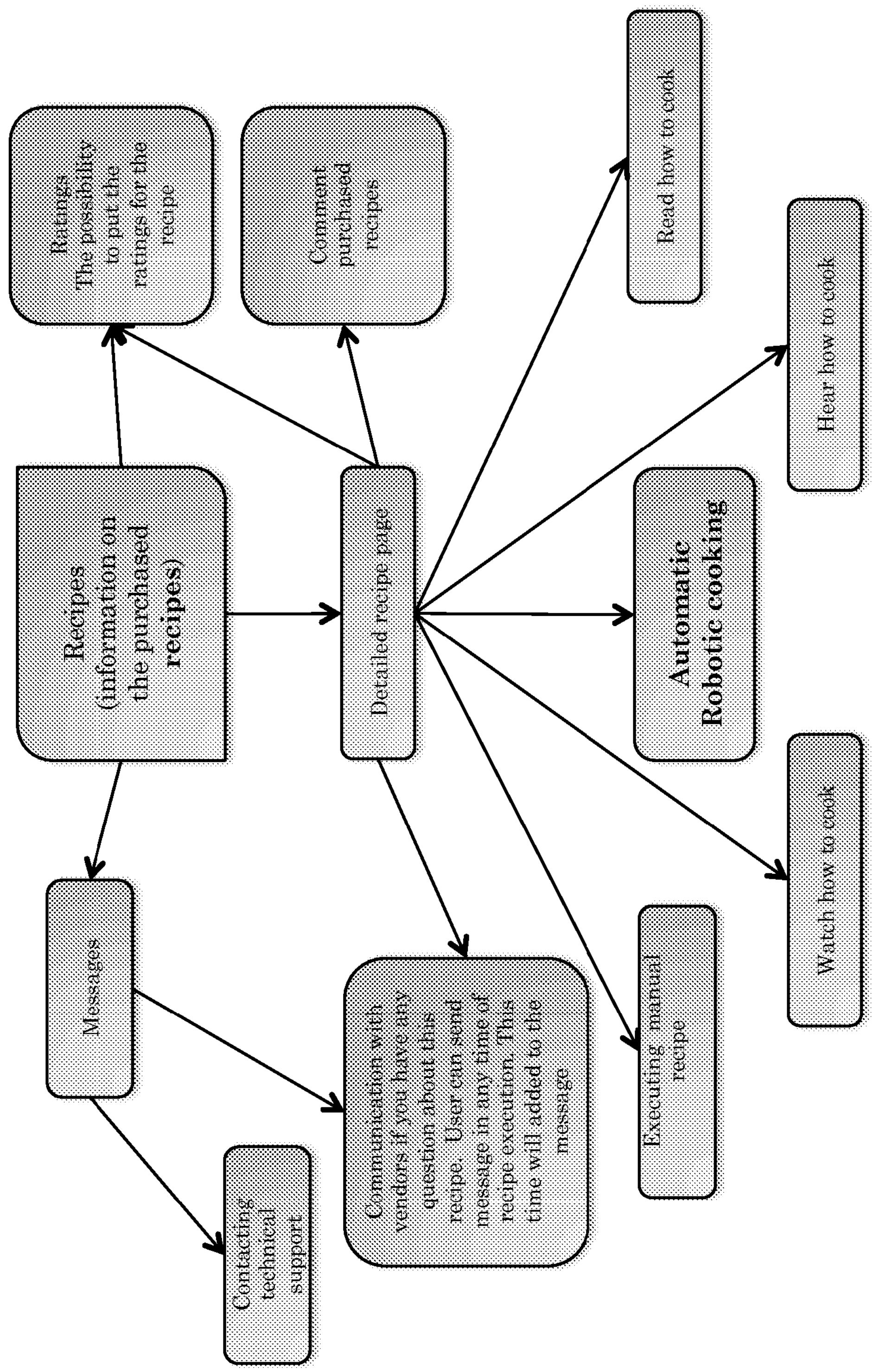


FIG. 37K

information on the purchased **recipes**

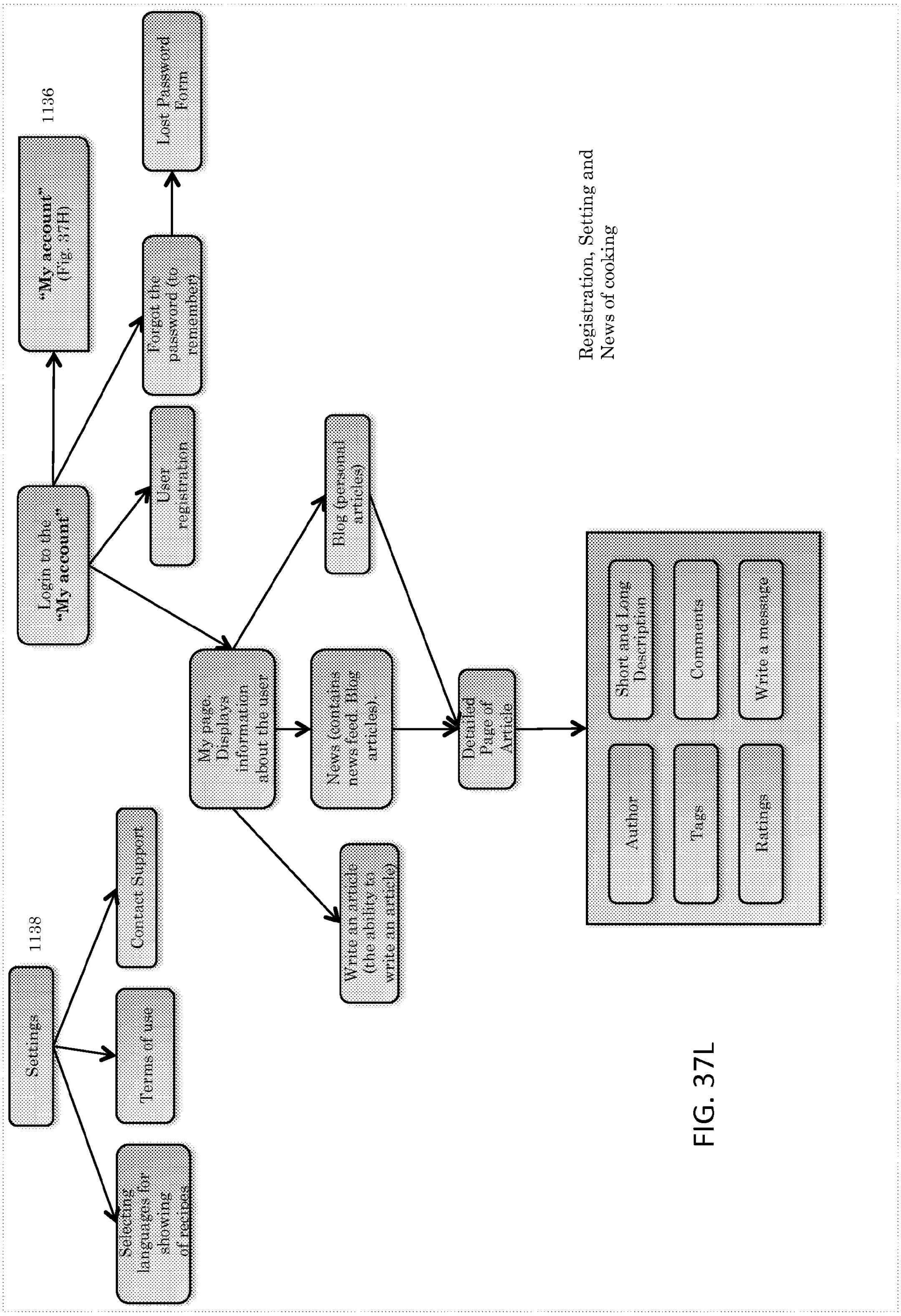
1136
"My account" (Fig. 37H)
Lost Password Form
Forgot the password (to remember)
User registration
Login to the "My account"
Blog (personal articles)
Registration, Setting and News of cooking
My page. Displays information about the user
News (contains news feed. Blog articles)
Detailed Page of Article
Short and Long Description
Comments
Write a message
Author
Tags
Ratings
1138
Settings
Contact Support
Terms of use
Selecting languages for showing of recipes
Write an article (the ability to write an article)

FIG. 37L

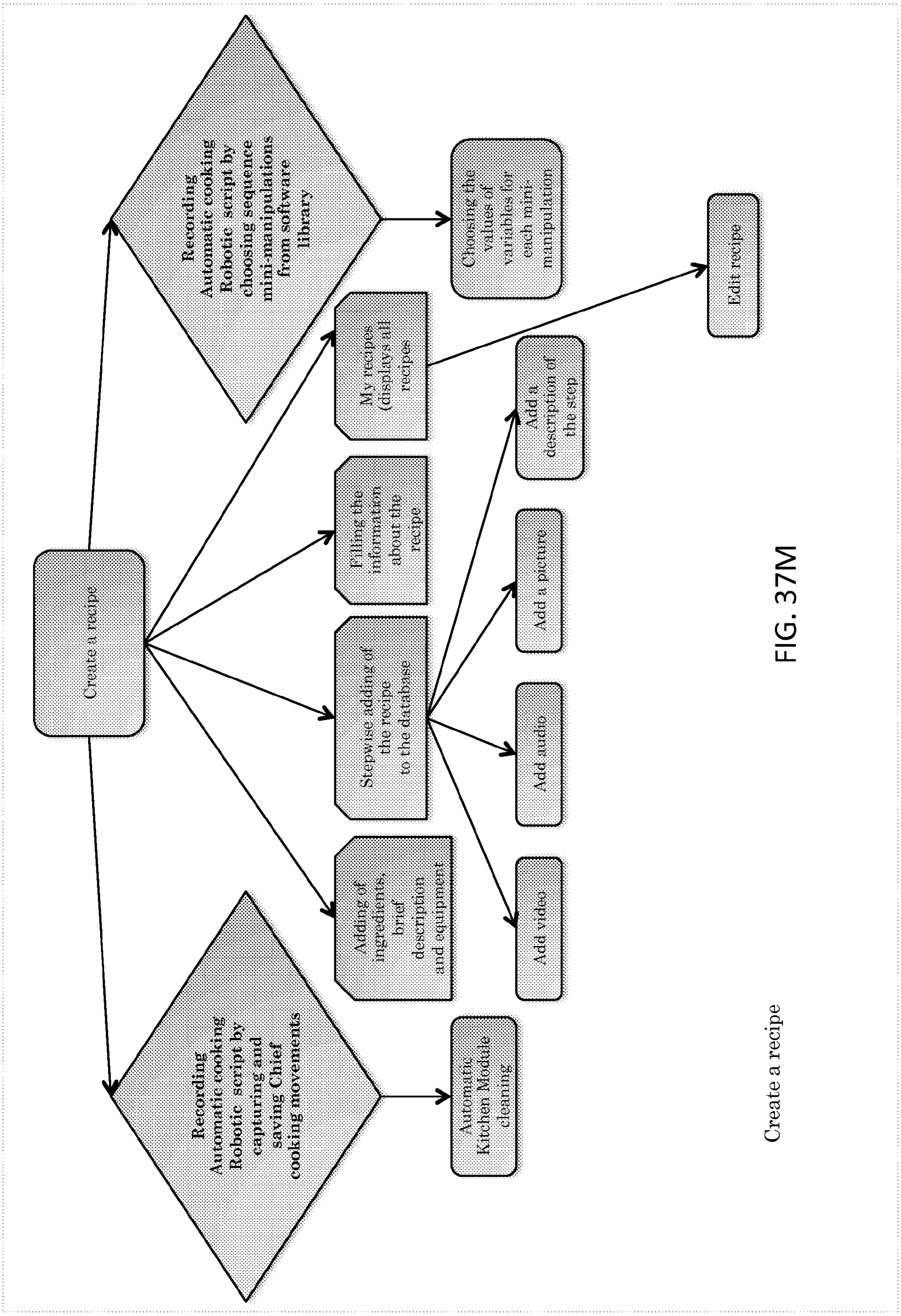
Create a recipe
Recording Automatic cooking Robotic script by capturing and saving Chief cooking movements
Automatic Kitchen Module cleaning
Adding of ingredients, brief description and equipment
Stepwise adding of the recipe to the database
Filling the information about the recipe
My recipes (displays all recipes
Recording Automatic cooking Robotic script by choosing sequence mini-manipulations from software library
Choosing the values of variables for each mini-manipulation
Add video
Add audio
Add a picture
Add a description of the step
Edit recipe
Create a recipe

FIG. 37M

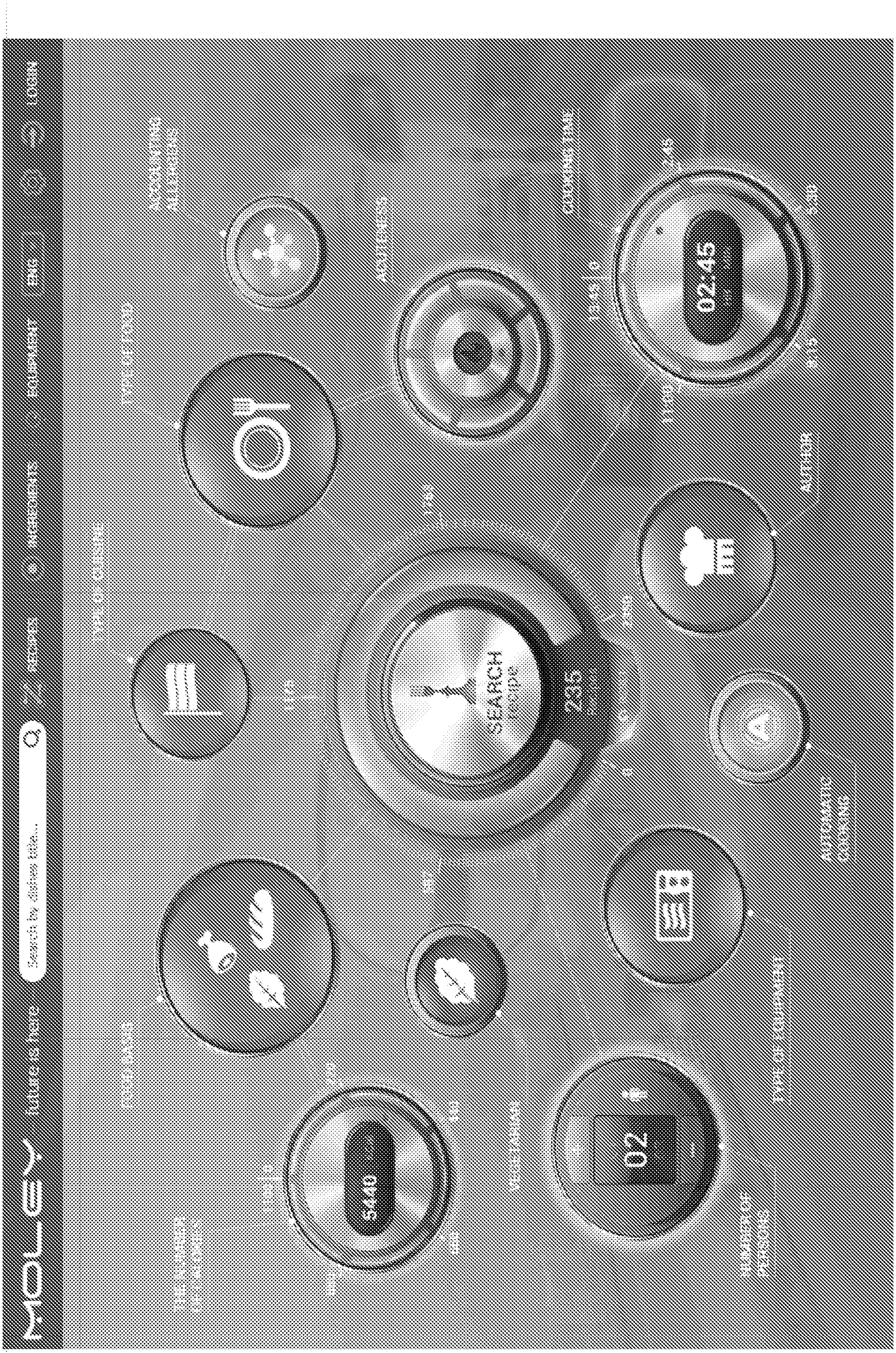


Main Page

FIG. 37N

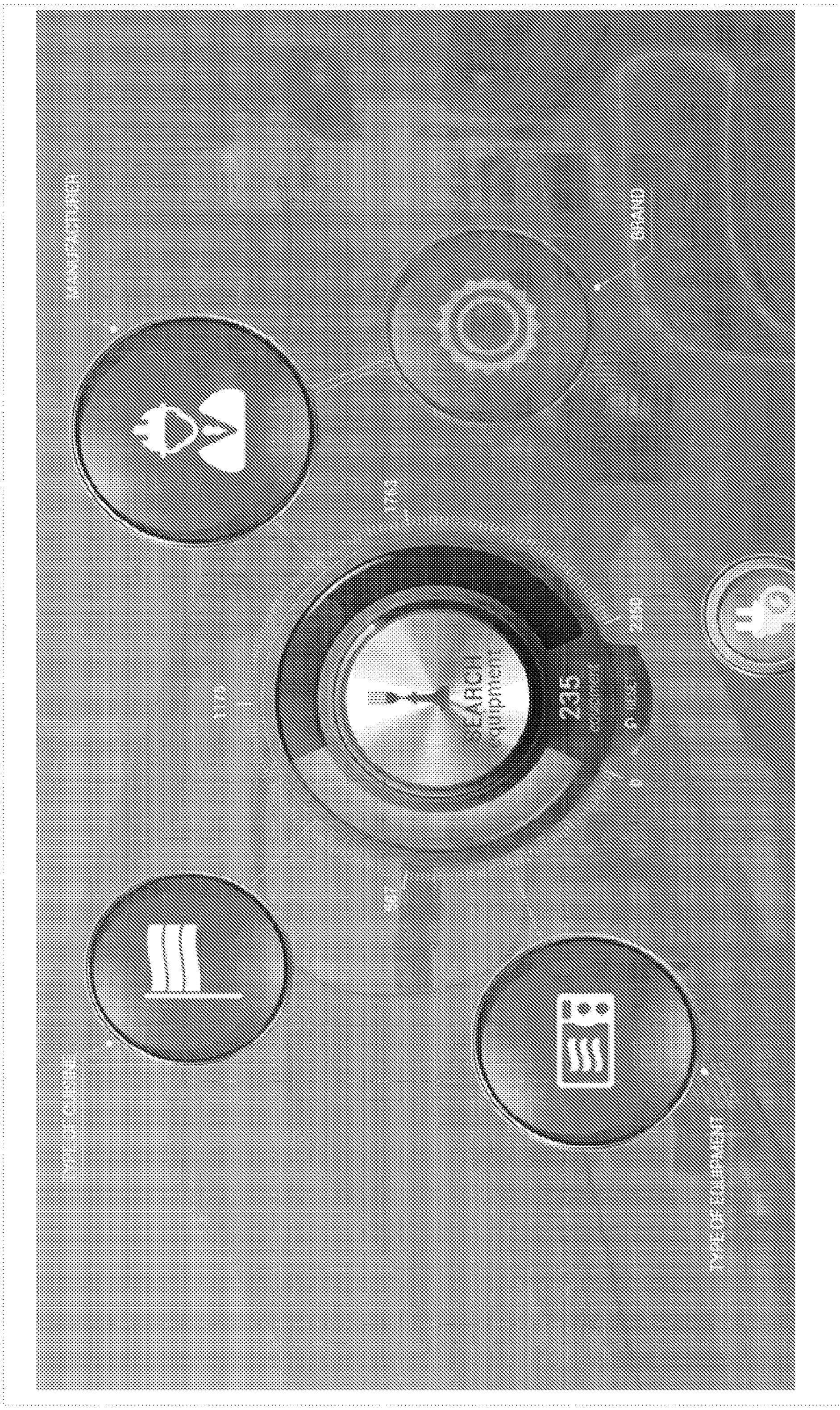
MANUFACTURER
BRAND
SEARCH
equipment
235
TYPE OF CUISINE
TYPE OF EQUIPMENT
Equipment

FIG. 37O

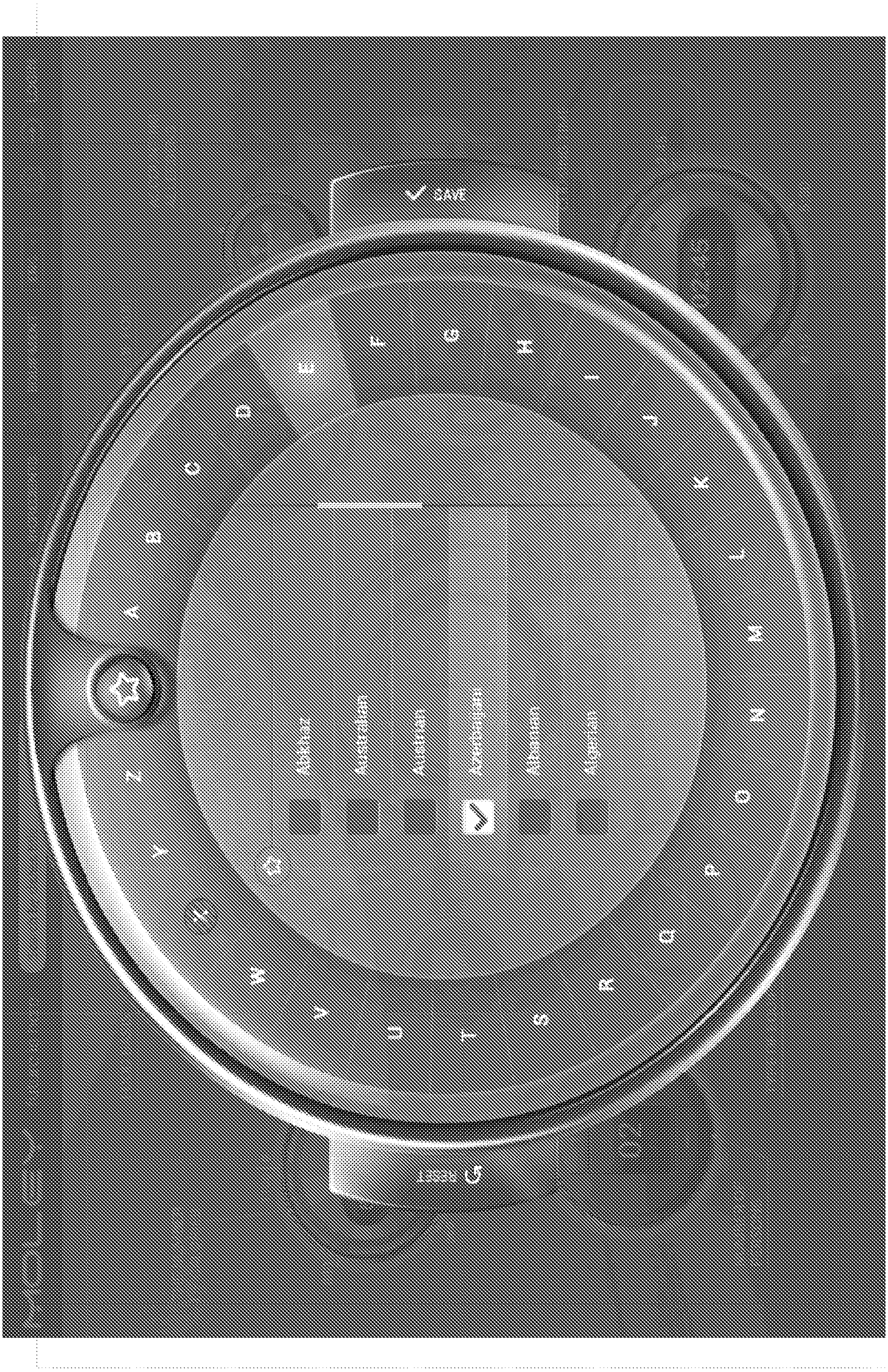


FIG. 37P

Types of Cuisines

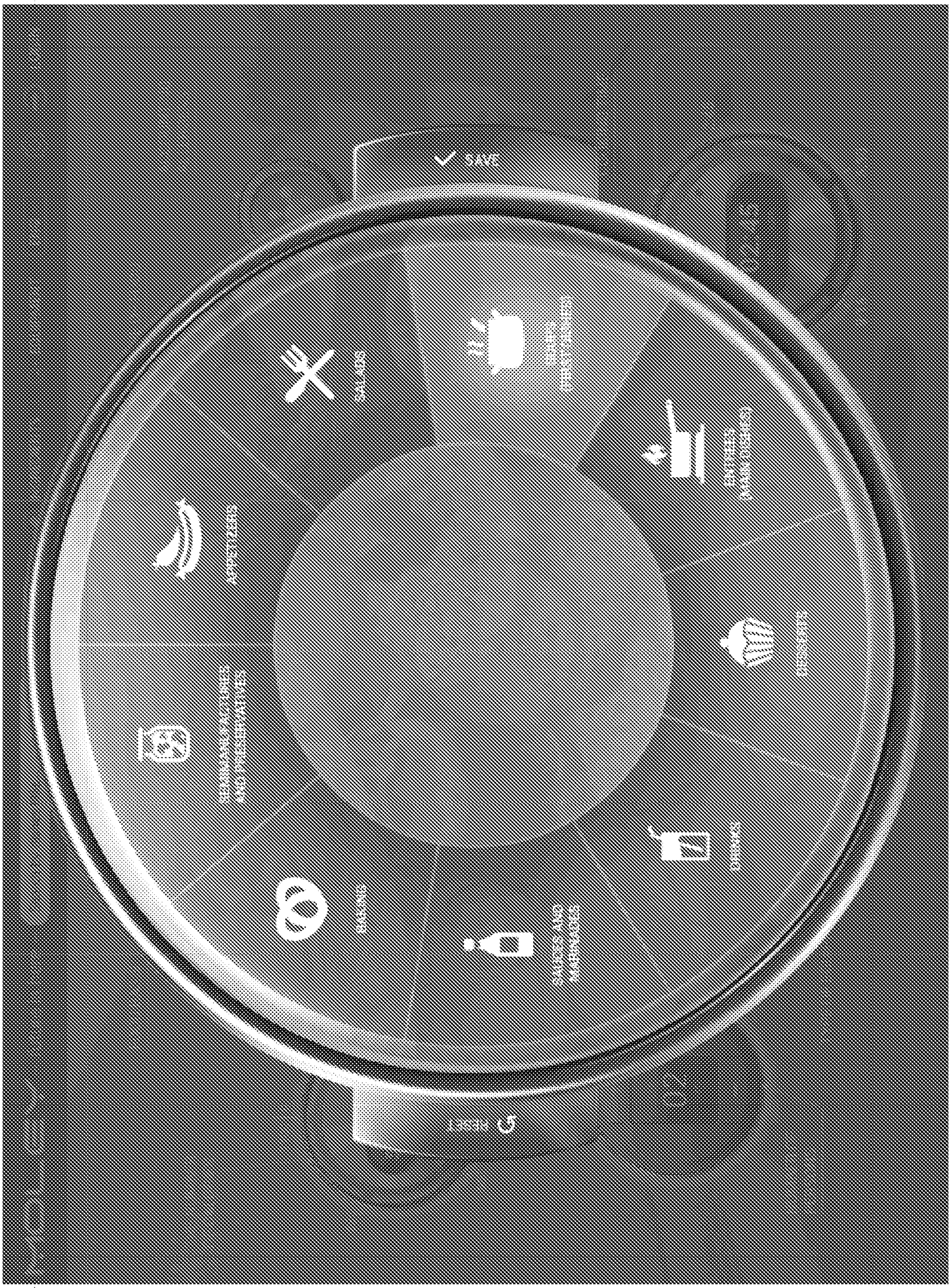


FIG. 37Q

Types of Food

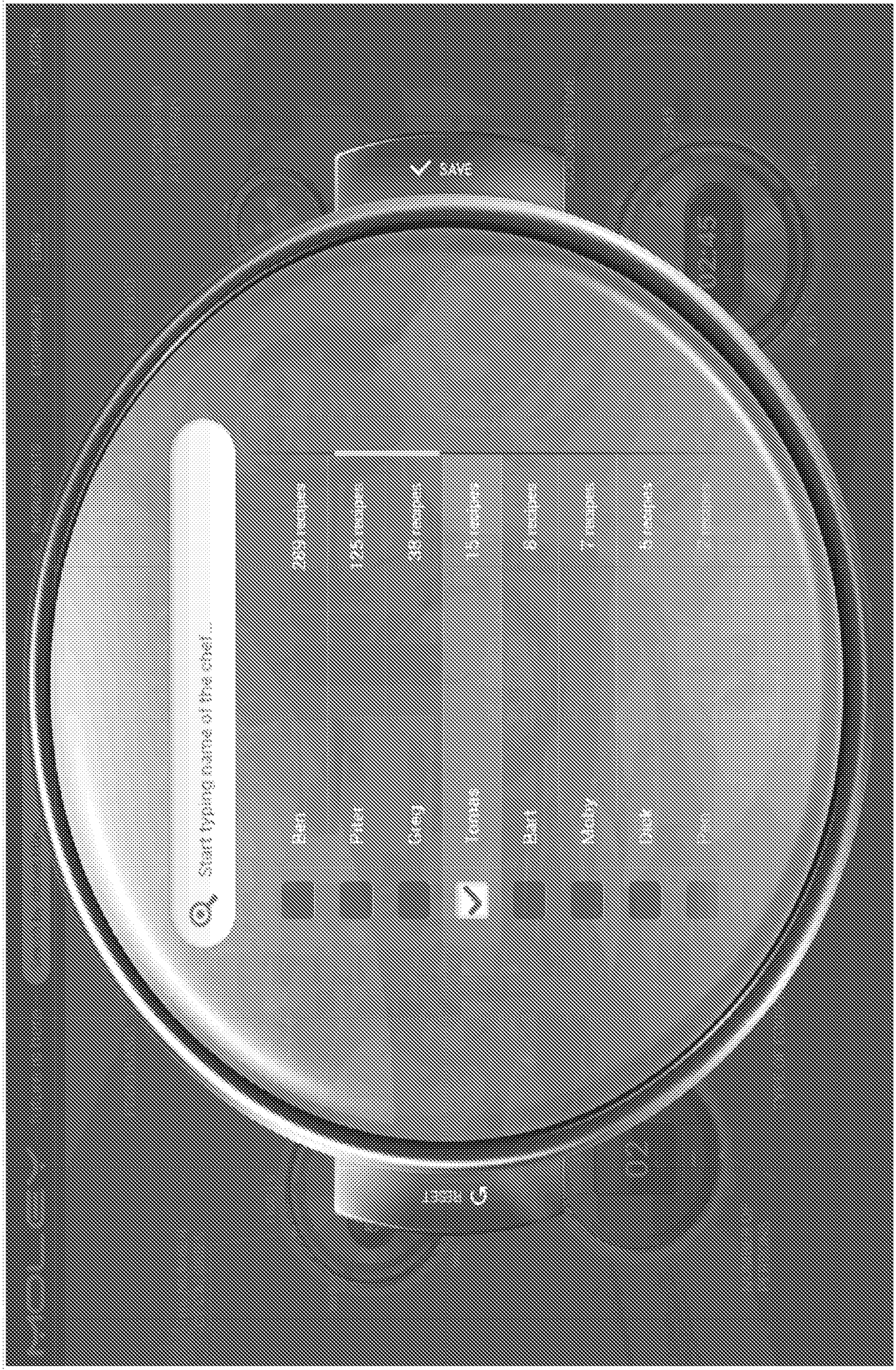


FIG. 37R

Chef Listing

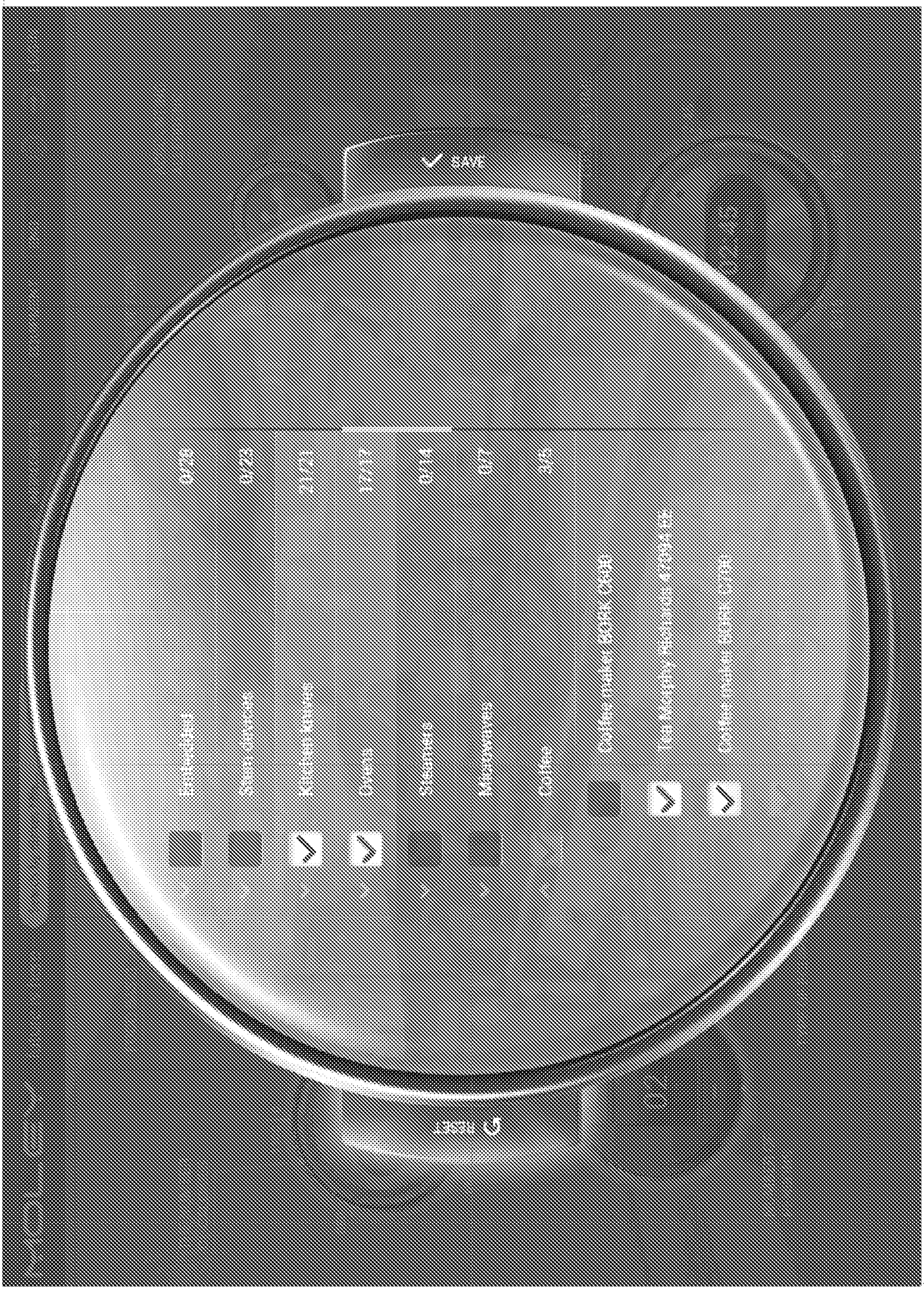


FIG. 37S

Types of Equipment

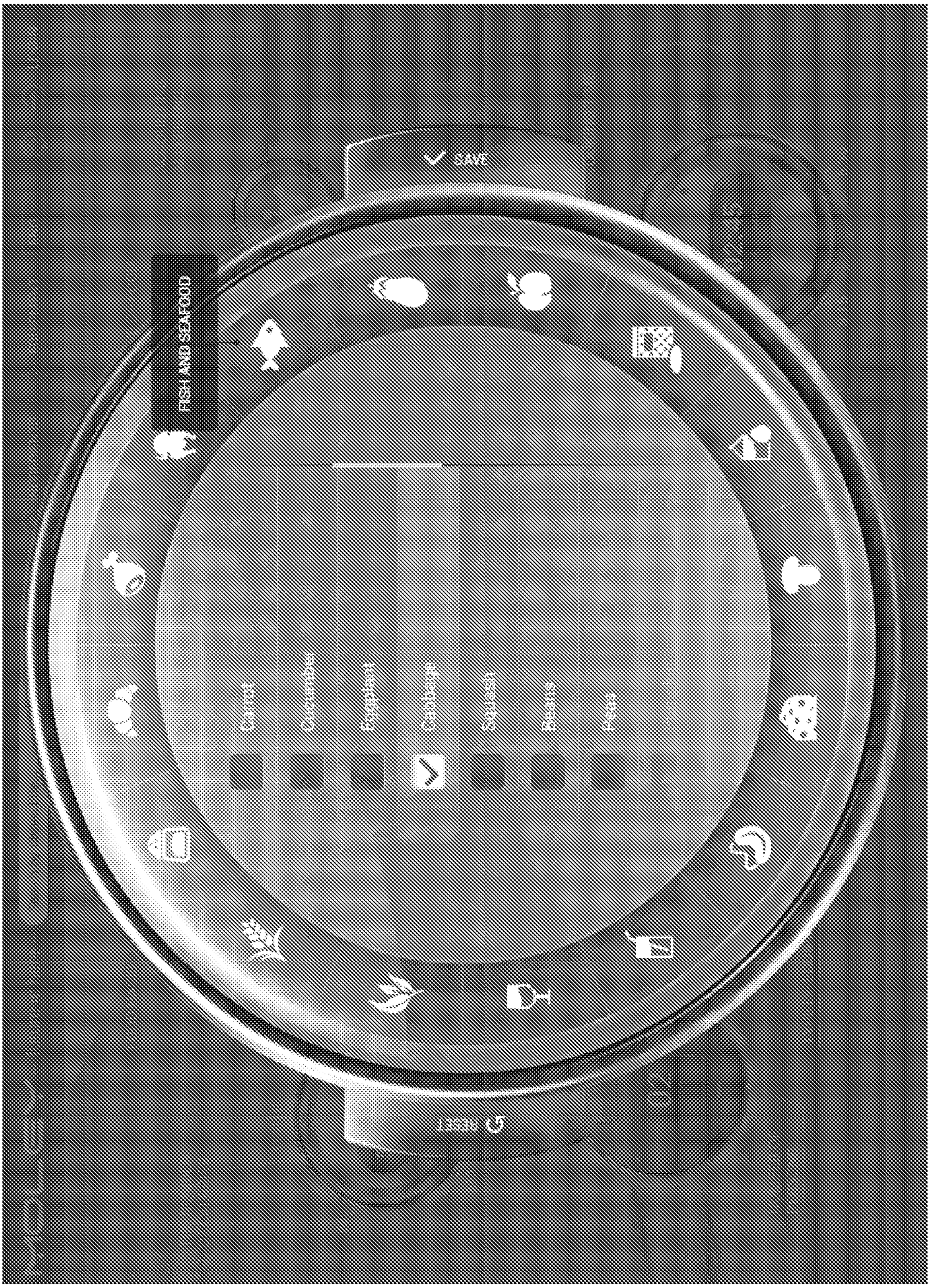


FIG. 37T

Ingredients

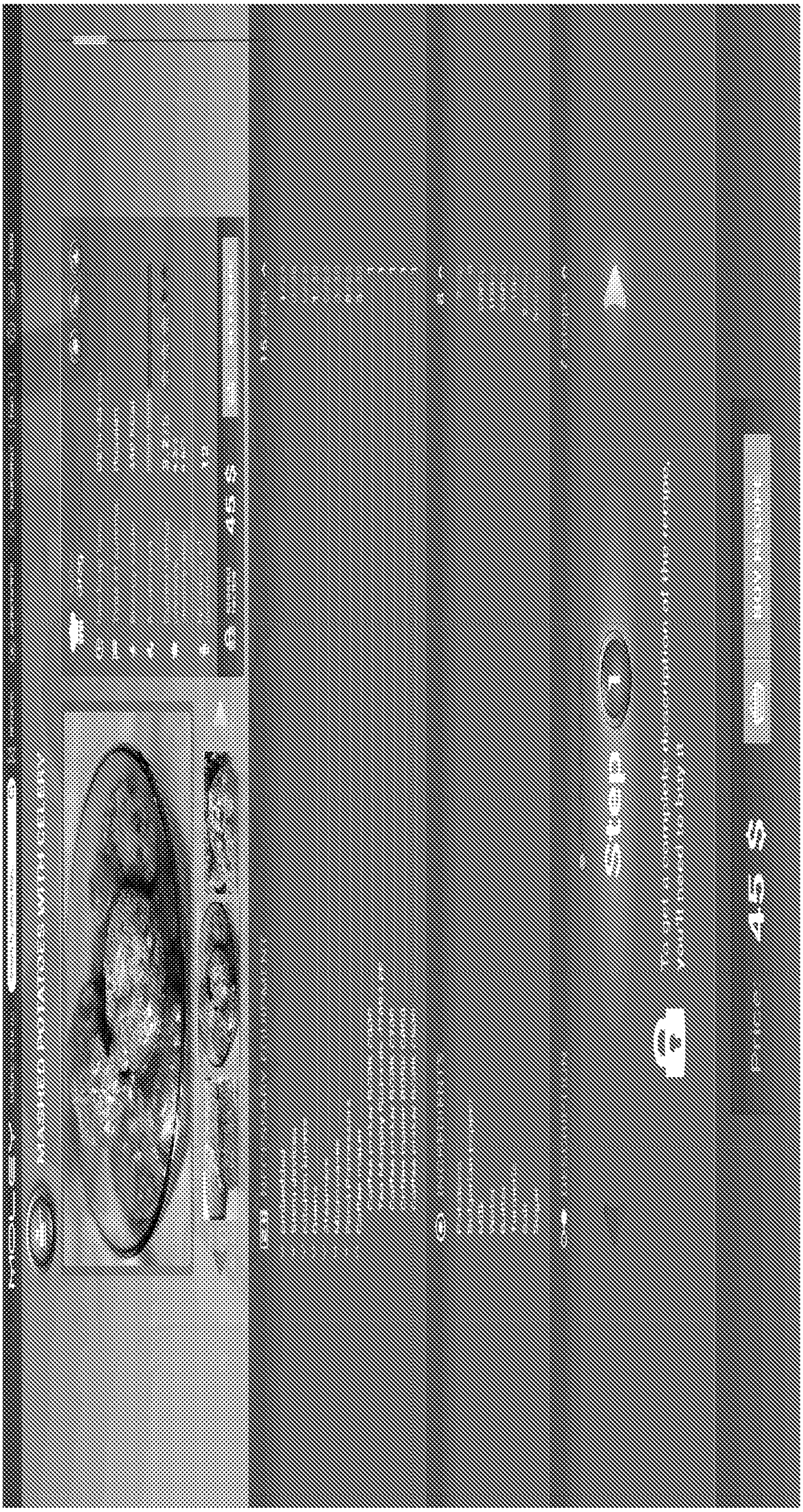


FIG. 37U

Recipe Description

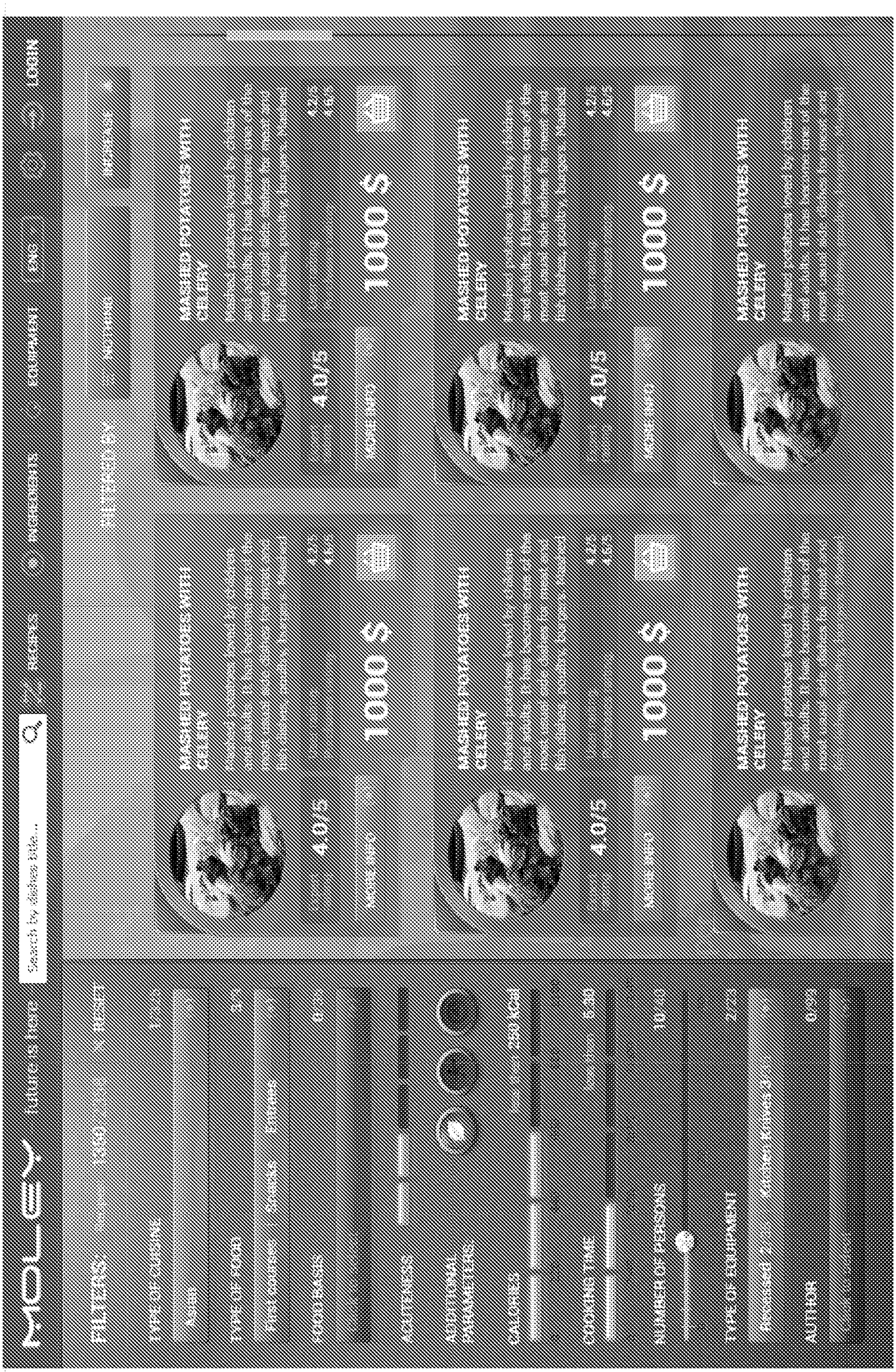


FIG. 37V

Search Result

1150

By selecting category and criteria/range, the result page lists all recipes results, user can sort results by criteria such as rating (e.g. from high to low), or time of cooking (e.g. from shorter to longer), the result display contains photo/media, title, description, ratings and price information of the recipe, the "read more" button brings up complete recipe page to browsing further information of the recipe.

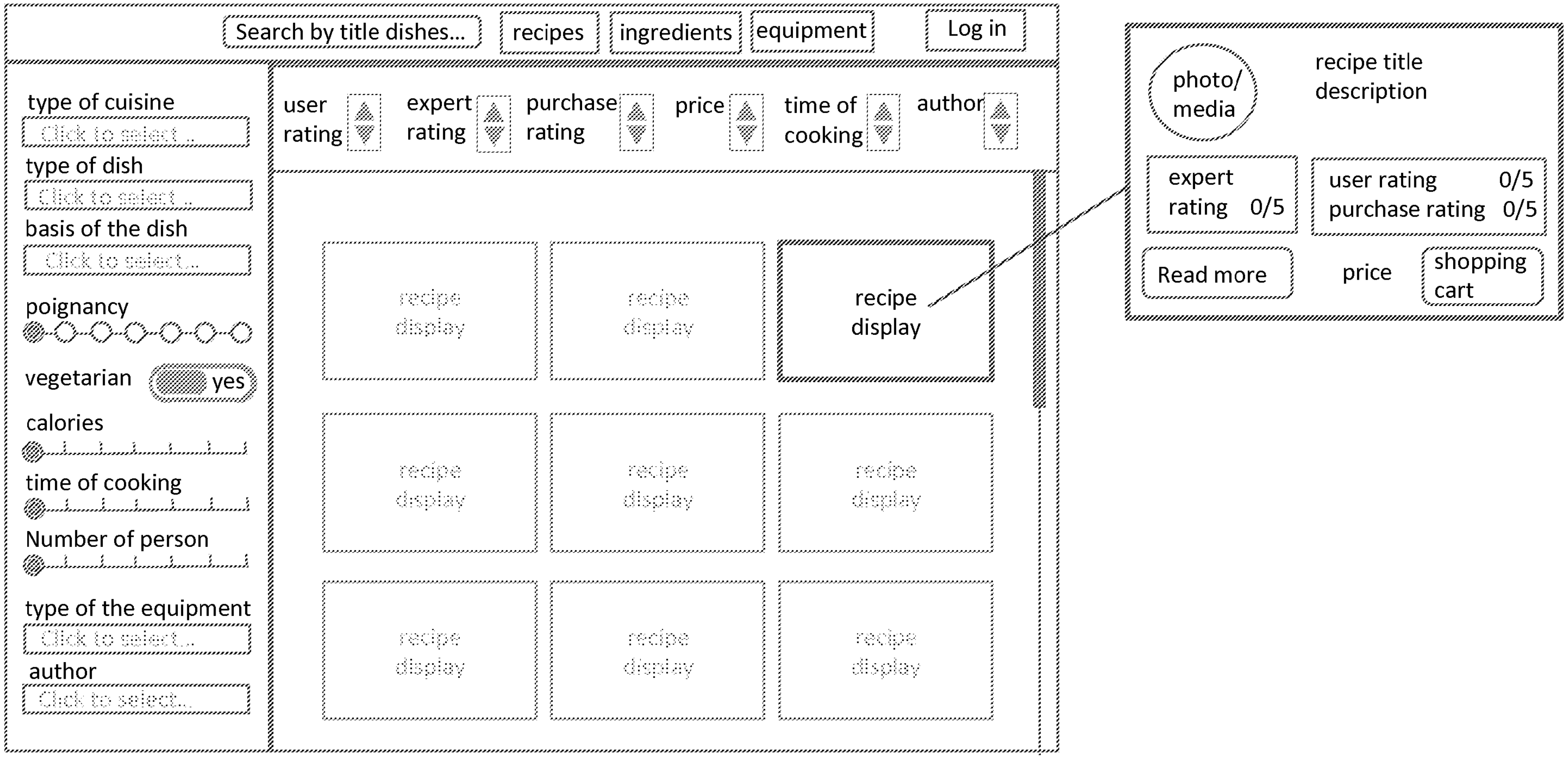


FIG. 38

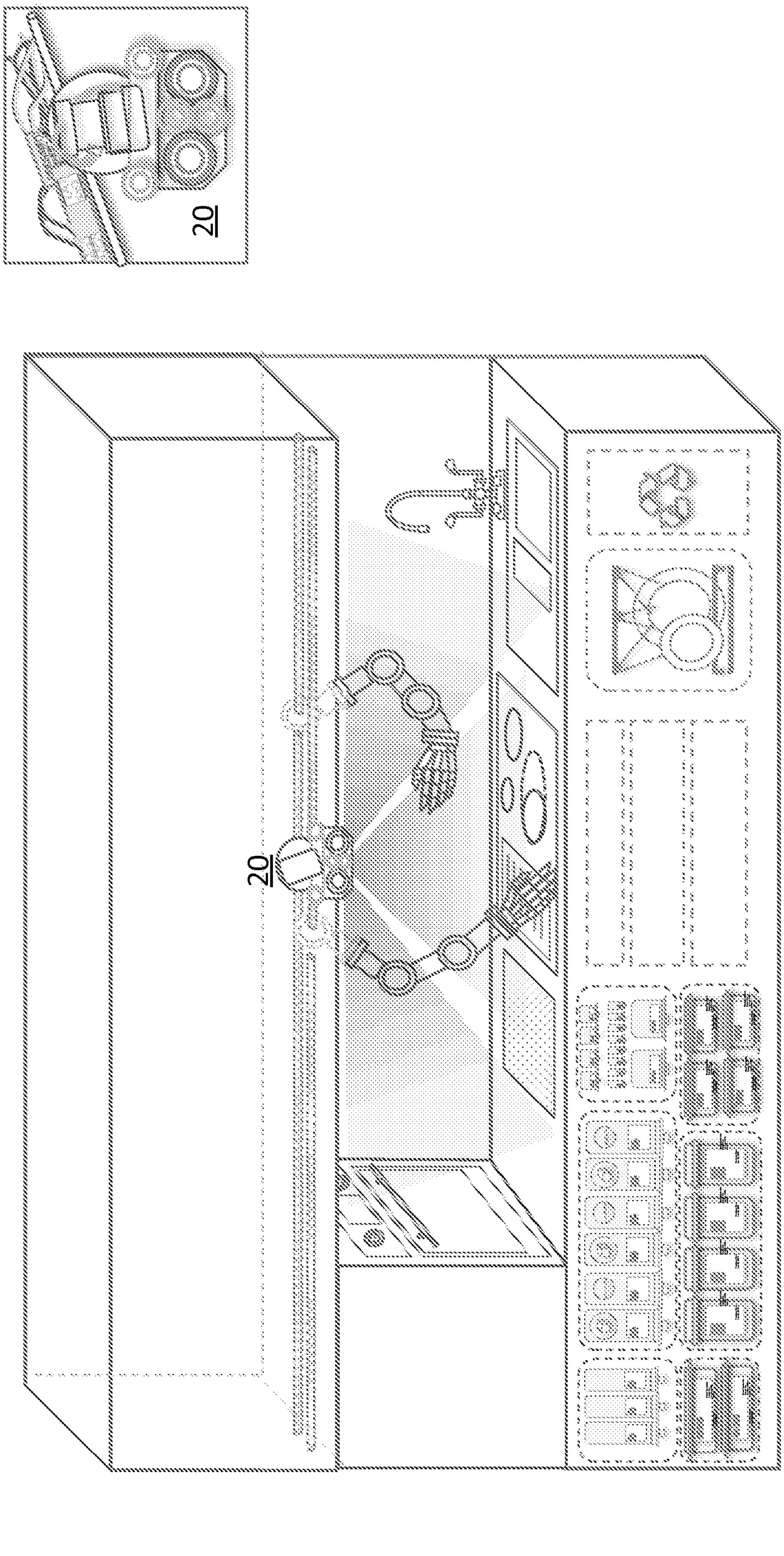


FIG. 39

50

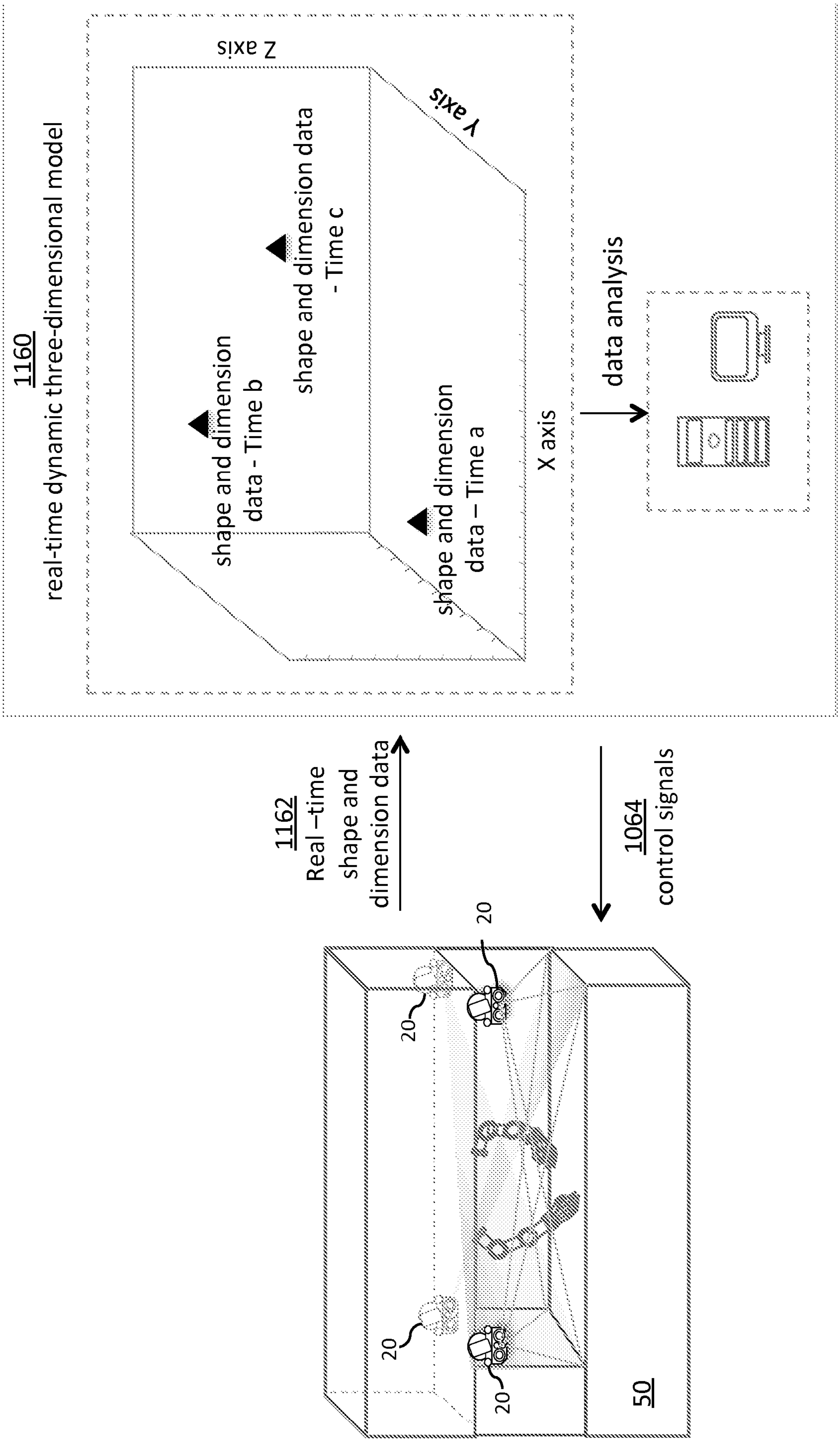
1160
real-time dynamic three-dimensional model
Z axis
Y axis
X axis
shape and dimension data - Time b
shape and dimension data - Time c
shape and dimension data – Time a
data analysis
1162
Real –time shape and dimension data
1064
control signals
20
20
20
20
50

FIG. 40

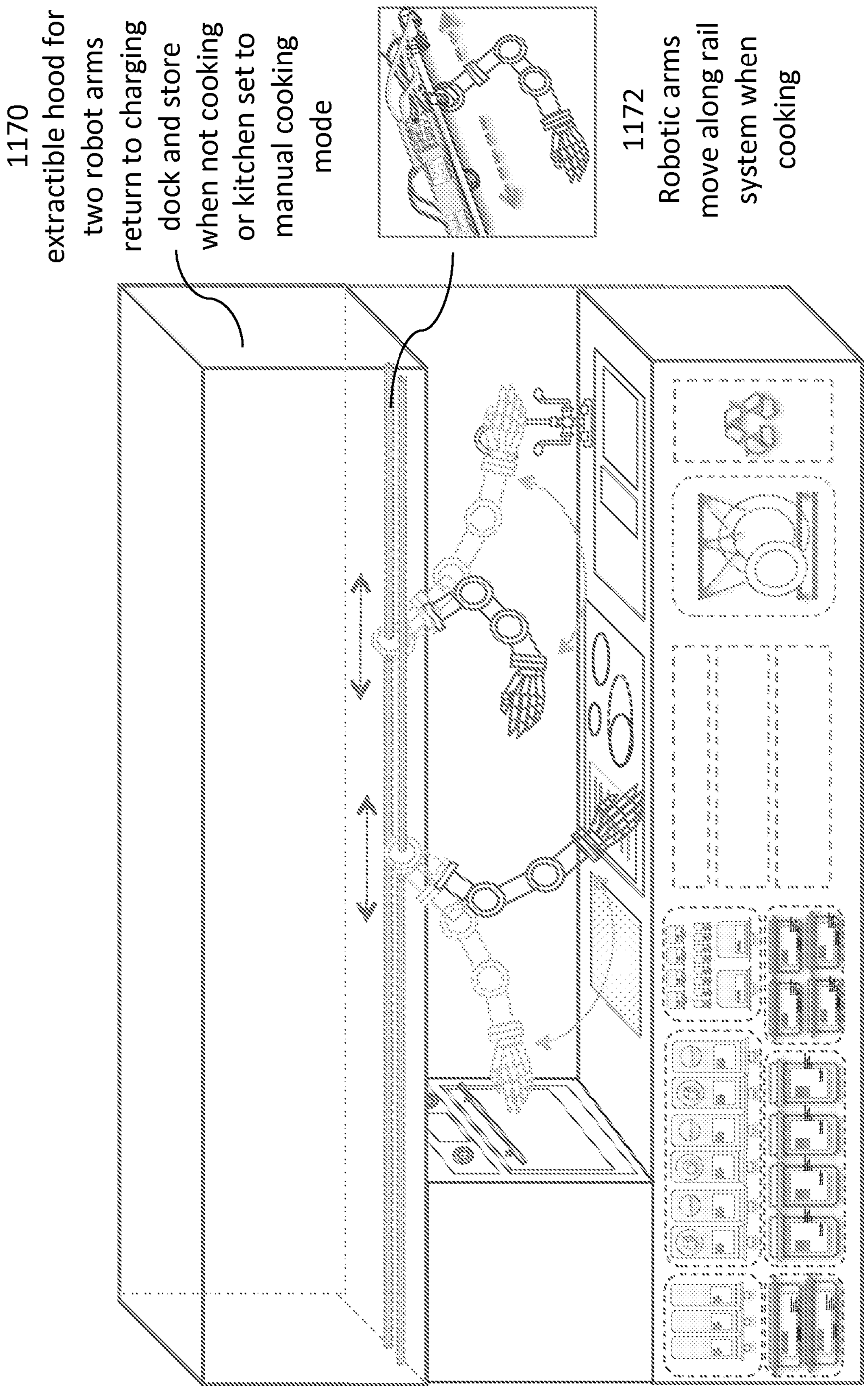
1170
extractible hood for two robot arms return to charging dock and store when not cooking or kitchen set to manual cooking mode
1172
Robotic arms move along rail system when cooking
50

FIG. 41A

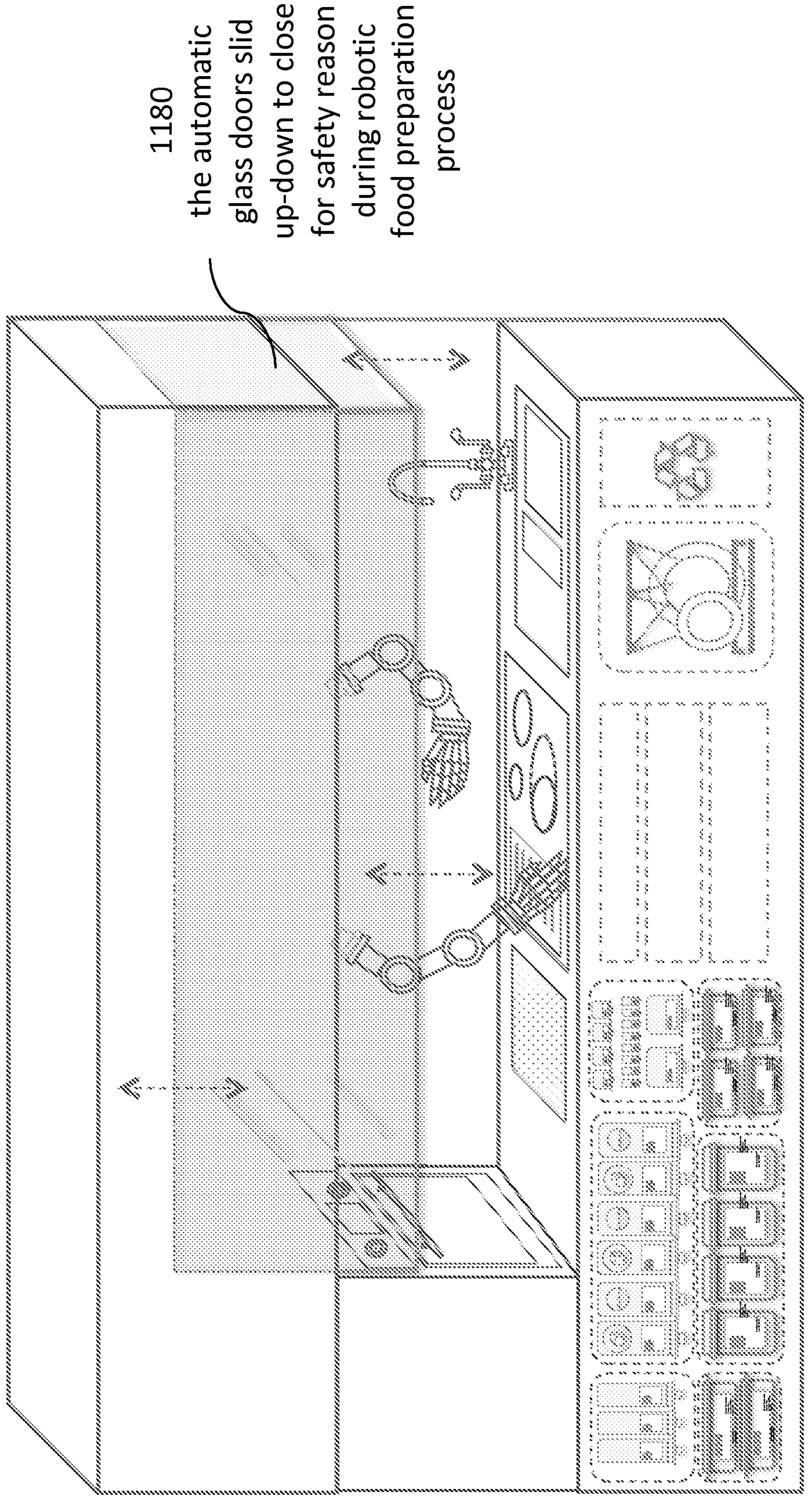
1180
the automatic
glass doors slid
up-down to close
for safety reason
during robotic
food preparation
process

FIG. 41B

50

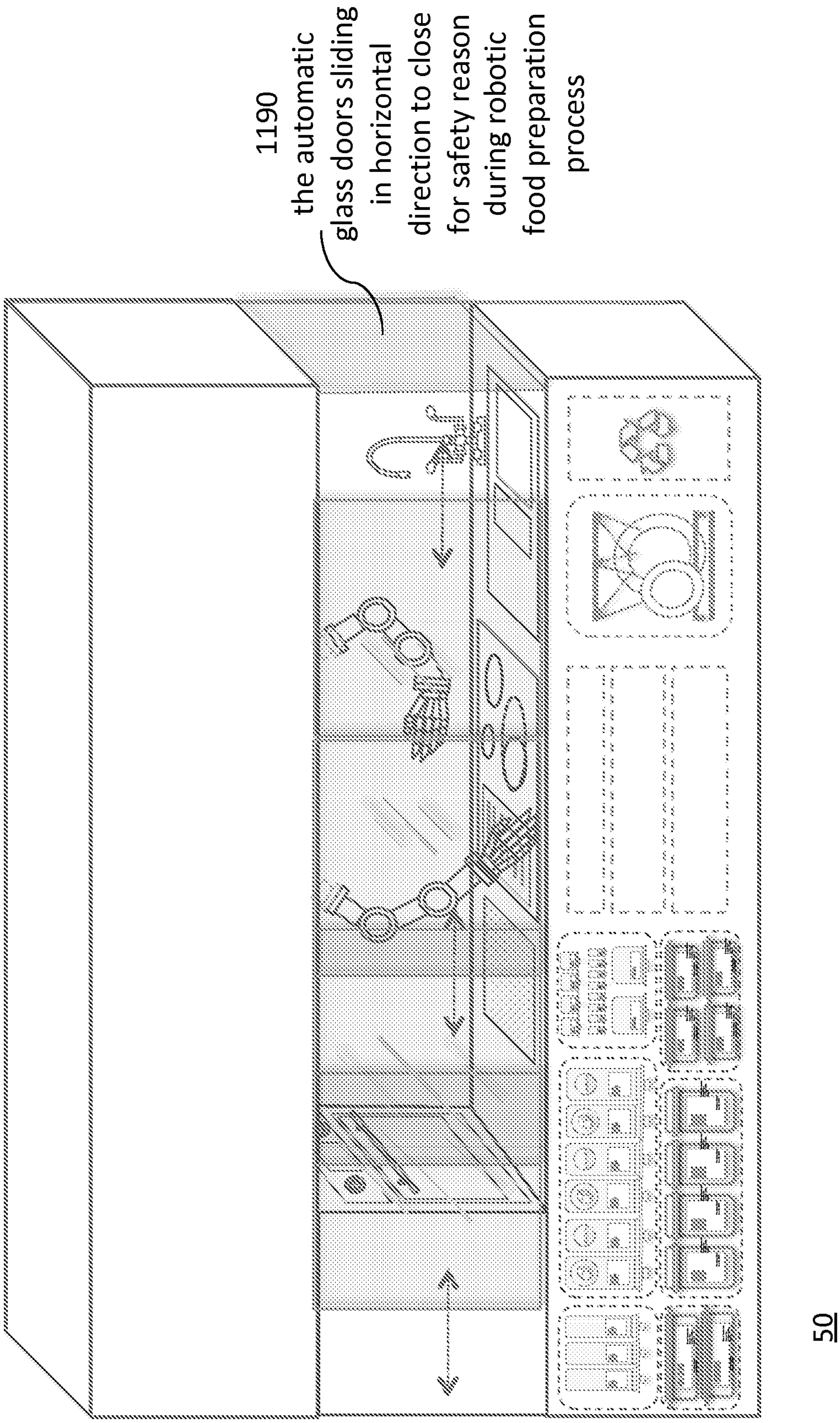


FIG. 41C
robotic kitchen prototype

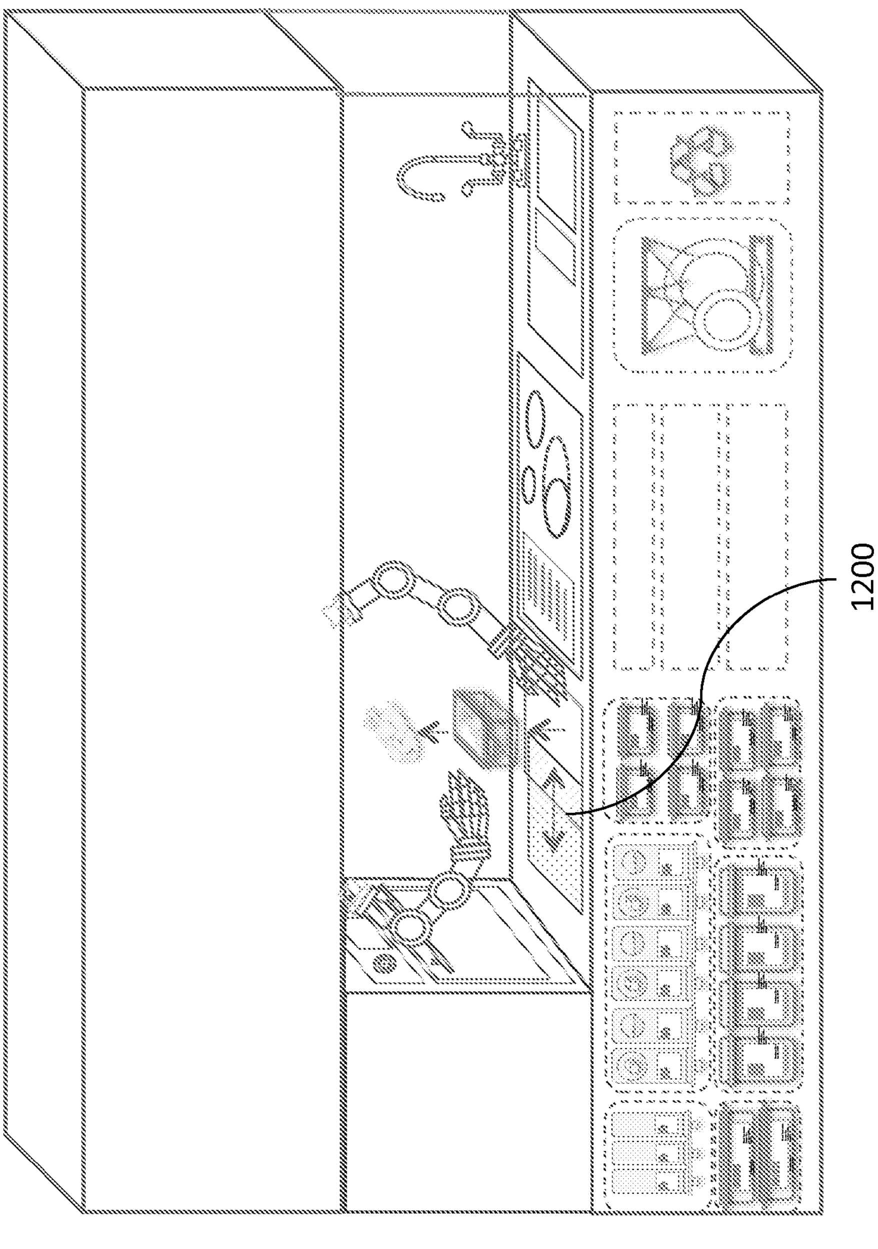


FIG. 41D

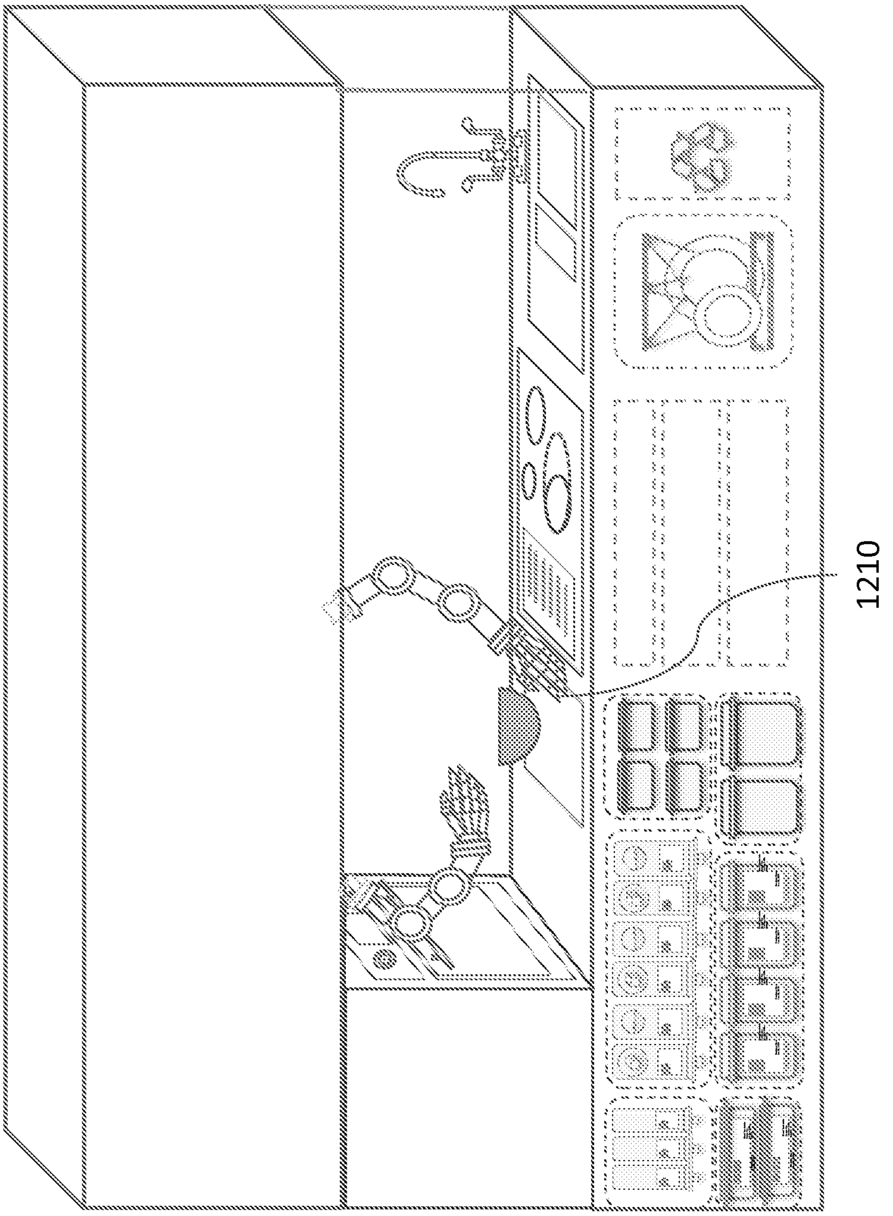


FIG. 41E

50

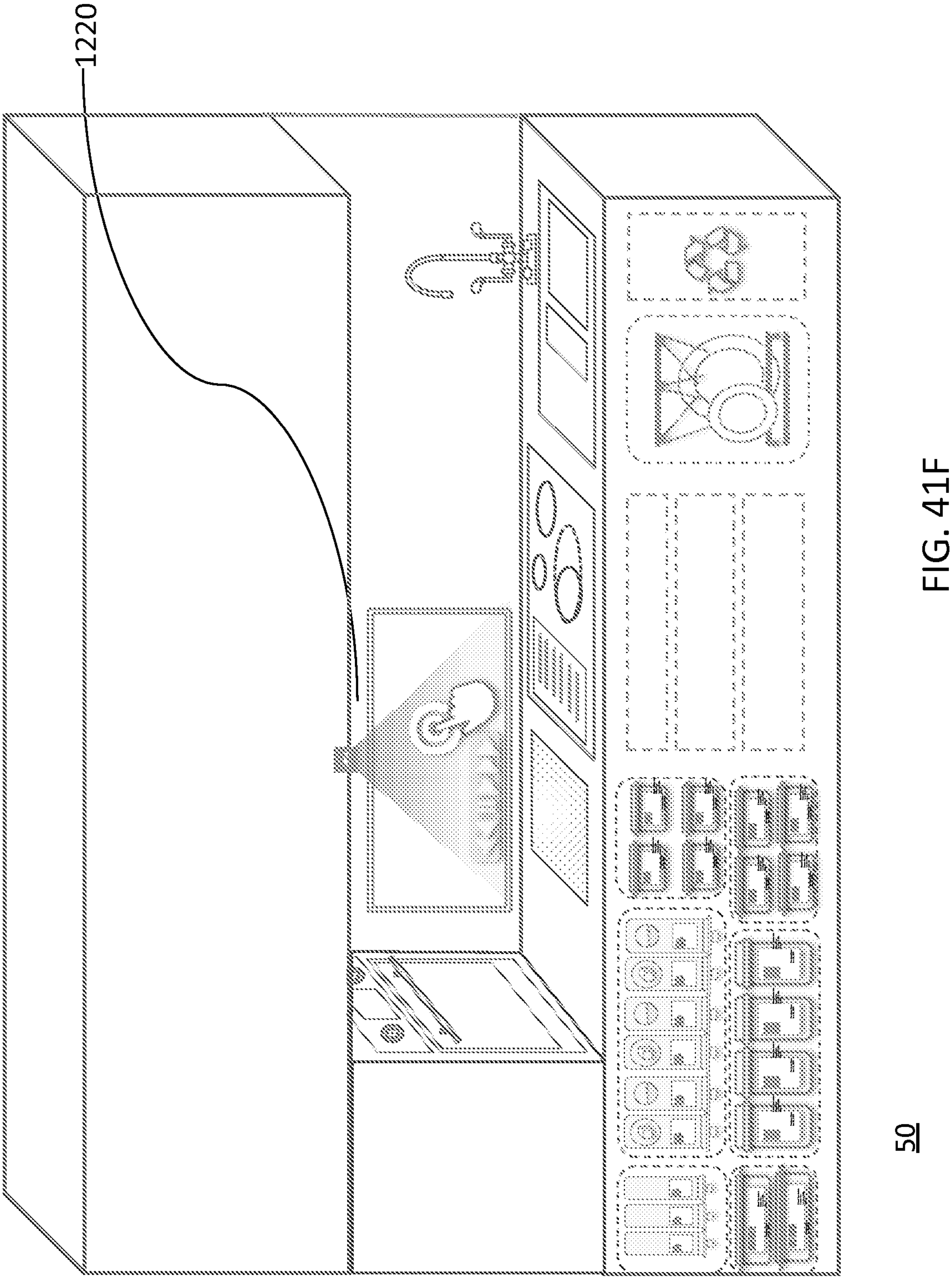


FIG. 41F

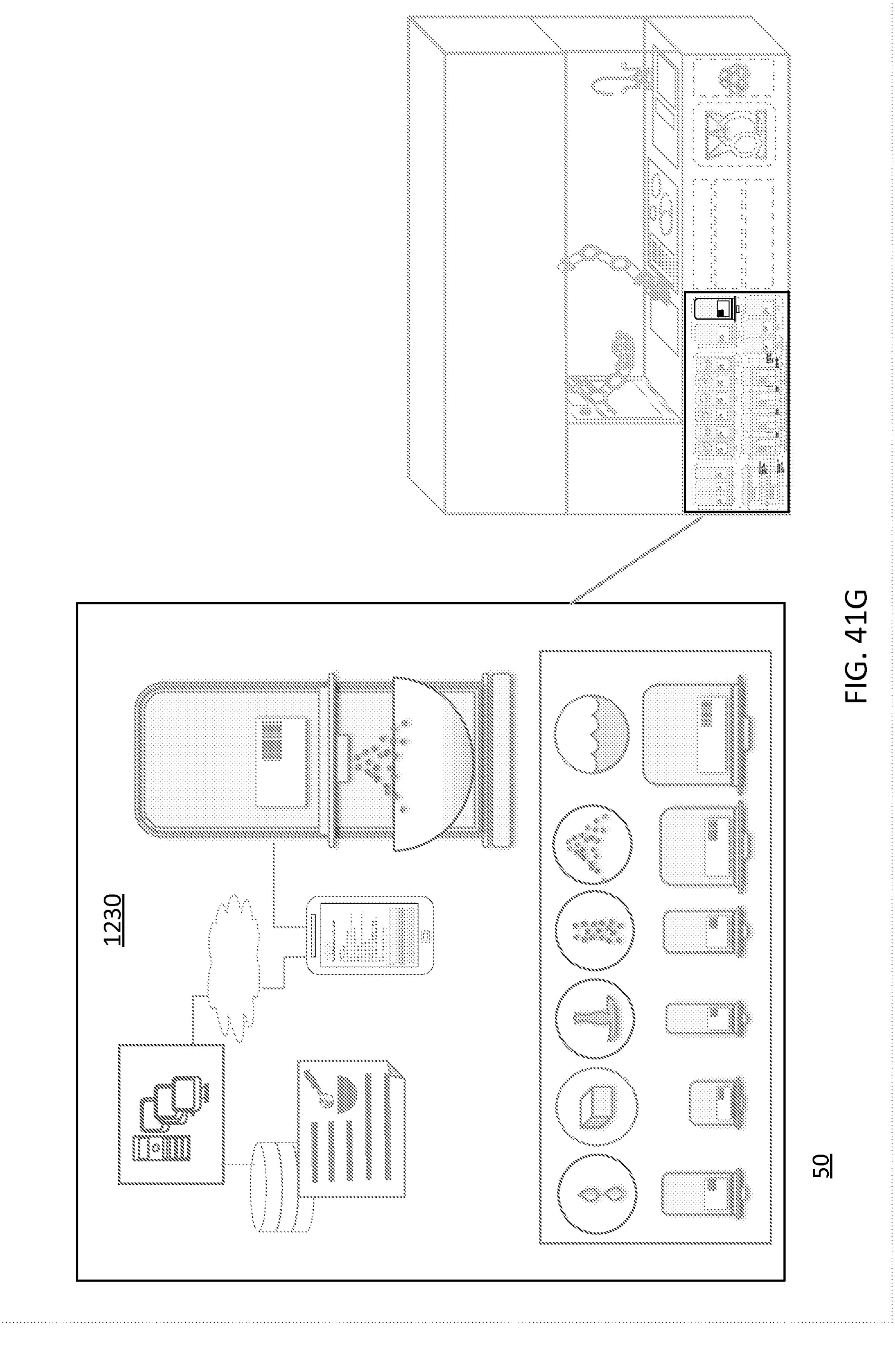


FIG. 41G

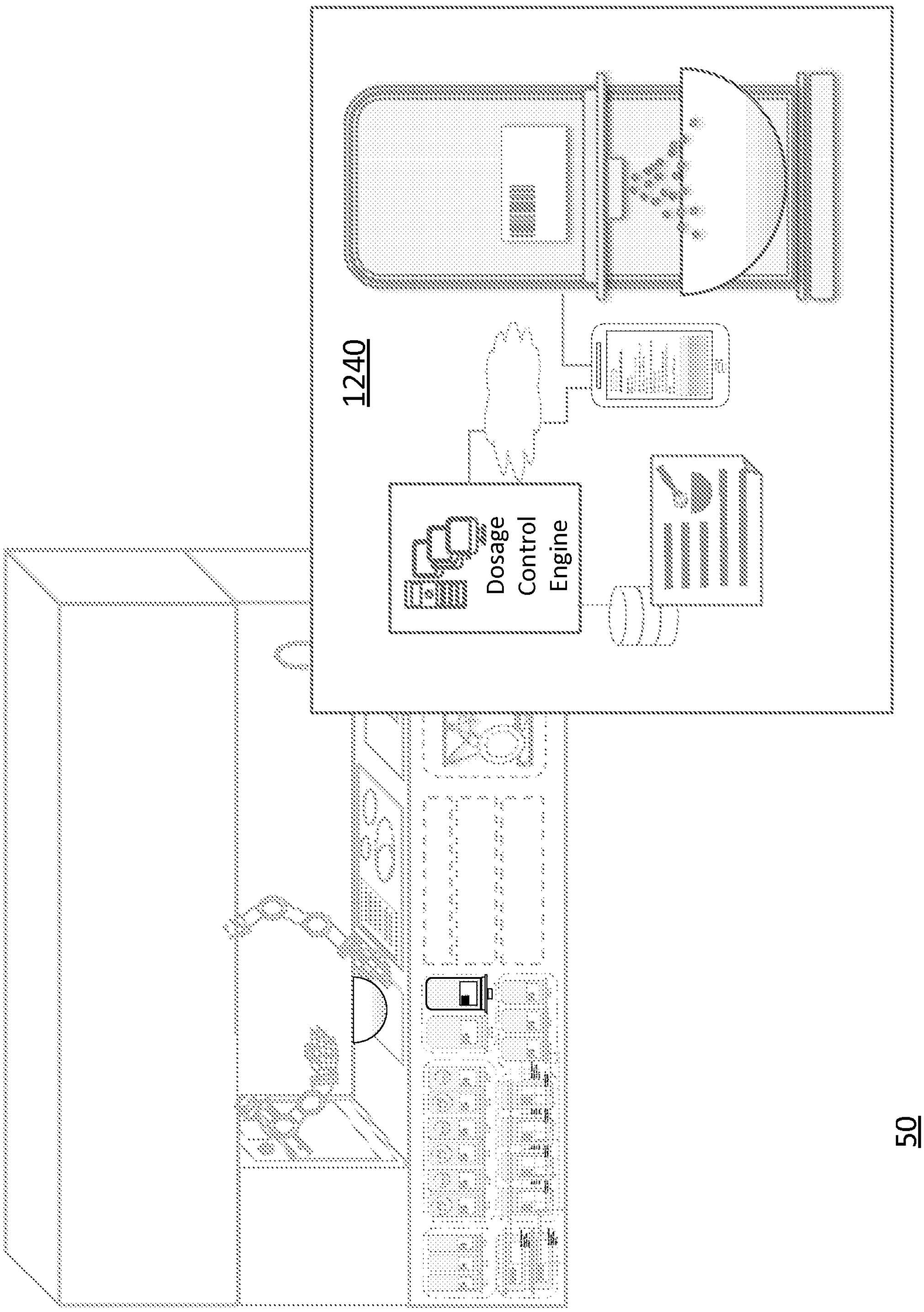


FIG. 41H

50

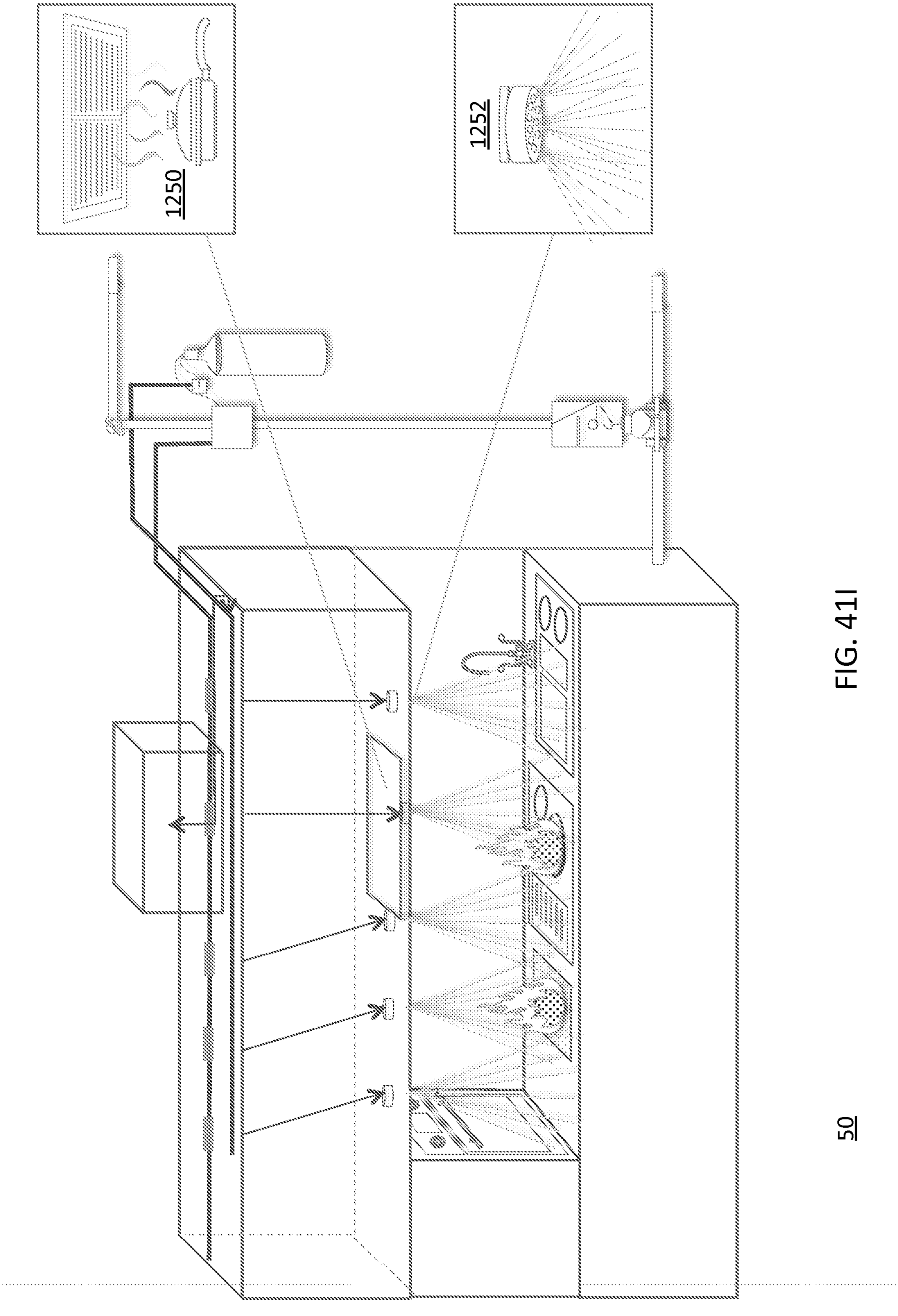


FIG. 41I

50

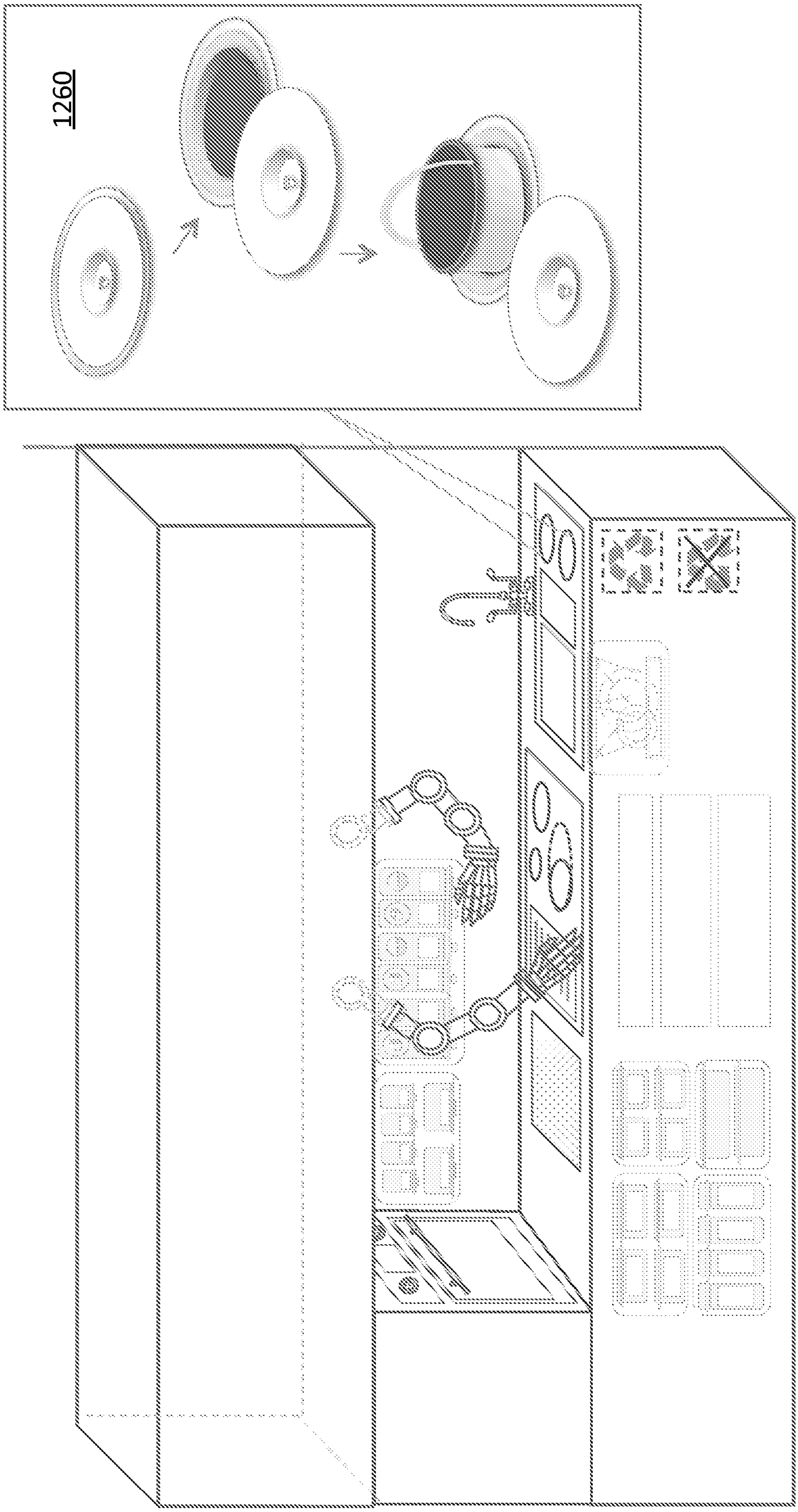


FIG. 41J

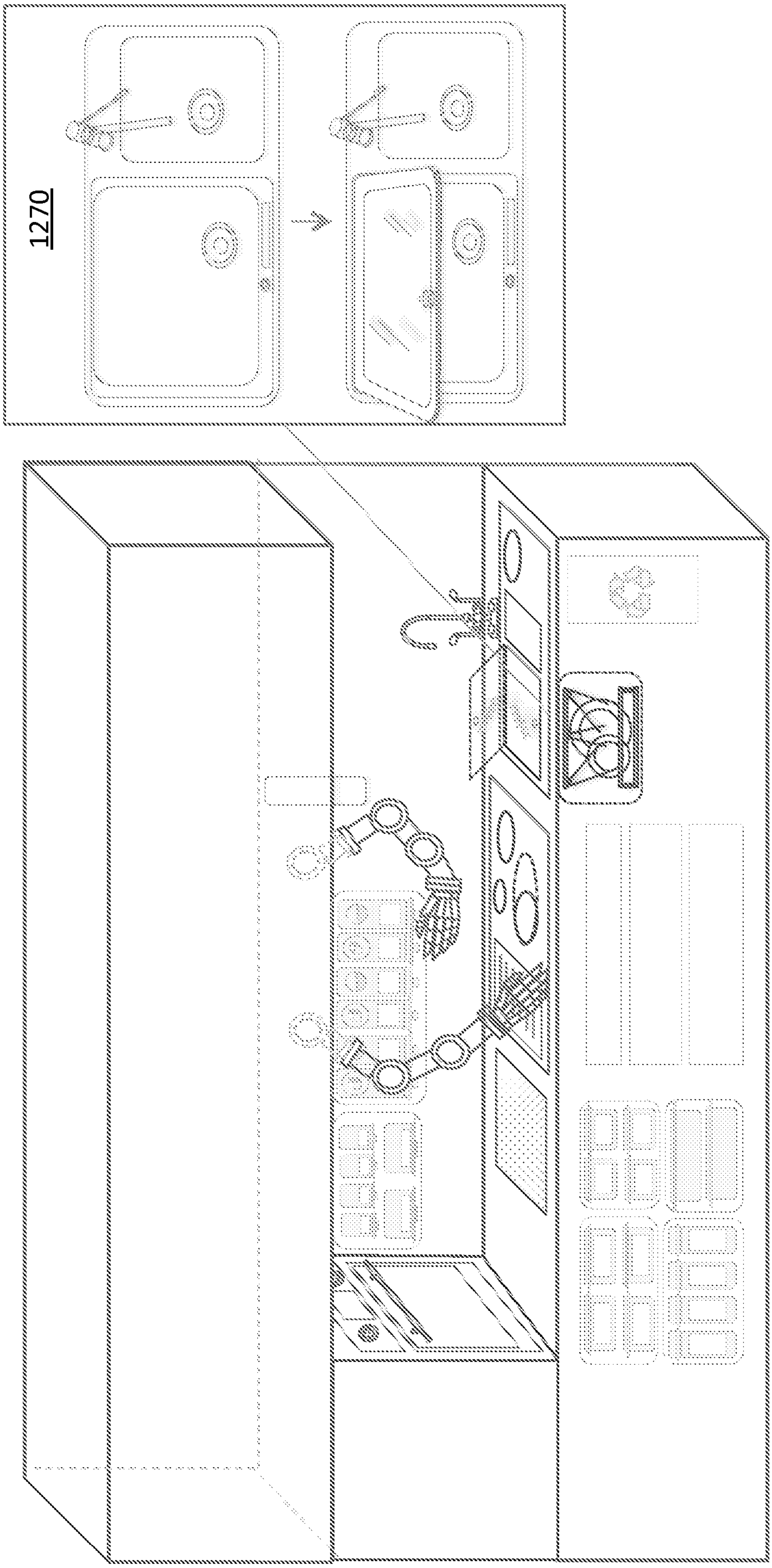


50

FIG. 41K

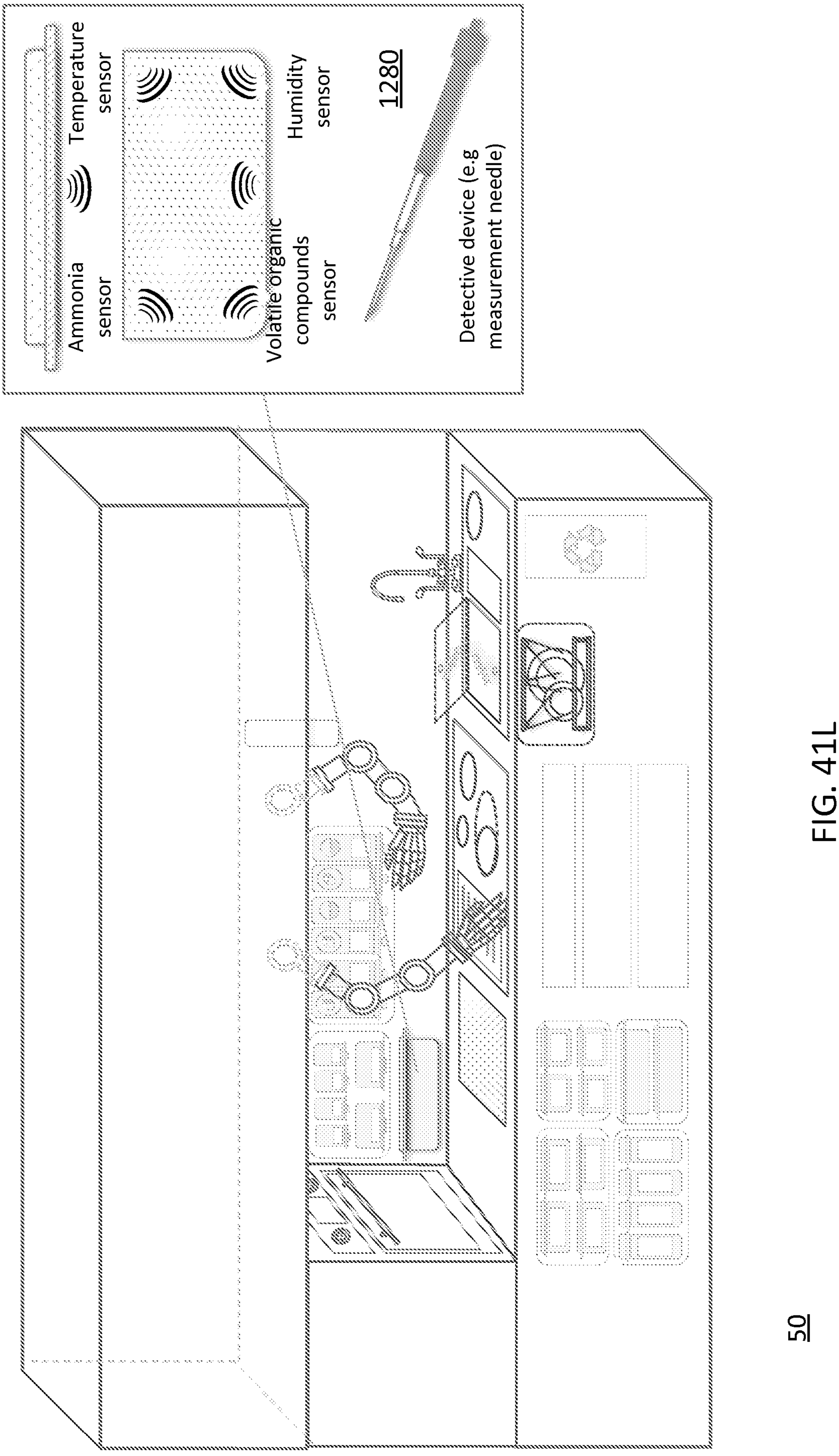
Ammonia sensor
Temperature sensor
Volatile organic compounds sensor
Humidity sensor
1280
Detective device (e.g measurement needle)
50

FIG. 41L

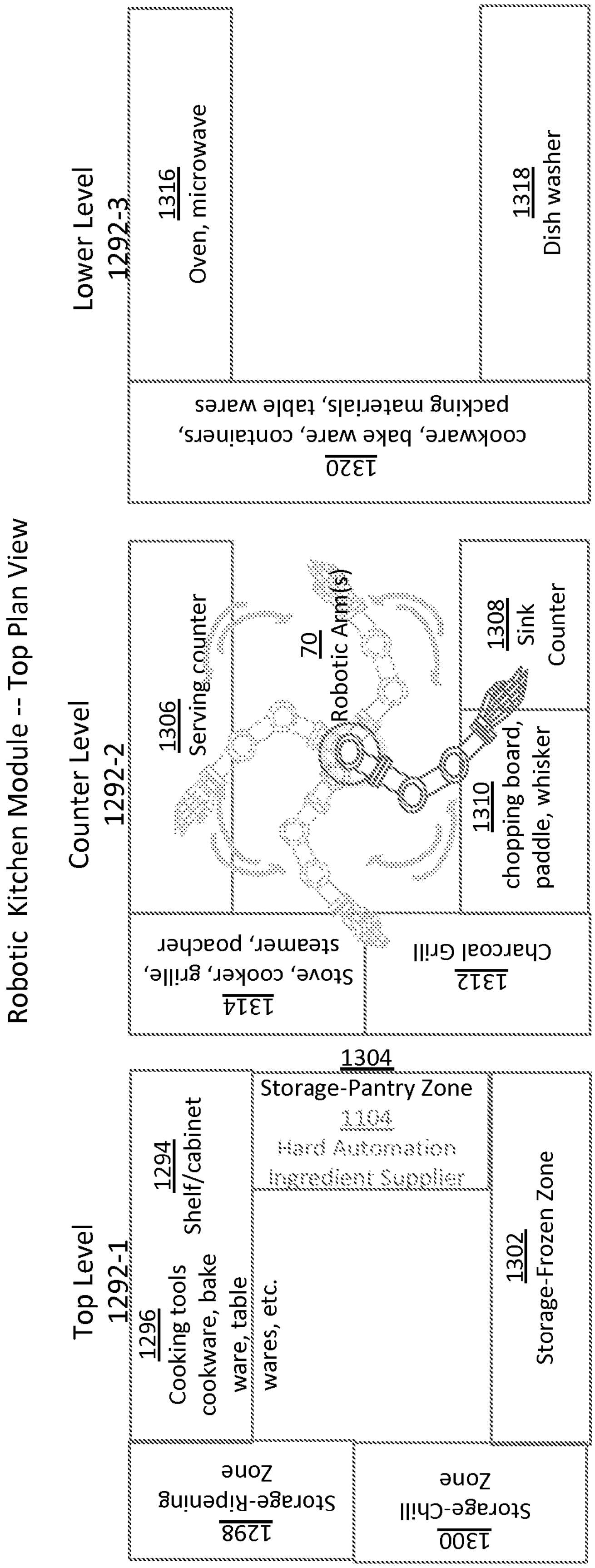
50
Robotic Kitchen Module -- Top Plan View
Top Level
1292-1
1294
Shelf/cabinet
1296
Cooking tools
cookware, bake
ware, table
wares, etc.
1304
Storage-Pantry Zone
1104
Hard Automation
Ingredient Supplier
1302
Storage-Frozen Zone
1298
Storage-Ripening
Zone
1300
Storage-Chill
Zone
Counter Level
1292-2
1306
Serving counter
70
Robotic Arm(s)
1308
Sink
Counter
1310
chopping board,
paddle, whisker
1314
Stove, cooker, grille,
steamer, poacher
1312
Charcoal Grill
Lower Level
1292-3
1316
Oven, microwave
1318
Dish washer
1320
cookware, bake ware, containers,
packing materials, table wares

FIG. 42A

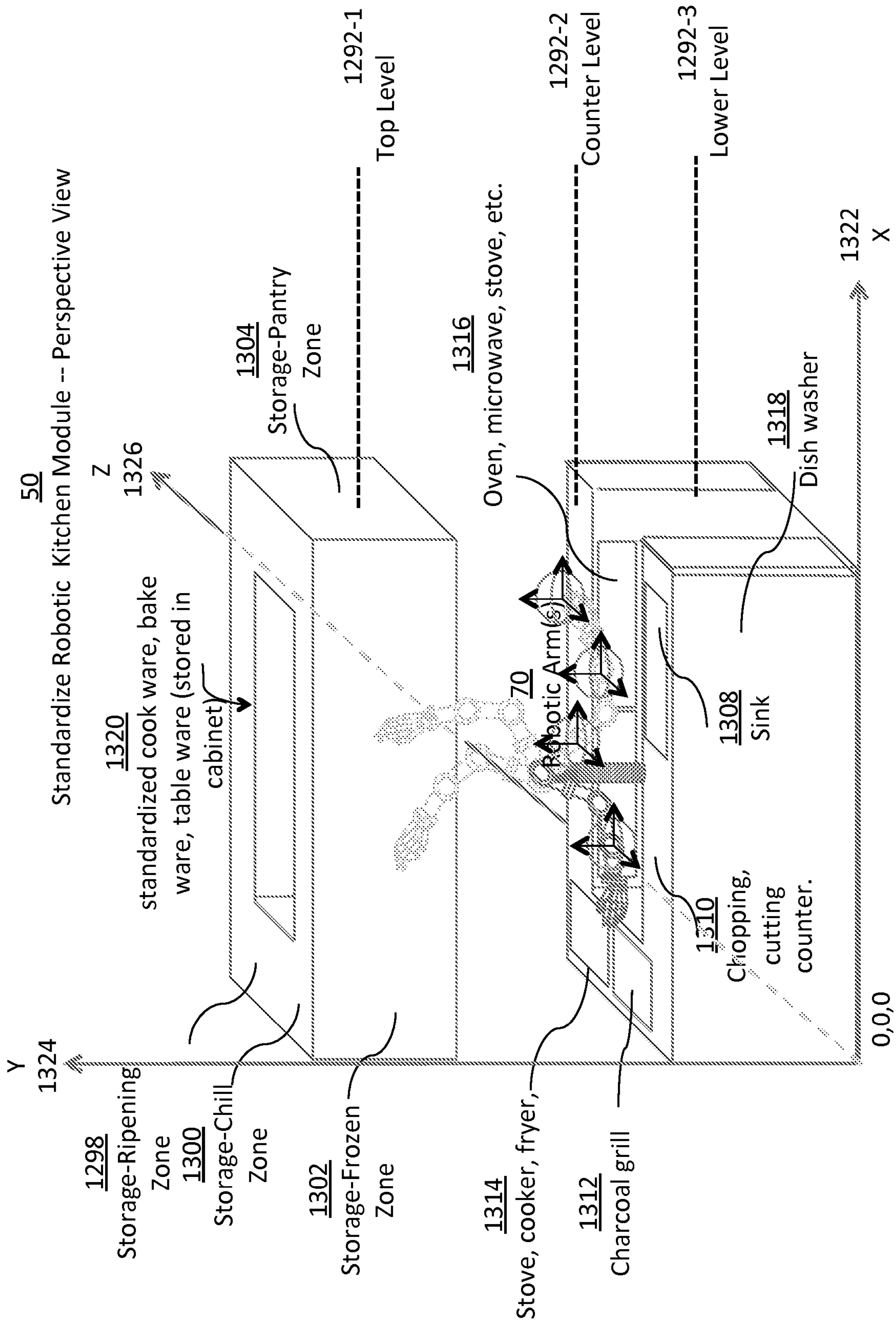
50
Standardize Robotic Kitchen Module -- Perspective View
1320
standardized cook ware, bake ware, table ware (stored in cabinet)
Z
1326
1304
Storage-Pantry Zone
1292-1
Top Level
1316
Oven, microwave, stove, etc.
1292-2
Counter Level
1292-3
Lower Level
1318
Dish washer
1322
X
70
Robotic Arm(s)
1308
Sink
1310
Chopping, cutting counter.
0,0,0
Y
1324
1298
Storage-Ripening Zone
1300
Storage-Chill Zone
1302
Storage-Frozen Zone
1314
Stove, cooker, fryer,
1312
Charcoal grill

FIG. 42B

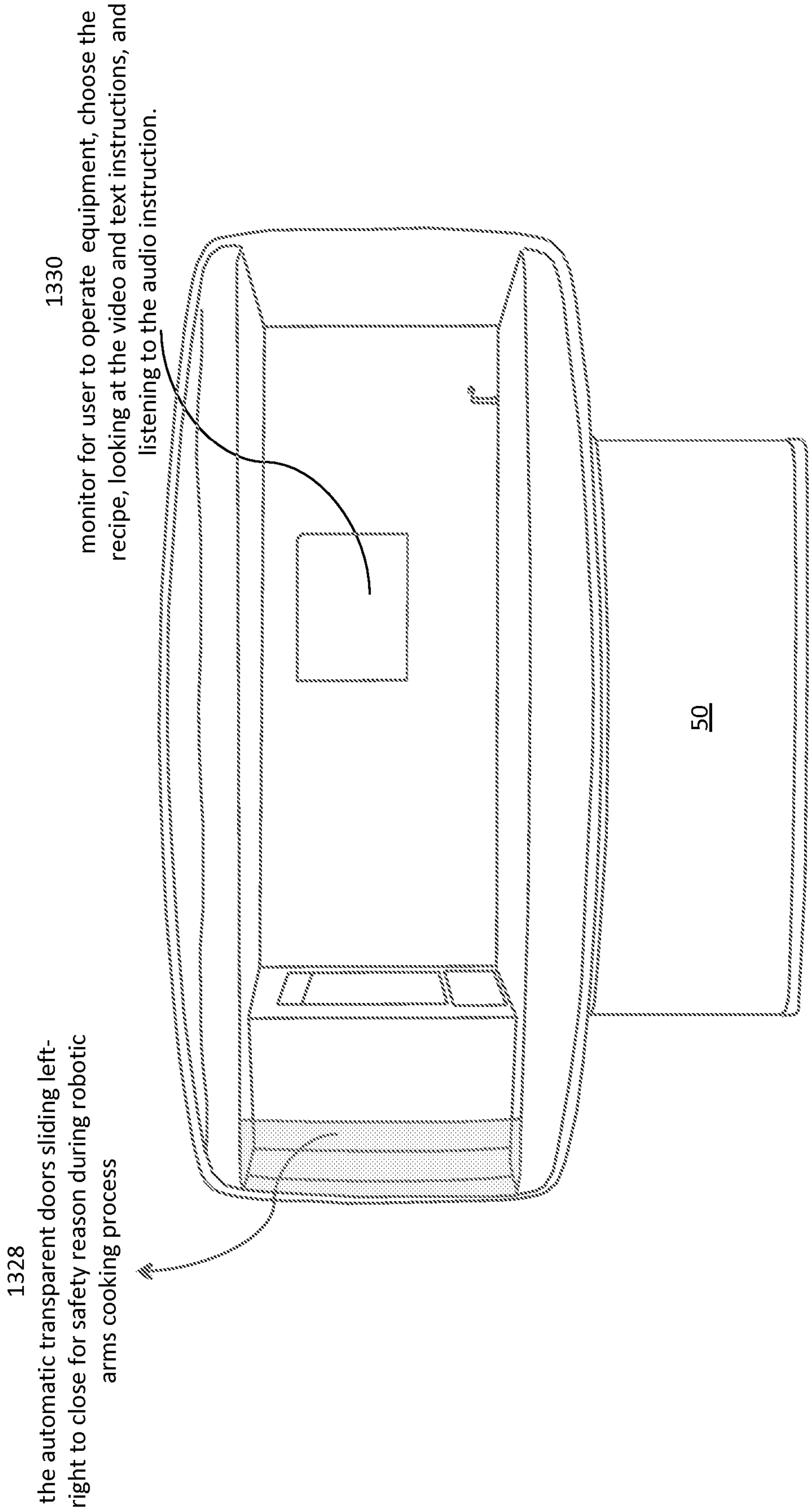
1330
monitor for user to operate equipment, choose the recipe, looking at the video and text instructions, and listening to the audio instruction.
50
1328
the automatic transparent doors sliding left-right to close for safety reason during robotic arms cooking process

FIG. 43A

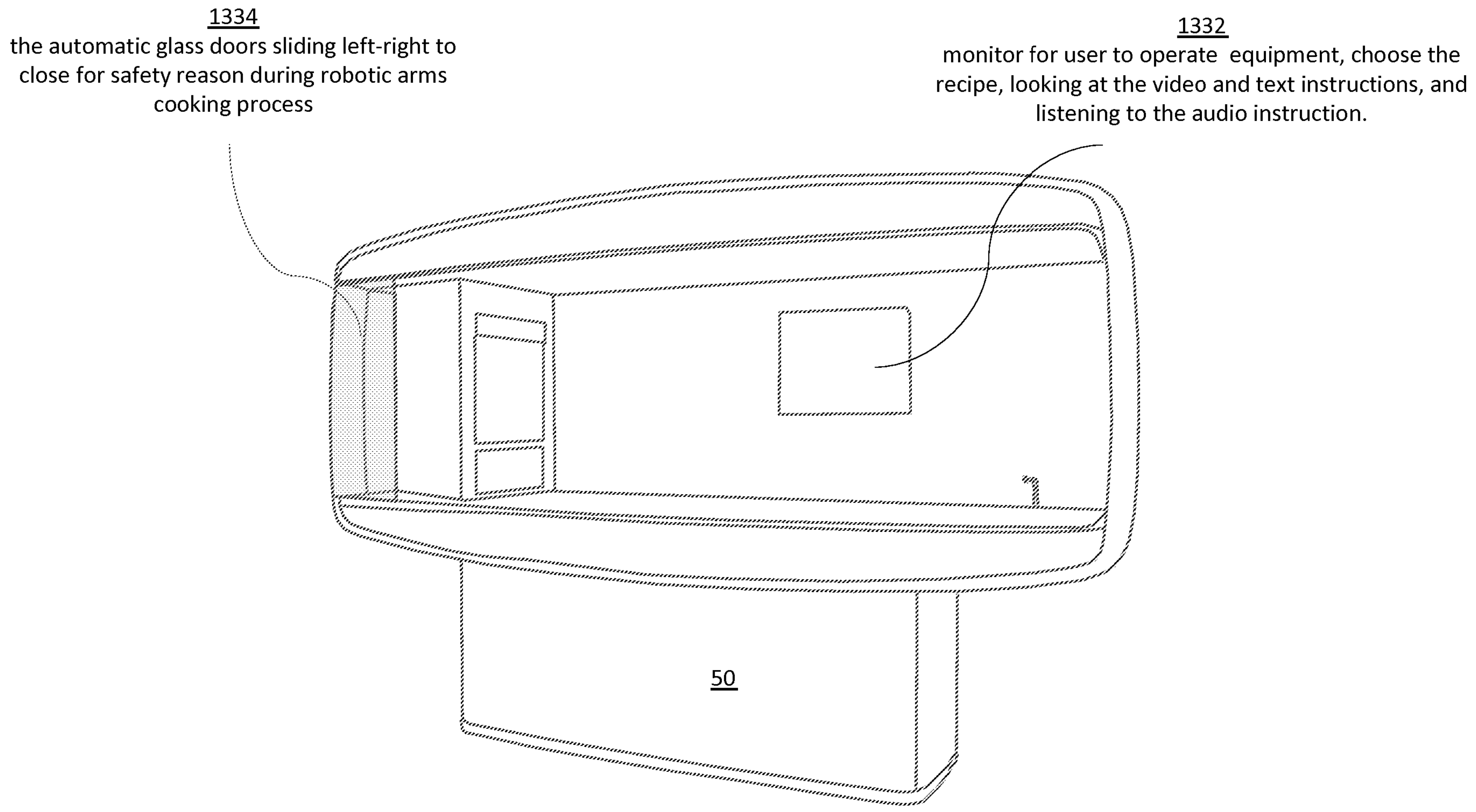
1334
the automatic glass doors sliding left-right to close for safety reason during robotic arms cooking process
1332
monitor for user to operate equipment, choose the recipe, looking at the video and text instructions, and listening to the audio instruction.
50

FIG. 43B

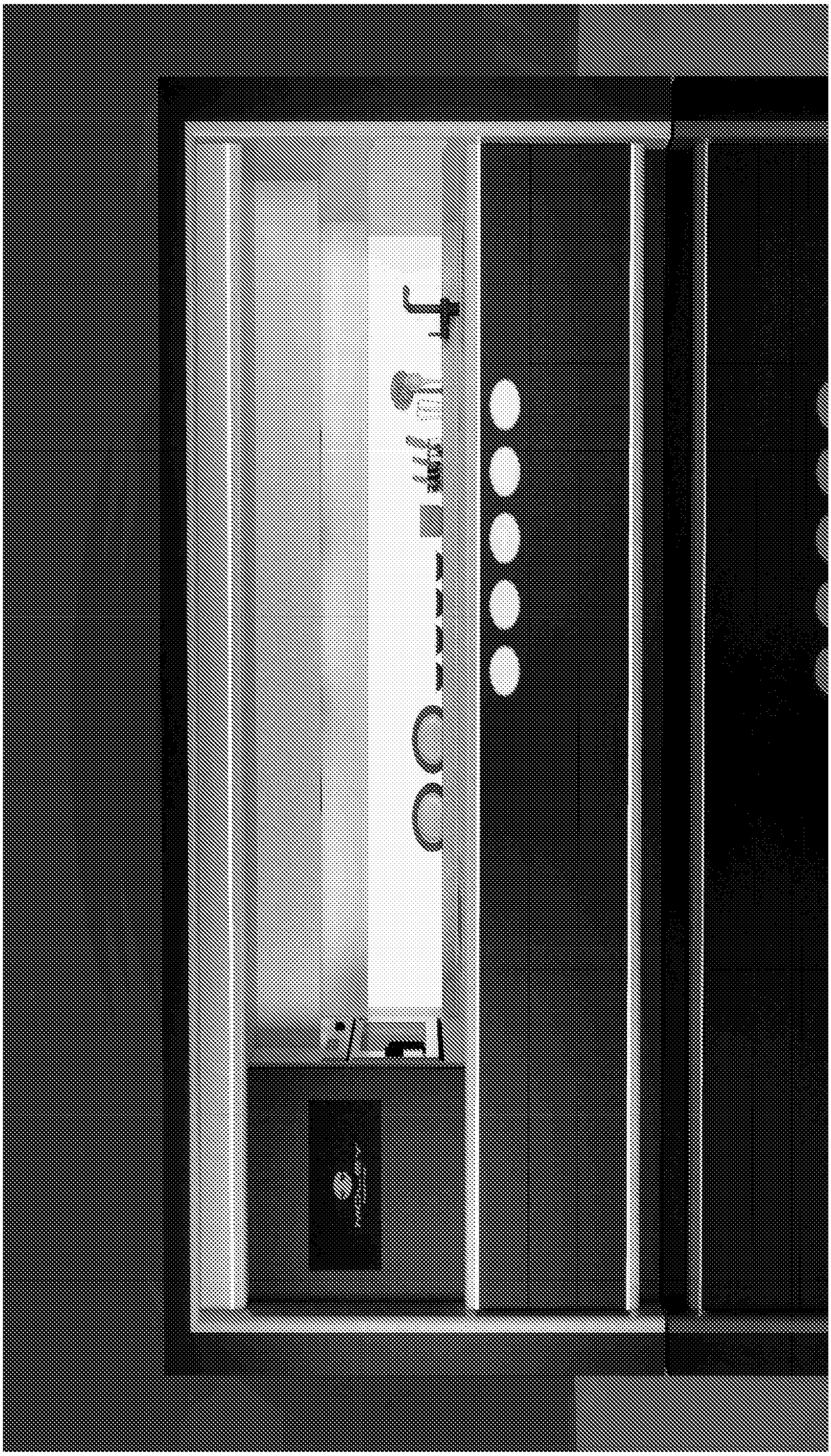

FIG. 43C

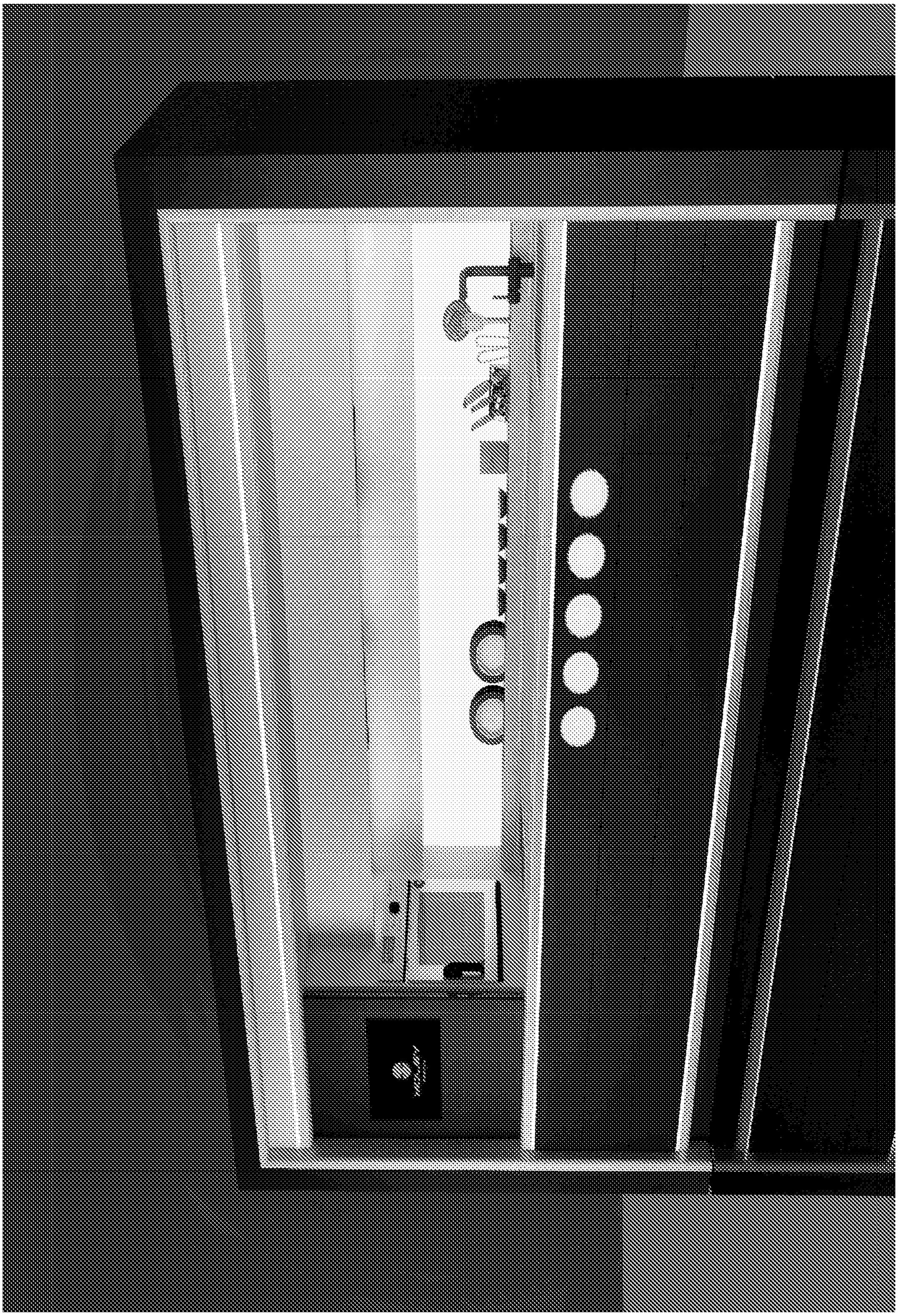

FIG. 43D

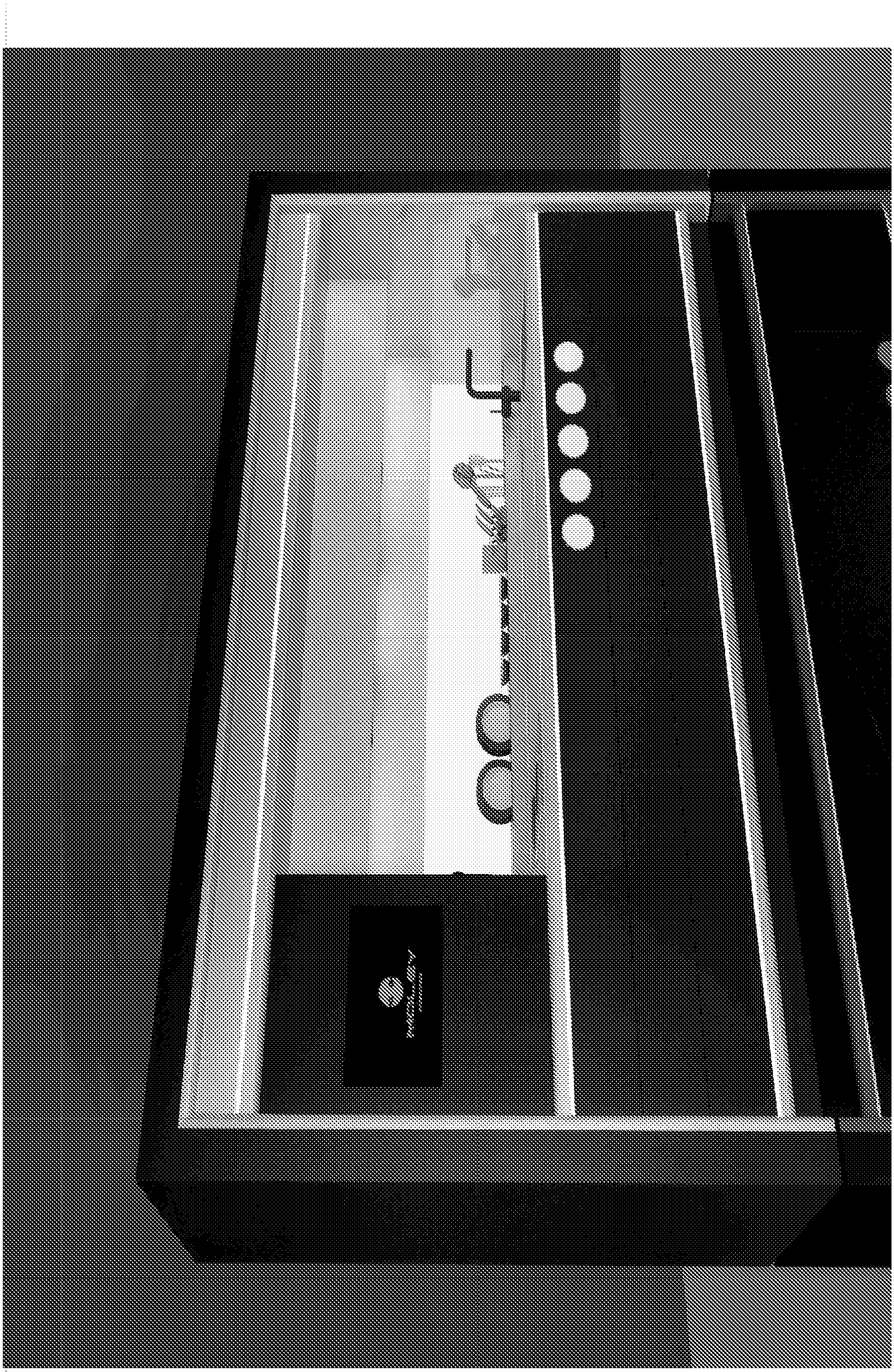

FIG. 43E

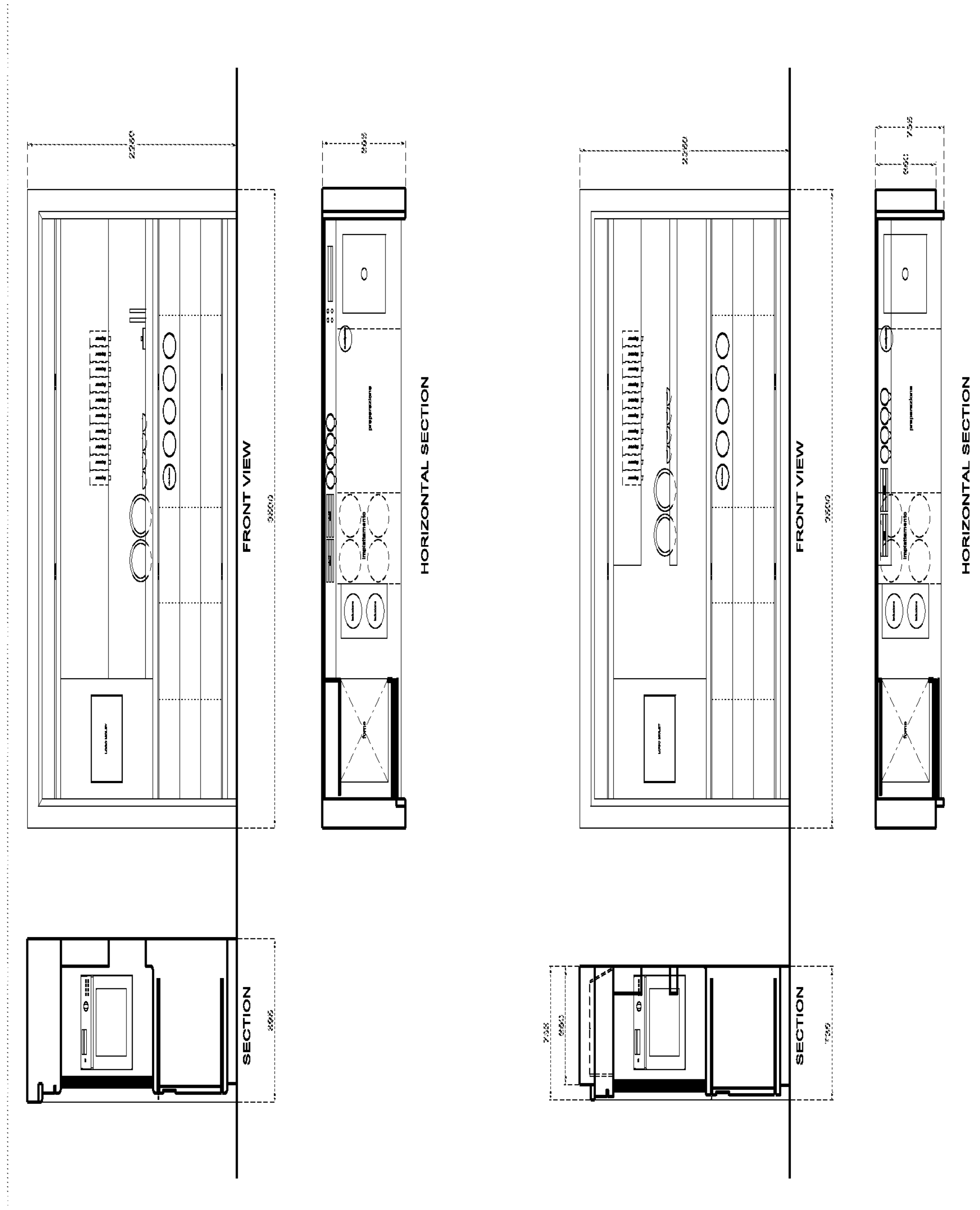
FRONT VIEW
HORIZONTAL SECTION
SECTION
FRONT VIEW
HORIZONTAL SECTION
SECTION

FIG. 43F

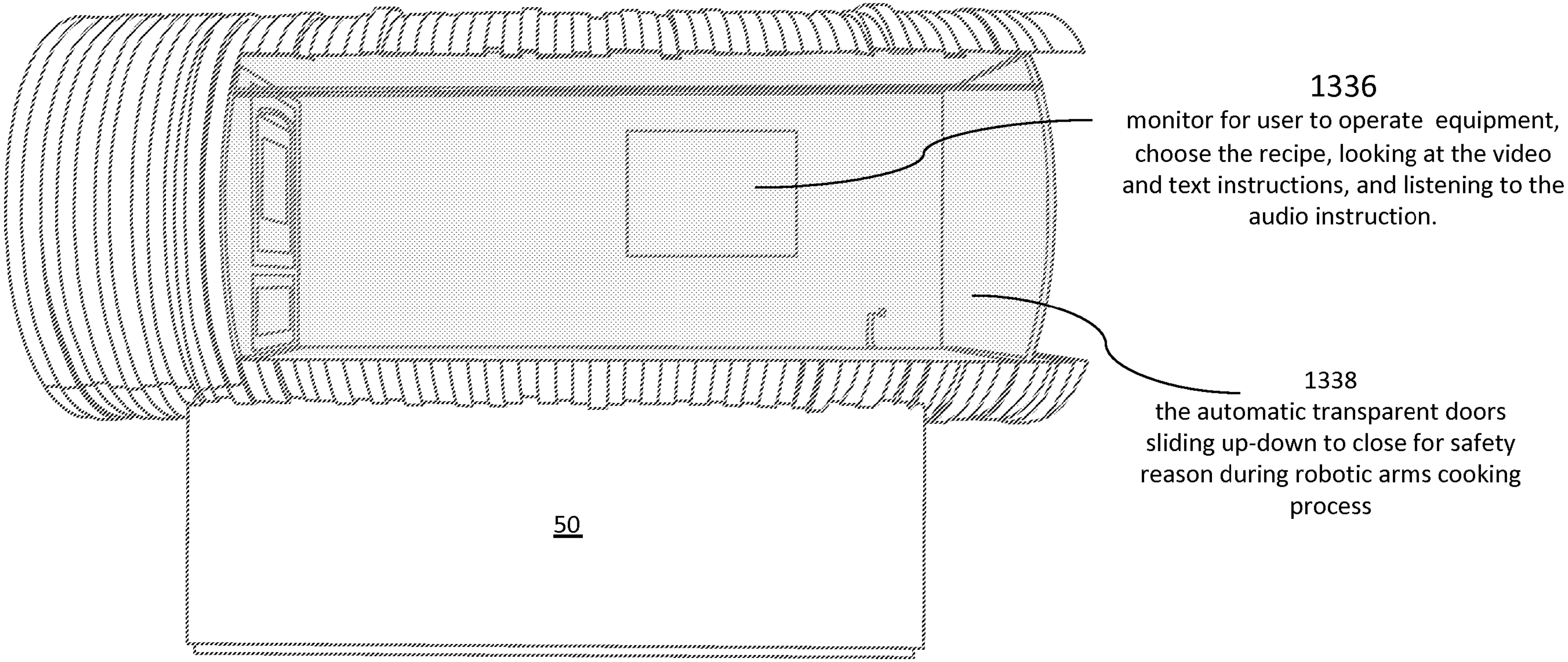
1336
monitor for user to operate equipment, choose the recipe, looking at the video and text instructions, and listening to the audio instruction.
1338
the automatic transparent doors sliding up-down to close for safety reason during robotic arms cooking process
50

FIG. 44A

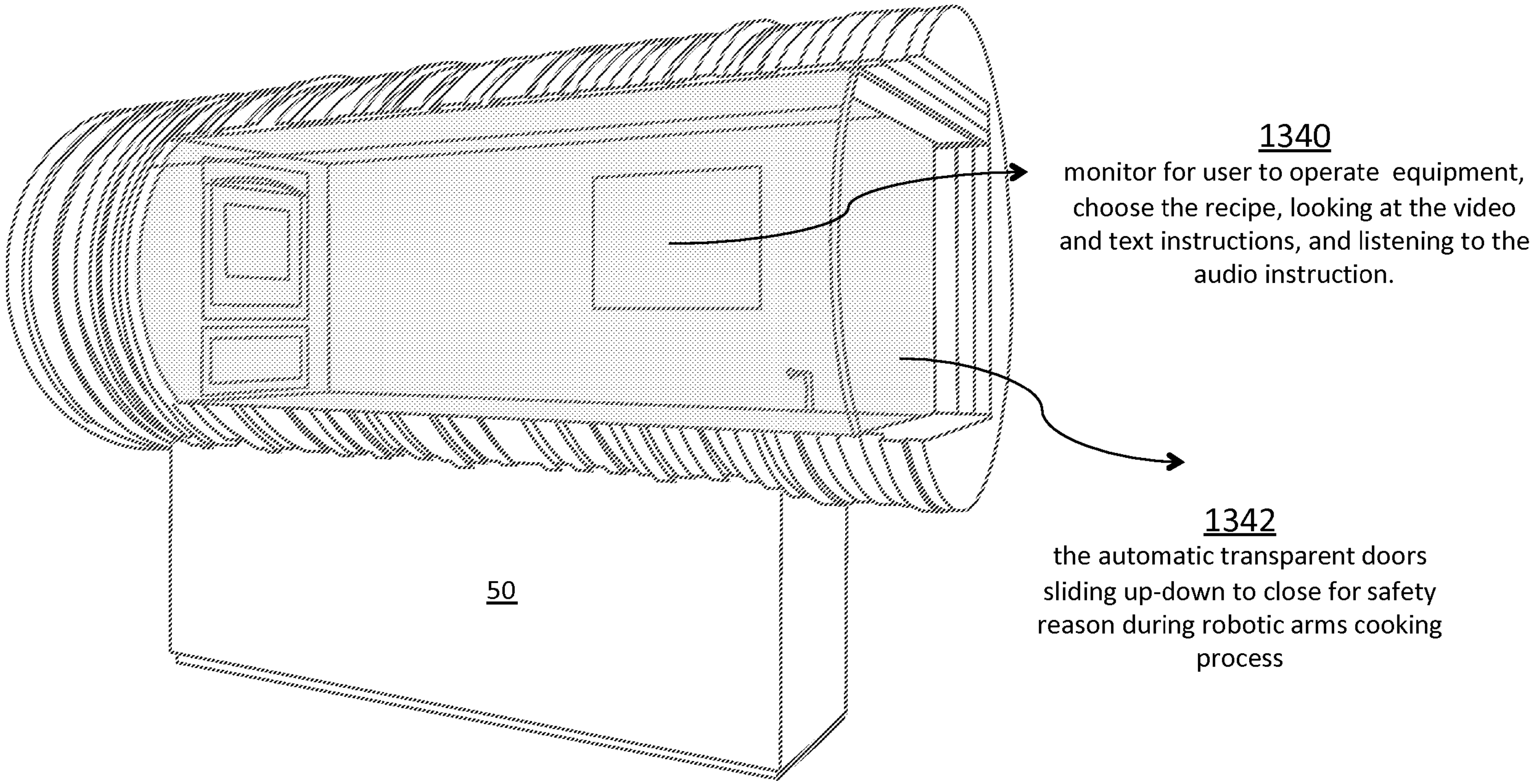
1340
monitor for user to operate equipment, choose the recipe, looking at the video and text instructions, and listening to the audio instruction.
1342
the automatic transparent doors sliding up-down to close for safety reason during robotic arms cooking process
50

FIG. 44B

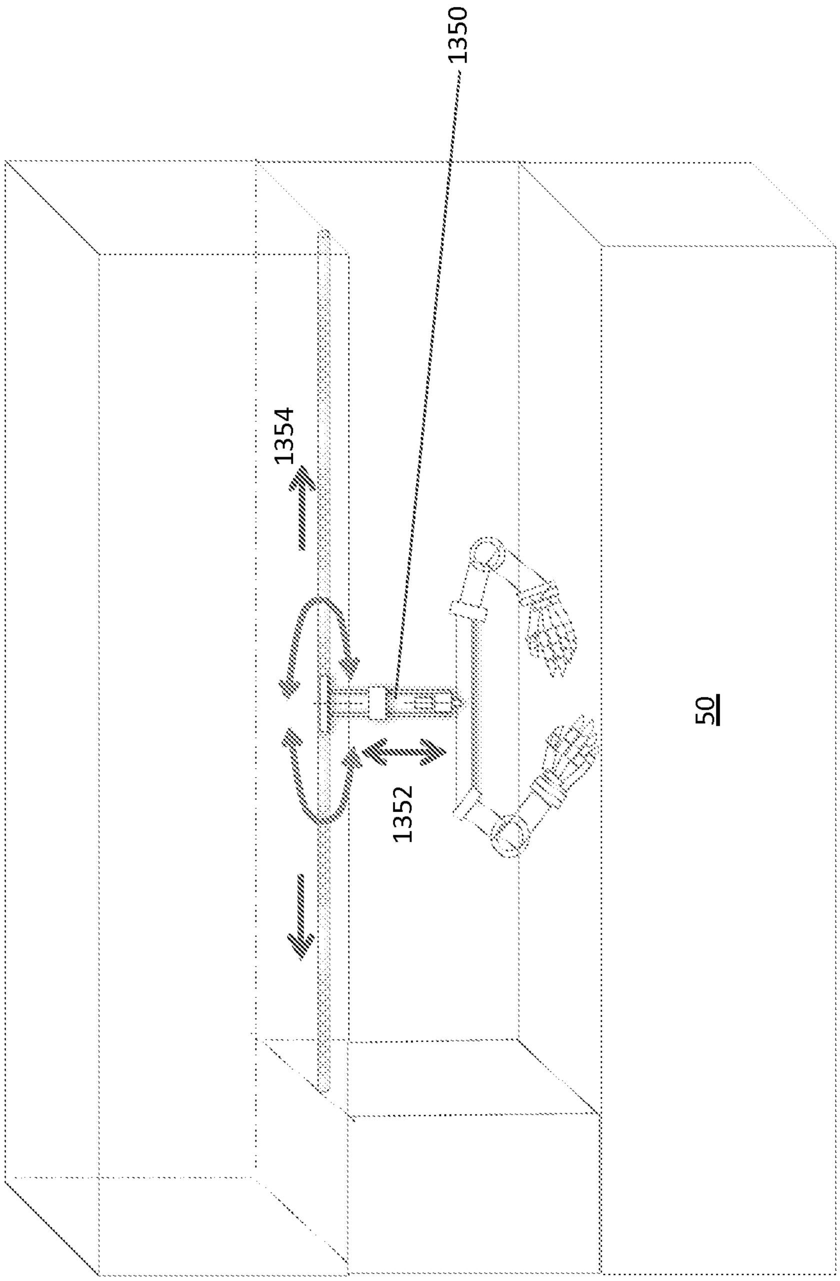


FIG. 45

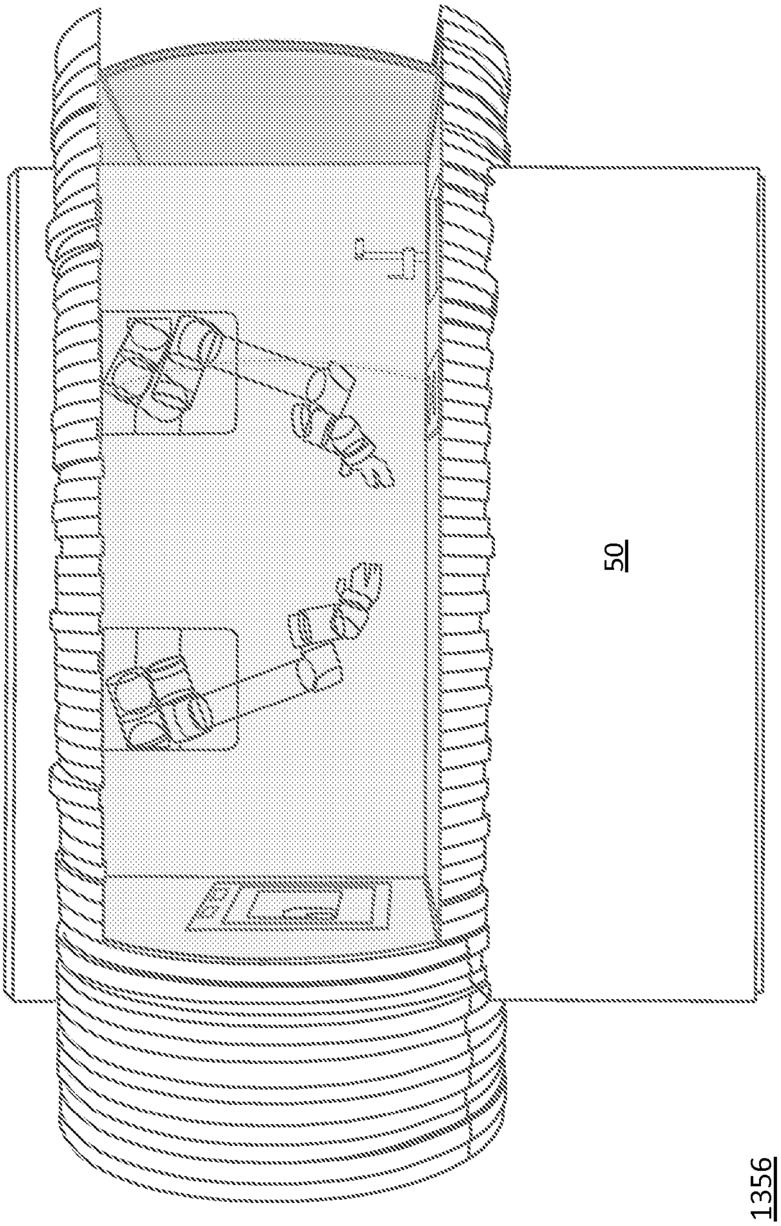


FIG. 46A

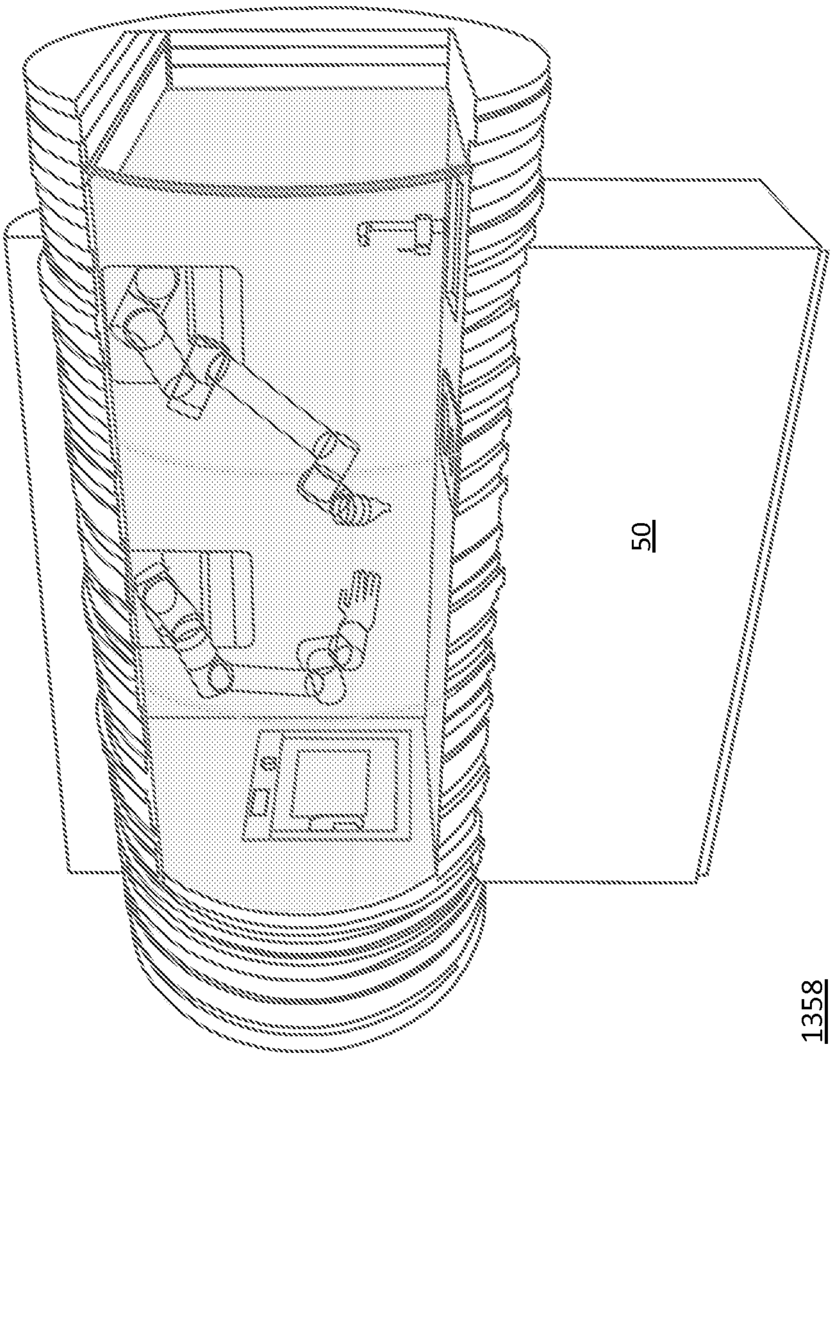


FIG. 46B

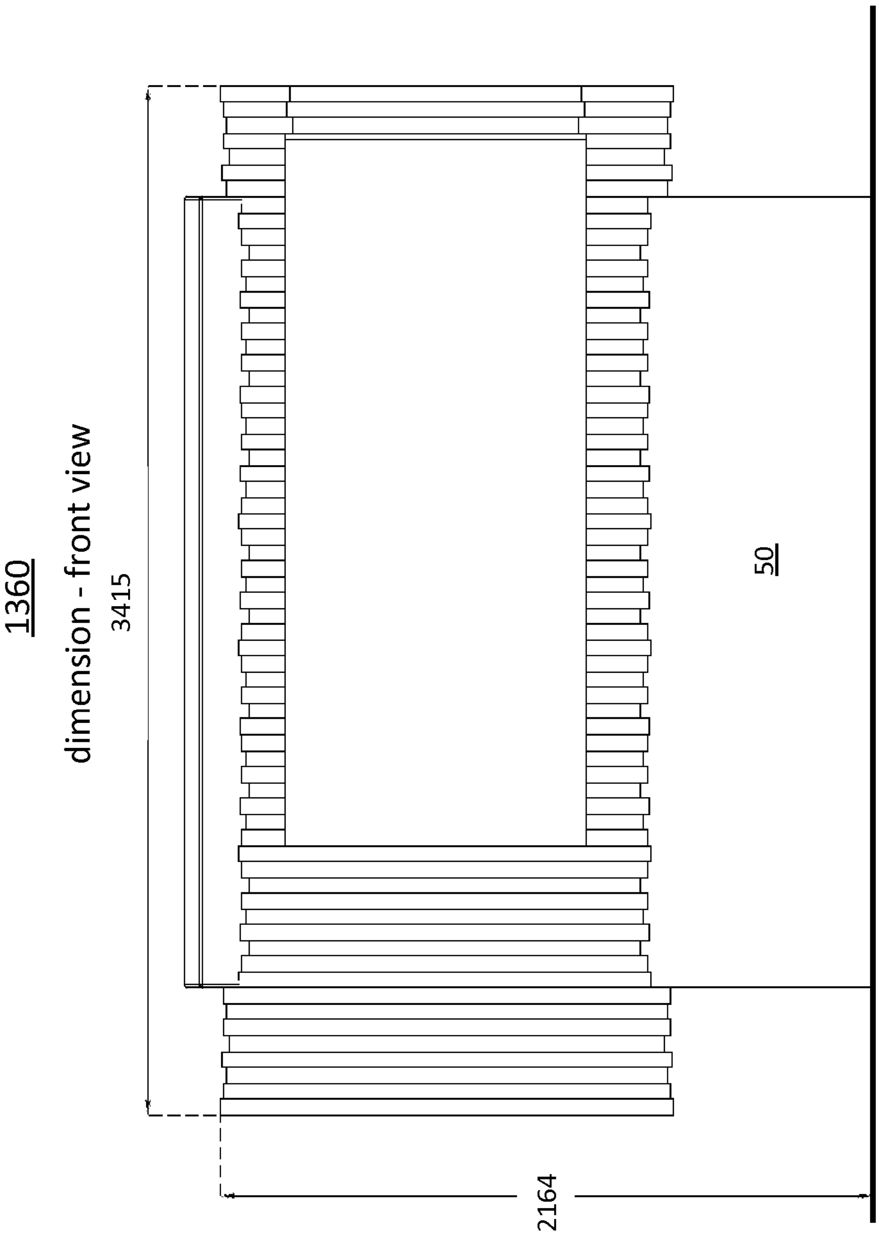


FIG. 46C

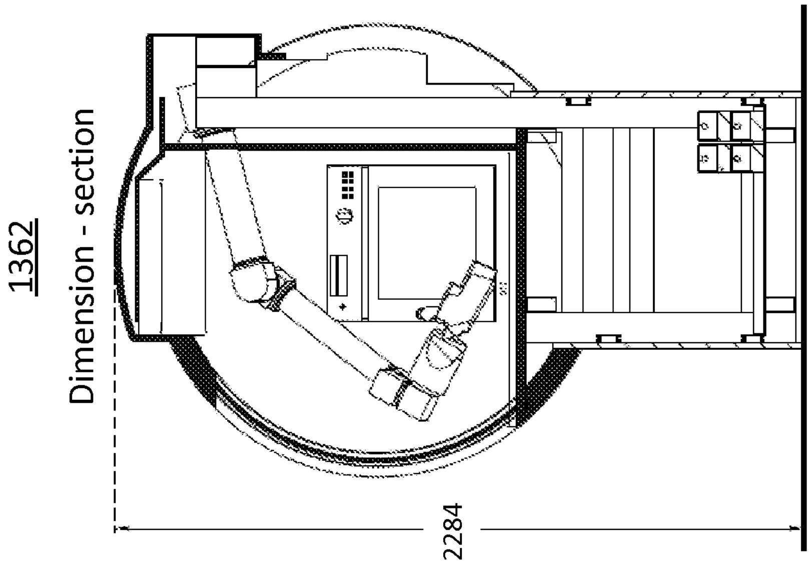


FIG. 46D

1364

Dimension - side view

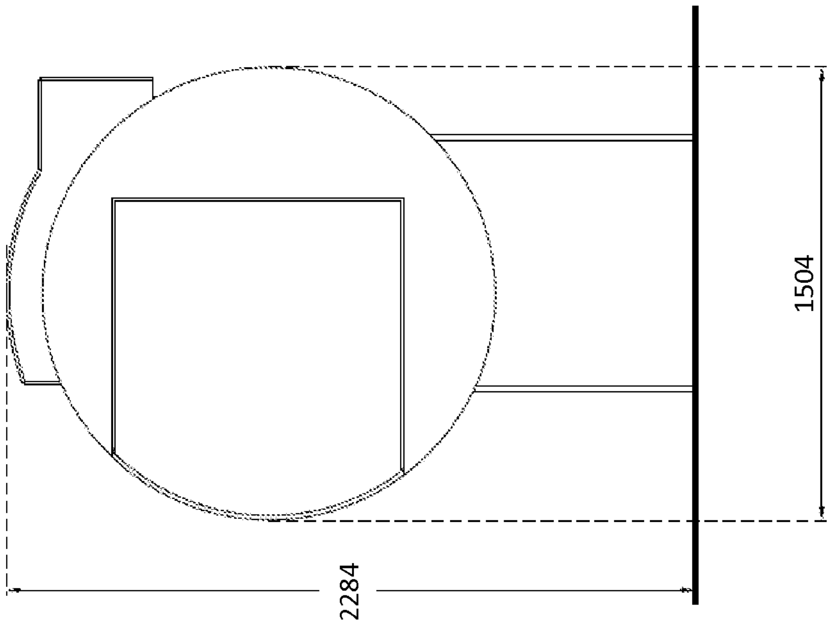


FIG. 46E

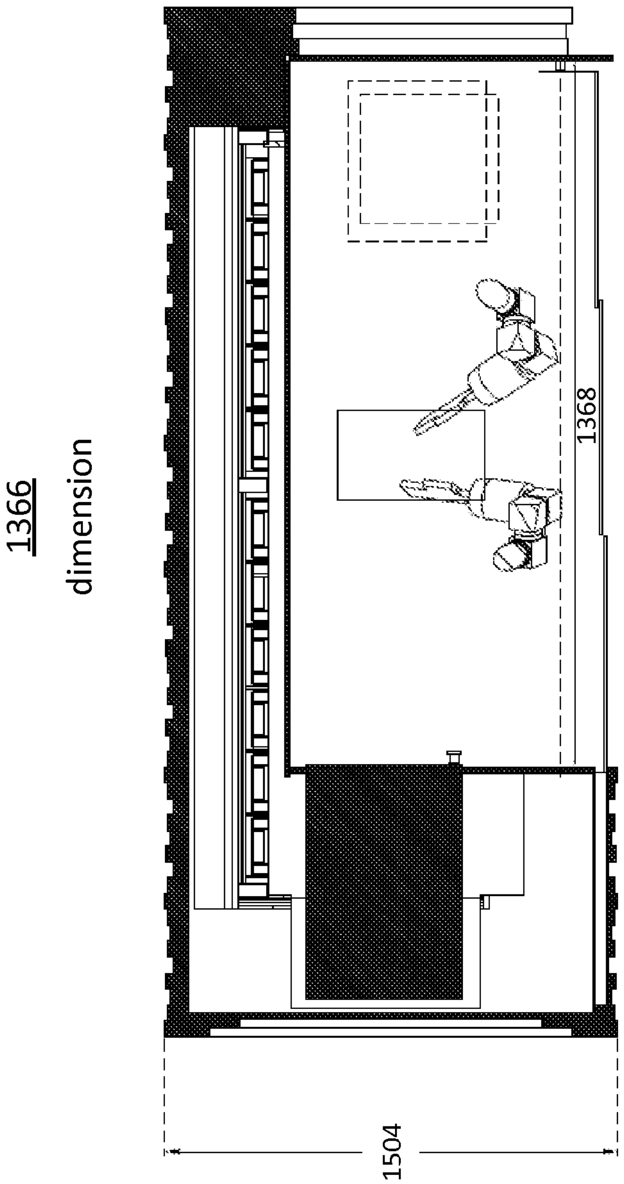


FIG. 46F

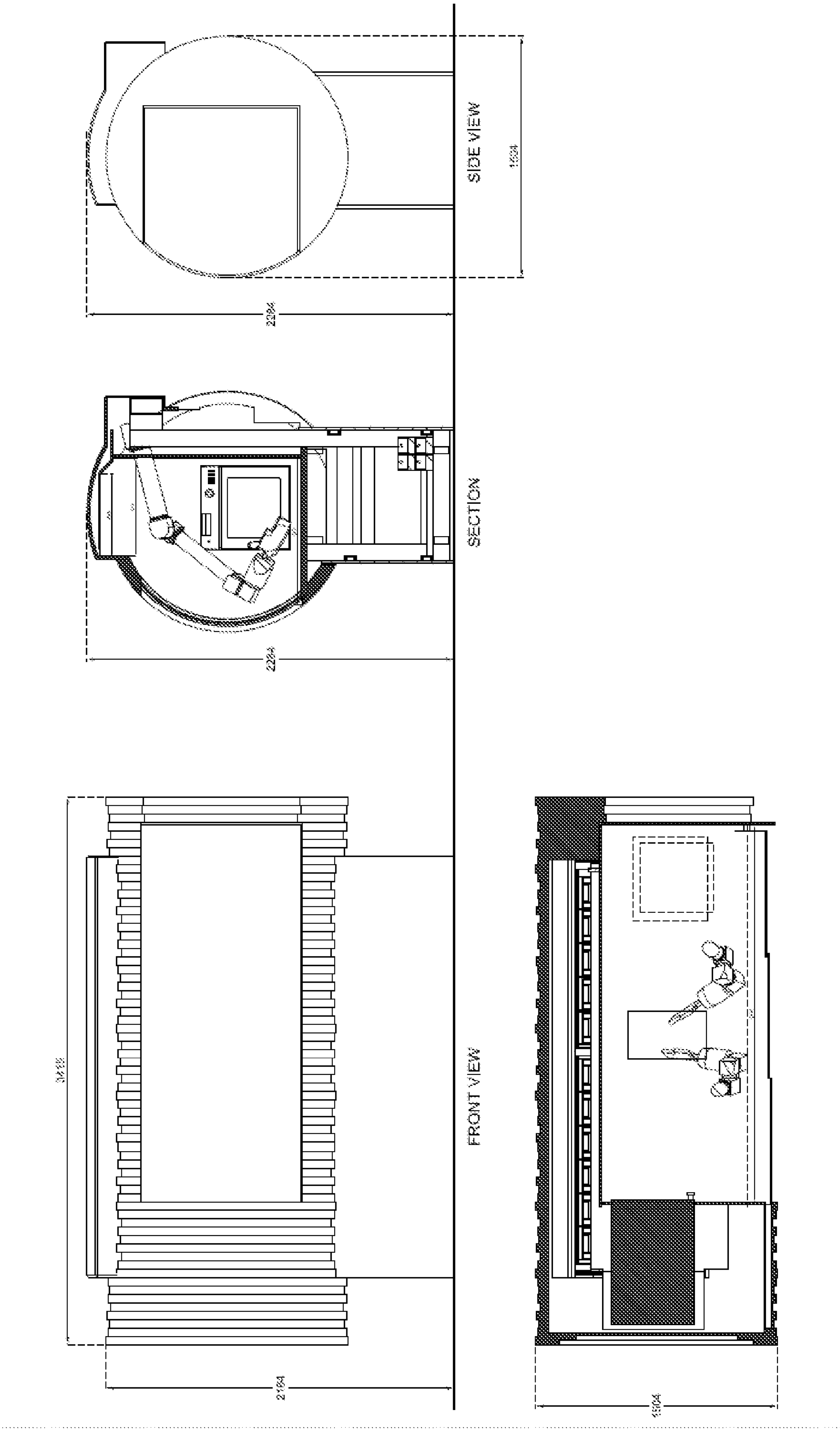


FIG. 46G

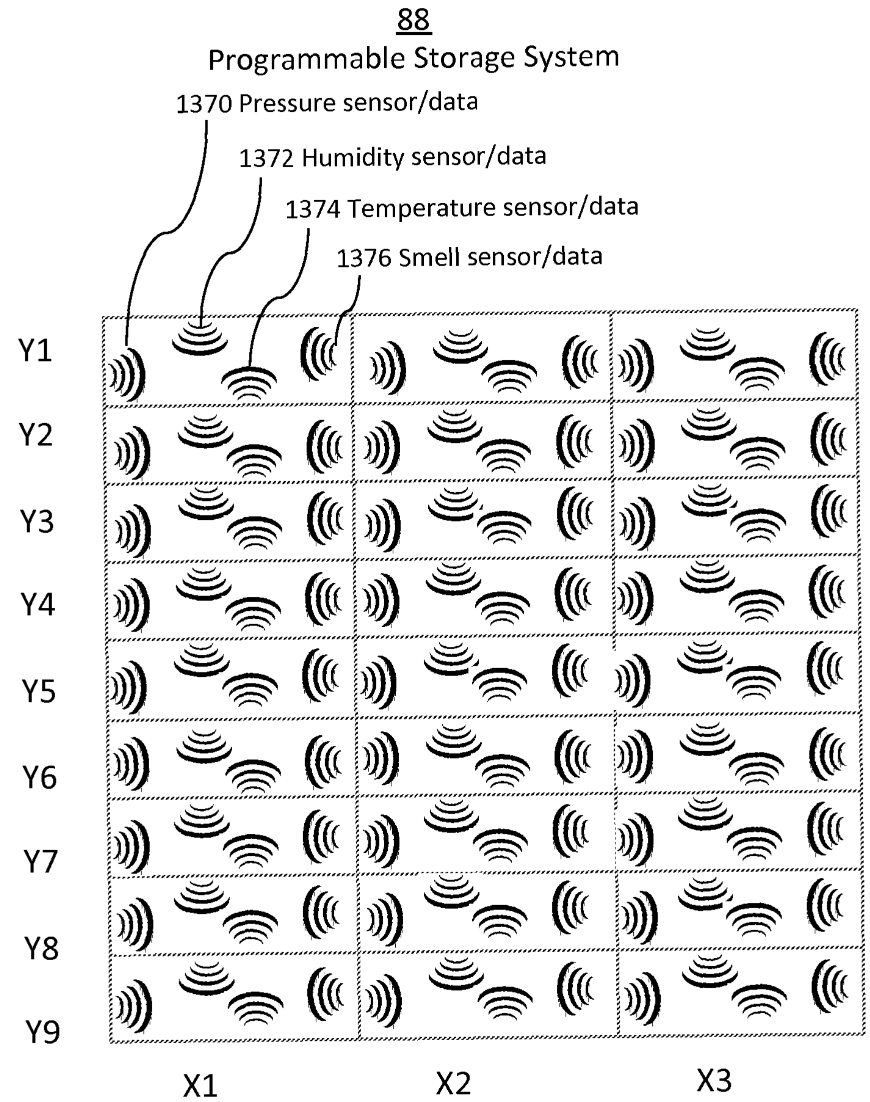
88
Programmable Storage System
1370 Pressure sensor/data
1372 Humidity sensor/data
1374 Temperature sensor/data
1376 Smell sensor/data
Y1
Y2
Y3
Y4
Y5
Y6
Y7
Y8
Y9
X1
X2
X3

FIG. 47

86
Storage Station Containers Elevation View

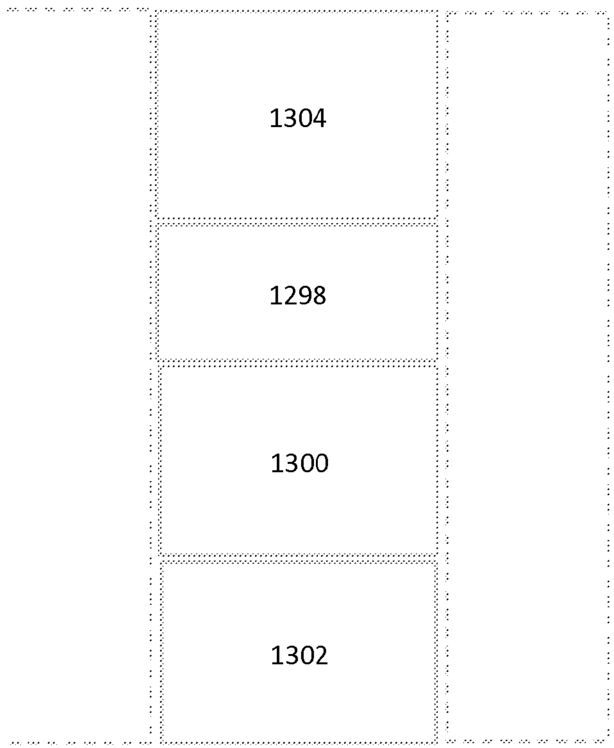


Storage (where temperature, humidity, oxygen and other room conditions can be monitored and control.

Different setting levels:

1304 pantry/ dry storage

1298 Ripening level((12~14°C) for tropical fruits and tubers vegetables such as potatoes and Wine cell level (7~18°C)

1300 Chill level(2~-4°C): for fresh produce, fruit, meat to confer optimal shelf life

1302 Frozen level(-16~-20°C): for frozen meat, bakery... and Deep Freeze level (-28~-30°C): ex. For seafood and ice cream

FIG. 48

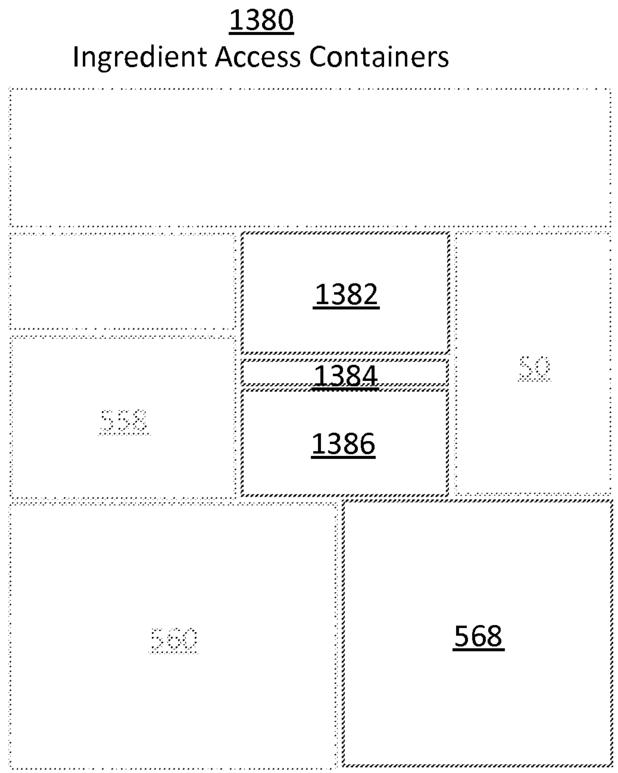


1382 Ingredient Quality Monitoring Dashboard

1384 Scanning, detector, camera, scale..

1386 countertop with auto-shelf and rack for check-In Drop off and check-out

1388 Recycling Access

FIG. 49

1390
Ingredient Quality Monitoring Dashboard

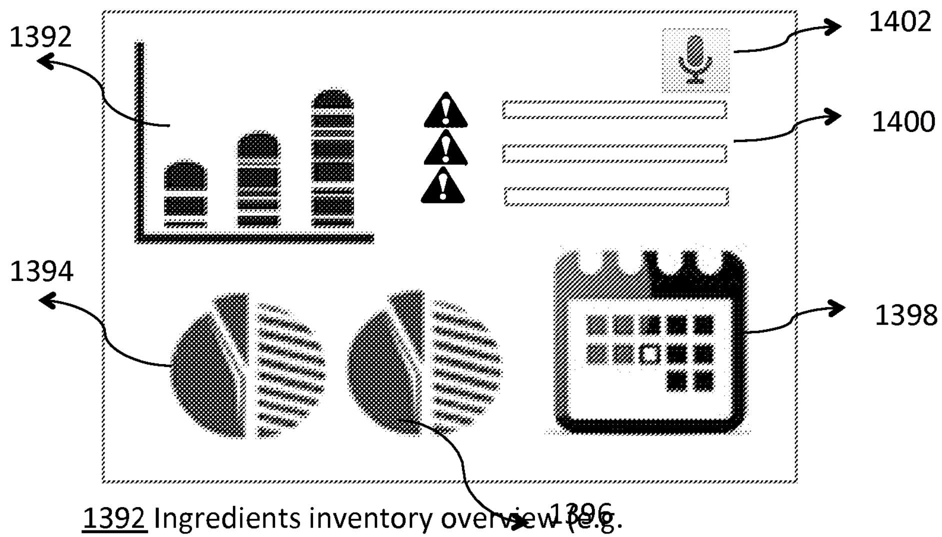


1392 Ingredients inventory overview (e.g.
(Dairy, Eggs ,Fruits, Legume–Meat , Seasonings, Sweeteners, Vegetables & mushrooms…)

1394 Ingredient nutrition distribution

1396 Storage Utilization and allocation

1398 Expiration, fulfillment schedule

1400 Alerts: decays, abnormal temperature, capacity overloading

1402 voice command for query or ingredient check-in/check-out

FIG. 50

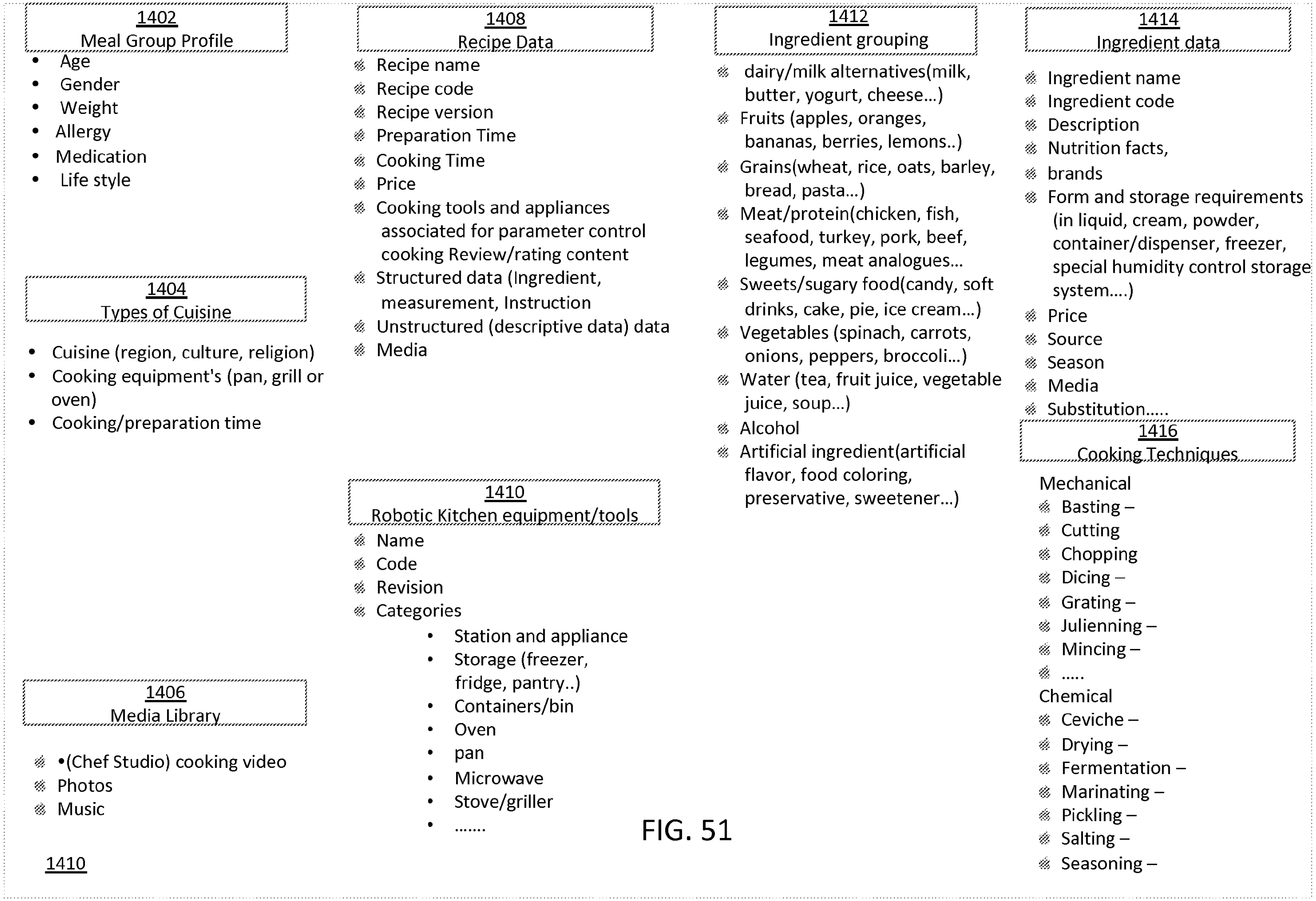
1402
Meal Group Profile
Age
Gender
Weight
Allergy
Medication
Life style
1404
Types of Cuisine
Cuisine (region, culture, religion)
Cooking equipment's (pan, grill or oven)
Cooking/preparation time
1406
Media Library
•(Chef Studio) cooking video
Photos
Music
1410
1408
Recipe Data
Recipe name
Recipe code
Recipe version
Preparation Time
Cooking Time
Price
Cooking tools and appliances associated for parameter control cooking Review/rating content
Structured data (Ingredient, measurement, Instruction
Unstructured (descriptive data) data
Media
1410
Robotic Kitchen equipment/tools
Name
Code
Revision
Categories
Station and appliance
Storage (freezer, fridge, pantry..)
Containers/bin
Oven
pan
Microwave
Stove/griller
.......
1412
Ingredient grouping
dairy/milk alternatives(milk, butter, yogurt, cheese...)
Fruits (apples, oranges, bananas, berries, lemons..)
Grains(wheat, rice, oats, barley, bread, pasta...)
Meat/protein(chicken, fish, seafood, turkey, pork, beef, legumes, meat analogues...
Sweets/sugary food(candy, soft drinks, cake, pie, ice cream...)
Vegetables (spinach, carrots, onions, peppers, broccoli...)
Water (tea, fruit juice, vegetable juice, soup...)
Alcohol
Artificial ingredient(artificial flavor, food coloring, preservative, sweetener...)
1414
Ingredient data
Ingredient name
Ingredient code
Description
Nutrition facts,
brands
Form and storage requirements (in liquid, cream, powder, container/dispenser, freezer, special humidity control storage system....)
Price
Source
Season
Media
Substitution.....
1416
Cooking Techniques
Mechanical
Basting –
Cutting
Chopping
Dicing –
Grating –
Julienning –
Mincing –
.....
Chemical
Ceviche –
Drying –
Fermentation –
Marinating –
Pickling –
Salting –
Seasoning –

FIG. 51

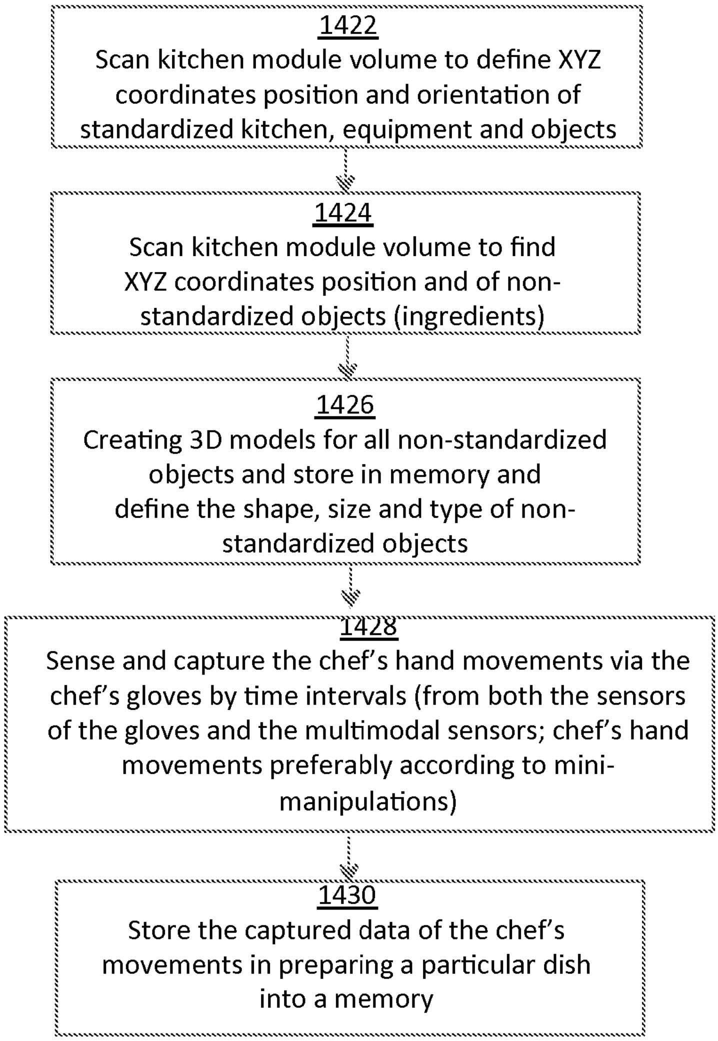
1422
Scan kitchen module volume to define XYZ coordinates position and orientation of standardized kitchen, equipment and objects
1424
Scan kitchen module volume to find XYZ coordinates position and of non-standardized objects (ingredients)
1426
Creating 3D models for all non-standardized objects and store in memory and define the shape, size and type of non-standardized objects
1428
Sense and capture the chef's hand movements via the chef's gloves by time intervals (from both the sensors of the gloves and the multimodal sensors; chef's hand movements preferably according to mini-manipulations)
1430
Store the captured data of the chef's movements in preparing a particular dish into a memory

1420

FIG. 52

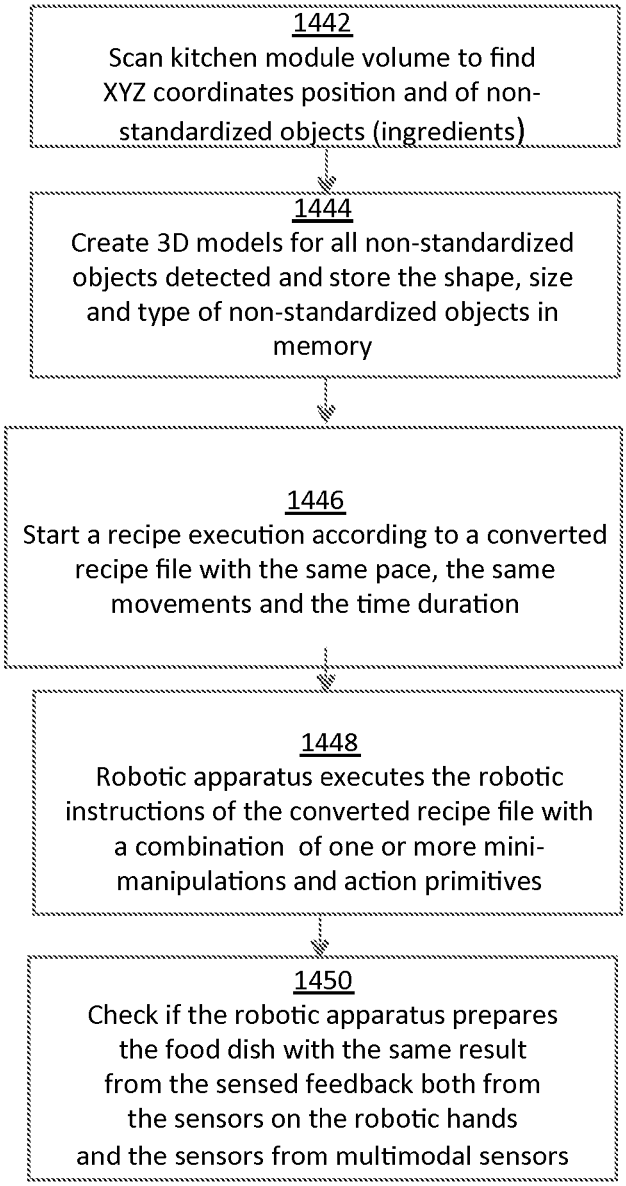
1442
Scan kitchen module volume to find XYZ coordinates position and of non-standardized objects (ingredients)
1444
Create 3D models for all non-standardized objects detected and store the shape, size and type of non-standardized objects in memory
1446
Start a recipe execution according to a converted recipe file with the same pace, the same movements and the time duration
1448
Robotic apparatus executes the robotic instructions of the converted recipe file with a combination of one or more mini-manipulations and action primitives
1450
Check if the robotic apparatus prepares the food dish with the same result from the sensed feedback both from the sensors on the robotic hands and the sensors from multimodal sensors

1440

FIG. 53

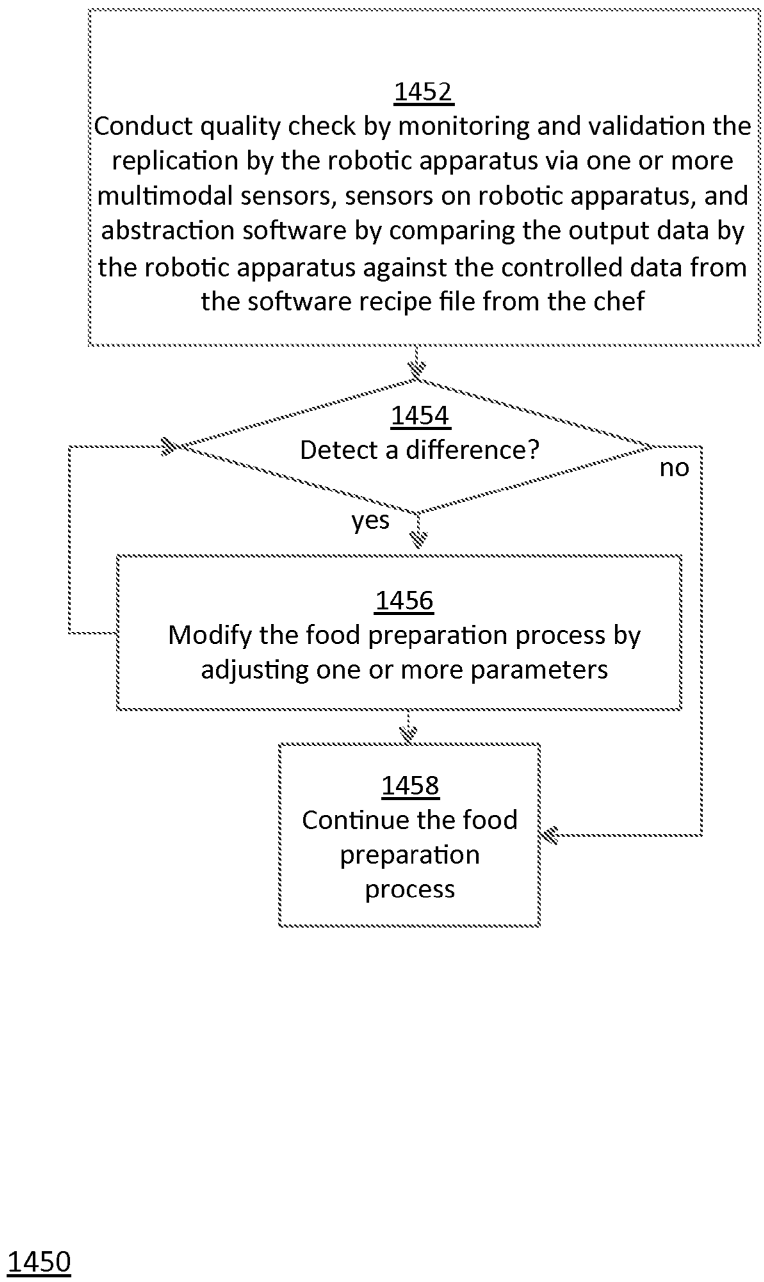
1452
Conduct quality check by monitoring and validation the replication by the robotic apparatus via one or more multimodal sensors, sensors on robotic apparatus, and abstraction software by comparing the output data by the robotic apparatus against the controlled data from the software recipe file from the chef
1454
Detect a difference?
no
yes
1456
Modify the food preparation process by adjusting one or more parameters
1458
Continue the food preparation process
1450

FIG. 54

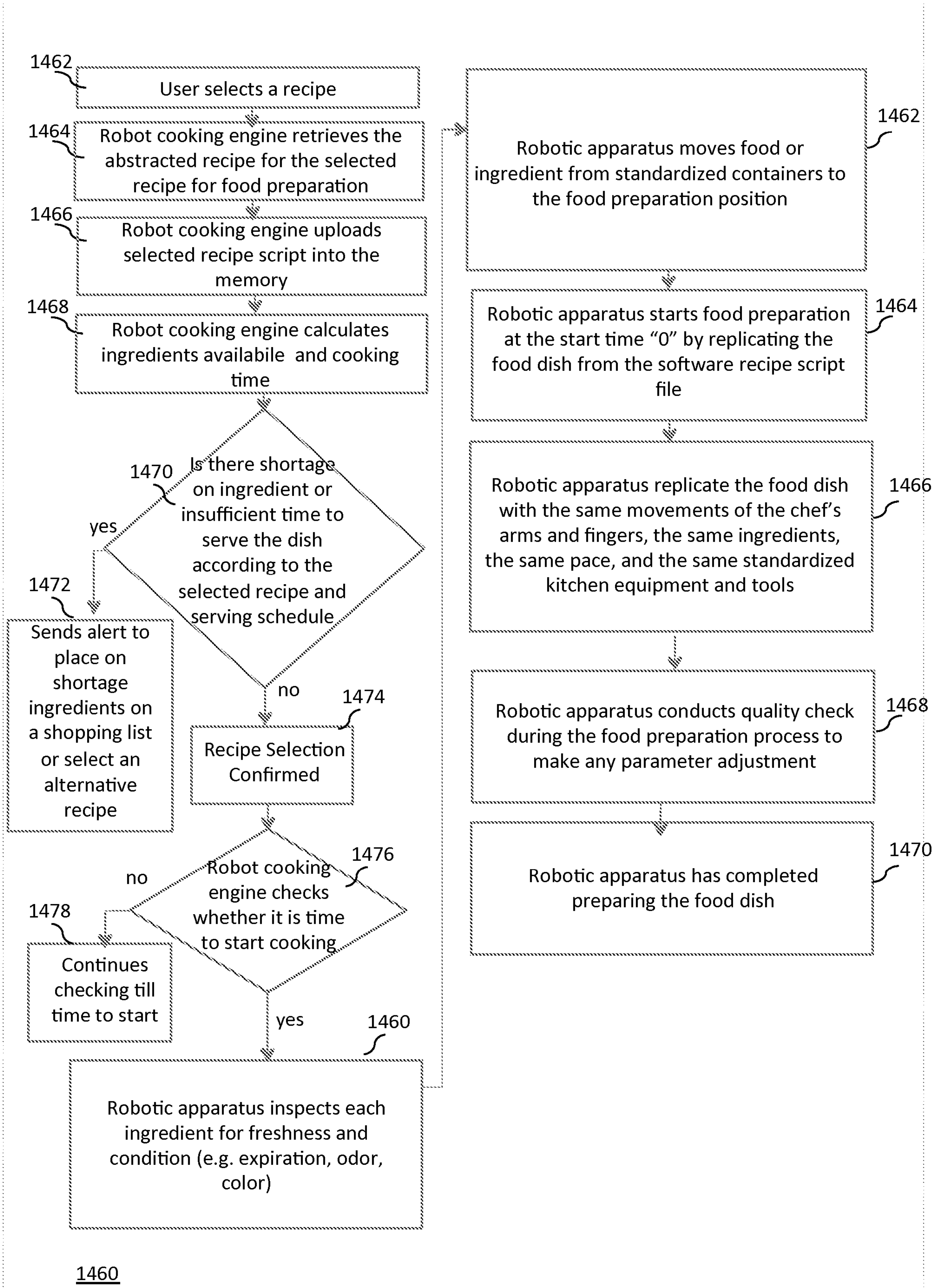
1462
User selects a recipe
1464
Robot cooking engine retrieves the abstracted recipe for the selected recipe for food preparation
1466
Robot cooking engine uploads selected recipe script into the memory
1468
Robot cooking engine calculates ingredients availabile and cooking time
1470
Is there shortage on ingredient or insufficient time to serve the dish according to the selected recipe and serving schedule
yes
1472
Sends alert to place on shortage ingredients on a shopping list or select an alternative recipe
no
1474
Recipe Selection Confirmed
1476
Robot cooking engine checks whether it is time to start cooking
no
1478
Continues checking till time to start
yes
1460
Robotic apparatus inspects each ingredient for freshness and condition (e.g. expiration, odor, color)
1462
Robotic apparatus moves food or ingredient from standardized containers to the food preparation position
1464
Robotic apparatus starts food preparation at the start time "0" by replicating the food dish from the software recipe script file
1466
Robotic apparatus replicate the food dish with the same movements of the chef's arms and fingers, the same ingredients, the same pace, and the same standardized kitchen equipment and tools
1468
Robotic apparatus conducts quality check during the food preparation process to make any parameter adjustment
1470
Robotic apparatus has completed preparing the food dish
1460

FIG. 55

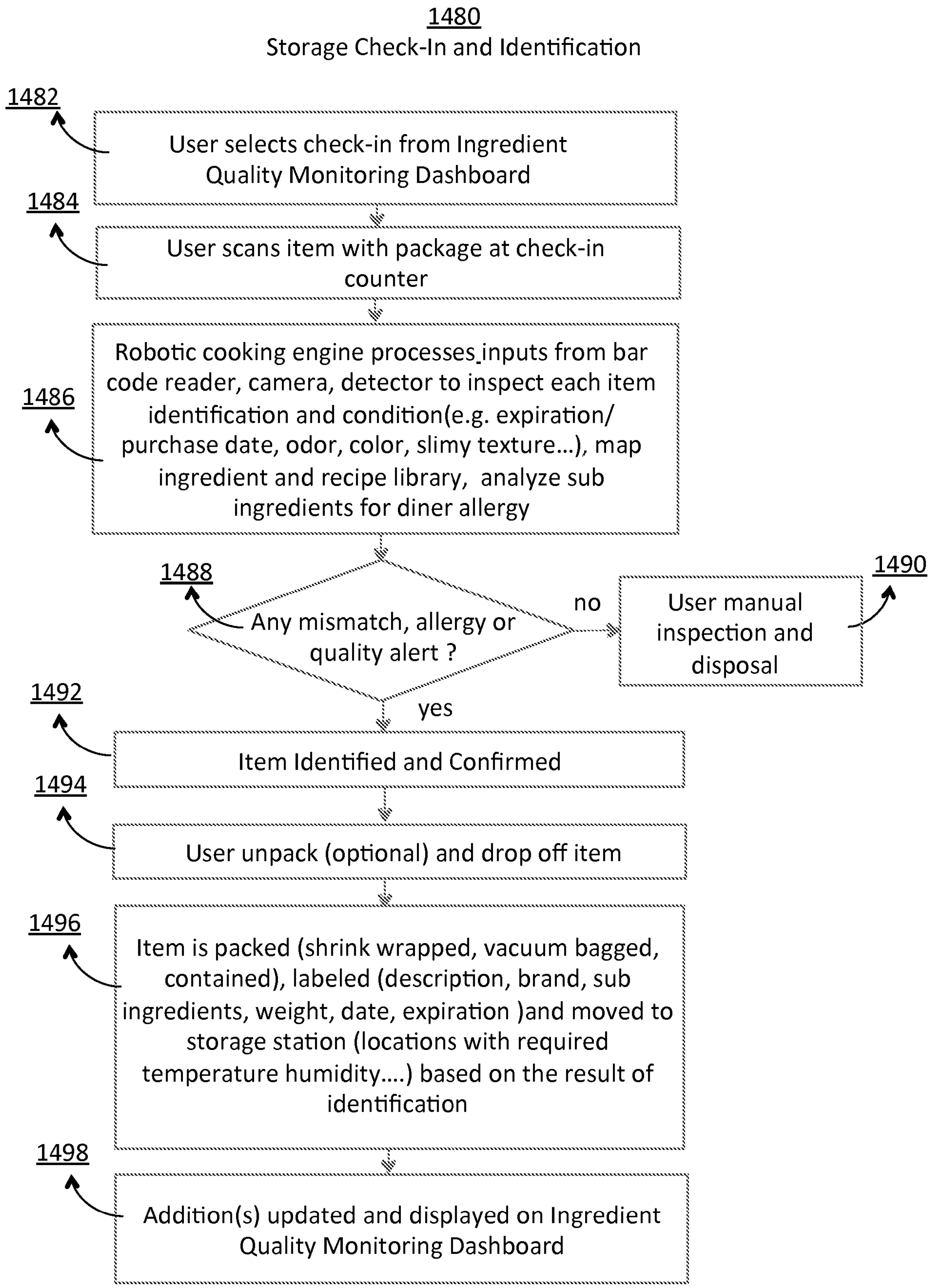


FIG. 56
Storage Check-In and Identification Process

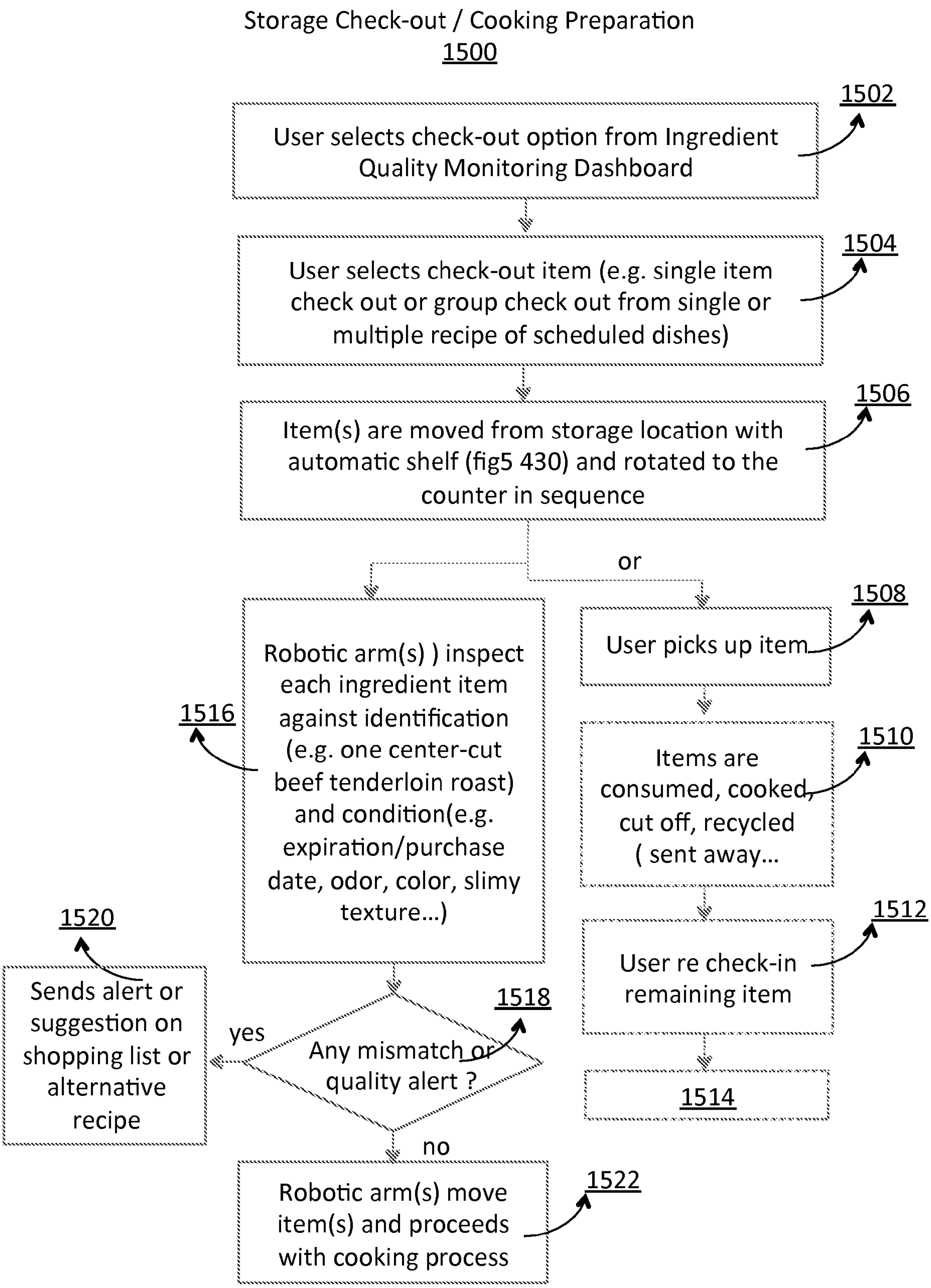


FIG. 57
Storage Check-out / Cooking Preparation Process

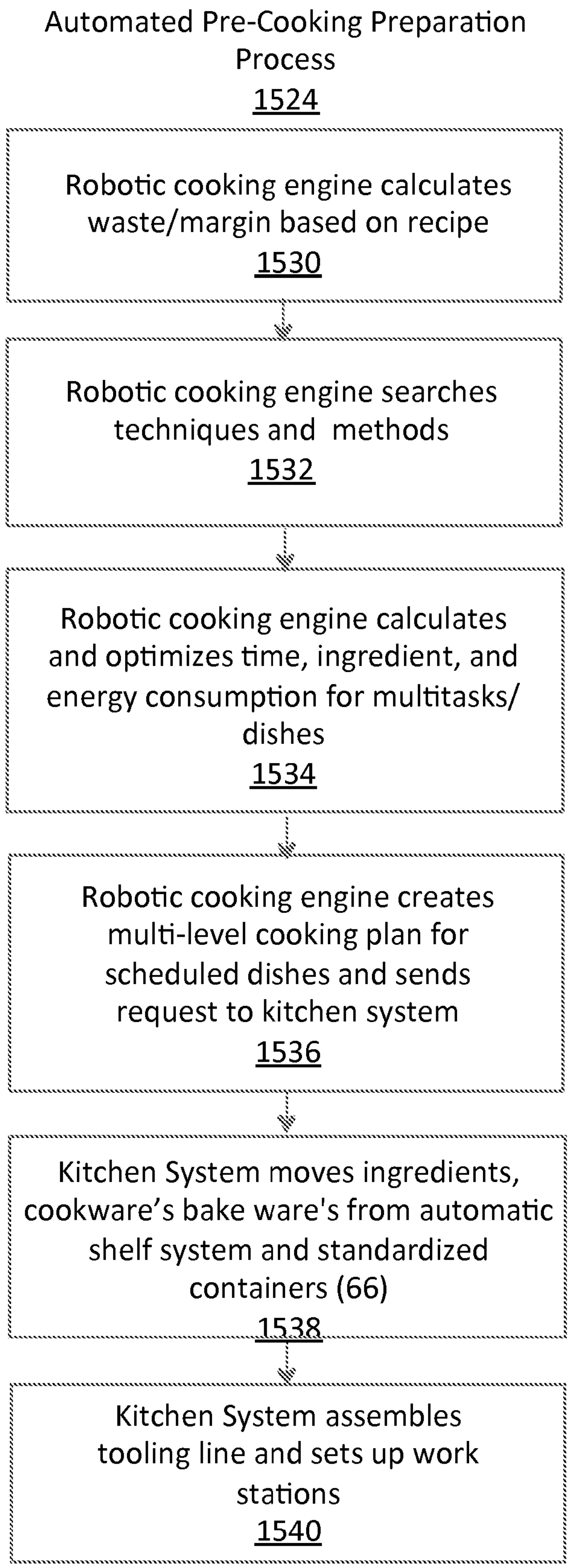
Automated Pre-Cooking Preparation Process
1524
Robotic cooking engine calculates waste/margin based on recipe
1530
Robotic cooking engine searches techniques and methods
1532
Robotic cooking engine calculates and optimizes time, ingredient, and energy consumption for multitasks/ dishes
1534
Robotic cooking engine creates multi-level cooking plan for scheduled dishes and sends request to kitchen system
1536
Kitchen System moves ingredients, cookware's bake ware's from automatic shelf system and standardized containers (66)
1538
Kitchen System assembles tooling line and sets up work stations
1540

FIG. 58

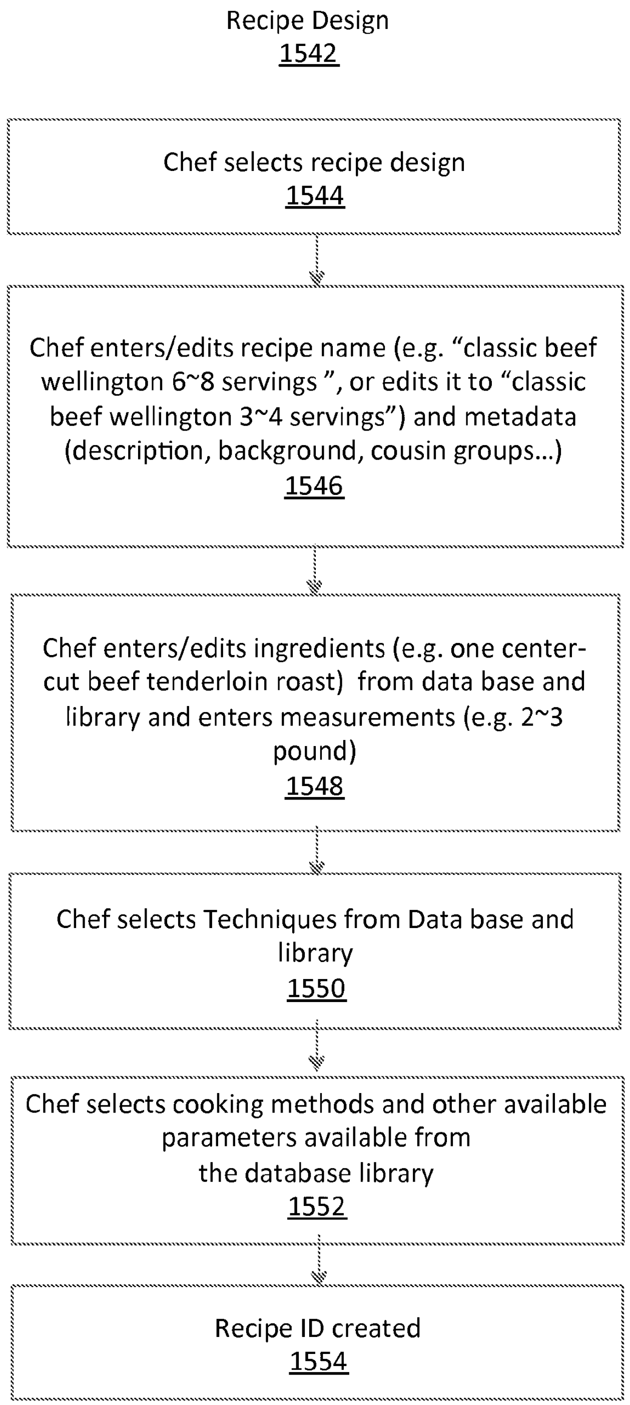


FIG. 59
Recipe Design and Scripting Process

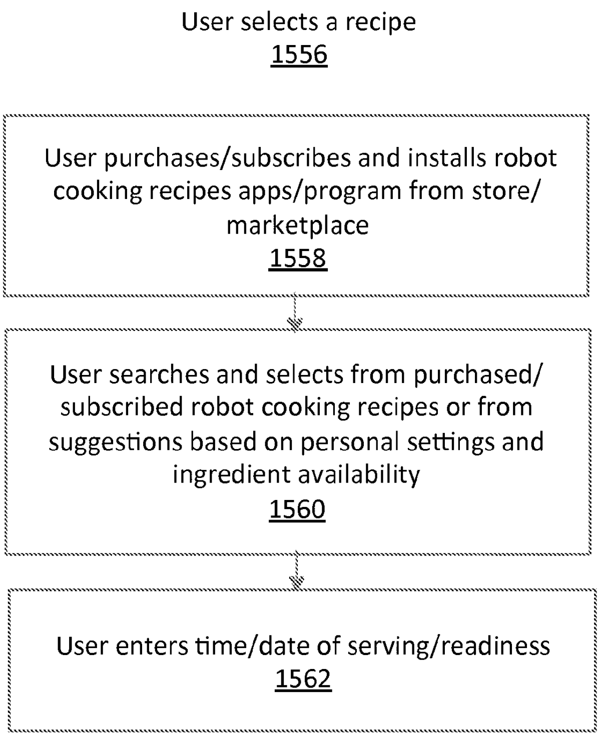


FIG. 60
User selects a recipe

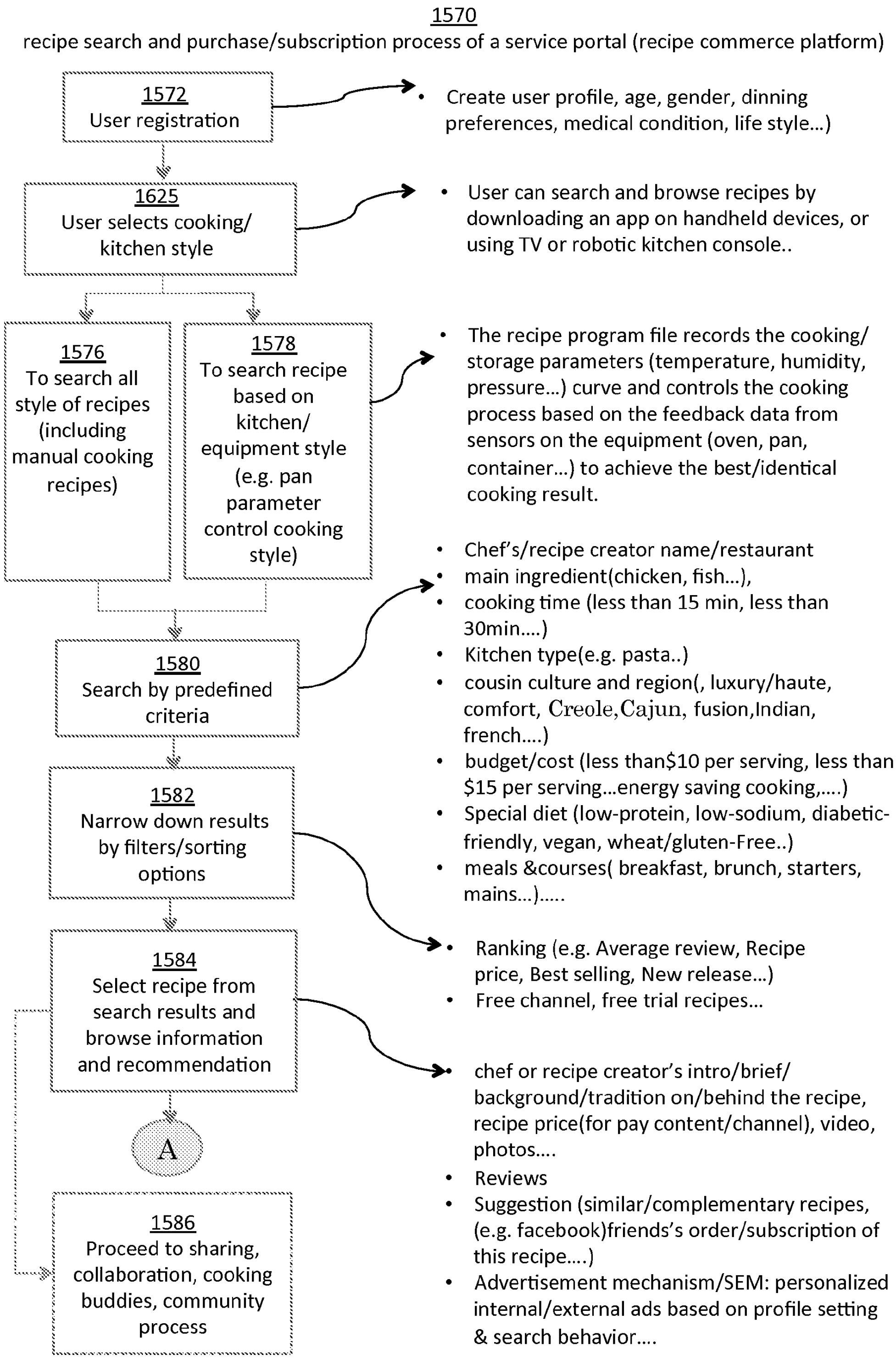
1570
recipe search and purchase/subscription process of a service portal (recipe commerce platform)
1572
User registration
• Create user profile, age, gender, dinning preferences, medical condition, life style...)
1625
User selects cooking/ kitchen style
• User can search and browse recipes by downloading an app on handheld devices, or using TV or robotic kitchen console..
1576
To search all style of recipes (including manual cooking recipes)
1578
To search recipe based on kitchen/ equipment style (e.g. pan parameter control cooking style)
• The recipe program file records the cooking/ storage parameters (temperature, humidity, pressure...) curve and controls the cooking process based on the feedback data from sensors on the equipment (oven, pan, container...) to achieve the best/identical cooking result.
1580
Search by predefined criteria
• Chef's/recipe creator name/restaurant
• main ingredient(chicken, fish...),
• cooking time (less than 15 min, less than 30min....)
• Kitchen type(e.g. pasta..)
• cousin culture and region(, luxury/haute, comfort, Creole,Cajun, fusion,Indian, french....)
• budget/cost (less than$10 per serving, less than $15 per serving...energy saving cooking,....)
• Special diet (low-protein, low-sodium, diabetic-friendly, vegan, wheat/gluten-Free..)
• meals &courses( breakfast, brunch, starters, mains...).....
1582
Narrow down results by filters/sorting options
• Ranking (e.g. Average review, Recipe price, Best selling, New release...)
• Free channel, free trial recipes...
1584
Select recipe from search results and browse information and recommendation
• chef or recipe creator's intro/brief/ background/tradition on/behind the recipe, recipe price(for pay content/channel), video, photos....
• Reviews
• Suggestion (similar/complementary recipes, (e.g. facebook)friends's order/subscription of this recipe....)
• Advertisement mechanism/SEM: personalized internal/external ads based on profile setting & search behavior....
A
1586
Proceed to sharing, collaboration, cooking buddies, community process

FIG. 61A

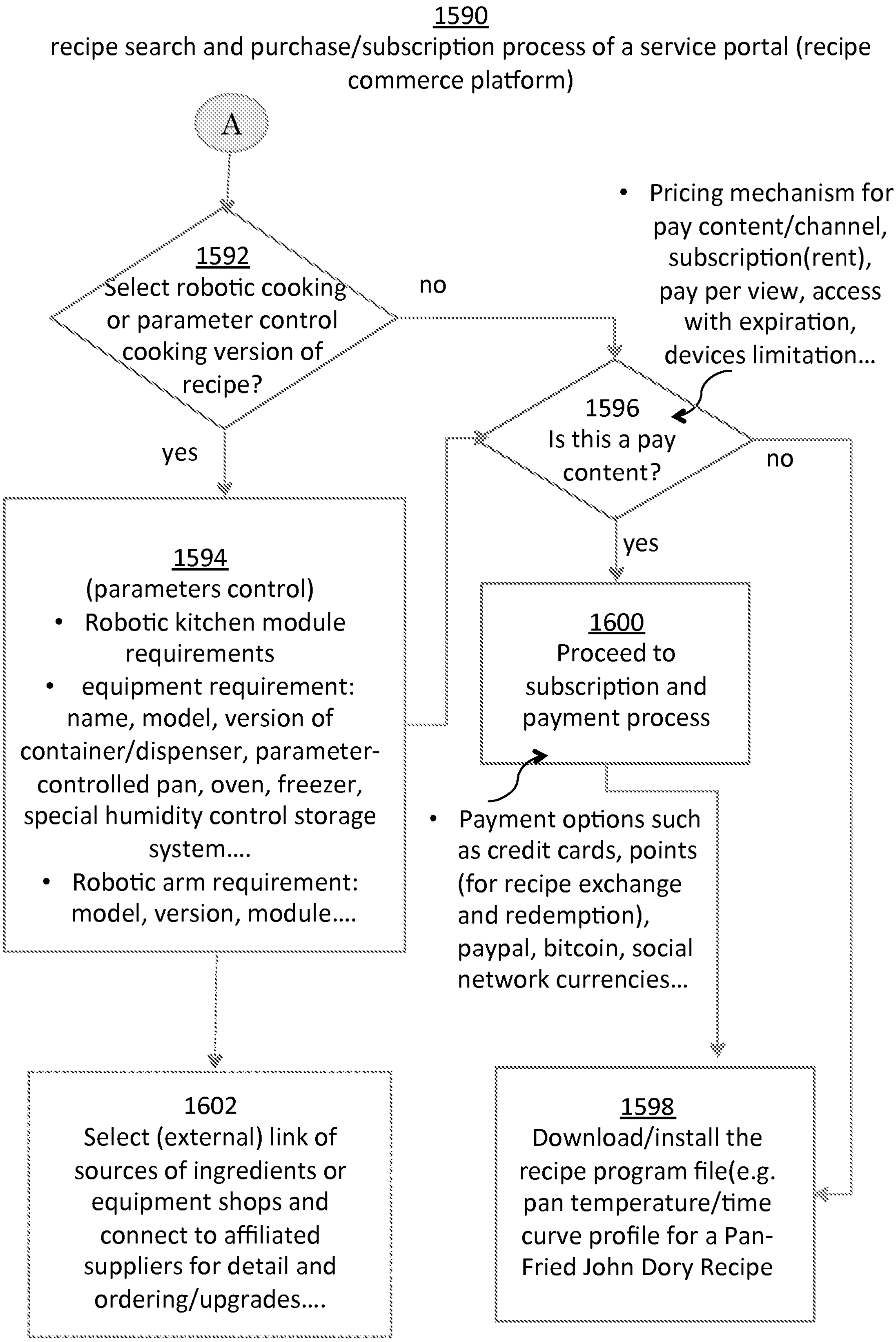
1590
recipe search and purchase/subscription process of a service portal (recipe commerce platform)
A
1592
Select robotic cooking or parameter control cooking version of recipe?
no
yes
• Pricing mechanism for pay content/channel, subscription(rent), pay per view, access with expiration, devices limitation...
1596
Is this a pay content?
no
yes
1594
(parameters control)
• Robotic kitchen module requirements
• equipment requirement: name, model, version of container/dispenser, parameter-controlled pan, oven, freezer, special humidity control storage system....
• Robotic arm requirement: model, version, module....
1600
Proceed to subscription and payment process
• Payment options such as credit cards, points (for recipe exchange and redemption), paypal, bitcoin, social network currencies...
1602
Select (external) link of sources of ingredients or equipment shops and connect to affiliated suppliers for detail and ordering/upgrades....
1598
Download/install the recipe program file(e.g. pan temperature/time curve profile for a Pan-Fried John Dory Recipe

FIG. 61B

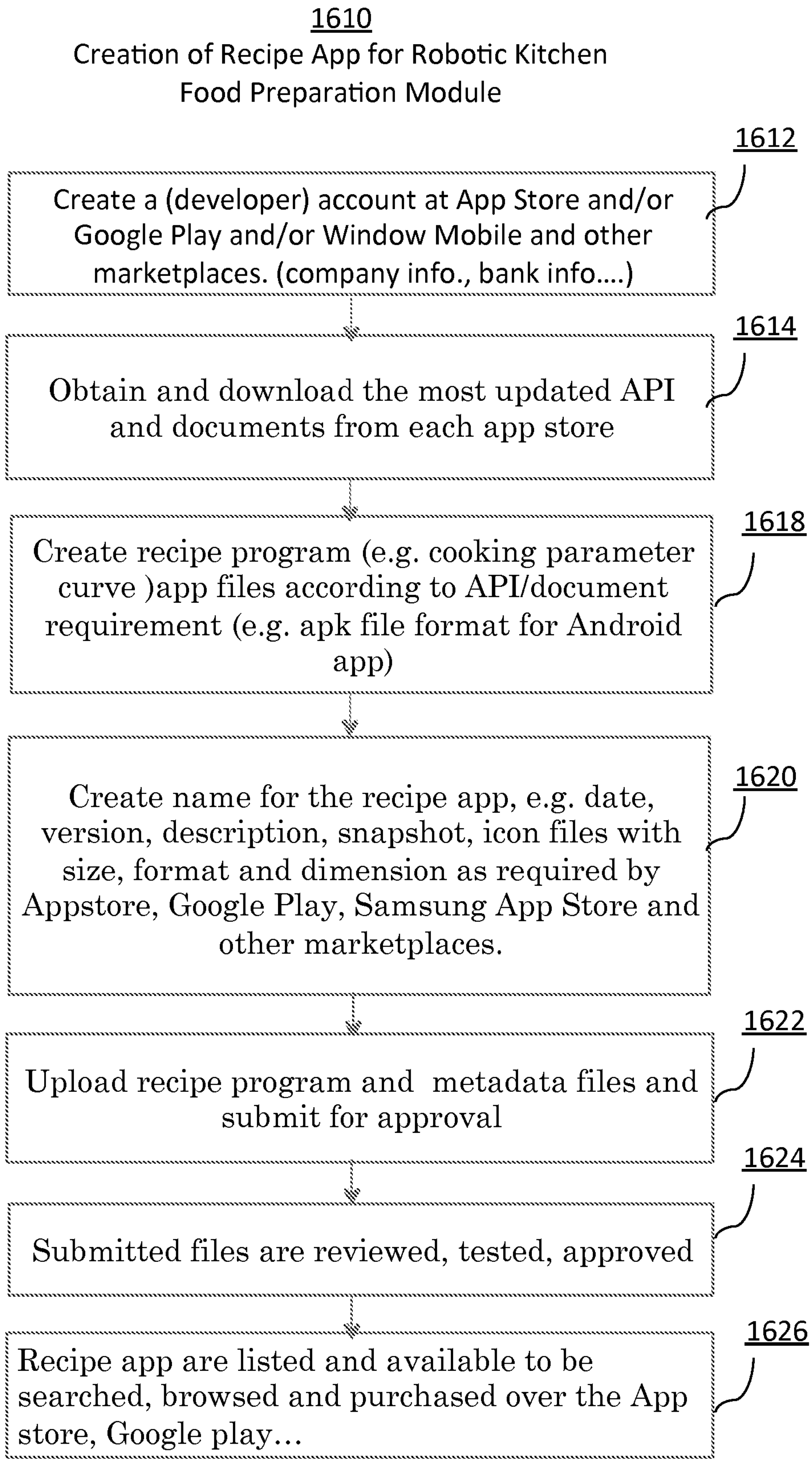
1610
Creation of Recipe App for Robotic Kitchen Food Preparation Module
1612
Create a (developer) account at App Store and/or Google Play and/or Window Mobile and other marketplaces. (company info., bank info….)
1614
Obtain and download the most updated API and documents from each app store
1618
Create recipe program (e.g. cooking parameter curve )app files according to API/document requirement (e.g. apk file format for Android app)
1620
Create name for the recipe app, e.g. date, version, description, snapshot, icon files with size, format and dimension as required by Appstore, Google Play, Samsung App Store and other marketplaces.
1622
Upload recipe program and metadata files and submit for approval
1624
Submitted files are reviewed, tested, approved
1626
Recipe app are listed and available to be searched, browsed and purchased over the App store, Google play…

FIG. 62

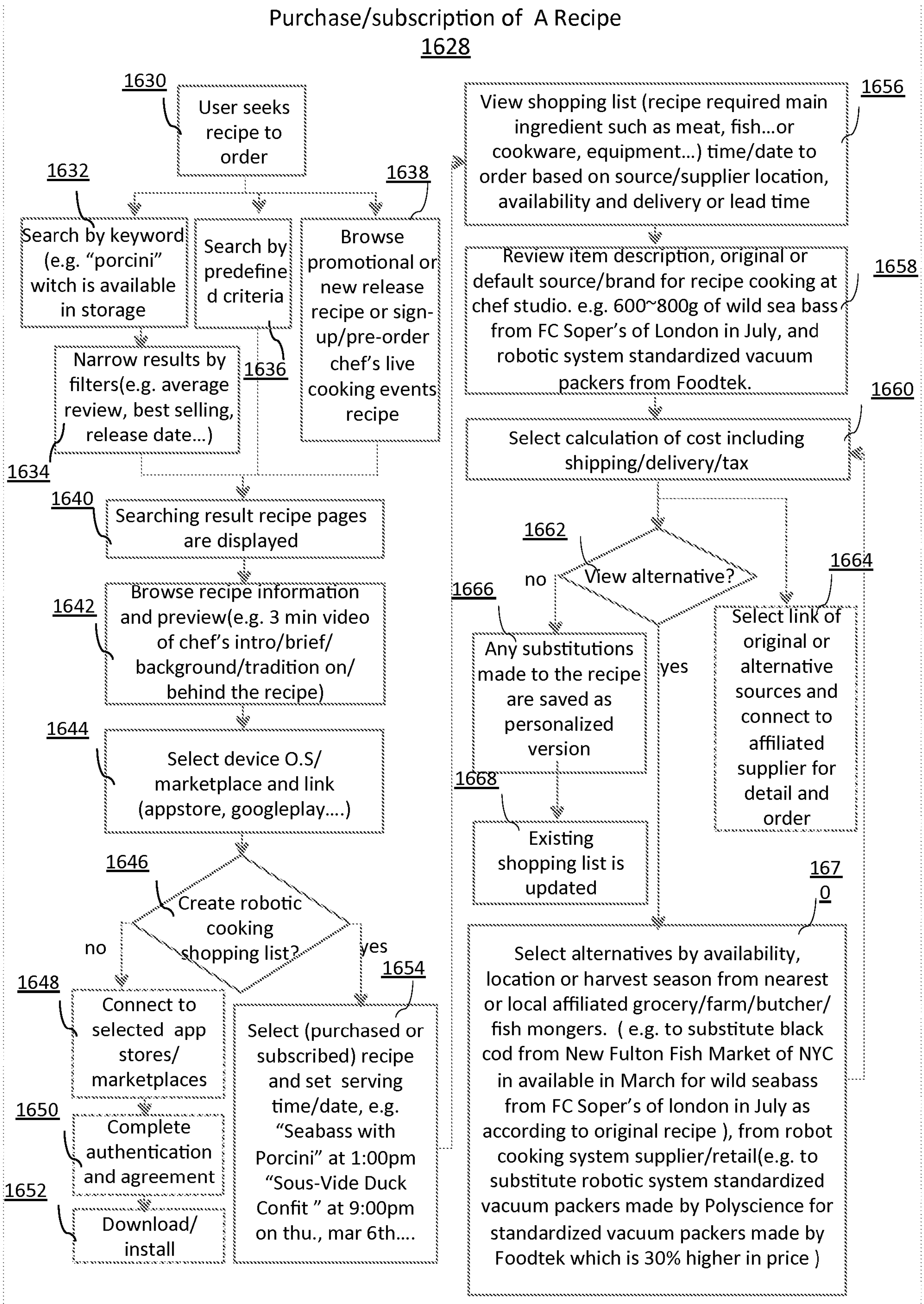
Purchase/subscription of A Recipe
1628
1630
User seeks recipe to order
1632
Search by keyword (e.g. "porcini" witch is available in storage
Search by predefined criteria
1636
1638
Browse promotional or new release recipe or sign-up/pre-order chef's live cooking events recipe
Narrow results by filters(e.g. average review, best selling, release date...)
1634
1640
Searching result recipe pages are displayed
1642
Browse recipe information and preview(e.g. 3 min video of chef's intro/brief/ background/tradition on/ behind the recipe)
1644
Select device O.S/ marketplace and link (appstore, googleplay....)
1646
Create robotic cooking shopping list?
no
yes
1648
Connect to selected app stores/ marketplaces
1650
Complete authentication and agreement
1652
Download/ install
1654
Select (purchased or subscribed) recipe and set serving time/date, e.g. "Seabass with Porcini" at 1:00pm "Sous-Vide Duck Confit " at 9:00pm on thu., mar 6th....
1656
View shopping list (recipe required main ingredient such as meat, fish...or cookware, equipment...) time/date to order based on source/supplier location, availability and delivery or lead time
1658
Review item description, original or default source/brand for recipe cooking at chef studio. e.g. 600~800g of wild sea bass from FC Soper's of London in July, and robotic system standardized vacuum packers from Foodtek.
1660
Select calculation of cost including shipping/delivery/tax
1662
View alternative?
no
yes
1664
Select link of original or alternative sources and connect to affiliated supplier for detail and order
1666
Any substitutions made to the recipe are saved as personalized version
1668
Existing shopping list is updated
1670
Select alternatives by availability, location or harvest season from nearest or local affiliated grocery/farm/butcher/ fish mongers. ( e.g. to substitute black cod from New Fulton Fish Market of NYC in available in March for wild seabass from FC Soper's of london in July as according to original recipe ), from robot cooking system supplier/retail(e.g. to substitute robotic system standardized vacuum packers made by Polyscience for standardized vacuum packers made by Foodtek which is 30% higher in price )

FIG. 63

Predefined Recipe Search Criteria
1672

Main Ingredient

Chicken
Beef
Pasta
Seafood
Rice
Fish
Lamb
Pork
Duck
Wild Game
Vegetable
Chocolate
Bread
Cheese
Eggs
Fruit
Turkey
Others
...

Cooking Duration

Less than 3 hours
Less than 2 hours
Less than 1 hours
Less than 45 minutes
Less than 30 minutes
Less than 15 minutes

Ingredient costs

Cuisine by geographic regions and types

Asian style
Indian food style
Arabic food style
Tartar
Cajun
Molecular
Fusion
American
Asian
British
French
Greek
Indian
Italian
Mexican
Moroccan
Spanish
.....

Chef name search

Chef’s name
Chef’s specialty
Chef’s location

Signature Dish

from well-known restaurant or chef

FIG. 64A

1672
Predefined Recipe Search Fields

**Types of Meals**

Breakfast
Brunch
Starters
Mains
Deserts
Drinks
Sauces
Sides
Snacks

**Special Diet**

Low-Calories
Low-Carbohydrate
Low-Fat
Low-Protein
Low-Sodium
Hi-Fiber
Diabetic-Friendly
Vegetarian
Vegan
Dairy-Free
Wheat/Gluten-Free
...

**Exclusion ingredient**

(User to select recipe without certain non-main ingredients for preferences, health/ allergy/nutrition concern, availability reasons.)
...

**Dish Types and Cooking Methods**

Antipastas
Brewing
Cakes & tea treats
Canning Curries
Deep fried
Drinks
Grilling
No-Cook
Pasta & Risottos
Pies & Pastries
Pizzas
Pressure
Deserts
Roasts
Salads
Sandwiches/Wraps
Sauces /Condiments
Slow cooking
Soups
Steam
Stews
Stir-Fry
Vegetable Sides
Water Bath
...

**Occasions & Seasons**

Purim
Ramadan
Rosh Hashanah
Hanukkah
Passover
Easter
Thanksgiving
Christmas
Parties and Gatherings
Spring
Summer
Fall
Winter
...

**Reviews and Suggestions**

Pairing recipes which are usually purchased / ordered together with, similar recipes, same ingredient recipies....

**Ranking**

(Best selling, most positive reviews....)

FIG. 64B

| Type of product | Product | Container # | Length x Width x Height mm. / Volume mL |
|---|---|---|---|
| **Large, bulky products (used by the piece)** | White cabbage, red cabbage, savoy cabbage, turnips, cauliflower, beet, rutabaga, kohlrabi, pak choi, Chinese cabbage, cabbage Romanesco, pumpkin, watermelon, melon, pineapple, coconut, mango | №1 | 280x200x150 |
| **Small fraction solids (small amount of use)** | Cocoa, coffee powder, baking soda, citric acid (crystals), poppy dried, powdered sugar, baking powder dough, anise, star anise, vanilla, cardamom, black cardamom, black cumin, coriander, cumin whole, dry dill, coriander seed, slices of dried onions, fennel seeds, dry yeast, sumac, cumin whole, dry thyme, garlic, dry mustard powder, minced cherries, rosehip powder, glucose, baking dough, egg powder, caramel syrup, dried parsley, gelatin food, basil dry, saffron, galangal, oregano. -pepper (allspice, black, white, red, sweet, red hot chili, cayenne), cloves, cinnamon, coriander, salt-(carbon ammonium, sea), minced cloves, ginger dry powder, cardamom, coriander, cumin powder, curry, turmeric, powdered cinnamon, nutmeg powder, parsley. | №2 | 100x50x30 / 150 ml |
| **Small fraction solids (large amount of use)** | -Flour (wheat, pancake, corn, rye, barley, oat, rice, pea, buckwheat, soybean), starch (corn, potato), semolina, millet, rice, oats, barley, corn, breadcrumbs, sugar | №3 | 70x100x150 / 1000 ml |
| **Large fraction solids (large amount of use)** | Rice - (wild, basmati rice, long-grain, polished, brushed crushed), lentils, buckwheat, unground, unground quickly preparing, slipped quickly preparing, cereal-(pea quickly preparing, corn ground, large corn for flakes, corn fine, wheat Poltava, Artek wheat, wheat quickly preparing, buckwheat, oats not crushed, oat rolled, crushed barley, crushed barley quickly preparing), oatmeal, oat flakes, millet polished, millet polished quickly preparing, pea-(shelled, shelled split), beans (white, red), dried onion slices, dried parsley, food gelatins | №3 | 70x100x150 / 1000 ml |
| **Large fraction solids by piece (large amount of use)** | Pasta (linguine, spaghetti, lasagne, foam, feathers, scrap macaroni, vermicelli (round, square, elliptical), noodles (smooth, serrated, with straight, helical or sawtooth edges), pasta, pretzels, and noodles may be in the form of nests and coils, curly, stamped, pressed), gelatin leaf, sugar-dough (mastic). | №4 | 250x180x100 |
| **Salad and spinach vegetables** | Salad, nettles, chard, spinach, quinoa, sorrel, etc., spicy vegetables - fennel, coriander, cumin, parsley, savory, calendula, basil, tarragon, lavender, lemon balm, thyme, rosemary, lovage, marjoram, etc., dessert vegetables - rhubarb, asparagus, artichoke, leek, onion, shallot, shallots; leek, rhubarb, sorrel | №4 | 250x180x100 |
| **Small size food products** | Tomatoes, onions, garlic, brussels sprouts, root and tuber vegetables (carrot, radish, black radish, horseradish, European radish, parsnip, daikon, celery, beets, potatoes, Jerusalem artichokes, sweet potatoes, yams); Pumpkin vegetables (cucumbers, marrow squash, zucchini, squash); Herbaceous plants - (corn on the cob, eggplant, capers, loofah, peppers (bell), fennel); Fillets treated - bird (turkey, chicken, duck, partridge, quail, hazel grouse); -seafood (shrimp (tiger), crab, squid, langouste, langoustines, lobster, mussels, scallops, octopus, oyster, cuttlefish); meat (pork, beef, rabbit, mutton, lamb, veal, goat meat, horse meat, hare, venison, wild boar meat); fish (ide, pike, hake, trout, tuna, Silver carp, cod, perch, sterlet, jack mackerel, catfish, mackerel, whitefish, salmon, herring, sardines, baltic herring, Common carp, roach, haddock, halibut, sturgeon, perch, hake, redfish, capelin, pollock, bluefish, bream, smelt, mullet, chum salmon, carp, crucian, flounder, catfish, dorado, pink salmon, chub, red mullet, anchovy, shark, sea bass); mushrooms (cep, oyster, table mushroom, partabello, milk mushroom, chanterelle, suillus, xercomus, Armillaria, birch bolete, red-capped scaber stalk, truffle, shiitake); chicken egg; fruits - apple, pear, pomegranate, peach, plum, cherry, orange, lemon, grapes, apricots, kiwi, strawberry, banana, feyhua, grapefruit, lychee, rambutan, mangosteen, carambola, guava, passion fruit, avocado, papaya, pomelo, figs, pawpaw, quince, barberry, cranberries. | №4 | 250x180x100 |
| **Large fraction solids by piece (small amount of use)** | Dried apricots, raisins, (dark, light), prunes, almond shavings, seeds (sunflower, pumpkin, white), dates, figs, dried cherry, dried, dried plums, dried rosehip, dried apricots pitted, dried papaya, dried apricots, kiwi dried, candied pineapple, quail eggs, blueberries, strawberries, blackberries, currants (red / white / black), cranberry viburnum, buckthorn, gooseberry. Butter | №5 | 150x100x50 |
| **Large fraction solids by piece (small amount of use)** | nuts (nutmeg, pecans, pine nuts, macadamia, cola, chilim, chestnut, Brazil, peanuts, walnuts, almonds, cashews, pistachios, pine, hazelnuts), coffee grain, sugar (cane, white refined) grains for milling | №6 | 70x100x50 / 350 ml |
| **Spaghetti** | Spaghetti | №7 | tube 100x100x350 |
| **Liquids (large amount of use)** | milk, cream (pastry, vegetable), liquid dairy products (fermented baked milk, yogurt, kefir, tan), olive oil, vegetable oil, frying, duck fat, stewed fruit, fruit-drink, juice, beer, wine | №8 | 1200 ml |
| **Liquids (small amount of use)** | balsamic cream, vinegar (balsamic, (light, dark), wine-(white, red), apple, table), soy sauce, citric acid, Tabasco, Red Devil, Worcestershire sauce, oil (pumpkin, flax, sesame) | №9 | 100 ml |
| **Pasty (pastelike) products and semi-finished products (small amount of use)** | Sour cream, mayonnaise, softened butter, whipped cream, cheese (mascarpone, ricotta), tomato paste, mustard, horseradish paste | №10 | 300 ml |

FIG. 65

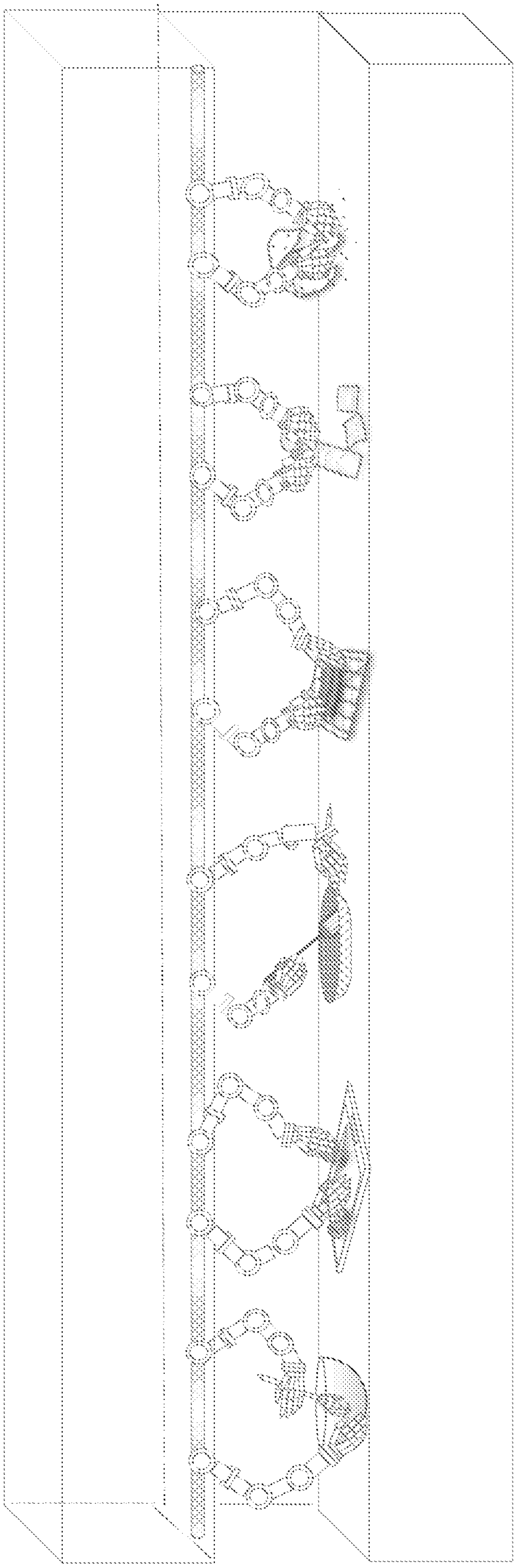

FIG. 66

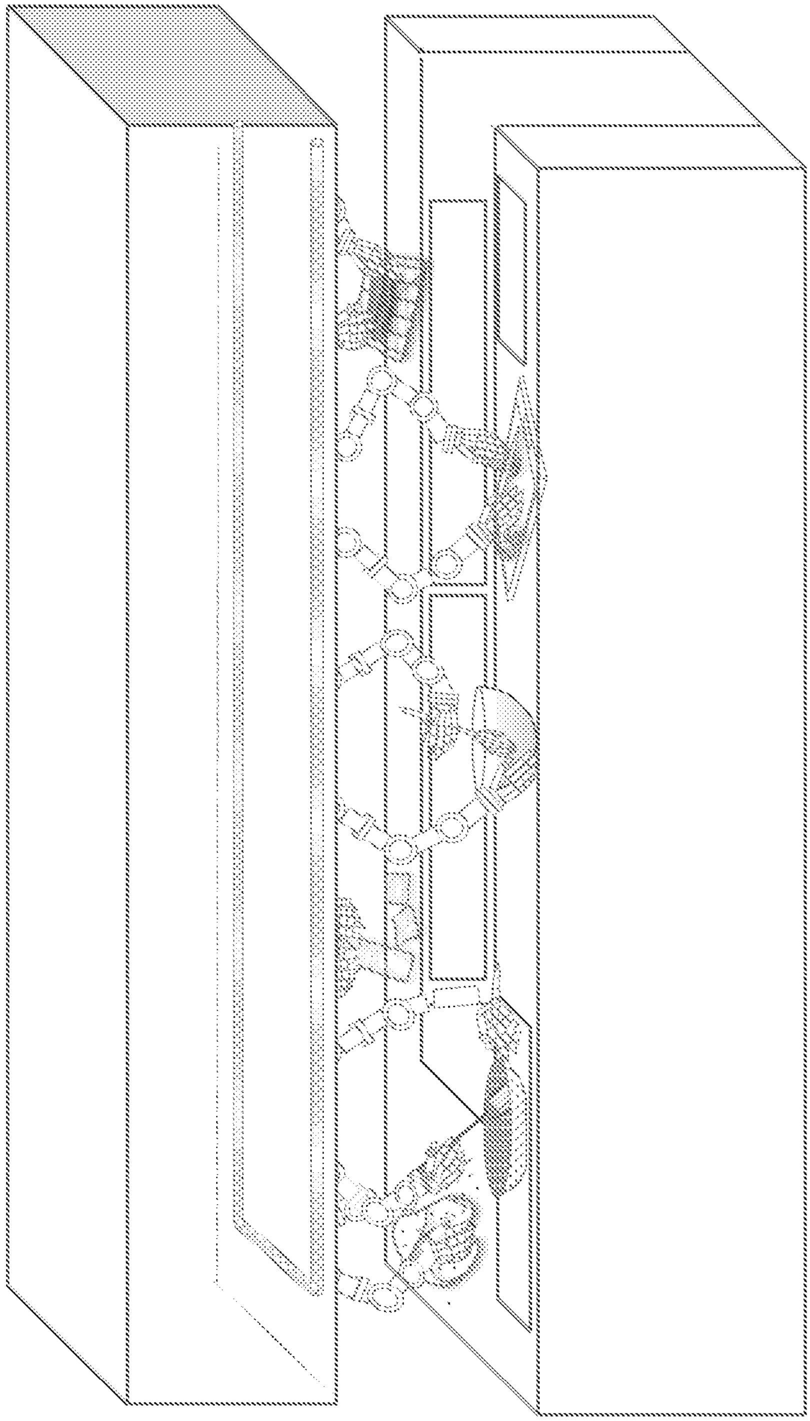

FIG. 67

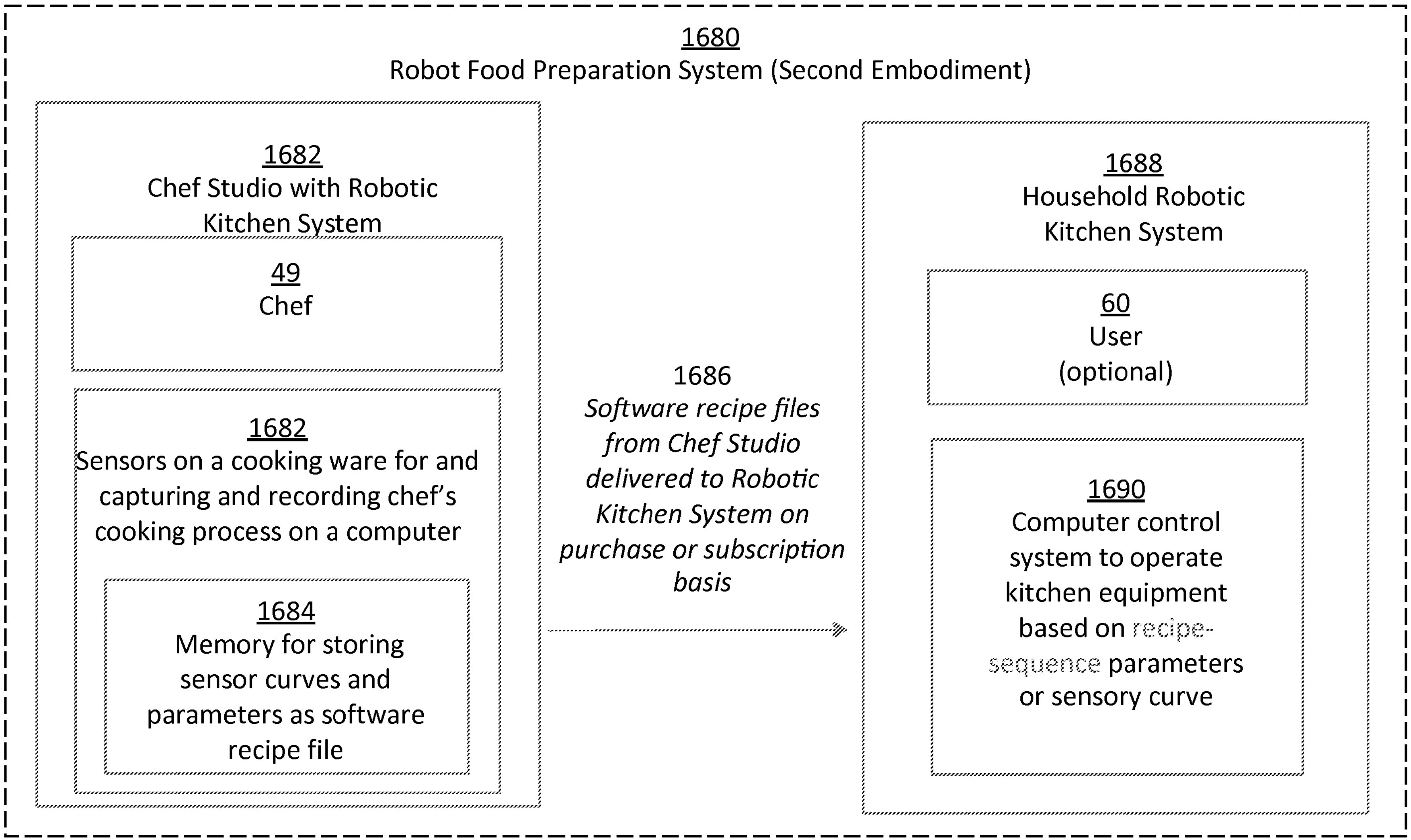
1680
Robot Food Preparation System (Second Embodiment)
1682
Chef Studio with Robotic Kitchen System
49
Chef
1682
Sensors on a cooking ware for and capturing and recording chef's cooking process on a computer
1684
Memory for storing sensor curves and parameters as software recipe file
1686
Software recipe files from Chef Studio delivered to Robotic Kitchen System on purchase or subscription basis
1688
Household Robotic Kitchen System
60
User (optional)
1690
Computer control system to operate kitchen equipment based on recipe-sequence parameters or sensory curve

FIG. 68

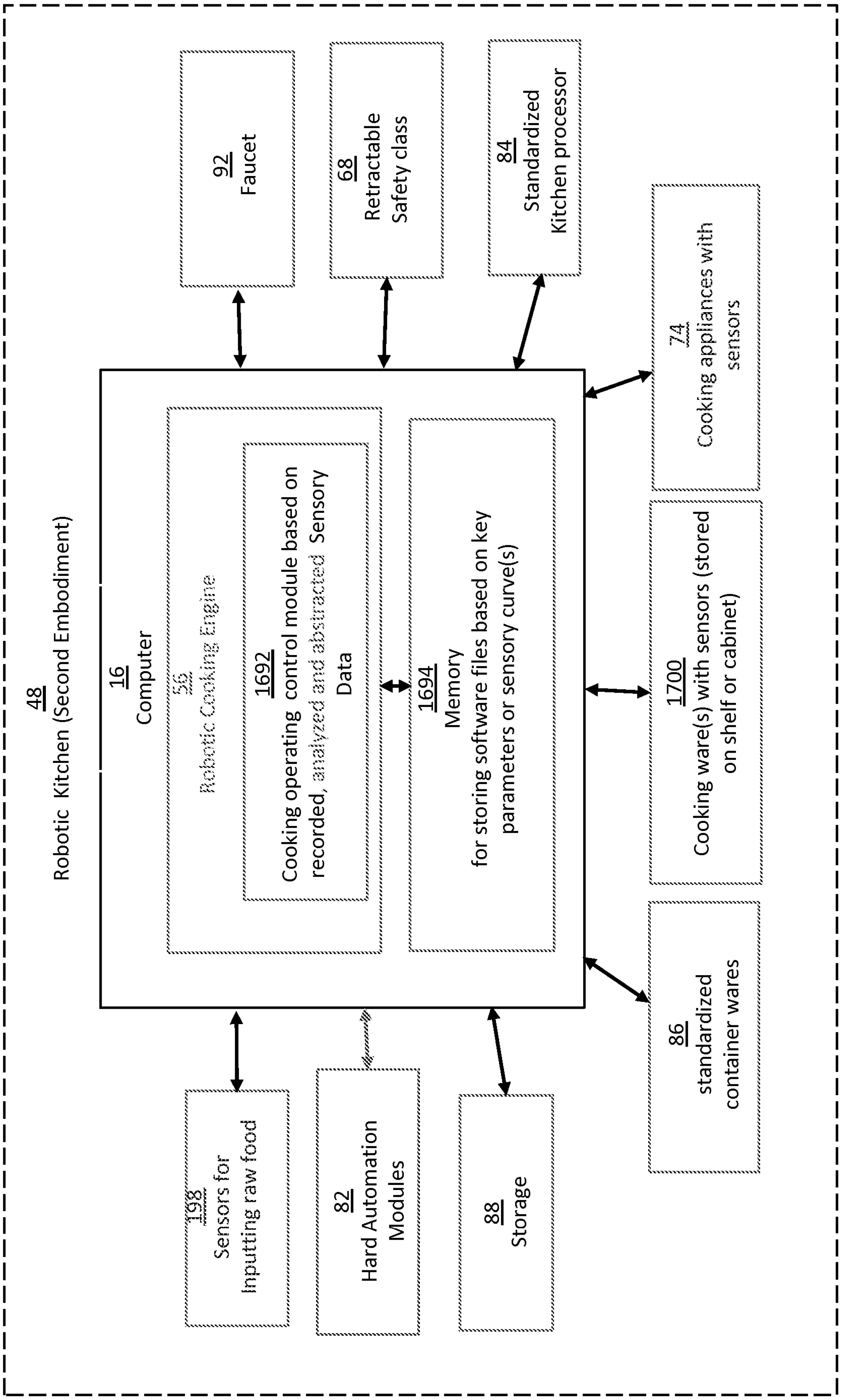
48
Robotic Kitchen (Second Embodiment)
16
Computer
56
Robotic Cooking Engine
1692
Cooking operating control module based on recorded, analyzed and abstracted Sensory Data
1694
Memory
for storing software files based on key parameters or sensory curve(s)
92
Faucet
68
Retractable Safety class
84
Standardized Kitchen processor
74
Cooking appliances with sensors
1700
Cooking ware(s) with sensors (stored on shelf or cabinet)
86
standardized container wares
198
Sensors for Inputting raw food
82
Hard Automation Modules
88
Storage

FIG. 69

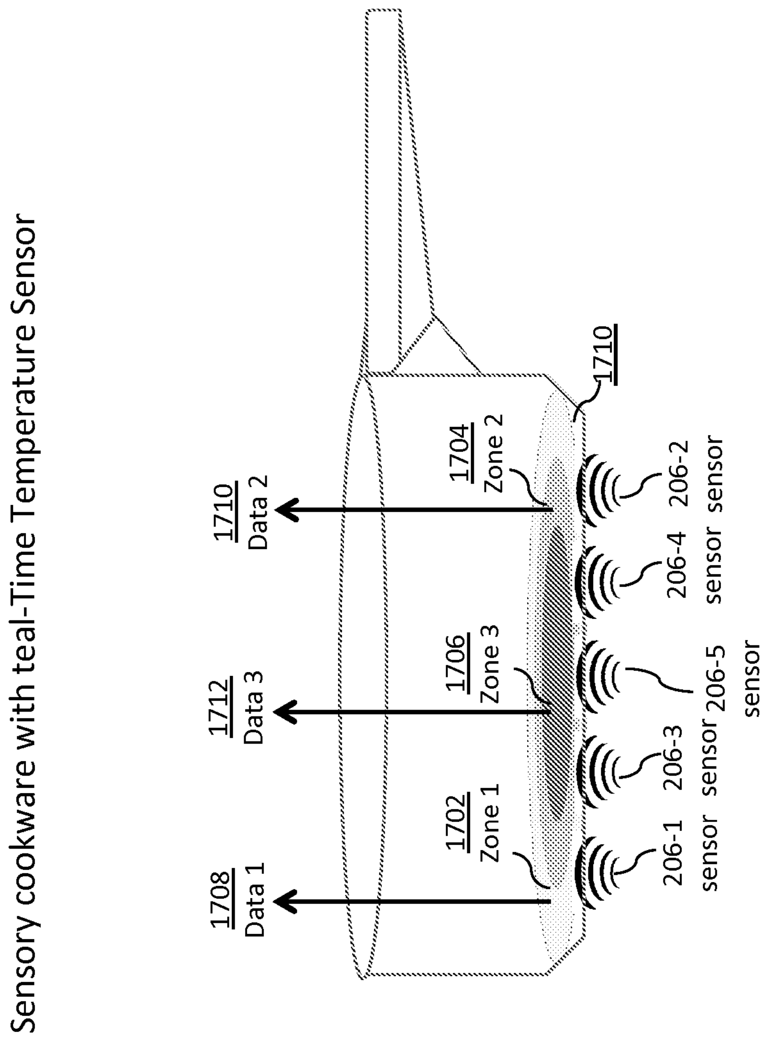

Sensory cookware with teal-Time Temperature Sensor
1708
Data 1
1712
Data 3
1710
Data 2
1702
Zone 1
1706
Zone 3
1704
Zone 2
1710
206-1
sensor
206-3
sensor
206-5
sensor
206-4
sensor
206-2
sensor


FIG. 70

220

Sensory curve with recorded real-time temperature curves

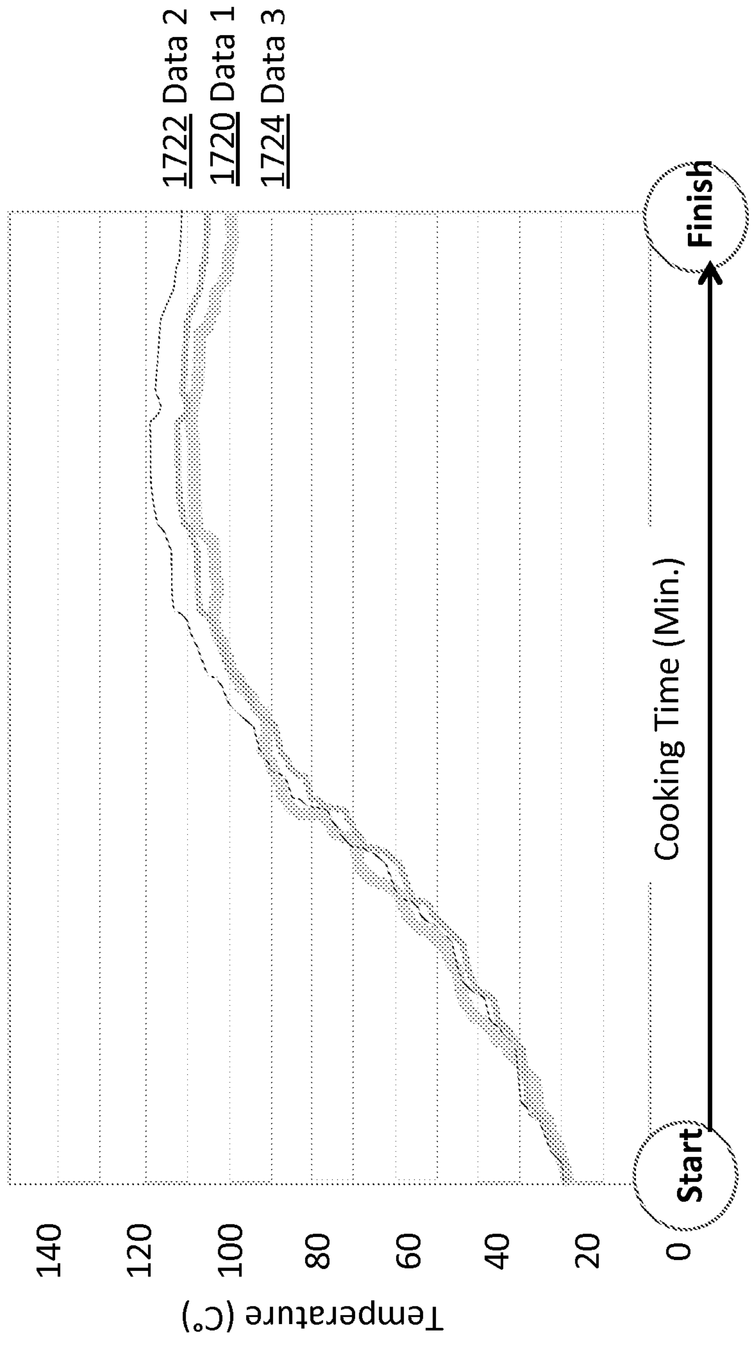


FIG. 71

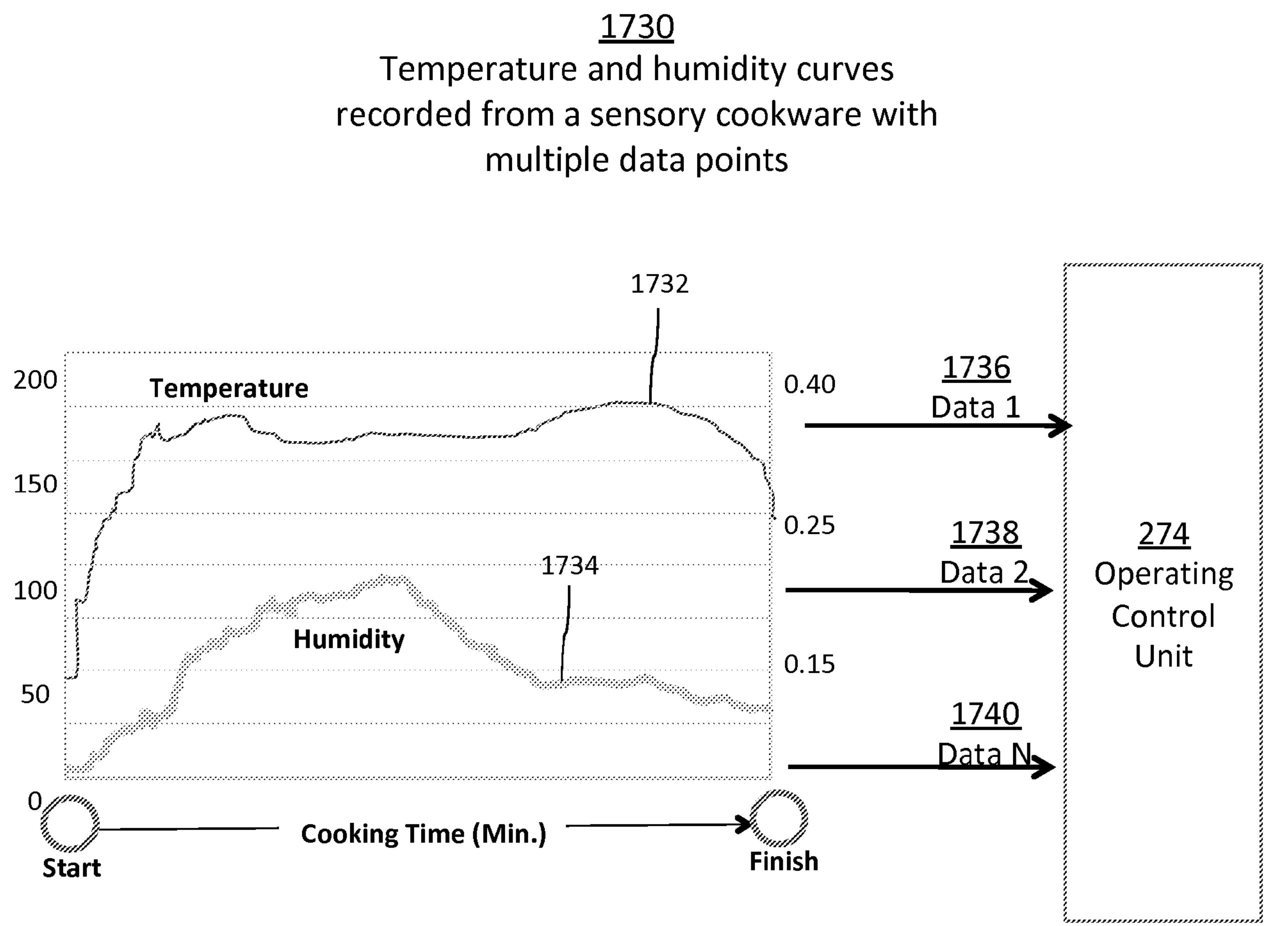
1730
Temperature and humidity curves recorded from a sensory cookware with multiple data points
1732
200
150
100
50
0
Temperature
Humidity
1734
0.40
0.25
0.15
Start
Cooking Time (Min.)
Finish
1736
Data 1
1738
Data 2
1740
Data N
274
Operating Control Unit

FIG. 72

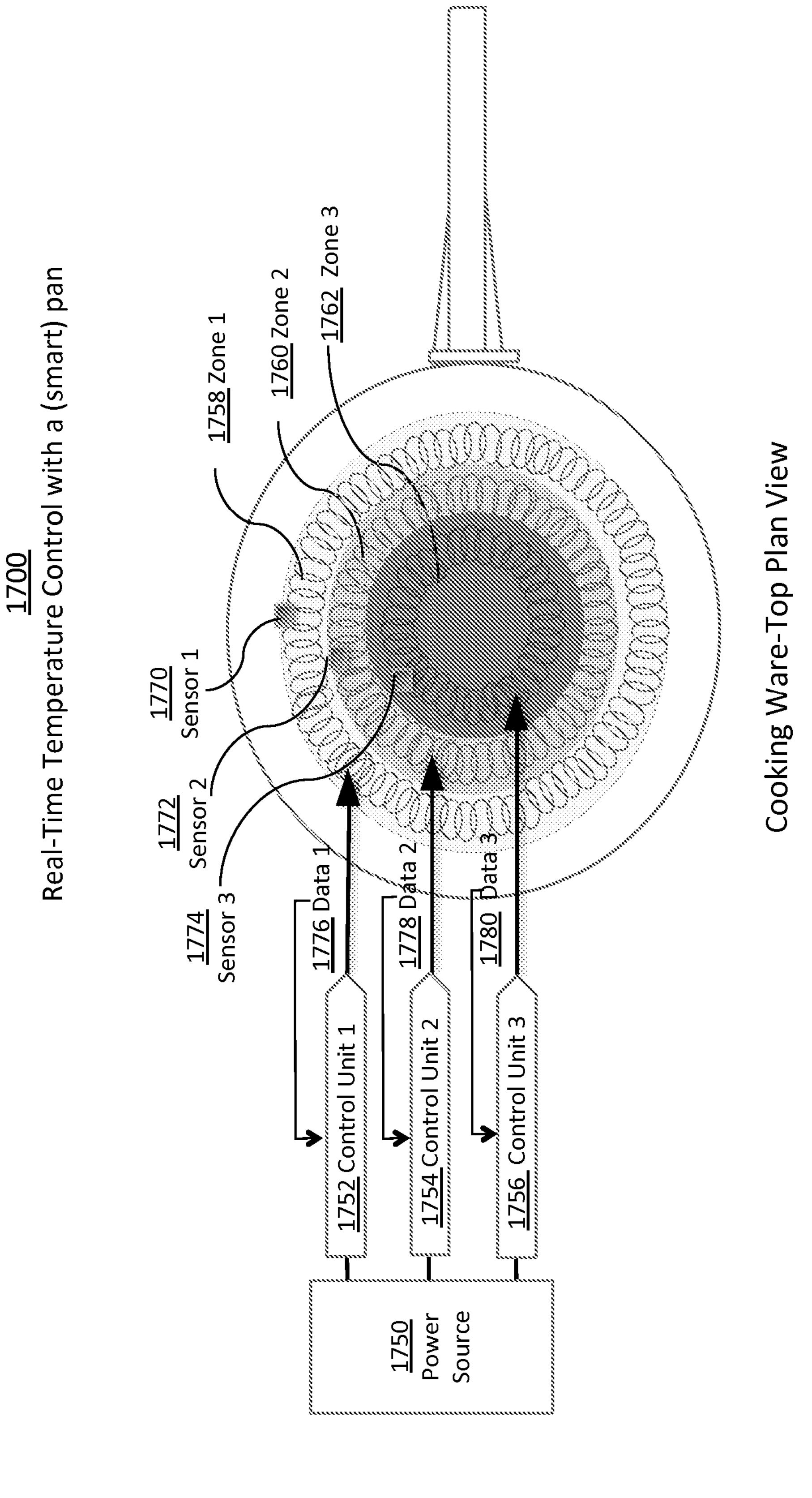
1700
Real-Time Temperature Control with a (smart) pan
1758 Zone 1
1760 Zone 2
1762 Zone 3
1770 Sensor 1
1772 Sensor 2
1774 Sensor 3
1776 Data 1
1778 Data 2
1780 Data 3
1752 Control Unit 1
1754 Control Unit 2
1756 Control Unit 3
1750 Power Source
Cooking Ware-Top Plan View

FIG. 73

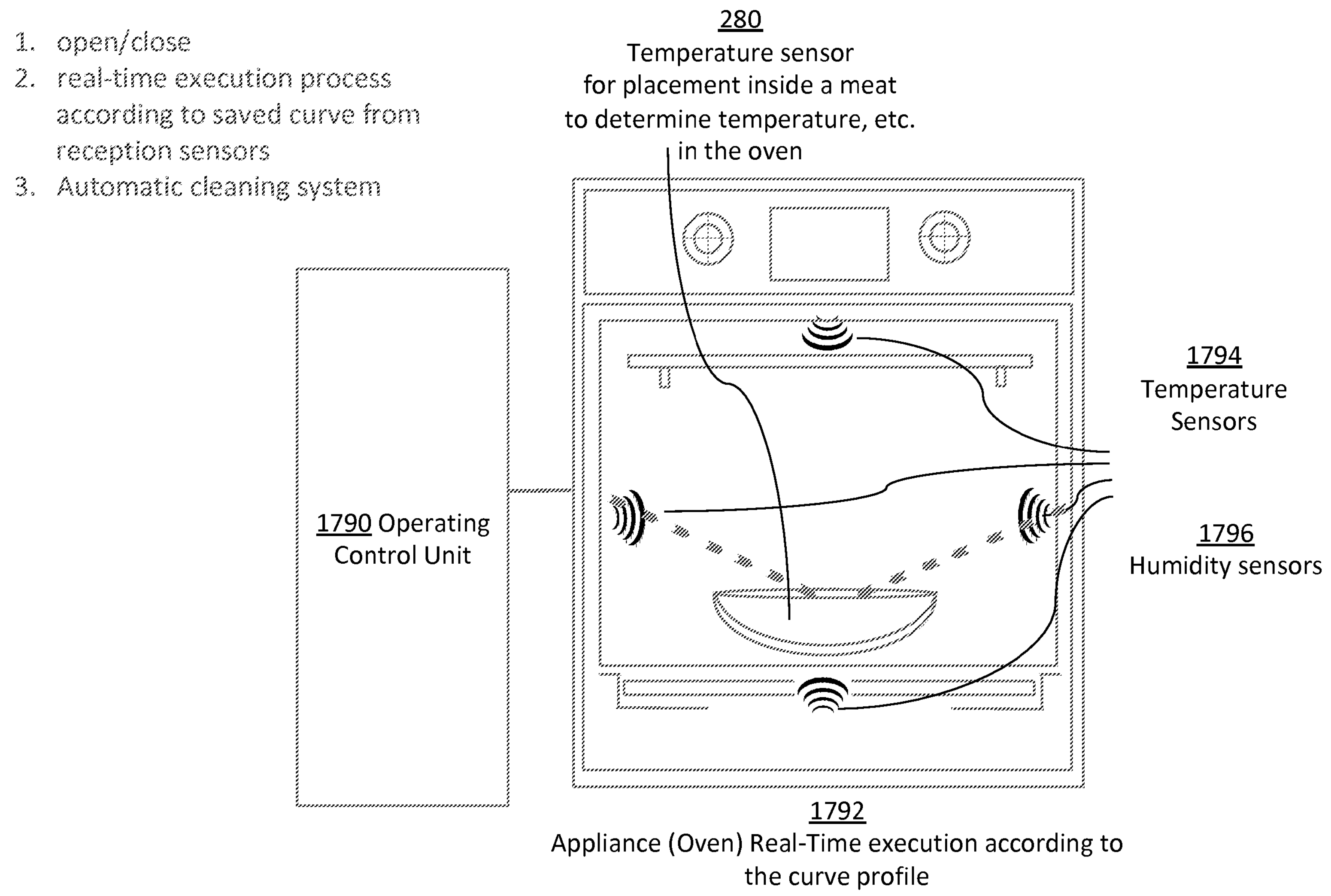


FIG. 74
(Smart) Oven and Computing Operating System

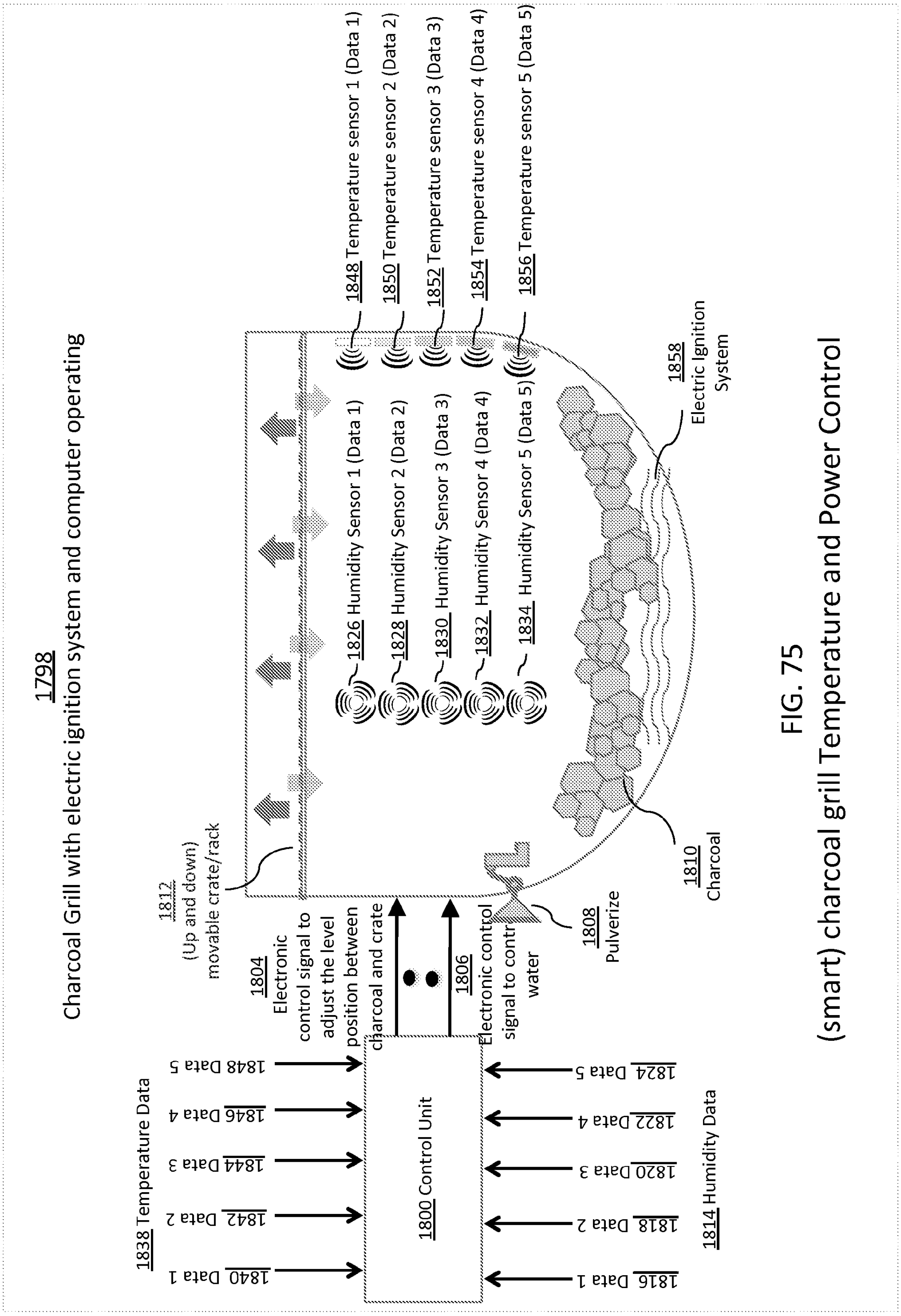


FIG. 75
(smart) charcoal grill Temperature and Power Control

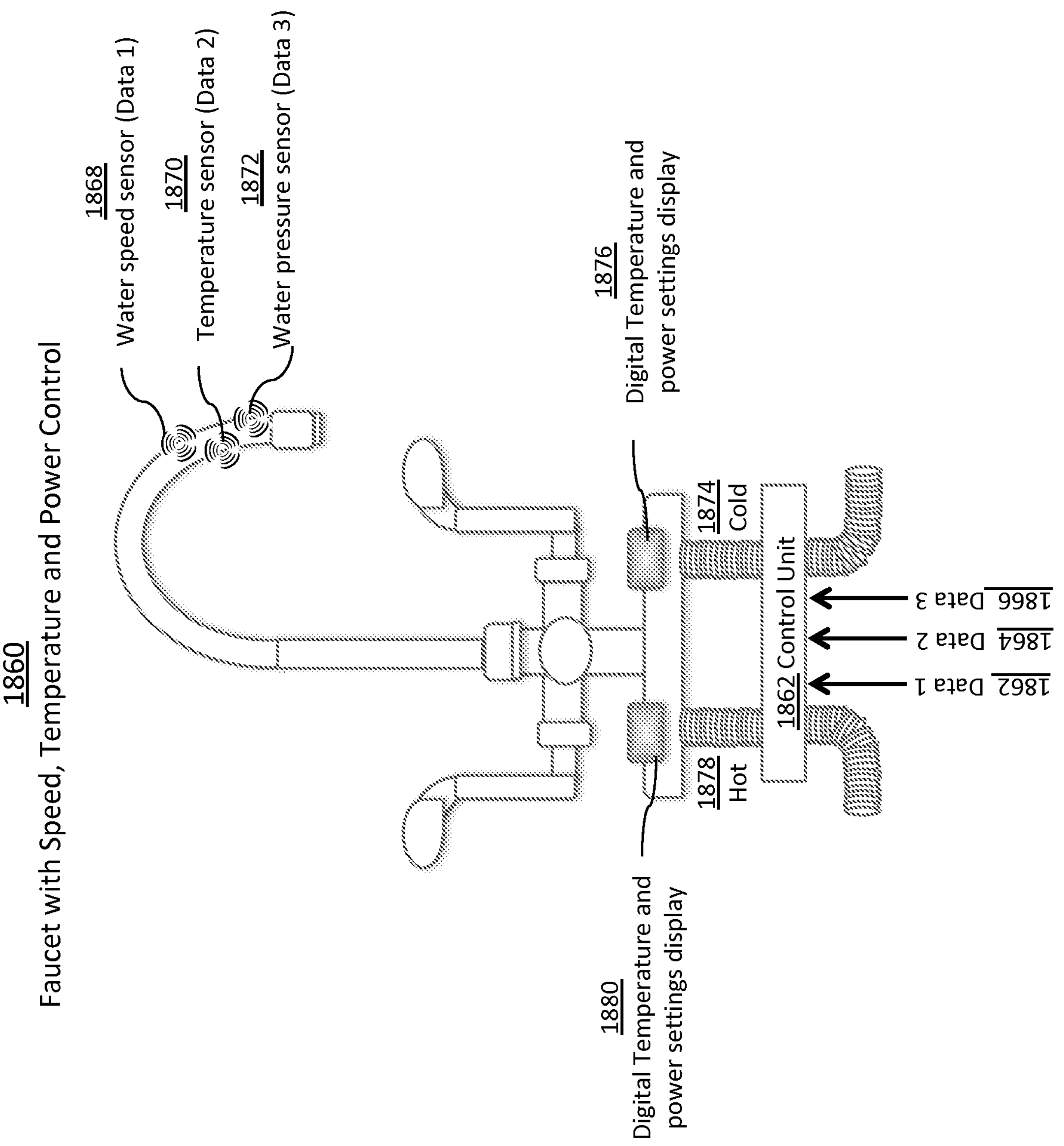


FIG. 76
(Smart) Faucet with Speed, Temperature and Power Control

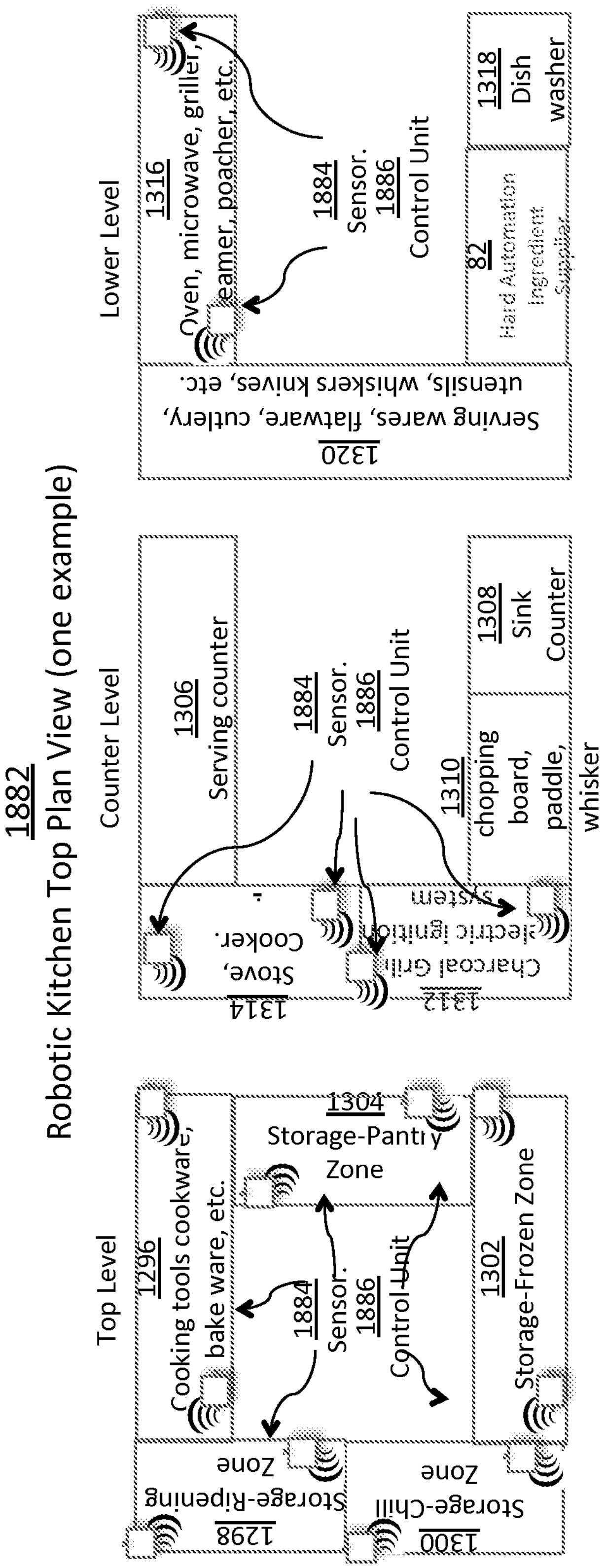
1882
Robotic Kitchen Top Plan View (one example)
Top Level
1296
Cooking tools cookware, bake ware, etc.
1298
Storage-Ripening Zone
1300
Storage-Chill Zone
1302
Storage-Frozen Zone
1304
Storage-Pantry Zone
1884
Sensor.
1886
Control Unit
Counter Level
1306
Serving counter
1884
Sensor.
1886
Control Unit
1308
Sink Counter
1310
chopping board, paddle, whisker
1312
Charcoal Grill electric ignition system
1314
Stove, Cooker.
Lower Level
1316
Oven, microwave, griller, steamer, poacher, etc.
1884
Sensor.
1886
Control Unit
1318
Dish washer
82
Hard Automation Ingredient Supplier
1320
Serving wares, flatware, cutlery, utensils, whiskers knives, etc.

FIG. 77

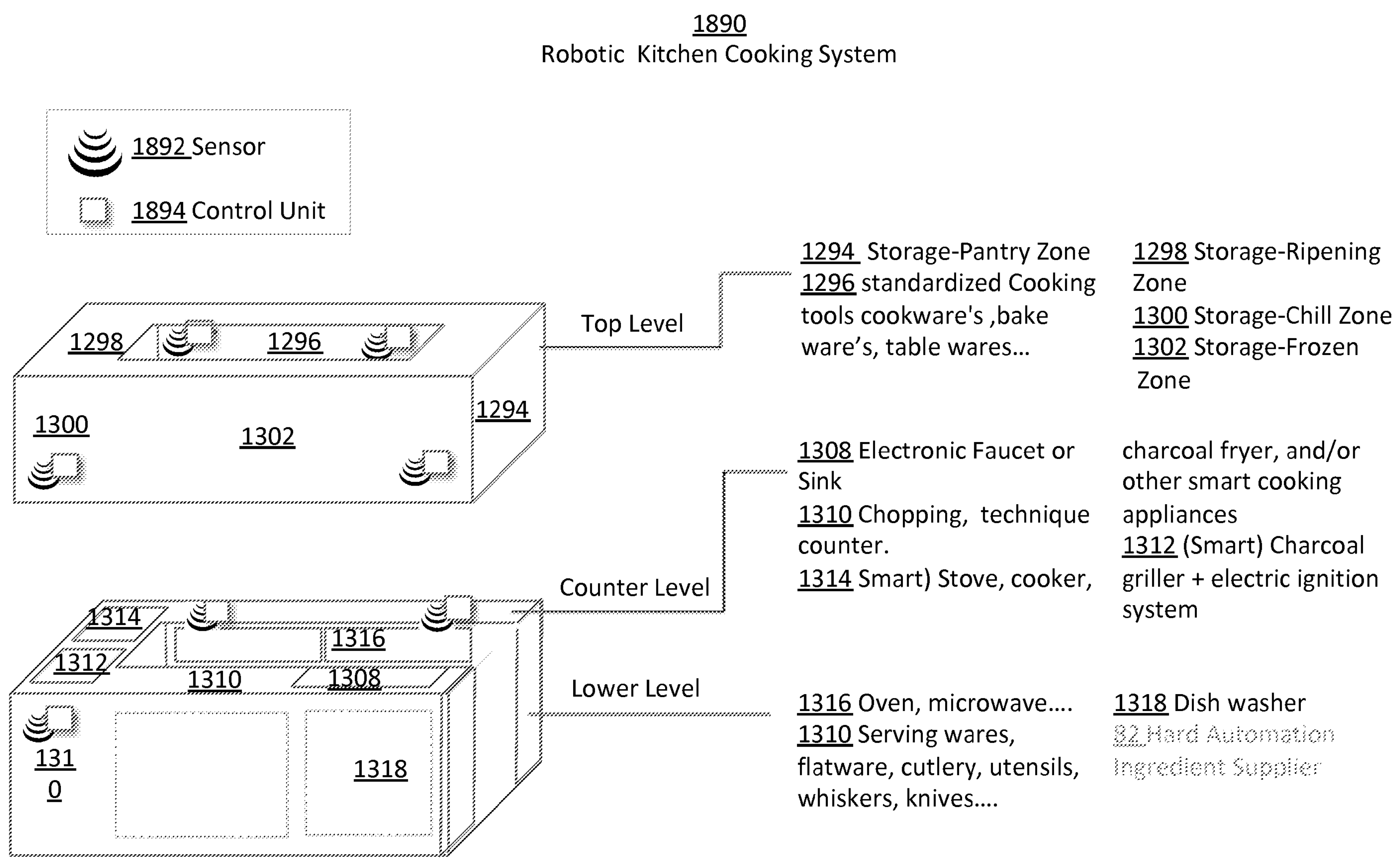
1890
Robotic Kitchen Cooking System
1892 Sensor
1894 Control Unit
1298
1296
1300
1302
1294
Top Level
1294 Storage-Pantry Zone
1296 standardized Cooking tools cookware's ,bake ware's, table wares...
1298 Storage-Ripening Zone
1300 Storage-Chill Zone
1302 Storage-Frozen Zone
1314
1312
1316
1310
1308
1318
1310
Counter Level
1308 Electronic Faucet or Sink
1310 Chopping, technique counter.
1314 Smart) Stove, cooker, charcoal fryer, and/or other smart cooking appliances
1312 (Smart) Charcoal griller + electric ignition system
Lower Level
1316 Oven, microwave....
1310 Serving wares, flatware, cutlery, utensils, whiskers, knives....
1318 Dish washer
82 Hard Automation Ingredient Supplier

FIG. 78

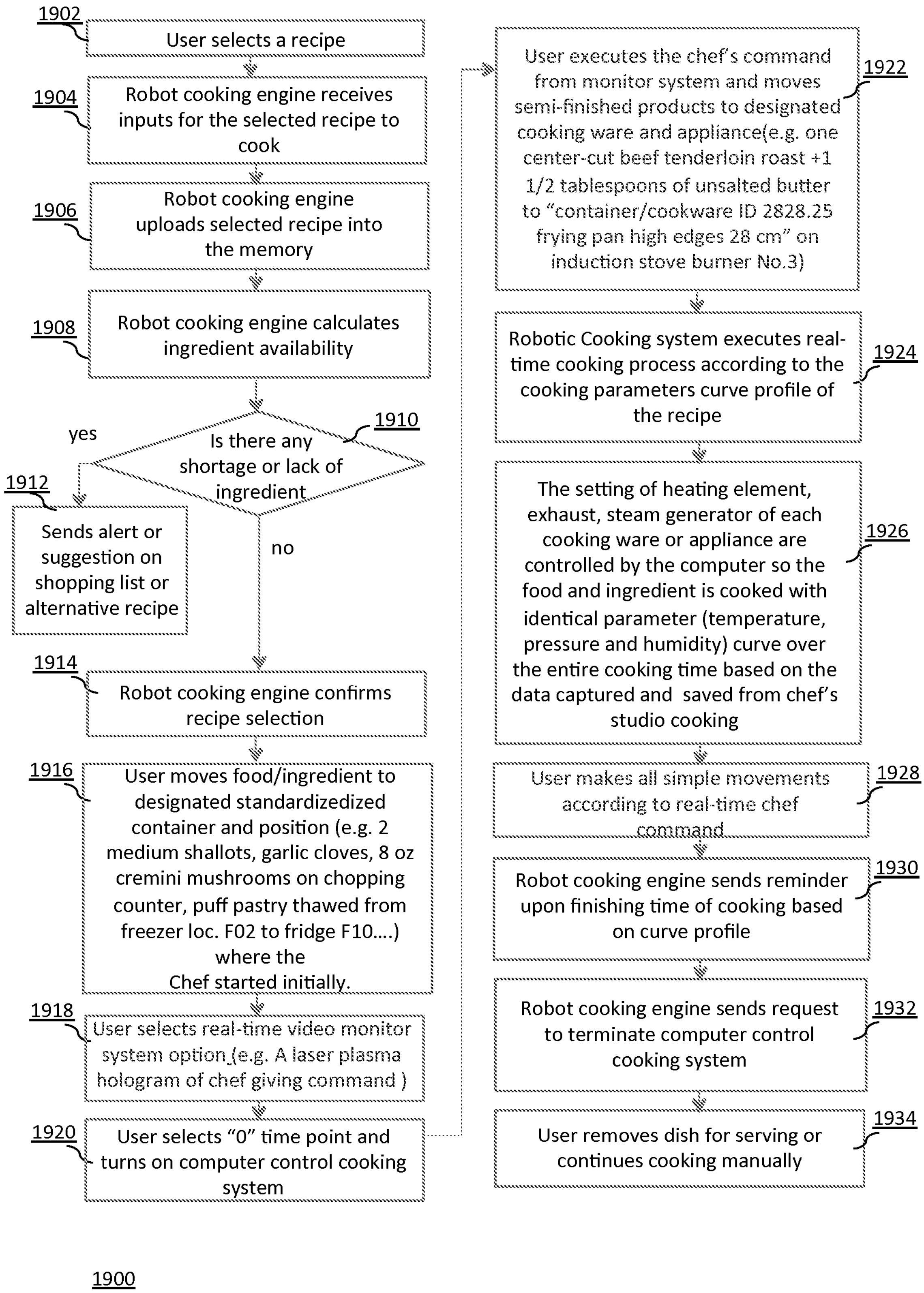
1902
User selects a recipe
1904
Robot cooking engine receives inputs for the selected recipe to cook
1906
Robot cooking engine uploads selected recipe into the memory
1908
Robot cooking engine calculates ingredient availability
1910
Is there any shortage or lack of ingredient
yes
1912
Sends alert or suggestion on shopping list or alternative recipe
no
1914
Robot cooking engine confirms recipe selection
1916
User moves food/ingredient to designated standardizedized container and position (e.g. 2 medium shallots, garlic cloves, 8 oz cremini mushrooms on chopping counter, puff pastry thawed from freezer loc. F02 to fridge F10....) where the Chef started initially.
1918
User selects real-time video monitor system option (e.g. A laser plasma hologram of chef giving command )
1920
User selects "0" time point and turns on computer control cooking system
1922
User executes the chef's command from monitor system and moves semi-finished products to designated cooking ware and appliance(e.g. one center-cut beef tenderloin roast +1 1/2 tablespoons of unsalted butter to "container/cookware ID 2828.25 frying pan high edges 28 cm" on induction stove burner No.3)
1924
Robotic Cooking system executes real-time cooking process according to the cooking parameters curve profile of the recipe
1926
The setting of heating element, exhaust, steam generator of each cooking ware or appliance are controlled by the computer so the food and ingredient is cooked with identical parameter (temperature, pressure and humidity) curve over the entire cooking time based on the data captured and saved from chef's studio cooking
1928
User makes all simple movements according to real-time chef command
1930
Robot cooking engine sends reminder upon finishing time of cooking based on curve profile
1932
Robot cooking engine sends request to terminate computer control cooking system
1934
User removes dish for serving or continues cooking manually
1900

FIG. 79

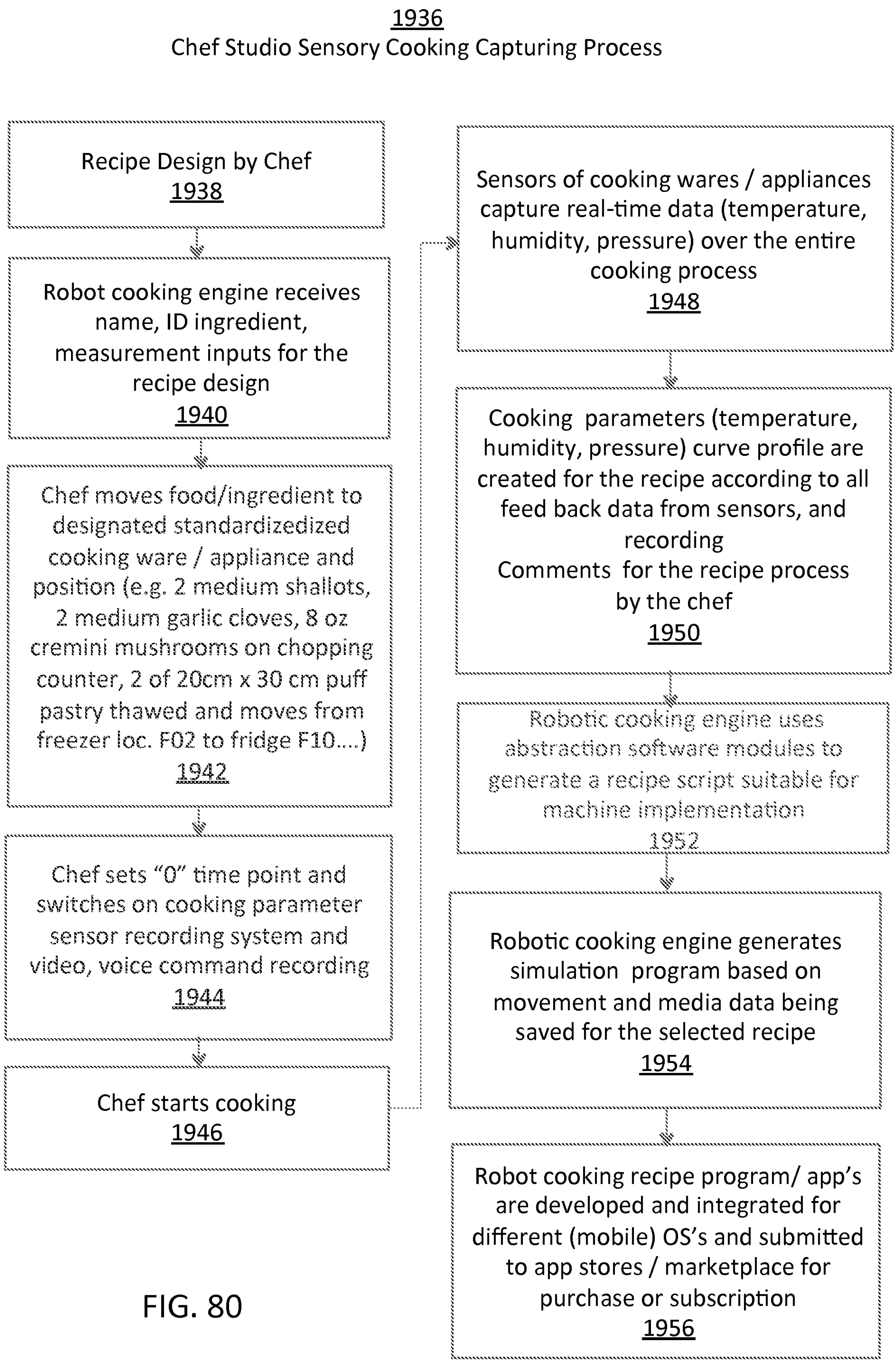
1936
Chef Studio Sensory Cooking Capturing Process
Recipe Design by Chef 1938
Robot cooking engine receives name, ID ingredient, measurement inputs for the recipe design 1940
Chef moves food/ingredient to designated standardizedized cooking ware / appliance and position (e.g. 2 medium shallots, 2 medium garlic cloves, 8 oz cremini mushrooms on chopping counter, 2 of 20cm x 30 cm puff pastry thawed and moves from freezer loc. F02 to fridge F10....) 1942
Chef sets "0" time point and switches on cooking parameter sensor recording system and video, voice command recording 1944
Chef starts cooking 1946
Sensors of cooking wares / appliances capture real-time data (temperature, humidity, pressure) over the entire cooking process 1948
Cooking parameters (temperature, humidity, pressure) curve profile are created for the recipe according to all feed back data from sensors, and recording
Comments for the recipe process by the chef 1950
Robotic cooking engine uses abstraction software modules to generate a recipe script suitable for machine implementation 1952
Robotic cooking engine generates simulation program based on movement and media data being saved for the selected recipe 1954
Robot cooking recipe program/ app's are developed and integrated for different (mobile) OS's and submitted to app stores / marketplace for purchase or subscription 1956

FIG. 80

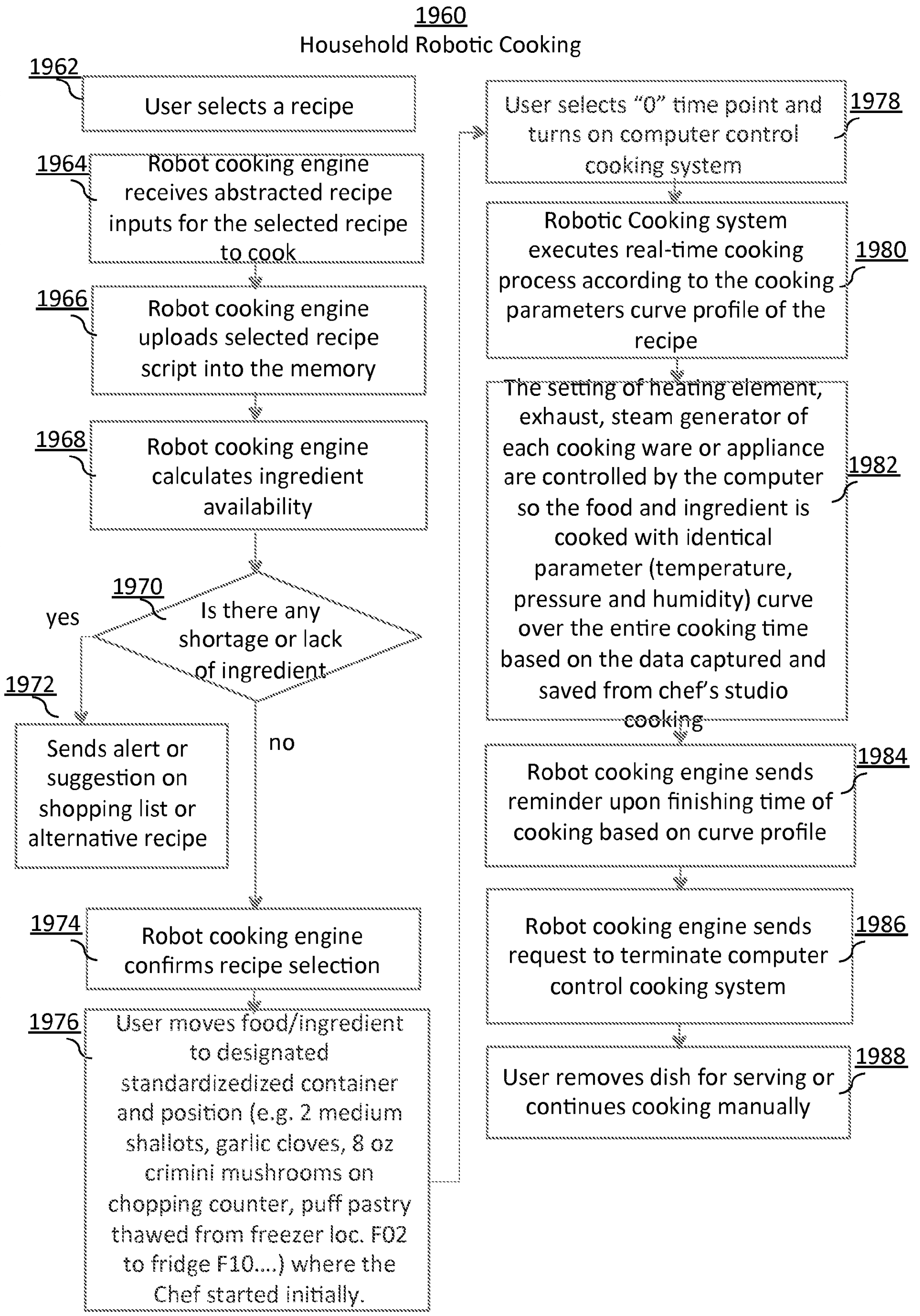
1960
Household Robotic Cooking
1962
User selects a recipe
1964
Robot cooking engine receives abstracted recipe inputs for the selected recipe to cook
1966
Robot cooking engine uploads selected recipe script into the memory
1968
Robot cooking engine calculates ingredient availability
1970
Is there any shortage or lack of ingredient
yes
no
1972
Sends alert or suggestion on shopping list or alternative recipe
1974
Robot cooking engine confirms recipe selection
1976
User moves food/ingredient to designated standardizedized container and position (e.g. 2 medium shallots, garlic cloves, 8 oz crimini mushrooms on chopping counter, puff pastry thawed from freezer loc. F02 to fridge F10....) where the Chef started initially.
1978
User selects "0" time point and turns on computer control cooking system
1980
Robotic Cooking system executes real-time cooking process according to the cooking parameters curve profile of the recipe
1982
The setting of heating element, exhaust, steam generator of each cooking ware or appliance are controlled by the computer so the food and ingredient is cooked with identical parameter (temperature, pressure and humidity) curve over the entire cooking time based on the data captured and saved from chef's studio cooking
1984
Robot cooking engine sends reminder upon finishing time of cooking based on curve profile
1986
Robot cooking engine sends request to terminate computer control cooking system
1988
User removes dish for serving or continues cooking manually

FIG. 81

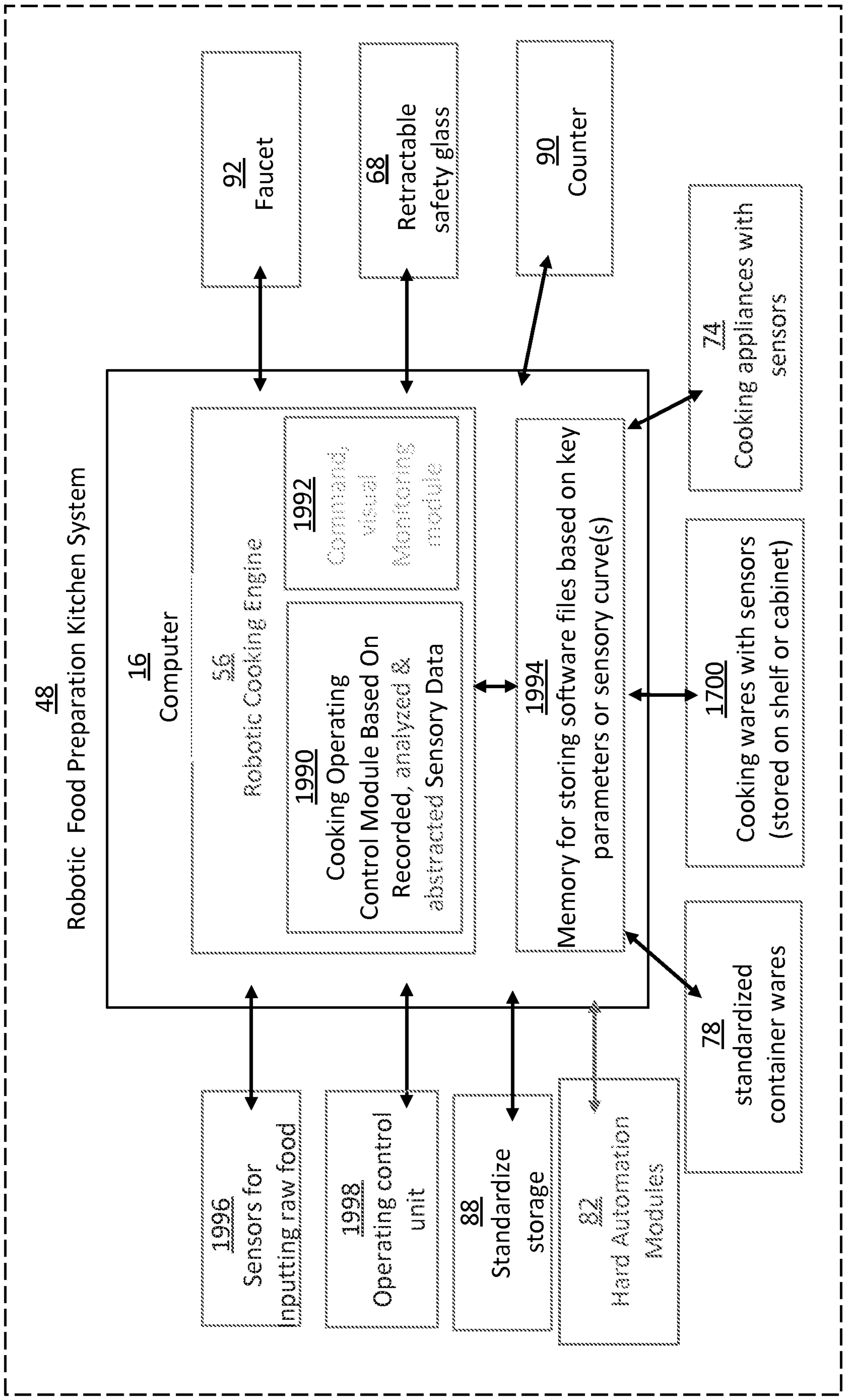
48
Robotic Food Preparation Kitchen System
16
Computer
56
Robotic Cooking Engine
1990
Cooking Operating Control Module Based On Recorded, analyzed & abstracted Sensory Data
1992
Command, visual Monitoring module
1994
Memory for storing software files based on key parameters or sensory curve(s)
92
Faucet
68
Retractable safety glass
90
Counter
74
Cooking appliances with sensors
1700
Cooking wares with sensors (stored on shelf or cabinet)
78
standardized container wares
1996
Sensors for inputting raw food
1998
Operating control unit
88
Standardize storage
82
Hard Automation Modules

FIG. 82

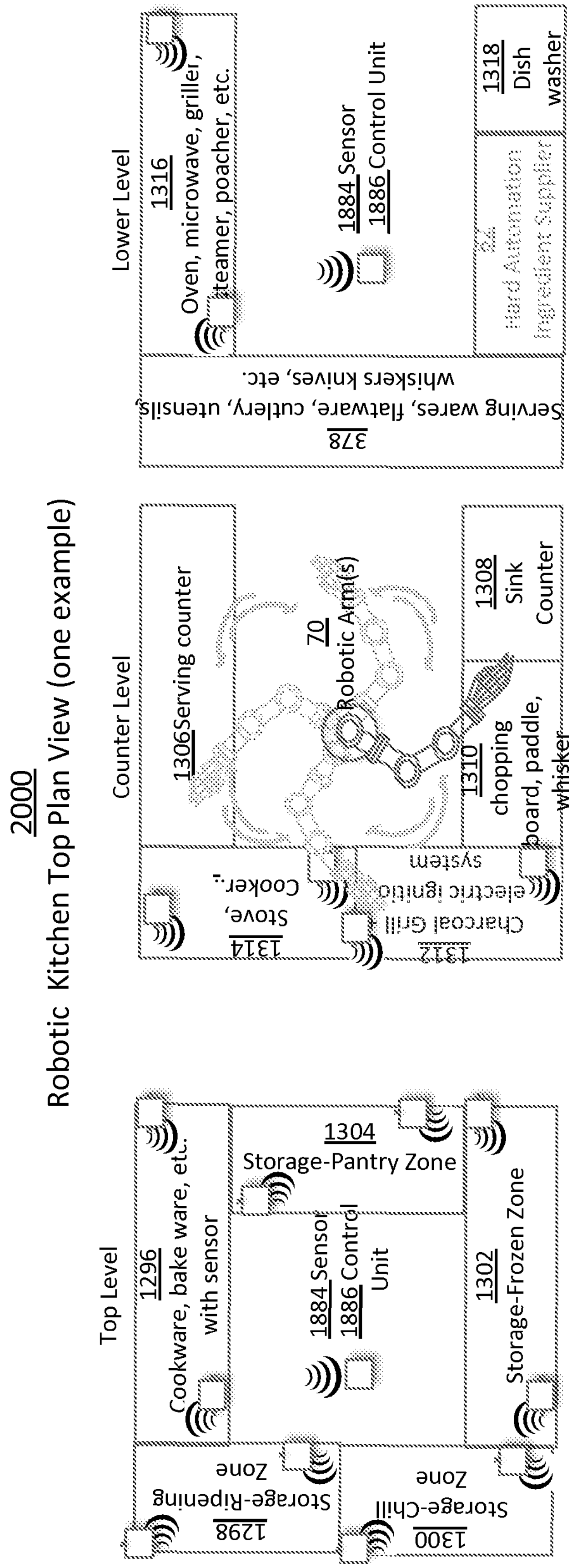
2000
Robotic Kitchen Top Plan View (one example)
Top Level
1296
Cookware, bake ware, etc. with sensor
1298
Storage-Ripening Zone
1300
Storage-Chill Zone
1302
Storage-Frozen Zone
1304
Storage-Pantry Zone
1884 Sensor
1886 Control Unit
Counter Level
1306 Serving counter
70
Robotic Arm(s)
1308
Sink Counter
1310
chopping board, paddle, whisker
1312
Charcoal Grill electric ignition system
1314
Stove, Cooker...
Lower Level
1316
Oven, microwave, griller, steamer, poacher, etc.
1884 Sensor
1886 Control Unit
1318
Dish washer
82
Hard Automation Ingredient Supplier
378
Serving wares, flatware, cutlery, utensils, whiskers knives, etc.

FIG. 83

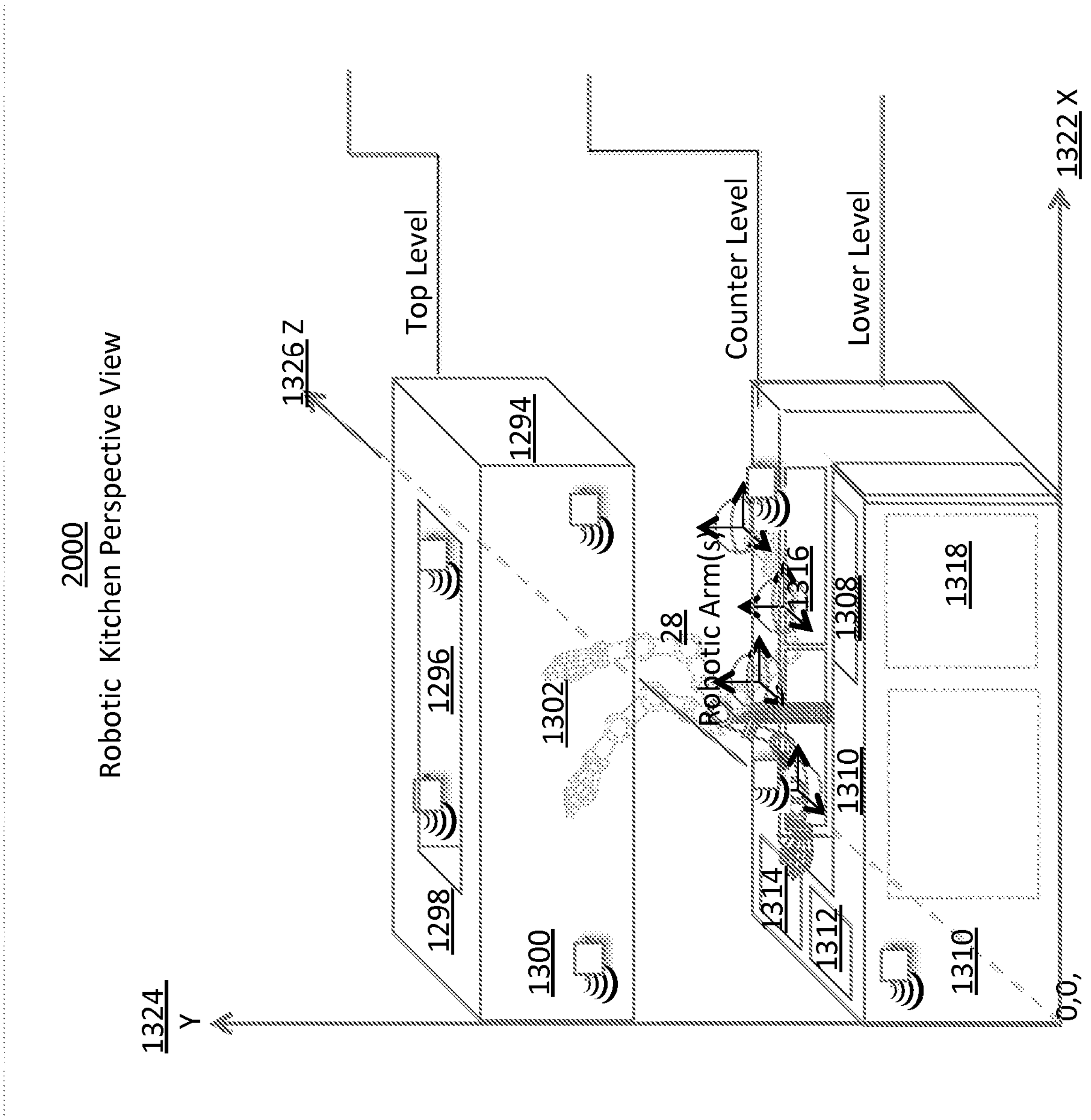
2000
Robotic Kitchen Perspective View
1326 Z
Top Level
Counter Level
Lower Level
1322 X
1324 Y
1294
1296
1298
1300
1302
28
Robotic Arm(s)
1316
1308
1310
1314
1312
1318
0,0,0

FIG. 84

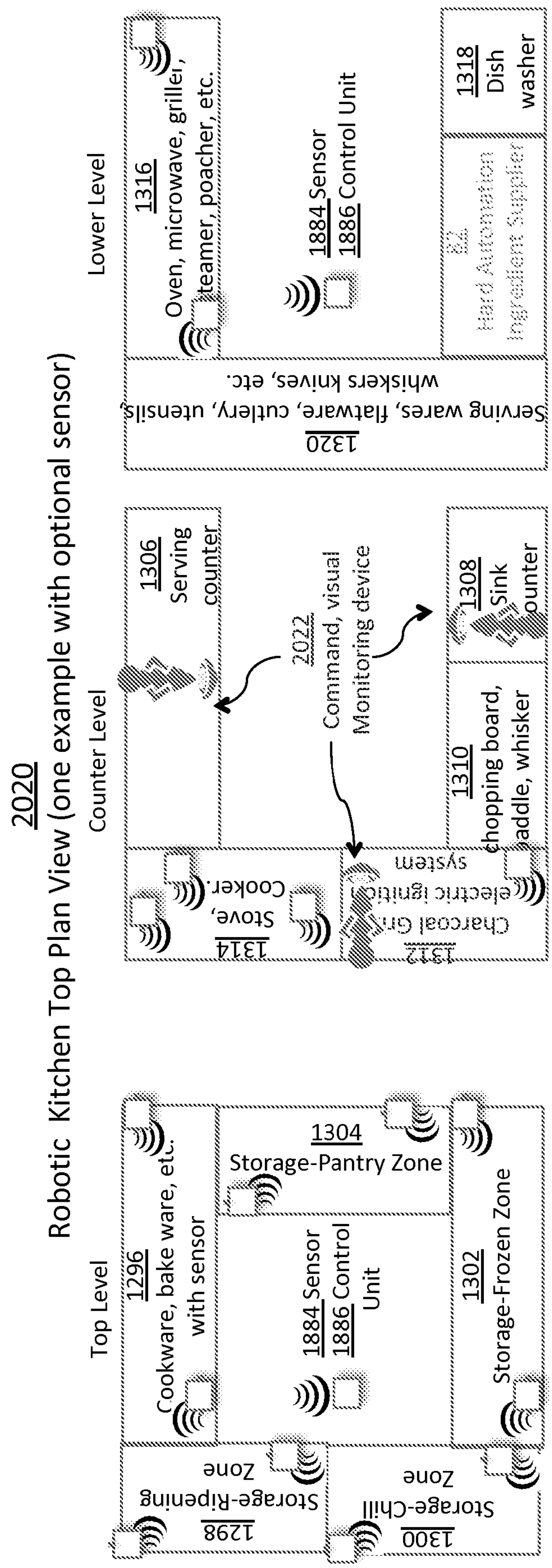
2020
Robotic Kitchen Top Plan View (one example with optional sensor)
Top Level
1296 Cookware, bake ware, etc. with sensor
1884 Sensor
1886 Control Unit
1304 Storage-Pantry Zone
1302 Storage-Frozen Zone
1298 Storage-Ripening Zone
1300 Storage-Chill Zone
Counter Level
1306 Serving counter
2022 Command, visual Monitoring device
1308 Sink counter
1310 chopping board, paddle, whisker
1314 Stove, Cooker.
1312 Charcoal Gri, electric ignition system
Lower Level
1316 Oven, microwave, griller, steamer, poacher, etc.
1884 Sensor
1886 Control Unit
82 Hard Automation Ingredient Supplier
1318 Dish washer
1320 Serving wares, flatware, cutlery, utensils, whiskers knives, etc.

FIG. 85

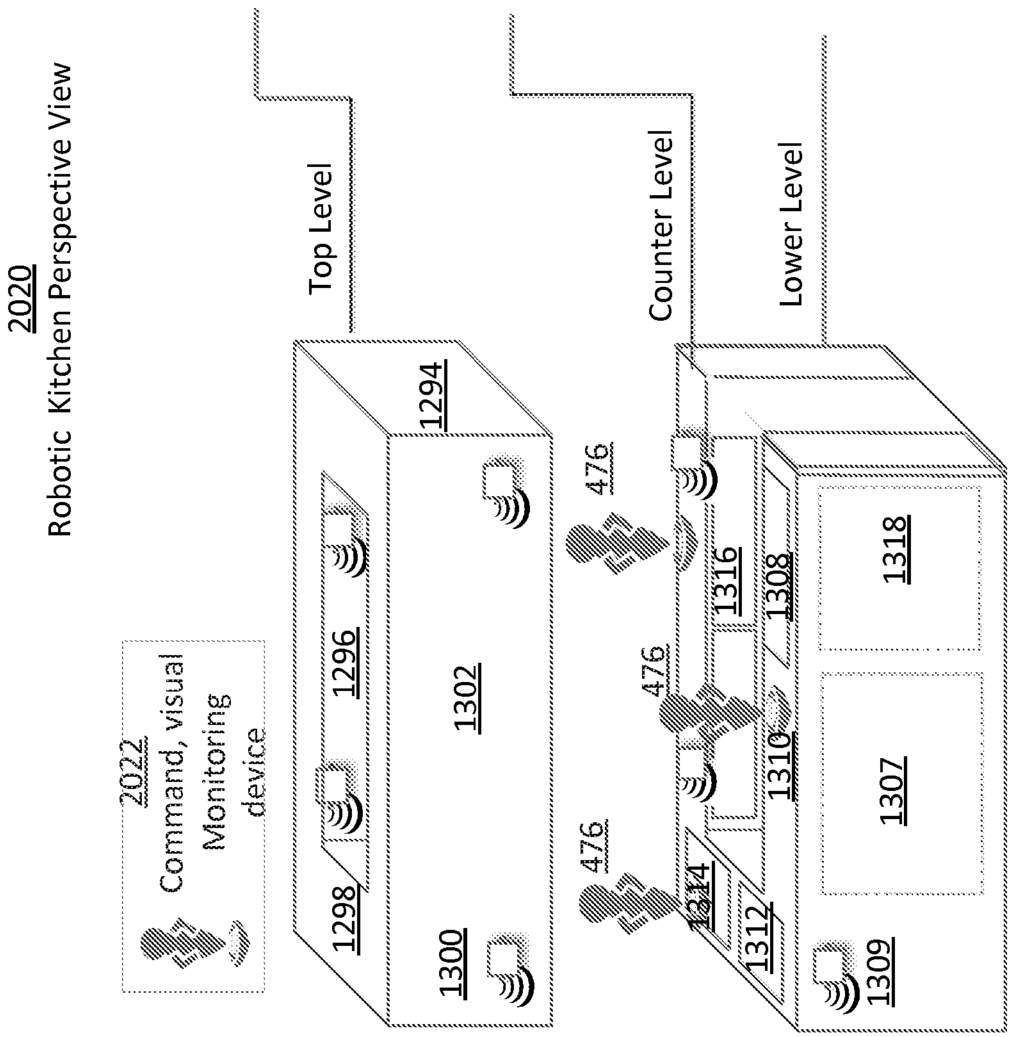
2020
Robotic Kitchen Perspective View
2022
Command, visual Monitoring device
Top Level
Counter Level
Lower Level
1294
1296
1298
1300
1302
476
476
476
1316
1308
1310
1314
1312
1309
1318
1307

FIG. 86

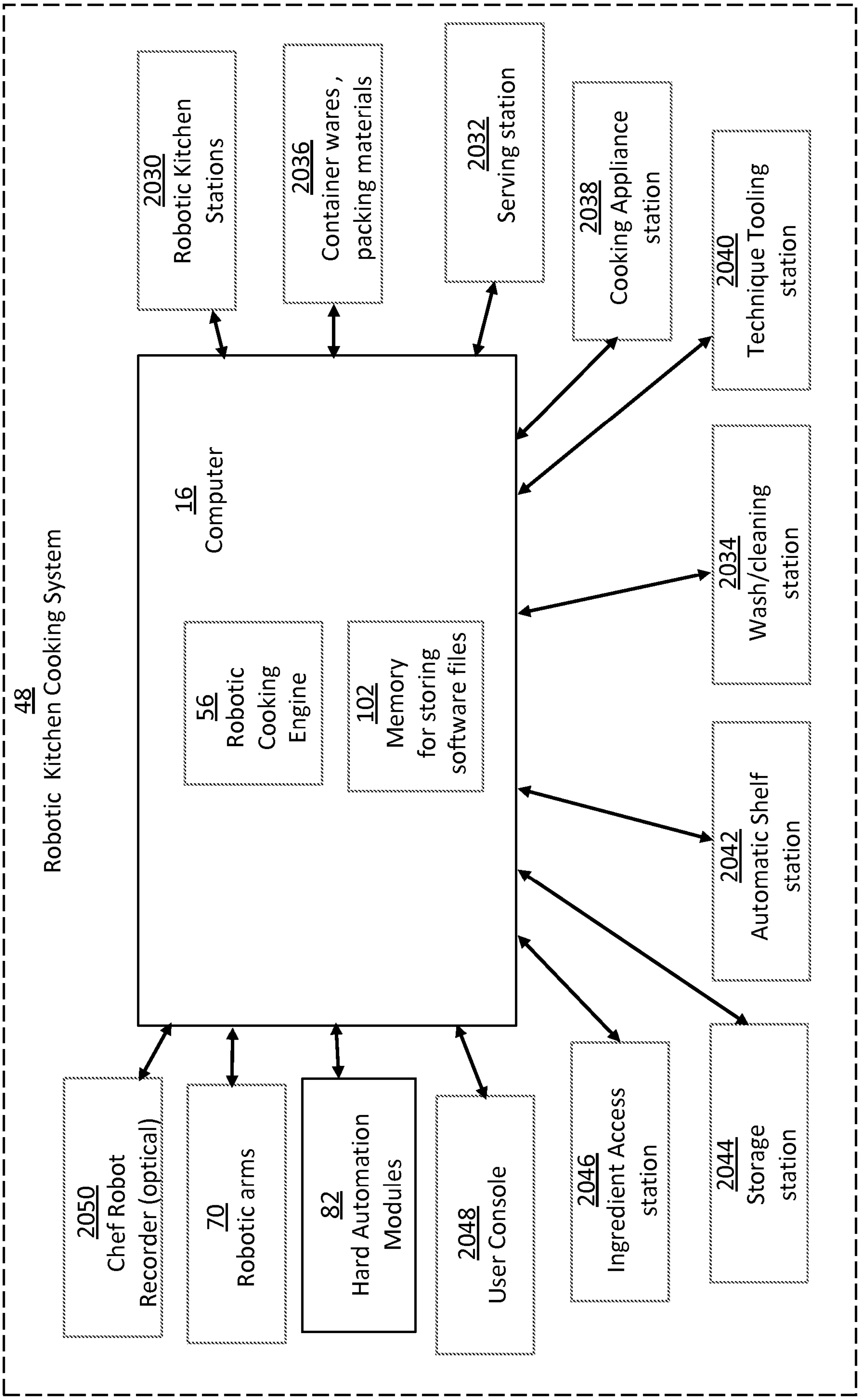

48
Robotic Kitchen Cooking System
16
Computer
56
Robotic Cooking Engine
102
Memory for storing software files
2030
Robotic Kitchen Stations
2036
Container wares , packing materials
2032
Serving station
2038
Cooking Appliance station
2040
Technique Tooling station
2034
Wash/cleaning station
2042
Automatic Shelf station
2044
Storage station
2046
Ingredient Access station
2048
User Console
82
Hard Automation Modules
70
Robotic arms
2050
Chef Robot Recorder (optical)


FIG. 87A

2060
Robotic Kitchen Cooking System Top (one example)
Plan View

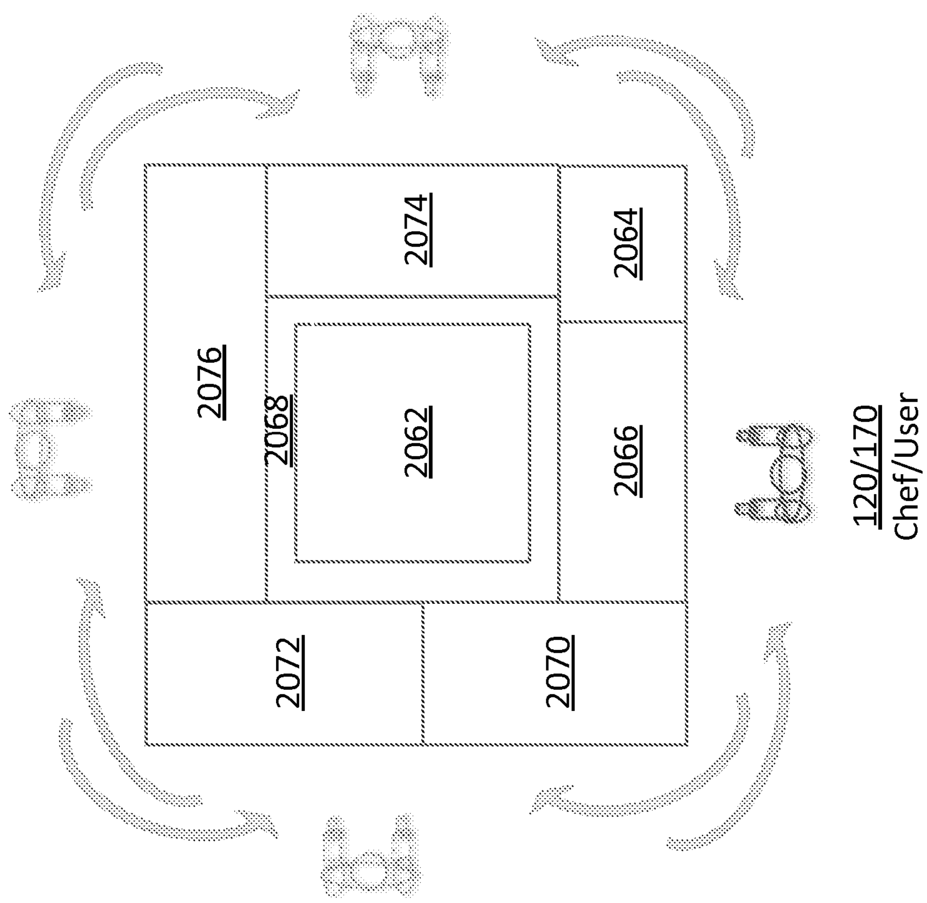


FIG. 87B

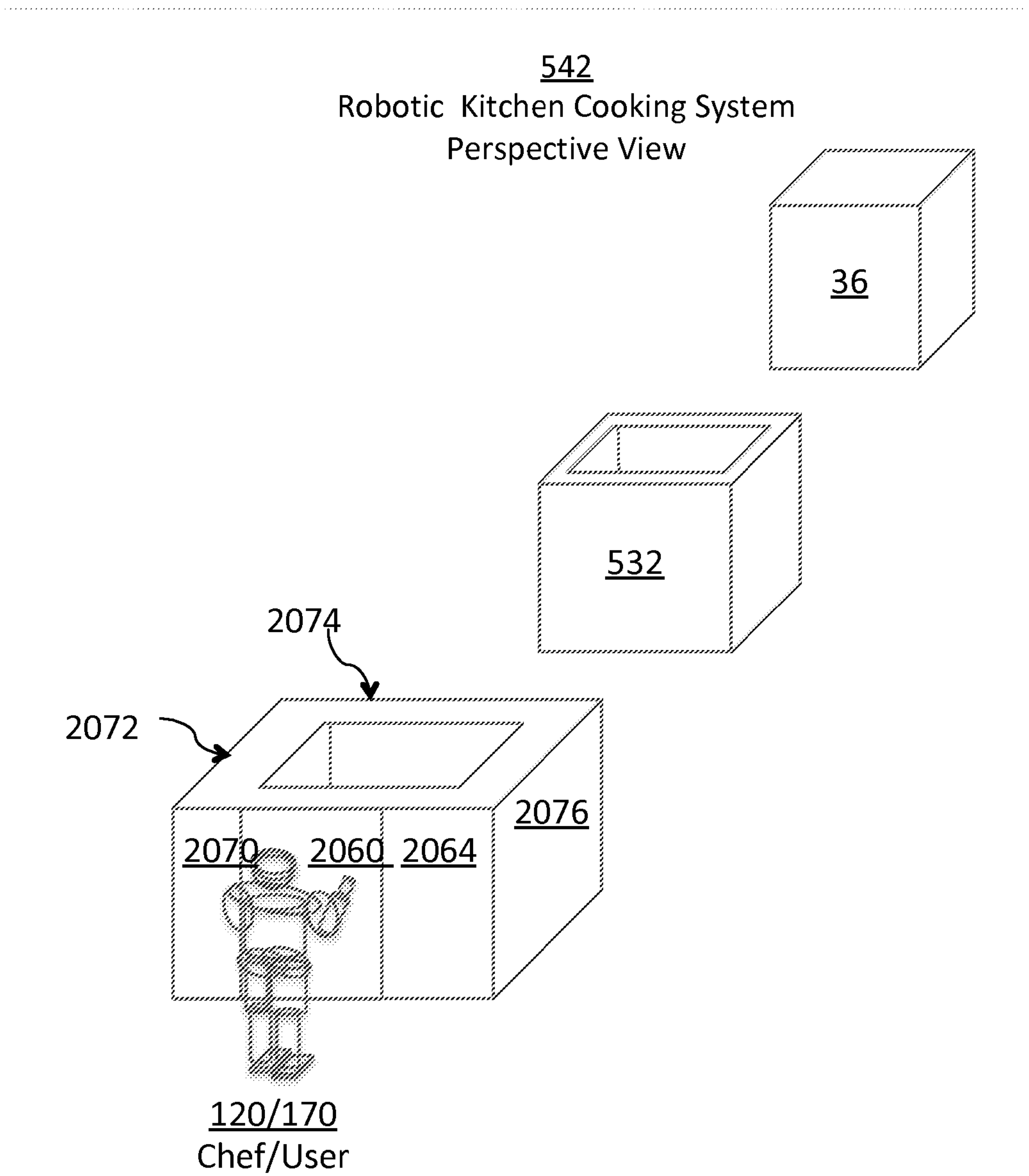
542
Robotic Kitchen Cooking System
Perspective View
36
532
2074
2072
2076
2070
2060
2064
120/170
Chef/User

FIG. 87C

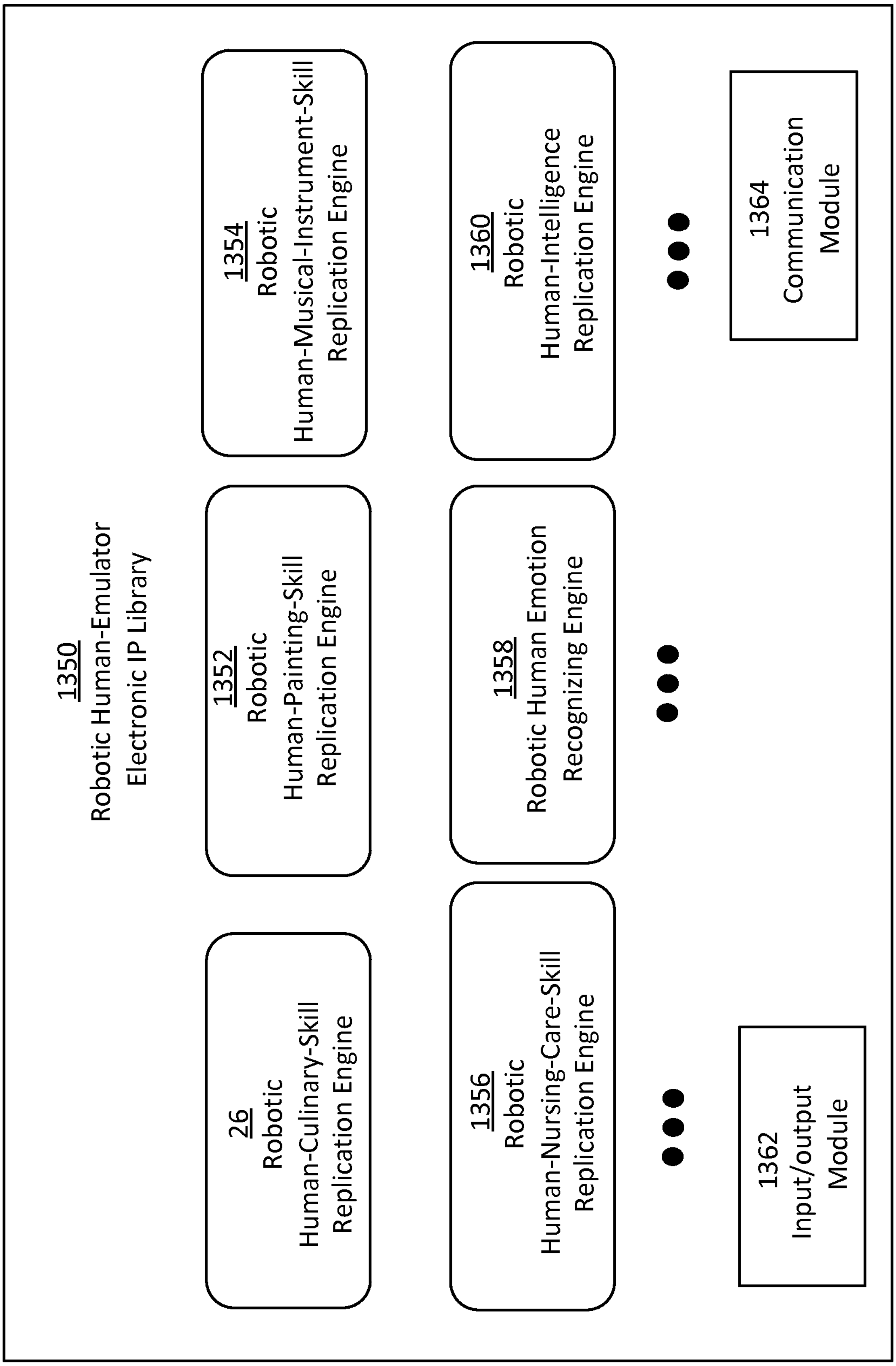
1350
Robotic Human-Emulator
Electronic IP Library
26
Robotic
Human-Culinary-Skill
Replication Engine
1352
Robotic
Human-Painting-Skill
Replication Engine
1354
Robotic
Human-Musical-Instrument-Skill
Replication Engine
1356
Robotic
Human-Nursing-Care-Skill
Replication Engine
1358
Robotic Human Emotion
Recognizing Engine
1360
Robotic
Human-Intelligence
Replication Engine
1362
Input/output
Module
1364
Communication
Module

FIG. 88

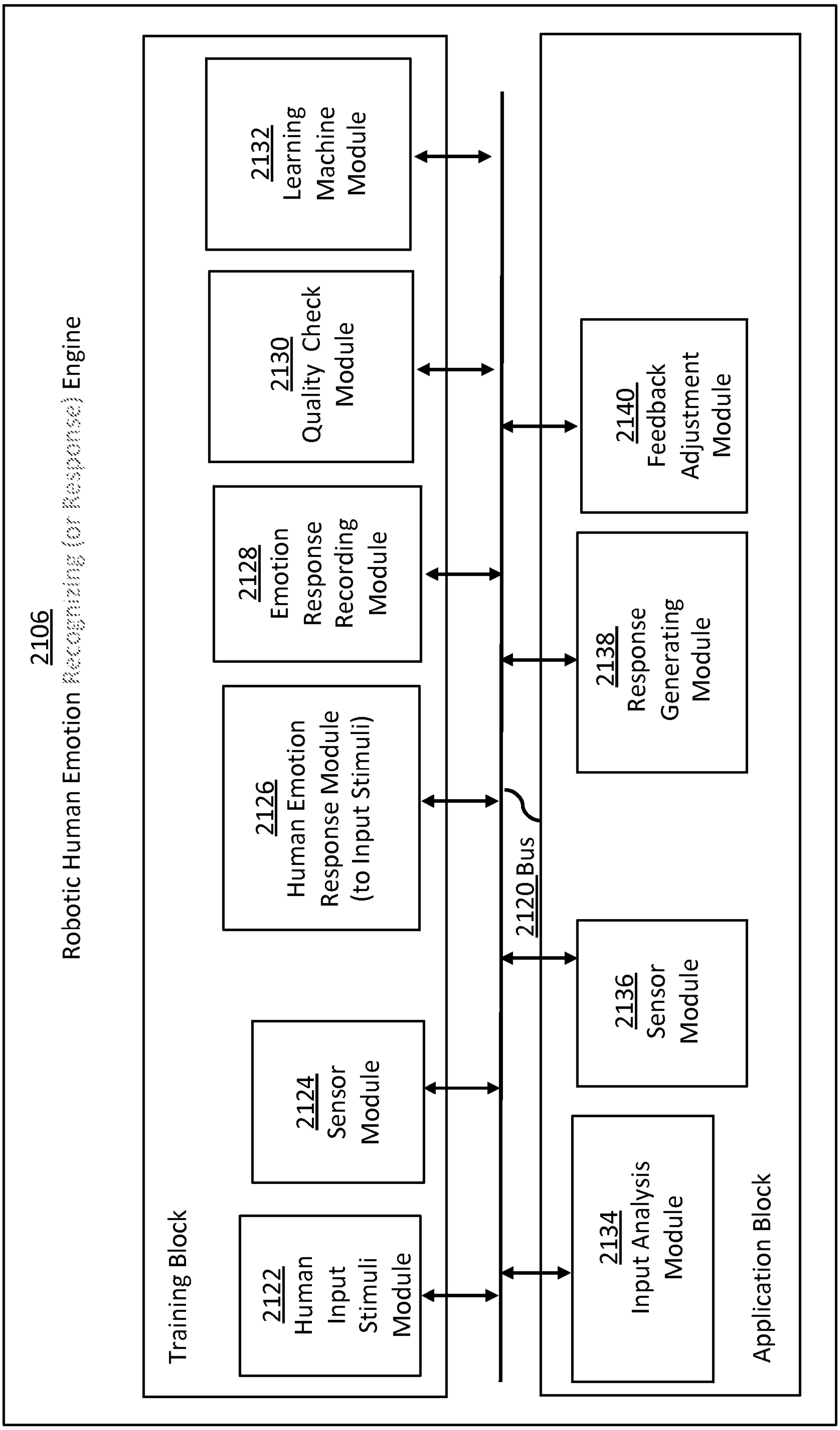
2106
Robotic Human Emotion Recognizing (or Response) Engine
Training Block
2122 Human Input Stimuli Module
2124 Sensor Module
2126 Human Emotion Response Module (to Input Stimuli)
2128 Emotion Response Recording Module
2130 Quality Check Module
2132 Learning Machine Module
2120 Bus
Application Block
2134 Input Analysis Module
2136 Sensor Module
2138 Response Generating Module
2140 Feedback Adjustment Module

FIG. 89

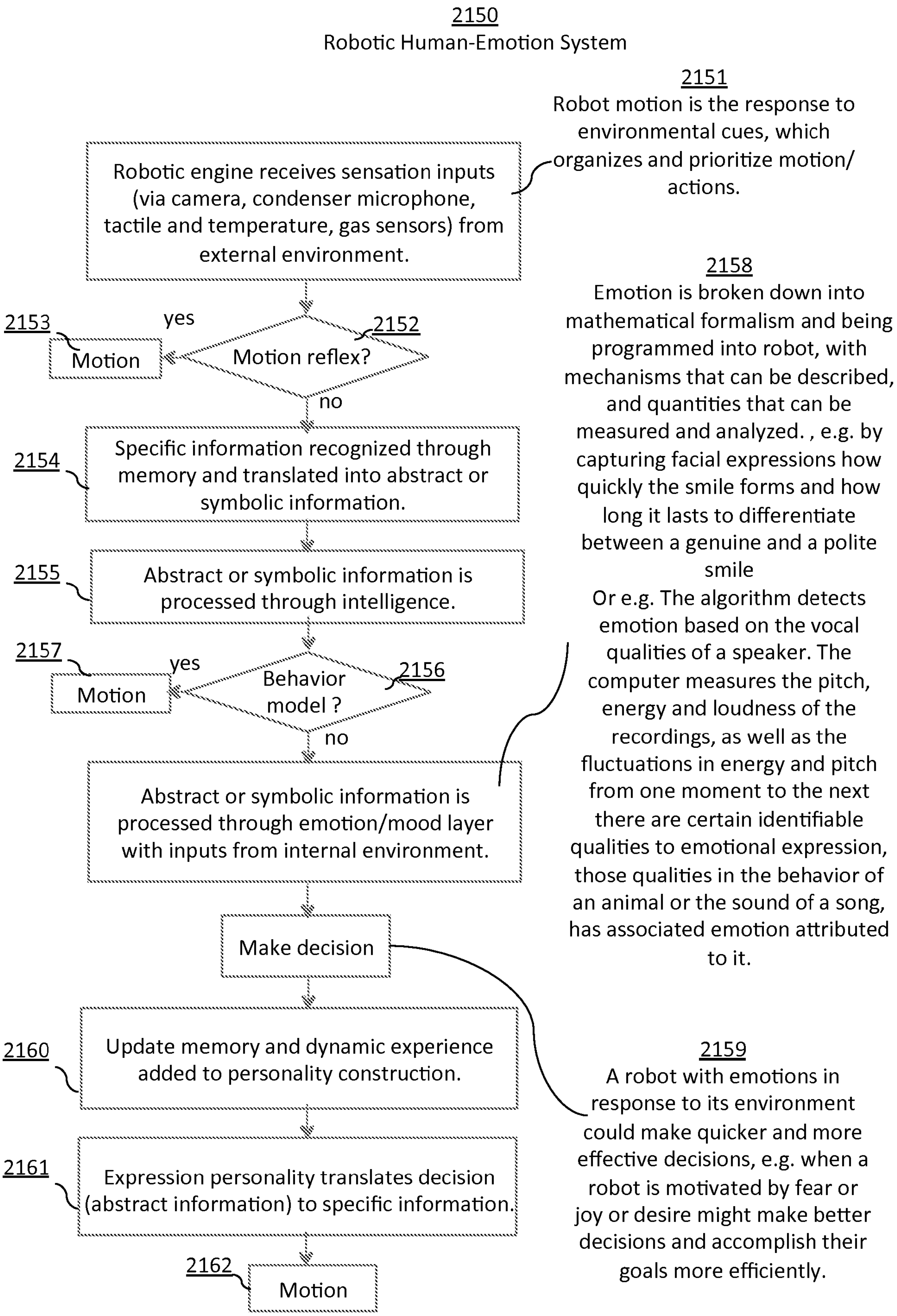
2150
Robotic Human-Emotion System
2151
Robot motion is the response to environmental cues, which organizes and prioritize motion/ actions.
Robotic engine receives sensation inputs (via camera, condenser microphone, tactile and temperature, gas sensors) from external environment.
2158
Emotion is broken down into mathematical formalism and being programmed into robot, with mechanisms that can be described, and quantities that can be measured and analyzed. , e.g. by capturing facial expressions how quickly the smile forms and how long it lasts to differentiate between a genuine and a polite smile
Or e.g. The algorithm detects emotion based on the vocal qualities of a speaker. The computer measures the pitch, energy and loudness of the recordings, as well as the fluctuations in energy and pitch from one moment to the next there are certain identifiable qualities to emotional expression, those qualities in the behavior of an animal or the sound of a song, has associated emotion attributed to it.
2153
Motion
yes
Motion reflex?
2152
no
2154
Specific information recognized through memory and translated into abstract or symbolic information.
2155
Abstract or symbolic information is processed through intelligence.
2157
Motion
yes
Behavior model ?
2156
no
Abstract or symbolic information is processed through emotion/mood layer with inputs from internal environment.
Make decision
2159
A robot with emotions in response to its environment could make quicker and more effective decisions, e.g. when a robot is motivated by fear or joy or desire might make better decisions and accomplish their goals more efficiently.
2160
Update memory and dynamic experience added to personality construction.
2161
Expression personality translates decision (abstract information) to specific information.
2162
Motion

FIG. 90

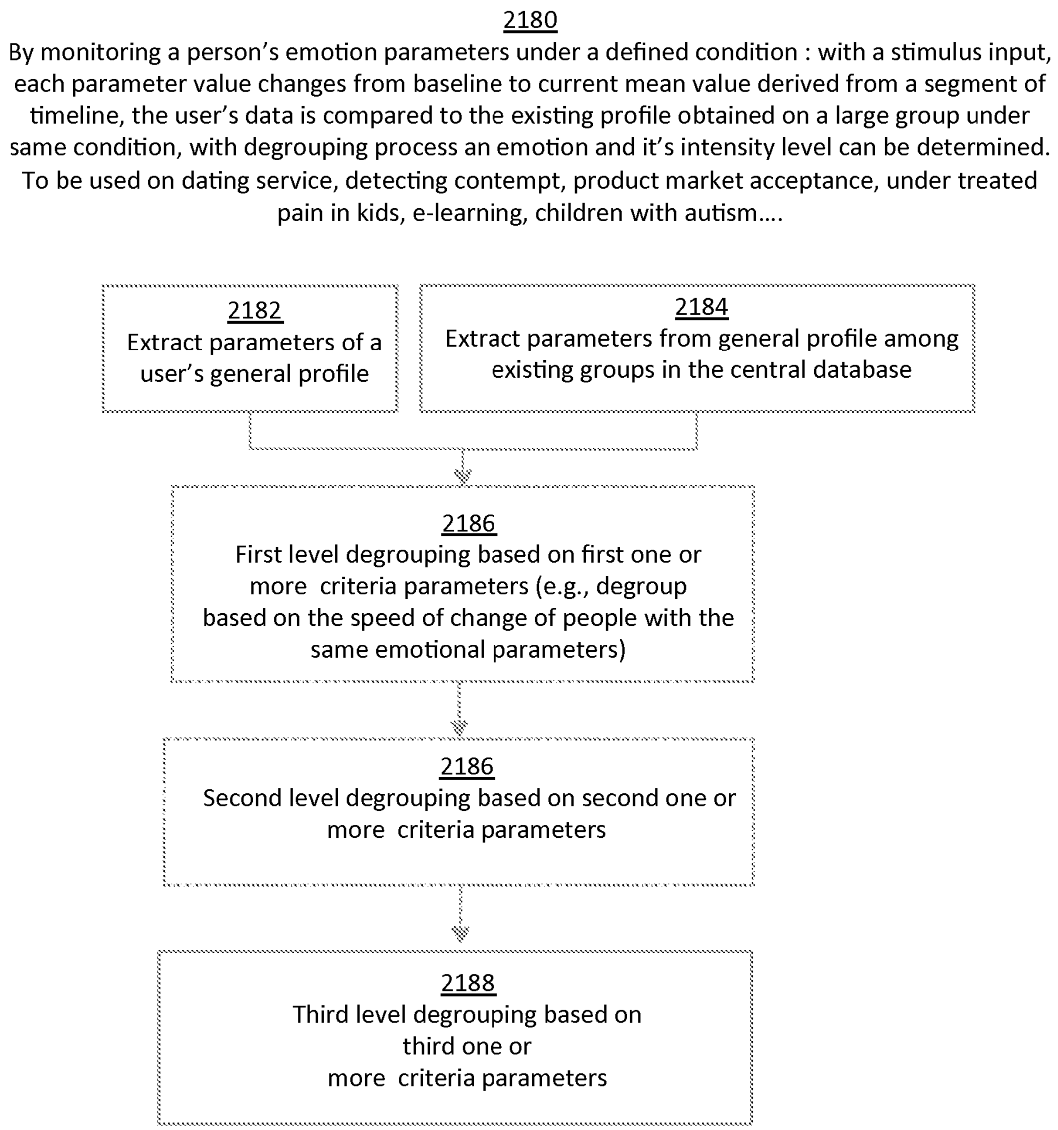


FIG. 91A
emotion profile application

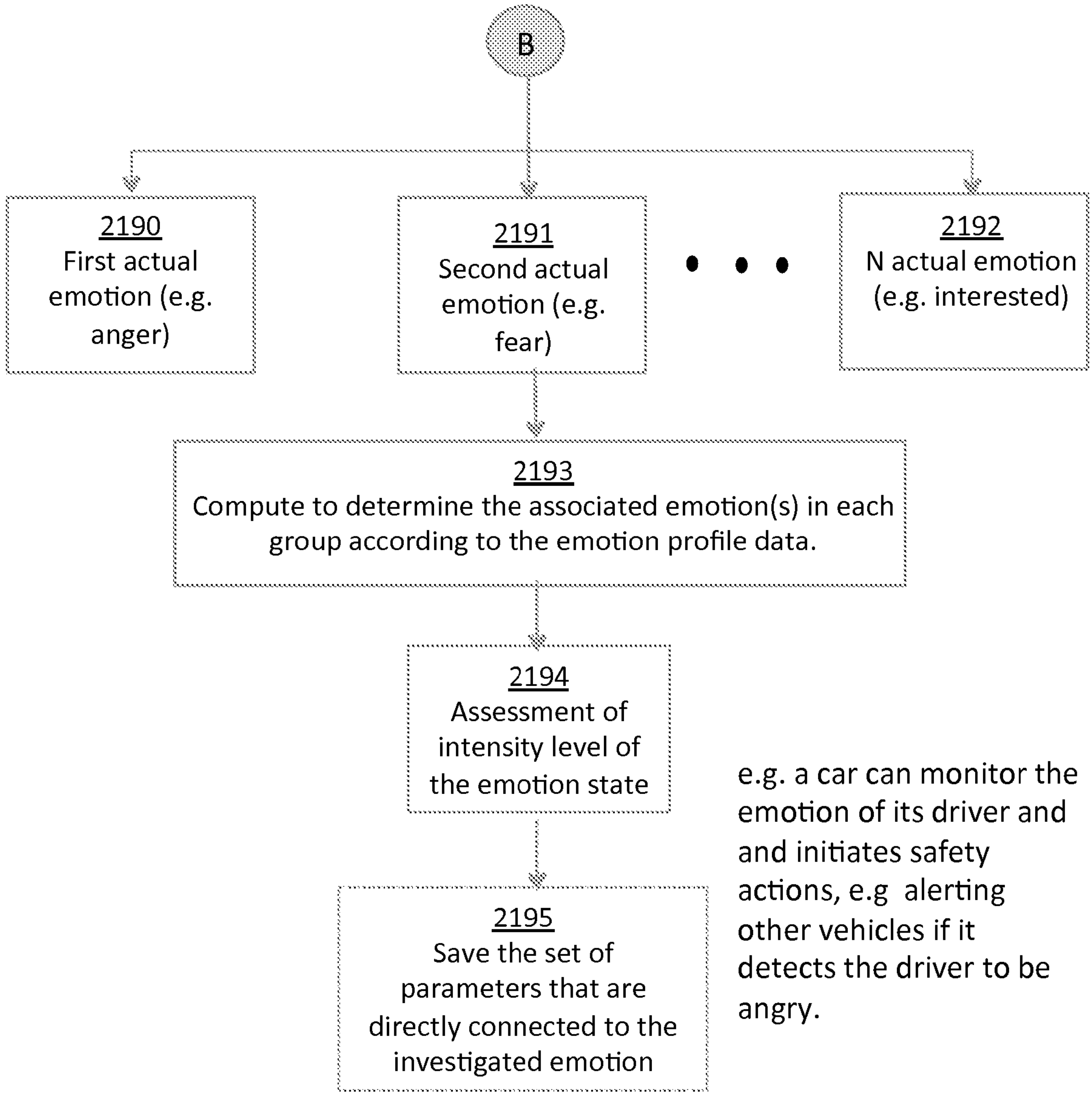


FIG. 91B
emotion profile application

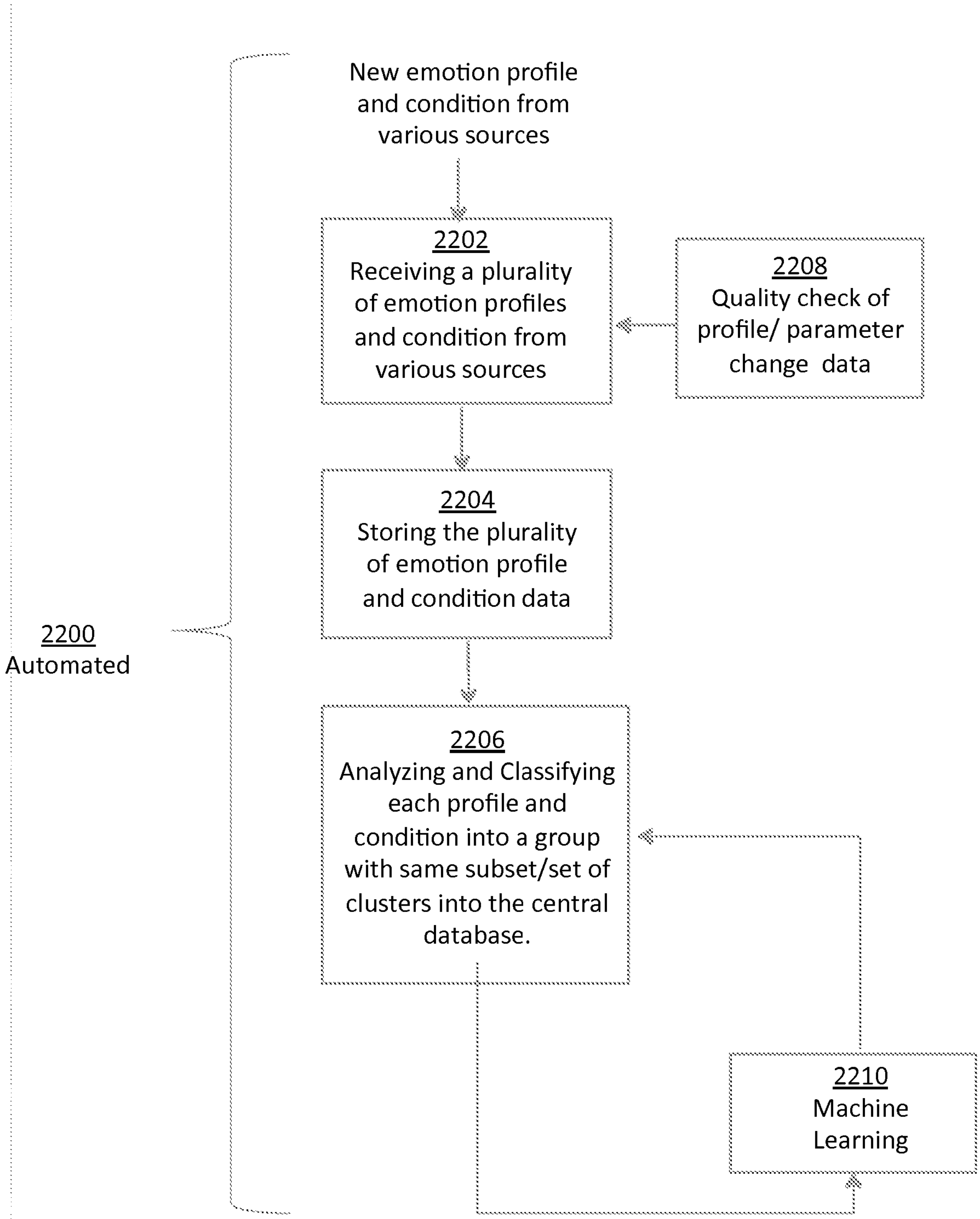


FIG. 91C
mass emotion profiles group developing and learning

2220
Emotion detection and analysis
A person's emotional state can be detected by monitoring and analyzing the person's physiological signs, under a defined condition with internal and/or external stimulus, how these physiological signs change over a certain timeline.. There are nine key physiological sign parameters to be measured in order to build a person's emotion profile

2221
Sets of hormones, which are secreted internally and trigger various biochemical pathways that cause certain effects. e.g. Adrenalin and insulin are hormones

2223
micro expression, which is a brief, involuntary facial expression shown on the face of humans according to emotions experienced.

2225
sweat(and goose bumps) e.g. a person's heart rate increases, face blushes and palms get sweaty in the state of being excited or nervous.

| | time line 1 | |
|---|---|---|
| | sets of emotion parameters | Score |
| 1 | sets of hormone | 10 |
| 2 | sets of pheromones | 9.5 |
| 3 | microexpression | 7 |
| 4 | heart rate | 8 |
| 5 | sweat | 8 |
| 6 | pupil dialator | 4.3 |
| 7 | reflex movement | 3.6 |
| 8 | body temperature | 2.5 |
| 9 | pressure | 6.2 |

| | line 2 |
|---|---|
| | Score |
| | 4.5 |
| | 4.2 |
| | 2.5 |
| | 1.9 |
| | 3.1 |
| | 2 |
| | 4.3 |
| | 3.6 |
| 9 pressure | 9.5 |

| | time line 40 | |
|---|---|---|
| | sets of emotion parameters | Score |
| 1 | sets of hormone | 3.6 |
| 2 | sets of pheromones | 2.5 |
| 3 | microexpression | 1.9 |
| 4 | heart rate | 3.8 |
| 5 | sweat | 3.5 |
| 6 | pupil dialator | 2 |
| 7 | reflex movement | 7 |
| 8 | body temperature | 5.5 |
| 9 | pressure | 3.8 |

2227

2228

2222
Sets of pheromones, which are secreted externally, and have an effect on another creature in similar ways. e.g. androstenol, androstenone and androstadienone

2224
heart rate (and blood vessel)

2226
pupil dilator(and iris sphincter, biliary muscle), e.g. pupil dilation for a short time in response to feelings of fear.

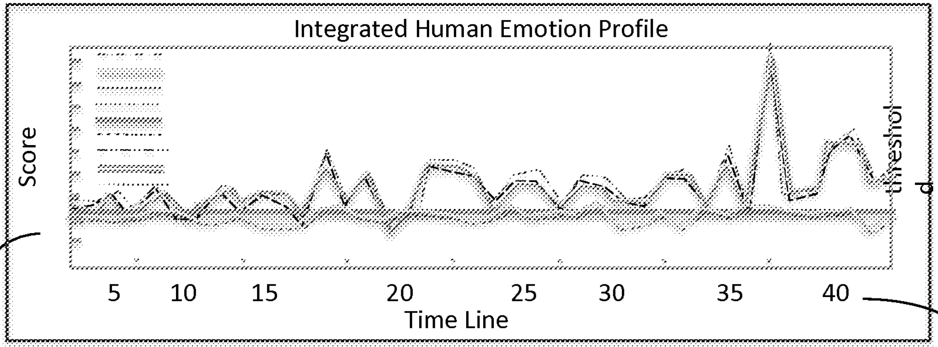


2229
reflex movement, which is the movement/action primarily controlled by the spinal arc, as a response to an external stimulus, e.g. jaw jerk reflex

2230
The analysis of parameter changes over a certain time line establish a person's integrated emotion profile.

2231
Time Line
(e.g. by hours, days, weeks...)

FIG. 92A

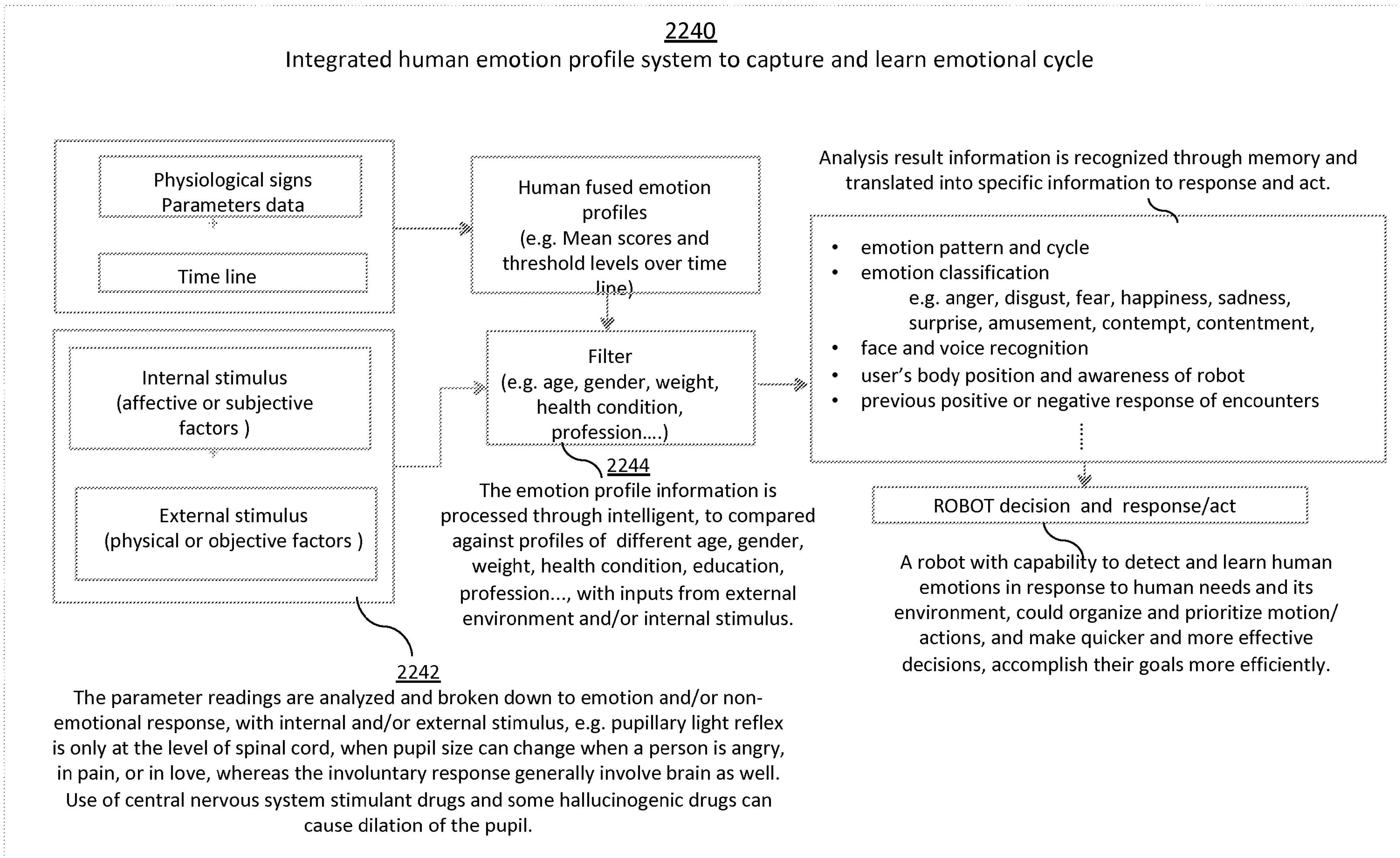
2240
Integrated human emotion profile system to capture and learn emotional cycle
Physiological signs Parameters data
Time line
Internal stimulus (affective or subjective factors )
External stimulus (physical or objective factors )
Human fused emotion profiles (e.g. Mean scores and threshold levels over time line)
Filter (e.g. age, gender, weight, health condition, profession....)
2244
The emotion profile information is processed through intelligent, to compared against profiles of different age, gender, weight, health condition, education, profession..., with inputs from external environment and/or internal stimulus.
Analysis result information is recognized through memory and translated into specific information to response and act.
• emotion pattern and cycle
• emotion classification
e.g. anger, disgust, fear, happiness, sadness, surprise, amusement, contempt, contentment,
• face and voice recognition
• user's body position and awareness of robot
• previous positive or negative response of encounters
ROBOT decision and response/act
A robot with capability to detect and learn human emotions in response to human needs and its environment, could organize and prioritize motion/ actions, and make quicker and more effective decisions, accomplish their goals more efficiently.
2242
The parameter readings are analyzed and broken down to emotion and/or non-emotional response, with internal and/or external stimulus, e.g. pupillary light reflex is only at the level of spinal cord, when pupil size can change when a person is angry, in pain, or in love, whereas the involuntary response generally involve brain as well. Use of central nervous system stimulant drugs and some hallucinogenic drugs can cause dilation of the pupil.

FIG. 92B

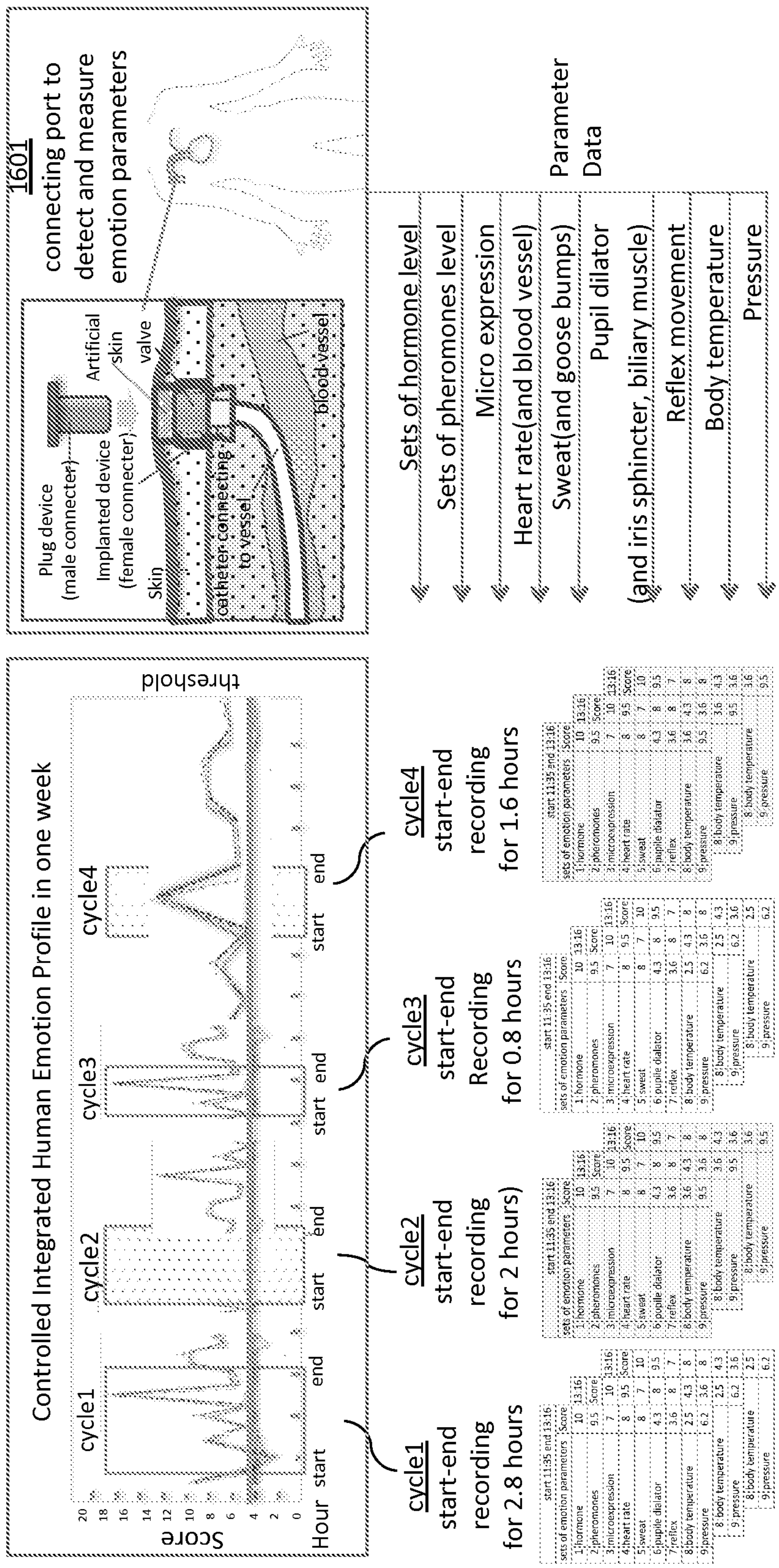


FIG. 93

personal emotion detection and recording using connecting port device

2230

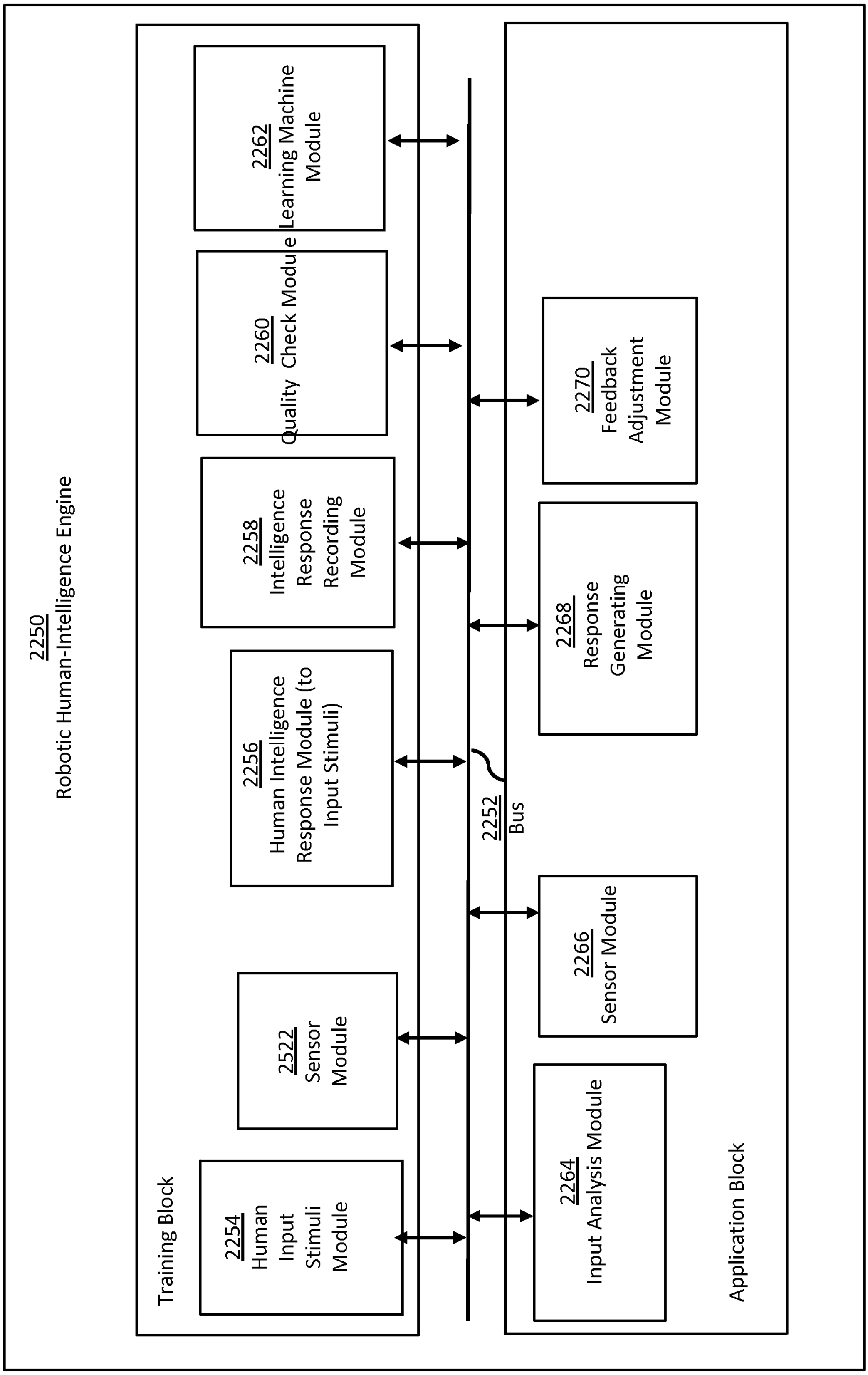
2250
Robotic Human-Intelligence Engine
Training Block
2254
Human Input Stimuli Module
2522
Sensor Module
2256
Human Intelligence Response Module (to Input Stimuli)
2258
Intelligence Response Recording Module
2260
Quality Check Module
2262
Learning Machine Module
2252
Bus
2264
Input Analysis Module
2266
Sensor Module
2268
Response Generating Module
2270
Feedback Adjustment Module
Application Block

FIG. 94A

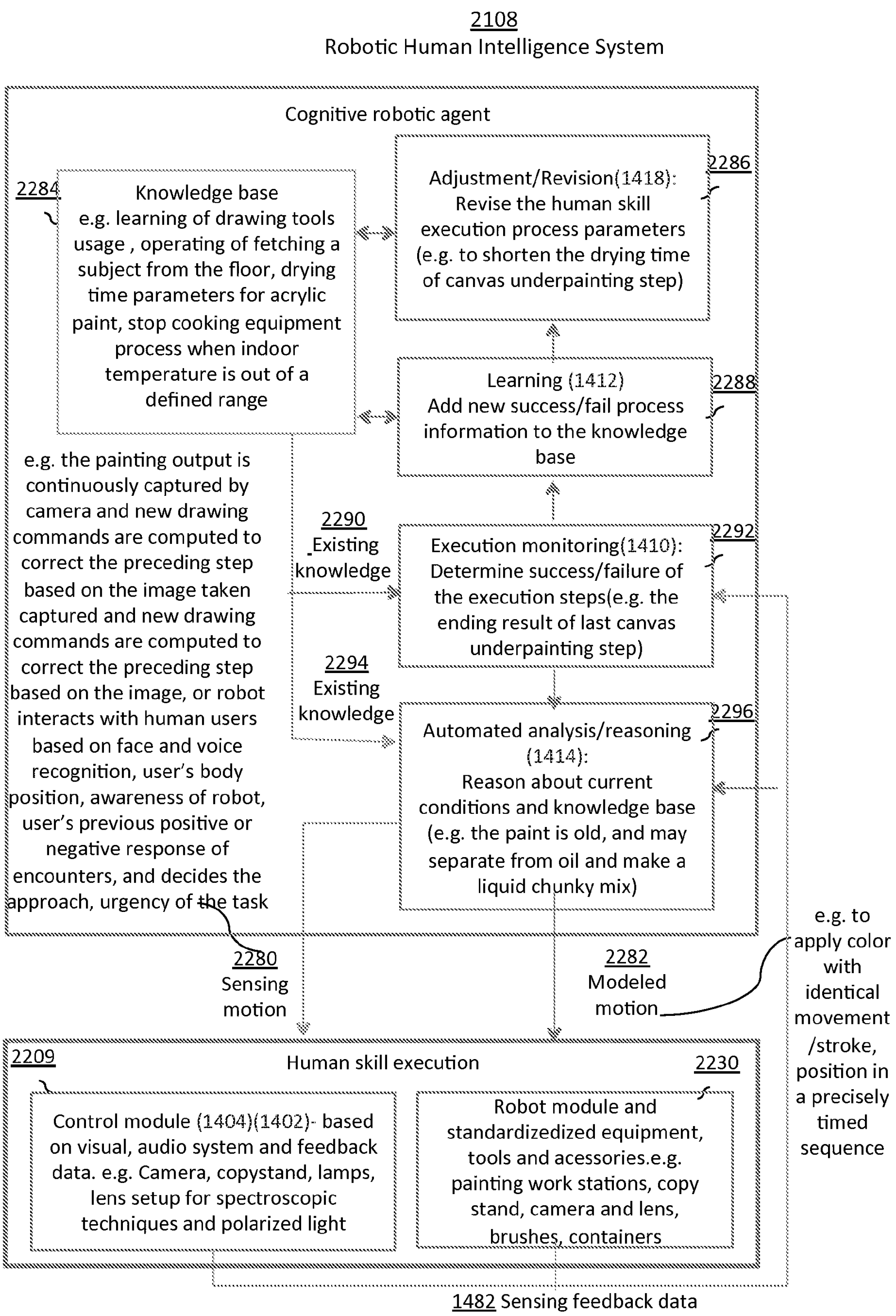

2108
Robotic Human Intelligence System
Cognitive robotic agent
2284
Knowledge base
e.g. learning of drawing tools usage , operating of fetching a subject from the floor, drying time parameters for acrylic paint, stop cooking equipment process when indoor temperature is out of a defined range
2286
Adjustment/Revision(1418): Revise the human skill execution process parameters (e.g. to shorten the drying time of canvas underpainting step)
2288
Learning (1412) Add new success/fail process information to the knowledge base
e.g. the painting output is continuously captured by camera and new drawing commands are computed to correct the preceding step based on the image taken captured and new drawing commands are computed to correct the preceding step based on the image, or robot interacts with human users based on face and voice recognition, user's body position, awareness of robot, user's previous positive or negative response of encounters, and decides the approach, urgency of the task
2290
Existing knowledge
2292
Execution monitoring(1410): Determine success/failure of the execution steps(e.g. the ending result of last canvas underpainting step)
2294
Existing knowledge
2296
Automated analysis/reasoning (1414): Reason about current conditions and knowledge base (e.g. the paint is old, and may separate from oil and make a liquid chunky mix)
2280
Sensing motion
2282
Modeled motion
e.g. to apply color with identical movement /stroke, position in a precisely timed sequence
2209
Human skill execution
2230
Control module (1404)(1402)- based on visual, audio system and feedback data. e.g. Camera, copystand, lamps, lens setup for spectroscopic techniques and polarized light
Robot module and standardizedized equipment, tools and acessories.e.g. painting work stations, copy stand, camera and lens, brushes, containers
1482 Sensing feedback data


FIG. 94B

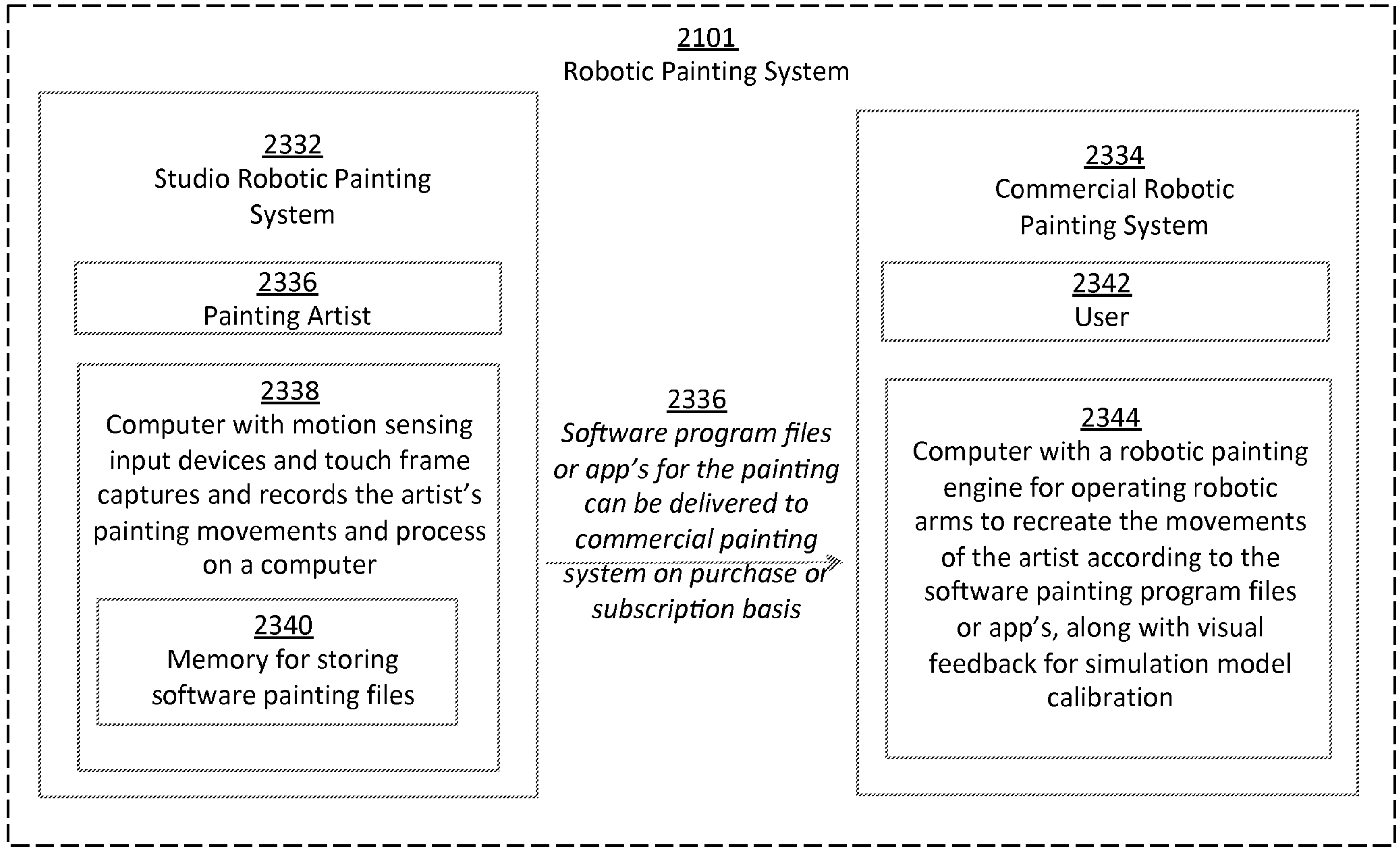
2101
Robotic Painting System
2332
Studio Robotic Painting System
2336
Painting Artist
2338
Computer with motion sensing input devices and touch frame captures and records the artist's painting movements and process on a computer
2340
Memory for storing software painting files
2336
Software program files or app's for the painting can be delivered to commercial painting system on purchase or subscription basis
2334
Commercial Robotic Painting System
2342
User
2344
Computer with a robotic painting engine for operating robotic arms to recreate the movements of the artist according to the software painting program files or app's, along with visual feedback for simulation model calibration

FIG. 95A

2350
Robotic Painting System

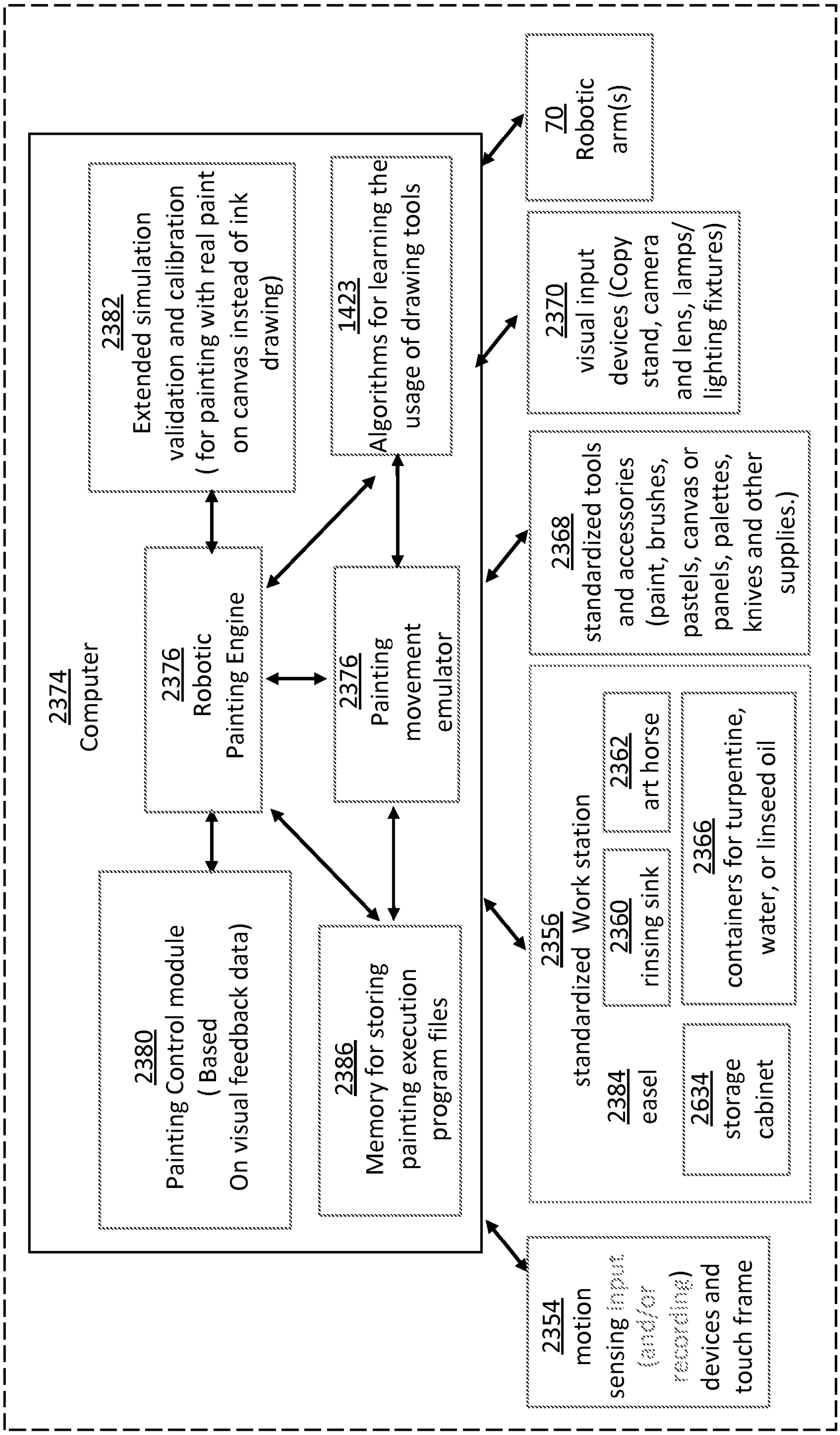


FIG. 95B

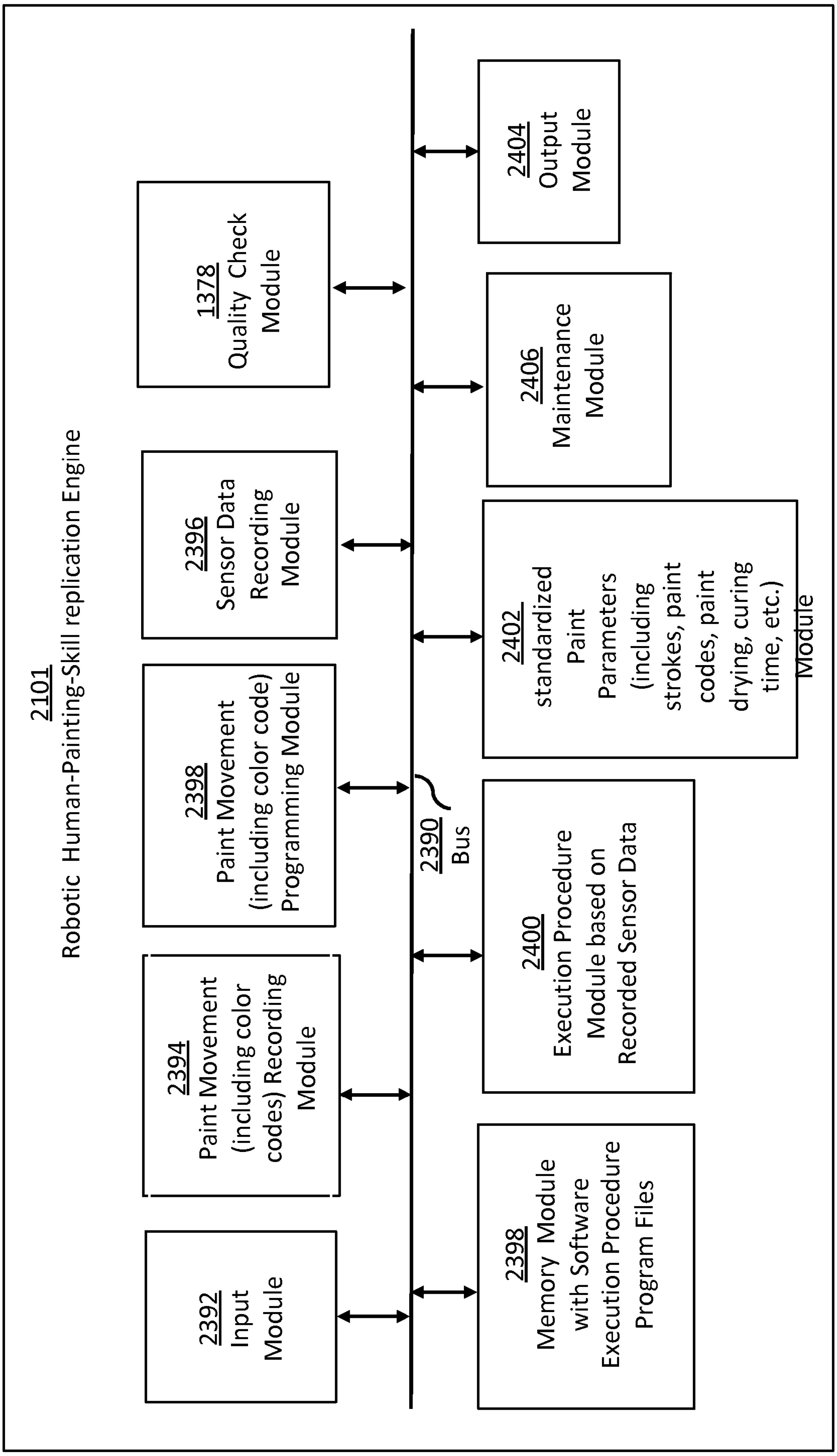
2101
Robotic Human-Painting-Skill replication Engine
2392 Input Module
2394 Paint Movement (including color codes) Recording Module
2398 Paint Movement (including color code) Programming Module
2396 Sensor Data Recording Module
1378 Quality Check Module
2390 Bus
2398 Memory Module with Software Execution Procedure Program Files
2400 Execution Procedure Module based on Recorded Sensor Data
2402 standardized Paint Parameters (including strokes, paint codes, paint drying, curing time, etc.) Module
2406 Maintenance Module
2404 Output Module

FIG. 95C

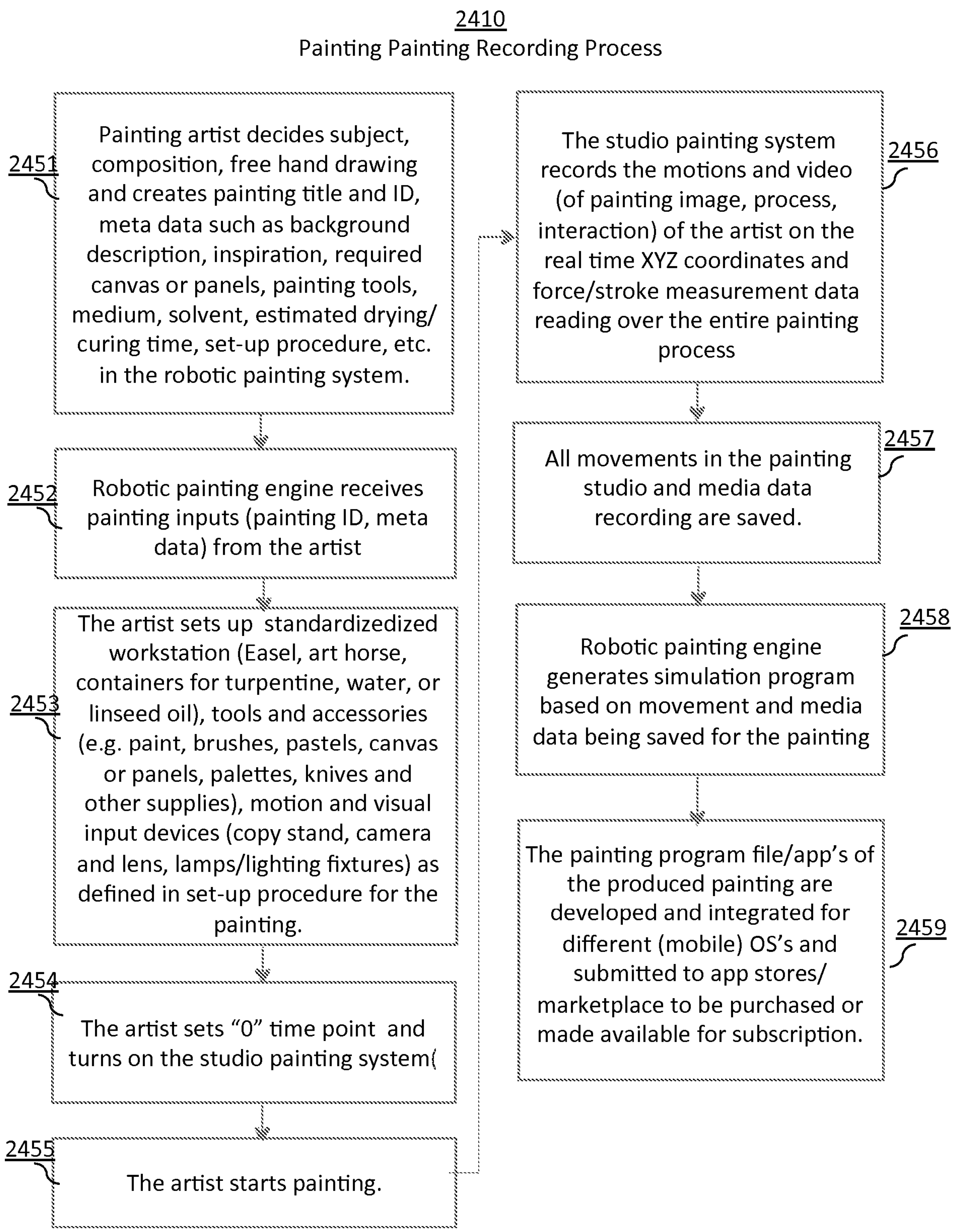
2410
Painting Painting Recording Process
2451
Painting artist decides subject, composition, free hand drawing and creates painting title and ID, meta data such as background description, inspiration, required canvas or panels, painting tools, medium, solvent, estimated drying/ curing time, set-up procedure, etc. in the robotic painting system.
2452
Robotic painting engine receives painting inputs (painting ID, meta data) from the artist
2453
The artist sets up standardizedized workstation (Easel, art horse, containers for turpentine, water, or linseed oil), tools and accessories (e.g. paint, brushes, pastels, canvas or panels, palettes, knives and other supplies), motion and visual input devices (copy stand, camera and lens, lamps/lighting fixtures) as defined in set-up procedure for the painting.
2454
The artist sets "0" time point and turns on the studio painting system(
2455
The artist starts painting.
2456
The studio painting system records the motions and video (of painting image, process, interaction) of the artist on the real time XYZ coordinates and force/stroke measurement data reading over the entire painting process
2457
All movements in the painting studio and media data recording are saved.
2458
Robotic painting engine generates simulation program based on movement and media data being saved for the painting
2459
The painting program file/app's of the produced painting are developed and integrated for different (mobile) OS's and submitted to app stores/ marketplace to be purchased or made available for subscription.

FIG. 96A

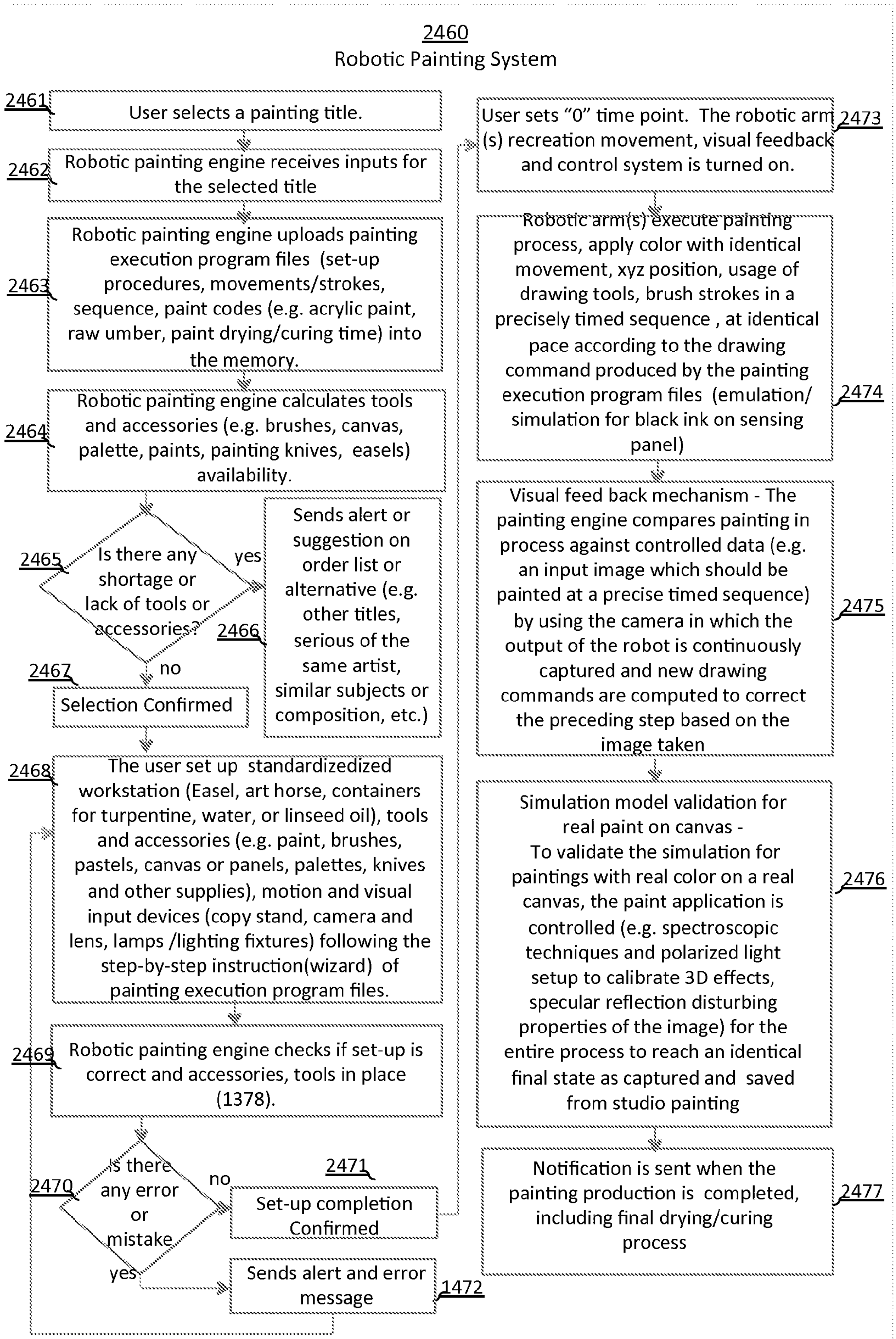
2460
Robotic Painting System
2461
User selects a painting title.
2462
Robotic painting engine receives inputs for the selected title
2463
Robotic painting engine uploads painting execution program files (set-up procedures, movements/strokes, sequence, paint codes (e.g. acrylic paint, raw umber, paint drying/curing time) into the memory.
2464
Robotic painting engine calculates tools and accessories (e.g. brushes, canvas, palette, paints, painting knives, easels) availability.
2465
Is there any shortage or lack of tools or accessories?
yes
2466
Sends alert or suggestion on order list or alternative (e.g. other titles, serious of the same artist, similar subjects or composition, etc.)
2467
no
Selection Confirmed
2468
The user set up standardizedized workstation (Easel, art horse, containers for turpentine, water, or linseed oil), tools and accessories (e.g. paint, brushes, pastels, canvas or panels, palettes, knives and other supplies), motion and visual input devices (copy stand, camera and lens, lamps /lighting fixtures) following the step-by-step instruction(wizard) of painting execution program files.
2469
Robotic painting engine checks if set-up is correct and accessories, tools in place (1378).
2470
Is there any error or mistake
no
2471
Set-up completion Confirmed
yes
Sends alert and error message
1472
2473
User sets "0" time point. The robotic arm (s) recreation movement, visual feedback and control system is turned on.
2474
Robotic arm(s) execute painting process, apply color with identical movement, xyz position, usage of drawing tools, brush strokes in a precisely timed sequence , at identical pace according to the drawing command produced by the painting execution program files (emulation/ simulation for black ink on sensing panel)
2475
Visual feed back mechanism - The painting engine compares painting in process against controlled data (e.g. an input image which should be painted at a precise timed sequence) by using the camera in which the output of the robot is continuously captured and new drawing commands are computed to correct the preceding step based on the image taken
2476
Simulation model validation for real paint on canvas -
To validate the simulation for paintings with real color on a real canvas, the paint application is controlled (e.g. spectroscopic techniques and polarized light setup to calibrate 3D effects, specular reflection disturbing properties of the image) for the entire process to reach an identical final state as captured and saved from studio painting
2477
Notification is sent when the painting production is completed, including final drying/curing process

FIG. 96B

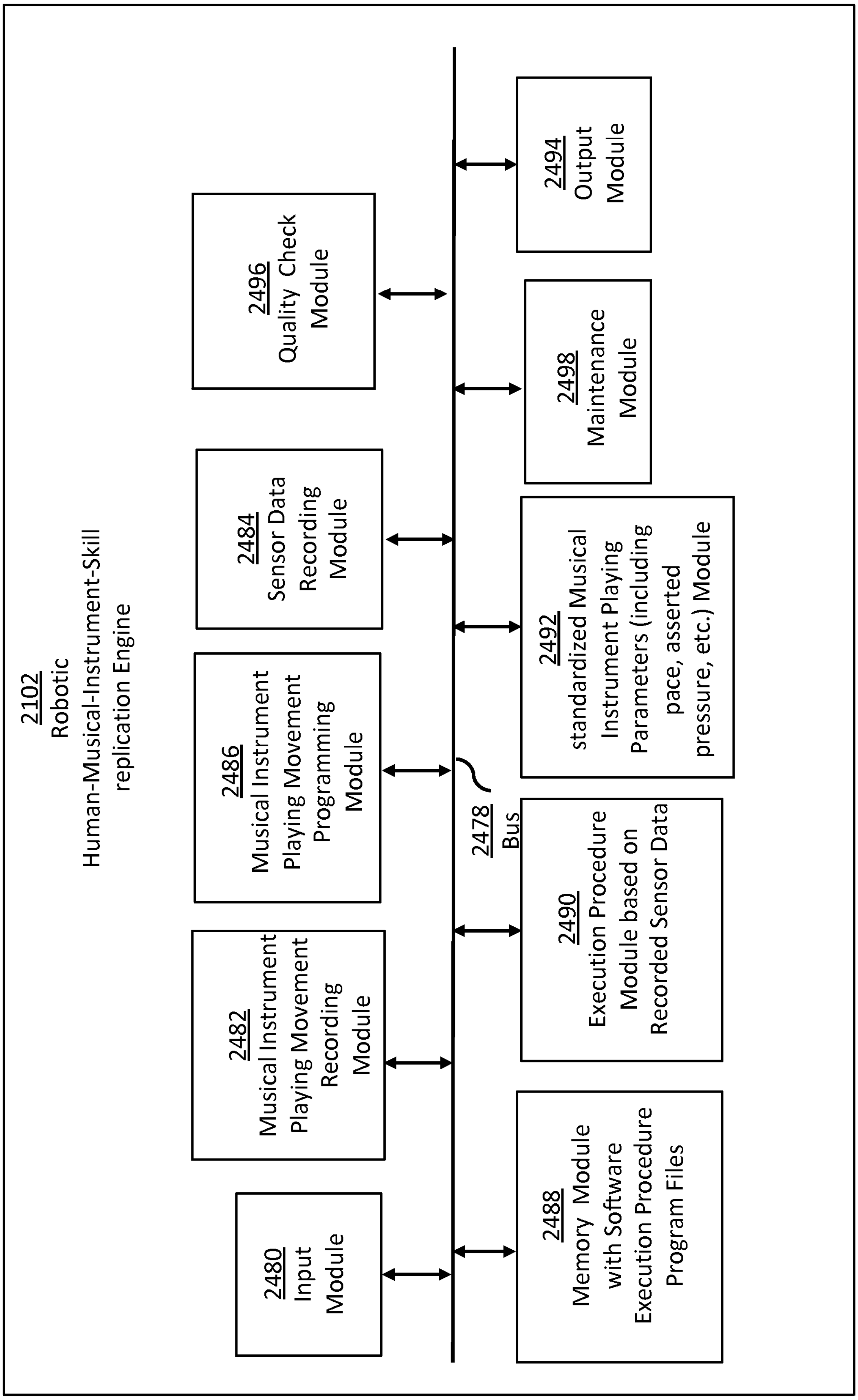
2102 Robotic Human-Musical-Instrument-Skill replication Engine
2496 Quality Check Module
2484 Sensor Data Recording Module
2486 Musical Instrument Playing Movement Programming Module
2482 Musical Instrument Playing Movement Recording Module
2480 Input Module
2478 Bus
2494 Output Module
2498 Maintenance Module
2492 standardized Musical Instrument Playing Parameters (including pace, asserted pressure, etc.) Module
2490 Execution Procedure Module based on Recorded Sensor Data
2488 Memory Module with Software Execution Procedure Program Files

FIG. 97A

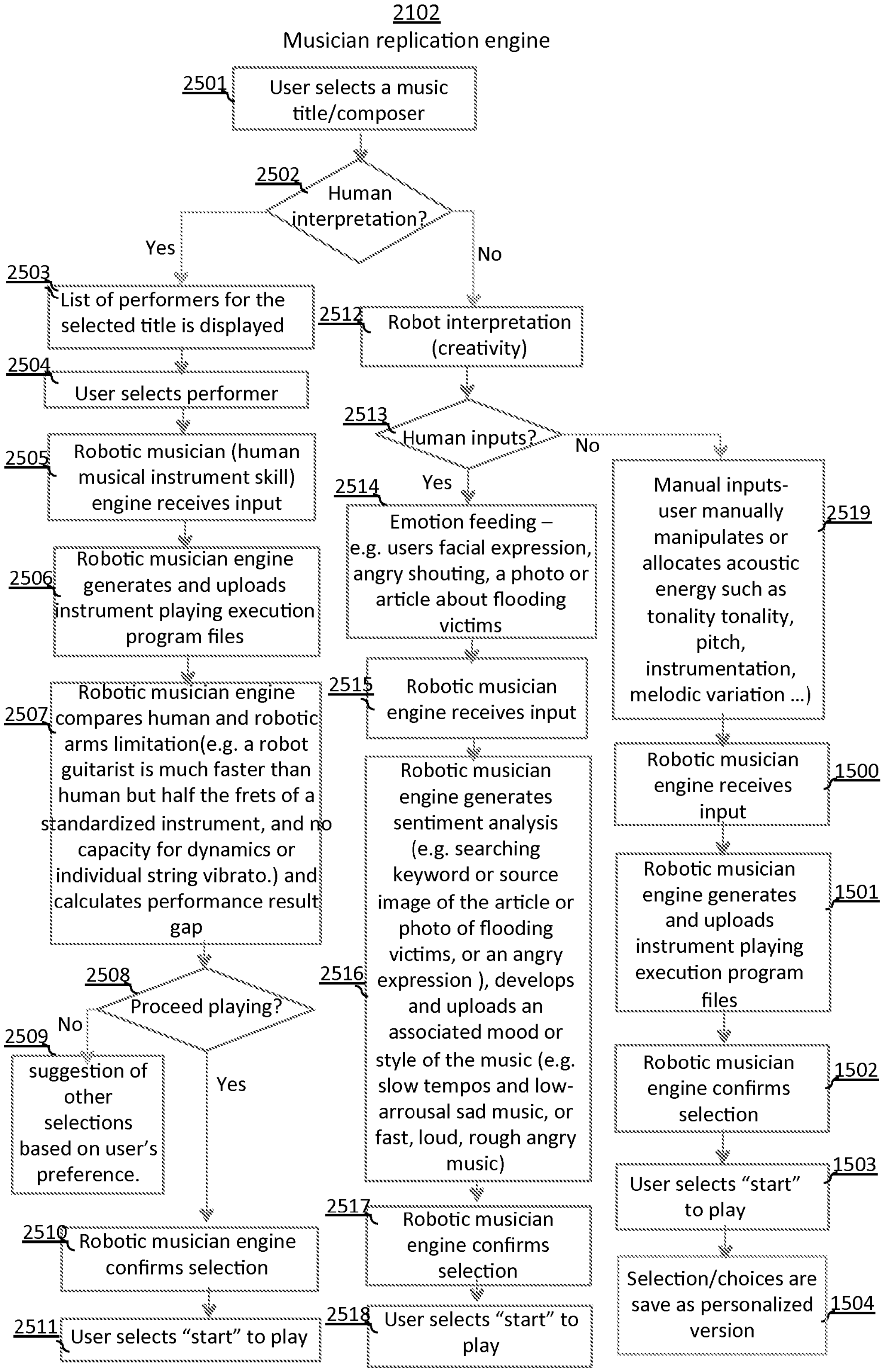
2102
Musician replication engine
2501
User selects a music title/composer
2502
Human interpretation?
Yes
No
2503
List of performers for the selected title is displayed
2504
User selects performer
2505
Robotic musician (human musical instrument skill) engine receives input
2506
Robotic musician engine generates and uploads instrument playing execution program files
2507
Robotic musician engine compares human and robotic arms limitation(e.g. a robot guitarist is much faster than human but half the frets of a standardized instrument, and no capacity for dynamics or individual string vibrato.) and calculates performance result gap
2508
Proceed playing?
No
Yes
2509
suggestion of other selections based on user's preference.
2510
Robotic musician engine confirms selection
2511
User selects "start" to play
2512
Robot interpretation (creativity)
2513
Human inputs?
Yes
No
2514
Emotion feeding – e.g. users facial expression, angry shouting, a photo or article about flooding victims
2515
Robotic musician engine receives input
2516
Robotic musician engine generates sentiment analysis (e.g. searching keyword or source image of the article or photo of flooding victims, or an angry expression ), develops and uploads an associated mood or style of the music (e.g. slow tempos and low-arrousal sad music, or fast, loud, rough angry music)
2517
Robotic musician engine confirms selection
2518
User selects "start" to play
2519
Manual inputs- user manually manipulates or allocates acoustic energy such as tonality tonality, pitch, instrumentation, melodic variation ...)
1500
Robotic musician engine receives input
1501
Robotic musician engine generates and uploads instrument playing execution program files
1502
Robotic musician engine confirms selection
1503
User selects "start" to play
1504
Selection/choices are save as personalized version

FIG. 97B

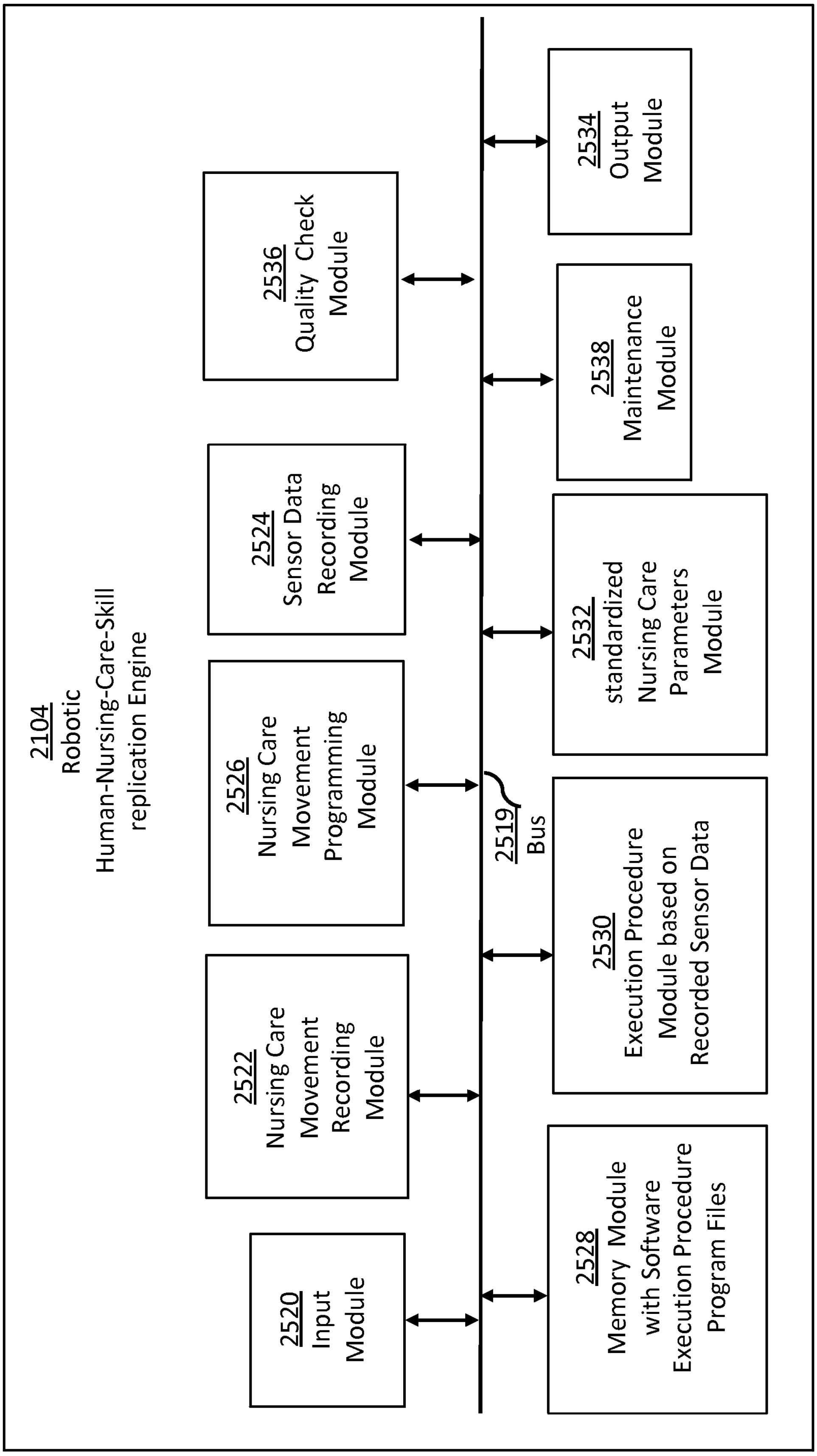
2104
Robotic
Human-Nursing-Care-Skill
replication Engine
2520
Input
Module
2522
Nursing Care
Movement
Recording
Module
2526
Nursing Care
Movement
Programming
Module
2524
Sensor Data
Recording
Module
2536
Quality Check
Module
2519
Bus
2528
Memory Module
with Software
Execution Procedure
Program Files
2530
Execution Procedure
Module based on
Recorded Sensor Data
2532
standardized
Nursing Care
Parameters
Module
2538
Maintenance
Module
2534
Output
Module

FIG. 98

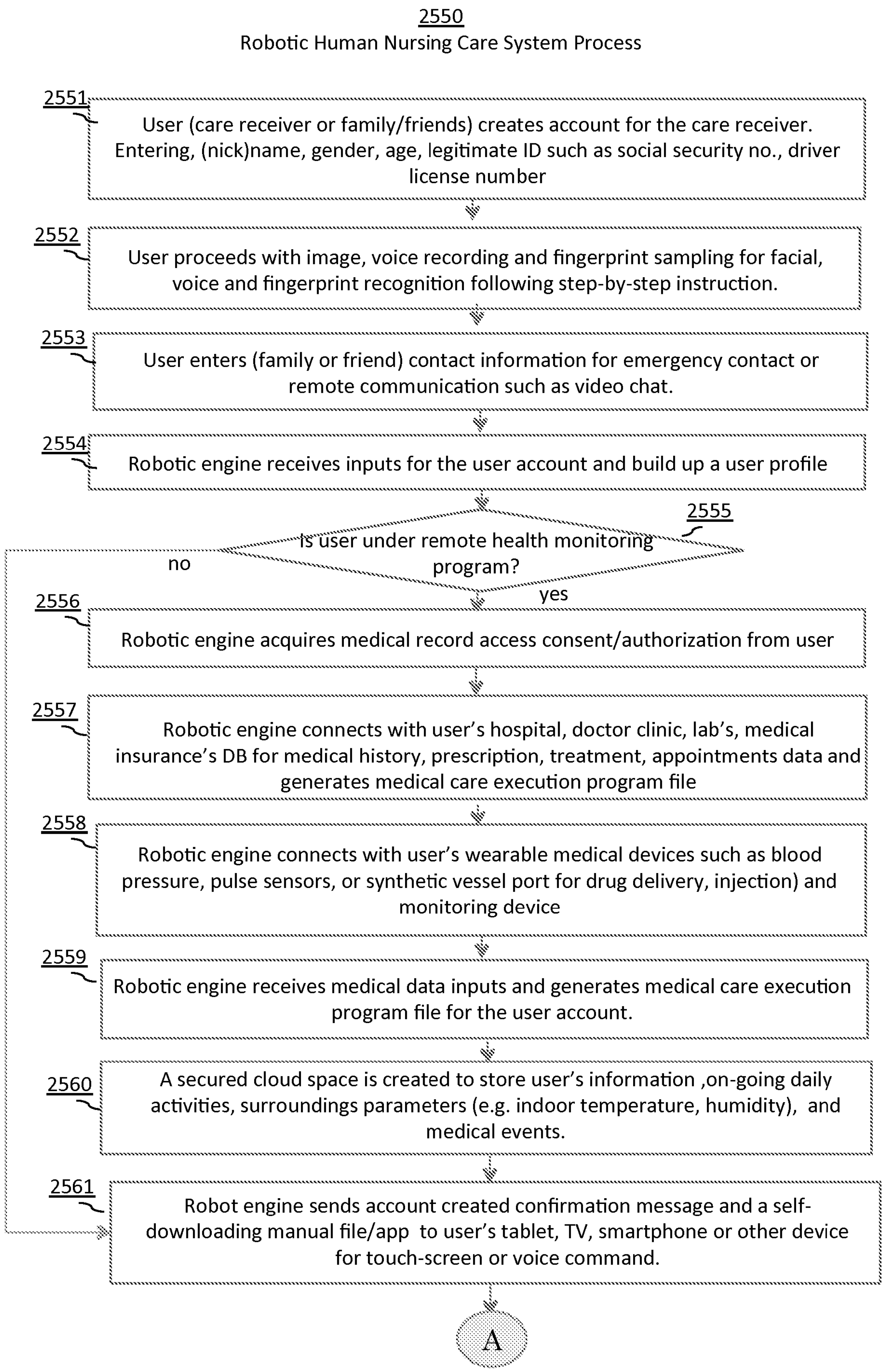
2550
Robotic Human Nursing Care System Process
2551
User (care receiver or family/friends) creates account for the care receiver. Entering, (nick)name, gender, age, legitimate ID such as social security no., driver license number
2552
User proceeds with image, voice recording and fingerprint sampling for facial, voice and fingerprint recognition following step-by-step instruction.
2553
User enters (family or friend) contact information for emergency contact or remote communication such as video chat.
2554
Robotic engine receives inputs for the user account and build up a user profile
2555
Is user under remote health monitoring program?
no
yes
2556
Robotic engine acquires medical record access consent/authorization from user
2557
Robotic engine connects with user's hospital, doctor clinic, lab's, medical insurance's DB for medical history, prescription, treatment, appointments data and generates medical care execution program file
2558
Robotic engine connects with user's wearable medical devices such as blood pressure, pulse sensors, or synthetic vessel port for drug delivery, injection) and monitoring device
2559
Robotic engine receives medical data inputs and generates medical care execution program file for the user account.
2560
A secured cloud space is created to store user's information ,on-going daily activities, surroundings parameters (e.g. indoor temperature, humidity), and medical events.
2561
Robot engine sends account created confirmation message and a self-downloading manual file/app to user's tablet, TV, smartphone or other device for touch-screen or voice command.
A

FIG. 99A

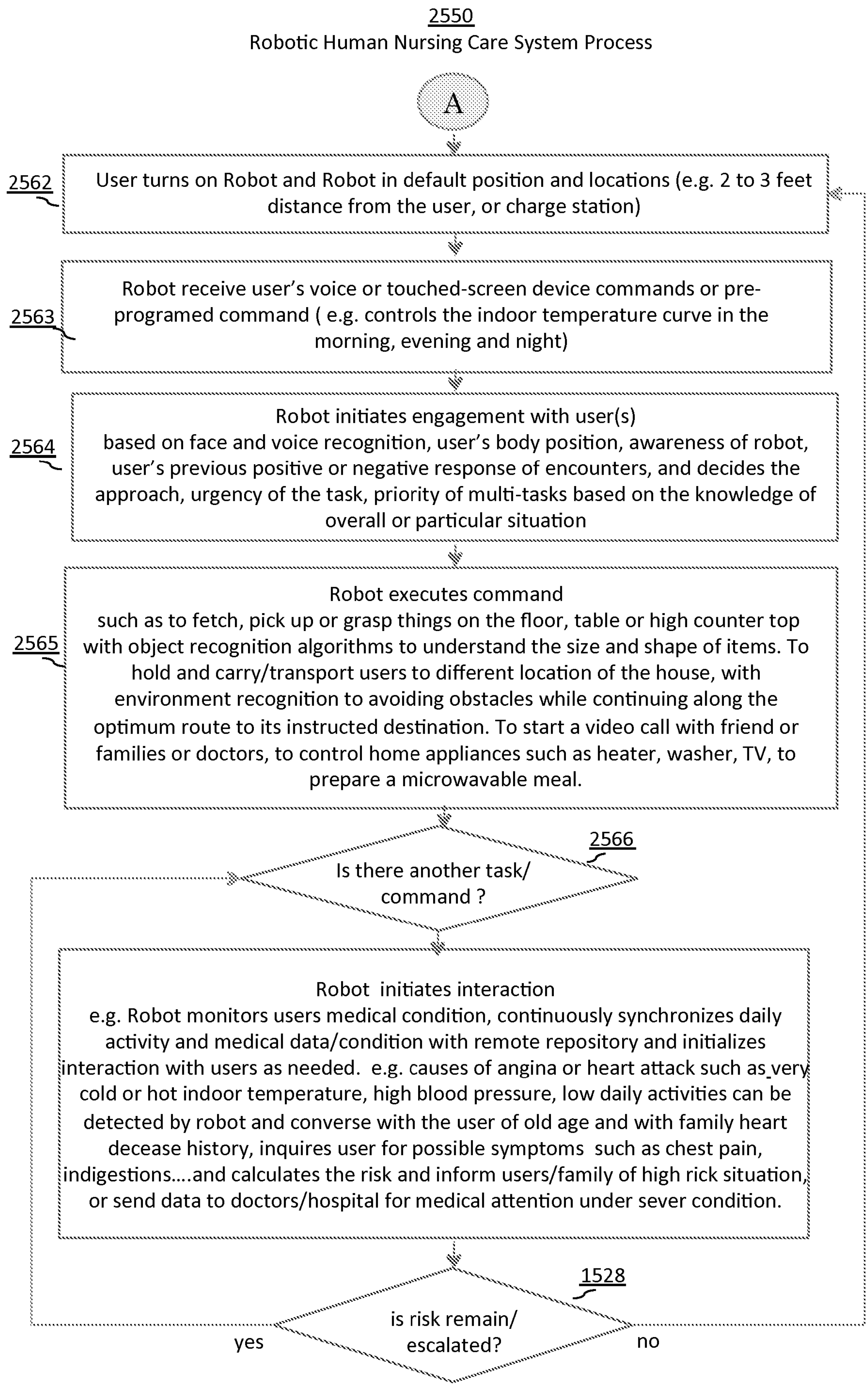
2550
Robotic Human Nursing Care System Process
A
2562
User turns on Robot and Robot in default position and locations (e.g. 2 to 3 feet distance from the user, or charge station)
2563
Robot receive user's voice or touched-screen device commands or pre-programed command ( e.g. controls the indoor temperature curve in the morning, evening and night)
2564
Robot initiates engagement with user(s)
based on face and voice recognition, user's body position, awareness of robot, user's previous positive or negative response of encounters, and decides the approach, urgency of the task, priority of multi-tasks based on the knowledge of overall or particular situation
2565
Robot executes command
such as to fetch, pick up or grasp things on the floor, table or high counter top with object recognition algorithms to understand the size and shape of items. To hold and carry/transport users to different location of the house, with environment recognition to avoiding obstacles while continuing along the optimum route to its instructed destination. To start a video call with friend or families or doctors, to control home appliances such as heater, washer, TV, to prepare a microwavable meal.
2566
Is there another task/ command ?
Robot initiates interaction
e.g. Robot monitors users medical condition, continuously synchronizes daily activity and medical data/condition with remote repository and initializes interaction with users as needed. e.g. causes of angina or heart attack such as very cold or hot indoor temperature, high blood pressure, low daily activities can be detected by robot and converse with the user of old age and with family heart decease history, inquires user for possible symptoms such as chest pain, indigestions....and calculates the risk and inform users/family of high rick situation, or send data to doctors/hospital for medical attention under sever condition.
1528
is risk remain/ escalated?
yes
no

FIG. 99B

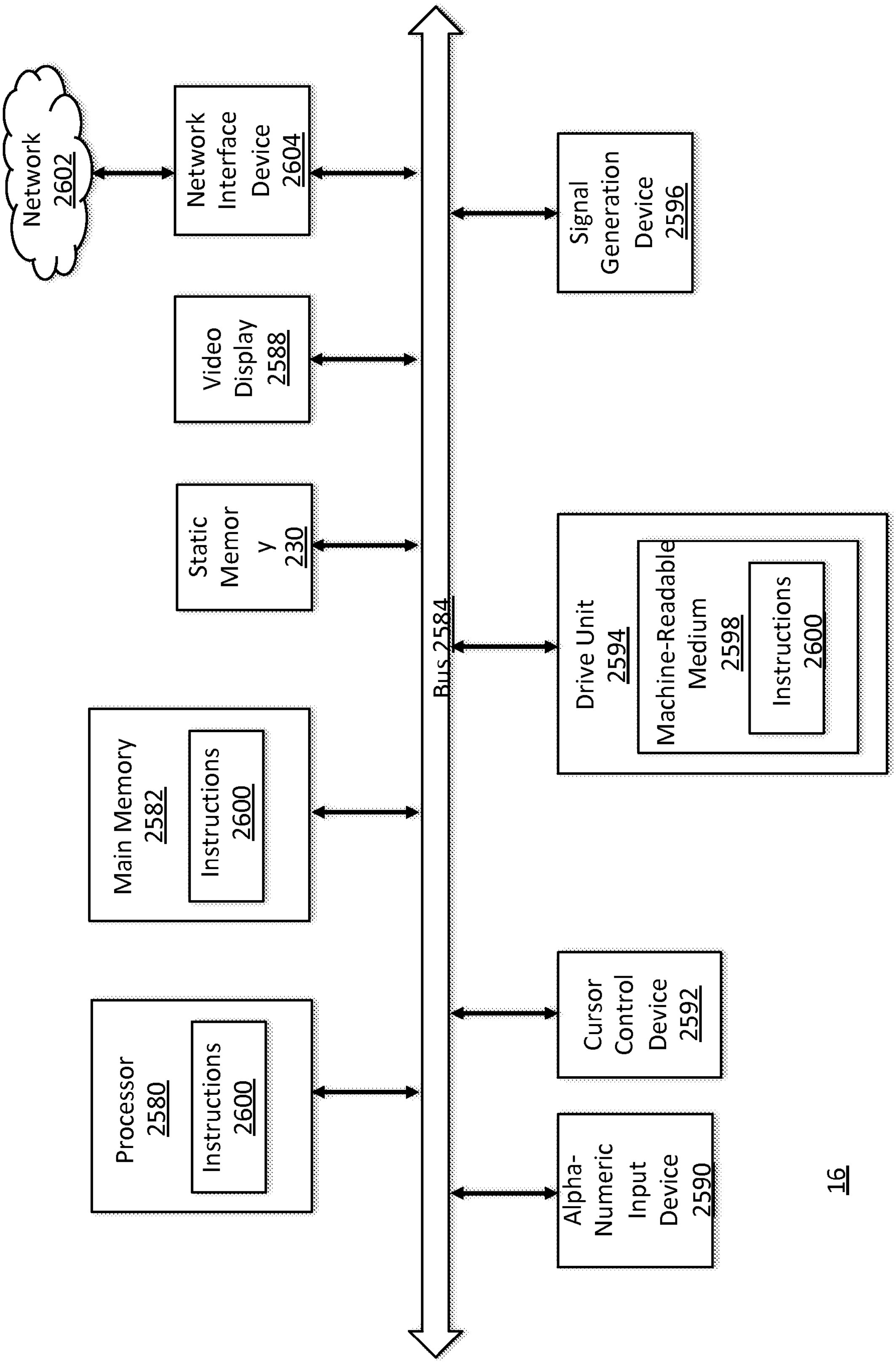
Network 2602
Network Interface Device 2604
Video Display 2588
Static Memory 230
Main Memory 2582
Instructions 2600
Processor 2580
Instructions 2600
Bus 2584
Signal Generation Device 2596
Drive Unit 2594
Machine-Readable Medium 2598
Instructions 2600
Cursor Control Device 2592
Alpha-Numeric Input Device 2590
16

FIG. 100

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20040172380 A1
- US 20130345873 A1
- US 20050193891 A1
- US 20040173103 A1
- US 20090099691 A1


### Non-patent literature cited in the description


- **GARAGNANI, M.** improving the Efficiency of Processed Domain-axioms Planning. *Proceedings of PLANSIG-99, Manchester, England,* 1999, 190-192
- **LEAKE.** *Book , Case-Based Reasoning: Experiences, Lessons and Future Directions,* 1996, http://journals.cambridge.org/action/displayAbstract?fromPage=online&aid=4068324&fileld=50269888 900006585dl.acm.org/citation.cfm?id=524680
- **CARBONELL.** *Learning by Analogy: Formulating and Generalizing Plans from Past Experience,* 1983, http://link.springer.com/chapter/10.1007/978-3-662-12405-5_5
- **KAMAKURA ; NORIKO ; MICHIKO MATSUO ; HARUMI ISHII ; FUMIKO MITSUBOSHI ; YORIKO MIURA.** Patterns of static prehension in normal hands. *American Journal of Occupational Therapy,* 1980, vol. 34 (7), 437-445
- The Physiology of the Joints. **I. A. KAPANDJI ; CHURCHILL LIVINGSTONE.** Upper Limb. 2007, vol. 1, 6e